Europäisches Patentamt

European Patent Office

Office européen des brevets

(19)

(11)  EP 1 126 681 A2

(12)  EUROPEAN PATENT APPLICATION

(43)  Date of publication:
22.08.2001  Bulletin 2001/34

(51)  Int Cl.⁷: $H04L\ 29/06$, $H04L\ 29/12$

(21)  Application number: 01100131.0

(22)  Date of filing: 15.01.2001

(84)  Designated Contracting States:
AT BE CH CY DE DK ES FI FR GB GR IE IT LI LU
MC NL PT SE TR
Designated Extension States:
AL LT LV MK RO SI

(30)  Priority: 14.01.2000  EP 00100738
14.01.2000  EP 00100211
14.01.2000  EP 00100740
14.01.2000  EP 00100212
14.01.2000  EP 00100739

(71)  Applicant: Sun Microsystems, Inc.
Palo Alto, California 94303-4900 (US)

(72)  Inventors:
• Hütsch, Matthias
22111 Hamburg (DE)

• Hofmann, Ralf
22143 Hamburg (DE)
• Sommerfeld, Kai
21149 Hamburg (DE)
• Schulz, Torsten
25421 Pinneberg (DE)
• Eilers, Bernd
21107 Hamburg (DE)
• Pfohe, Thomas
22143 Hamburg (DE)
• Hönnig, Michael
22143 Hamburg (DE)
• Meyer, Markus
21423 Winsen/Luhe (DE)

(74)  Representative: HOFFMANN - EITLE
Patent- und Rechtsanwälte
Arabellastrasse 4
81925 München (DE)

(54)  **A network portal system and methods**

(57)  A network portal system includes a web-top manager and a universal content broker system. The web-top manager is configured to receive a content request from a user device, where the content request includes a content provider identifier. The universal content broker system is coupled to the web-top manager. The universal content broker system includes a plurality of content providers. Each content provider in the plurality of content providers is associated with a different content provider identifier. Also, each content provider accesses content having a different raw data format. A universal content broker is coupled to the web-top manager and to the plurality of content providers. Upon the receipt of the content request from the web-top manager, the universal content broker passes the request to a content provider in the plurality of content providers that is associated with the content provider identifier.

Fig. 1A

EP 1 126 681 A2

**Description**

CHAPTER A

BACKGROUND OF THE INVENTION

Field of the Invention

This invention relates generally to network systems and in particular to network portal systems

Description of Related Art

Laptop and notebook computers abound, virtually every enterprise in every business sector uses e-mail for internal and external communications, mobile phones are commonplace, and many people carry personal digital assistants (PDAs) with wireless communication capability. Internet cafes can be found in almost every city, airports routinely have Internet kiosks, and most hotel rooms come equipped with data communication facilities.

With these developments come limitations and frustrations. Laptops and notebooks frequently require that special applications be installed. If work needs to be done when that particular machine is not available, the work must be postponed. In addition, there are employees without laptops who nonetheless need to access information and applications when they are away from the office.

Data on laptops must be synchronized with data on the enterprise's central computers. Before employees can work on their laptops, they must be certain that they have the latest information, and that after they have finished, the centrally housed information must be updated.

Functionality available from mobile phones and PDAs is typically limited to general information services, such as stock quotes and airline schedules.

Many enterprises have realized significant benefits from client/server technology, but this typically entails the installation of specialized software on the client systems, thereby limiting access to only those devices with the specialized software as well as placing a maintenance burden on the organization, which must propagate changes and updates to all individual workstations, laptop computers, etc.

As organizations implemented individual applications, frequently in different languages, functionality and data often became fragmented. A growing amount of valuable information is available from web-based service providers. However, locating the information can be time-consuming, and the information comes in as isolated pieces of data.

As a result, people are frequently not able to do the work they need to do when they want to do it. The information would be more valuable if the information were made available to corporate applications and merged with enterprise data.

Competitive business pressures make this issue even more urgent. Not long ago, it was perfectly acceptable, for example, for a salesperson to return to a customer's office the following day with requested information. Today, however, immediacy and convenience are the keywords; with the Internet, people have become accustomed to accessing data on demand and to taking action whenever they wish. Any work that has to be postponed because the salesperson could not access applications or data can mean lost opportunity.

Enterprise portals are being developed to close the gap between what users would like to do and what technological constraints permit them to do. While the rapid rate of recent technological innovation has been exciting, there are many attendant restrictions.

Enterprise portals allow users to access a wide variety of applications, services, and data through a single entry point (the portal). Portal computing is a network solution that aims to make recent technological advances serve the way people actually work-or would like to work. Recognizing the advantages of portal computing, several service providers have already embraced the concept, albeit in a limited sense, offering their customers a growing number of application services. Notable examples include Yahoo!, Excite, and Lycos. Although these all started as search engines, they now offer such capabilities as e-mail, stock quotes, calendar facilities, etc.

Quick to join the bandwagon, many suppliers have announced portal products. Some are not solutions, but rather tools that would allow companies to develop their own, severely limited portals. Some products provide the ability to access and consolidate different types of data from various sources for reporting purposes, but do nothing to support the inclusion of existing applications. Others may support a diversity of data as well as the ability to interface with existing applications (to varying degrees), but they place restrictions on the types of devices people can use to access the system.

A further limitation of these portal products is the great number of different content and services available over a network like the Internet which in turn, has lead to an enormous variety of different communication standards, data formats and file formats, which are sometimes proprietary for the particular content and services.

As a consequence, services or content provided by some provider systems may be incompatible with services or content provided by other provider systems and thus have a "stove-pipe" nature as to their presence and operation on networks. In addition, there exist many different communication schemes for content or service, which communication schemes again may be incompatible and not universally accessible or supported by all client systems. Accordingly, the existing portal products are limited to a subset of client systems and permit this subset of client systems to access at most a limited amount of content that is available.

SUMMARY OF THE INVENTION

It is therefore the object of the invention to allow an universal and integral use of different services by arbitrary client systems over a network.

The object of the invention is solved by the features of the independent claims.

According to one embodiment of the present invention, a network portal system allows the universal and integral use of different services by arbitrary client systems. The network portal system links, via a communication network, a plurality of content provider systems with a plurality of client systems. Each content provider system that offers content is associated with a content identifier, which in one embodiment is a URL scheme. The content is information that is transmittable over the communication network.

In one embodiment, the network portal system includes a web-top manager. The web-top manager receives a content request from a client system. According to one embodiment of the present invention, each content request includes a content identifier of the content requested by the requesting client system. Optionally, the content request includes a client system identifier and/or a content type. Alternatively, a process on the network portal system may determine the client system identifier and content types supported by the client device.

The web-top manager in the network portal system communicates with a universal content broker system that also is in the network portal system. Upon receipt of a content request from the web-top manager, a universal content broker in the universal content broker system, using resources within the network portal system, selects a content provider system, which is able to provide the requested content. Next, the universal content broker accesses the selected content provider system, and issues a request that results in the performance of the action specified in the request by the accessed provider system.

If the request was to retrieve content, the content in a raw data format is passed to the web-top manager. The web-top manager renders the requested content into a page that can be displayed by the requesting client system and this page is returned to the requesting client system. Thus, the network portal system with its different aspects allows a client to get content from a provider system even if the client system and the provider system do not use the same communication protocol.

Provider systems are associated with the URL schemes they implement. A service or content is obtained by passing a uniform resource indicator URL to a provider system. The provider system infers what the scheme is and therefore what provider system can create the content. Provider systems create content objects that implement defined network portal interfaces associated with content such that a client system can infer and or operate on: MIME type, child content, commands, properties, changes to state.

In addition, new content may be created from existing content and stored to be retrieved later. The new content may be related to the existing content. An example of which could be an address book that may only store content of type "folder" and "address".

In another embodiment of the present invention, the network portal system includes a web-top manager and a universal content broker system. The web-top manager is configured to receive a content request from a user device, where the content request includes a content provider identifier.

The universal content broker system is coupled to the web-top manager. The universal content broker system includes a plurality of content providers. Each content provider in the plurality of content providers is associated with a different content provider identifier. Also, each content provider accesses content having a different raw data format. A universal content broker is coupled to the web-top manager and to the plurality of content providers. Upon the receipt of the content request from the web-top manager, the universal content broker passes the request to a content provider in the plurality of content providers that is associated with the content provider identifier.

The web-top manager includes a plurality of remote applications; a web server; a main servlet executing on the web server, wherein the main servlet receives a user device content request; and a presentation and logic system coupled to the main servlet. The presentation and logic system is configured to receive raw data content in a plurality of different raw data formats from the universal content broker system. The presentation and logic system converts raw data content irrespective of the raw data format, based upon characteristics of the user device, into a page displayable on the user device.

In one embodiment, the presentation and logic system includes a plurality of templates. A first set of template sets is for a first type of user device page format. A second set of template sets is for a second type of user device page format. A third set of template sets is for a third type of user device page format. In general, there is a template set for each unique type of user device, which means that the user device cannot display a page created for another user device.

In one embodiment, the first set of template sets includes a set of content format template sets wherein each content format template set is for a different one of the plurality of different raw data formats. The set of content format templates include a set of device capability specific templates.

Yet another embodiment of the presentation and logic system includes a plurality of adapter objects coupled to a plurality of provider objects. Each adapter object is associated with a different content provider identifier. The adapter object receives content from a content provider associated with the different content provider identifier and provides the content to the provider object associated with the different content provider identifier. The provider object selects an appropriate template for the above-mentioned sets and causes information in the content received to be inserted in the template so that the page returned to the user device includes the requested content.

In still yet another embodiment, the presentation and logic system includes a profiling service and a profiling service configuration file coupled to the profiling service. The profiling service configuration file includes a decision tree wherein the decision tree performs actions. In one embodiment, decision tree is a XML decision tree. The actions performed by the decision tree include: an action based upon request parameters; an action based upon request header parameters; an action based upon user device properties; and an action based upon resource properties.

This embodiment of the presentation and logic system also includes a plurality of screen templates. One screen template in the plurality of screen templates is a default screen template for a HTML page. Another one screen template in the plurality of screen templates is a default screen template for a mobile telephone. Still another screen template in the plurality of screen templates is a default screen template for a personal digital assistant.

One screen template in a plurality of the screen templates comprises a default screen template. The default screen template includes a header region having at least one placeholder and a body region having at least one placeholder. An action of the decision tree determines a component that is used for the at least one placeholder in the body region. The component provides information that is taken from the raw data content.

In another embodiment, a universal content broker system also includes a registry of content providers coupled to the universal content broker. The universal content broker selects the content provider from the registry based upon the content provider identifier. The universal content broker system also includes: at least one interface adapted to associate property values with content; at least one interface adapted to set a property value of content; at least one interface adapted to read a property value of content; an interface adapted to notify registered client systems when content of interest to the registered client systems is processed by the universal content broker system; and an interface adapted to notify registered client systems when content of interest to the registered client systems is created by the universal content broker system.

Still another embodiment of the universal content broker system includes a hierarchy content provider. The hierarchy content provider generates a virtual hierarchy of content of the universal content broker system.

Still yet another embodiment of the universal content broker system includes a configuration server. A configuration proxy is coupled to the configuration server.

The configuration server further includes a first DOM tree that in turn includes user profiles and application profiles. Configuration proxy includes a second DOM tree that in turn includes a subset of data in the first DOM tree.

A client system is coupled to the network portal system. The client system includes a client universal content broker system. The client universal content broker system includes a synchronization component for synchronizing content of the client universal content broker system with content of the universal content broker system.

In one embodiment of the present invention a computer program product comprising computer program code for a universal content broker service including at least one of, or alternatively any combination of a component interface; a content provider interface; a content provider manager interface; and a content identifier factory interface.

In another embodiment, a computer program product comprising computer program code for a configuration and logic service includes a profiling service and a plurality of screen templates.

A method for providing a plurality of content having different types and different protocols to a single user interface includes:

receiving a content request from a client system the content request comprising a content identifier;

selecting a content provider associated with the content identifier from a plurality of content providers wherein each of the content providers provides access to content having a different raw data format;

retrieving the requested content from the selected content provider;

using the retrieved requested content to generate a page displayable on the client system.

Hence, the inventive network portal system delivers the framework for:

Aggregation of existing network portal services so that they are presented for use from single access points.

Interfacing new and existing application systems and enabling them to be presented as network services.

Coupling of separate network service provider systems to deliver integrated functional interactions between these previously standalone network services systems.

Allowing the construction of new network services which are constructed by joining and reconstituting existing network services.

Unifying the interfacing to the services, including the user interfaces (UI) and the service provider interfaces (SPI). By unification of the UI framework, users can experience a contiguous "surfing" metaphor for interactions. Unification of the SPI enhances extensibility and the construction of more sophisticated services with the existing services available as common building blocks.

Creating a highly scalable network service portal infrastructure, using distributed service portal servers - effectively a web of network portal systems.

In one embodiment, the inventive network portal system is used for providing the interfacing and aggregation of services via a network, and acts as a content switch leading these streams to the appropriate service filters of the network portal system, e.g., Office productivity, file format conversion, user interface management, etc. The inventive network portal system is a framework designed to unify the access, modification and creation of structured information.

Services or content such as file systems, databases, mail and news in addition to files, records, mail, and news messages may be represented abstractly using the inventive network portal system in this embodiment. A hierarchy of content may be represented according to the concepts of parent-, peer-, child-relationships. Further, content may be considered as being tasks, which in turn may be further split into higher forms of properties, and commands. Values of properties may be set and obtained. Content may have a set of commands that operate on it.

The communication network may be of any type suitable for communication between computer systems, wired, partially or totally wireless. The computer systems may be of any type of processing environments, and of any size. They may be embedded into other systems.

According to another embodiment, a network portal system is provided, which serves for linking, via a communication network, a plurality of provider systems with a plurality of client systems, each said provider system offering content according to a predetermined communication scheme of a plurality of different communication schemes, said content being information which is transmittable over said network, each said client system supporting a predetermined communication scheme of said plurality of different communication schemes, said network portal system comprising:

a) webtop means for receiving a content request from a client system, said request comprising a content indicator being indicative of the content, and an indicator of the requesting client system, said client system indicator specifying the communication scheme supported by said client system,

b) universal content broker means for selecting a provider system which is able to provide said requested content,

for accessing said selected provider system, and

for retrieving said requested content from said accessed provider system,

c) said webtop means being further adapted for rendering the retrieved content to said requesting client system according to the communication scheme of said requesting client system.

The invention comprises also a method for linking, via a communication network, a plurality of provider systems with a plurality of client systems, each said provider system offering content according to a predetermined communication scheme of a plurality of different communication schemes, said content being information which is transmittable over said network, each said client system supporting a predetermined communication scheme of said plurality of different communication schemes, said method comprising the following steps:

a) receiving a content request from a client system, said request comprising a content indicator being indicative of the content, and an indicator of the requesting client system, said client system indicator specifying the communication scheme supported by said client system,

b) selecting a provider system which is able to provide said requested content,

c) accessing said selected provider system,

d) retrieving said requested content from said accessed provider system,

e) rendering the retrieved content to said requesting client system according to the communication scheme of said requesting client system.

Thus, the network portal concept according to the invention with its different aspects allows a client to get content from a provider system even if the client system and the provider system may not use the same communication scheme. In the network portal system, the content to be rendered to the client system is converted accordingly. Provider systems are associated with what URL schemes they implement. A service or content is obtained by passing a uniform resource indicator URL to a provider system. The provider system infers what the scheme is and therefore what provider system can create the content. Provider systems will create content objects that implement defined network portal interfaces associated with content such that a client system can infer and or operate on: MIME type, child content, commands, properties, changes to state.

In addition, new content may be created from existing content and stored so as to be retrieved later. The new content may be related to the existing content. An example of which could be an address book that may only store content of type "folder" and "address".

Accordingly, the inventive network portal system delivers the framework for

- Aggregation of existing network portal services so that they are presented for use from single access points.

- Interfacing new and existing application systems and enabling them to be presented as network services.

- Coupling of separate network service provider systems to deliver integrated functional interactions between these previously standalone network services systems.

- Allowing the construction of new network services which are the constructed by joining and reconstituting existing network services.

- Unifying the interfacing to the services, including the user interfaces (UI) and the service provider interfaces (SPI). By unification of the UI framework, users can experience a contiguous "surfing" metaphor for interactions. Unification of the SPI enhances extensibility and the construction of more sophisticated services with the existing services available as common building blocks.

- Creating highly scalable network service portal infrastructure, using distributed service portal servers - effectively a web of network portal systems.

The inventive network portal system is used for providing the interfacing and aggregation of services via a network, and acts as a content switch leading these streams to the appropriate service filters of the network portal system, e.g. Office productivity, file format conversion, user interface management, etc. The inventive network portal system is a framework designed to unify the access, modification and creation of structured information.

Services or content such as file systems, databases, mail and news in addition to files, records, mail and news messages may be represented abstractly using the inventive network portal system.

A hierarchy of content may be represented according to the concepts of parent-, peer-, child-relationships.

Further, content may be considered as being tasks, which in turn may be further split into higher forms of properties, and commands. Values of properties may be set and obtained. Content may have a set of commands that operate on it.

The communication network may be of any type suitable for communication between computer systems, wired, partially or totally wireless. The computer systems may be of any type of processing environments, and of any size. They may be embedded into other systems.

The invention can be implemented by a computer system comprising computer program code or application code.

Computer program code or application code may be embodied in any form of a computer program product. A computer program product comprises a medium configured to store or transport computer-readable code, or in which computer-readable code may be embedded. Some examples of computer program products are CD-ROM disks, ROM cards, magnetic disks or tapes, service on a network, and carrier waves. The computer program product may also comprise signals which do not use carrier waves, such as digital signals transmitted over a network. The computer program product may then be implemented as any transmission link, such as a connection to the internet, or any LAN, WAN, telephone network, or the like.

BRIEF DESCRIPTION OF THE DRAWINGS

| | |
|---|---|
| Fig. 1A | is a conceptual diagram of a network portal system that includes a web top manager and a universal content broker system according to one embodiment of the present invention. |
| Fig. 1B | is a user device with a display screen that shows portlet accessible by a user according to one embodiment of the present invention. |
| Figs. 2A to 2C | are prior art screen displays on a display screen of a user device. |
| Fig. 2D | is a display of the hierarchical interface created by a hierarchical content provider according to one embodiment of the present invention. |
| Fig. 3A | is a more detailed diagram of the network portal system according to one embodiment of the present invention. |
| Fig. 3B | is a diagram that illustrates a server universal content broker system and a client universal content broker system according to one embodiment of the present invention. |
| Fig. 4 | is a process flow diagram for processes according to one embodiment of the present invention. |
| Fig. 5 | is a more detailed illustration of presentation and logic service according to one embodiment of the present invention. |
| Fig. 6 | is an illustration of the illustrative provider factories and templates for the presentation and logic service according to one embodiment of the present invention. |
| Fig. 7 | is an illustration of data rendering for a user device in the presentation and logic service according to one embodiment of the present invention. |
| Fig. 8 | is a more detailed illustration of presentation and logic service according to another embodiment of the present invention. |
| Fig. 9 | is an illustrative of a default template used to generate a thin client according to another embodiment of the present invention. |
| Fig. 10 | is an example of a screen display generated using the template of Fig. 9 according to another embodiment of the present invention. |
| Fig. 11 | is an actual example of a portion of a default template according to another embodiment of the present invention. |
| Figs. 12A to 12C | are pseudo code for a decision tree of the profiling service according to another embodiment of the present invention. |
| Figs. 13A and 13B | are portions of an actual decision tree used in generating the display of Fig. 10 according to another embodiment of the present invention. |

Fig. 14 is an illustration of the process in completing a display template according to another embodiment of the present invention.

Fig. 15 is a detailed block diagram of a configuration server according to another embodiment of the present invention.

Figs. 16A and 16B are two examples of DOM trees found in the configuration server according to another embodiment of the present invention.

Fig. 17 is an example of a merged configuration tree of a user according to another embodiment of the present invention.

Fig. 18 is an example of the file structure used to store the data in Fig. 16B according to another embodiment of the present invention.

Figs. 19A to 19E are examples of envelopes used by the configuration server according to another embodiment of the present invention.

Fig. 20 is a sequence diagram that illustrates the asynchronous processing capability of the interfaces according to another embodiment of the present invention.

Fig. 21 is an illustration of the processes implemented by the universal content broker according to another embodiment of the present invention.

Fig. 22 is an illustration of the components of the hierarchy service according to another embodiment of the present invention.

Fig. 23 gives a general overview of a network in which a network portal system is operated;

Fig. 24 illustrates an embodiment of the inventive network portal system in greater detail;

Fig. 25 to 27 illustrate operations of the universal content broker;

Fig. 28 illustrates the method for linking provider systems with client systems by using the network portal system according to the invention;

Fig. 29 and 30 illustrate linking a client mobile telephone system to a network portal system;

Fig. 31 illustrates the administration procedure for making a client system ready for login;

Fig. 32 illustrates accessing content by a client computer running a browser; and

Fig. 33 illustrates the conversion of content.

Fig. 34 shows a schematic representation of an example for an individual representation of data;

Fig. 35 shows a schematic representation of the screen print of a user device;

Fig. 36 shows a flow chart for obtaining the presentation requirements of a user device;

Fig. 37 illustrates a flow chart showing the steps to be carried out by a method for the individual representation of data;

Fig. 38 illustrates a flow chart showing the operation of a method for an individual representation of data; and

Fig. 39 shows a schematic representation of the portlet manager.

In the drawings 1 to 39 of CHAPTER A and the following detailed description of CHAPTER A, elements with the same reference numeral are the same or similar elements. Also, the first digit of a three digit reference numeral and the first two digits of four digit reference numeral indicates the first drawing in which that element appeared.

In the Detailed Description, the headings are for convenience only and are not to be interpreted as limiting any element of the invention to the disclosure under a particular heading. Each embodiment of each element is determined by the entirety of this disclosure. Also, italics are used for convenience only, i.e., an italicized word, and the same word but not in italics are in fact the same thing.

DETAILED DESCRIPTION

According to one embodiment of the present invention, a network portal system 100 solves the prior art portal limitations by giving users access from whatever device is available at the time, through a single system entry point, i.e., "a portal," to a complete complement of applications, services, and data. As explained more completely below, network portal system 100 frees a user from time and location constraints when accessing the complete complement of applications, services, and data.

A user can access applications and data on network portal system 100 from almost any available device, e. g., any one of portable computer 102A, a mobile telephone 102B, a workstation 102C, a home personal computer (PC) 102D, a personal digital assistant 102E, or an Internet café machine 102F. No longer is a user limited to using either workstations and/or portable computers with specialized software installed, or to using any particular Internet Service Provider.

Moreover, network portal system 100 provides the user with comprehensive functionality. The user's full range of applications is always available to the user. In addition, enterprises can easily incorporate existing applications into network portal system 100. Also, the user can access multiple data sources via network portal system 100. Different types and formats of data, from different applications, can all be accessed and processed within a single user interface. Further, data from external sources, such as stock quotes from web-based service providers, can be accessed using the same single user interface.

For example, a user on a vacation overseas suddenly realizes that the presentation her boss is going to deliver the next morning contains a critical error. The user drops by an Internet cafe and from any machine 102F at the cafe accesses the presentation via network portal system 100, and makes the necessary corrections using applications written, for example, in a scripting language and/or the C++ programming language even though only a browser is available on machine 102F.

In another scenario, the user is having dinner at a friend's house, and gets an urgent call saying that a report that can be assessed via network portal system 100 must be revised that evening. The revisions will not require much work, but the trip to the office and back is a very unwelcome prospect. Using the friend's PC 102D and the friend's Internet service provider, the user works on the report without leaving his friend's home.

Another user is expecting an important document, but the user has a business appointment outside the office. The document arrives by e-mail while the user is in transit. Using a PDA 102E while on the train, the user accesses the e-mail using network portal system 100, reviews the document, and then re-directs the document to the fax machine at the site to which the user is going.

A customer would like to meet with a user tomorrow. The user thinks he will be available, but the user doesn't know whether anyone scheduled the time while the user was away from the office, and now the office is closed. Using a mobile telephone 102B, the user accesses his up-to-the-minute calendar via network portal system 100 and schedules the appointment.

Hence, according to one embodiment of the present invention, network portal system 100 is a comprehensive client/server offering that enables users to access their applications, data, and services from almost any device anywhere. The applications and data are stored on network portal system 100 and are accessed using a web-top manager 111 in combination with a universal content broker system 112 that includes universal content broker 113. In one embodiment, web-top manager 111 and universal content broker system 112 are designed as a distributed system that can be spread over multiple host machines, and can run on platforms utilizing any one of the operating systems Solaris, Windows NT/Windows 2000 (server version), or Linux In one embodiment, using a web browser and an Internet connection on any JAVA-enabled system, the user simply logs on to a web server in web-top manager 111, and proceeds as though everything were locally resident on his/her machine. (JAVA is a trademark of Sun Microsystems, Inc. of Palo, Alto, CA.) While execution actually takes place on the web server, this fact is transparent to the user. Similarly, local services available on a client system, including devices like printers and local storage, can be utilized by web server-based components in a transparent manner.

In addition to using JAVA-enabled browsers, users can access applications and data from Wireless Application Protocol (WAP) devices, which include mobile phone 102B, or from other hand-held devices such as PDA 102E. Because of the limited capabilities of devices 102B and 102E, functionality is not as extensive as from a system that can run a full browser. Accordingly, in one embodiment, users are able to view their mail and data, but users don't have full editing capabilities in this embodiment. However, users can use mobile phones and PDAs to manage their data and the users can direct the movement of information to other devices.

In one embodiment, web-top manager 111 includes a plurality of remote applications, such as office applications that include, for example, a word processing application, a spreadsheet application, a database application, a graphics and drawing application, an e-mail application, a contacts manager application, a schedule application, and a presentation application. One office application package, suitable for use with this embodiment of the present invention, is the STAROFFICE Application Suite available from Sun Microsystems, Inc., 901 San Antonio Road, Palo Alto, CA. (STAROFFICE is a trademark of Sun Microsystems, Inc.)

As explained more completely below, the user accesses and runs a user selected remote application using only a thin-client on the user's device with a lightweight component installed. To the user, it appears as if the remote application is installed on the user device. However, typically, both the data being processed and the remote application are on network portal system 100. In addition, network portal system 100 allows users to incorporate their own applications and data seamlessly, as well as to give the users access to information from external service providers. Network portal system 100 can be a user's sole entry into the world of information.

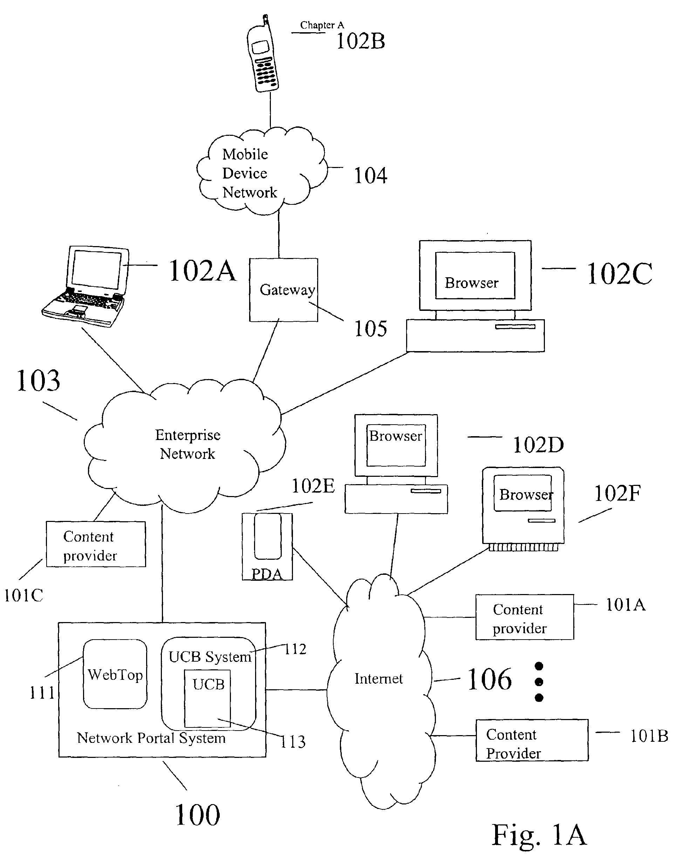

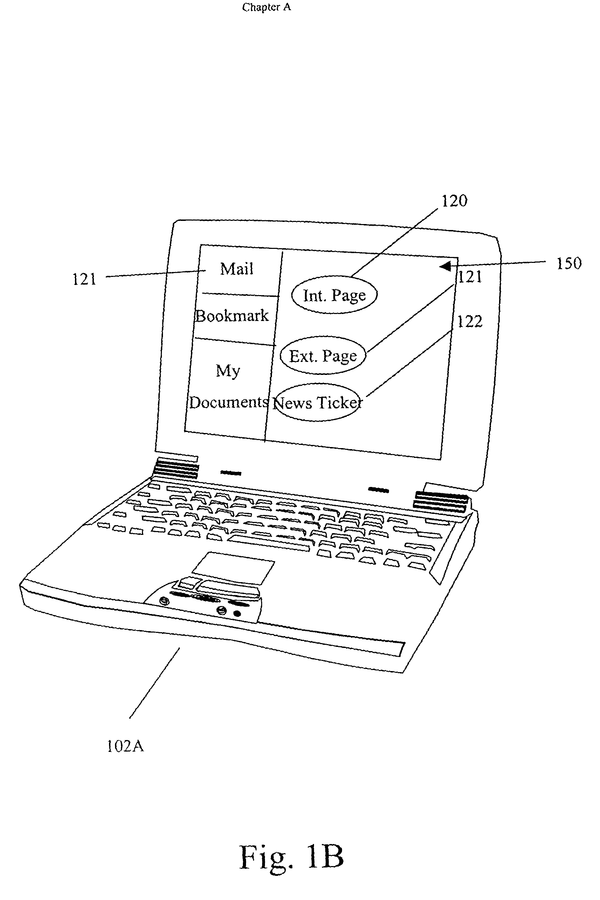

In one embodiment, access to external service providers is provided through portlets, where each portlet accessible by a user is represented on the display of the user device by an icon or perhaps a text name. For example, in Figure 1B, a display 150 of user device 102A includes icons 120 to 122, each of which is associated with a different portlet. Through use of a dynamic content channel, e.g., a portlet, a highly customizable content page may be produced for any individual client system.

In one embodiment, when a portlet icon is selected on a user device, the content associated with the portlet is retrieved by network portal system 100 and automatically transformed by network portal system 100 into data that can be displayed by that user device. Thus, a particular user device is not limited to accessing content in a format identical to that associated with the user interface in use on the user device. Consequently, the user's ability to access a wide variety of content sources independent of the characteristics of the particular user device is further enhanced with the portlets of this invention.

An individual user can personalize the user device, and hence network portal system 100, by specifying which service providers from among the ones the organization has made available via portlets, the user wants to use. To put it another way, the user chooses which portlets the users wishes to be included on the desktop as illustrated in Fig. 1B. Hence, network portal system 100 eliminates prior art limitations on a single user system on a network accessing content on any desired provider system that is coupled to the network.

In one embodiment, the functionality described above is provided using a browser executing on a client device 102i (See Fig. 1A), e.g., any one of devices 102A, 102C, 102D and 102F. The browser communicates with web-top manager 111 via a network, e.g., enterprise network 103, Internet 106, or a combination of the two 103/106. A user of client device 102i causes the browser to transmit a request via the network to web-top manager 111. Typically, the request includes the type of document or service requested, the type of client device 102i that is making the request, the type of the browser executing on client device 102i, and a protocol that is typically part of a uniform resource locator (URL) included in the request.

Upon receipt of the request, web-top manager 111 processes the request. If the request is for content that is provided by one of universal content providers 101A to 101C that are registered with universal content broker 113, web-top manager 111 issues a call to universal content broker 113. If the content is available through a portlet, the request is passed to a portlet manager, which in one embodiment, as described more completely below, is a servlet executing on web-top manager 111.

In response to a call from web-top manager 111, universal content broker 113 returns a handle to the requested content to web-top manager 111. Web-top manager uses the handle in retrieving the content. However, before the content is returned to user device 102i, in one embodiment, the content is converted to a page or pages that can be displayed and/or processed by the thin-client on the user device.

As explained more completely below, web-top manager 111 includes a user interface, which is defined via different XML, HTML or WML templates and/or stylesheets. Web-top manager 111 selects a template, or stylesheet using the information transmitted in the request from client device 102i. The template, or stylesheet selected by web-top manager 111 is used to present content in the form required by client device 102i.

Hence, upon retrieving the requested content using the handle provided by UCB 113, web-top manager 111 loads, for example, a template and fills in all user specific content in the template using the retrieved content. The completed template is transmitted to client device 102i for display. Alternatively, web-top manager 111 retrieves a stylesheet and uses the stylesheet to transform the content into a format that can be displayed on client device 102i.

This example assumed that the information in the retrieved content was in a format such that the information could be extracted and placed in the template or could by transformed using a stylesheet. In another embodiment, the retrieved content is processed by a dynamic data conversion service. The dynamic data conversion service generates a dynamic data filter that includes a chain of partial filter adapter components. The dynamic filter converts the original retrieved content from a first format into a second format such that the information can be extracted and placed in the template or transformed using a stylesheet. The generation of dynamic data filters facilitates processing a broad range of content with differing formats by network portal system 100.

The above example assumed that the client request was for content provided by a registered content provider or for content available via a portlet. Alternatively, the request could be to launch a remote application in web-top manager 111. In response to this request, web-top manager 111 prepares a template that includes, for example, an HTML page that includes JAVA Bean and returns the page to the browser.

Upon execution of the JAVA Bean, the user has full access to the capabilities of the remote application that is executing on network portal system 100 just as if the complete application were executing on client device 102i. If the user requests that the remote application process specific content, e.g., a text document, or perhaps a spreadsheet, the request is sent by the application to universal content broker 113 that functions as described above.

Alternatively, the user may direct the remote application to access a spreadsheet calculator. Recall that as described above, network portal system 100 may be implemented in a distributed environment, in which the text processing application executes on one computer under a first operating system and the spreadsheet application executes on another computer under a second operating system. Alternatively, both applications may execute on the same computer, but the text processing application is written in one programming language and the spreadsheet application is written in a different programming language.

In either of these situations, the text processing application is executing within a first execution environment, and in response to the user request the text processing application issues a call to the spreadsheet calculator of the spreadsheet application that is executing within a second execution environment that is different from the first execution environment.

As used herein, an execution environment contains all objects, which have the same binary specification and which lie in the same process address space. The execution environment is specific for a computer programming language and for a compiler for that computer programming language. According to one embodiment of the present invention, the call from the text processing application is directed to a proxy in a bridge that converts the original call to a call to the desired service in the second execution environment. The proxy dispatches the converted call to the desired service in the second execution environment. Upon execution of the converted call in the second execution environment, the results are returned to the proxy in a bridge that in turn converts the results from the second execution environment to the first execution environment. The converted results are returned to the text processing application for use. A more detailed description of a bridge and proxy is provided in CHAPTER B below.

Hence, transparently to the user, the user has accessed functionality distributed within network portal system 100 using only what appears to the user as a single application executing on client device 102i. The ability to transparently access applications and services in different execution environments greatly increases the services and functionality that can be provided to a wide variety of client devices.

Thus, network portal system 100, in one embodiment, not only includes a dynamic data format conversion capability for content, but also a dynamic dispatch functionality for accessing services in different execution environments. These functionalities are optional, but when included in network portal system 100, the functionalities transparently expand the services and capabilities available to client device 102i that has only a browser installed.

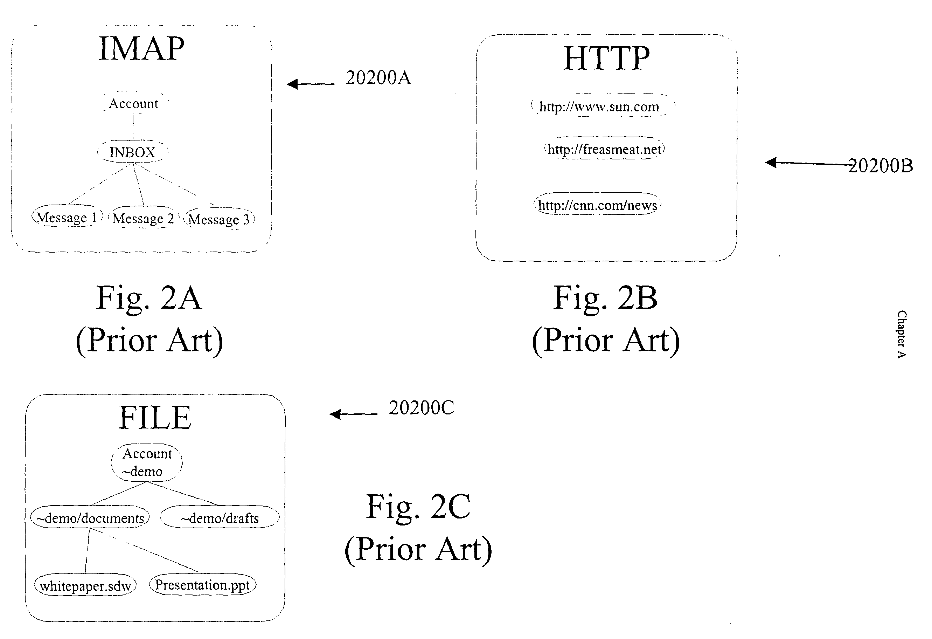

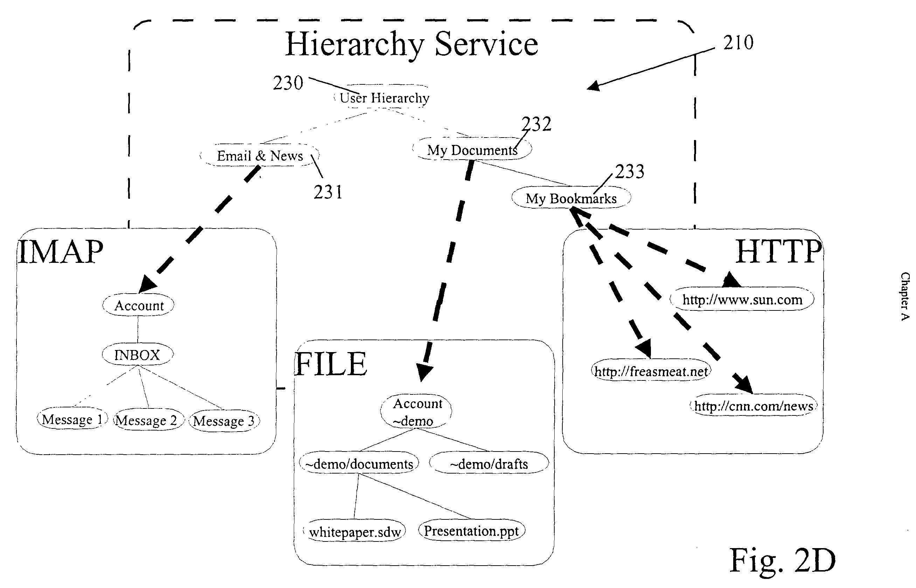

Another service provided by network portal system 100 is a hierarchy service, which in one embodiment is one of the universal content providers accessible via universal content broker 113. In the prior art as illustrated in Figures 2A, 2B, to 2C, each time the user wanted to access e-mail message, HTTP links, or a stored file, the user had to access a different program element that in turn generated a display associated with that program element, e.g., displays 200A to 200C. However, when the user accesses an explorer within the browser on client device 102i, the hierarchy service in network portal system 100 returns a page that results in a virtual hierarchy 210 that is displayed as illustrated in Figure 2D.

The hierarchy service organizes the user's data in an abstract manner whether the data is the user's directory, mail accounts, or bookmarks. As illustrated in Figure 2D, the hierarchy service orders all user content in a virtual hierarchy 210, which is represented in the user interface on client device 102i. Virtual hierarchy 210 is browse-able and customizable, gives the user a homogenous view of the entire user's content on network portal system 100. In this embodiment, virtual hierarchy 210 includes a root node 230 and three other nodes 231 to 233. Initially, only root node 230 may be displayed and then when the user selects root node 230, nodes 231 to 233 are displayed. If the user then selects one of nodes 231 to 233, the user is presented with the hierarchy indicated by the broken arrow.

In addition, virtual nodes generated by the hierarchy service act as UCB content nodes. So the resulting hierarchy, sometimes referred to as a content tree, consisting of the virtual nodes and protocol specific nodes, as illustrated in Figure 2D, can be processed in a transparent manner. This means, that a generic explorer or all kind of viewers can access the whole content tree without special knowledge about the underlying protocols or implementation details of the specific providers associated with the various virtual nodes.

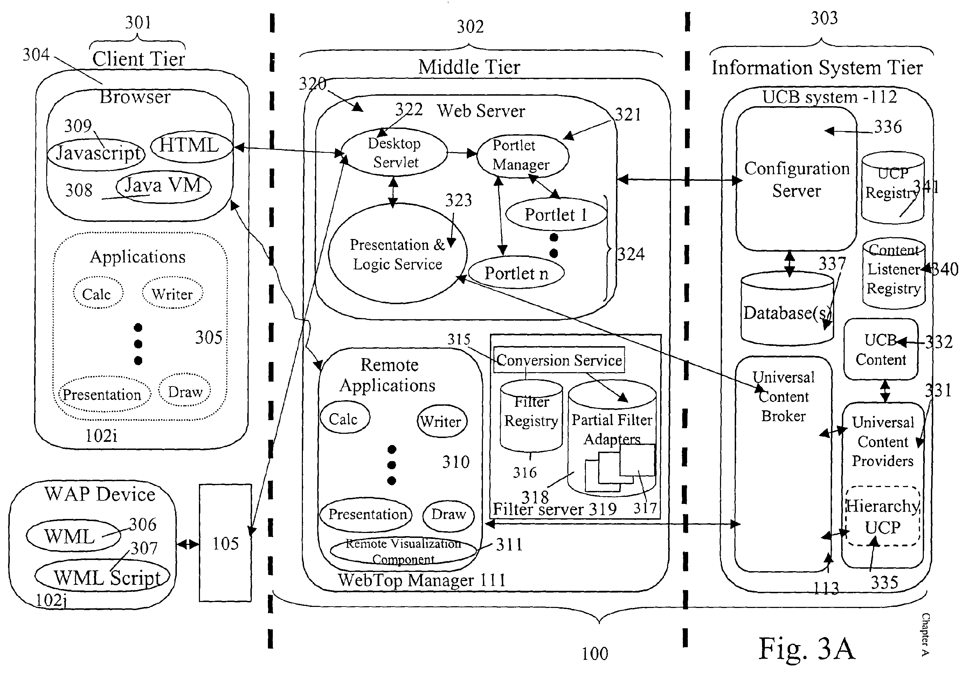

Figure 3A is a high-level block diagram of one embodiment of network portal system 100, which provides office productivity services. Network portal system 100 is highly independent of client systems 102i, where i is A, C, D and F in Figure 1, and 102j where j is B in Figure 1, which are used to access services and/or content using network portal system 100. Support of several client devices with very different hardware and software capabilities mandates that the overall architecture and the core components of network portal system 100 are flexible enough to minimize the effort of integrating support for new client devices.

As used herein, content provider systems, servers, client systems, networks and similar terms are utilized with respect to computer systems and interconnections of both such systems and individual units, and may include both the hardware and software typically utilized in such systems. In this context, the term content denotes any information, which may be of any kind in any physical or logical format, which can be transmitted over a communication network. In particular, content may be any information that is stored in the form of electronic files, typically residing on a server, or content may be generated by execution of a particular application program.

Communication standards, i.e., protocols, which define the way of communication between two systems are used herein, in one embodiment, as content provider identifiers. An example, of a content provider identifier is a URL scheme that is described more completely below. A MIME type is an example of a definition of a type of content. In general, the content type determines the raw data format of the content. As explained more completely below, the content identifier is used to select a content provider that supplies, creates, or acts on content having a raw data format.

Network portal system 100, according to the embodiment illustrated in Figure 3A, is divided into three tiers, e.g., a client tier 301, a middle tier 302, and an information system tier 303 that in turn are each divided into several subsystems. In this embodiment, client tier 301 includes a computer system 102i and a wireless application protocol (WAP) device 102j. Middle tier 302 is web-top manager 111. Information system tier 303 includes universal content broker system 112 that in turn includes a configuration server 336 with associated database(s) 337, and universal content broker 113 that utilizes a plurality of universal content providers 331 and universal content broker (UCB) content 332. In this embodiment, a hierarchy service 335 is one of universal content provider 331 and so is sometimes called hierarchy content provider 335.

CLIENT TIER OVERVIEW

In general, all hardware and software resources, which reside on users' devices, are part of client tier 301. These resources may vary from a mobile phone 102B with WAP support, to an internet kiosk 102F with a HTML browser, to a desktop PC 102D with an installed word processor and locally stored documents. In Figure 3A, the subsystems illustrated within client devices 102i and 102j are those that are typically used to interface with network portal system 100.

Client device 102i, in one embodiment, includes a browser 304 that utilizes the HyperText Markup Language (HTML) and a JAVA Virtual Machine (VM) 308 and executes JAVA scripts 309. Optionally, client device 102i can include one or more applications 305. As explained more completely below, one of the novel features of this invention is that a user can access, via browser 304, an application in remote applications 310 or any other service provided by network portal system 100.

Any components needed to interface with the remote application and/or service are downloaded dynamically to client device 102i, when the components are needed. The complexity of these downloaded components can differ extremely depending on the capabilities of client device 102i and the requirements of the remote application and/or requested service. The download component can be a simple WML page, a set of HTML pages, which interact by JAVA script calls, or a complex JAVA applet. In another embodiment, a virtual class library for the particular user device, or perhaps a complete application may be downloaded.

Herein, a thin client is a simple HTML page. To the extent possible, in one embodiment, network portal system 100 receives input requests and generates output responses using a thin client, because this minimize processing requirements on the client and minimizes the data quantity transferred over the network.

Herein, the use of the JAVA programming language, JAVA scripts, and HTML are illustrative only and are not intended to limit the invention to the specific embodiments described. In view of this disclosure, equivalent functionality can be generated using any desired programming language, for example, the C programming language, or the C++ programming language can be used to develop browser add-ins. In particular, it is anticipated that the extensible markup language (XML) will supplement or replace HTML.

WAP client device 102j includes a wireless markup language engine 306 that executes wireless markup language scripts 307. WAP client device 102j communicates with a gateway 105 that interfaces device 102j with web-top manager 111 in one embodiment.

MIDDLE TIER OVERVIEW

As indicated above, in the embodiment of Figure 3A, middle tier 302 is web-top manager 111. Web-top manager 111 includes a web server 320. Web server 320 includes a desktop servlet 322 coupled to a presentation and logic system 323 that provides a presentation and logic service, and optionally, a portlet manager 321 that interacts with a plurality of portlets 324 that in turn are each a servlet. The number of portlets included in web server 320 is optional and can vary from zero to any desired number. Herein, reference numeral 323 is used for both presentation and logic system and the presentation and logic service for convenience.

An important aspect in building a flexible, extendable and robust network portal system 100 is to bring in one or more abstraction layers between client tier 301 and information system tier 303 to reduce dependencies of core components in information system tier 303 to specialized front ends. This abstraction, in general, is done by presentation and logic service 323 in middle tier 302. As explained more completely below, presentation and logic service 323 provides functionality in an application oriented way and hides implementation details of information system tier 303.

In the following description, two alterative embodiments of presentation and logic service 323 are described.

A first embodiment of presentation and logic service 323 uses a plurality of providers and adapters. The adapter forms a link with universal content broker 113 and universal content broker content 332 to retrieve data, and an adapter extracts information from the data and builds a page that can be returned for display to the user device.

A second embodiment of presentation and logic service 323 uses controller servlets, JAVA beans as models, and JAVASERVER PAGES objects as views. As explained more completely below, in this embodiment a JAVA bean forms a connection with universal content broker 113 to retrieve data. A servlet extracts the desired information from the data and inserts the information in a JAVASERVER PAGE object that in turn is used to generate a page that can be returned for display on user device 102i or 102j.

A second task of middle tier 302 is to provide access points for all kinds of clients in client tier 301, to manage user sessions for clients in client tier 301, and to provide specialized functionality to different kinds of clients in client tier 301. As explained more completely below, this specialized functionality is provided by middle tier 302 (i) supplying dynamically generated pages that can be displayed on the user device, e.g., HTML/WML/XML pages, (ii) linking requests from components in client tier 301 to actions on data objects, or (iii) hosting one of a plurality of remote applications 310, which are executed on a server machine for a client in client tier 301, but the user interface for the application is displayed on client device 102i.

INFORMATION SYSTEM TIER OVERVIEW

As indicated above, the third tier, information system tier 303, includes configuration server 336 in universal content broker system 112. Information system tier 303 also includes universal content broker 113 that utilizes universal content providers 331 including hierarchy content provider 335 and universal content broker content 332.

In general, all types of data - users' documents and configuration data - are stored and managed in information system tier 303, which is a server-side tier. Information system tier 303 is the users' informational backbone, which, in the prior art, was typically housed in various databases in traditional legacy system architecture. (The users here are the clients in client tier 301 that were referred to above.) Network portal system 100 consolidates all resources under a single content manager, e.g., universal content broker 113, which allows a wide variety of data types to be accessed via a unified interface.

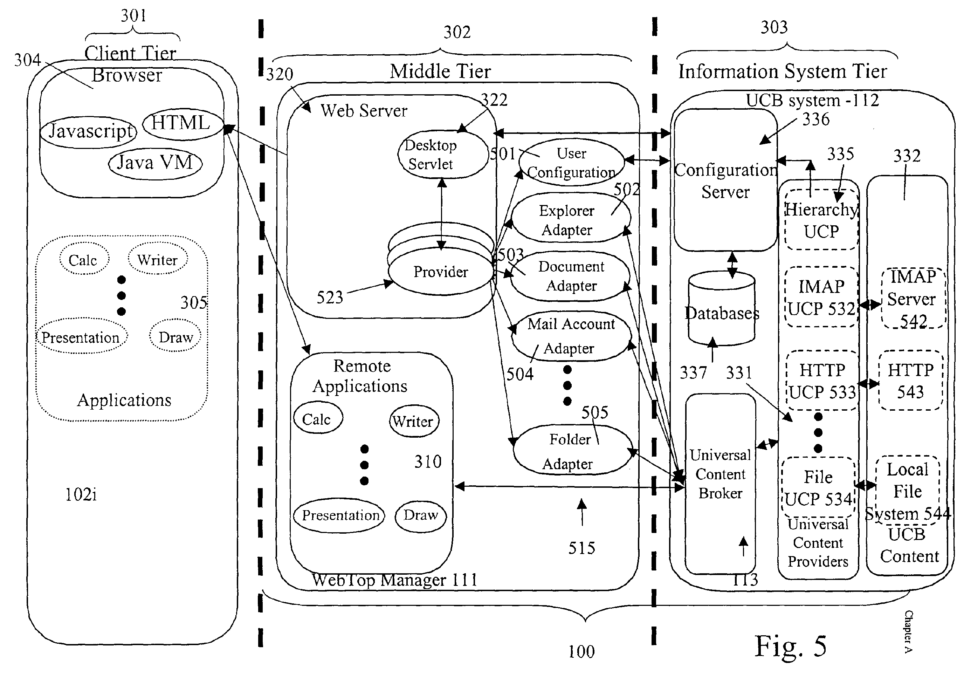

As described above, more than one data source can be used by or connected to network portal system 100. This means that data can be stored in local file system 544 (See Fig. 5), on an HTTP server 543, on a FTP server (not shown), in an e-mail account on IMAP server 542, or on a NFS server (not shown). One task of universal content broker 113 is to standardize the access to different data sources.

As explained more completely below, universal content broker 113 provides a range of functions for querying, modifying and creating data content. The use of different data sources is transparent for a portal user, i.e., the user of any user device coupled to network portal system 100. To facilitate the use of different data sources, hierarchy content provider 335 organizes the different sources in form of a hierarchical structure. For example, see Figure 2D. A user can classify the data sources by using user-defined folders and then browse through the content using an explorer. With the explorer and the hierarchical presentation of all the user's information available through universal content broker 113, the user does not have to think about which protocol has been used or what the type is of the particular data in accessing the data. As indicated above, data is accessed by going through a standardized interface that includes the explorer capability.

Universal content broker 113 functions, in one embodiment, as a framework containing a range of elements and services for use with different data sources. Specifically, universal content broker 113 administers a plurality of universal content providers 331. Each universal content provider encapsulates the details of the different protocols and data sources available through that provider. In one embodiment, a set of default universal content providers 331 allows access through FILE, HTTP, FTP, IMAP, POP3 and SMTP protocols. A portal operator can implement additional content providers so that in-house information services can be integrated into network portal system 100. For example, this could be a connection to a SAP™ system.

The data content in UCB content 332 is encapsulated in content objects. The content objects implement, among other things, an interface for querying general information, as described more completely below. The interface can be used to call up different properties such as MIME type, URL, etc. Furthermore, each content object provides a series of commands for accessing the actual data by implementing other interfaces. The commands available in each individual content object depend on the data type. Commands such as an open command can be used in almost all content types, whereas a createFolder command would have little use in a pure text object.

In many cases, applications and components of network portal system 100 use common data. If one application modifies the properties of content in a common file, all the components using this data should be informed of the changes made. For this reason, content objects can register various listeners to the content object on content listeners registry 340. The listeners then inform the different applications when properties have been modified.

As described above, content objects can contain different kinds of data. For example, a content object can encapsulate a file, an e-mail, a basic HTML page or a system folder. To facilitate handling the various content types in a standard way, each content object, sometimes called content, implements a standard set of interfaces. These interfaces are described in detail below, but a brief summary of their function is given here.

The interfaces include functions for calling content type and any commands that can be run on the content.

Typical examples are commands such as "open" or "delete". A developer can define further commands depending on the content type. For example, an "update" command can be used on a POP3 inbox. There is an additional function available for terminating a command.

The interfaces also provide functionality to register different listeners that pass on alterations made to data to interested applications in the form of events. This type of message can result from such events as deletion or simply by changing content properties. If the content object is a folder, additional events can be sent when new sub-content has been inserted or removed.

Each content object has a range of properties that can be read and re-set by an application. In one embodiment, content has to have certain properties, including title, MIME type and an id, for example. Furthermore, optional properties can be set if required. This could cover such information as the date the content was created or modified or the saving of passwords.

Content node hierarchies can be built for content objects such as an IMAP account or a file system as illustrated in Figure 2D. In these situations, a parent-child relationship exists between the different content objects. To enable access not only to parent nodes but also to child nodes, the content objects implement additional interfaces that also allows new nodes to be created and inserted.

Universal content providers 331 make access possible to the different data sources in UCB content 332. Each content provider implements an interface, which facilitates access to data through a Uniform Resource Identifier (URI). This has the following structure (see RFC 2396):

<scheme>://<authority><path>?<query>

The structure describes the protocol used for accessing each of the data sources, sometimes called the URL scheme, or more generally protocol scheme, or content provider identifier. If an IMAP account source were used, the content provider identifier would be "imap", if a FTP server is used, then "ftp" would appear as the content provider identifier.

Universal content broker 113 administers universal content providers 331. As soon as a client requests particular content, in this embodiment, web server 320 addresses UCB 113 and passes on the corresponding URI. The UCB 113 analyzes the URI to determine the content provider identifier so that UCB can find the appropriate universal content provider on UCP registry 341. The task of loading the requested data is delegated to this provider. Neither, the user of user device 102i nor web server 320 needs to know specific details about the protocol or data source. The content provider carries out all of the necessary steps. The protocol or data source details are thus hidden from the client.

The requested data is loaded and transferred to the client, in this case web server 320, as a content object. The content object encapsulates the requested data. The client can now run commands on the content object, to load or edit the data, for example. Similarly the internal data structure is hidden from the client, which means that it is possible to treat data from different sources in the same fashion. Accessing an e-mail account is therefore no different to accessing a local file system.

As explained above, some prior art content types can have a hierarchical structure. See Figs. 2A and 2B.

This applies to content objects such as those created by a file provider or IMAP provider. Users can browse through the different content objects or insert new content nodes into the hierarchy or delete existing ones. With other providers, such as HTTP, there is no relationship between the different contents. Users must know the exact location (the URL) to be able to access specific content. In the prior art, accessing this type of data by browsing with an explorer was not possible.

However, as described above, hierarchy content provider 335 allows a user to classify any kind of content type in a virtual hierarchy as illustrated in Figure 2D. Users can define custom folders which themselves can contain folders or links to any content. Users can adapt this classification to match their requirements and taste. All of the settings made are stored in a persistent fashion and are, therefore, available when the user logs into network portal system again.

Hierarchy content provider 335 provides portal users with a standard, expandable view of the different data in network portal system 100. The users can browse through the different contents with an explorer, without having to keep in mind which protocol is being used or what the content type is.

As described above, universal content broker 113 administers different content providers 331 in network portal system 100. In one embodiment, a UCB process, which is described more completely below, is created for each user on-demand on a server. In one embodiment, a daemon is used to start and end processes on the server. The daemon also builds connections between components on network portal system 100. In addition, the daemon could be used in conjunction with load balancing. In this case, the daemon acts as a contact for all server components, while client components contact a part of the load balancer to determine on which of a plurality of servers to start a requested process.

When started, universal content broker 113 uses the entries in configuration server 336 to determine which content provider (UCP) is available in the system for which protocol and then enters the corresponding details into an internal table, sometimes called a provider registry. If necessary, user-specific settings are taken into account, as in the case of a hierarchical classification of the various data sources.

Portal operators can implement their own content providers to provide additional protocols in the system or to integrate other information systems into network portal system 100. Universal content broker 113 is made aware of this information by the corresponding entries in configuration server 336.

As soon as a user wants to access a particular data source, the URI and corresponding configuration entries are analyzed to determine the appropriate content provider. As explained above universal content broker 113 delegates the requests to the appropriate provider. This then takes care of the actual running of the data access. In this situation, universal content broker 113 can be seen as the contact and middleman.

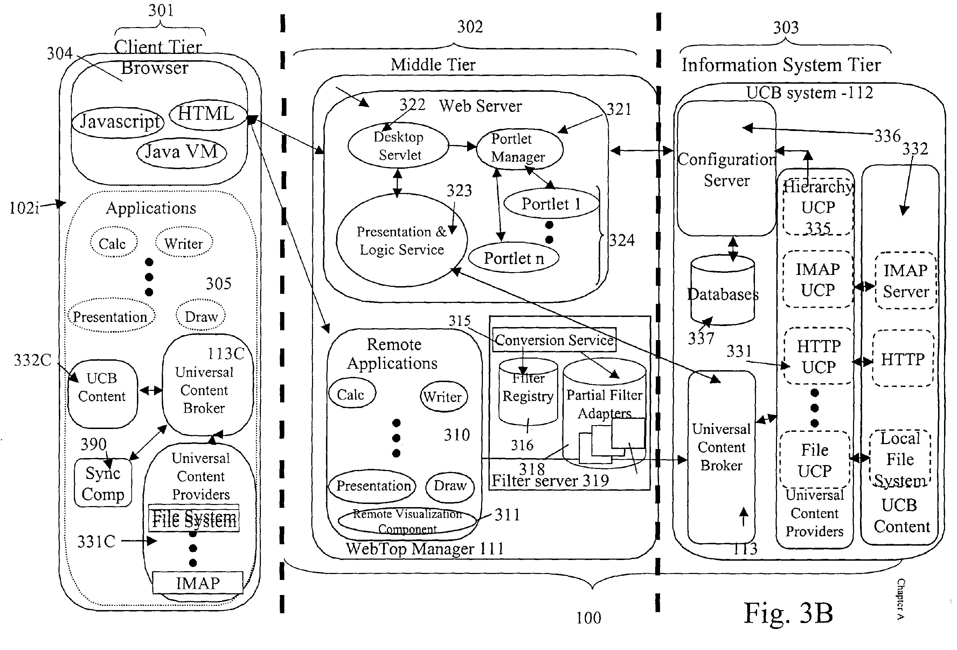

In one embodiment, data stored locally on a client can only be loaded through a web browser and so local data cannot be accessed by using universal content broker 113. As illustrated in Figure 3B, to support both the loading and saving of local data, an additional universal content broker 113C maybe implemented on client device 102i. By utilizing a remote access universal content provider, client universal content broker 113C can be hinged onto server universal content broker 113 as an additional universal content provider. A file content provider could then be registered on the client universal content broker 113C, for example, so that the local file system can be accessed.

Alternatively, when the user is not connected to the network, the user can use client universal content broker 113C when using applications 305. When the user is connected to the network a single component 390, running on the client side synchronizes client universal content broker 113C with server universal content broker 113. Synchronizing component 390 synchronizes messages in user mailboxes, files that were edited on local machine 102i, and files that were, say, accessed from a browser and edited directly on network portal system 100. Synchronization of content also applies to multi-user operations, in which a number of people may be operating on various areas of the content. In this situation, collision prevention is also provided.

All of the settings in network portal system 100 are stored by configuration server 336. This includes user-specific, application-specific and device-dependent configurations. The central storing and standard structure facilitate system maintenance. Instead of monitoring the status of various configuration files, an administrator views and modifies the settings at a central location when necessary. This central storing also allows "Roaming Profiles". A user can log into network portal system 100 through different computers from any location, as described above. Irrespective of where a user is, the user always finds their usual work environment with the custom settings.

By using configuration server 336, different kinds of information are stored in an ordered manner so that the information can be accessed quickly. Thus configuration server 336 contains entries for the user accounts, which contain the user name, password, home directory, and similar information. Configuration server 336 also holds various entries used to initialize applications. Each component of network portal system 100 can store and load persistent data in configuration server 336. Entries for services that have been initially integrated into network portal system 100 are stored in the configuration server 336 as well.

All of the entries are stored in hierarchical form in key-value pairs. As explained more completely, below a configuration tree contains separate branches for this purpose, which can be used for different users or the various user devices. The configuration tree is described through a Document Object Model (DOM) based on XML (Extended Markup Language). Communication between configuration server 336 and the various components of network portal system 100 is provided via requests for entries or requests for modification of entries. In one embodiment, the data is exchanged using an XML-based protocol.

Alterations to the DOM tree are carried out by transactions, which include inserting new nodes or new key-value pairs describing user preferences. This also covers such things as modification of individual entries or deletion of an entire subtree as the entries are no longer needed. Configuration server 336 also contains different mechanisms for querying the status of transactions or registering different listeners that are notified when alterations are made to configuration service elements and that in turn notify the applications affected.

AN EMBODIMENT OF PROCESSES OF NETWORK PORTAL SYSTEM 100

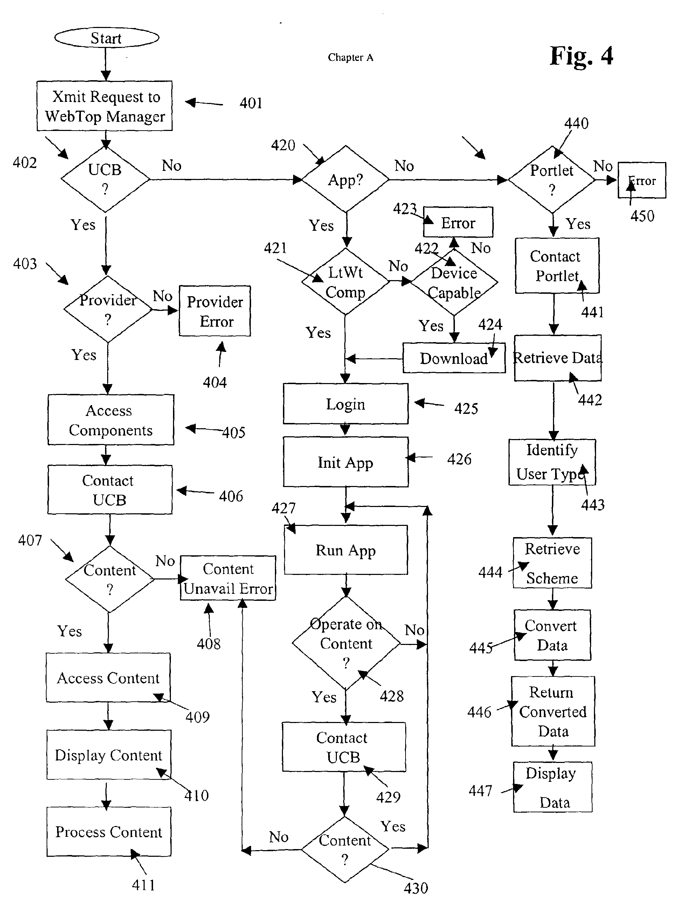

Figure 4 is a high-level process flow diagram for one embodiment of network portal system 100. A user inputs a request via a browser 304 executing on client device 102i in transmit request to web-top manager operation 401. Information in the request identifies whether the request is for content available through universal content broker 113, for content available from an external provider, e.g., through one of plurality of portlets 324, or for a service in remote applications 310 that is supported by web-top manager 111.

The request from browser 304 is transmitted over a network to web-top manager 311 in transmit request to web-top manager operation 401. As described above, the transmitted request includes the type of document or service requested, the type of client device 102i that is making the request, the type of the browser executing on client device 102i, and the communication protocol that is typically part of a uniform resource locator (URL) included in the request.

In response to the request, web server 320, which in one embodiment is the Tomcat server supplied by The Apache Software Foundation, 1901 Munsey Drive, Forest Hill, MD 21050-2747, U.S.A, determines how to process the request. It should be noted that web server 320 may require various user authentications before access to web server 320 itself, or before access to any information accessible via web server 320 is granted. The particular techniques used for such authentication as well as the various levels of authentication that may be used are not essential to this invention and so are not considered further.

Web server 320 determines whether the request is for universal content broker 113 in UCB Check operation 402. If the request if for universal content broker 113, check operation 402 transfers to provider check operation 403 and otherwise to application check operation 420.

In provider check operation 403, desktop servlet 322 uses presentation and logic service 323 to determine whether there are components available within service 323 to access universal content broker 113 for the type of information requested, e.g., for the MIME type of the information. For example, service 323 may access a user configuration file that was generated using configuration server 336 to determine whether components within service 323 have been instantiated for accessing universal content broker 113 for the type of information requested and for this user. If such components do not exist, in one embodiment, service 323 accesses a registry of factories to determine whether components can be instantiated for accessing the requested type of content, and if so uses the appropriate factory to instantiate the necessary components within service 323.

In either of these cases, there are components within service 323 for interacting with universal content broker 113 for the particular type of data requested and so check operation 403 transfers to access components operation 405, and otherwise transfers to return provider error operation 404. In return provider error operation 404, desktop servlet 322 generates an HTML page that is returned to client device 102i, which informs the user that the requested content is unavailable.

In access components operation 405, service 323 passes the request to the component within service 323 that supports the requested content. For example, assume that the user of client device 102i sent a request to network portal system 100 for the retrieval of content constituting a message on an IMAP server with an associated property. An example of a URL included in the request is: imap://user@mailserver/inbox;UID=3.

For this URL, the content has an associated property value UID set to 3. Thus, desktop servlet 322 passes the request including this URL to the IMAP components in service 323 that process IMAP requests. The IMAP components in turn pass the request including the URL to universal content broker 113 in contact UCB operation 406.

In contact UCB operation 406, universal content broker 113 searches a registry of universal content providers 341 for the content provider associated with the URL. If a content provider for the requested content is found in a plurality of universal content providers 331, universal content broker 113 passes the request to the universal content provider that in turn retrieves the requested data, if necessary and returns a handle to the requested content in universal content broker content 332, and otherwise an error message is returned. Notice that the user device is not required to have software installed, or the hardware capability required to access the content via the particular protocol required. These details are delegated to the universal content provider. To this point the only requirement on the user device is to generate a request that can be processed by web-top manager 111.

Content check operation 407 determines whether a handle or an error message was returned by universal content broker 113. If a handle to the requested data in UCB content 332 is returned processing transfers to access content operation 409 and otherwise processing transfers to content unavailable error operation 408. In error operation 408, the components within service 323 that are processing the user request generate a page that includes the error message and return that page to the user device for display.

In access content operation 409, the components within service 323 processing the request use the returned handle to obtain the raw data from UCB content 332. This data is in a format associated with the particular universal content provider. Accordingly, as explained more completely below, in operation 409, information is extracted from the raw data and placed, in this embodiment, in a template associated with the user device that issued the request.

In one embodiment, there is a set of HTML templates for browsers, a set of WML templates for WAP devices, and a third set of templates for hand held devices like PDAs. Within each of the three template sets, there is another set of content templates for each type of content, e.g., one set for an e-mail, another for an IMAP folder, and a third for a file system folder. Within each of content template sets, there is a template for each class of user device, based on user device capabilities.

The template selected from these sets, i.e., the template associated with the user device, is selected based upon information in the request from the user device, as explained more completely below. The content that is accessed is in a raw data format. Information is extracted from the content, as explained more completely below, and inserted in the template that represents a page that can be displayed on the user device, or alternatively that can be used to generate a page that can be displayed on the user device. In either case, service 323 returns a page to the user device upon completions of operation 409 that includes the requested content.

Upon receipt of the response to the issued request, the user device displays the page that was returned in display content operation 410. In some cases, the user can manipulate the displayed data, e.g., delete an e-mail message, and forward the content to an output device. To initiate such an action, in process content 411, the user device issues another request in the form of an HTTP POST request, and this request is processed via operations 402 to 410 as described above. As explained more completely below, the operations performed on UCB content are not limited to retrieving and saving content. Properties of content can also be changed, added, updated, or perhaps deleted through universal content broker 113 and the appropriate universal content provider.

The above description assumed that the request was directed to content associated with universal content broker 113. However, if this is not the case, the request is passed to application/service check operation 420. If a user of device 102i issued a request to use remote applications 320 over network 103/106 to web server 320. The transmission of the request over the network 103/106 is performed according to a predetermined transmission protocol. In response to the request from user device 102i, web server 320 determines whether the request is for a service or application in remote applications 310 and if the request is for such a service or application, processing transfers to lightweight component available check operation 421 and otherwise to portlet check operation 440.

Lightweight component check operation 421 determines whether a lightweight remote visualization component 311 needed to run the requested service/application is installed on user device 102i. This can be done, for example, by accessing a user configuration file on web server 320, or alternatively by executing a process on web server 320 that accesses the user device and determines whether the lightweight component is installed. If the required lightweight remote visualization component is installed on user device 102i, check operation 421 transfers to login operation 425 and otherwise to device capability check operation 422

Device capability check operation 422 determines whether user device 102i can execute and use the lightweight remote visualization component 311, e.g., is there a lightweight component 311 available for the general type of user device 102i, and is the operating system, processor, and memory of specific user device 102i sufficient to execute and support lightweight component 311. This information may be included in the initial request, a process on web server 320 may communicate with user device 102i to obtain the information, the information may be retrieved from configuration server 336, or alternatively, the request may include an identifier that is used to access some other database to determine the capabilities of user device 102i.

If user device 102i is capable of executing and supporting lightweight component 311, processing transfers to download component operation 424 and otherwise to return error operation 423. Return error operation 423 sends an appropriate error message to user device 102i to inform the user of the incompatibility between the requested service/application and user device 102i.

Download component operation 424 downloads, and installs if necessary, lightweight component 311 on user device 102i. Thus, prior to starting login operation 310, lightweight component 311 is available on user device 102i.

In response to the request to access a service/application in remote applications 310, in login operation 425, a connection is established over network 103/106 to a daemon executing on web server 320. The daemon returns a handle to a daemon service factory to the lightweight remote visualization component on user device 102i.

Upon receipt of the handle to the daemon service factory, the lightweight remote visualization component on user device 102i issues a request to the service factory to initiate execution of a login service on web server 320. Upon activation of the login service in login operation 425, the lightweight remote visualization component on user device 102i transmits a user identification, a password, and options for the service/application, i.e., a runtime environment component, in remote applications 310 to the login service. The login service on web server 320 in operation 425 validates the user login and transfers to initialize application operation 426.

While in the embodiment of Figure 4, the daemon and login service are described with respect to accessing a service/application. In general, a daemon process and login service are used to initiate each service supplied by network portal system 100 and so typically are also included within other branches of Figure 4.

A start application operation within operation 426 activates a service factory for remote applications 310, e. g., runtime environment components, on web server 320 and returns a handle to this service factory to the lightweight remote visualization component on user device 102i. Next, in a create user interface operation within initialize application operation 426, the lightweight remote visualization component on user device 102i issues a request to the runtime environment components service factory to start an infrastructure generation service.

In response to the request, the service factory, executing on web server 320, activates the infrastructure generation service, and returns a handle to this service to the lightweight remote visualization component on user device 102i. In a create visual infrastructure operation, the lightweight remote visualization component on user device 102i issues a request to start the infrastructure generation service, and passes a handle to a client factory to the service. The lightweight remote visualization component on user device 102i next issues a request to create a visual infrastructure on web server 320 for processing the visual portion of the user interface.

In response to the request from the lightweight remote visualization component on user device 102i, the infrastructure generation service first issues a request to the client factory on user device 102i to create a remote frame window, and then this service creates a corresponding server window object on web server 320. The server window object queries the remote frame window on user device 102i to determine the fonts, display parameters, etc. on user device 102i. Alternatively, the server window object can obtain identifier information from user device 102i and then use this identifier information to access a database that includes the display capabilities of device 102i via configuration server 336.

Upon completion of the queries, in a create environment infrastructure operation, the infrastructure generation service creates a frame object that controls the environment of the server window object and creates a direct connection between the frame object and lightweight remote visualization component on user device 102i. Operation 426 transfers to run application operation 427. At this point, a direct connection is established between user device 102i and the service/application in remote applications 310.

In run application operation 427, lightweight remote visualization component 311 sends a command to the frame object to load a particular document in the service/application. In response, the frame object initiates a request to UCB 113 for the document. Check operation 428 passes the request to contact UCB operation 429.

In general, operate on content check operation 428 determines whether the user has issued such an instruction to save, retrieve, or replace content, or to act on a property of the content. If an instruction to operate on content was not issued processing returns to run application operation 427, and otherwise to contact UCB operation 429. Those of skill in the art will appreciate that check operation 427 is not continually performed, but rather typically is performed by an event processor in response to a specific user input event.

In this case, operation 429 is similar to operation 406 that was described above. Operation 429 transfers to content check operation 430 that functions in a manner similar to operation 407. In content check operation 430, universal content broker 113 determines whether the operation requested in the instruction is permitted, e.g., is the content available through universal content broker 113, and if the content is available, is this user permitted to perform the operation requested. If the answer is no to either of these checks, processing transfers to return content error operation 408, which in turn notifies the user that the requested operation on the content cannot be performed. Otherwise, the application is provided access to the content and permitted to perform the operation on the content, which in this case is loading the document.

The user did not have to worry about the specific location at which the content was stored. To the user, the content appeared as if the content was on user device 102i. This provides the user with access to content independent of the location of the user, e.g., see the above example where the user was at a friend's home.

After the document is loaded, the service/application reads the loaded document, and generates a display layout that is sent to the server window object. In turn, the server window object sends the display layout to the remote frame window in the lightweight remote visualization component on user device 102i. The remote frame window generates commands to a device dependant graphic layer, e.g., the JAVA AWT that in turn generates the user interface on a display screen of user device 102i.

If user device 102i has limited input/output capability, the user may be able to only read the document, or perhaps direct the document to a local output device if the remote service/application includes such a capability, e.g., a capability to write to a local printer or to write to a fax printer. If a user device 102i includes multiple input/output devices, the user can utilize the full functionality of the service/application. For example, if the user utilizes a mouse to scroll down in the document. The scroll action is interpreted by the windowing environment on user device 102i and a scroll command is set by the windowing environment to the remote window frame of the lightweight remote visualization component on user device 102i.

The remote window frame, in turn, sends a scroll command over network 103/106 to the server window object on web server 320. The server window object processes the event received and generates an application event that in turn is processed by the service/application. In this example, the application does a re-layout based on the scrolling, and redraws the display in the server window object that in turn sends a redraw command to the remote frame window on user device 102i.

In one embodiment, the transmissions over network 103/106 between lightweight remote visualization component 311 and web server 320 are encrypted according to known technologies. Further, in another embodiment, digital signatures are used to provide certification of the request mechanism being established on the client for this runtime environment component services system.

The size of the lightweight remote visualization component on user device 102i does not increase with the number of accessed runtime environment components of the implementation server framework. This introduces the ability to offer runtime environment components, which expose only services designed for a special purpose and hide the complexity of the implementation framework. A more complete description of embodiments of the using services/ applications on network portal system 100 is described CHAPTER C below.

Hence, the lightweight remote visualization component on user device 102i maps visual display instructions from an application executing on web-top manager 111 to a platform dependent graphic layer that in turn generates a user interface on a display screen of the user device. The user interface for the remote application is similar to the user interface that the user would see if the application actually were executing locally on device 102i. The interfaces may not be identical if user device 102i has limited input/output capability.

Note that the only restrictions on client device 102i are that the device must have the capability to execute a browser, the capability to execute the lightweight remote visualization component, and the capability to provide the input operations required by the application or service. There is no requirement that client device have preinstalled specialized client/server software for each application or service that is available via web-top manager 111. Consequently, the requirement for updating the specialized client/server software on each client device each time a change is made to an application or service has been eliminated.

The above description assumed that the user requested an application or application service that was supported by web-top manager 111, or requested content supported by universal content broker 113. However, if the user did not request an application or an application service, or content associated with universal content broker 113, processing transferred from application check operation 420 to portlet check operation 440.

As explained above, a user initiates a request on a user device 102i by selecting a portlet identifier, e.g., an icon, for example, that represents a particular instance of data that is accessible via a particular portlet on web server 320. In this embodiment, an icon representing a portlet is only selectable for display on display screen 150 (Fig. 1B) if the data provided by the portlet may be presented by user device 102i. For example, if the user device does not support graphics, a portlet, which provides data with the MIME type image/jpeg, would not be available for selection for display on the display screen of user device 102i.

In one embodiment, this pre-selection of portlets offered to the user is made by a comparison of the MIME types supported by the user device and the MIME type of data for each of the portlets. A more detailed description of embodiments of a process used to select portlets that may be accessed by user device 102i is described in CHAPTER D below.

Consequently, in the following description, when user device submits a request for access to a portlet in operation 401, no subsequent checking is done to assure that the requested data can be displayed on the user device. However, in another embodiment, the user is allowed to send requests to all available portlets, and as each request is sent, if the request cannot be processed for whatever reason, an error message is returned to the user device.

The request transmitted in send request operation 401 includes at least a description of the requested data. Such a description may be, for example, the URL of the data. The request typically also includes the MIME type or types supported by the user device, e.g., wireless application protocol (WAP) for mobile phone 102j. The request may also include either or both of the identity of the user device and the identity of the user of the user device. In one embodiment, the request may further include a command, such as channel, load, save, or article. See **European Patent Application** entitled " A COMPUTER-BASED PRESENTATION MANAGER AND METHOD FOR INDIVIDUAL USER-DEVICE DATA REPRESENTATION," of Ralf Hofmann et al.

Portlet check operation 440 analyzes the request from user device 102i, sometimes referred to as the original request, to determine whether this request has to be processed by portlet manager 321. Check operation 440 can be implemented in various alternative ways. In one embodiment, deployment descriptors as defined in the JAVA 2 Enterprise Edition are used and checked in operation 440 to determine where to direct the user request. The JAVA 2 Platform Enterprise Edition Specification, v1.2, Sun Microsystems, Inc., Palo Alto, CA (1999) and the JAVA Servlet Specification, v2.2, Sun Microsystems, Inc. Palo Alto, CA (1999) are incorporated herein by reference to show the level of skill in the art. Based upon the deployment descriptors, if the request is a portlet processing transfers to contact portlet operation 441 and otherwise processing transfers to error operation 450 that returns a page with an illegal operation error to user device 102i.

Portlet manager 321 may be implemented in software within web server 320, or may be installed on a separate computer system, which is connected or connectable to web server 320. In one embodiment, portlet manager 321 is implemented as a servlet that executes on web server 320.

Typically, portlet manager 321 is not continually executing on web server 320, and so if a request is forwarded to portlet manager 321 in contact portlet operation 441, portlet manager 321 is started and then the request is forwarded to portlet manager 321 for processing.

Portlet manager 321 forwards the request to the appropriate portlet. The forwarding of the request to a specific portlet completes contact portlet operation 441. The portlet retrieves the data in retrieve data operation 442, and processing in portlet manager 321 transfers to a MIME check operation within identify user type operation 443. The request from the user device contains information about the presentation requirements of the requesting user device, or contains information about the identity of the user device, or contains both. If the request contains one or more MIME types processing transfers to a get MIME type from request operation within operation 443 and otherwise to an identity check operation within operation 443.

In the get MIME type from request operation, portlet manager 321 extracts a list of MIME types supported by the user device from the request including a preferred MIME type, if a preferred MIME type is specified. The get MIME type from request operation transfers to the identity check operation.

In the identity check operation, portlet manager 321 determines whether the request included identification information. If identity information is included, processing transfers to a get identity from request operation and otherwise to retrieve scheme operation 444. The get identity from request operation retrieves the device identification from the request and transfers to retrieve scheme operation 444.

In retrieve scheme operation 444, portlet manager 321 uses the information extracted from the request to retrieve a presentation scheme for the user device from a plurality of presentation schemes stored on storage unit accessible by web server 320. An example of a presentation scheme is an XSL style-sheet for converting the MIME type of the retrieved data to a MIME type that can be displayed by user device 102i. In one embodiment, the retrieved presentation scheme is loaded in a memory accessible by portlet manager 321. Retrieve scheme operation 444 transfers processing to convert data operation 445. A more detailed process flow diagram of one embodiment of retrieve scheme operation 444 is presented in U.S. Patent Application Serial No. 09/xxx,xxx, entitled " A COMPUTER-BASED PRESENTATION MANAGER AND METHOD FOR INDIVIDUAL USER-DEVICE DATA REPRESENTATION," of Ralf Hofmann et al.

When the portlet completes the retrieval of the requested data in retrieve data operation 442, convert data operation 445 is initiated. Portlet manager 321 processes the retrieved data using the stored presentation scheme to generate new data that can be displayed on the user device. For example, if the retrieved information is a XML document, the XSL-stylesheet loaded in memory is used to do the transformation. If the retrieved information is e-mail data, a JAVA class is used to extract the data and insert the data for example into a HTML template.

Convert data operation 445 transfers to return converted data operation 446. In operation 446, portlet manager 321 returns the converted data in a HTTP response to web server 320. Web server 320 sends the HTTP response to the user device that sent the original request.

In display data operation 447, the user device processes the HTTP response, and displays the response to the original request on the user device.

In this example, it was assumed that convert data operation 445 was performed on the same computer running portlet manager 321. However, in another embodiment, retrieve scheme operation 444 and convert data operation 445 send the retrieved scheme and retrieved data respectively to another computer system connected to the user device, or the user device itself. In these cases, convert data operation 445 is performed on the another computer system, or the user device, and returned converted data operation 446 is performed only if operation 444 was executed on other than user device 102i.

In the above embodiment, it was assumed that portlet manager 321 was able to identify the type of presentation requirements for the requesting user device and retrieve a presentation scheme that converted the type of the requested data to a type that could be displayed on the user device. In another embodiment, a presentation scheme is not available to convert the retrieved data to a type of data that can be displayed on the user device. For example, the user requests a spreadsheet that has a data format specified by the manufacturer of the application that generated the spreadsheet. The presentation scheme available for the user device requires an input document in XML. Since the retrieved document in not in XML, the presentation scheme is not useful.

However, in this situation, portlet manager 321 issues a translation request to a filter server 319. In one embodiment, portlet manager 321 sends a request that includes the MIME type required as input to the presentation scheme for user device 102i, and an address of the requested document to filter server 319. This address can be to a memory where the document is stored after being retrieved by a portlet, or a URL to location of the document on the network. The only requirement is that filter server 319 is able to access the requested document.

In response to the request, filter server 319 builds a filter that can read the requested document, dynamically convert the read data using a partial filter adapter chain to the new format, and then write the converted data in the new format so that the data can be supplied to portlet manager 321. More specifically, in response to the request from portlet manager 321, filter server 319 via a conversion service 315, in one embodiment, causes a protocol reader to be instantiated and uses the protocol reader to access the requested document to determine the format of the requested data, i.e., the source document data format. With the source document data format and the target document data format, i.e., the MIME type received in the original request, filter server 319 builds a filter for converting the format of source document to the format of the target document.

In the embodiment of Figure 3A, filter server 319 passes the request to a conversion service 315 that in turn accesses a filter registry 316 to generate a filter map of partial filter adapters that can be chained together to convert the format of the requested document to the MIME type specified in the request. Using the filter map, conversion service 315 calls a service to instantiate each partial filter adapter in the map using partial filter adapter library 318. Conversion service 315 calls another service to chain the partial filter adapters together using a chaining application programming interface of each partial filter adapter.

In this embodiment, filter server 319 via conversion service 315 constructs a data filter by gluing a protocol read and parser unit to an input end of the partial filter adapter chain and a bit stream printer and protocol writer to an output end of the chain. After construction of the data filter, conversion service 315 uses the data filter to process the requested document, e.g., the spreadsheet. The data filter generates data with a MIME type that can be input to the presentation scheme that is returned to portlet manager 321, which in turn processes the data as described above.

One important aspect of filter server 319 is that each partial filter adapter utilizes the same generic format independent interface to input the converted data. This allows any one partial filter adapter to be connected to another partial filter adapter without concern for the particular format of the data output by the first partial filter adapter.

In one embodiment, the data filter is used dynamically, which means that the complete data file is not stored in the intermediate formats. Rather, the output from a first partial filter adapter is input to a second partial filter adapter before all the data has been processed by the first partial filter adapter.

A more complete description of embodiments of a filter server 319, and each of the components therein is provided in CHAPTER E below.

In another embodiment, filter server 319 provides information about the dynamic data filter to portlet manager 321, and portlet manager 321 stores a new presentation scheme that includes the dynamic data filter generated by filter server 319, or at least a handle to the dynamic filter, and the retrieved presentation scheme.

FIRST EMBODIMENT OF PRESENTATION AND LOGIC SERVICE 323

As indicated above, in one embodiment of presentation and logic service 323, a plurality of providers 523 and a plurality of adapters 515 are used as illustrated in Figure 5. Network portal system 100 in Figure 5 includes all the services and components described above, but for clarity only the components needed to understand this embodiment of service of 323 are illustrated. Also, it is assumed that the request is issued by user device 102i, but the request could also be issued by any of user devices described herein.

In this embodiment, in provider check operation 403, desktop servlet 322 determines whether there is a provider object available to process the user request from operation 401. In this embodiment, a provider object, sometimes called a provider, is associated with a content provider in plurality of universal content providers 331. For a user to access content via a universal content provider and universal content broker 113, the user must have access to a provider object for that content. If the user already has accessed content using the universal content provider in this user session, desktop servlet obtains the handle to the provider from user configuration 501.

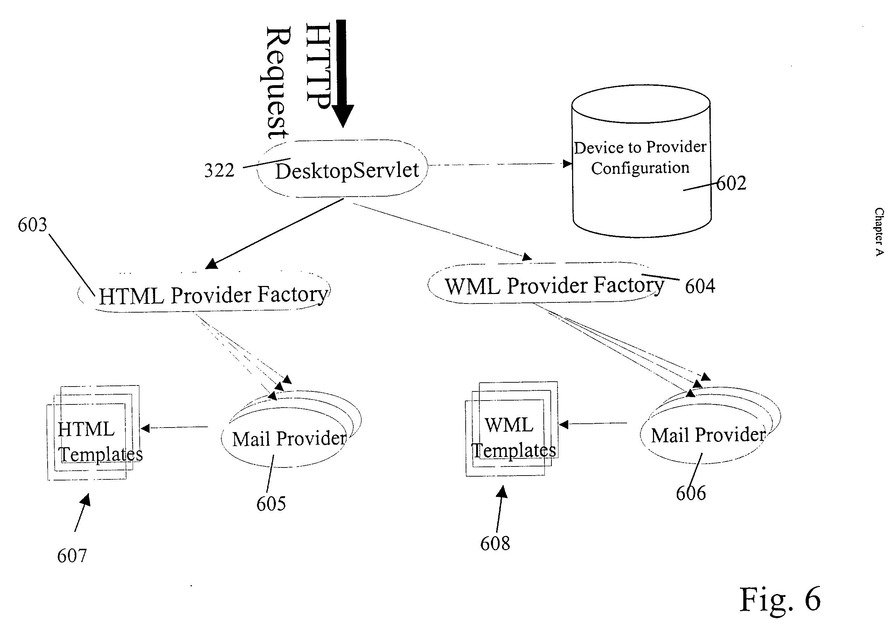

Alternatively, as illustrated in Figure 6, desktop servlet 322, sometimes called a main servlet, accesses a device to provider configuration registry object 602, which in one embodiment is an XML file in which a provider factory for a particular content identifier and user device page type are registered. As illustrated in Figure 6, in this embodiment, a HTML provider factory 603 and a WML provider factory 604 are registered in device to provider configuration registry 602. Accordingly, based upon the user device page type specified in the request, a provider factory object is instantiated, and in response to the request generates a provider for the content identifier type. In the example of Figure 6, the content identifier type was IMAP and so a mail provider 605 was instantiated by factory 603 if the device page type was HTML. Mail provider 605 is linked to plurality of templates 607 that were described above. In the embodiment of Figure 5, plurality of providers 523 includes a provider for explorer adapter 502, a provider for document adapter 503, a provider for mail account adapter 504, and a provider for folder adapter 505. A different content identifier, e.g., a different URL scheme, is associated with each of the providers.

The particular adapters available to a user are determined by the content available to the user in the user's instance of universal content broker 113. In particular, in one embodiment, plurality of adapters 515 are provided for a particular user by an authentication infrastructure, which maps the user's HTTP session on web server 320 to the users' instance of universal content broker 113, and creates plurality of adapters 515 that are bound to this instance of universal content broker 113. In one embodiment, plurality of adapters 515 is implemented using adapter classes that are instantiated and executed on the JAVA Virtual Machine in web server 320.

Each provider in plurality of providers 523 accesses the user's content for that provider, which is stored in information system tier 303, via the corresponding adapter. For example, assume that the user of client device 102i sent a request to network portal system 100 for the retrieval of content constituting a message on an IMAP server 542 with an associated property. An example of a URL included in the request is: imap://user@mailserver/inbox;UID=3. For this URL, the content has an associated property value UID set to 3. Thus, desktop servlet 322 passes the request including this URL to mail provider 605 in plurality of providers 523. Mail provider 605 in turn passes the request including the URL to mail account adapter 504.

Mail account adapter 504 passes the URL to universal content broker 113. Universal content broker 113 searches a registry of universal content providers 331 for the content provider associated with the URL. If a content provider for the requested content is found, e.g., IMAP UCP 532, universal content broker 113 returns to mail account adapter 504 a handle to the requested content in universal content broker content 332.

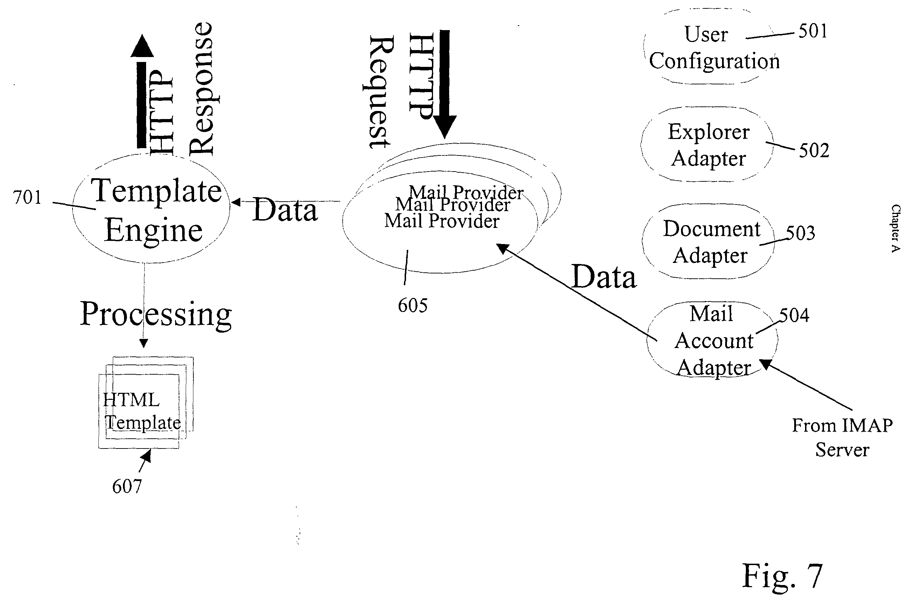

As illustrated in Figure 7, mail account adapter 504 receives the requested content from IMAP server 542 via IMAP UCP 532. The information supplied to adapter 504 is in the form of raw data-e.g., only the name of a folder or a content type. Mail provider 605 determines how to display the information by means of templates 607, which are stored in middle tier 302. There is a set of HTML templates 607 for browsers, and a set of WML templates 608 for WAP devices. Within each set, there is a set of templates for each type of content, e.g., one set for an e-mail, another for an IMAP folder, and a third for a file system folder, for example. Within each of these sets, there is a template for each class of device, based on device capabilities.

Mail provider 605 selects the set of IMAP templates within HTML templates 607, and then selects a specific template for user device 102i using information in user configuration 501. In general, a provider uses a template engine 701 to process the selected template and replace the variables inside these templates, e.g., with the attributes of the current messages in the users inbox. In this example, mail provider 605 uses template engine 701. In one embodiment, template engine 701 is implemented using JAVA classes. The result of the process by template engine 701 is a HTML or WML stream (or whatever format is associated with the client device), which is send back to the client as response. This means that the mode of presentation of the user interface is completely described in the template and separated from the content and editing this template can easily customize the user interface.

SECOND EMBODIMENT OF PRESENTATION AND LOGIC SERVICE 323

A large part of the functionality of network portal system 100 is provided as simple HTML/WML pages to user devices. These simple pages are dynamically generated by components on web server 320 and then displayed on client device 102i by web browser 304. There are numerous mechanisms available to web server 320 for converting application logic or generating HTML pages. Anyone of the following can be used: servlets, Java Server Pages (JSP pages), Common Gateway Interface programs, server-side JavaScript, Active Server Pages (ASP pages) or native applications. The components implemented in a JAVA environment can access other applications that have been implemented in C++, for example, by using the bridge and proxies described above.

In this embodiment, as described more completely below, presentation and logic service 323 uses JAVASERVER PAGES (JSPs) technology to dynamically generate HTML/WML pages that are sent as responses to client requests. (JAVASERVER PAGES is a trademark of Sun Microsystems, Inc.) JAVASERVER PAGES technology enables the separation of static page design and content from the application logic, which is encapsulated in portable, reusable JAVA components. For an example of the knowledge of one of skill in the art with respect to JAVASERVER PAGES technology, see JAVASERVER PAGES Specification, Version 1.1, Sun Microsystems, Inc., Palo Alto, CA, (Nov. 30, 1999), which is incorporated herein by reference in its entirety.

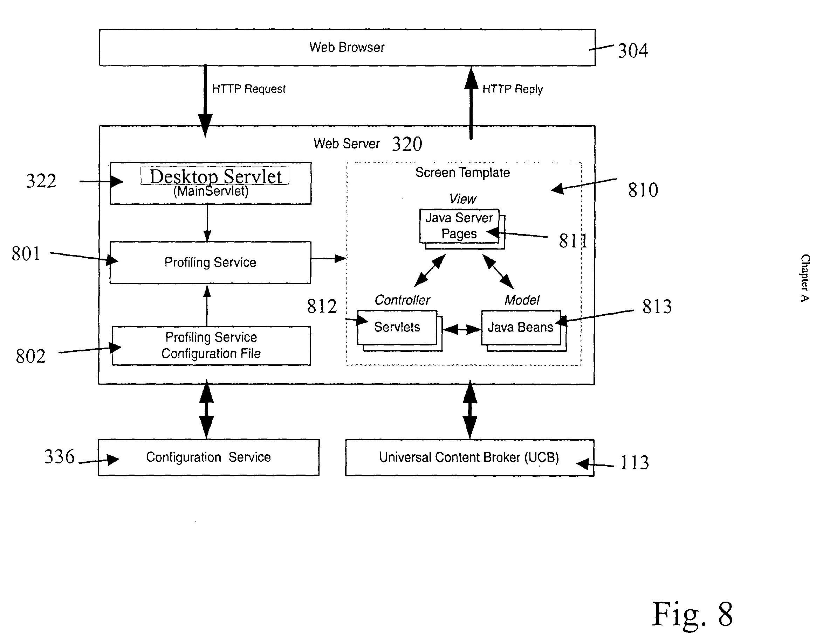

In this embodiment, presentation and logic service 323 uses JAVA servlets 812 (See Fig. 8) to transform application logic, JSPs objects 811 to display the static portions of the HTML page, and JavaBeans objects 813 to link to the different content sources available through universal content broker 113. In this embodiment, two types of JSPs objects are used: templates and components. JSPs templates are used to organize and position common page elements and ensure consistency of design across all pages. JSPs components are used to complete a template and create a final JSP object that is used to generate a corresponding HTML/WML page as explained below.

As described above, every client request received by web-top manager 111 is accompanied by additional information such as the type of browser used (user agent) or the type of document requested (content type). Moreover, when the HTTP GET or POST methods are used for calling a specific page, additional freely selected parameters that specify user-defined commands are transferred as well.

On network portal system 100, these parameters are analyzed so that the requested information can be presented to client device 102i. In this embodiment of network portal system 100, this task is delegated to a profiling service server component 801, sometimes called profiling service 801. Profiling service 801 controls how a client request is answered. In this embodiment, HTTP is used as the default protocol for transferring HTML pages.

More specifically, as described above, a desktop servlet 322, sometimes called a main servlet, receives the request. The request is then passed on to profiling service 801, which analyzes the request. Profiling service 801 analyzes the details in the request together with other information, such as the properties of the device being used, and then decides which JSPs 811, servlets 812 or Beans 813 are to be employed to answer the request. As explained more completely below, in one embodiment a decision tree determines the process flow. The decision tree is described in a format based on XML, in one embodiment, and is stored in a profiling service configuration file 802.

Different conditions from the request are checked for agreement within the decision tree. The decision tree effectively is a concatenation of "if" instructions. If a condition is met, the branch associated with that condition is followed and the set action run. Actions are dependent on request parameters, request header parameters, device properties, and resource properties

Device properties are the properties of client device 102i. Device properties refer to such things as display size on the device. These details are stored in configuration service 336 of network portal system 100 and in one embodiment are cached in profiling service configuration file 802 for easy access, by the components of profiling service 801, as required.

Resource properties are all the properties that are assigned to a requested document or more generally to a resource. This includes, for example the various document types (STAROFFICE documents - STAROFFICE Writer, STAROFFICE Calc or other document formats such as PDF as well as customized content types used for folders, for example).

Network portal system 100 is used with different browsers. A special add-in, e.g., lightweight remote visualization component 311 described above, is required in each browser so that documents can be edited. To enable the dynamic download of the correct add-in, the browser type first needs to be identified. These details are described by the request header parameters.

Furthermore, additional information may be supplied with each request to have custom commands executed. These additional details are termed as request parameters. To avoid transferring a large number of additional parameters with each request, parameters are stored as attributes in a HTTP session, in one embodiment. In this way it is unnecessary to send all the parameters with subsequent requests, instead the details of previous requests can be accessed.

Profiling service 801 uses this information to decide which template in templates 810 is to be used for answering the client request. Furthermore, service 801 ascertains which component, e.g., JSPs component, Servlets, Java Beans component or basic HTML elements, is to be used to complete the template. The result of this is a JSP object to which the request itself is forwarded. This JSP object creates a corresponding HTML page that is sent back to the web browser as an answer to the request.

The actual application logic is transformed by using servlets 812. To avoid having to program servlets for every single basic user action, some of the basic services are provided by main servlet 322. These include the checking of user input or the renaming folders or files.

In one embodiment, web server 320 is the Apache Tomcat server, as described above. The Tomcat server contains a servlet engine and a JSP engine that carries out the actual creation of HTML pages. In this embodiment, all of the components, i.e., JSP components, servlets, Beans components, Images, etc. are combined into a single web archive file.

Templates

Templates in web server 320 are used to organize the user interface in an easy manner. A standard frame for the presentation of HTML pages is created by defining a small number of templates. For example, a view of document storage could display all the documents of a selected folder on a particular part of a HTML page. Typically, a user is provided the possibility of switching between an icon view and a detailed tabular view of the document in the selected folder. The detail view displays not only the file name but also the size, document type, date created, etc. All other page elements remain the same as the icon view. This is where the use of templates is advantageous.

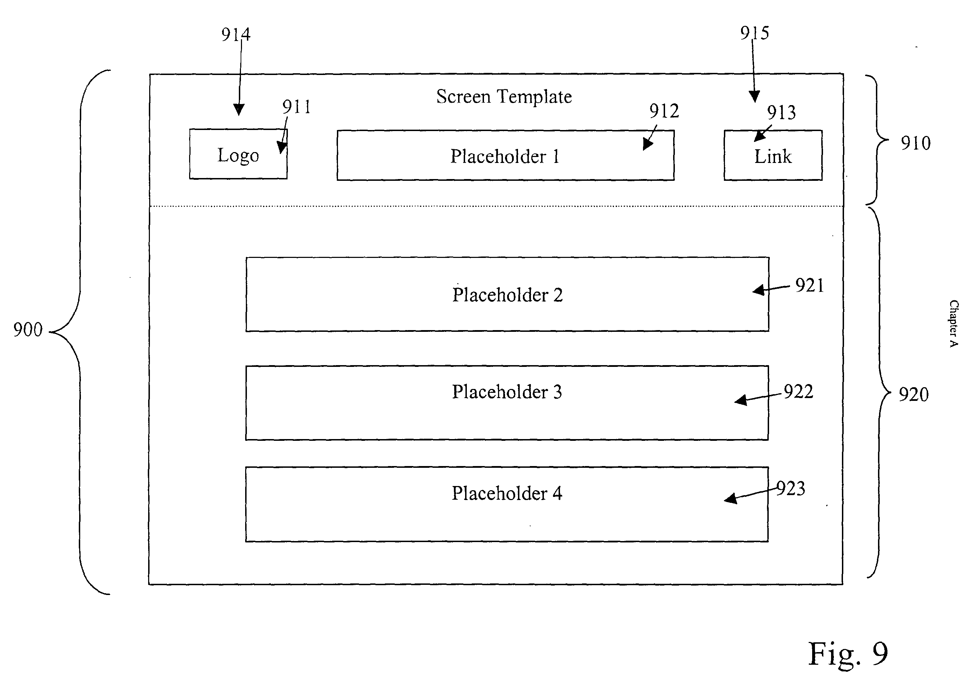

In one embodiment, all pages returned to user device 102i are based on the same default template, with the exception of a login page. Figure 9 illustrates one embodiment of a basic structure of a default screen template 900. Visually, template 900 is divided into a header area 910 and a body area 920. Header area 910, in one embodiment, has a dark background with a placeholder 912 framed by a logo area 911 on left side 914, and a link area 913 on right side 915. In this example, body area 920 has a light background and three placeholders 921, 922, and 923.

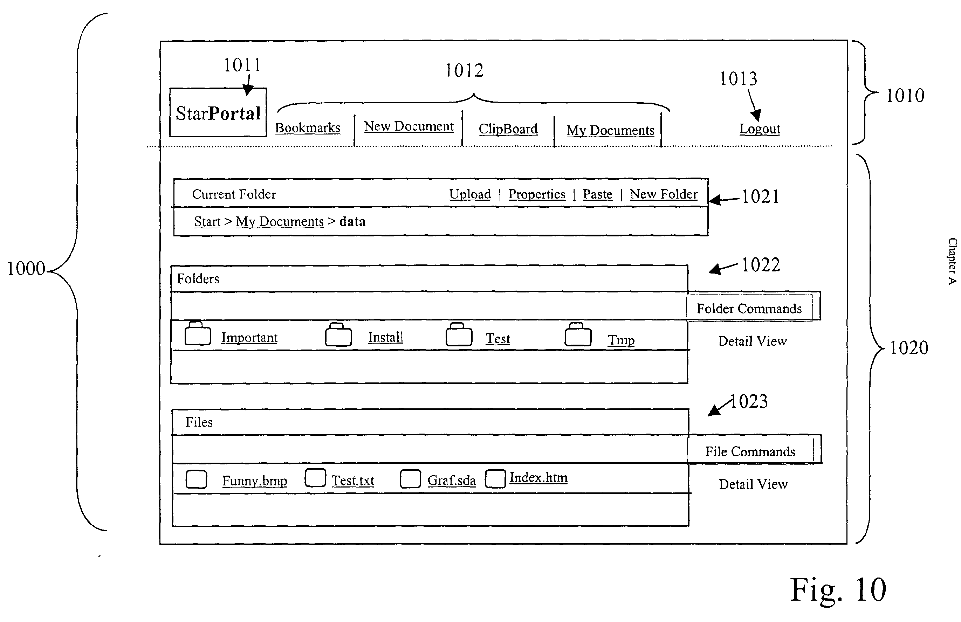

Figure 10 is an example of a HTML page 1000 generated using template 900. HTML page 1000 is divided into a header area 1010 and a body area 1020. Header area 1010 includes a series of navigational aids (shortcuts) 1012 framed by a logo "StarPortal" 1011 and a logout link 1013, which, in one embodiment are hardcode in the template. In this example body area 1020 includes a Current Folder component 1021, a Folders component 1022, and a Files component 1022. Each of components 1021 to 1022 is essentially a JSP component that is included in lieu of its respective placeholder. Current Folder component 1021 shows the path of the current folder. Folders component presents 1022 an icon view of the existing folders that belong to the My Documents link. Files component 1023 lists the existing files in the currently selected folder (also as icons). While in this example, each placeholder has been replaced with a JSP component, not every placeholder in the JSP template has to be replaced before the final page is generated.

In one embodiment, most pages are functionally divided into two groups: pages that provide the option of folder and file management tasks, such as Bookmarks, New Documents, and My Documents pages, and pages that are the equivalent of menu commands and require user input such as New Folder, Rename, Mail etc. Table 1 is an example of the use of placeholders 912, 921, 922, and 923 for the page list in the first row of the table. Components that contain the Folders, Bookmarks, Files, and Items in Clipboard elements can alternate views between an icon view that lists the contents of the respective element, and a detailed tabular view that shows additional information about the content as well as a menu of commands.

TABLE 1.:

| Placeholders and Replacements | | | | | |
|---|---|---|---|---|---|
| Default Template | Book-marks | New Documents | Clip-board | My Document | Commands |
| Placeholder 912 | Short-cuts | Short-cuts | Short-cuts | Short-cuts | Short-cuts |
| Placeholder 921 | Current Folder | Current Folder | Items in Clip-Board | Current Folder | Command Name |
| Placeholder 922 | Folders | Folders | - - - | Folders | - - - |
| Placeholder 923 | Book-marks | Book-marks | - - - | Files | - - - |

In one embodiment network portal system 100 includes at least three sets of screen templates: one set for every type of user device that is supported. Each set includes at least two templates: one for the login page and one for all other pages. In this embodiment, template *WMLLoginTemplate.jsp*, template *PQACCPPTemplate*, and template *CCPPTemplate.jsp* files control the client-side presentation of the network portal system Login page for WAP-, Palm VII-, and HTML-based clients, respectively. The basic design and organizational structure for all other pages is defined by template *WMLTemplate.jsp*, template *PQATemplate.jsp,* or template *HTMLTemplate.jsp*, depending on the client used. These templates mix JSP directives, expressions, and scriptlets with HTML.

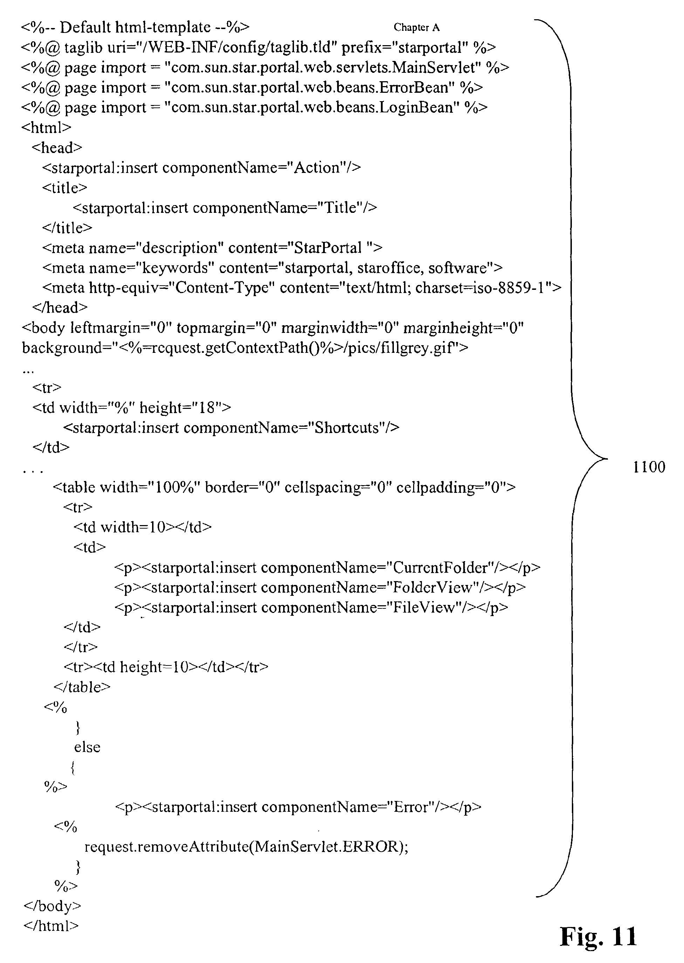

Figure 11 is an example of a portion of default HTML screen template *HTMLTemplate.jsp*, which is representative of the general structure of the templates. In view of the following description, those of skill in the art can modify the default HTML screen template for the other user devices mentioned. Near the top of the template in Figure 11 is a set of JSP directives, followed by the HTML header definition and tag <body>, which defines the overall organizational structure of the final HTML page.

The JSP directives include a directive taglib and three page directives. Directive taglib lists the relative URL referring to the tag library descriptor file (*taglib.tld*) that defines custom tags, as well as the prefix attribute (Starportal) that is used in front of custom tag names, for example, starportal: insert). After defining the header in the normal way, the actual structure of the future HTML page is described in the body. Different components are inserted by using the tag <insert>. Regular HTML tags describe the positions of the inserted components on the page. In the example of Figure 11, the different components are simply listed one under the other. The content to be shown by the different terms "CurrentFolder", "CurrentFolderCommands", "FolderViewHeader", etc. is decided by profiling service 801, as described more completely below. Depending on the actual client request these could be other JSP pages or servlets.

Tables 2 and 3 list the placeholder names in the HTML default and HTML login templates and their respective values as defined by profiling service 801.

Table 2.:

| HTMLTemplate.jsp Placeholder Names and Values | |
|---|---|
| Name | Value |
| Action | Varies |
| Title | Varies |
| Shortcuts | /html/HTMLShortcuts.jsp |
| CurrentFolder | Varies |
| FolderView | Varies |
| FileView | Varies |
| Error | /html/HTMLError. jsp |

Table 3.:

| CCPPTemplate.jsp Placeholder Names and Values | |
|---|---|
| Name | Value |
| Action | Varies |
| Title | StarPortal Login |
| Shortcuts | Currently not used |
| CurrentFolder | /html/HTMLLogin.jsp |
| CurrentFolderCommmands | Currently not used |
| FolderView | Currently not used |
| FolderViewCommands | Currently not used |
| FileView | Currently not used |
| FileViewHeader | Currently not used |
| FileViewCommands | Currently not used |
| Error | /html/HTMLError.jsp |

The syntax for the value of a placeholder is defined as /folder/name.jsp, where /folder identifies the location of the respective JSP that is to be included relative to the root of the network portal system 100 installation; and /name. jsp identifies the name of the JSP.

As already explained, profiling service 801 finds the templates, JSP pages, servlets or Beans to be used by applying a decision tree. Profiling service 801 analyzes the client requests and decides, depending on the type of request, which JSP template file or servlet is to be used in response to the client request using the decision tree. In one embodiment, the decision tree is implemented as an XML-based decision tree (ScreenRegistry.xml), which defines a set of requirement types and initializes the selection made by the profiling service.

The decision on whether to use a particular JSP template or servlet depends, in this embodiment, on requirement types requestHeaderParameter, resourceProperty, and requestParameter.

Requirement type requestHeaderParameter defines the type of client browser ("user-agent"). This information is used to determine whether network portal system 100 is accessed by a WAP-, Palm VII-, or standard HTML-based user device. Depending on the user device, profiling service 801 selects a screen template that accommodates the differences in display size and functionality.

Requirement type resourceProperty refers to the properties of a requested resource. A resource may be defined as a STAROFFICE document ("ContentType"), other document type (such as a PDF or JPEG file), or folder. In general, access to documents is limited to clients that support advanced functionality such as displaying and editing documents.

Requirement type requestParameter refers to network portal system 100-defined commands ("cmd"), modules ("modules"), and submodules ("submodule") that are processed upon request.

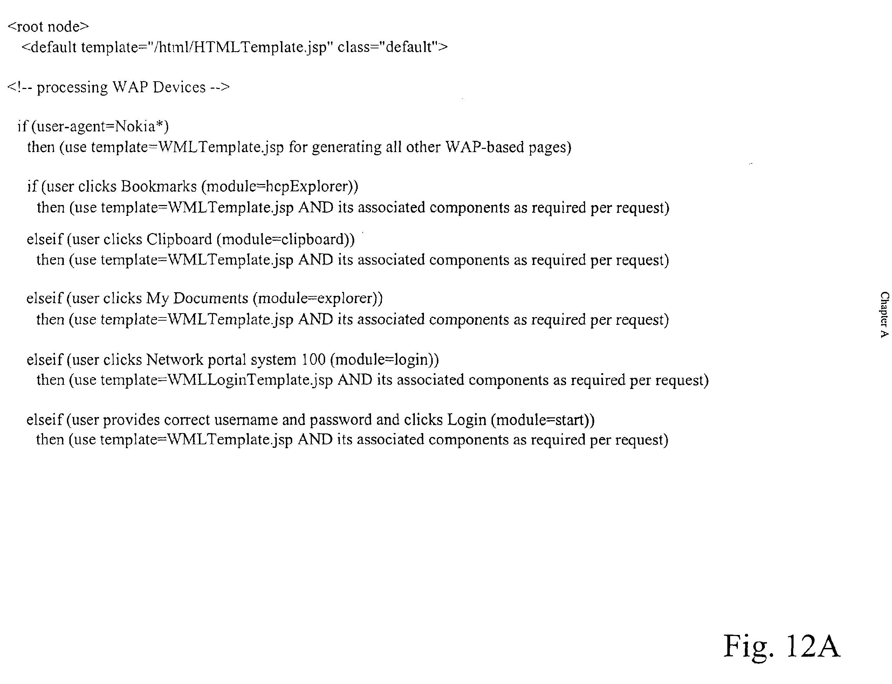

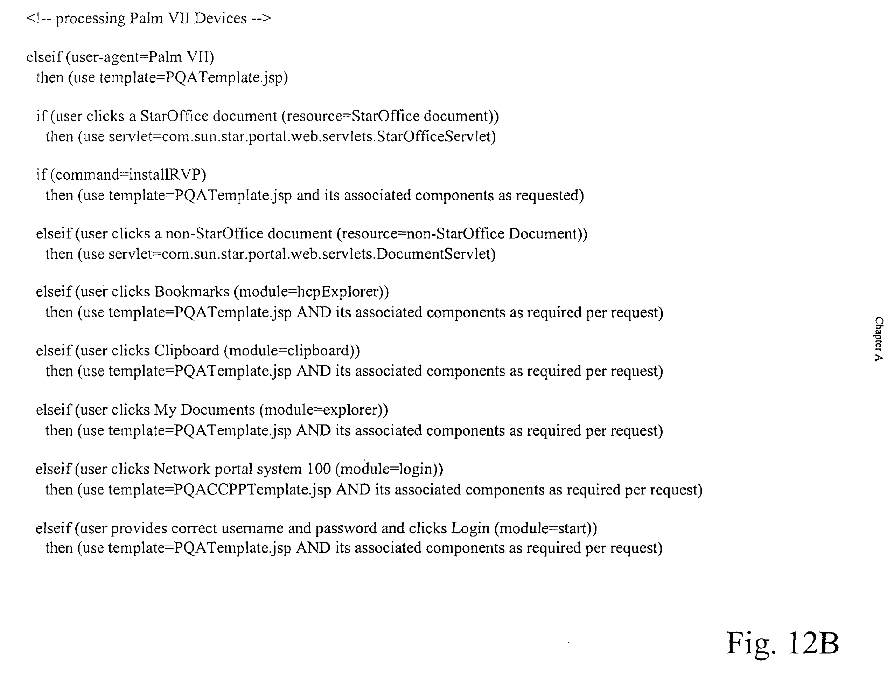

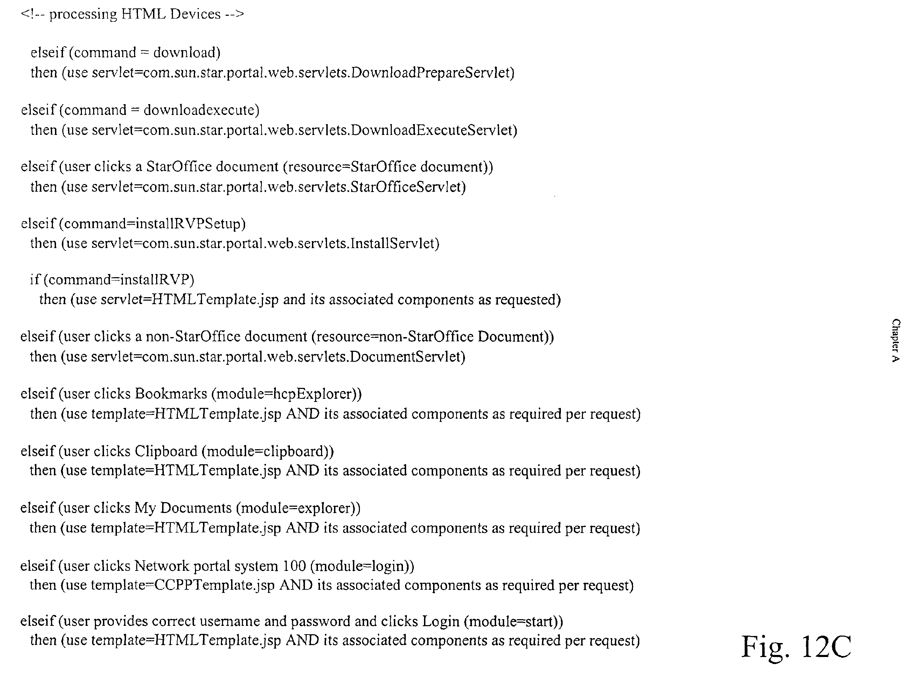

Conceptually, in one embodiment, the decision tree is divided into three sections: Processing of WAP-based devices (See Fig. 12A); Processing of Palm VII devices (See Fig. 12B); and Processing of HTML-based devices (See Fig. 12C). Each section defines which requirements must be met for a certain template to be selected for that device. The process of analyzing and selecting a template is effectively a series of "if-then" statements. If a client request matches a certain requirement, then the decision tree initializes the use of the associated template and its components. In one embodiment, profiling service 801 compares request parameters with the respective requirement types in the following order:

1. Matching the client browser type information ("user-agent") with requirement type *requestHeaderParameter;*

2. Matching the properties of the requested resource with requirement type *resourceProperty;* and

3. Matching Network portal system 100-defined information with requirement type *requestParameter.*

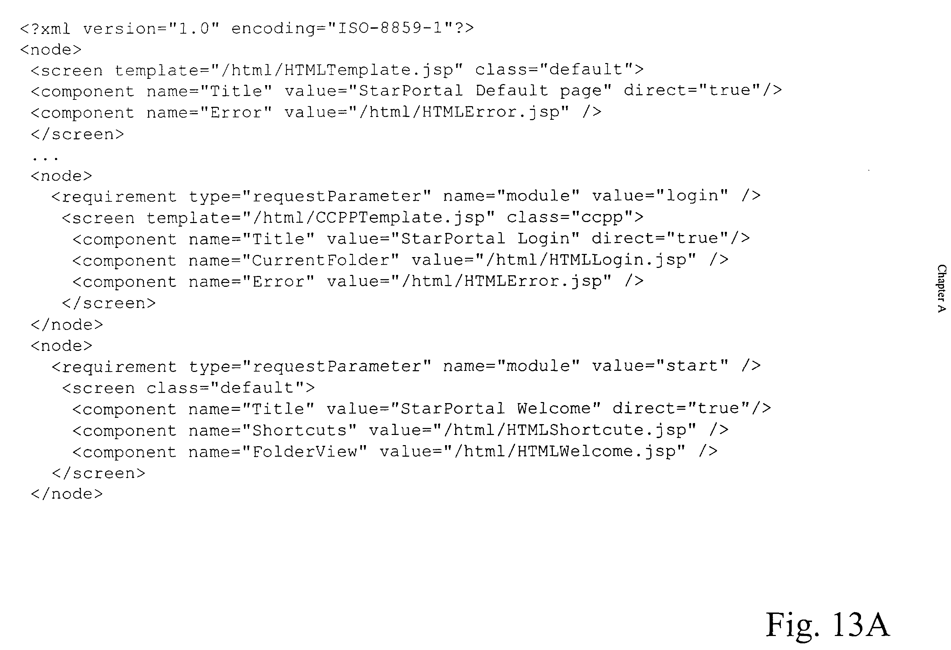

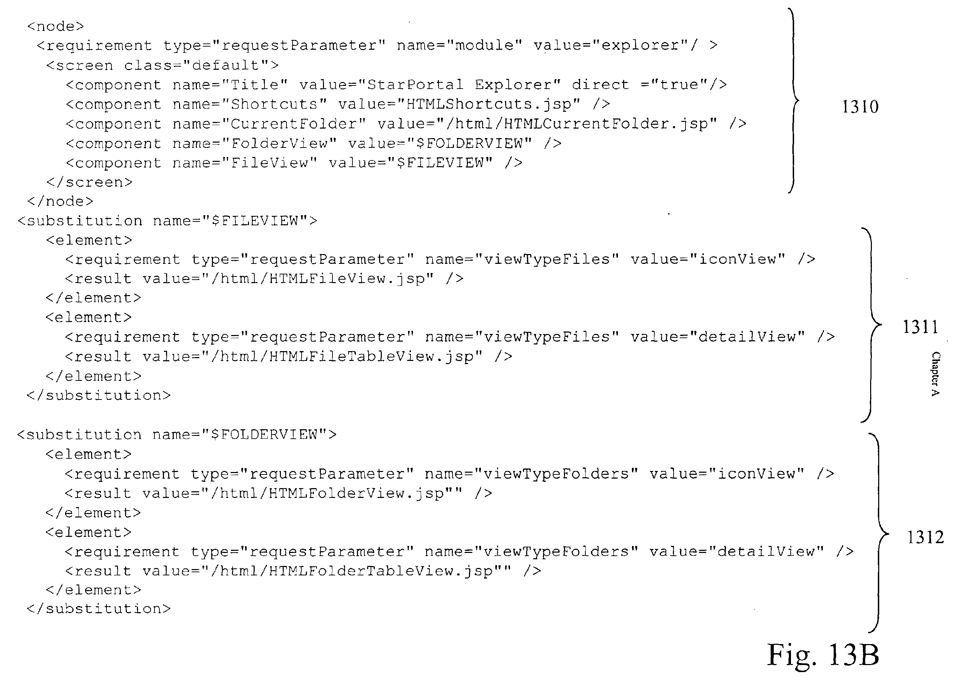

Figures 12A to 12C are a pseudo code representation of one embodiment of the decision tree that implements the decision tree. Figures 13A and 13B are a portion of an actual XML decision tree.

In general, the decision tree follows the rules of a well-formed XML document. The decision tree includes a hierarchically organized data structure composed of connected nodes beginning with a root that is defined as file *HTMLTemplate.jsp.* Each subsequent tag <node> defines a set of attributes that is used to select and complete a JSP template that is defined by tag <screen> if a certain requirement is fulfilled.

Requirements are defined by tag <requirement>. which has three possible attributes: type, name, and value. This could be the querying of specific requirements on the document type (Resource Properties), browser type (Request Header Parameters) or device type (Device Parameters) and also the existence of certain commands (Request Parameters). If the condition is fulfilled by the client request, a branching off into the appropriate section takes place and the action contained there is executed. Otherwise the next condition (tag <node>) is used to continue.

Actions can contain further conditions or define specific templates (tag <screen>) for answering client requests. It can also be the case that the individual components of the templates (tag <component>) are determined.

In many cases the same condition appears in different branches of the decision tree. Substitutions can be defined for these cases. This substitution has been carried out, for example, for a FileView component in Figure 13B. Depending on whether the parameter "viewTypeFiles" has a value of "iconView" or "detailView", different JSP pages are used for component FileView.

More specifically, whether profiling service 801 selects a template associated with a WAP-based, Palm VII, or HTML-based user device depends on the user-agent header information provided by the client request. For example, if the client is a Nokia Web-enabled phone, the user-agent header information matches the requirement for processing WAP devices. In the decision tree this corresponds to the following element:

<!-- processing WAP devices -->
<node>
  <requirement type="requestHeaderParameter"
     name="user-agent" value="Nokia*" />
which is associated with the following template and components:
<screen template="/wml/WMLTemplate.jsp" class="wml">

...
</screen>

In this example, if the user accesses network portal system 100 from a Nokia phone, the decision tree initializes the use of template *WMLTemplate.jsp*, which is used instead of the default template *HTMLTemplate.jsp* template that is defined as the root of the XML file.

Alternatively, if the user uses a Palm VII device, the user-agent header information matches the following requirement type:

<!-- processing Palm VII devices -->
<node>
  <requirement type="requestHeaderParameter"
     name="user-agent" value="???PALM???*" />
which is associated with the following template:
  <screen template="/pqa/PQATemplate.jsp" class="pqa">

...
  </screen>

In this case, the decision tree initializes the use of template *PQATemplate.jsp,* which replaces the default template *HTMLTemplate.jsp* defined in the root of the decision tree.

By contrast, when the request is made by an HTML-based client, it is no longer necessary to match the request with a corresponding requirement type for processing HTML devices, because the request did not match any of the previous requirements of the type requestHeaderParameter, the request has to come from an HTML client.

Once the decision tree initializes the use of a device-based template, this template becomes the default for the current request, with the exception of the login request. When a login request is received, the currently used device-dependent default template file is replaced with the respective login template file. This is because the login requirement is listed in the decision tree as a child of the respective client browser requirement type as shown in the following pseudo-code:

```
HTMLTemplate
if(user-agent=WAP device)
then(use template=WMLTemplate.jsp class="wml")
if(requested page IS NOT login page)
then(use template=WMLTemplate.jsp AND its
        associated components as required per request)
elseif(requested page IS login page)
then(use template=WMLLoginTemplate.jsp AND its
        associated components as required per request)
elseif(user-agent=Palm VII device)
then(use template=PQATemplate.jsp class="pqa")
if(requested page IS NOT login page)
then(use template=PQATemplate.jsp AND its
        associated components as required per request)
elseif(requested page IS login page)
then(use template=PQACCPPTemplate.jsp AND its
        associated components as required per request)
```

If the client is identified as an HTML-based device, the decision tree initializes the use of the template *HTMLTemplate.jsp* defined as the root of the document. In the case of a login request, the decision tree initializes the use of template *CCPPTemplate. jsp*, because the login requirement type is defined as a parent within the existing tree structure as shown above.

Once a template has been initialized for use, the template still needs to be completed; that is, instead of its placeholder elements, additional components (JSP) need to be included as required per user request. The respective placeholders for the Shortcuts, Current Folder, Folders, and Files components are defined as illustrated in Figure 11 following tag insert. As explained above, each component is represented by a placeholder, i.e., componentName=" placeholder name", that is defined by tag insert. The ultimate value of each component is defined in the decision tree. (See Figs. 13A and 13B.)

In this example, the values of placeholders *Shortcuts* and *Current Folder* in template 1100 (Fig 11) are defined in the decision tree in node 1310 at the top of Figure 13B as JSP files that are included in template 100 when a user clicks link My Documents. In the case of placeholders *FolderView* and *FileView* in template 1100, however, the value is defined in node 1310 as a substitute: $FOLDERVIEW and $FILEVIEW. Substitutes are a convenient way for defining alternate values that appear in various contexts. The value of these substitutes are defined in Figure 13B as elements 1311 and 1312, respectively.

The ultimate value of each substitute depends on the client request parameters. For example, if the value of the client request parameter *viewTypeFolders* is defined as *iconView,* the value of placeholder *FolderView* is defined as *HTMLFolderView.jsp.* Likewise, if the value of the client request parameter is defined as *detailView*, the value of placeholder *FolderView* is defined as *HTMLFolderTableView.jsp.* In all instances, the decision tree determines, which JSP file (or component) is included into the template so that the web server 320 can execute the resultant JSP page to generate the requested content of the network portal system page.

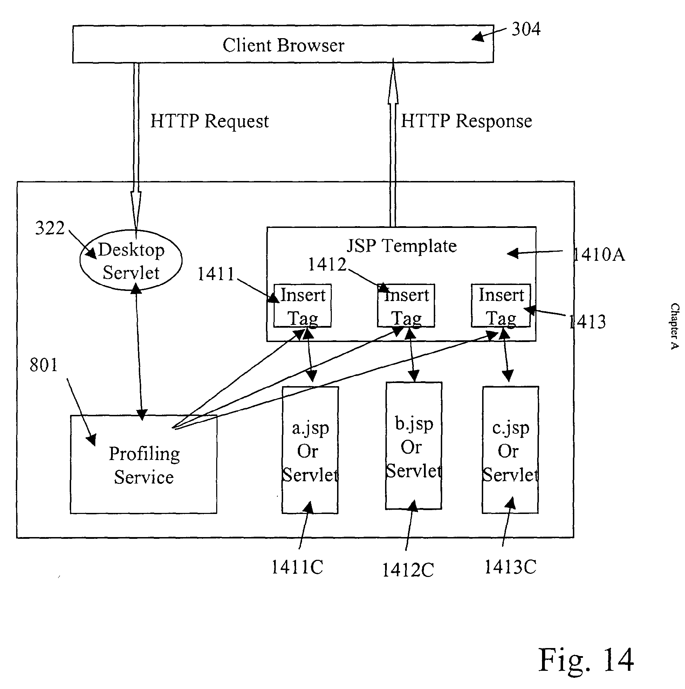

Figure 14 the process in completing a JSP template once template 1410A has been selected by profiling service 801. As described, the decision tree determines which server pages/servlets 1411A to 1411C are inserted at the corresponding insert tags 1411 to 1413 respectively.

AN EMBODIMENT OF CONFIGURATION SERVER 336

Prior to considering the components for one embodiment of configuration server 336, the information stored and handled by configuration server 336 is described. The entries stored on configuration server 336, in one embodiment are classified in two large groups, user profiles and application profiles. User profiles describe all the user-dependent settings, which are not dependent on a particular application, but are specific to a domain to which a user belongs. These can be such entries as name and address of the portal user or details about user accounts. For example, a user profile can include any or all of:

User login information such as userid, passwords/certificates for certain applications, etc.;
User environment that includes hardware/software (type of portal device in use or available peripherals on client device or OS on laptop) settings, printer settings, language preference, etc.;
Network and server settings such as which Proxy server, name server, IMAP server, Calendar server to use, ISP, PPP, DNS, DHCP settings, etc.;

User policies regarding personal data and resources, who can access them, what type of access, etc.;

User policies regarding application choice and configuration per client device available;

Personal settings: bookmarks, alias definition, Vacation configuration for e-mail, delegation or proxy accounts for certain tasks, etc.; and

User application preference from a group of similar types of available applications (Outlook Express rather than Netscape Messenger or StarMail), application settings (the applications that must be deployed upon login), etc.

Application profiles describe application components such as user interface components, libraries, data store schemas, etc. Application profiles also contain application default parameter values. For example, an application profile can include any or all of:

Version, server/URL where application should be deployed from (note that different versions of same application may be available through portal), libraries/DLLs used, dependencies, etc.;

Vendor, distribution channel, License information;

User interface related information such as XSL stylesheets per client device supported, XML/DTDs describing default values for configuration information; and

Default application profiles including default environment variable settings, default printer, default background/foreground colors, etc.

In one embodiment, all of the application profile data is defined through XML/DTDs/Schemas.

Configuration server 336 is not restricted to these two groupings. Configuration server 336 typically also includes entries for system configurations, policies and/or device-specific settings. This means various user roles with different access rights to system resources can be defined. In one embodiment, it is also possible to store user device-specific data such as display size.

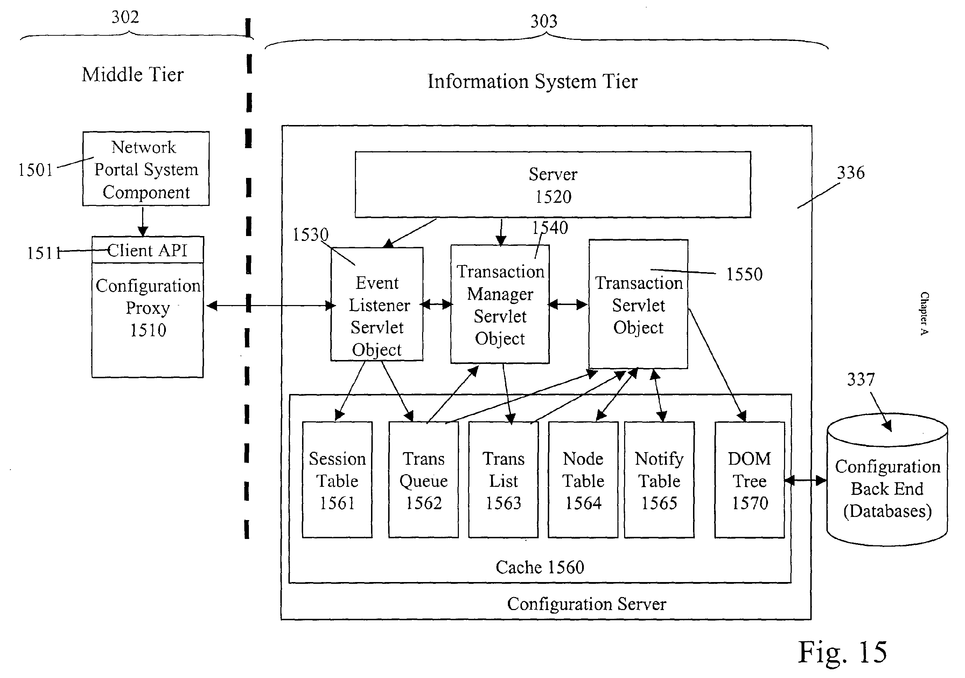

Figure 15 is a more detailed block diagram of one embodiment of configuration server 336. A component of network portal system 1501, e.g., a UCB component such as hierarchy content provider 335, or one of remote applications 310, accesses configuration server 336 through a configuration proxy 1510 that is shown executing in Figure 15 on web-top manager 111. However, if for example, configuration proxy 1510 is associated with hierarchy content provider 335, configuration proxy 1510 may be in information tier 303. Typically, configuration proxy 1510 is in the same execution environment as component 1501 using proxy 1510 to access configuration server 336. One embodiment of client API 1511 of configuration proxy 1510 is described below.

As explained more completely below, configuration server 336 in response to the access by proxy 1510 communicates with a configuration back end 337 to load the data in a configuration tree or to store persistent modifications. For example, UCB components or one of remote applications 310 can load entries from configuration server 336. In this case, configuration proxy 1510 does not start as a separate process, but as a shared library directly in the corresponding UCB component or remote application. This enables direct communication between the components and configuration proxy 1510. While in Figure 15, a single component 1501 and a single proxy 1510 are illustrated, typically each component has its own proxy and so several proxies communicate with configuration server 336. Therefore, the following description is illustrative only and is not intended to limit the invention to the specific embodiment described.

In this embodiment, configuration proxy 1510 provides seamless access to configuration data for client component 1501. Configuration proxy 1510 gets data from configuration server 336 on behalf of its clients, and caches the data in a DOM tree in proxy 1510 for optimal use. Same data may be accessed and modified by more than one client applications/ components, e.g. network portal system components, at the same time. Therefore, proxy 1510 has responsibility to synchronize and merge data changes by different clients and to notify all clients accessing that data about data changes. All modifications are initially carried on the DOM tree stored in proxy 1510. Proxy 1510 reports collective changes to server 336 that in turn makes actual changes to DOM tree 1570 that is described more completely below.

Prior to considering the operation of the various components of server 336 in Figure 15, the data layout used in configuration server 336 is described to facilitate the understanding of the description of the operation of the various components. To keep track of the configuration data modifications by the various proxies, the configuration data, in this embodiment, is stored in a single DOM tree 1570 in cache 1560 of configuration server 336.

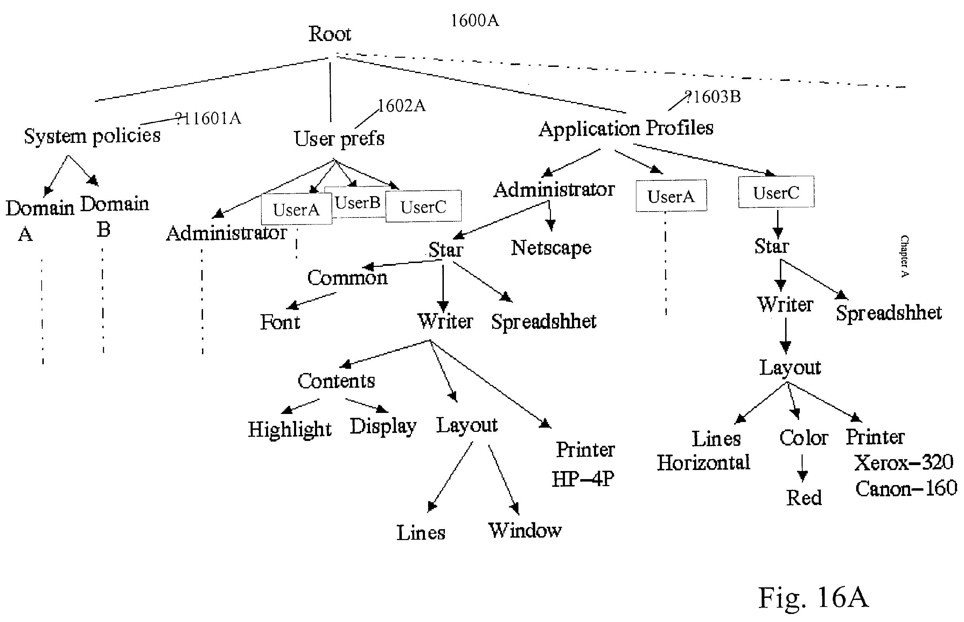

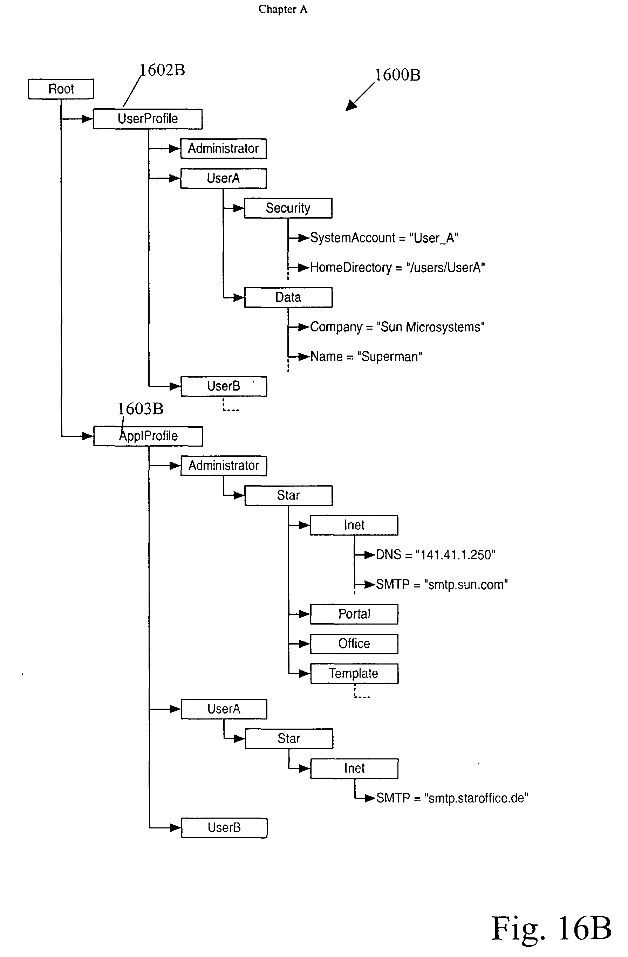

Figures 16A and 16B are examples of configuration tree structures 1600A and 1600B, respectively stored in cache 1560 as DOM tree 1570. In this embodiment, only the leaves of DOM tree 1570 can hold data. The inner nodes are used to show hierarchical relationships. Data can be of a simple type, such as integers, Boolean, strings, doubles or data can be of a user-defined type through templates, as described below. Binary data also can be stored in one embodiment. Configuration server 336 also supports the use of containers such as lists and sets.

A template is used for more complex data types in the configuration tree. Templates describe the structure of part of the configuration tree. The configuration tree itself can appear repeatedly in various parts of the configuration service. The information about a portal user covers details such as first and last name, company name, address, telephone number, fax number, etc. It would be cumbersome if the corresponding nodes had to be created again for each new user. Instead, the structure of the user details is summarized as one template. This is stored in a specific location in configuration server 336. An administrator or an administration tool can refer to this template when a new user is created. Configuration server 336 carries out the actual setting up of the appropriate entries.

Templates simplify and standardize large quantities of data. If data structures are repeated, templates are used for summarizing complex structures and facilitating configuration service administration. A template can hold any type of data and is in itself a definition of new data type. Templates are often used in conjunction with sets.

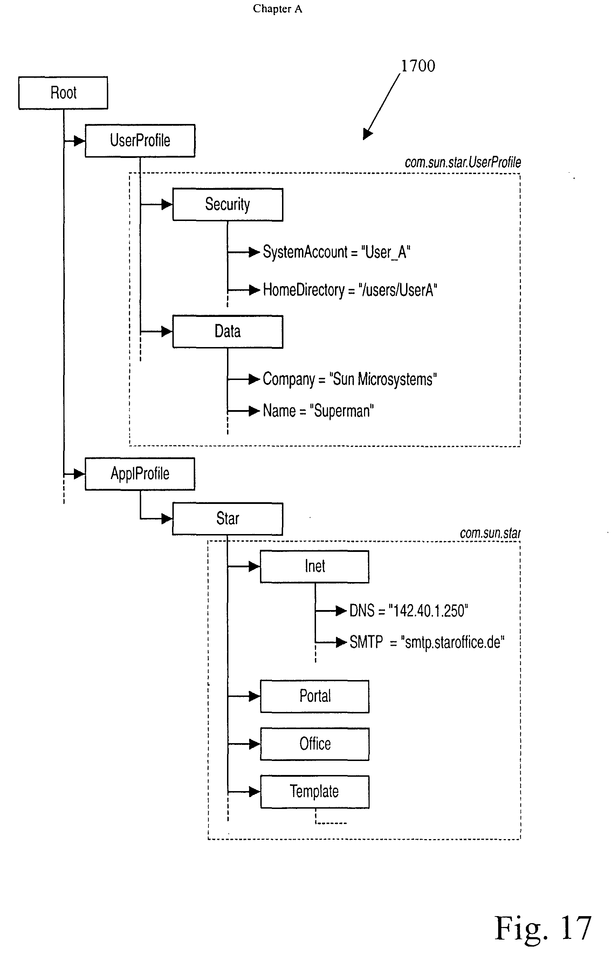

The data of the different portal users is confidential. A user must not have any access to settings or data belonging to other users. In addition, network portal system component 1501 does not need to know the complexity of the data stored in DOM tree 1570. For these reason, as soon as a user contacts configuration server 336 via proxy 1510, a custom user-specific configuration tree view, called a merged configuration tree, is built and stored by proxy 1510. The merged configuration tree contains the data the user can access. Figure 17 shows a merged configuration tree 1700 for user A in configuration tree 1600B (Fig. 16B).

In many cases settings stored in DOM tree 1570 are identical for all users. An example of this is Internet settings, which are normally identical for all users of network portal system 100. It would be very time consuming if identical values had to be manually entered and stored for each user. Configuration server 336 has the capability of merging parts of trees, e.g., merged nodes between a particular branch's Administrator branch and the user's branch.

Hence, an administrator can define default values for the different nodes that are included in the merged trees. These nodes are then stored in special branches of the configuration service under "Administrator". When the user-specific configuration is constructed, the nodes of that user and the administrator are merged and returned to proxy 1510.

This merge process can be imagined as a layering of one part-tree on top of another. The user tree is laid on top of the administrator tree. Specific user settings overwrite the default settings made in the administrator tree and only those settings get added to the user subtree. For example, in Figure 17, the administrator default setting for SMTP access is overwritten by the setting made by User A. All of the other settings made by the administrator remain unchanged.

In another embodiment, more than two layers of data are used. For example, different layers could be defined, which are represented by different trees of the same structure. These layers could then contain various settings, e.g. for specific user groups or devices.

In one embodiment, to access the individual entries in the configuration tree, the entire path from the root to the required node is entered. For example, to access node SMTP in Figure 17 the path "Root/ApplicationProfile/Star/Inet/SMTP" is used. An administrator can also issue scheme ids to facilitate access to specific entries. These scheme ids address a particular part of a particular tree. In Figure 17 the tree under "Root/ApplicationProfile/Star" has been given the scheme id "com.sun.star". Therefore, the entry for the SMTP server of User A can also be accessed through "com.sun.star/Inet/SMTP". The name of the user is accessible in a similar way by using "com.sun.star.UserProfile/Data/Name".

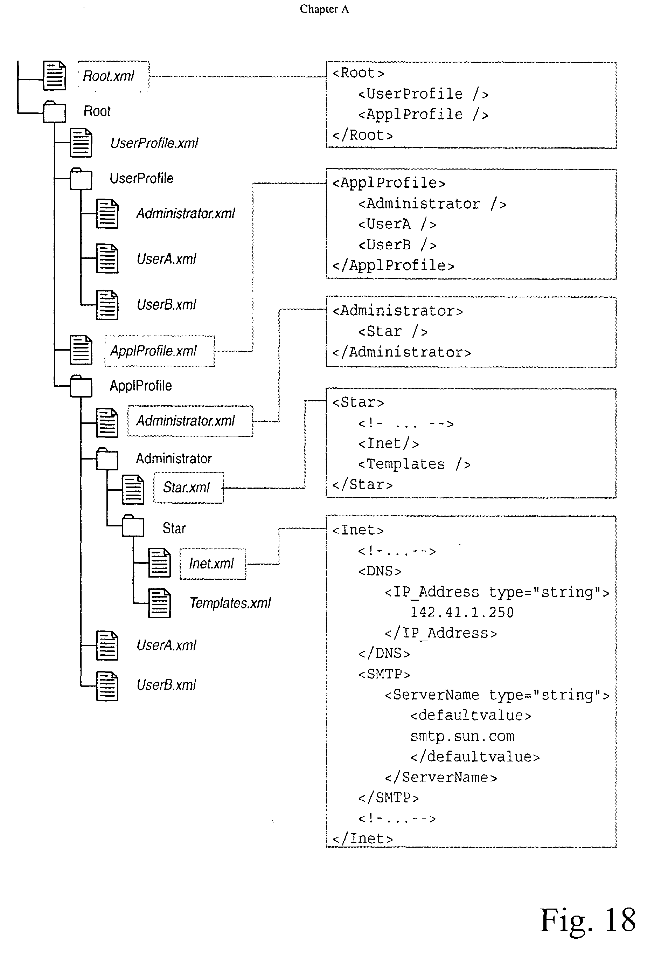

The data in DOM tree 1570 is stored on configuration back end 337. A file-based system acts as the configuration back end 337 in one embodiment. Figure 18 shows how the structure of configuration tree 1660B (Fig. 16) has been applied to a series of XML files and a corresponding directory structure. A corresponding XML file usually describes each node. The description of the subordinate trees is found in a folder named accordingly.

Thus, only nodes *ApplProfile* and *UserProfile* are found below the root node. This structure is described in file *Root.xml*.

The descriptions of the subordinate trees are found in folder *Root*. Files ApplProfile.xml and UserProfile.xml define the structure of these trees. The division into XML files and corresponding folders provides a clearer representation of configuration tree 1600B. It is also possible to store the description of an entire part-tree in a single XML file. However, the data that logically correlates is typically stored in a single XML file. For example, the tree for the Internet settings is described in a single XML file *Inet.xml.*

The files for the user-specific settings take a special role. The entire tree is stored in a single file, e.g., file *UserA.xml.* This may become very complex, depending on how many default settings the user overwrites.

Administrators normally do not have to concern themselves with user files. If settings are to be stored in the configuration for additional components, only the required structure description has to be inserted in the appropriate administrator branch or directory. User data is then updated automatically via configuration server 336. The various XML files are stored on a storage medium of configuration back end 337.

Alternatively, a database such as a relational database management system and/or an LDAP database could be used in configuration back end 337. In this case, it would also be possible to employ several configuration servers for load balancing purposes. If a database is used, configuration server 336 includes XSL stylesheets, or perhaps uses dynamic data filters as described above, to convert the data as it is retrieved from the database into XML data, and to convert the data from XML data to data that can be stored by the database.

Since user information may be already available in LDAP databases or address book services, in one embodiment of configuration server 336, tools are provided to import such data from external sources.

Typically, an administrator would extract user data from a LDAP database into a flat file and use the tool to convert LDAP entries into VCARD format that is output into a flat file again. Address book entries can be exported into VCARD format and saved into a flat file. This file containing VCARDs is then given to the import tool, which extracts the information from the VCARDs and creates configuration user records.

Returning to Figure 15, and the management of configuration data by configuration server 336, server 1520 is a container class that instantiates event listener 1530 and transaction manager 1530. Server 1520 also creates tables, described below, in cache 1560. After initializing itself, server 1520 creates a DOM tree 1570 in cache 1560 and populates DOM tree 1570 with system policies from configuration back end 337. Server 1520 also reads in the master XML file, e.g., file *Root.xml* (Fig. 17), that describes the top level DOM tree structure below which individual application profiles, User preferences, etc. are added. Thus, initially DOM tree 1570 only contains nodes *ApplProfile* and *UserProfile*.

To initiate connection with configuration server 336, user configuration provides, information to identify the user in a call to transaction *openSession.* This is the first transaction that must be requested to authenticate the user and establish a connection oriented session, a TCP session in one embodiment, that persists through multiple transactions. In this embodiment, the value of input parameter *UserInfo* passed in the call to transaction *openSession* is the user name. In another embodiment, login parameters are included in the transaction call.

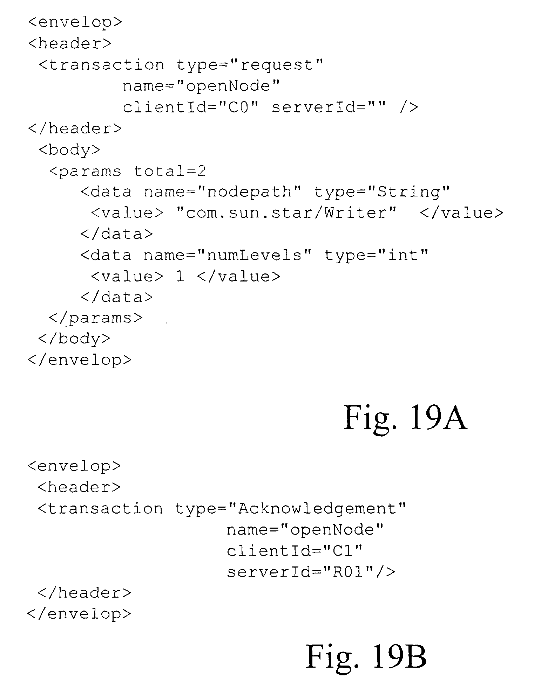

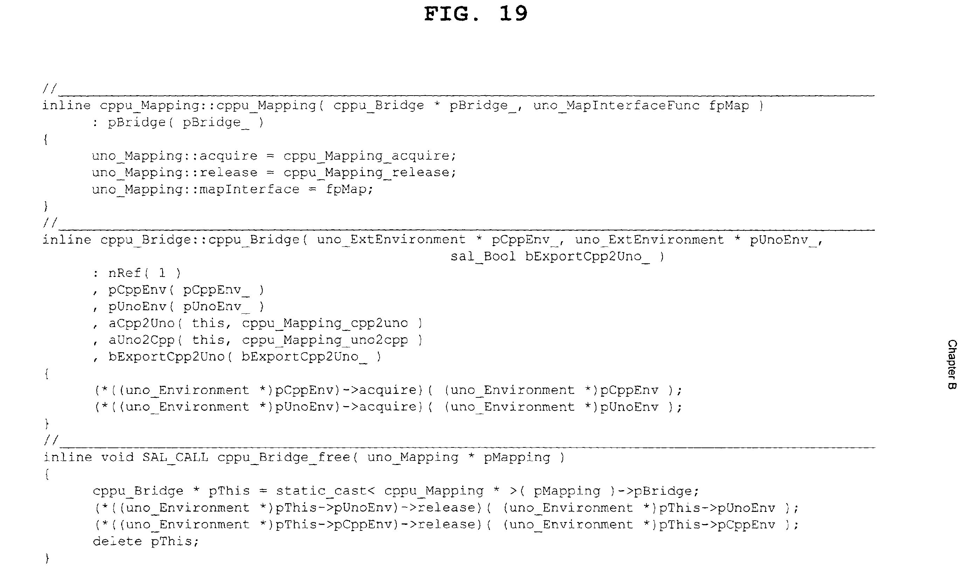

In configuration server 336, a listener 1530 listens for incoming connections and transaction requests. For every connection request, listener 1530 creates a TCP socket that provides connection-based communication between proxy 1510 and server 336. Each per-client TCP socket receives transaction requests from a proxy, in this embodiment. When a transaction request is received, this thread creates a transaction identifier, and parses the header of a transaction envelope (See Figs. 19A to 19E) to find out what transaction is requested. The thread adds an entry about the transaction into a transaction queue table 1562 in cache 1560 that includes the transaction identifier, the session identifier, the transaction name, and a pointer to the XML-envelope. In this embodiment, transaction queue table 1562 contains all the pending transactions from all sessions. All incoming transactions are queued in table 1562

With respect to the call to transaction *OpenSession*, listener 1530 processes this transaction directly. After authenticating the user, if supported, listener 1530 creates a unique session identifier and adds an entry including the session identification, user info, and socket info, to a session table 1561 in cache 1560. From now on, transactions coming through this connection are associated with this session identifier and belong to this session. If a client (or monitoring Administrator console) needs to get the status of the session, the client must specify this session identifier. Hence, the session identifier is returned to proxy 1510. Note that there may be more than one proxy session for the same user.

Session table 1561 keeps track of the current sessions served by configuration server 336 and contains all session related information. Table 1561 is used to get client connection information when transaction responses must be returned.

After opening the session, proxy 1510 makes one or more requests to transaction *openNode* to get configuration data. The call to transaction *openNode* tells server 336 a node should be brought into DOM tree 1570. The call may ask that a given node and all its subnodes be brought in, or the call may ask to bring in a limited number of levels of subnodes. In this embodiment, the input parameters in the call to transaction *openNode* are *nodePath, numLevels* and *username.* The transaction returns parameters *nodeId* and *subNode.*

In one embodiment, input parameter *nodePath* specifies the uniform resource identifier (URI) of the node to be brought into DOM tree 1570. An input parameter *numLevels* specifies how deep the tree brought into DOM tree 1570 should be. A value of zero indicates all the sub levels should be brought into DOM tree 1570. Input parameter *username* is an optional parameter and, in one embodiment, is allowed to be specified only by a user "Administrator" to access other users' nodes.

When event listener 1530 receives the call to transaction *openNode,* event listener 1530 adds an entry to transaction queue 1562. Transaction manager 1540 has the responsibility of dispatching transactions, and monitoring unresolved transactions. Transaction manager 1540 works off transaction queue 1562 and does the work through a number of concurrent threads. For every transaction request, transaction manager 1540 adds an entry into transaction list table 1563 in cache 1560 and creates an instance of transaction 1550. In this embodiment, transaction list table 1563 includes the transaction identifier, the session identifier, the transaction name, and the transaction status.

Transaction 1550 runs in a separate thread. In this embodiment, every server transaction 1550 is defined by a separate class that derives from this class. The transaction parses the transaction envelope's body and extracts the transaction's parameters. The transaction then runs itself. When the transaction has finished processing, the transaction removes its entry from transaction list table 1563 and returns the response using the same transaction envelope with changes in the header and the body.

In transaction *openNode,* the transaction first makes sure that the requesting user is an Administrator if the optional input parameter *username* is given. If the user is not an administrator, an error is generated and the transaction is not processed further.

If input parameter *username* is not given, or the user is an administrator, the transaction checks if the given node already exists in DOM tree 1570. This means that the node must exist in the Administrator branch as well as the current user branch. Under some circumstances, the node may exist in Administrator branch but not in the user branch (different user session has already brought in the tree). If so, the node needs to be brought into the user's tree for the current session. If the transaction does not find an entry node table 1564, transaction 1550 gets the node from configuration back end 337 and adds the node to DOM tree 1570. For an XML-flat file database as illustrated in Figure 18, this may involve opening a number of XML files and creating entries for then in node table 1564. For each XML file opened to satisfy this request, the transaction adds an entry to node table 1564 in cache 1560.

Upon completion of the transaction a node identifier is returned and otherwise an error message is returned.

In this embodiment, the node identifier of the nodes that contain the requested node are reused, this ensures that a node in node table 1564 is not contained by any other node in node table 1564. Therefore, when a node is closed the node being closed is not the parent of any other node in the table.

Thus, in response to call to transaction *openNode,* server 336 returned a unique node identifier that identifies the subtree this request has opened, or another proxy already opened in a different session. From now on, this node identifier must be used for valid transactions on that node. All transactions working on data under this node must specify the node identifier returned by this transaction.

Proxy 1510 may make more than one *openNode* requests for the disjoined nodes that proxy 1510 needs. Proxy 1510 may even make duplicate requests for the same node without causing any confusion. Depending on the data-store used, this node may be brought in through one or more XML files/Database or LDAP queries. In one embodiment, once the node is populated inside DOM tree 1570 in server cache 1560, system policies and/or user profiles are checked for a given user to confirm that user has privilege to access the specified data before the data is passed to the client.

Proxy 1510 calls transaction *openNode* with a limited number of levels when the number of children existing under a node is needed, e.g., an Administrator may want to know how many users are registered or list all the users, or a user may want to know what IMAP folders are created for/by him/her.

One open node request can map to one or more LDAP and/or RDBMS queries (spanning a number of tables) internally or it may map to one or more XML files and LDAP entries. Once this configuration is done, the portal components do not have to have any embedded SQL queries or LDAP queries in their code. In fact, the applications do not need to know which database the data is coming from. The components access the data using the configuration server transactions

Each registered server transaction has a corresponding transaction class and methods that collect or update the data from XML files/LDAP/RDBMS using internal queries. Transaction manager 1540 creates these transactions. Data returned to proxy 1510 has a XML format (input stream containing DOM subnode). Therefore, proxy 1510 uses a XML DOM API to access this data.

In this embodiment, class DOMtree is responsible for managing DOM tree 1570 and manipulating DOM tree 1570 according to transactions received. Transactions use this class's methods to look up data in DOM tree 1570 and to update/addto/delete nodes in DOM tree 1570.

All tables 1561 to 1565 in cache 1560 are managed through corresponding classes that derive from a class LinkedList. There is only one table of each type in server cache 1560 and each table contains information about all the clients/proxies that are currently logged into configuration server 336.

Notification table 1565, sometimes called notify table 1565, contains all the notification requests made by various proxies/clients. Table 1565 is consulted after each of the following transactions *addNode, updateNode,* and *deleteNode* have finished processing to check if notifications should be issued. When the client receives the notification, it also receives the snapshot of the node with changes. In this embodiment, each entry in table 1565 includes a session identifier, a node path, and client application information.

Other transactions supported by this embodiment of the invention include transactions *closeSession*, *openRawNode, closeNode, updateNode*, *addNode, deleteNode, getStatus, cancelTransaction*, *requestNotify*, *cancelNotify, and addUser*. Each of these transactions on server 336 is described below. The transactions described herein are illustrative only and are not intended to limit the invention to either the particular transactions described or to the embodiments of the transactions described.

A session on configuration server 336 is closed under different circumstances. For example, (a) proxy 1510 wants to disconnect from server 336; (b) proxy 1510 crashes, or the machine on which proxy 1510 is executing crashes/shuts down, or proxy 1510 becomes very sluggish to the point that proxy 1510 can not even send close session request and the connection is lost; (c) proxy 1510 aborts suddenly due to network problems; or (d) configuration server 336 crashes or the server machine crashes; or configuration server 336 must be shutdown under emergency circumstances.

In all except the last case (d) where the problem is with configuration server 336, transaction *closeSession* performs the following operations. Transaction *closeSession* looks for current session's entries in the notification table 1565 and removes them. This transaction then removes all transactions except transactions *updateNode, addNode* and *deleteNode* from transaction queue table 1562 and transaction list table 1563. Transaction *closeSession* waits until currently processing and pending transactions *updateNode, addNode, and deleteNode* are finished, i.e., until those entries do not exist in the tables. Transaction *closeSession*, after waiting, uses transaction *closenode* to close the nodes opened by the current session. Next, this transaction looks for current session's entries in node table 1564 and removes them. Finally, this transaction removes the session entry from session table 1561.

In case (d), server 336 tries to finish the above-mentioned transactions or store them in a local file. Otherwise, server 336 tries to send notifications about the unfinished transactions. In case (a), the client or proxy requests transaction *closeSession,* while in cases (b) to (d), listener 1530 initiates this transaction.

There are no input parameters in the request to transaction *closeSession,* if the request is initiated by the proxy wishing to disconnect. An input parameter *sessionId* contains the session identifier for the session to be closed, if an Administrator console generates the request for administrative purposes. A value "ALL" is sent if Administrator console is shutting down network portal system 100 or configuration server 336 for any reason. User's privileges are checked before processing the transaction. This transaction returns a status identifier and status information.

When a client, typically an administrator console, needs to access DOM tree 1570 as is without the merged tree view, transaction *openRawNode* is requested. This transaction is very similar to transaction *openNode,* but opens the node given without attempting any data merging. Note, that this node is READ_ONLY.

In this embodiment, the input parameters in the call to transaction *openRawNode* are *nodePath,* and *numLevels.* The transaction returns parameters *nodeId* and *subNode.* Input parameter *nodePath* is a URI. The value of input parameter *numLevels* is the same as defined above.

Transaction *openRawNode* first checks if the given node already exists in DOM Tree 1570. This means that the node must exist in the Administrator branch as well as the current user branch. Under some circumstances, the node may exist in the Administrator branch but not in the current user branch (different user session has already brought in the tree). An entry is added to a Raw Node Table. If this transaction does not find an entry in the node table 1564, the transaction gets the node from back end 337 and adds the node to DOM tree 1570. The transaction returns either the node identifier or an error message.

Proxy 1510 requests transaction *closeNode* to indicate to server 336 that proxy 1510 has finished using this data and server 336 can purge the data from cache 1560. In this embodiment, the input parameters in the call to transaction close*Node* are *nodeId.* The transaction returns parameters status*Id* and *statusinfo.* Input parameter *nodeId* is the node identifier of the node to be closed.

This transaction first checks in node table 1564 to determine if the node identifier is valid, and if it is valid continues processing. Next, the transaction checks in transaction queue table 1562 and transaction list table 1563 to determine whether transactions *addNode, updateNode,* or *deleteNode* are pending for this node and if so waits until the transactions are finished. Next, this transaction looks in node table 1564 for nodes that have the same user name and if there are none, closes the user tree. The transaction then checks in node table 1564 for entries with the same node path, or entries that contain the node path exist. If this check is false, the transaction removes the entry from node table 1564 and from DOM tree 1570. If more than one session had open the node, the entry for the current session is removed from node table 1564, and-a success response is returned.

Transaction *getNode* is similar to transaction *openNode* except transaction *getNode* expects the requested node is already present in DOM tree 1570 in server cache 1560. Typically, transaction *getNode is* used to refresh a node or subnode of the original node requested using transaction *openNode,* e.g., proxy 1510 had to discard part of its cache that contained the node received through earlier request to transaction *openNode.*

In this embodiment, the input parameters to transaction *getNode* are *nodePath*, *numLevels,* and *username.* Input parameter *nodePath* is a URI, input parameter *numLevels* is the same as described above for transaction *openNode,* and input parameter *username* is an optional parameter that, in one embodiment, is specified only by the Administrator to access other users' nodes. Parameter *nodeId* is returned by transaction *getNode* for use in future transaction references. In particular, requests to transactions *updateNode, addNode, deleteNode* must specify this node identifier make sure that the node is opened and available in cache 1560. Also returned by this transaction is node *subNode,* which is the actual merged subnode received from DOM tree 1570 in cache 1560.

Transaction *updateNode* is used to a accomplish number of different types of changes. This transaction is used to:

(a) Override default values from the Administrator tree. This effectively adds or updates (if the node already exists in User's branch) the user node with the new overridden value.

(b) Reset the overridden value back to the default value. Effectively, the subnode from the User's subtree is deleted.

(c) Update the default value in the Administrator's subtree, if the administrator is requesting to change the default values.

(d) Add a new value to the list of values in the user's subtree.

(e) Update values of already existing nodes.

In this embodiment, the input parameters in the request to transaction *updateNode* are *nodeId*, *nodePath, dom_node* and *username.* Parameter *nodeId* specifies a subnode in DOM tree 1570 that was opened using transaction *openNode.* Parameter *nodeId* refers to the subtree of which a smaller subtree is being modified. Parameter *nodePath* is the parent node under which the changes reside. Typically, parameter *nodePath* represents the smallest node that contains the changes. This does not necessarily have to be same node path as parameter *nodePath* given in transaction *openNode.* In fact, in most case this is a subnode of that node Path. Parameter *dom_node* is a stream representing a merged DOM tree subnode. Parameter *username* is an optional parameter and is specified only by the user Administrator to update other users' nodes.

Transaction *updateNode* returns parameters *status* and *subNode.* Parameter *status* indicates success or failure. If the status is failure, parameter *subnode* is the current value of the given subnode on server 336, and otherwise the value of parameter *status* is zero.

In one embodiment, in the execution of transaction *updateNode,* the following operations are performed:

1. If Username parameter is given (Administrator is asking for data belonging to different user), the user is authenticated as being an Administrator, and if authentication fails, sends error response.

2. Checks in node table 1564 if parameter *nodeId* is valid, and if not sends an error response.

3. Updates node on DOM Tree 1570 and if successful, sets parameter status to zero and if not sets parameter status to the current value of the node for parameter *nodePath* in DOM tree 1570.

4. Checks in the notification table 1565 to determine which sessions need to be notified about the changes, and sends those notifications. While doing this, checks to determine if the node path updated is the target node or subnode of the node paths in notify table 1565, and if true, sends notification to those sessions.

5. Returns output parameters.

Using transaction *addNode,* a node (containing levels of subnodes) can be added to DOM tree 1570. Typically, transaction *addNode is* used to add user application preferences, which specify overriding the application's default values. In one embodiment, transaction *addNode* can be used only for leaf nodes.

In this embodiment, the input parameters in the request to transaction *addNode* are *nodeId, nodePath, dom_node* and *username.* Parameter *nodeId* is the node identifier assigned during transaction *openNode,* and inside which the new node is to be added. Parameter *nodePath* is the parent node path under which the given node is to be added. Parameter *dom_node* is the DOM tree subnode that is to be added. Parameter *username* is an optional parameter and that in one embodiment is allowed to be specified only by the user Administrator to modify other users' nodes. Transaction *addNode* returns parameters *status* that indicates success or failure.

Transaction *deleteNode* deletes a given node and its subnodes from configuration backend 337. Execution of this transaction follows the same pattern as described previously for transaction *closeNode* except the specified node is physically deleted. Also this transaction makes sure that deleting the given node does not make the data incompatible with its DTD.

In this embodiment, the input parameters in the request to transaction delete*Node* are *nodeId*, *nodePath*, and *username.* Parameter *nodeId* is the node identifier assigned during transaction *openNode,* and inside which the node is to be deleted. Parameter *nodePath* is the node path of the node to be deselected. Parameter *username* is an optional parameter, as described above. Transaction *deleteNode* returns parameter *status* that indicates success or failure.

Using transaction *getStatus,* proxy 1510 can ask about the status of its transactions; or an administrative console can request status of all the transactions on configuration server 336. In this embodiment, the input parameter in the request to transaction *getStatus* is either *serverId or ALL.* Parameter *serverId* is the identifier returned in an acknowledgment of the request for the transaction for which the status is now being requested. In this embodiment, either the server identifier is the transaction identifier, or there is a correlation between the server identifier and the transaction identifier. If parameter *ALL* is input, transaction *getStatus* gets the status of all the transactions for a given session.

If a client or proxy would like to cancel a transaction or all transactions on a particular node or all the pending transactions, transaction *cancelTransaction* is issued. In this embodiment, the input parameter in the request to transaction *cancelTransaction* is either *serverId or ALL.* If *serverId* is input, the transaction associated with the *serverId* is canceled. If parameter *ALL* is input, transaction *cancelTransaction* cancels all the transactions for a given session. This transaction returns a status of success or failure.

If component 1501 wishes to be notified about any changes in a subtree of DOM tree 1570, component 1501 can register via proxy 1510 for such notifications by requesting transaction *requestNotify.* Whenever changes happen on server 336, server 336 analyzes notify table 1563 to check which proxy or proxies should be notified. In this embodiment, the input parameters for transaction *requestNotify* are *VectorNodes* and *Clientcomponent.* Parameter *VectorNodes* is a list of node paths for which the proxy, or client components want to receive change notifications. The node paths must be part of already opened DOM tree 1570. Parameter *Clientcomponent* is needed only if proxy 1510 wants to be told later by server 336 which component had made the notification request and therefore should be notified. This transaction returns a status of success or failure.

In one embodiment, the execution of transaction *requestNotify* results in the following operations:

1. For each node path given in the input list, a check is made to determine if the same session has requested notification for the same node earlier, i.e., checks if for same the session identifier and node path, an entry already exists in notify table 1565, and if so, returns with success status.

2. If an entry doesn't exist in table 1565, an entry is added to notify table 1565.

3. Sends a success response.

A proxy that has registered for the notifications can also cancel the notifications using transaction *cancelNotify.* In this embodiment, the input parameters for transaction *cancelNotify* is parameter *VectorNodes,* which was defined above.

In one embodiment, in the execution of transaction *cancelNotify,* the following operations are performed:

1. If the nodePath is ALL, all notification entries belonging to the current session are removed from notification table 1565. Otherwise, for each nodePath in the input vector, the transaction checks to see if there is an entry in notification table 1565 for the given nodePath and sessionId, and if so, that entry is removed from table 1565.

2. Sends a success response.

As the name indicates, transaction *addUser* is used to add new users to configuration server 336. This transaction creates user entries in top-level xml files and user files under appropriate directories.

In this embodiment, the input parameters in the request to transaction are *nodeId, userId,* and *dom_node.* Parameter *nodeId* Identifies a subnode in a DOM tree that was opened using transaction *openNode* earlier and inside which the new node should be added. Parameter *userID* is a unique user identifier by which the user account is identified within configuration server 336. Parameter *dom_node* is the DOM subnode that must be added by this operation. Thus, transaction returns a status of success or failure.

While processing the above transactions, any errors are logged, in addition to returning the errors to appropriate proxy, the client session in an error log in server's local disk. In one embodiment, this Error log contains following information:

Transaction Name;
transID;
Username;
errorID // default is 0; and
error message.

In the above description, envelopes were described. Figures 19A to 19E are illustrations of one embodiment of XML-based envelopes that can be used herein. Each envelope includes a header and a body, if the body is needed. Each header includes a transaction type, a transaction name, a client identifier that is assigned by proxy 1510, and a server identifier that is assigned by server 336. In one embodiment, the server identifier is the transaction identifier described above. For envelopes sent from a proxy to the server, the body includes input parameter data types and values. For envelopes sent from the server to the proxy, the body includes output parameter data types and values.

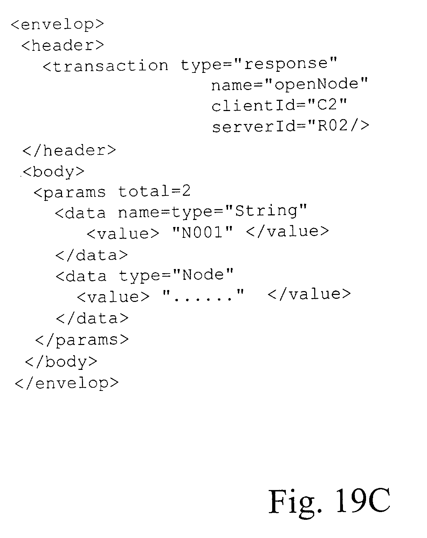

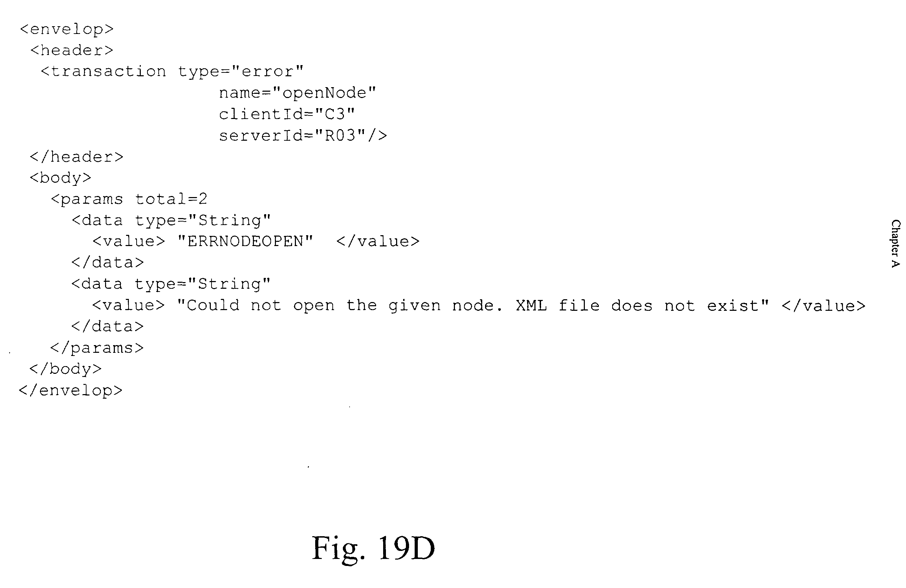

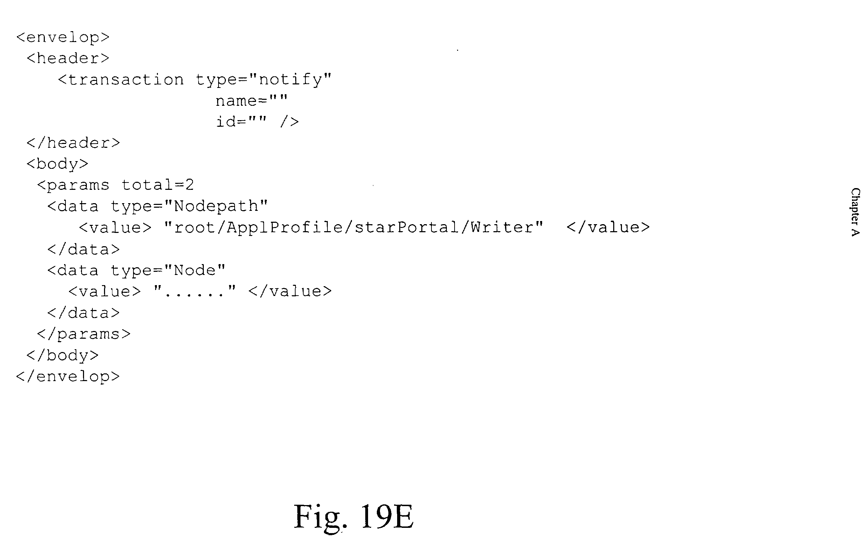

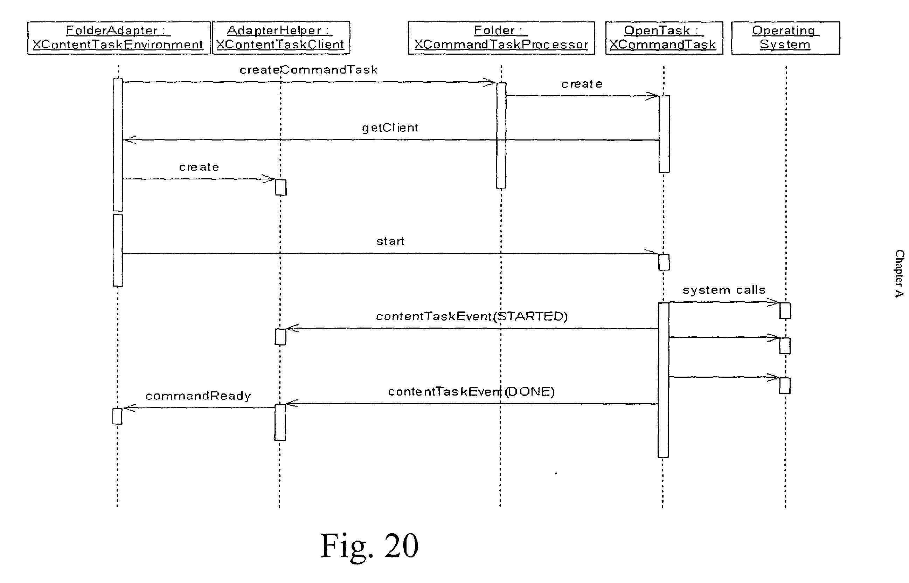

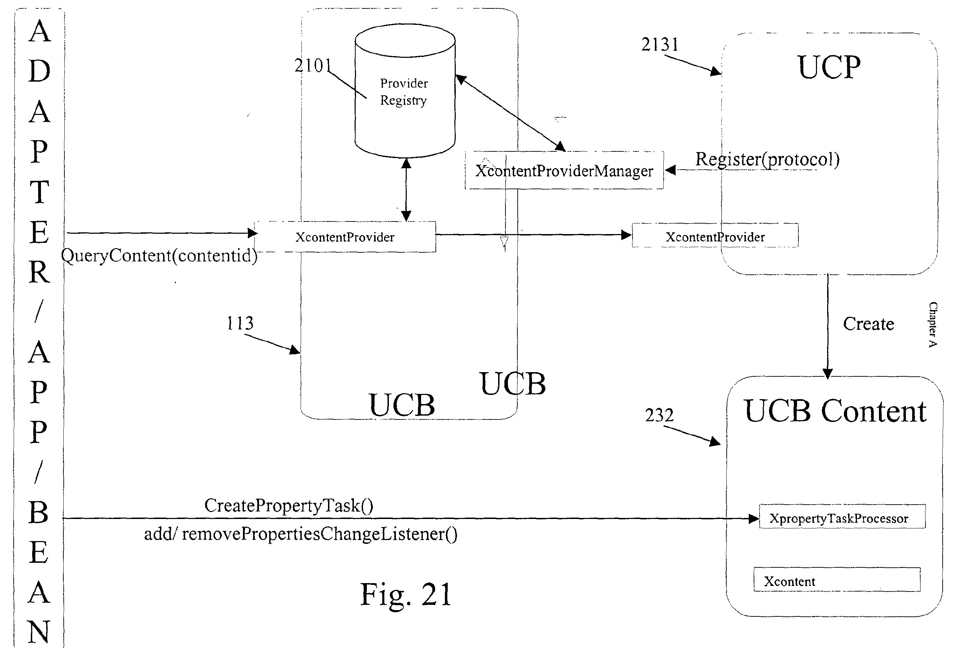

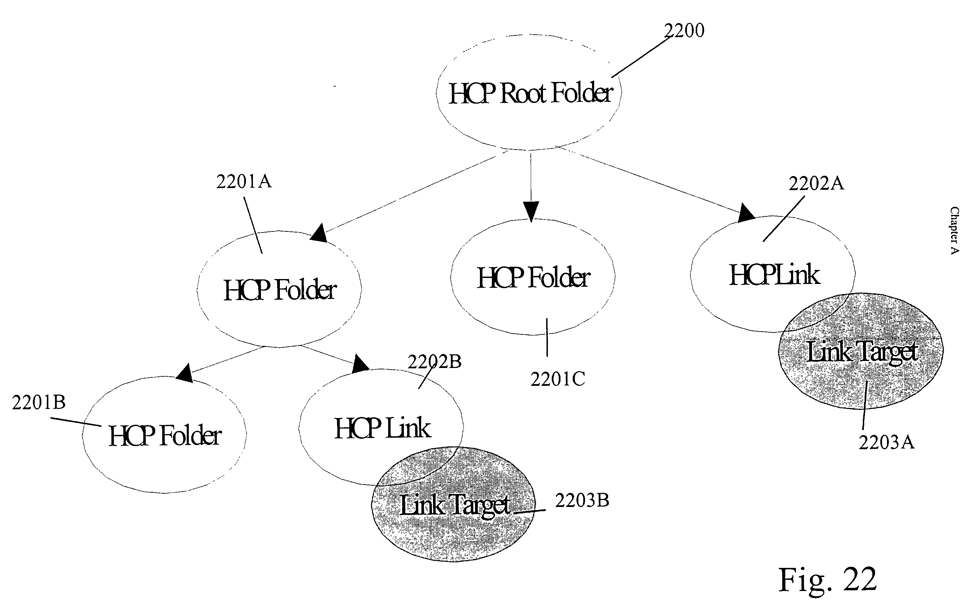

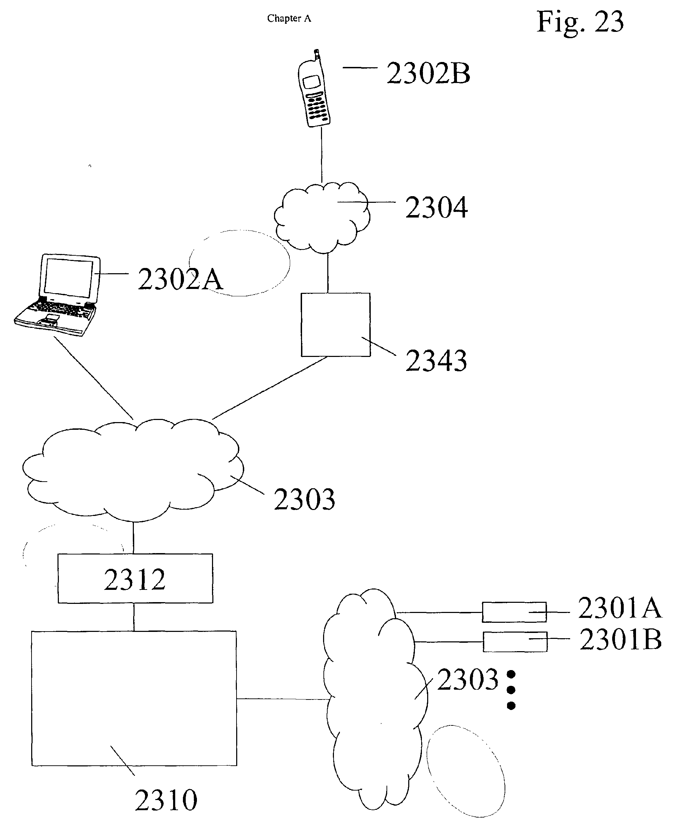

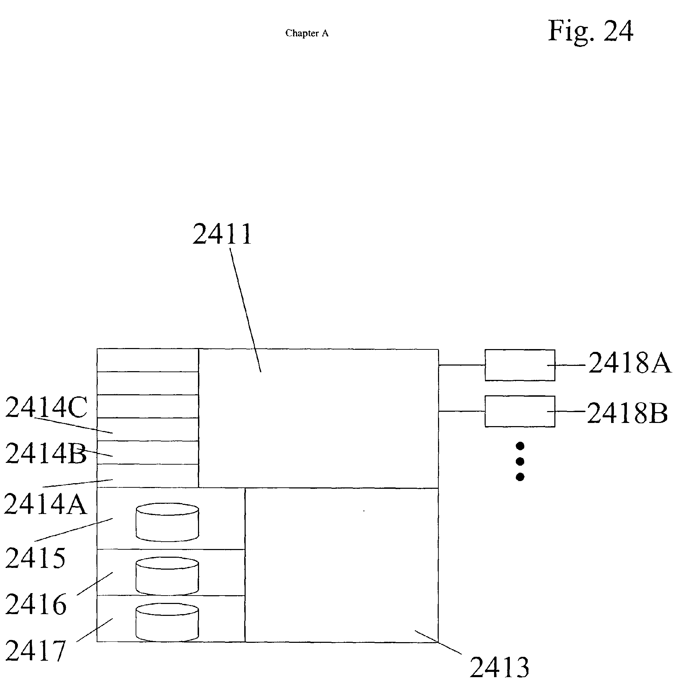

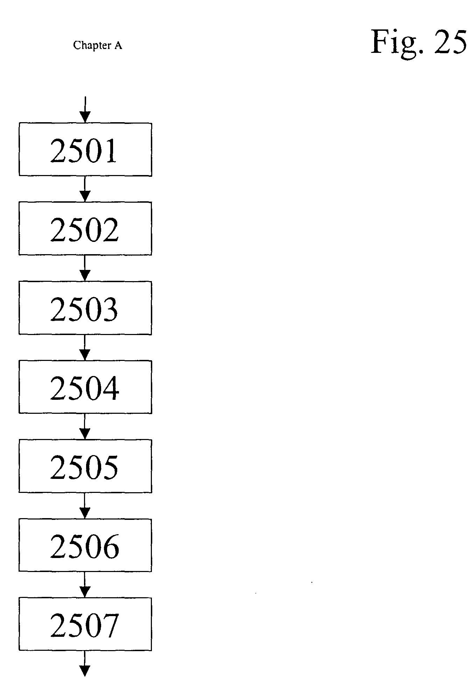

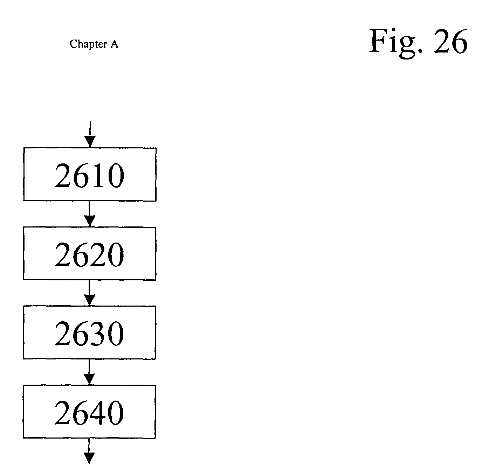

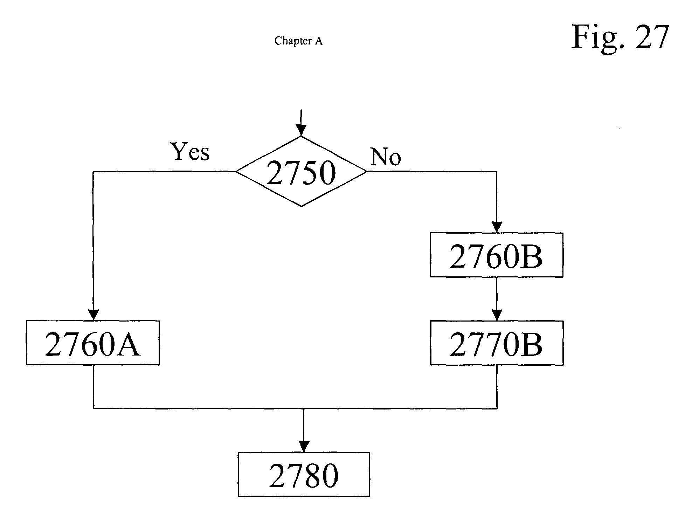

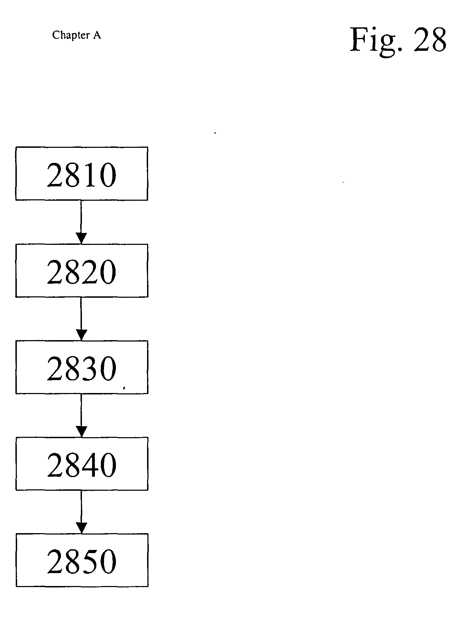

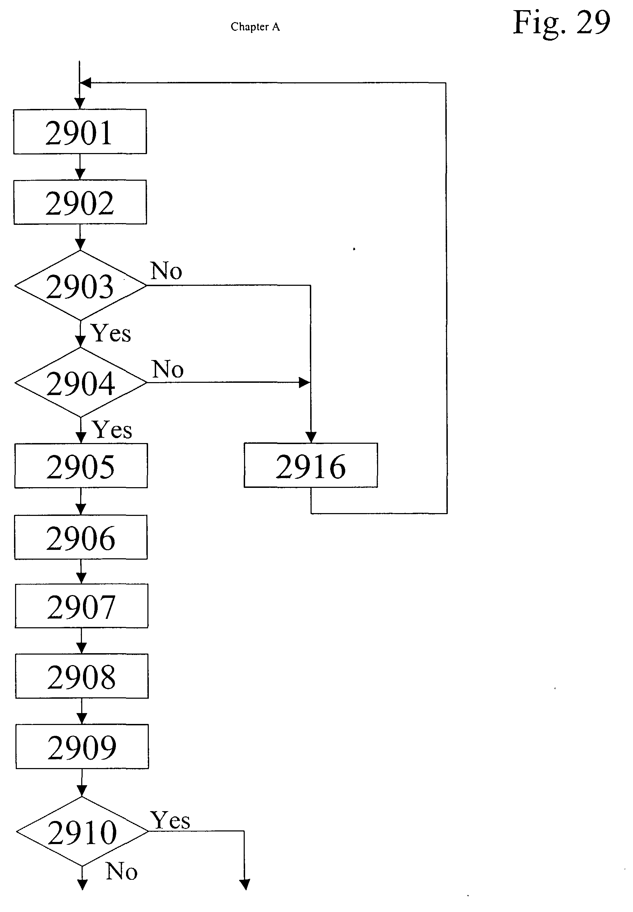

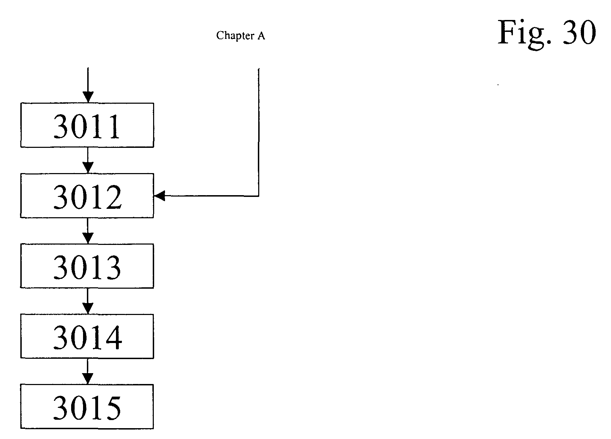

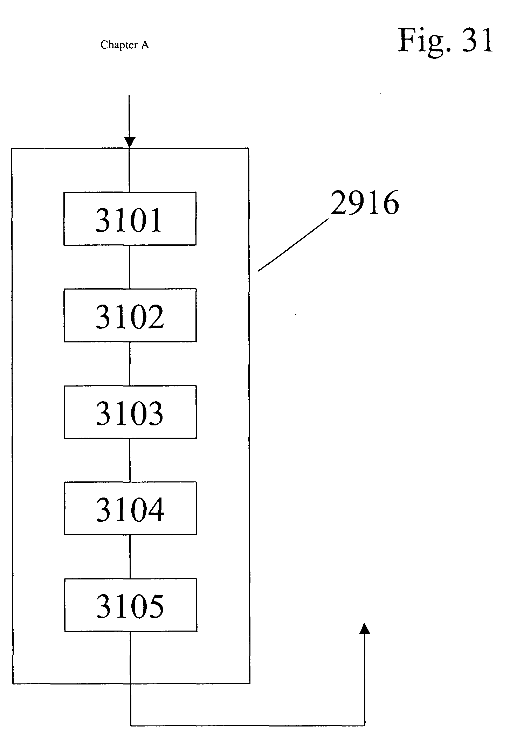

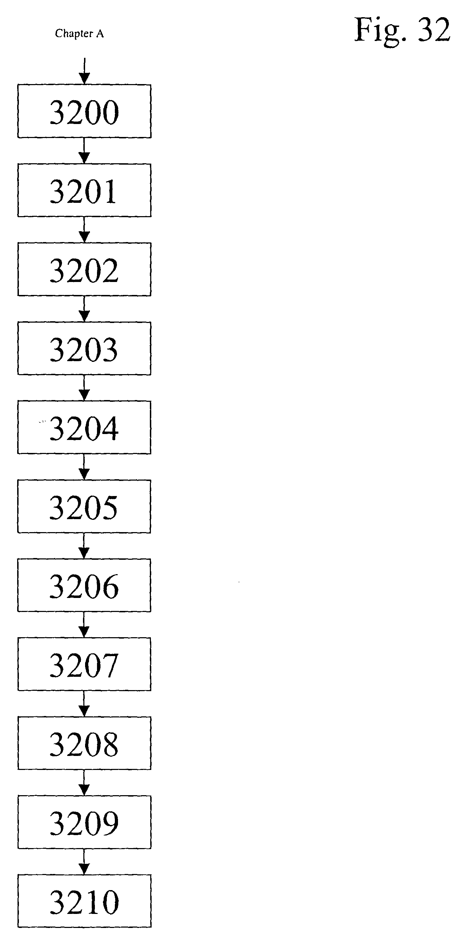

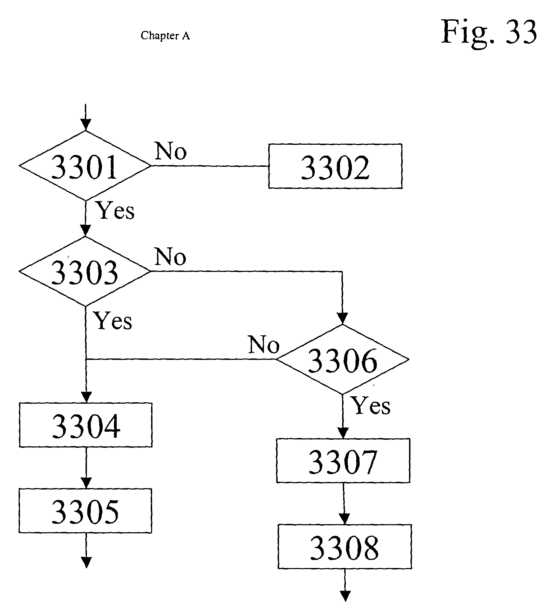

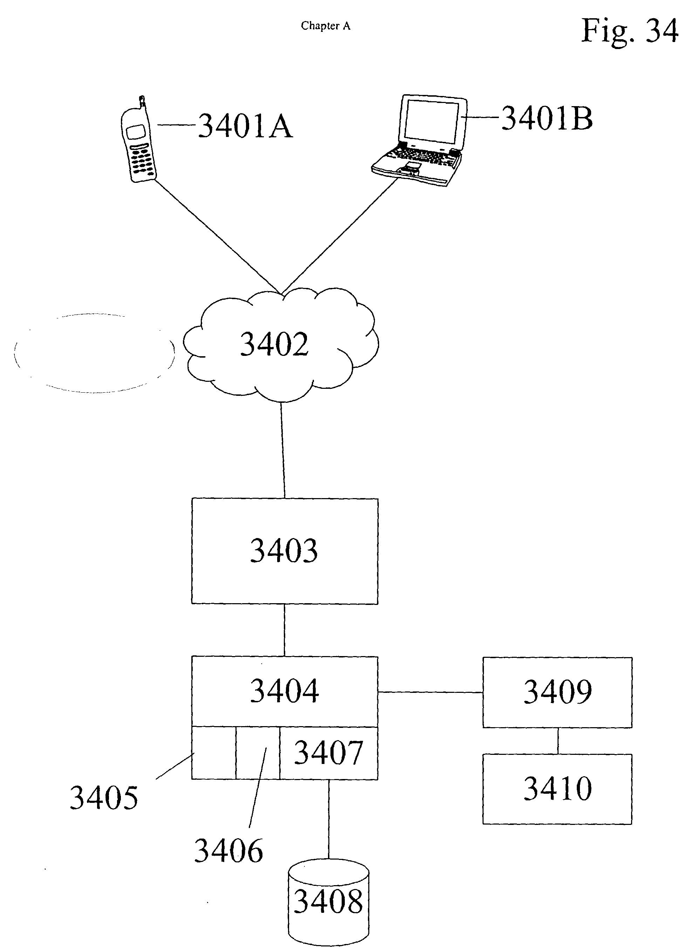

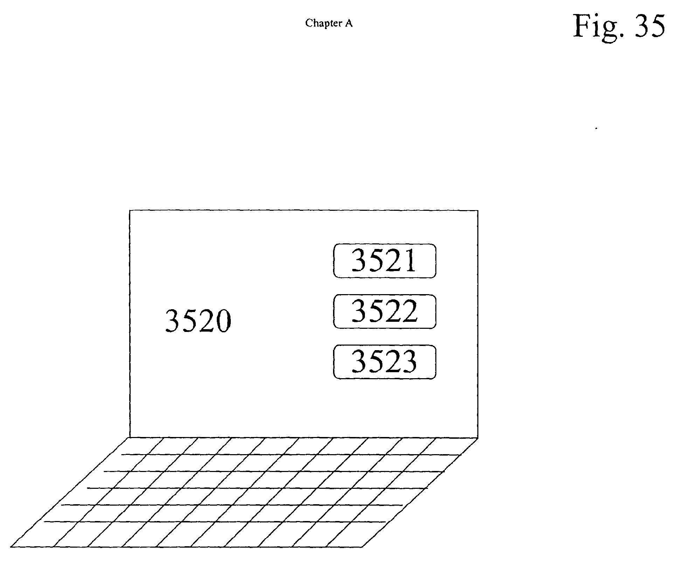

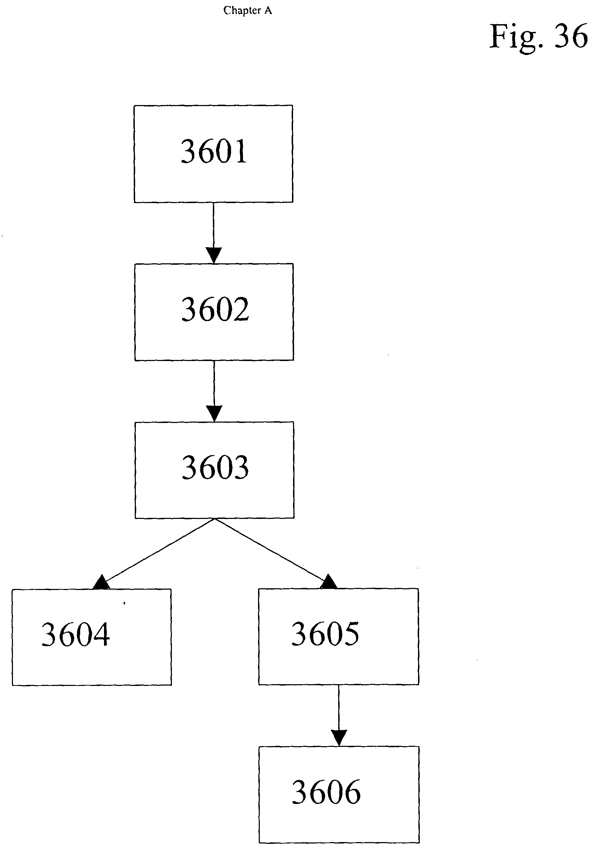

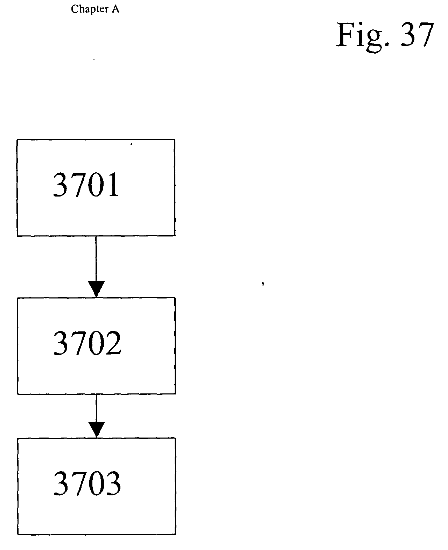

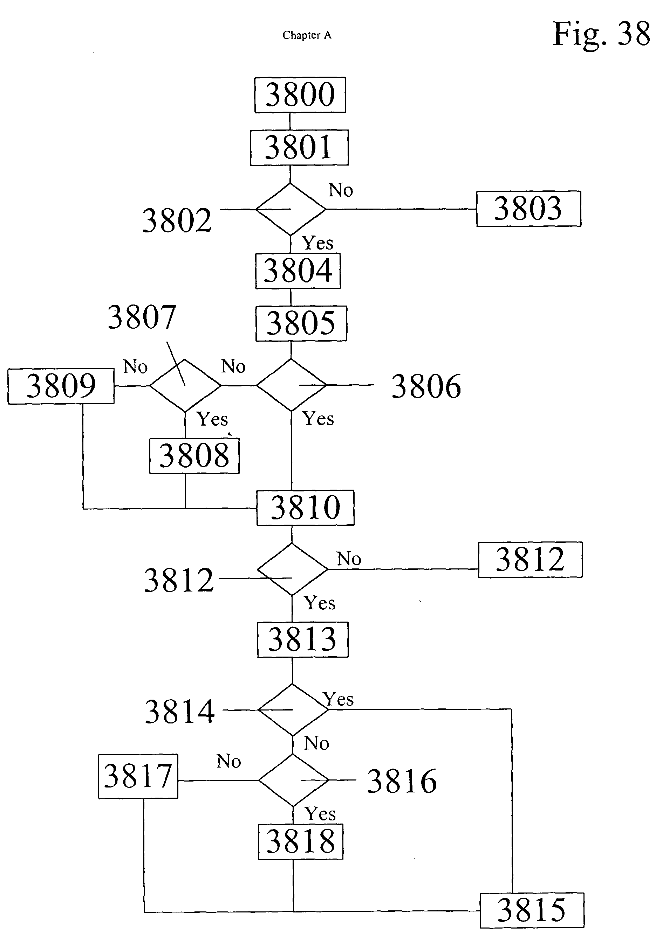

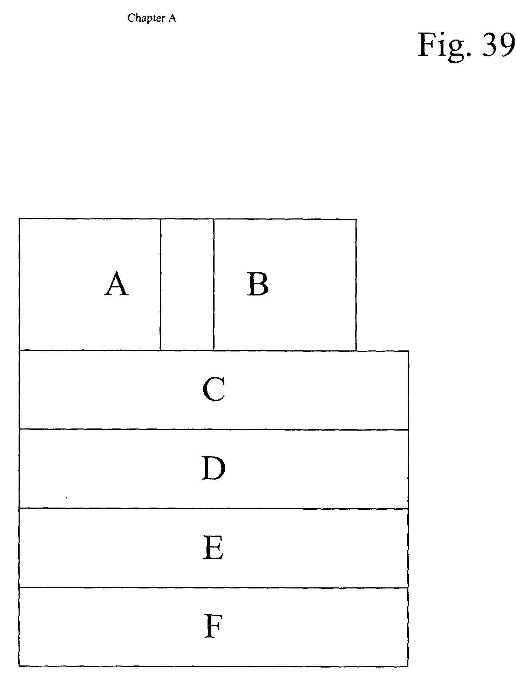

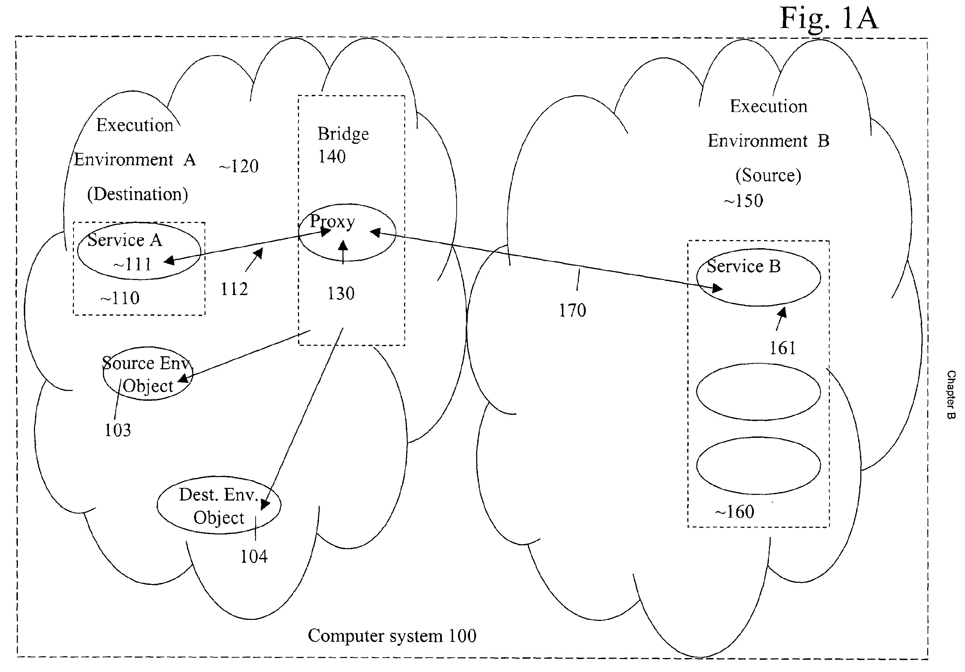

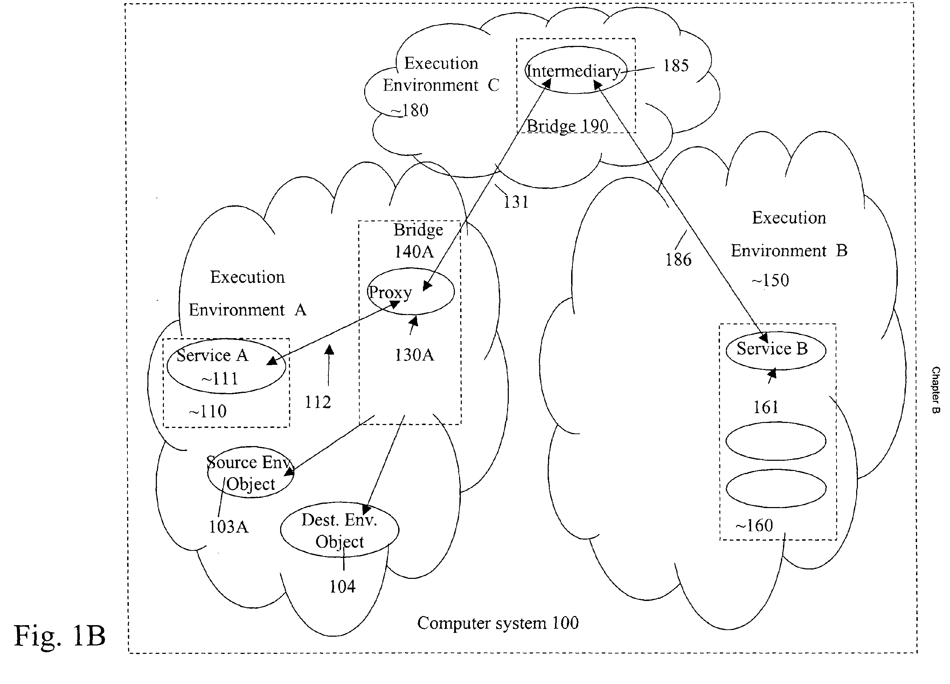

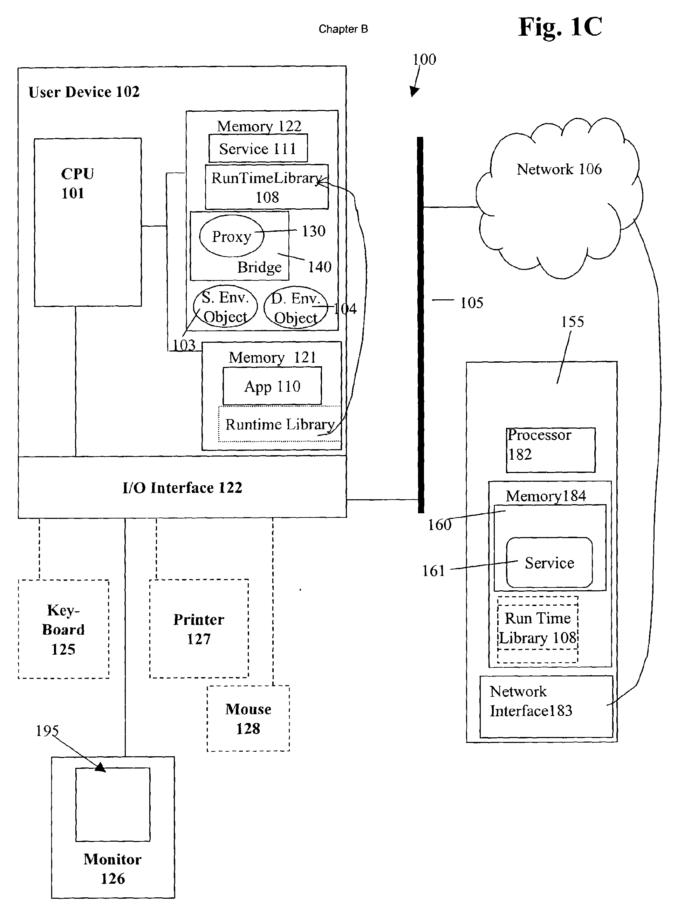

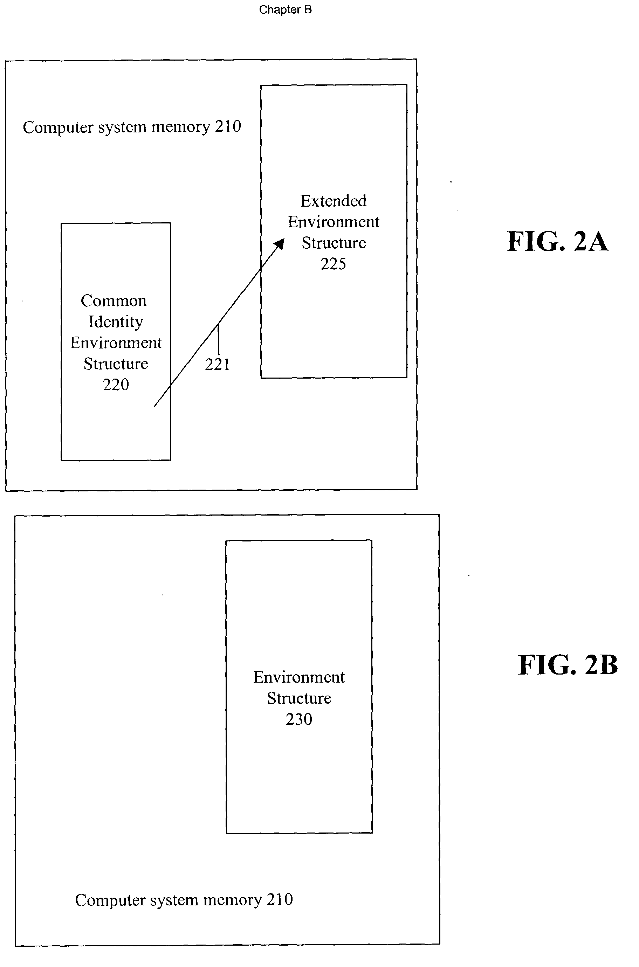

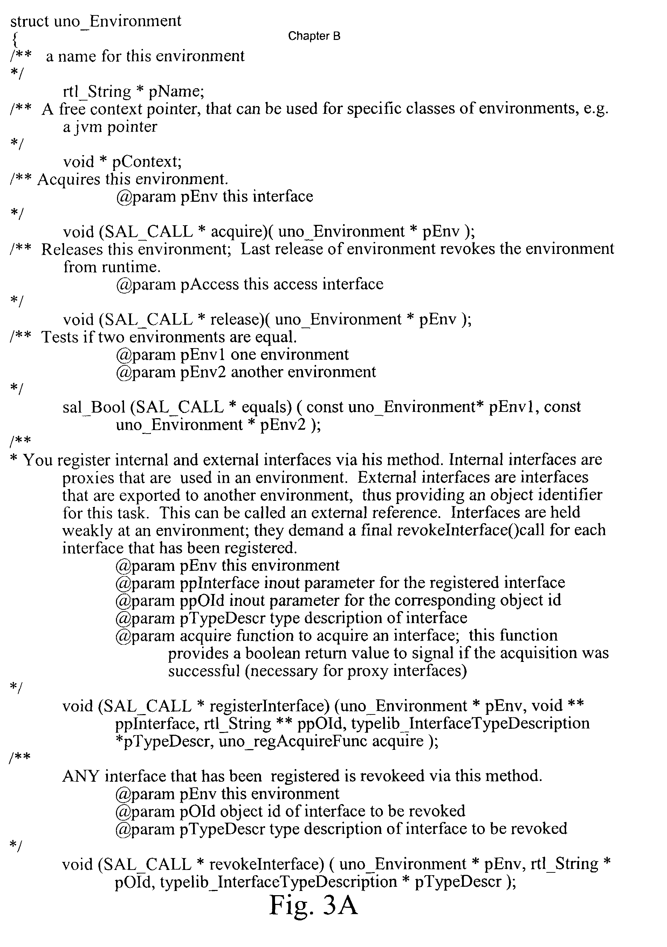

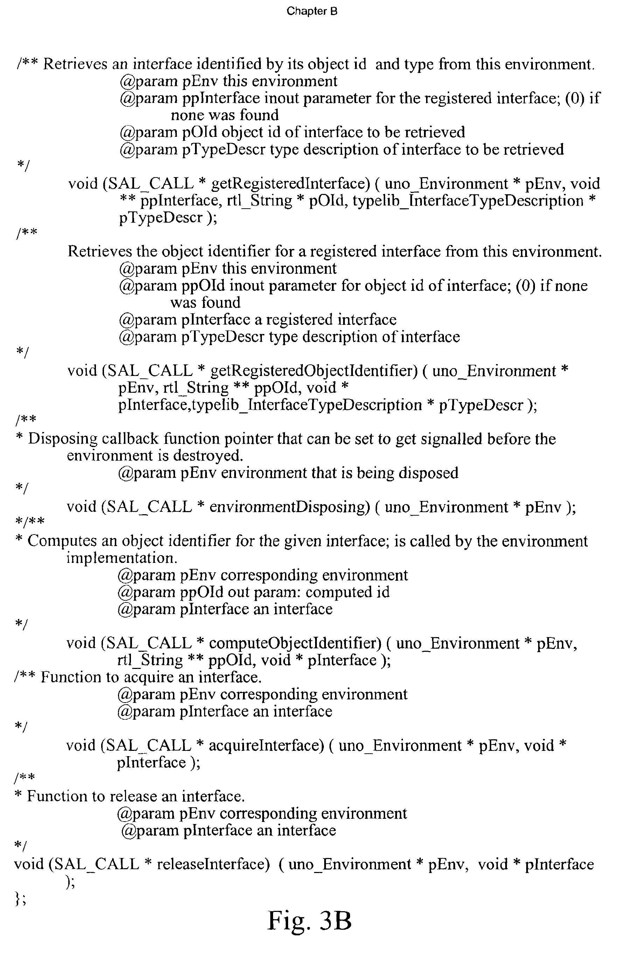

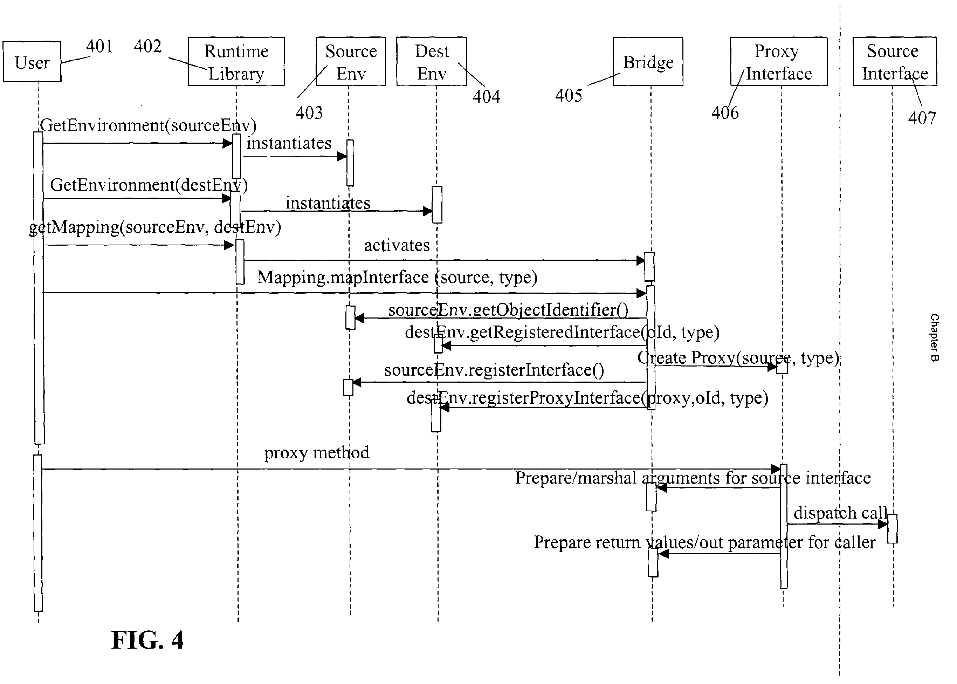

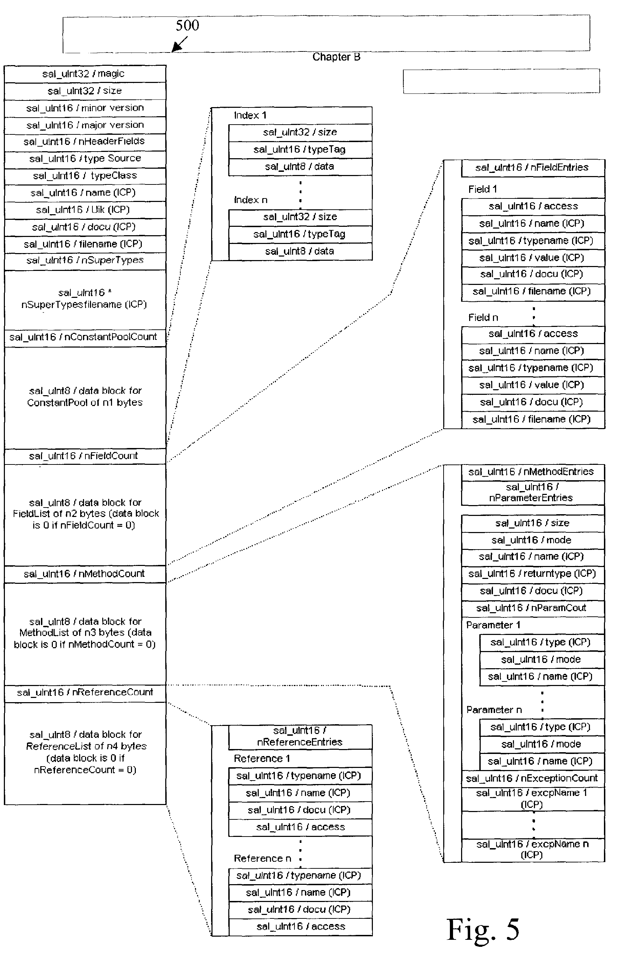

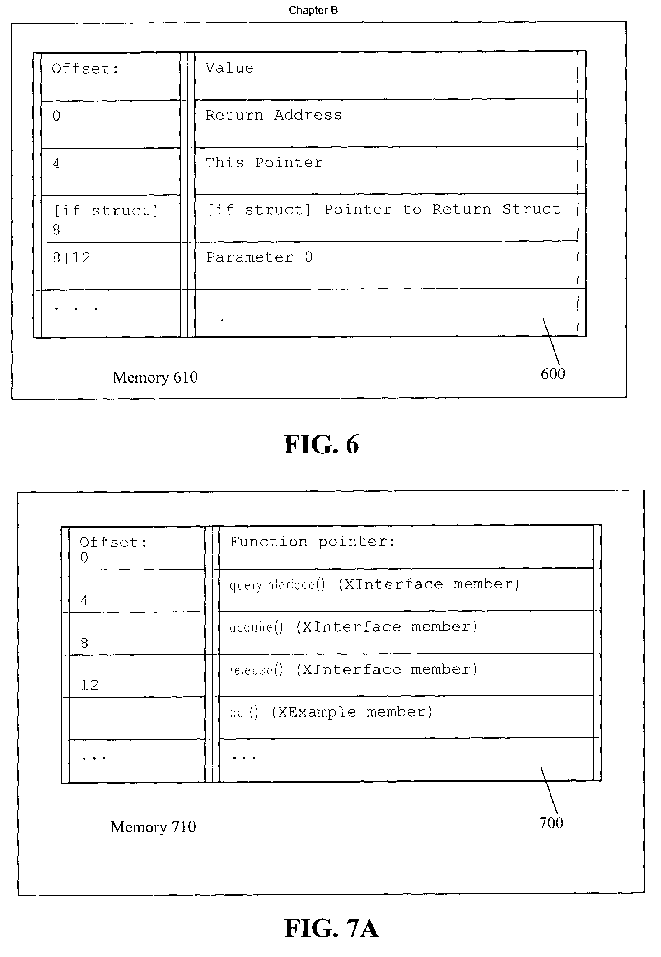

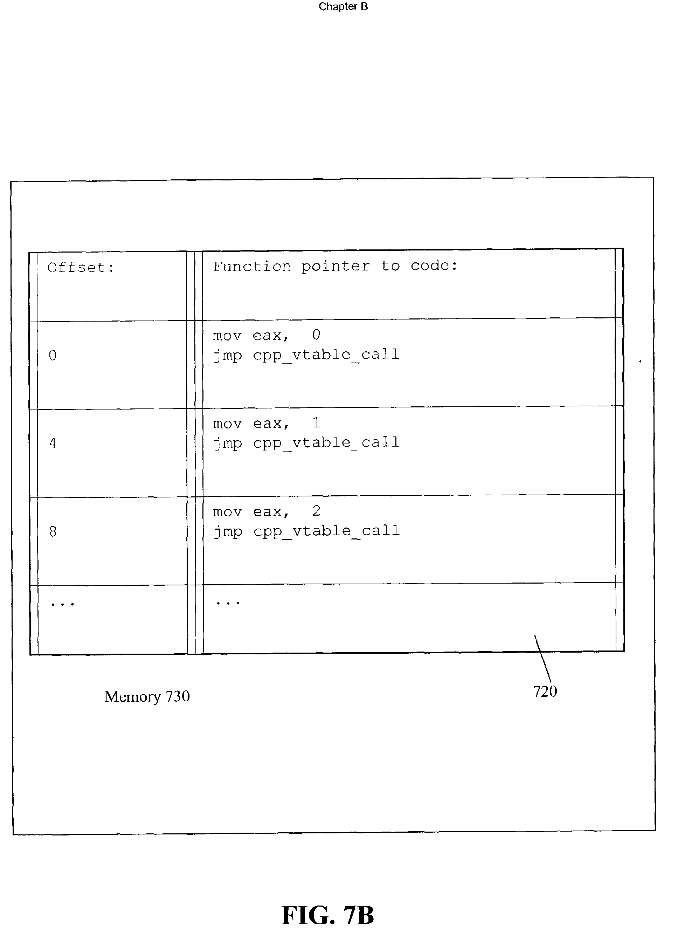

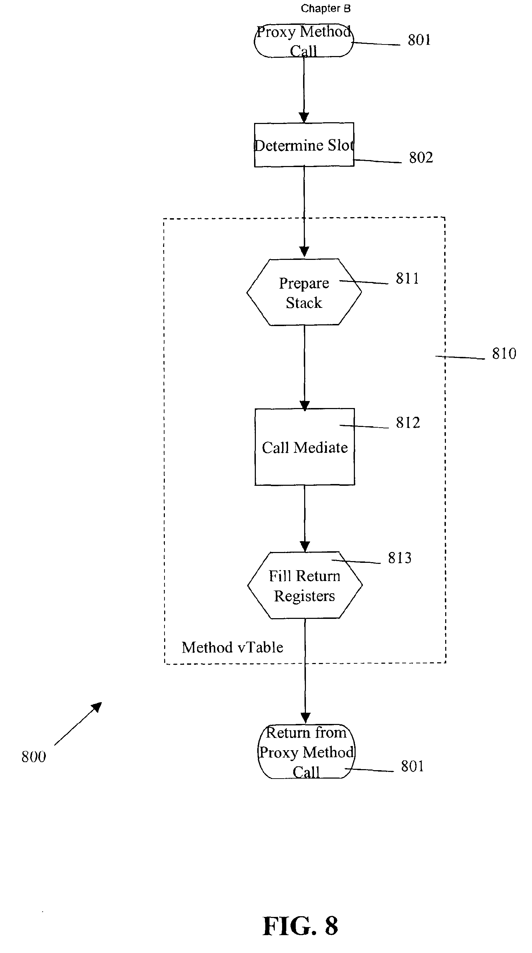

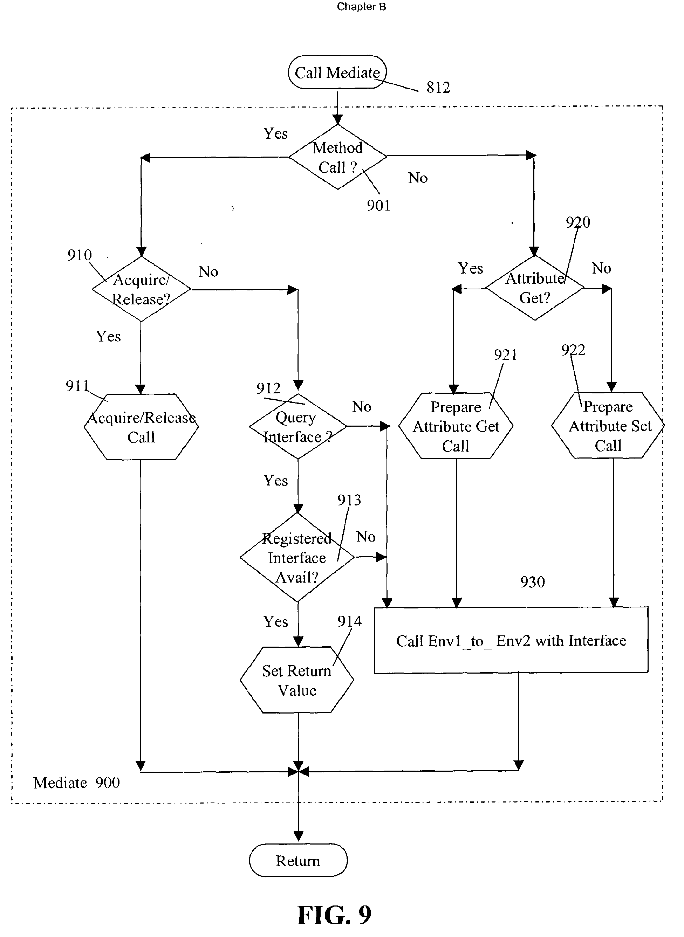

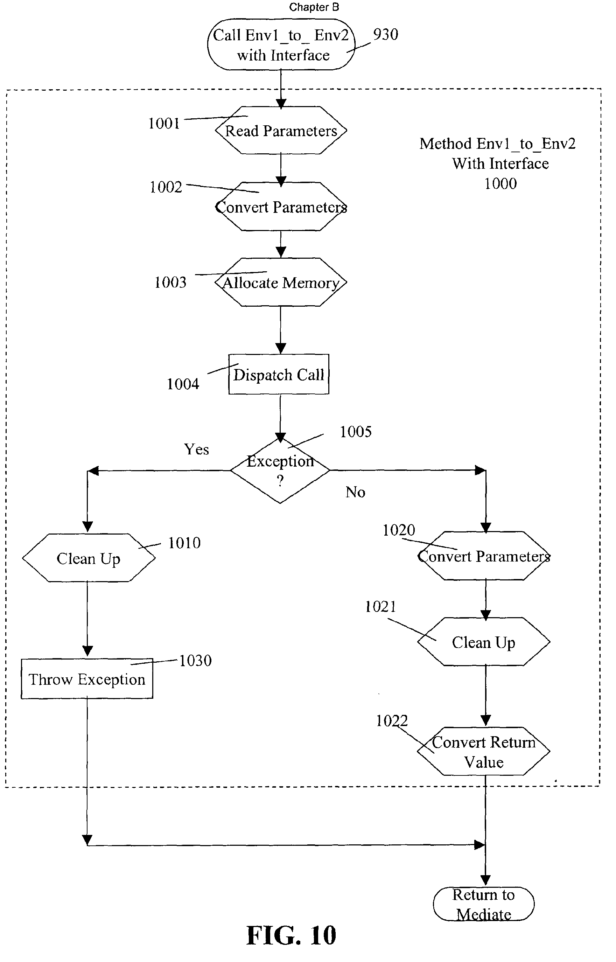

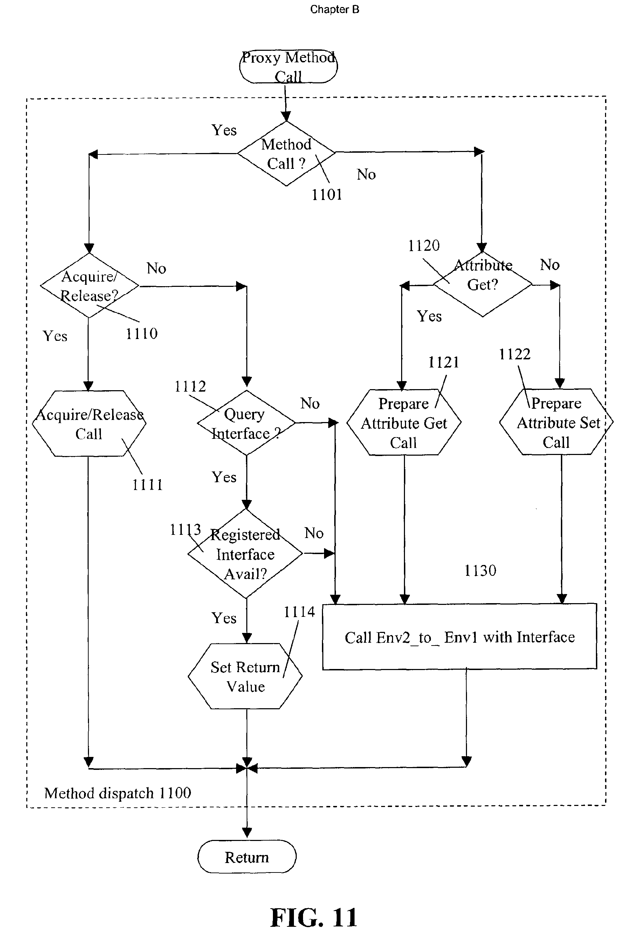

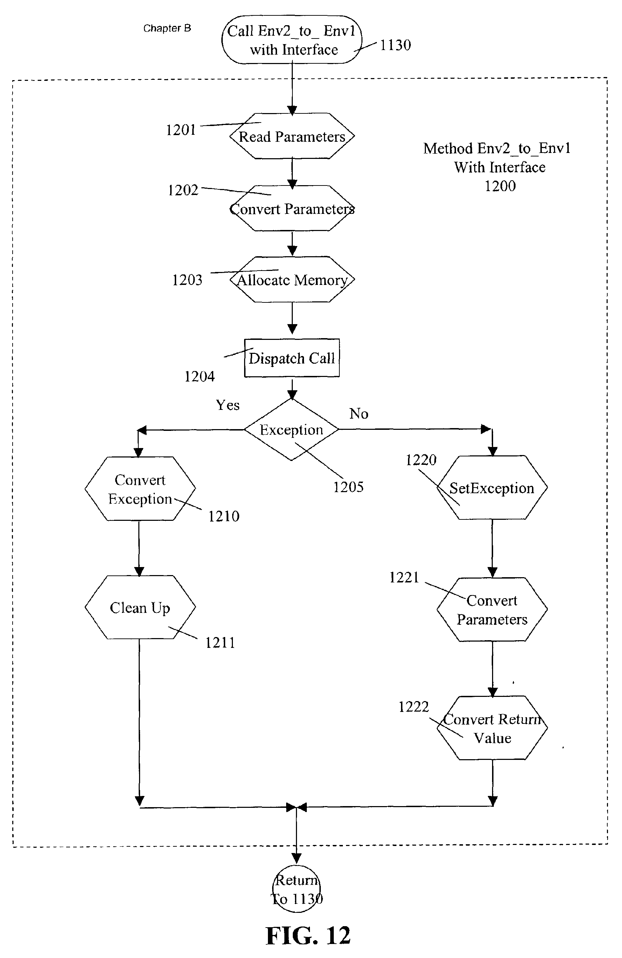

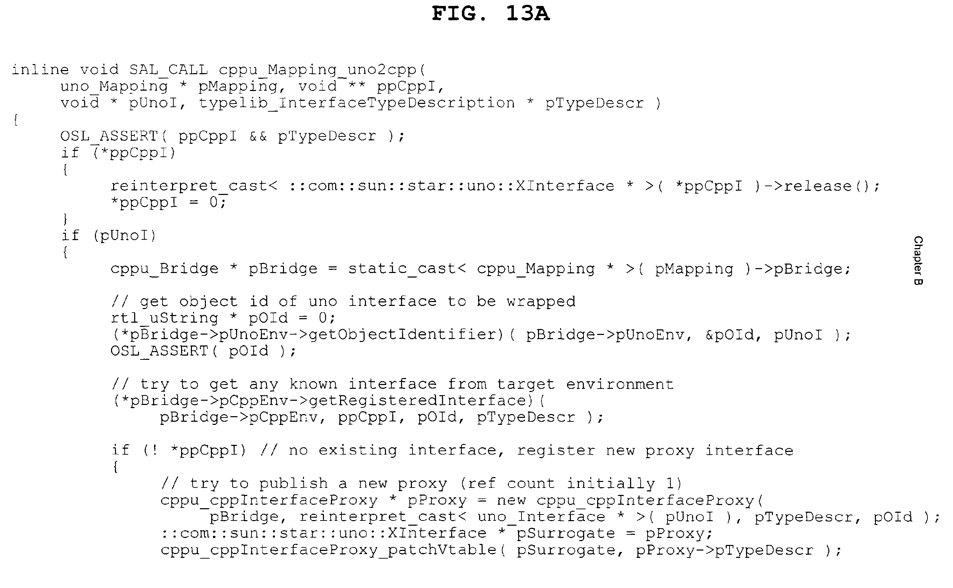

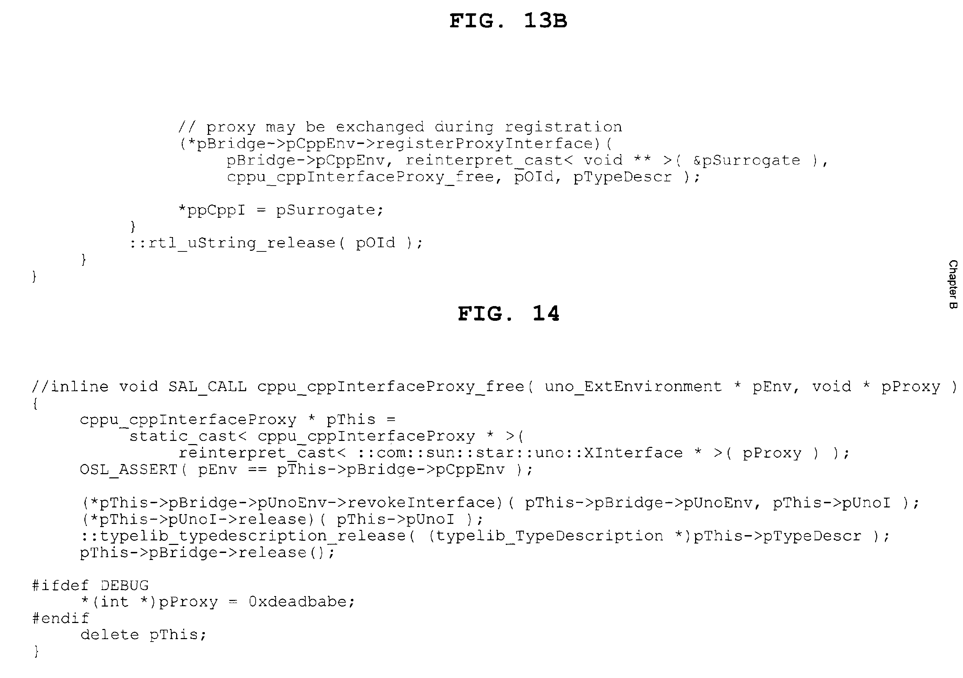

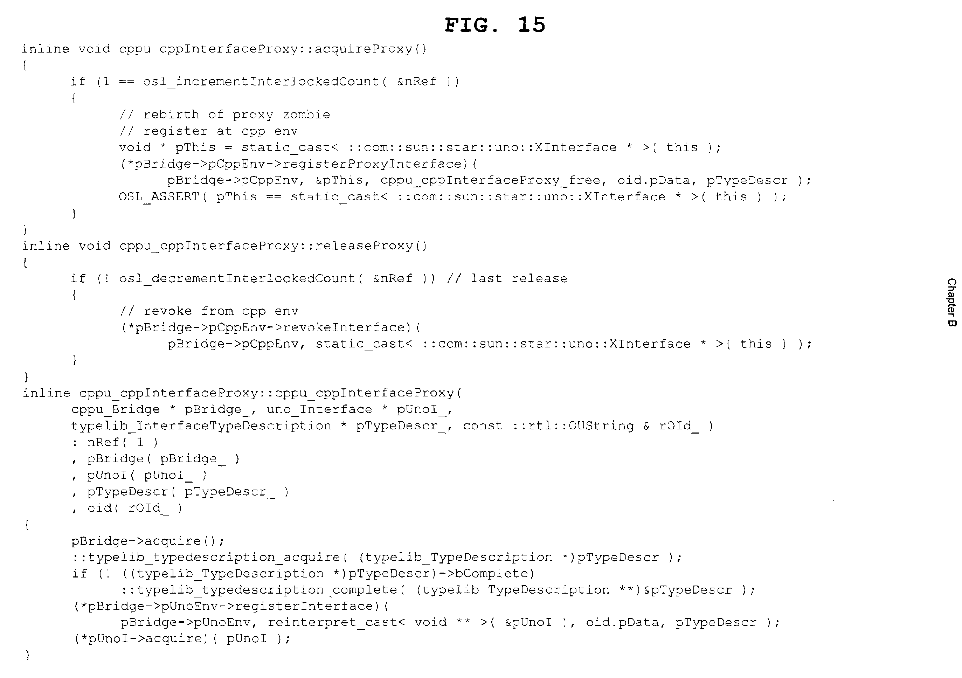

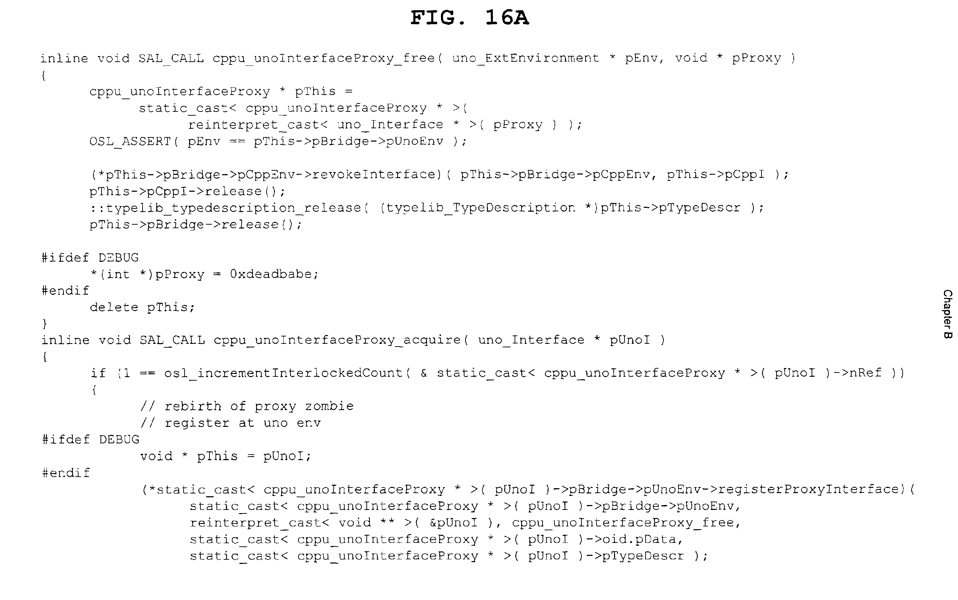

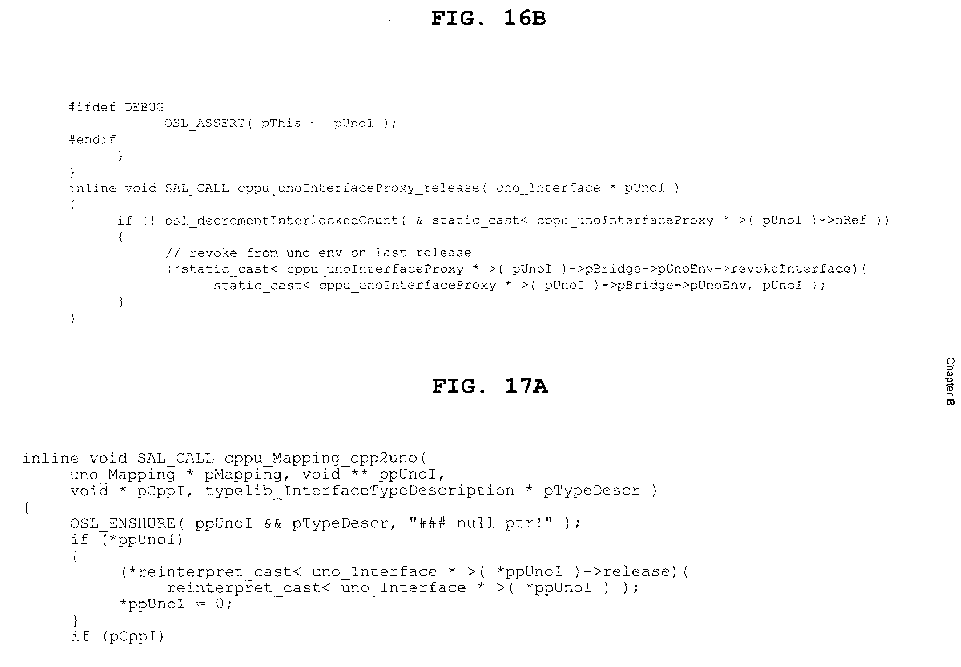

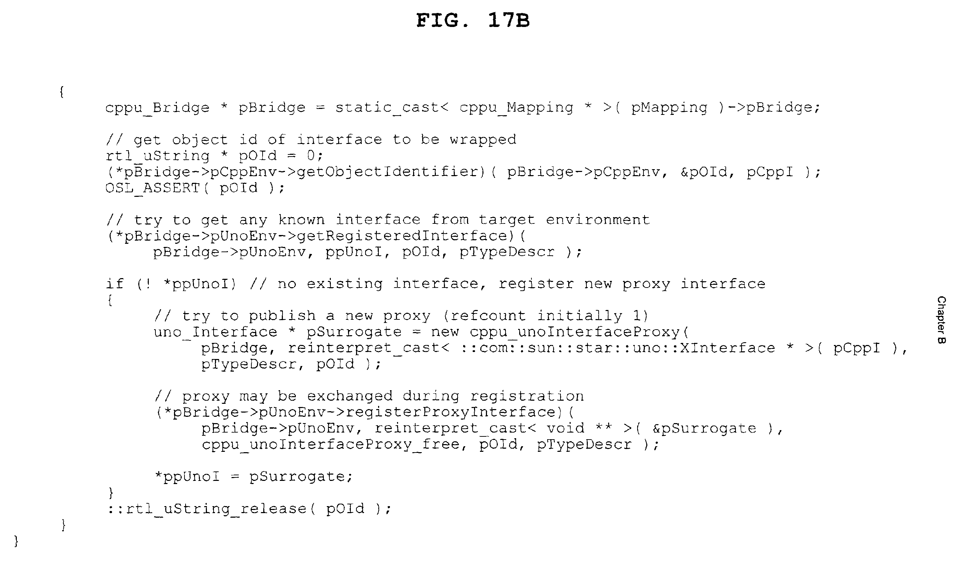

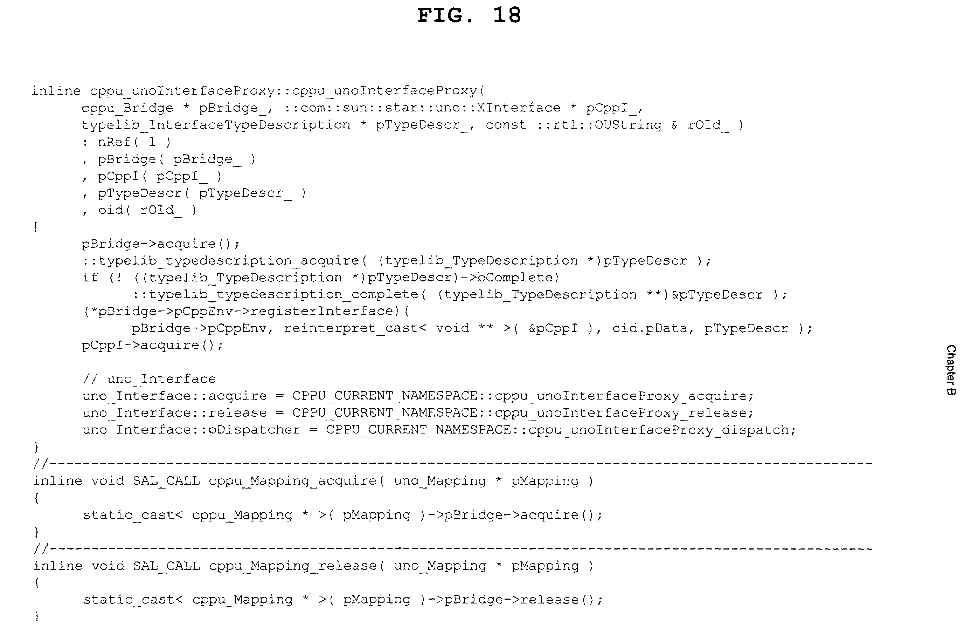

Figure 19A illustrates one embodiment of an envelope that proxy 1510 uses to send a transaction request to server 336. Figure 19B illustrates one embodiment of an envelope that server 336 uses to send an acknowledgement of a transaction request from proxy 1510. Figure 19C illustrates one embodiment of an envelope that server 336 uses to send a response to a transaction request from proxy 1510. Figure 19D illustrates one embodiment of an envelope that server 336 uses to send an error notification in response to a transaction request from proxy 1510. Figure 19E illustrates one embodiment of an envelope that server 336 uses to send notification of a transaction to a different proxy.

ONE EMBODIMENT OF CLIENT API 1511 OF PROXY 1510

As described above configuration data is organized in a hierarchical tree structure in proxy 1510. Entries in the tree structure are addressed by name. The structure of the tree is determined by a strongly typed schema. The schema is installed into configuration database 337.

Tree nodes are either value nodes, which contain a single value or a list of values from a limited set of basic types; collection nodes, which contain a collection of child node of various types; or container nodes, which contain a variable number of entries, all of the same type. These entries may all be values or all composite. In the first case all values have the same basic type, in the latter case all the subtrees have the same structure. The names of container entries are specified when they are created.

Therefore, client API 1511 supports:

navigating a tree structure;

reading and updating values in the tree structure; and

accessing attributes of tree nodes, as far as they are needed for client operation.

In this embodiment, client API 1511 also supports:

fast access - both read and write -, even in an environment where server 336 is remote and the same configuration is shared by multiple clients;

notifications about configuration changes (both local and server-initiated);

explicit synchronization of selected parts of the configuration to enable offline client operation; and

use of specialized settings on a per-document basis that are stored within the documents.

In addition, in one embodiment, client API 1511 supports:

a caching implementation;

transaction-like batching of updates;

compound notifications for batch updates; and

notification for updates of an entire subtree of the configuration.

In one embodiment, frequently changing configuration values are marked 'non-bound'. These values are excluded from remote notification. This applies, for example, to settings that components generate implicitly to remember their current state (such as window positions).

Changes originating via client API 1511 only affect a single user. Proxy 1510 needs to immediately advise server 336 of such changes only if there are multiple client processes acting on behalf of that user. Changes to shared configuration values or the schema must be applied to the DOM tree 1570 using an interface that implements the transactions described above.

The following description of interfaces and services is one example of a client API that performs the functions described. This description is illustrative only and is not intended to limit the invention to the specific embodiments described.

The configuration tree stored by proxy 1510 is a recursive hierarchical tree structure, where entries are identified by names relative to their parent (and by a composite name globally). Stepwise navigation through the hierarchy is allowed by interface *XNameAccess*. The reverse navigation is possible using interface *XChild* and the (local) name can be recovered via interface *X*Named.

Interface *XNameAccess* is used to access the named objects within a container. Interface *XNameAccess* inherits from interfaces *XElementAccess* and includes methods *getByName, getElementNames,* and *hasByName*.

Method *getByName* returns the object with the name specified by parameter *aName*. Method *getByName* throws exception *NoSuchElementException* if an element with the specified name does not exist. This method throws an exception *WrappedTargetException*, if the implementation has internal reasons for exceptions.

Method *getElementNames* returns a sequence of all element names in this container. The order of the names is not specified. Method *hasByName* returns true if the container contains the input name and otherwise false.

TABLE 4.:   Interface *XNameAccess*

```
Interface XNameAccess:
     com::sun::star::container::XElementAccess
{
  [const] any getByName( [in] string aName )
     raises(
     com::sun::star::container::NoSuchElementException,
     com::sun::star::lang::WrappedTargetException );
  [const] sequence<string> getElementNames();
  [const] boolean hasByName( [in] string aName );
};
```

Interface *XElementAccess* and the other interfaces and classes used by Interface *XElementAccess* as well as exceptions NoSuchElementException and WrappedTargetException are presented and described CHAPTER C, and in particular Tables 2, 3, 12 and 36 to 52 and the description thereof.

Interface *XChild* provides access to the parent of the object. This interface normally is only supported if the objects all have exactly one dedicated parent container. Interface *XChild* inherits from interface *XInterface.* Method *getParent* grants access to the object containing this content, e.g., returns the parent to this object. Method setParent sets the parent to this object, and throws exception *NoSupportException* if the object does not allow change to the parent. Exception *NoSupportException* inherits from exception *Exception.*

TABLE: 5.:   Interface *XChild*

```
interface XChild: com::sun::star::uno::XInterface
{
[const] com::sun::star::uno::XInterface getParent();
void setParent( [in] com::sun::star::uno::XInterface
     Parent )
     raises( com::sun::star::lang::NoSupportException
     );
}
```

Interface *XNamed* specifies the name of the object. The name is generally unique in the container of the object. Interface *XNamed* inherits from interface *XInterface.* Method *getName* returns the programmatic name of the object. Method *setName* sets the programmatic name of the object to the value of input parameter *aName.*

TABLE: 6.:   Interface *XNamed*

```
interface XNamed: com::sun::star::uno::XInterface
{
[const] string getName();
[oneway] void setName( [in] string aName );
};
```

Interface *XHierarchicalNameAccess* allows direct access to a child node that is deeper in the hierarchy. An object of a specific level in the hierarchy is addressed by giving its fully qualified name, e.g. "stardiv.uno.XInterface". Interface *XHierarchicalNameAccess* inherits from interface *XInterface.* Method *getByHierarchicalName* returns the object with the specified name and throws exception *NoSuchElementException* if an object with the specified name does not exist. Method *hasByHierarchicalName* returns TRUE, if an object with the specified name is in the container, and false otherwise.

TABLE 7.:    Interface *XHierarchicalNameAccess*

```
interface XHierarchicalNameAccess:
        com::sun::star::uno::XInterface
{
[const] any getByHierarchicalName( [in] string aName )
        raises(
        com::sun::star::container::NoSuchElementException



        );
[const] boolean hasByHierarchicalName( [in] string
        aName );
};
```

The fully specified name of an object is available through interface *XHierarchicalName*, which offers a single method getHierarchicalName() that returns the fully qualified hierarchical name of the object. Interface *XHierarchical-Name* inherits from interface *XInterface*.

To support scripting access, names are currently required to be unique regardless of case. On the other hand some interfaces may be case-sensitive. This difference is resolved through implementing interface *XExactName*. Interface *XExactName* provides a method *getExactName* for converting an approximate name to an existing name. Interface *XExactName* inherits from interface *XInterface*.

Objects providing write access extend interface *XNameAccess* and interface *XNameReplace*, and add support for interface *XContainer*. Container nodes offering write access implement interface *XNameContainer*.

Interface *XNameReplace* is a generic interface for supporting the replacement of names. Interface *XNameReplace* inherits from interface XNameAcess. Method *replaceByName* replaces the element with the specified name. Parameter *aName* specifies the name of the element. Parameter *aElement* specifies the object to be inserted in the container. This method throws exception *IllegalArgumentException* if the element object does not support the interfaces, services or other conditions, which are specified by the service of this container implementation. This method throws exception *NoSuchElementException* if an element under this name does not exist.

TABLE 8.:  Interface *XNameReplace*

```
interface XNameReplace:
    com::sun::star::container::XNameAccess
{

void replaceByName( [in] string aName, [in] any
    aElement ) raises(
    com::sun::star::lang::IllegalArgumentException,
    com::sun::star::container::NoSuchElementException,
    com::sun::star::lang::WrappedTargetException );
};
```

Interface *XNameContainer* is a generic interface for supporting the insertion and removal of named elements. Interface *XNameContainer* inherits from interface *XNameReplace*. Method *insertByName* inserts the element at the specified name. Parameter *aName* specifies the name of the element. Parameter *aElement* specifies the object to be inserted in the container. This method throws exception IllegalArgumentException if the element object does not support the interfaces, services or other conditions, which are specified by the service of this container implementation. This method throws exception ElementExistException if an element under the name exists. Exception stardiv::uno::lang:: WrappedTargetException is thrown if the implementation has internal reasons for exceptions.

TABLE 9.:  INTERFACE *XNameContainer*

```
interface XNameContainer:
    com::sun::star::container::XNameReplace
{
void insertByName( [in] string aName, [in] any aElement
    ) raises(
    com::sun::star::lang::IllegalArgumentException,
    com::sun::star::container::ElementExistException,
    com::sun::star::lang::WrappedTargetException );
}
```

Nodes with attributes and state

Some attributes from the configuration schema need to be available to client components. These include access control (read-only), whether an entry is optional (may-be-null), and whether an entry is eligible for (remote) notification (bound). These are straightforwardly mapped to values (READONLY, MAYBEVOID, BOUND) from PropertyAttribute bit mask constants. Other attributes present there could be applicable as well (MAYBEDEFAULT will usually be set).

TABLE 10.: Constants *PropertyAttribute*

```
constants PropertyAttribute
{
const short MAYBEVOID = 1;
const short BOUND = 2;
const short CONSTRAINED = 4;
const short TRANSIENT = 8;
const short READONLY = 16;
const short MAYBEAMBIGUOUS = 32;
const short MAYBEDEFAULT = 64;
const short REMOVEABLE = 128;
};
```

Similarly the DIRECT_VALUE vs. DEFAULT_VALUE distinction from enumeration *PropertyState* applies to configuration nodes. Enumeration *PropertyState* lists the states that a property value can have. The state consists of two aspects: whether a value is available or void, and whether the value is stored in the property set itself, or is a default or ambiguous. State DIRECT_VALUE indicates the value of the property is stored in the PropertySet itself. The property value must be available and of the specified type. State DEFAULT_VALUE indicates that the value of the property is available from a master.

TABLE: 11.: Enumeration PropertyState

```
enum PropertyState
{
  DIRECT_VALUE,
  DEFAULT_VALUE,
  AMBIGUOUS_VALUE
}
```

Leveraging this mapping, a collection node provides richer access to its members by implementing interfaces *XPropertySet* and *XPropertyState.* Schema information for a collection node is then available through interface *XPropertySetInfo.*

Interface *XPropertySet* provides information about and access to the properties from an implementation. There are three types of properties: bound properties; constrained properties; and free properties. Changes of bound properties are obtained by interface *XPropertyChangeListener.* Changes of constrained properties are vetoed with interface *XPropertyVetoListener.* Method *getPropertySetInfo* returns the interface *XPropertySetInfo,* which describes all properties of the object, which supplies this interface. Method *setPropertyValue* sets the value of the property with the specified name. If it is a bound property the value will be changed before the change events is fired. If it is a constrained property a vetoable event is fired before the property value can be changed. Method *getPropertyValue* returns the value of the property with the specified name. Method *addPropertyChangeListener* adds an interface *XPropertyChangeListener* to the specified property. An empty name ("") registers the listener to all bound properties. If the property is not bound, the behavior is not specified. Method *removePropertyChangeListener* removes an interface *XProperkyChangeListener* from the listener list. This method is a "noop" if the listener is not registered. Method *addVetoableChangeListener* adds an interface *XVetoableChangeListener* to the specified property with the name *PropertyName.* An empty name ("") registers the listener to all constrained properties. If the property is not constrained, the behavior is not specified. Method *removeVetoableChangeListener* removes an interface *XVetoableChangeListener* from the listener list. This method is a "noop" if the listener is not registered.

TABLE 12.: INTERFACE *XPropertySet*

```
interface XPropertySet: com::sun::star::uno::XInterface
[const] com::sun::star::beans::XPropertySetInfo
    getPropertySetInfo();
void setPropertyValue( [in] string aPropertyName,  [in]
    any aValue )
raises(
    com::sun::star::beans::UnknownPropertyException,
    com::sun::star::beans::PropertyVetoException,
    com::sun::star::lang::IllegalArgumentException,
    com::sun::star::lang::WrappedTargetException );
[const] any getPropertyValue( [in] string PropertyName
    )
    raises(
    com::sun::star::beans::UnknownPropertyException,
    com::sun::star::lang::WrappedTargetException );
void addPropertyChangeListener( [in] string
```

```
        aPropertyName,   [in]
        com::sun::star::beans::XPropertyChangeListener
        xListener )
        raises(
        com::sun::star::beans::UnknownPropertyException,
        com::sun::star::lang::WrappedTargetException );
void removePropertyChangeListener( [in] string
        aPropertyName,   [in]
        com::sun::star::beans::XPropertyChangeListener
        aListener )
        raises(
        com::sun::star::beans::UnknownPropertyException,
        com::sun::star::lang::WrappedTargetException );
void addVetoableChangeListener( [in] string
        PropertyName,    [in]
        com::sun::star::beans::XVetoableChangeListener
        aListener )
        raises(
        com::sun::star::beans::UnknownPropertyException,
        com::sun::star::lang::WrappedTargetException );
void removeVetoableChangeListener( [in] string
        PropertyName, [in]
        com::sun::star::beans::XVetoableChangeListener
        aListener )
        raises(
        com::sun::star::beans::UnknownPropertyException,
        com::sun::star::lang::WrappedTargetException );
```

Interface *XPropertyState* makes it possible to query information about the state of one or more properties. The state contains the information if a value is available or void and if the value is stored in the object itself, or if a default value is to be used and if the value cannot be determined, due to ambiguity. Interface *XPropertyState* inherits from interface *XInterface*. Method *getPropertyState* returns the state of the property. Method *getPropertyStates* returns a sequence of the states of the properties, which are specified by their names. The order of the states is correlated to the order of the given property names. Method *setPropertyToDefault* sets the property to default value. The value depends on the implementation of this interface. For a bound property, the value must be changed before the change events are fired. For a constrained property, the vetoable event must be fired before the property value is changed. Method *getPropertyDefault* returns the default value of the property with name *PropertyName.* If no default exists, is not known, or is void, the return type is void.

TABLE 13.:   Interface *XPropertyState*

```
interface XPropertyState:
      com::sun::star::uno::XInterface
{
com::sun::star::beans::PropertyState getPropertyState(
      [in] string PropertyName )
      raises(
      com::sun::star::beans::UnknownPropertyException );
sequence<com::sun::star::beans::PropertyState>
      getPropertyStates( [in] sequence<string>
      aPropertyName )
      raises(
      com::sun::star::beans::UnknownPropertyException );
void setPropertyToDefault( [in] string PropertyName )
      raises(
      com::sun::star::beans::UnknownPropertyException );
[const] any getPropertyDefault( [in] string
      aPropertyName )
      raises(


      com::sun::star::beans::UnknownPropertyException,
      com::sun::star::lang::WrappedTargetException );
```

Interface *XPropertySetInfo* specifies a set of properties. The specification only describes the properties, it does not contain any values. Interface *XPropertySetInfo* inherits from interface *XInterface*. Method *getProperties* returns a sequence with all property descriptors, which are specified within this interface *XPropertySetInfo*. Method *getPropertyByName* returns the property with the specified name from the object. Method *hasPropertyByName* returns TRUE if a property with the specified name exists and otherwise FALSE is returned.

TABLE 14.:  Interface *XPropertySetInfo*

```
interface XPropertySetInfo:
    com::sun::star::uno::XInterface
{
  [const] sequence<com::sun::star::beans::Property>
      getProperties();
  [const] com::sun::star::beans::Property
      getPropertyByName( [in] string aName )
      raises(
      com::sun::star::beans::UnknownPropertyException );
  [const] boolean hasPropertyByName( [in] string Name );
}
```

The relation of the property set interfaces just described to the hierarchical container described above is characterized by the equality:

node.getPropertyValue (name) = node.getByName (name)

Other interfaces may also be supported in API 1511. Interface *XMultiPropertySet* is usually available. Interfaces *XPropertyAccess* or *XFastPropertySet* are possible extensions. Interface *XFastPropertySet*, if present, provides handles that are unique within the whole registry (or at least the whole subset in use). Typically, the property sets must not be dynamic, so these interfaces are not available on container nodes. On objects providing only read-only access the property set information will still reflect the access rights granted by the schema, but methods setPropertyValue(), setPropertyToDefault(), etc. throw an appropriate exception.

Interface *XMultiPropertySet* provides access to multiple properties. Interface *XMultiPropertySet* inherits from interface *XInterface.* Method *getPropertysetInfo* returns the interface *XPropertySetInfo*, which describes all properties of the object to which this interface belongs. NULL is returned if the object cannot or will not provide information about the properties. Method *setPropertyValues* sets the values to the properties with the specified names. The values of the properties must change before the bound events are fired. The values of the constrained properties should change after the vetoable events are fired and after if no exception occurs. Unknown properties are ignored. Method *getPropertyValues* returns a sequence of all values of the properties, which are specified by their names. The order of the values in the returned sequence will be the same as the order of the names in the argument. Method *addPropertiesChangeListener* adds an interface *XPropertiesChangeListener* to the specified property with the specified names. The implementation can ignore the names of the properties and fire the event on all properties. Method *removePropertiesChangeListener* removes an interface XPropertiesChangeListener from the listener list. This method is a noop if the listener is not registered. Method *firePropertiesChangeEvent* fires a sequence of Property Change Events to the specified listener.

TABLE 15.:  Interface *XMultiPropertySet*

```
interface XMultiPropertySet:
     com::sun::star::uno::XInterface
{
[const] com::sun::star::beans::XPropertySetInfo
     getPropertySetInfo();
void setPropertyValues( [in] sequence<string>
     PropertyNames,  [in] sequence<any> Values )
     raises(
     com::sun::star::beans::PropertyVetoException,
     com::sun::star::lang::IllegalArgumentException,
     com::sun::star::lang::WrappedTargetException );
[const] sequence<any> getPropertyValues( [in]
     sequence<string> aPropertyNames );
[oneway] void addPropertiesChangeListener( [in]
     sequence<string> aPropertyNames, [in]
     com::sun::star::beans::XPropertiesChangeListener
     xListener );
[oneway] void removePropertiesChangeListener( [in]
     com::sun::star::beans::XPropertiesChangeListener
     Listener );
[oneway] void firePropertiesChangeEvent( [in]
     sequence<string> aPropertyNames, [in]
     com::sun::star::beans::XPropertiesChangeListener


     xListener );
}
```

Interface *XPropertyAccess* makes it possible to access all multiple property values and to set them at once. In most cases this interface is in addition to interface *XPropertySet*. Interface *XPropertyAccess* is especially useful for remote communication because this interface lessens the number of calls for getting property values. This is especially important because these calls are necessarily synchronous. Another advantage of this interface is that conflicts are avoided if property value restrictions depend on the value of other properties

Interface *XPropertyAccess* inherits from interface *XInterface.* Method *getPropertyvalues* returns a sequence of all property values within the object in a single call. Method *setPropertyValues* sets the values of given properties. All properties, which are not contained in the sequence, are left unchanged.

TABLE 16.:   Interface *XPropertyAccess*

```
interface XPropertyAccess:
    com::sun::star::uno::XInterface
{
[const] sequence<com::sun::star::beans::PropertyValue>
    getPropertyValues();
void setPropertyValues( [in]
    sequence<com::sun::star::beans::PropertyValue>
    aProps )
    raises(
    com::sun::star::beans::UnknownPropertyException,


    com::sun::star::beans::PropertyVetoException,
    com::sun::star::lang::IllegalArgumentException,
    com::sun::star::lang::WrappedTargetException );
}
```

As indicated above, interface *XFastPropertySet* provides a fast way of accessing and changing property values. This interface is an extension to interface *XPropertySet*. Methods *getFastPropertyValue* and *setFastPropertyValue* use handles to access the property values instead of character strings.

TABLE 17.:   Interface *XFastPropertySet*

```
interface XFastPropertySet:
     com::sun::star::uno::XInterface
{
void setFastPropertyValue( [in] long nHandle,  [in] any
     aValue )
     raises(
     com::sun::star::beans::UnknownPropertyException,
     com::sun::star::beans::PropertyVetoException,
     com::sun::star::lang::IllegalArgumentException,
     com::sun::star::lang::WrappedTargetException );
[const] any getFastPropertyValue( [in] long nHandle )
     raises(
     com::sun::star::beans::UnknownPropertyException,
     com::sun::star::lang::WrappedTargetException )
}
```

Batch Changes and Notifications Support by API 1511

Component 1501 can obtain objects that provide write access to configuration tree. These objects collect the changes made and transfer the changes to proxy 1511 all at one time. An object that collects changes, which are eventually committed offers interface *XChangesBatch*. Interface *XChangesBatch* inherits from interface *XInterface*. Method commitChanges commits locally accumulated changes to become persistent and makes the changes available to other clients that access the configuration tree. Interface *XChangesBatch* also offers methods to query the accumulated changes, e.g., methods *hasPendingChanges* and *getPendingChanges.*

Method *getChanges()* in interface *XChangesSet* provides access to a set or sequence of change descriptions and a context. Change descriptions are just structures having accessor (path to changed item), new Value and old Value. The context specifies the common root of all changes. A set of change descriptions obtained by interface XChangesSet obtained from an object supporting interface *XChangesBatch*, have the source object as root. Other services may have different specifications.

Any accessor object also offers compound notifications through interface *XChangesNotifier*. A batch of changes originating from either a local method *XChangesBatch::commitChanges()* or a remote synchronization broadcast a Changes Event to interface *XChangesListeners*. A changes event again contains a set of interface *XChangesSet* change descriptions. An interface *XChangesListener* registered for a composite registry node, is notified of any change in the subtree.

For completeness, the property set and container event interfaces are also supported (e.g. for clients interested in only a single registry entry).

Additional Interfaces of API 1511

The initial access point for configuration server is a service *ConfigurationProvider.* Service *ConfigurationProvider* implements interfaces to control the connection to configuration server 336 and to allow explicitly synchronizing a local registry copy for offline operation. Service *ConfigurationProvider* also offers an interface *XConfigurationProvider,* which has factory methods *createConfigurationAccess()* and *createConfigurationUpdate()*to obtain a Name Hierarchy object for a configuration subtree with or without write access. Service *ConfigurationProvider* also may offer an interface to provide hints to a caching implementation, which configuration entries will soon be needed and therefore should be preloaded. Finally, service *ConfigurationProvider* includes interfaces for importing and exporting a registry subtree as XML.

Object Model for API 1511

As mentioned above, access to configuration server 336 is started through one-instance service *ConfigurationProvider*. This object holds the master copy of the registry for component 1501. This object coordinates overlapping requests and maintain a pooled notification link to server 336. Through interface *XConfigurationProvider* interface, client components can obtain accessor objects for either read-only or writing access. The object model can be illustrated using the MVC pattern: service *ConfigurationProvider* serves as the global model; A service *ConfigurationAccess* provides a view onto a specific part this model. A service *ConfigurationUpdate* obtained from service *ConfigurationProvider*, provides a derived model (for a specific part of the registry) for use by a controller. If additional clients need to observe this local model before it is integrated into the master registry, they can attach to the service *ConfigurationUpdate* or its descendents.

Read-only vs. Write access

An instance of the read-only service *ConfigurationAccess* provides a direct view on a subtree of the 'master' registry. Service *ConfigurationAccess* implements services *NameHierarchy* for navigating the subtree and reading values. Where appropriate the Property Set interfaces are available to query more schema-related information. The event interfaces mentioned above, are available on service *ConfigurationAccess*. The event interfaces can be used to receive notifications about changes either local or from a remote server.

Navigation to a descendant element obtains an instance of service *ConfigurationAccess* for the subtree that also directly reads the master registry. To make changes to the registry, an instance of service *ConfigurationUpdate* must be obtained. This service offers the same interfaces as service *ConfigurationAccess*, augmented by additional interfaces for write access.

This object behaves like a local copy, detached from the 'master' registry in proxy 1511. This object collects changes made through this object and descendant objects obtained from it. This object implements interface *XChangesBatch*, which must be used to integrate the accumulated Changes Set into the master registry tree in proxy 1511.

Navigation to descendant objects therefore provides update access, but updates initially affect only the ChangesSet of the original ConfigurationUpdate object.

Event handlers registered on such an object are notified of changes immediately. This means that such changes are not persistent if they are not committed in the end.

On an instance of service *ConfigurationUpdate*, the Property Set interfaces permit changes to value or state of a property. Also, interface *XNameReplace* may be used to substitute a whole subtree. For (extensible) container nodes interface *XNameContainer* permits addition or removal of entries. As only complete subtrees having the appropriate structure for an entry may be added or substituted, a container node also supports a factory interface that allows creation of such a subtree, initialized to suitable defaults. In one embodiment, this factory interface is an interface *XSingleServiceFactory*.

Forced use of interface *XChangesBatch* ensures that clients support caching implementations and remote notification mechanisms to operate efficiently.

An explicit preferences user interface keeps service *ConfigurationUpdate* open until committing or aborting the update on close. Clients that frequently update non-shared settings may just operate on their local copy, commiting changes only rarely (maybe at session close). Clients that only need read-only access can always operate on current data.

Commiting changes through *XChangesBatch* partially supports transaction semantics. They are atomic and isolated in the sense that other local clients see only either old or new values. Registered observers are notified of the changes during this change. Committing updates through different ConfigurationUpdates serializes these updates. A collection of changes originating from the server behaves similarly.

APIs FOR USE WITH ONE EMBODIMENT OF UCB 113

An overview of the framework for implementing one embodiment of information tier 303 in network portal system 100 is presented using interface definition language files. Via these interfaces, the following operations can be achieved: content is provided; content is obtained from content providers; content is defined; properties of content are set, updated, read, deleted; components are notified about changes in content. The interfaces may be implemented in software and/or hardware components. Moreover, computer code implementing the interfaces can be contained in a computer program product. Also, interfaces described elsewhere in this detailed description could also be used as appropriate.

**CONTENT PROVIDING.**

Network portal system 100 provides services to register and maintain implementations of content provider systems. Content provider systems are classified according to what uniform resource locator (URL) schemes they implement. For Web sites, the scheme is HTTP. For IMAP or FTP sites, the scheme is (respectively) imap or ftp.

Thus, given a URL, the scheme may be obtained. If a content provider system is registered with the corresponding URL scheme then content may be obtained for the URL.

The main network portal service that manages universal content providers 331 is a service *UniversalContentBroker,* which is a one-instance service, and which is universal content broker 113. In one embodiment, as presented below, service *UniversalContentBroker* implements four interfaces: 1) an interface *XContentProvider;* 2) an interface *XContentProviderManager;* 3)an interface *XContentIdentifierFactory;* and an interface *XComponent*, each of which is described more completely below. In the following description, the name of the interface is indicative of the type of the interface, e.g. interface *XContentProvider* is an interface used to provide content.

TABLE 18.:  Service *UniversalContentBroker*

```
service UniversalContentBroker
{
interface com::sun::star::lang::XComponent;
interface com::sun::star::ucb::XContentProvider;
interface com::sun::star::ucb::XContentProviderManager;
interface
     com::sun::star::ucb::XContentIdentifierFactory;
};
```

Interface *XComponent* must be implemented to make it possible to resolve cyclic object references. Cyclic object references may occur if content provider implementations hold references to universal content broker 113. Universal content broker 113 itself always holds the references to content providers in universal content providers 113. If universal content broker 113 is released, method *dispose* in interface *XComponent* must be called at universal content broker 113. The implementation of method *dispose* calls method *disposing* in interface *XEventListener*, on the registered listeners, i.e., the universal content providers 331 registered with universal content broker 113, and releases the appropriate object references. On the other hand, the implementation of method *disposing* in interface *XEventListener* must release the appropriate references, as described more completely below.

Interface *XcontentProvider* provides access to all content, independent of the kind of content, provided by registered content providers in universal content providers 331. Interface *XContentProviderManager* provides access to a set of content providers registered with universal content broker 113. Interface *XContentIdentifierFactory* creates content identifiers. Interface *XContentIdentifier* implements methods for maintaining a URL.

TABLE 19.: Interface *XCOMPONENT*

```
interface XEventListener;
interface XComponent: com::sun::star::uno::XInterface
{
void dispose();
void addEventListener([in] XEventListener xListener );



void removeEventListener([in] XEventListener aListener
    );
};
```

Interface *XComponent* inherits from Interface *XInterface.* An owner of an object calls method *dispose* in interface *XComponent* to dispose of the object. Only the owner of the object calls method *dispose* if the object should be destroyed. All objects and components must release the references to the objects. If the object is a broadcaster, all listeners are removed and method *XEventListener::disposing()* is called on all listeners.

Due to the importance of the concept of method *XComponent::dispose(),* a figurative example is provided. Imagine there was a hole in the floor and some people around it were holding a box (our component). Everyone who holds the box for a longer time than just temporarily (i.e. to put something in or get something out) has to watch a light bulb, which is attached to the box (listening to event *XEventListener::disposing()*). Now, when the owner of the box switched the light on (calling method *XComponent::dispose()*), everybody holding the box had to take their hands off (clear the interface handles). If and only if everyone did that, did the box fall (getting deleted). However, only the owner is allowed to switch the light on! After method *dispose is* called, the instance has to throw exception *DisposedException* for all non-event-method calls and event-method calls have to be ignored.

The following is an example of one embodiment.

```
void dispose()
    {
    // make a copy
    Listener [] aTmpListeners = MyListeners.clone();

    // clear all listeners (against recursion)
    MyListeners.clear();

    // call all listeners
    EventObject aEvt = new EventObject();
    aEvt.xSource = this;
    for( i = 0; i &amp;lt;aTmpListeners.length; i++ )
    aTmpListeners[i].disposing( aEvt );
    }
```

Method *addEventListener* in interface *XComponent* adds an event listener to the listener list for the object. The broadcaster fires the disposing method of this listener if method *XComponent::dispose() is* called. Conversely, method *removeEventListener* removes an event listener from the listener list for the object.

Interface *XEventListener* is a tagging interface that all event listener interfaces must extend. Interface *XEventListener* inherits from interface *XInterface*. Method *disposing is* called when an event broadcaster is about to be disposed. All listeners and all other objects, which reference the broadcaster, should release the references

TABLE  20.:  INTERFACE  *XEventListener*

```
interface XEventListener:
    com::sun::star::uno::XInterface
{



void disposing( [in] com::sun::star::lang::EventObject
    Source );
};
```

Structure *EventObject* specifies the base for all event objects and identifies the source of the event, i.e., the object that fired the event.

TABLE 21.:  Structure *EventObject*

```
struct EventObject
{
com::sun::star::uno::XInterface Source;
};
```

Interface *XInterface* is the base interface for other interfaces and provides lifetime control by reference counting. Interface *XInterface* also provides the possibility of querying for other interfaces of the same logical object. Logical object in this case means the interfaces that actually can be supported by internal, i.e., aggregated, physical objects.

Method *queryInterface* in interface *XInterface* queries for a new interface, specified by the Type, to an existing object. Method *acquire* increases a reference counter by one, while method *release* decreases the reference counter by one. When the reference counter reaches a value of zero, the object is deleted.

TABLE 22.: INTERFACE *XInterface*

```
interface XInterface
{
any queryInterface( [in] type aType );
[oneway] void acquire();
[oneway] void release();
};
```

The real lifetime of an object is controlled by references kept on interfaces of the object. There are two distinct meanings in keeping a reference to an interface: the first meaning is to own the object, and the second meaning is to know the object.

To prevent cyclic references from resulting in failure to destroy an object, references of interfaces to the object are allowed only (i) by the owner, (ii) if the reference is very temporary, or (iii) you are registered as an Event Listener at that object and cleared the reference when method *disposing* is called.

Service *UniversalContentBroker* implements interface *XContentProvider*. Interface *XContentProvider* inherits from interface *XInterface*. Through interface *XContentProvider*, a content provider in universal content providers 331 may generate new content for all URL schemes for which the content provider is registered with universal content broker 113, and a client does not have to query all content providers to determine which content provider should be used. Content is generated for universal content broker 113 via method *queryContent*, which takes an identifier of type interface *XContentIdentifier,* which is described more completely below, and returns the content if the given identifier matches the content provided by the implementation of interface *XContentProvider.* If the given identifier does not match an identifier for content provided by the implementation of this interface, exception *IllegalIdentifierException* is thrown.

## TABLE 23.: INTERFACE *XCONTENTPROVIDER*

```
interface XContentProvider:
      com::sun::star::uno::XInterface
{
com::sun::star::ucb::XContent queryContent(
  [in] com::sun::star::ucb::XContentIdentifier
      Identifier )
      raises (
      com::sun::star::ucb::IllegalIdentifierException
      );
long compareContentIds(
[in] com::sun::star::ucb::XContentIdentifier Id1,
[in] com::sun::star::ucb::XContentIdentifier Id2 );
};
```

Method *compareContentIds* in interface *XContentProvider* is used for several reasons. It may be necessary to check the object identity of UCB contents, e.g., if a software system manages the HTTP cache as a list of interfaces *XContent* (Interface *XContent* is described below) and one URL is requested from this cache, it is necessary to identify the right reference within this list, if the reference is present there. This can't be done by comparing the string representation of interface *XContentIdentifier* because the same content can be referenced by different URLs. The provider is the only one, who can perform this identity check in the right semantic way. For example:
      id1 :=
ucb.createContentIdentifier("http://my.domain")
      id2 :=
ucb.createContentIdentifier("http://167.345.12.1")
      if(id1.getContentIdentifier() ==
id2 . getContentIdentifier ())
      is never be true, and is a meaningless comparison
      if (ucb.compareContentIds(id1, id2)
      could be true, this tests the object identity.

One embodiment of exception *IllegalIdentifierException* is presented in Table 24. This exception is thrown to indicate an illegal content identifier

TABLE 24.: Exception *IllegalIdentifierException*

```
exception IllegalIdentifierException:
com::sun::star::uno::Exception
{
};
```

Exception *IllegalIdentifierException* in interface *XContentProvider* inherits from exception *Exception* in Table 25. Exception *Exception* is the basic exception and all exceptions are derived from this exception.

Message specifies a detailed message of the exception or an empty string if the callee does not describe the exception. Context is an object that describes the reason for the exception. Context may be NULL if the callee does not describe the exception

TABLE 25.:  Exception *Exception*

```
exception Exception
{
  string Message;
  com::sun::star::uno::XInterface Context;
};
```

Content provider objects implementing interface *XContentProvider* may register and de-register with universal content broker 113 with corresponding URL schemes using interface *XContentProviderManager*.

Method Input parameter *Provider* is the content provider to register. Input parameter *Scheme* is the URL scheme for the content provider. If input parameter *ReplaceExisting* is true, a provider possibly registered for the given scheme is replaced. The replaced provider is not deregistered automatically. If the superseding provider gets deregistered, the superseded one becomes active again. If input parameter *ReplaceExisting is* false, the input content provider is not registered, if another provider is already registered for the given URL scheme. If a content provider object attempts to register a URL scheme that already is registered with universal content broker 113, method *registerContentProvider* throws an exception *DuplicateProviderException,* which is further defined in Table 28.

TABLE 26.: Interface *XContentProviderManager*

```
interface XContentProviderManager:
    com::sun::star::uno::XInterface
{
sun::star::ucb::XContentProvider
    registerContentProvider( [in]
    com::sun::star::ucb::XContentProvider Provider,
    [in] string Scheme, [in] boolean ReplaceExisting )
    raises(
    com::sun::star::ucb::DuplicateProviderException );
[oneway] void deregisterContentProvider(
[in] com::sun::star::ucb::XContentProvider Provider,
[in] string Scheme );
sequence<com::sun::star::ucb::ContentProviderInfo>
    · queryContentProviders();
com::sun::star::ucb::XContentProvider
    queryContentProvider([in] string Scheme );
};
```

The whole list of registered content providers may be obtained with their corresponding schemes via method *queryContentProviders* in interface *XContentProviderManager*. Also, interface *XContentProviderManager* makes it possible to query which registered content provider supports a particular URL scheme.

As used herein a sequence is a pointer to a structure which has the following members:void * pElements; long nElements; long nRefCount. The pElements are a memory area that contains nElements elements.

Structure *ContentProviderInfo* in Table 27 contains a reference to the content provider itself and the URL scheme for which the content provider is registered.

TABLE 27.:   STRUCTURE *ContentProviderInfo*

```
struct ContentProviderInfo
{
com::sun::star::ucb::XContentProvider ContentProvider;
string Scheme;
};
```

Exception *DuplicateProviderException* inherits from exception *Exception.* Exception *DuplicateProviderExcep-*

*tion* is thrown to indicate that a content provider with the same identifier already was registered with a content provider manager.

TABLE 28.:   Exception *DuplicateProviderException*

```
exception DuplicateProviderException:
      com::sun::star::uno::Exception
{
};
```

Interface *XContentIdentifierFactory* takes a uniform resource identifier, e.g., a URL, for content and returns a content identifier for that content. Interface *XContentIdentifierFactory* inherits from interface *XInterface.*

TABLE 29.:   Interface *XContentIdentifierFactory*

```
interface XContentIdentifierFactory:
      com::sun::star::uno::XInterface
{
com::sun::star::ucb::XContentIdentifier
      createContentIdentifier( [in] string ContentId );
};
```

Interface *XContentIdentifier* also inherits from interface *XInterface.* Method *getContentIdentifier* of interface *XContentIdentifier* returns a content identifier string that is a valid uniform resource identifier. See for example, RFC 2396, which is incorporated herein by reference as an example of the level of skill with respect to uniform resource identifiers. If a content provider implements some existent URI scheme, e.g., a content provider offering access to a file system would implement the 'file' scheme, and a content provider offering access to IMAP servers would implement the 'imap' scheme, the content identifier strings should use that scheme. If on the other hand a content provider offers access to content for which no appropriate URI scheme exists, a vendor-specific URL scheme starting with 'vnd.' must be created. The URL scheme associated with a content provider may be retrieved using method *getContentProvider-Scheme*. This string is calculated from the content identifier string and must be lower-case, in one embodiment. The string returned is the URL scheme the content provider is registered for. For example, a provider for FTP contents uses ftp-URL's as content identifiers. The content provider scheme, sometimes called URL scheme, for all contents provided by that provider is "ftp".

TABLE 30.: Interface *XContentIdentifier*

```
interface XContentIdentifier:
        com::sun::star::uno::XInterface
{
string getContentIdentifier();
string getContentProviderScheme();
};
```

Interface *XContentCreator* is a creator for new (persistent) contents, like file system folders ). The following is a pseudo code example of creation of a new (persistent) content:

    newObject = creator.createNewContent( ... )

    initialize the new object ( i.e.

        newObject.Propertyl = ... )

The new content executes the command *insert* that commits the data and makes the new content persistent. Interface *XContentCreator* inherits from interface *XInterface.* Method *queryCreatableContentsInfo* returns a list with information about the creatable contents. Method *createNewContent* creates new content of a given type.

TABLE 31.:  Interface *XContentCreator*

```
interface XContentCreator:
        com::sun::star::uno::XInterface
{
sequence<com::sun::star::ucb::ContentInfo>
        queryCreatableContentsInfo();
com::sun::star::ucb::XContent createNewContent(
[in] com::sun::star::ucb::ContentInfo Info );
};
```

Structure *ContentInfo* is defined in TABLE 32. This is a structure for information about contents. Type is a type identifier string for the content, i.e., a MIME type. Attributes is any flags providing additional information about the implementation of interface *XContentCreator.*

TABLE 32.: Structure *ContentInfo*

```
struct ContentInfo
{
string Type;
long Attributes;
};
```

GETTING CONTENT FROM A PROVIDER SYSTEM.

Content is provided by implementing the interfaces described above. In this example, the runtime environment provides a function *getGlobalServiceManager* that can be used in instantiate service *UniversalContentBroker*. Next object *identifierFactory* implements interface *XContentIdentifierFactory*, and object *provider* implements interface *XContentProvider*. As described above, a content identifier is obtained by giving a URL to the content to method *createContentIdentifier* of interface *XContentIdentifierFactory*. A content object is created by passing the content identifier to method *queryContent* of interface *XContentProvider*.

TABLE 33.: Example of Creating Content using UCB interfaces.

```
globalManager := getGlobalServiceManager()
ucb :=
     globalManager.createInstance("com.sun.star.ucb.Uni
     versalContentBroker")
identifierFactory :=
     ucb.queryInterface("com.sun.star.ucb.XContentIdent
     ifierFactory")
provider :=
     ucb.queryInterface("com.sun.star.ucb.XContentProvi
     der")
identifier := identifierFactory.
     createContentIdentifier("ftp://rimmer/pub")
content := provider.queryContent(identifier)
```

Content objects.

A content provider provides content objects that implement a set of interfaces that define: the type of content;

notification of when content changes state; how content may be created from this content; what children this content has; what commands may be performed on the content; and what properties may be obtained. Note that not all aspects of the above may be defined. It will obviously depend on the type of content created.

Interface *XContent* specifies a content with a type and an identifier, which is able to manage listeners for special content events. Method *getIdentifier* returns an identifier for the content, while method *getContentType* returns a content type string, i.e., a MIME type. In addition, clients of the content may add themselves as listeners on the content using method *addContentEventListener* and can remove themselves as listeners by using method *remove-ContentEventListener*.

TABLE 34.:   Interface *XCONTENT*

```
interface XContent: com::sun::star::uno::XInterface
{
com::sun::star::ucb::XContentIdentifier
     getIdentifier();
string getContentType();
[oneway] void addContentEventListener( [in]
     com::sun::star::ucb::XContentEventListener
     Listener );
[oneway] void removeContentEventListener( [in]
     com::sun::star::ucb::XContentEventListener
     Listener );
};
```

When action on content is performed, registered clients are notified by the content calling interface *XContentEventListener* that inherits from interface *XEventListener*. Notification occurs when content is inserted, removed, deleted, changes, or matches search criteria.

Content is inserted, for example, when a child is inserted into the content. For example, if a directory folder is opened its content may be inserted asynchronously into the folder. A client responsible for the display of this content may then update its view according to the new content.

When content is removed but not deleted, a removed event is broadcast. An example of this may occur if child content is moved to a different parent.

A deleted event is broadcast to all listeners when the content is physically destroyed. The content no longer persists.

An exchanged event is broadcast to all listeners when the content has changed its identity. For example if a directory folder has changed its name.

Method *contentEvent* is called with structure *ContentEvent* whenever content wishes to notify the registered listeners for the content of a change or changes.

## TABLE 35.: Interface *XContentEventListener*

```
interface XContentEventListener:
     com::sun::star::lang::XEventListener
{
void contentEvent( [in] ContentEvent evt );
};
```

One embodiment of structure *ContentEvent* that inherits from structure *EventObject* is presented below. An action member is filled as follows:

| | |
|---|---|
| ContentAction::INSERTED content. | - The inserted child |
| ContentAction::REMOVED content. | - The removed child |
| ContentAction::DELETED | - The deleted content. |
| ContentAction::EXCHANGED | - The exchanged content. |

A content identifier member must be filled according to the action field, e.g., the id of the parent into which a child was inserted. This member must be filled as follows:

| | |
|---|---|
| ContentAction::INSERTED inserted content. | - Id of the parent of the |
| ContentAction::REMOVED removed content. | - Id of the parent of the |
| ContentAction::DELETED content. | - Id of the deleted |
| ContentAction::EXCHANGED exchanged content. | - Previous(!) id of the |

TABLE 36.: Structure *ContentEvent*

```
      struct ContentEvent:
com::sun::star::lang::EventObject
      {
      long Action;
      XContent Content;
      XContentIdentifier Id;
      };
```

A content object that has children can implement interface *XIndexAccess* that inherits from interface *XElementAccess*. These interfaces define a general set of APIs to access collections. Interface *XIndexAccess* may be used for content to return children that are also content. The type any returned from method *getByIndex* might be cast according to interface *XContent* if it is valid to do so. Thereby a directory or folder content may return its children in this way.

Interface *XIndexAccess* provides access to the elements of a collection through an index. This interface should only be used if the data structure, itself, is indexed. Method *getCount* returns the number of elements in the content object. Method *getByIndex* returns the element at the specified index. This method throws exception *IndexOutOfBoundsException* if the index is not valid; or exception *WrappedTargetException* if the implementation has internal reasons for exceptions.

TABLE 37.: Interface *XIndexAccess*

```
interface XIndexAccess:
      com::sun::star::container::XElementAccess
{
[const] long getCount();
[const] any getByIndex( [in] long Index )
raises(
      com::sun::star::lang::IndexOutOfBoundsException,
      com::sun::star::lang::WrappedTargetException );
};
```

Interface *XElementAccess* is the base interface of all collection interfaces and inherits from interface *XInterface*. Method *getElementType* returns the type of the elements. A void return means that it is a multi-type container and cannot determine the exact types with this interface. Method *hasElements* returns true if the content object contain elements, and otherwise false. Interface XIdlClass and the other interfaces used by it are included at the end of the detailed description for completeness.

TABLE 38.:   Interface *XElementAccess*

```
interface XElementAccess:
     com::sun::star::uno::XInterface
{
[const] TYPE_XIDLCLASS getElementType();
  [const] boolean hasElements();
};
```

Exception *IndexOutOfBounds* is thrown to indicate that a container has been accessed with an illegal index. The index is either negative or greater than or equal to the count of the elements.

TABLE 39.:   Exception *IndexOutOfBounds*

```
exception IndexOutOfBoundsException:
     com::sun::star::uno::Exception
{
};
```

Exception *WrappedTargetException* is a checked exception that wraps an exception thrown by the original target. Normally this exception is declared for generic methods.

TABLE 40.:   Exception *WrappedTargetException*

```
exception WrappedTargetException:
     com::sun::star::uno::Exception
{
  any TargetException;
};
```

In this embodiment, two interfaces are used to execute commands on content objects. Interface *XCommand-*

*TaskProcessor* is used if asynchronous operations are desired, while interface *XCommandProcessor* is simpler and does not support asynchronous operations.

Interface *XCommandSaskProcessor* creates tasks for commands to be executed by the implementation of this interface and provides access to information about supported commands. This interface inherits from interface *XInterface*. Method *createCommandTask* creates a task for executing a command. Input parameter *TheCommand* is the command to execute. Input parameter *ResultAcceptor* is the object used to notify/set partial/ whole result set. This may be an empty interface, if the task does not produce results. Parameter *Environment* is the execution environment. This method returns the command task. Method *getCommandsInfo* returns an interface providing access to information about the commands supported by the implementation of this interface.

TABLE 41.: Interface *XCommandTaskProcessor*

```
interface XCommandTaskProcessor:
      com::sun::star::uno::XInterface
{
com::sun::star::ucb::XCommandTask createCommandTask(
      [in] com::sun::star::ucb::Command TheCommand, [in]
      com::sun::star::ucb::XResultAcceptor
      ResultAcceptor, [in]
      com::sun::star::ucb::XContentTaskEnvironment
      Environment );
com::sun::star::ucb::XCommandInfo getCommandsInfo();
      };
```

Interface *XCommandTask* defines a task for executing commands. Interface *XCommandTask* inherits from interface *XContentTask.* Method *getCommand* returns the command to execute by the task.

TABLE 42.: Interface *XCommandTask*

```
interface XCommandTask:
      com::sun::star::ucb::XContentTask
{
com::sun::star::ucb::Command getCommand();
      };
```

Interface *XContentTask* defines a task, which can be processed synchronously or asynchronously in a specific execution environment. This interface inherits from interface *XInterface*. Method *start* starts asynchronous execution of a task. In general, the task will is not completed on return of this method. If the task is performed asynchronously, event notification occurs through interface *XContentTaskEnvironment.* Method *execute* executes a task synchronously.

The task always is completed on return of this method. Method *abort* ends execution of a task. Method *getStatus* returns the current status of a task. Method *getEnvironment* returns the environment of the task. Interface *XContentTask* is a super interface that is used by both interface *XCommandTask* and interface *XPropertyTask.*

TABLE 43.: Interface *XContentTask*

```
interface XContentTask:
      com::sun::star::uno::XInterface
{
[oneway] void start();
void execute()
    raises( com::sun::star::uno::Exception );
  [oneway] void abort();
com::sun::star::ucb::ContentTaskStatus getStatus();
com::sun::star::ucb::XContentTaskEnvironment
      getEnvironment();
};
```

Enumeration *ContentTaskStatus* contains the possible task states. State CREATED means the task was just created and is waiting to be processed. This is the initial task state. No event is send to a task client to indicate this state (there is no change). State RUNNING means the task processing was just started. State DONE means the task was finished successfully. State ABORTED means the task was finished unsuccessfully, i.e. termination from "outside", or due to an unrecoverable error

TABLE 44.: Enumeration *ContentTaskStatus*

```
enum ContentTaskStatus
{
CREATED,
RUNNING,
DONE,
ABORTED
};
```

Interface *XContentTaskEnvironment* defines the execution environment of a task. This interface inherits from interface *XInterface*. Method *getClient* returns the task's client. Method *getInteractionHandler* returns the task's interaction handler. Method *getProgressHandler* returns the task's progress handler. Interface *XContentTaskEnvironment* provides a context for asynchronous tasks (commands and property operations) to handle errors and notify the listeners when tasks have changed status. An implementation of interface *XContentTaskEnvironment* also includes the ability to set a reference to interface *XContentTaskClient*, which is used provide task status feedback.

TABLE 45.: Interface *XContentTaskEnvironment*

```
interface XContentTaskEnvironment:
     com::sun::star::uno::XInterface
com::sun::star::ucb::XContentTaskClient getClient();
com::sun::star::task::XInteractionHandler
     getInteractionHandler();
com::sun::star::ucb::XProgressHandler
     getProgressHandler();
};
```

Interface *XContentTaskClient* defines a client for content tasks. Interface *XContentTaskClient* inherits from interface *XEventListener*. Method *contentEventTask* is called to notify listeners of a status change of a content task via a structure *ContentTaskEvent.*

TABLE 46.: INTERFACE *XContentTaskClient*

```
interface XContentTaskClient:
     com::sun::star::lang::XEventListener
{
void contentTaskEvent( [in]
     com::sun::star::ucb::ContentTaskEvent Event );
};
```

Structure *ContentTaskEvent* inherits from structure *EventObject*. The structure contains the old status and the new status.

TABLE 47.:   Structure ContentTaskEvent

```
struct ContentTaskEvent:
      com::sun::star::lang::EventObject
{
com::sun::star::ucb::ContentTaskStatus OldStatus;
com::sun::star::ucb::ContentTaskStatus NewStatus;
};
```

Interface *XInteractionHandler* handles an interaction request. This interface inherits from interface *XInterface*.

TABLE 48.:  Interface *XInteractionHandler*

```
interface XInteractionHandler:
      com::sun::star::uno::XInterface
{
void handle( [in]
      com::sun::star::task::XInteractionRequest Request
      );
};
```

Interface *XInkeractIonRequest* gets information about the request itself.

TABLE 49.:Interface *XInteractionRequest*

```
interface XInteractionRequest:
     com::sun::star::uno::XInterface
{
[const] any getRequest();
 [const]
     sequence<com::sun::star::task::XInteractionContinu
     ation> getContinuations();
};
```

Interface *XInteractionContinuation* inherits from interface *XInterface*. Method *select* selects a way of continuing from an interaction request given a choice of various interfaces *XInteractionContinuation*

TABLE 50.:Interface *XInteractionContinuation*

```
interface XInteractionContinuation:
     com::sun::star::uno::XInterface
{
void select();
};
```

Interface *XProgressHandler* handles a tasks notification that the task has made some progress. Method *push* notifies the handler that the task has started some new activity, possibly a sub-activity of another activity already making progress. Therefore, these notifications behave in a stack-like manner. Method *update* notifies the handler that the task's current activity is making progress Method *pop* notifies the handler that the task has finished its current activity.

TABLE 51.:   INTERFACE *XProgressHandler*

```
interface XProgressHandler:
        com::sun::star::uno::XInterface
{
void push([in] any Status);
void update([in] any Status);
void pop();
};
```

Structure *Command* contains a command. Name contains the name of the command. Handle contains an implementation-specific handle for the command. Handle may be -1 if the implementation has no handle. Argument contains the argument of the command.

TABLE 52.:   Structure *Command*

```
struct Command
{
string Name;
long Handle;
any Argument;
};
```

Interface *XResultAcceptor* defines an acceptor for results. This interface offers two communication channels for the propagation of the results. The first channel is used to propagate results as soon as the results are available. The second channel is used to supply the complete result set once. Interface *XResultAcceptor* inherits from interface *XEventListener.* Method *usePartialResultChannel* indicates what channel to use for the propagation of results. If the implementation of this interface is interested in getting any partial result as soon as it is produced by the result supplier, this method should return TRUE. In this case, the complete result set will not be supplied by the supplier. If the implementation is only interested in getting the complete result of the operation this method should return FALSE. The supplier will not propagate any partial results in this case. Method *partialResults* is called to supply a partial result, i. e., a single child just processed while populating a container). Method *completeResult is* called to supply the complete result, i.e., a sequence containing all children of a container .

TABLE 53.:  INTERFACE *XResultAcceptor*

```
interface XResultAcceptor :
      com::sun::star::lang::XEventListener
{
boolean usePartialResultChannel();
void partialResult( [in] any Result );
void completeResult( [in] any Result );
};
```

Interface *XCommandInfo* provides access to information about executable commands. Method *getCommands* returns a sequence of all commands supported by the object. Method get*CommandInfoByName* returns the command with the specified name from the object. This method throws exception *UnsupportedCommandException* if the command name is unknown to the object. Method *getCommandInfoByHandle* returns the command with the specified handle from the object and throws exception *UnsupportedCommandException* if the command handle is unknown to the object. Method *hasCommandByName* returns TRUE if a command with the specified name is supported, and otherwise FALSE is returned. Method *hasCommandByHandle* returns TRUE if a command with the specified handle is supported, and otherwise FALSE is returned.

TABLE 54.: Interface *XCommandInfo*

```
interface XCommandInfo: com::sun::star::uno::XInterface
{
[const] sequence<com::sun::star::ucb::CommandInfo>
     getCommands();
[const] com::sun::star::ucb::CommandInfo
     getCommandInfoByName([in] string Name )
raises(
     com::sun::star::ucb::UnsupportedCommandException
     );
[const] com::sun::star::ucb::CommandInfo
     getCommandInfoByHandle( [in] long Handle )
raises(
     com::sun::star::ucb::UnsupportedCommandException
     );
[const] boolean hasCommandByName( [in] string Name );
[const] boolean hasCommandByHandle( [in] long Handle );
};
```

Structure *CommandInfo* describes a command. Name contains the name of the command. Handle contains an implementation-specific handle for the command. Handle may be -1 if the implementation has no handle. ArgType contains the type of argument of the command.

TABLE 55.:  STRUCTURE *CommandInfo*

```
struct CommandInfo
{
string Name;
long Handle;
TYPE_XIDLCLASS ArgType;
};
```

Exception *UnsupportedCommand* is thrown to indicate that the command is not known by the implementation of an interface.

TABLE 56.: Exception *UnsupportedCommand*

```
exception UnsupportedCommandException:
      com::sun::star::uno::Exception
{
};
```

The above interfaces are associated with interface *XCommandTaskProcessor.* Interface *XCommandProcessor* defines a processor for synchronous commands, which are executed in a specific execution environment. Interface *XCommandProcessor* inherits from interface *XInterface*. Method *createCommandIdentifier* creates a unique identifier for a command, which can be used to abort the execution of the command associated with that identifier. Note that it is generally not necessary to obtain a new id for each command, because commands are executed synchronously. So the id for a command is valid again after a command previously associated with this id has finished. Preferably, only one identifier per thread is obtained and that identifier is assigned to every command executed by that thread. Method execute executes a command. Parameter *aCommand* is the command to execute. Parameter *CommandId* is a unique id for the command. This identifier was obtained by calling method *createCommandIdentifier*. A value of zero can be used, if the command never shall be aborted. Parameter *Environment* is the execution environment. Method execute returns the result according to the specification of the command. Exception *CommandAbortedException* is thrown to indicate that the execution of the command was aborted. Method abort ends execution of the command associated with the given id. Parameter *CommandId* was defined above.

TABLE 57.: Interface *XCommandProcessor*

```
interface XCommandProcessor :
      com::sun::star::uno::XInterface
{
long createCommandIdentifier();
any execute( [in] Command aCommand,  [in] long
      CommandId,  [in] XCommandEnvironment Environment )
raises ( com::sun::star::uno::Exception,
      CommandAbortedException );
[oneway] void abort( [in] long CommandId );
};
```

Interface *XCommandEnvironment* defines the environment of a command. Interface *XCommandEnvironment* inherits from interface *XInterface.* Method *getInteractionHandler* returns the command's interaction handler. Method *getProgressHandler* returns the command's progress handler.

TABLE 58.:  Interface *XCommandEnvironment*

```
interface XCommandEnvironment :
     com::sun::star::uno::XInterface
{
com::sun::star::task::XInteractionHandler
     getInteractionHandler();
com::sun::star::ucb::XProgressHandler
     getProgressHandler();
};
```

The above interfaces present alternative ways to process commands associated with content. Other actions associated with content concerns properties associated with the content.

The querying of property types is performed through interface *XMultiPropertySet* that was described above and is incorporated herein by reference. Thus, a content object also must implement this interface.

Interface *XPropertyTaskProcessor* inherits from interface *XInterface.* This interface encapsulates behavior similar to interface *XCommandTaskProcessor.* Interface *XPropertyTaskProcessor* creates tasks for getting and for setting properties of the implementation of this interface and provides access to information about the supported properties. Method *createPropertyTask* creates a task for handling properties. Input parameter *Type* is the type of the task ( GET or SET ). Input Parameter *Properties* is the properties to get or set by the task. For a Get-task, only the member Name and/or Handle must be filled. For a Set-task, both Name and/or Handle and Value member must be filled. If a handle is given, the handle is preferred over the property name. Input parameter *Environment* is the execution environment. Input parameter *PropertyListener* is a listener for changes of properties processed by the task. Method *createPropertyTask* returns the property task. Method *getPropertyInfo* returns interface *XPropertySetInfo* interface, which describes all properties of the object to which this interfaces belongs. NULL is returned if the object cannot or will not provide information about the properties. Method *addPropertiesChangeListener* adds an interface *XPropertiesChangeListener* to the specified properties with the specified names. Method *removePropertiesChangeListener* removes an interface *XPropertiesChangeListener* from the listener list for the specified properties with the specified names. An empty sequence means all properties.

TABLE 59.: Interface *XPropertyTaskProcessor*

```
interface XPropertyTaskProcessor:
     com::sun::star::uno::XInterface
{
com::sun::star::ucb::XPropertyTask createPropertyTask(
     [in] com::sun::star::ucb::PropertyTaskType Type,
     [in]
```

```
        sequence<com::sun::star::beans::PropertyValue>
        Properties,  [in]
        com::sun::star::ucb::XContentTaskEnvironment
        Environment );
com::sun::star::beans::XPropertySetInfo
        getPropertySetInfo();
[oneway] void addPropertiesChangeListener(  [in]
        sequence<string> PropertyNames,  [in]
        com::sun::star::beans::XPropertiesChangeListener
        Listener );
[oneway] void removePropertiesChangeListener(  [in]
        sequence<string> PropertyNames,  [in]
        com::sun::star::beans::XPropertiesChangeListener
        Listener );
};
```

Interface *XPropertyTask* defines a task for getting or setting properties. Interface *XPropertyTask* inherits from interface *XContentTask* that was described above. Method *getType* returns whether the task is for getting or for setting properties. Method *getProperties* returns the properties to be processed by the task. The status of the properties can be obtained at anytime by checking member *ProcessingState* of each PropertyValue Info.

TABLE 60.:  INTERFACE XPropertyTask

```
interface XPropertyTask:
        com::sun::star::ucb::XContentTask
{
com::sun::star::ucb::PropertyTaskType getType();
sequence<com::sun::star::ucb::PropertyValueInfo>
        getProperties();



};
```

Enumeration *PropertyTaskType* defines the possible types for a property task.

TABLE 61.:  Enumeration *PropertyTaskType*

```
enum PropertyTaskType
{
  GET,
  SET
};
```

Structure *PropertyValueInfo* contains value and state of a property to be processed. Structure *ProperteryValueInfo* inherits form structure *PropertyValue.*

TABLE 62.:  STRUCTURE *PropertyValueInfo*

```
struct PropertyValueInfo:
      com::sun::star::beans::PropertyValue
{
com::sun::star::ucb::PropertyValueState ValueState;
};
```

Enumeration *PropertyValueState* defines the possible states of a property to be processed by the task. State UNPROCESSED means the property value is to be processed by the task. State PROCESSED means the value was set or it was obtained by the task. In the last case the value is stored in member Value of structure *PropertyValueInfo.* State INVALID_NAME means the given property name/handle is invalid. State INVALID_TYPE means the given property type is invalid.

TABLE 63.:   Enumeration *PropertyValueState*

```
enum PropertyValueState
{
  UNPROCESSED,
  PROCESSED,
  INVALID_NAME,
  INVALID_TYPE
};
```

Structure *PropertyValue* specifies a property value. Name specifies the name of the property. The name is unique with a sequence of property values. Handle contains an implementation-specific handle for the property. The handle may be -1 if the implementation has no handle. Value contains the value of the property or void if no value is available. State determines if the value comes from the object itself or from a default and if the value cannot be determined exactly.

TABLE 64.: STRUCTURE *PropertyValue*

```
struct PropertyValue
{
string Name;
long Handle;
any Value;



com::sun::star::beans::PropertyState State;
};
```

Structure *Property* describes a property of the content. There are three types of properties: bound properties; constrained properties; and free properties. Name specifies the name of the property. The name is unique within an XPropertySet. Handle contains an implementation-specific handle for the property. The handle may be -1 if the implementation has no handle. Type contains an object that identifies the declared type for the property. If the property has multiple types or the type is not known but not any, void must be returned. Field attributes may contain zero or more constants of the PropertyAttribute constants group. See constants *PropertyAttribute* above.

TABLE 65.: STRUCTURE *Property*

```
struct Property
{
string Name;
long Handle;
TYPE_XIDLCLASS Type;
short Attributes;
};
```

Exception *UnknownPropertyException* is thrown to indicate that the property is unknown to the implementation.

TABLE 66.: EXCEPTION *UnknownPropertyException*

```
exception UnknownPropertyException:
     com::sun::star::uno::Exception
{
};
```

Interface *XPropertiesChangeListener* receives events, which get fired whenever a bound property is changed. Interface *XPropertiesChangeListener* inherits from interface *XEventListener*. Method *propertiesChange* is called when bound properties are changed. Input parameter *aEvent* contains a sequence of Properties Change Event objects that describe the event source and the properties that have changed.

TABLE 67.: INTERFACE *XPropertiesChangeListener*

```
interface XPropertiesChangeListener:
     com::sun::star::lang::XEventListener
{
void propertiesChange( [in]
     sequence<com::sun::star::beans::PropertyChangeEve
     nt> evt );
};
```

Structure *PropertyChangeEvent* is delivered whenever a "bound" or "constrained" property is changed. A PropertyChangeEvent object is sent as an argument to the methods of interface *XPropertyChangeListener.* Normally, such events contain the name and the old and new value of the changed property. Void values may be provided for the old and the new values if their true values are not known.

TABLE 68.: STRUCTURE *PropertyChangeEvent*

```
struct PropertyChangeEvent:
     com::sun::star::lang::EventObject
{
string PropertyName;
boolean Further;
long PropertyHandle;
any OldValue;
any NewValue;
};
```

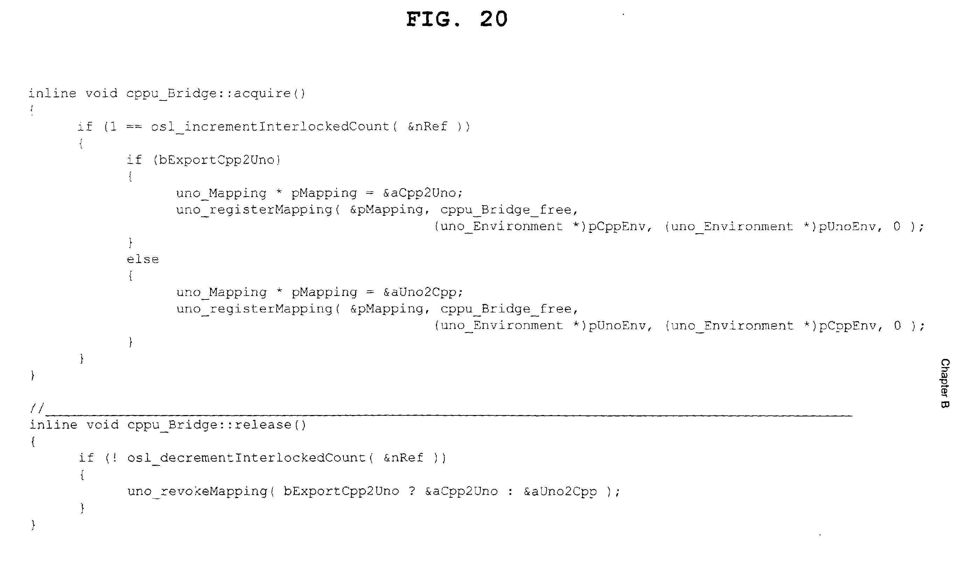

As described above, a content object that creates content implements interface *XContentCreator.* This interface defines what type of content may be created via method *queryCreatableContentsInfo.* This interface returns a structure, which contains the MIME types of content that may be created. New content is created by calling method *createNewContent* with the appropriate *ContentInfo,* i.e., a supported MIME type. This method does not persist the content since what has been created has not been initialized. Initialization may result in property and command operations on the new content. When the content has been initialized, the content can be inserted into the parent. Figure 20 is a sequence diagram that illustrates the asynchronous operation of a command on a file system folder. In this example folder adapter object 505 implements interface *XContentTaskEnvironment,* and issues a call to method *createCommandTask* of a folder object that implements interface *XCommandTaskProcessor.*

In response to the call to method *createCommandTask, a call* to method *create* (Fig. 20) in interface *XCommandTask* of an opentask object is issued. Interface *XCommandTask* issues a call to method *getClient* of interface *XContentTaskEnvironment.* When the task is returned to interface *XContentTaskEnvironment,* an interface *XContent-*

*TaskClient* is created for the task and then method *start* is called in interface *XCommandTask*. Notice that the method returns before execution is completed.

At a later time, interface *XCommandTask* executes the task by making systems calls to the operating system. Also, the task status is returned to interface *XContentTaskClient*. When the task is done, a done event is sent to interface *XContentTaskClient* that calls method *commandready* in interface *XContentTaskEnvironment* to indicate that the task is done. Notice that the folder adapter object was not required to remain active while the task was being executed.

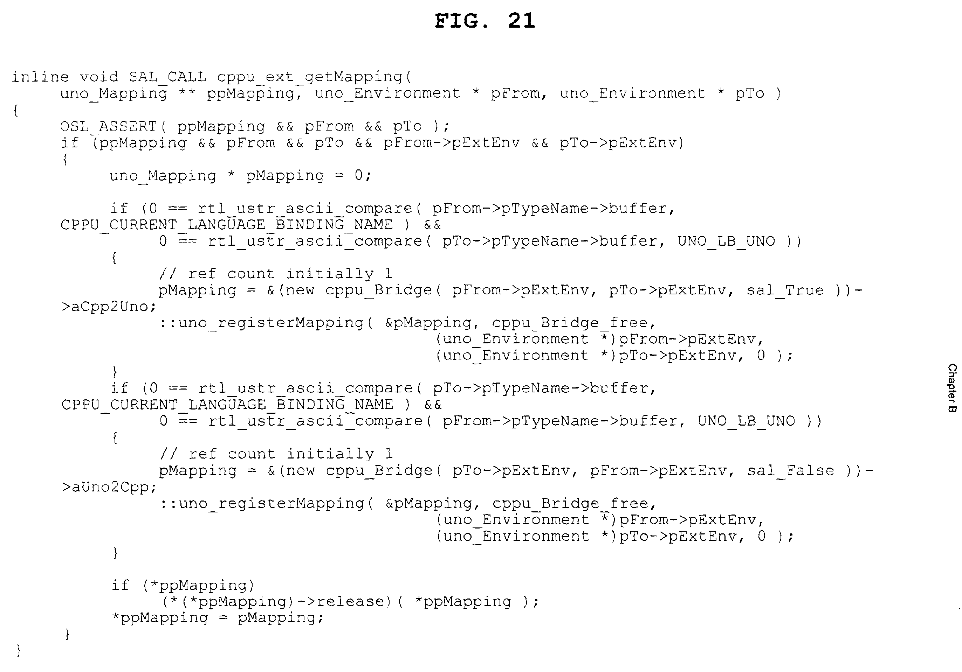

The following table is another pseudo-code example of the use of the interfaces described above. In this example, UCB 113 is used to open a file folder and to add a new file in the file folder. As described above, a runtime function *getGlobalServiceManager* is used to create an instance of UCB 113 that implements service *UniversalContentBroker*. As shown in Figure 21, a file system registers with UCB 113 as a universal content provider 2131 for protocol "file" that was sometimes referred to as a URL scheme. As illustrated in Figure 21, universal content provider 2131 uses interface *XContentProviderManager*, which was described above, to register with UCB 113 and to be place in provider registry 2101.

A client of UCB 113, which as described above can be an application/service in remote applications 310, a folder adapter 505 of Figure 5, or a JAVA bean of Figure 8, creates an identifier factory that implements interface *XContentIdentifierFactory*. The client creates a provider object that implements interface *XContentProvider*, and then obtains an identifier for a folder on the file system by passing a URL to the folder to method *createContentIdentifer* of interface *XContentIdentifierFactory.* To open the file system folder, the client, as illustrated in Figure 21 issues a call to method *queryContent* to interface *XContentProvider* of the provider object.

Next, to create a file as new UCB content, a content creator object is defined that implements interface *XContentCreator*. Method *createNewContent* is called in the content creator object with content type of text/html to create object newfileContent. Properties of the new file are initialized, and then property task processor is created that implements interface *XPropertyTaskProcessor.* A property task is obtained by a call to method *createPropertyTask* (See Fig. 21 and following Table) and then executed to assign the properties to object newfileContent. Next, the file with the properties is inserted in the parent folder using interface *XCommandProcessor.*

TABLE 69.:Example of Using UCB.

```
// opening a file system folder
globalManager := getGlobalServiceManager()
ucb :=
    globalManager.createInstance("com.sun.star.ucb.Uni
    versalContentBroker")
identifierFactory :=
    ucb.queryInterface("com.sun.star.ucb.XContentIdent
    ifierFactory")
provider :=
    ucb.queryInterface("com.sun.star.ucb.XContentProvi
    der")
identifier :=
    identifierFactory.createContentIdentifier("file://
    /home/usr/user1")
folderContent := provider.queryContent(identifier)

// create a file as new UCB content
contentCreator := folderContent.
    queryInterface("com.sun.star.ucb.XContentCreator")
contentInfo.Type := "text/html"
newFileContent := contentCreator.
    createNewContent(contentInfo)

// initialize the new content with one attribute
properties := new PropertyValue[1]
properties[0].Name := "Title"
properties[0].Value := "test.html"
propertyTaskProc := newFileContent.
    queryInterface("com.sun.star.XPropertyTaskProcesso
    r")
propertyTask :=
    propertyTaskProc.createPropertyTask(PropertyTaskTy
```

```
        pe.SET, properties, 0)
propertyTask.execute()


// insert the file into the parent folder
commandProc :=
        newFileContent.queryInterface("com.sun.star.ucb.XC
        ommandProcessor")
command.Name := "Insert"
id = commandProc.createCommandIdentifier()
commandProc.execute(id, command, 0)
// on successful return the changes are stored
```

OBTAINING CHILDREN FROM CONTENT.

From the content object, a reference to interface *XIndexAccess* is obtained. The number of children is obtained from method *getCount.* Each child is obtained via method *getByIndex*, which is of type Any. If type *Any* can be cast to a reference to a pointer to interface *XContent,* an XContent reference is obtained. The XContentIdentifier reference is obtained from interface *XContent.* From this the scheme is printed out. From XContent the MIME type is printed out. See the following table.

**TABLE 70.:**

```
        Reference< XIndexAccess > xIdx(
            Reference< XIndexAccess >::query( m_xContent
    ) );
        sal_uInt32 nCount = xIdx->getCount();
        if ( nCount )
        {
```

```
            print( "Children:" );
            for ( sal_uInt32 n = 0; n < nCount; ++n )
            {
                    Any aChild = xIdx->getByIndex( n );
                    if ( aChild.getValueType() ==
                    getCppuType( (const Reference< XContent
>*)NULL ) )
                    {
                            const Reference< XContent >*
pContent =
                                    SAL_STATIC_CAST( const
Reference< XContent >*,
                                    aChild.getValue() );
                            Reference< XContent > xContent(
*pContent );
                            Reference< XContentIdentifier >
xId(
                                    xContent->getIdentifier() );
                            WString aText( "\t" );
                            aText += xId-
>getContentIdentifier().getStr();
                            aText += " - ";
                            aText += xContent-
>getContentType();
                            print( aText );
                    }
            }
        }
```

EXECUTING TASKS ON CONTENT OBJECTS.

Once an XContent reference is obtained for a content object, it is possible, if supported, to execute tasks on the content to send commands or get and set values of properties.

Querying commands.

From the content object, a reference to interface *XCommandProcessor* is obtained. If the reference is valid, a reference to interface *XCommandInfo* is obtained and from this the sequence of possible commands. The command names are then printed out.

Executing commands.

A reference to interface *XCommandTask* is created from the reference to interface *XCommandTaskProcessor* with a given Command and reference to the XContentTaskEnvironment. If the task is valid, the task is executed synchronously via method execute. The resultant object of type any is obtained via method *getResult.* See the above examples.

Querying properties.

From the XContent reference the XPropertyTaskProcessor reference is obtained. If the task is valid, then the reference to interface XPropertySetInfo is obtained via the method getPropertySetInfo. The sequence of property names is then obtained from method getProperties. The property names are then printed out.

Get value of a property.

From the XPropertyTaskProcessor reference, an XPropertyTask reference is created via the method createPropertyTask with a sequence of properties and a reference to interface XContentTaskEnvironment. If the task is valid, the property is obtained by calling method execute. Thus, the property is obtained synchronously. The sequence of values is then obtained from method getProperties method. The value of the first property is then obtained in an any.

Hierarchy Service

As described above, UCB 113 aggregates the content from different transport protocols and different storage systems in a homogeneous API. As the UCB aggregates content on API level, hierarchy service 335 extend the concept of hierarchal relations to virtual hierarchy of UCB contents (Figure 2D). Hierarchy service 335 is a UCP, which provides three kinds of contents: a root folder, virtual folders and links to other UCB contents. This means a client can use hierarchy service 335 to store a user defined 'view' on several UCB contents. The 'view' is defined by the hierarchical relation between virtual folders and links to other UCB contents. These relations are stored in user configuration service, as described above.

Hierarchy service 335 provides three different types of contents: a HCP Link, a HCP Folder and a HCP Root Folder. A HCP link 2202A is a content, which points to another UCB content 2203A. A HCP link 2202A is always contained in a HCP Folder 2200. A HCP Link has no children. A HCP Folder, e.g., folders 2200, 2201A to 2201C, is a container for other HCP Folders and HCP Links. There is at most one instance of a HCP Root Folder 2200 at a time. All other HCP contents are children of this folder. The HCP Root Folder can contain HCP Folders and HCP Links. In one embodiment, root folder 2200 has a URL such as vnd.sun.star.hier:/.

HCP Folders 2201A to 2201C and HCP Root Folder 2200 implement the interface XContentCreator. HCP Links and HCP Folders support the command "insert". This means all HCP Folders and the HCP Root Folder as well can create new HCP Folders and HCP Links.

To create a new child of a HCP Folder, the parent folder creates a new content by calling its method createNewContent. The content type to use for new folders is application/vnd.sun.star.hier-folder. To create a new link, the type string application/vnd.sun.star.hier-link is used. The URLs used here are illustrative only and are not intended to limit the invention to the specific example.

To set a title at the new folder/link, the new child executes a command setPropertyValues, which sets at least the property "Title" to a non-empty value. Also, the child can set the property TargetURL as well at this time, but this is not required. This property may also be set later.

Next, the new child (not the parent ) executes the command "insert". This commits the creation process.

URL Scheme for HCP Contents

Each HCP content has an identifier corresponding to the following scheme:
    vnd.sun.star.hier:/<path>
where <path> is a hierarchical path of the form
        <name>/<name>/.../<name> where <name> is a string encoded according to the URL conventions.

Examples:

**vnd.sun.star.hier:/** ( The URL of the HCP Root Folder ) **vnd.sun.star.hier:/Bookmarks/ Sun%20Microssystems%20Home % 20 Page**

**vnd.sun.star.hier:/Workplace/Printers**

The following table gives an overview of different HCP contents.

| | UCB Type | Properties | Commands | Interfaces |
|---|---|---|---|---|
| | (returned by XContent:: getContent Type ) | | | |
| Link | applicatio n/vnd.sun. star.hier- link | ContentType IsDocument IsFolder Title TargetURL | getCommandsInfo getPropertySetInfo getPropertyValues setPropertyValues insert delete | XTypeProvider, XServiceInfo, XComponent, XContent, XCommandProcessor, XPropertiesChangeNo tifier, XPropertyContainer, XPropertySetInfoCha ngeNotifier, XCommandInfoChangeN otifier, XChild |
| Folder | applicatio n/vnd.sun. star.hier- folder | ContentType IsDocument IsFolder Title | getCommandInfo getPropertySetInfo getPropertyValues setPropertyValues insert delete open transfer* | same as HCP Link, XContentCreator |
| Root Folde r | applicatio n/vnd.sun. star.hier- | ContentType IsDocument IsFolder | getCommandInfo getPropertySetInfo getPropertyValues | same as HCP Link, XContentCreator |
| | UCB Type (returned by XContent:: getContent Type ) | Properties | Commands | Interfaces |
| | folder | Title | setPropertyValues open transfer* | |

*) The "transfer" command only transfers HCP-contents to HCP folders. It does not handle contents with a URL scheme other then the HCP-URL-scheme.

HCP 335 is transparent for the client program code, whether the UCB content is stored on the file system, retrieved via HTTP or just a virtual folder, provided by the users configuration. Transparent means, that the same client program code, which works on a UCB content from file system, works on UCB content from HCP and any other UCP, too. HCP 335 uses configuration server 336 as persistent storage for the virtual hierarchy. In one embodiment, the hierarch content provider 335 stores the relations between virtual folders and links also in XML.

Interface *XPropertiesChangeNotifier* includes two methods. Method *addProperkiesChangeListener* adds an interface *XPropertiesChangeListener* to the specified properties with the specified names. Input parameter *Property-*

*Names* specifies the names of the properties. An empty sequence means "all properties". Input parameter *Listener* contains the listener for the property change events. Method removePropertiesChangeListener removes an interface XPropertiesChangeListener from the list.

TABLE 71.: Interface *XPropertiesChangeNotifier*

```
interface XPropertiesChangeNotifier :
     com::sun::star::uno::XInterface
{
[oneway] void addPropertiesChangeListener( [in]
     sequence<string> PropertyNames, [in]
     com::sun::star::beans::XPropertiesChangeListener
     Listener );
[oneway] void removePropertiesChangeListener(  [in]
     sequence<string> PropertyNames, [in]
     com::sun::star::beans::XPropertiesChangeListener
     Listener );
};
```

Interface *XPropertyContainer* includes methods to add a property and remove a property from a container. Parameter Name specifies the name of the new property. Parameter Attributes specifies the attributes for the new property. Parameter DefaultValue specifies the default value for the new property.

TABLE 72.: Interface *XPropertyContainer*

```
interface XPropertyContainer:
     com::sun::star::uno::XInterface
{
void addProperty( [in] string Name,  [in] short
     Attributes,  [in] any DefaultValue )
     raises(
     com::sun::star::beans::PropertyExistException,
     com::sun::star::beans::IllegalTypeException,
     com::sun::star::lang::IllegalArgumentException );
```

```
void removeProperty( [in] string Name )
     raises(
     com::sun::star::beans::UnknownPropertyException,
     com::sun::star::beans::NotRemoveableException );
};
```

Interface *XPropertySetInfoChangeNotifier* includes methods to add and remove listeners for property set information change events.

TABLE 73.:    Interface *XPropertySetInfoChangeNotifier*

```
interface XPropertySetInfoChangeNotifier :
     com::sun::star::uno::XInterface
{
void addPropertySetInfoChangeListener( [in]
     XPropertySetInfoChangeListener Listener );
void removePropertySetInfoChangeListener(
[in] XPropertySetInfoChangeListener Listener );
};
```

Interface XPropertySetInfoChangeListener includes method *propertySetInfoChange* that is called whenever changes of an interface *XPropertySetInfo* is to be propagated.

TABLE 74.:    Interface *XPropertySetInfoChangeListener*

```
interface XPropertySetInfoChangeListener :
     com::sun::star::lang::XEventListener
{ void propertySetInfoChange( [in]
```

```
     PropertySetInfoChangeEvent evt );
};
```

TABLE 75.:   Structure *PropertySetInfoChangeEvent*

```
struct PropertySetInfoChangeEvent:
     com::sun::star::lang::EventObject
{
string Name;
long   Handle;
/** contains the reason for the event. */
long   Reason;
};
```

Interface *XCommandInfoChangeNotifier* adds, i.e., registers listeners for CommandInfoChangeEvents.

TABLE 76.:   Interface *XCommandInfoChangeNotifier*

```
interface XCommandInfoChangeNotifier :
     com::sun::star::uno::XInterface
{
void addCommandInfoChangeListener( [in]
     XCommandInfoChangeListener Listener );
void removeCommandInfoChangeListener( [in]
     XCommandInfoChangeListener Listener );
};
```

The function of interface *XCommandInfoChangeListener* is equivalent to the other listener interfaces described above.

TABLE 77.:   Interface *XCommandInfoChangeListener*

```
interface XCommandInfoChangeListener :
     com::sun::star::lang::XEventListener
{
void commandInfoChange( [in] CommandInfoChangeEvent evt
     );
};
```

Other interfaces that are used include the following. Interface *XIdlClass* provides information about a type or module. Every array also belongs to a type that is reflected as a XIdlClass object that is shared by all arrays with the same element type and number of dimensions. Finally, any of the primitive IDL types are also represented as XIdlClass objects. This includes "void, any, boolean, char, float, double, octet, short, long, hyper, unsigned octet, unsigned short, unsigned long" and "unsigned hyper". Interface *XIdlClass* inherits from interface *XInterface.*

TABLE 78.:   INTERFACE *XIdlClass*

```
interface XIdlClass: com::sun::star::uno::XInterface
{
sequence<XIdlClass> getClasses();
XIdlClass getClass( [in] string aName );
boolean equals( [in] XIdlClass Type );
boolean isAssignableFrom( [in] XIdlClass xType );
com::sun::star::uno::TypeClass getTypeClass();
string getName();
[const] com::sun::star::uno::Uik getUik();
```

```
sequence<XIdlClass> getSuperclasses();
sequence<XIdlClass> getInterfaces();
XIdlClass getComponentType();
XIdlField getField( [in] string aName );
sequence<XIdlField> getFields();
XIdlMethod getMethod( [in] string aName );
sequence<XIdlMethod> getMethods();
XIdlArray getArray();
void createObject( [out] any obj );
};
```

Method getClasses returns all types and modules, which are declared in this class. Method getClass returns a type or module with the given name that is declared in this class. Method equals returns <TRUE> if the instances describe the same type, otherwise <FALSE>. Method isAssignableFrom tests if the parameter xType is a subclass of this class. Method getTypeClass returns the type that this instance represents. Method getName returns the fully qualified name of the type of object (class, interface, array, sequence, struct, union, enum or primitive) represented by this XIdlClass object. Method getUik returns the UIK from this type. If the type has no UIK, the returned UIK is zero.

If this object represents an interface or a class, the objects that represent the superclasses or superinterfaces of that class are returned by method getSuperclasses. If this object is the one that represents the topmost class or interface, an empty sequence is returned.

Method getInterfaces determines the interfaces implemented by the class or interface represented by this object. If the class or interface implements no interfaces, the method returns a sequence of length 0.

If this class represents an array or sequence type, method GetComponentType returns the XIdlClass object representing the component type of the array or sequence; otherwise it returns null. Method getField returns a XIdlField object that reflects the specified member field of the class, interface, struct, union, enum or exception represented by this XIdlClass object. If a field with the specified name is not found, zero is returned. The field to be reflected is located by searching all the member fields of the class, interface, struct, union, enum or exception represented by this XIdlClass object for a field with the specified name or for NULL, if a field with the specified name is not found. Parameter aName specifies the simple name of the desired field.

Method getFields returns a sequence containing Field objects reflecting all the accessible fields of the class, interface, struct, union or enum represented by this XIdlClass object. Method getFields returns a sequence of length zero if the class or interface has no accessible fields, or if it represents an array, a sequence or a primitive type. Specifically, if this XIdlClass object represents a class, this method returns the fields of this class and of all its superclasses. If this XIdlClass object represents an interface, the method returns the fields of this interface and of all its superinterfaces. If this XIdlClass object represents an array, sequence or primitive type, this method returns a sequence of length zero.

Method getMethod returns a XIdlMethod object that reflects the specified member method of the interface represented by this XIdlClass object. If a method with the specified name is not found, "0" is returned. The method to be reflected is located by searching all the member methods of the interface represented by this XIdlClass object for a method with the specified name. Parameter aName specifies the simple name of the desired method.

Method getMethods returns a sequence containing XIdlMethod objects reflecting all the member methods of the class or interface represented by this XIdlClass object, including those declared by the class or interface and those inherited from superclasses and superinterfaces. Returns a sequence of length 0 if the class or interface has no member methods.

Method getArray returns interface *XIdlArray* to get and set the elements by index if the represented type is an array or sequence. Method createobject creates an instance of the type represented by this XIdlClass object if the represented type is a basic type, struct, enum, or sequence.

Enumeration *TypeClass* describe all type classes, which can be defined in the IDL.

TABLE 79.: Enumeration *TypeClass*

```
enum TypeClass
{
VOID,
CHAR,
BOOLEAN,
```

```
BYTE,
SHORT,
UNSIGNED_SHORT,
LONG,
UNSIGNED_LONG,
HYPER,
UNSIGNED_HYPER,
FLOAT,
DOUBLE,
STRING,
TYPE,
ANY,
ENUM,
TYPEDEF,
STRUCT,
UNION,
ARRAY,
INTERFACE,
SERVICE,
MODULE,
INTERFACE_METHOD,
INTERFACE_ATTRIBUTE,
UNKNOWN
};
```

Interface *XIdlField* inherits from interface *XIdlMember*.

TABLE 80.: INTERFACE *XIdlField*

```
interface XIdlField:
      com::sun::star::reflection::XIdlMember
{
com::sun::star::reflection::XIdlClass getType();
com::sun::star::reflection::FieldAccessMode


      getAccessMode();
any get( [in] any obj )
   raises(
      com::sun::star::lang::IllegalArgumentException );
void set( [in] any obj, [in] any value )
   raises(
      com::sun::star::lang::IllegalArgumentException,
      com::sun::star::lang::IllegalAccessException );
};
```

Method getType returns a XIdlClass object that identifies the declared type for the field represented by this XIdlField object. Method getAccessMode returns an enumeration value, which denotes whether the field is "const", "readonly", "writeonly" or "readwrite".

Method get returns the value of the field represented by this field on the specified object. The underlying field's value is obtained as follows:

If the underlying field is a constant, the object argument is ignored; it may be NULL;

Otherwise, the underlying field is an instance field.

If the specified object argument is NULL, the method throws an "IllegalArgumentException". If the specified object is not an instance of the class, interface, struct, union or enum declaring the underlying field, the method throws an "IllegalArgumentException". Otherwise, the value is retrieved from the underlying instance or constant.

Method set sets the field represented by this XIdlField object on the specified object argument to the specified new value. The operation proceeds as follows. If the specified object argument is NULL, the method throws an exception IllegalArgumentException. If the specified object argument is not an instance of the class or interface declaring the underlying field, the method throws an exception IllegalArgumentException. If the underlying field is constant, the method throws an exception IllegalAccessException. If the new value cannot be converted to the type of underlying field by an identity or widening conversion, the method throws an IllegalArgumentException. The field is set to the possibly widened new value.

Interface *XIdlMember* inherits from interface *XInterface*. Interface *XIdlMember* makes it possible to access members of classes dynamically.

TABLE 81.: INTERFACE *XIdlMember*

```
interface XIdlMember: com::sun::star::uno::XInterface
{
XIdlClass getDeclaringClass();
string getName();
};
```

Method getDeclaringClass returns the XIdlClass object representing the class, interface, struct, union or enum that declares the member represented by this member. Method getName returns the fully qualified name of the type (class, interface, array, sequence, struct, union, enum or primitive) represented by this XIdlClass object, as a string.

The values in enumeration *FieldAccessMode* are used to specify the kind of attribute or property.

TABLE 82.: Enumeration *FieldAccessMode*

```
enum FieldAccessMode
{
//--------------------------------------------------
/** The property is readable and writeable
 */
     READWRITE,


//--------------------------------------------------
/** The property is readonly
 */
READONLY,


//--------------------------------------------------
/** The property is write only
 */
WRITEONLY,


//--------------------------------------------------
/** @deprecated
 */
CONST


};
```

Exception *IllegalArgumentException* is thrown to indicate that a method has passed an illegal or inappropriate argument. Exception *IllegalArgumentException* inherits from exception *Exception.* Field ArgumentPosition identifies the position of the illegal argument. This field is -1 if the position is not known.

TABLE 83.: EXCEPTION *IllegalArgumentException*

```
exception IllegalArgumentException:
        com::sun::star::uno::Exception
{
short ArgumentPosition;
};
```

Exception *IllegalAccessException* is thrown when an application tries to change a constant property. Exception *IllegalAccessException* inherits from exception *Exception.*

TABLE 84.: EXCEPTION *IllegalAccessException*

```
exception IllegalAccessException:
        com::sun::star::uno::Exception
{
};
```

Interface *XIdlMethod* inherits from interface *XIdlMember*. Interface *XIdlMember* makes it possible to access the specification of a method dynamically.

TABLE 85.:  INTERFACE *XIdlMethod*

```
interface XIdlMethod:
        com::sun::star::reflection::XIdlMember
```

```
{
XIdlClass getReturnType();
sequence<XIdlClass> getParameterTypes();
sequence<ParamInfo> getParameterInfos();
sequence<com::sun::star::reflection::XIdlClass>
      getExceptionTypes();
com::sun::star::reflection::MethodMode getMode();
any invoke( [in] any obj,  [inout] sequence<any> args )
   raises(
      com::sun::star::lang::IllegalArgumentException,
    com::sun::star::reflection::InvocationTargetException
      );
};
```

Method getReturnType returns a XIdlClass object that represents the formal return type of the method represented by this method object. Method getParameterTypes returns a sequence of XIdlClass objects that represent the formal parameter types, in declaration order, of the method represented by this Method object. Method getParameterTypes returns a sequence of length 0 if the underlying method takes no parameters.

Method getParameterInfos returns a sequence of ParamInfo objects that represent all information about the formal parameter types, in declaration order, of the method represented by this Method object. Method getParameterInfos returns a sequence of length 0 if the underlying method takes no parameters.

Method getExceptionTypes returns a sequence of XIdlClass objects that represent the types of the checked exceptions thrown by the underlying method represented by this Method object. Method getExceptionTypes returns a sequence of length 0 if the method throws no checked exceptions.

Method getMode returns an enumeration value, which denotes whether the method is one-way or two-way. Method invoke invokes the underlying method represented by this method object on the specified object with the specified parameters. Individual parameters are subject to widening conversions as necessary.

Method invocation proceeds in the following order:

If the specified object argument is NULL, the invocation throws an IllegalArgumentException; and

Otherwise, if the specified object argument is not an instance of the class or interface declaring the underlying method, the invocation throws an exception IllegalArgumentException.

If the number of actual parameters supplied via args is different from the number of formal parameters required by the underlying method, the invocation throws an Exception IllegalArgumentException. For each actual parameter in the supplied args array, if the parameter value cannot be converted to the corresponding formal parameter type by an identity or widening conversion, the invocation throws exception IllegalArgumentException. When the control transfers to the underlying method and the method stops abruptly by throwing an exception, the exception is placed in an exception InvocationTargetException and thrown in turn to the caller of the method. If the method completes normally, the value it returns is returned to the caller of the method. If the underlying method returns type is void, the invocation returns VOID.

Structure *ParamInfo* describes a formal parameter of a method.

TABLE 86.: STRUCTURE *ParamInfo*

```
struct ParamInfo
{
/** The name of the parameter.
*/
string aName;


//-------------------------------------------------
/** One of the values IN, OUT, INOUT from the ParamMode
enumeration.
 */
ParamMode aMode;


//-------------------------------------------------
/** The type of the parameter.
 */
XIdlClass aType;


};
```

The values in Enumeration *ParamMode* are used to specify if a formal parameter of a method is used for input, output or both. If the value is an IN parameter, data can only transferred from the callee to the caller. If the value is an OUT parameter, data can only transferred from the caller to the callee. If value is an INOUT parameter, data can be transferred in both directions.

TABLE 87.: ENUMERATION *ParamMode*

```
enum ParamMode
{
IN,
OUT,
INOUT
};
```

The values in Enumeration Method*Mode* are used to specify the calling mode of a method. If the value is an ONEWAY parameter, the method call may be asynchronous. If the value is a TWOWAY parameter, the method call is synchronous.

TABLE 88.: ENUMERATION *MethodMode*

```
enum MethodMode
{
ONEWAY,
TWOWAY
};
```

Exception *InvocationTargetException* is a checked exception that wraps another exception. Typically such exceptions are thrown by an invoked method or constructor. Exception *InvocationTargetException* inherits from exception *WrappedTargetException.*

TABLE 89.: EXCEPTION *InvocationTargetException*

```
exception InvocationTargetException:
      com::sun::star::lang::WrappedTargetException
{
};
```

Exception *WrappedTargetException* is a checked exception that wraps an exception thrown by the original target. Normally this exception is declared for generic methods. Exception *WrappedTargetException* inherits from exception *Exception.*

TABLE  90.: EXCEPTION *WrappedTargetException*

```
exception WrappedTargetException:
     com::sun::star::uno::Exception
{
any TargetException;
};
```

Interface *XIdlArray* provides methods to dynamically access arrays. Interface *XIdlArray* inherits from interface *XInterface*.

TABLE 91.: INTERFACE *XIdlArray*

```
interface XIdlArray: com::sun::star::uno::XInterface
{
void realloc( [inout] any array,  [in] long length )
  raises(
      com::sun::star::lang::IllegalArgumentException );
long getLen( [in] any array )
  raises(
      com::sun::star::lang::IllegalArgumentException );
any get( [in] any aArray, [in] long nIndex )
  raises(
      com::sun::star::lang::IllegalArgumentException,
      com::sun::star::lang::ArrayIndexOutOfBoundsExcepti
          on );
void set( [inout] any aArray, [in] long nIndex, [in]
      any aNewValue )
  raises(
      com::sun::star::lang::IllegalArgumentException,
    com::sun::star::lang::ArrayIndexOutOfBoundsException
      );
};
```

Method realloc in interface *XIdlArray* changes the size of the array to the new size. If the new length is greater, the additional elements are default constructed, otherwise the elements are destructed. Method realloc throws an exception IllegalArgumentException if the specified object is not an array or if the specified object is null.

Method getLen in interface *XIdlArray* returns the number of elements in the array. Method getLen throws an exception IllegalArgumentException if the specified object is not an array or if the specified object is null.

Method get in interface *XIdlArray* returns the value of the indexed component in the specified array object. Method get throws exception IllegalArgumentException, if the specified object is not an array or if the specified object is null. Method get throws exception ArrayIndexOutOfBoundsException, if the specified index argument is negative, or if the specified index argument is greater than or equal to the length of the specified array.

Method set in interface *XIdlArray* sets the value of the indexed component of the specified array object to the specified new value. Method set throws exception IllegalArgumentException, if the specified object is not an array or if the specified object is null.
Method set throws exception ArrayIndexOutOfBoundsException, if the specified index argument is negative, or if the specified index argument is greater than or equal to the length of the specified array.

Exception *ArrayIndexOutOfBoundsException* is thrown to indicate that an array has been accessed with an illegal index. The index is either negative or greater than or equal to the size of the array. Exception *ArrayIndexOutOf-BoundsException* inherits from exception *IndexOutOfBoundsException*.

TABLE 92.: EXCEPTION

*ArrayIndexOutOfBoundsException*

```
exception ArrayIndexOutOfBoundsException:
     com::sun::star::lang::IndexOutOfBoundsException
{
};
```

Exception *IndexOutOfBoundsException* is thrown to indicate that a container has been accessed with an illegal index. The index is either negative or greater than or equal to the count of the elements. Exception *IndexOutOf-BoundsException* inherits from exception *Exception.*

TABLE  93.: EXCEPTION *IndexOutOfBoundsException*

```
exception IndexOutOfBoundsException:
     com::sun::star::uno::Exception
{
};
```

Those skilled in the art will readily understand that the operations and actions described herein represent actions performed by a CPU of a computer in accordance with computer instructions provided by a computer program. Therefore, the various processes described herein, and the interfaces described herein may be implemented by a computer program causing the CPU of the computer to carry out instructions representing the individual operations or actions as described hereinbefore. The computer instructions can also be stored on a computer-readable medium, or they can be embodied in any computer-readable medium such as any communications link, like a transmission link to a LAN, a link to the internet, or the like.

Thus, the processes and/or interfaces can be implemented by a computer program comprising computer program code or application code. This application code or computer program code may be embodied in any form of a computer program product. A computer program product comprises a medium configured to store or transport this computer-readable code, or in which this computer-readable code may be embedded. Some examples of computer program products are CD-ROM discs, ROM cards, floppy discs, magnetic tapes, computer hard drives, servers on a network, and carrier waves. The computer program product may also comprise signals, which do not use carrier waves, such as digital signals transmitted over a network (including the Internet) without the use of a carrier wave.

Herein, a computer memory refers to a volatile memory, a non-volatile memory, or a combination of the two in any one of these devices. Similarly, a computer input unit and a display unit refer to the features providing the required functionality to input the information described herein, and to display the information described herein, respectively, in any one of the aforementioned or equivalent devices.

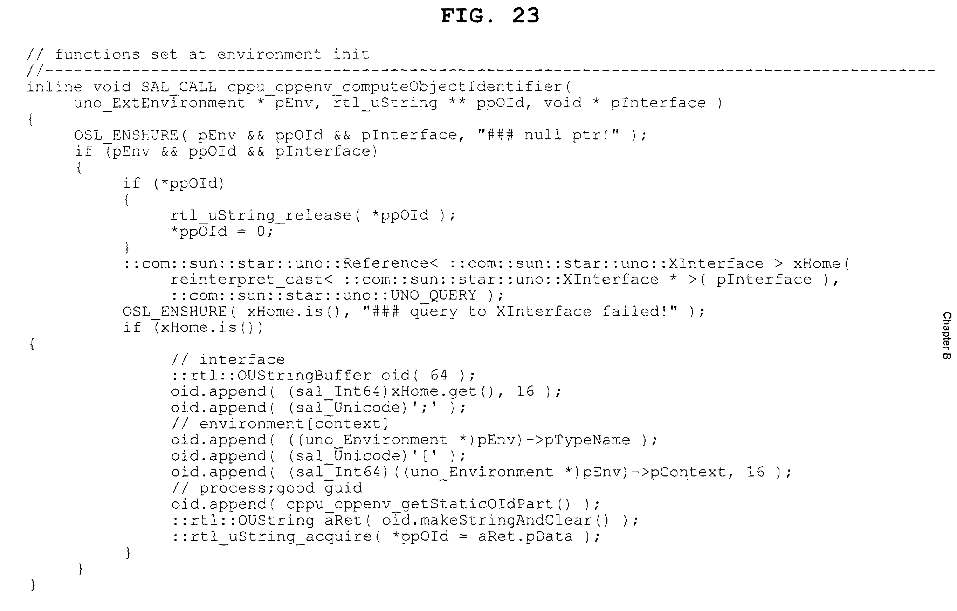

In the following, further embodiments of the invention will be described with respect to Figs. 23 - 33.

Referring to Fig. 23, the network portal system 2310 according to the invention is illustrated to be placed between provider systems 2301A, 2301B and client systems 2302A, 2302B in a network 2303. Between the network portal system 2310 and the clients 2302A, 2302B placed is a network server 2312 which in turn is connected to the network 2303. If the network 2303 is the internet, the network server 2312 may be an HTTP server. The network server 2312 is adapted for performing communication with any client system 2302A, 2302B via the network 2303, for ex., receiving requests for content from client systems and transmitting responses produced within the network portal system 2310 to the respective client systems 2302A , 2302B. Client system 2302A is illustrated to be a computer, and is supposed to execute an internet browser program. Client system 2302B is illustrated to be a mobile telephone which is linked to a mobile telephone network 2304 which has a gateway 2343 to the network 2303. The provider systems 2301A, 2301B are adapted to offer content such as data bases, file systems, for access or use for client systems 2302A, 2302B. Provider systems providing arbitrary other content may be linked to the network, too. It is to be noted that the communication connections mentioned here may be of permanent or temporary nature. They may be physically direct or indirect.

A portal may be an interface system which is placed between provider systems and client systems in a network, for enabling communication between the provider systems and the client systems. Provider systems may be computer systems which provide content or services via a network to client systems. The client systems represent the user of the content or services.

In this context, the term "content" may denote any information, which may be of any kind, and comprised in any physical or logical format which is suitable to be transmitted over a communication network. In particular, content may be of the form of electronic files, residing on a server, or it may be generated by a particular program application.

The term "service" may comprise in particular communication based services (e.g.: e-mail, ftp transmission) as well as rendering functionality like word-processing or drawing capabilities, or rendering information content (e.g., documents).

The great number of different content and services available over a network like the internet have lead to an enormous variety of different communication standards, data formats and file formats, which are sometimes proprietary for the particular content and services. Communication standards, i.e., protocols which define the way of communication of between two systems, and the MIME type which defines the type of content, are here referred to as communication schemes. In general, the communication scheme supported by a system is contained in the system's identifier in the network, or in the identifier of the particular service or content provided by the system. As identifier for systems, services or content, the Uniform Resource Locator (URL) is used. A URL always starts with a communication scheme which is to be used for accessing the appropriate provider system. An example may be: "imap://user@mailserver/inbox". The communication scheme is here the IMAP protocol. This URL specifies a message which is located in a folder "inbox" of a provider system "mailserver ".

As a consequence, services or content provided by some provider systems may be incompatible with services or content provided by other provider systems and thus have a "stove-pipe" nature as to their presence and operation on networks. In addition, there exist many different communication schemes for content or service, which communication schemes again may be incompatible and not universally accessible or supported by all client systems.

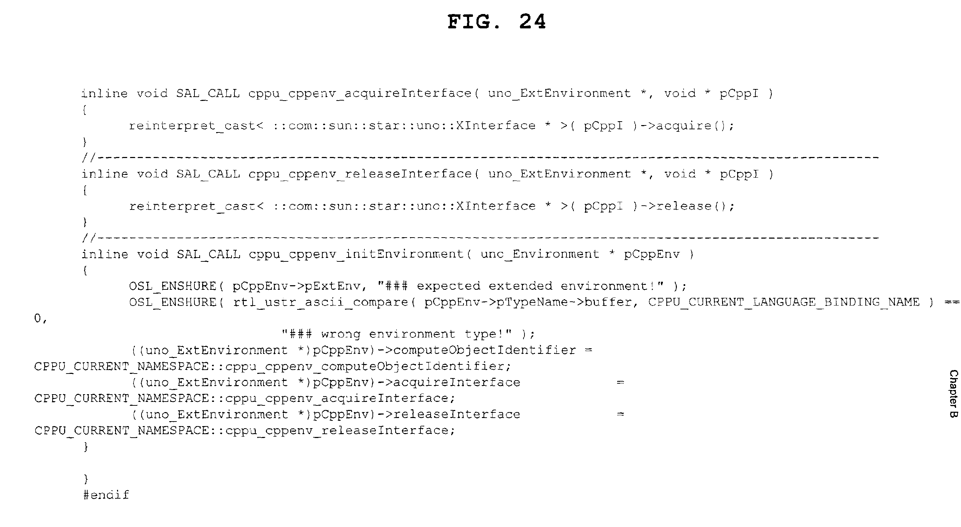

The inventive network portal system 2310 according to the embodiment illustrated in Fig. 24 is divided into several subsystems. One of them are the means 2411 which are adapted to deliver content in a communication scheme as required by the particular client systems 2302A, 2302B. The means 2411 are referred to as a webtop.

Another subsystem of the network portal system 2310 is constituted by the means 2413 which interact with the provider systems 2301A, 2301B for accessing and retrieving content. These means 2413 are referred to as universal content broker (UCB) 2413.

The webtop 2411 is a software implementation to provide a metaphor to client systems for accessing content. The webtop 2411 comprises a user interface which is defined in different XML, HTML or WML templates in order to be able to present content in the form as required by any individual client system. These templates define together with the stylesheets and the rendering process the visual look and feel of the network portal system 2310. Hereby, the templates define elements of the content to be presented. Examples of such elements are text, tables, images, file names. The stylesheets define the form how the elements are to be presented on an individual client system. As an example, a stylesheet may define the layout of the elements on a page to be displayed on the a screen. To deliver content to a client system via this rendering process, the content has to become a part of the template. On the other hand, the content is not static and will change over time, and also the templates are independent from the client system.

Depending on the capabilities of a particular client system which communicates with the webtop 2411, one of these templates is selected for interaction with the particular client system. The webtop 2411 loads the template, fills in all user specific content data, and this new temporary template is processed by a stylesheet and transmitted to the client system.

For example, if the user is accessing his email via a browser, the template will be an HTML file. The webtop 2411 uses UCB 2413 to get the content of the mails and insert the data as an HTML table in the HTML template. This template includes the user specific mail data, and is then processed through the stylesheets and transmitted to the client system.

The webtop 2411 may be implemented in Java as different servlets, so it can easily communicate with different kinds of network servers 2312. The webtop 2411 is using a special template core engine, which is able to insert dynamic data into the templates and renders these templates according to different stylesheets. With these stylesheets, the webtop 2411 can be adapted to special client systems or user purposes. It comprises for example the logic for presenting e-mail content in a kind of folder view to a client system.

As concept for offering content to a variety of different client system, the framework of individual data representation according to Annex II may be applied. By definition of dynamic content channel "portlets", highly customizable content pages may be produced for any individual client system. Every portlet defines in which format the content can be provided. The client can subscribe to any of the available portlets. The framework and all portlets are implemented as servlets running on the webtop 2411.

With respect to client systems, the webtop 2411 may perform login procedures. Furthermore, authentication procedures for client systems may be required for requesting particular content from the network portal system 2310.

The UCB 2413 interacts with the provider systems for retrieving the content requested by a client system. The access is performed on the basis of the request transmitted by the client system to the network portal system 2310. The request specifies the service, and comprises an indicator specifying the client system and the communication scheme to be applied for communicating with the client system.

As an example, the UCB 2413 may provide an hierarchical view to all content, which is provided by a provider system, regardless of the content type. A unified navigation through all content can be may be enabled for all kinds of client systems. The standard information exchange services like e-mail, news, calendar, directory, databases, internet communication, web content and file storage are supported by the UCB 2413, and for the integration of additional content or applications, interfaces for the integration of content providers are supported by the UCB 2413. For example, on top of the UCB 2413, an application is able to navigate through the e-mails of an client like navigating through a calendar server. The hierarchical view to all this information can be configured dynamically.

The provider systems 2301A, 2301B which may be accessed by the UCB 2413 for retrieving content are contained in a provider register 2415 in association with the communication scheme they support. The UCB 2413 has access to that provider register. Optionally, the UCB 2413 is maintaining the provider register 2415, i.e., registering provider systems, or de-registering provider systems.

In a further embodiment of the network portal system 2310, the UCB 2413 is adapted to store content in a local storage 2416. The content is stored in association with the URL of the content. This feature permits using or processing the content without being permanently connected to the provider system where the content has been retrieved from.

The interface used in the UCB 2413 for storing content allows the usage of different implementations. For a small network portal system 2310, the functionality of this implementation may be an ordinary file. To provide scalability of the network portal system 2310, a database can be used with an adapter providing the implementation of the interface. This opens a functionality not just using the UCB 2413 to access this content, but also other application software may working together with the database to access the stored content.

For increasing the availability of a network portal system, the replication features of a database system may be used for maintaining an identical copy of the database on a second computer system. Then, if the first computer fails by a hardware or software failure, the second computer system can provide the same functionality like the first one.

In a further embodiment, the UCB 2413 is adapted to associate properties to content which is retrieved from a content provider system. These properties may contain additional information with respect to the content. The properties are set or changed by the UCB 2413. The properties or attributes are transmitted along with the retrieved content to the respective client system. The properties along with the association with the content (referenced by its URL) are stored in a storage which is accessible by the UCB 2413. Whenever a request for the content is received by the UCB, the storage is looked up for its associated properties on the basis of its URL. The properties may then be transmitted along with the content to the client system.

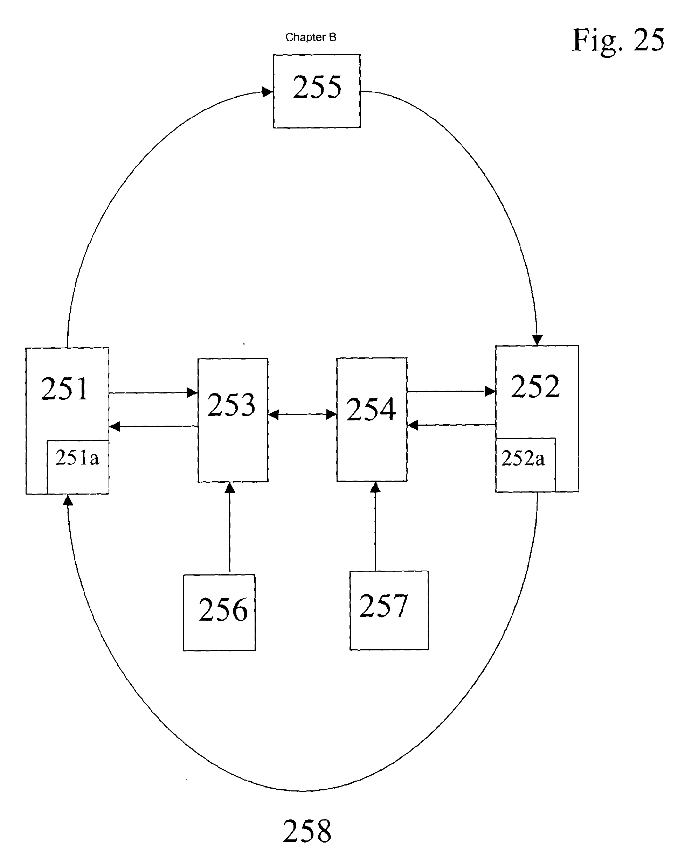

The retrieval of content by the UCB 2413 is explained with reference to Figures 25 to 27.

Fig. 25 illustrates the retrieval of content constituting a message on an IMAP server with an associated property. An example for such an URL may be: imap://user@mailserver/inbox;UID=3. Accordingly, the content has an associated property value UID set to 3. In the first step 2501, the URL is passed from the webtop 2411 to the UCB 2413. In step 2502, the UCB 2413 searches the appropriate provider system for the IMAP communication scheme based on the provider register to which the UCB has access. Then, in step 2503, the UCB connects to the appropriate provider system and transmits the URL to it. In step 2504, the provider system analyzes the URL and creates an IMAP message content. In step 2505, the IMAP message content is transmitted back to the UCB 2413. In step 2506, the UCB 2413 passes the received content to the webtop 2411, which in turn fits it into the template and forwards it to the client system (step 2507).

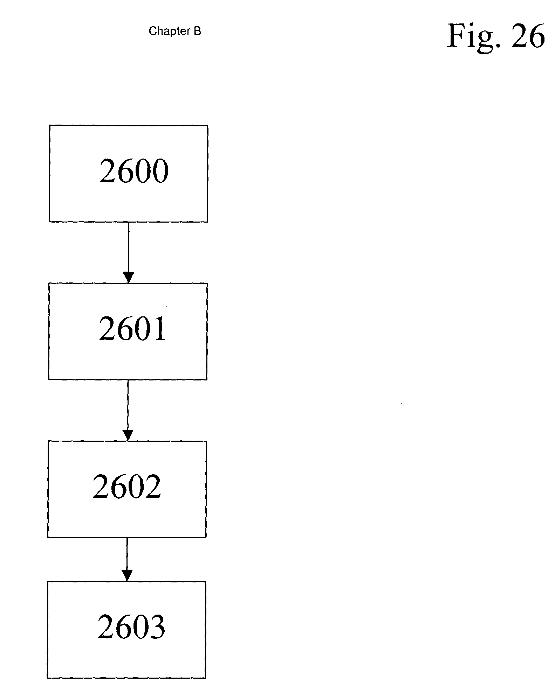

Fig. 26 illustrates an example of setting a property value which is associated with a message of an IMAP server. Upon request by a client system, the UCB 2413 performs a step 2310 for retrieving content as specified by the URL of the IMAP message. Then, in step 2620, the value of the content property "IsRead" is set to "true". In step 2630, the UCB 2413 connects to the IMAP server and instructs the IMAP server to mark the message as read. In step 2640, the message data in a cache storage in USB 2413 is updated.

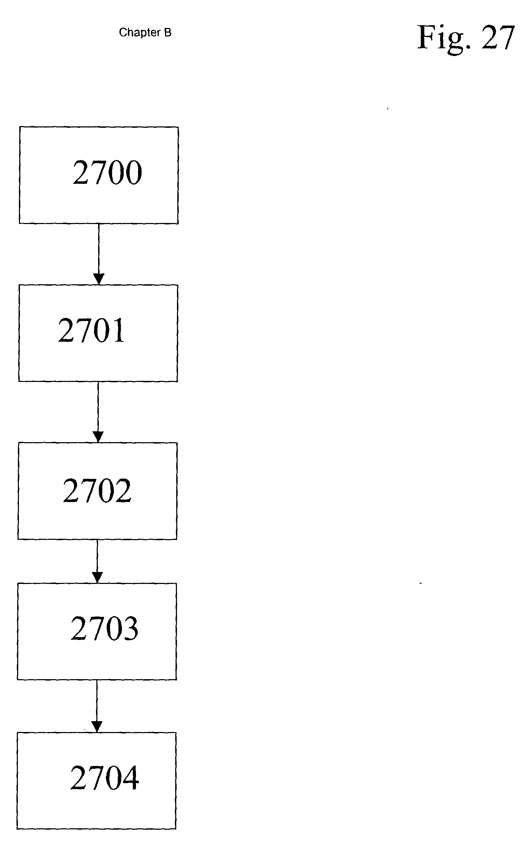

A property may also be retrieved from a message on an IMAP server. Fig. 27 illustrates an example of retrieving a property value. First, the UCB checks whether the message data is stored in a local cache of the network portal system 2310 (step 2750). If so, the property value is retrieved from the local cache (step 2760A). Otherwise, the UCB 2413 connects to the IMAP server and downloads the message (step 2760B). The downloaded message is then stored in the local cache (step 2770B). In both cases, the property value is read and returned to the client system (step 2780).

The UCB 2413 may be further adapted to automatically notify individual client systems whenever new content is created by the UCB 2413. To this end, the functionality of creating new content is associated with the individual client systems ("listeners"). When the UCB 2413 creates new content, the UCB 2413 notifies the individual listeners.

Further, the UCB may be adapted to automatically notify individual client systems whenever particular content is processed by the UCB 2413. For this functionality, the UCB 2413 maintains a register where the URL of the content is associated with the URL of the individual client systems to be notified are registered. Then, whenever content is processed, it is verified whether there is an association of that content with listeners. If so, the associated listeners are notified.

The notification may be dependent upon the kind of content processing. Some listeners may be informed whenever content is changed, some listeners may be informed when content is deleted.

The notification mechanism may be used for synchronizing several client systems, i.e., for updating content changes initiated by one client systems to other client systems.

The generic application programming interface (API) for a content provider system can be extended by additional content or services because the UCB 2413 is based on a component technology which is able to support dynamic interfaces. This allows a system architect not only to use the UCB 2413 as a kind of central access system to all content or services, nor it is only a kind of navigation system for users to go through the available content, it provides moreover an infrastructure for building large enterprise applications, where the ability for acting with different content and the exchange of content is required. The uniform access guarantees that the whole system can be adapted to different infrastructures, without interfering the different applications on top of the UCB 2413.

Depending on the capabilities of a client system, the network portal system 2310 can not only provide the information to a user for viewing content. If a client system 2302A, 2302B is able to execute Java applications, particular Java components 2414A, 2414B can be used in the templates which deploy the functionality of a word-processor or spreadsheet to the client system 2302A, 2302B. Using a standard Java enabled internet browser, a user may be able to write or only change very complex documents on any client system 2302A, 2302B running just a browser which has a network connection to the network portal system 2310. Another solution is to dynamically transcode from one file format to another while transmitting the content. For a native running application on, for example, a palm system this enables the ability to modify a document using this client system. Later, the modifications made on the palm system documents can be transmitted back to the network portal system 2310 and can be applied to the document in the original format.

For client systems 2302A, 2302B which are not permanently connected to the network 2303, the network portal system 2310 provides the ability to synchronize the content of the two UCB via a synchronization component 2414C. A user can read and change his documents while being off-line and after he is going online he can synchronize all this changes with the network portal system 2310.

Optionally, the webtop servlet is accessing this information by using the network portal system API. This is a language independent API for accessing all the functionality of a predetermined Office program bundle comprising word-processing, drawing, calculating, tabulating, file displaying capabilities. Then, the same UCB 2413 can be used by the Office program bundle and also by the network portal system, so a client can use the Office program bundle while working in his office and on the other hand he can use the network portal system to access all his files and information via the network portal system when he is not in his office.

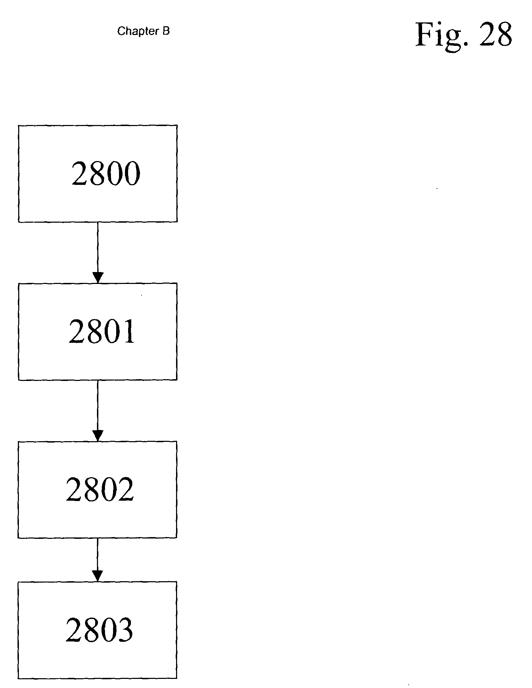

Next, by referring to Fig. 28, the inventive method for linking a plurality of provider systems with a plurality of client systems via the network portal system 2310 is explained. In step 2810, a content request is received from a client system (2302A, 2302B), said request comprising a content indicator being indicative of the content, and an indicator of the requesting client system (2302A, 2302B), said client system indicator specifying the communication scheme supported by said client system (2302A, 2302B). Then, in step 2820, a provider system (2301A, 2301B) is searched which is able to provide said requested content. In step 2830, said selected provider system (2301A, 2301B) is accessed. In step 2840, said requested content is retrieved from said accessed provider system (2301A, 2301B). Finally, in step 2850, the retrieved content is rendered to said requesting client system (2302A, 2302B) according to the communication scheme of said requesting client system (2302A, 2302B).

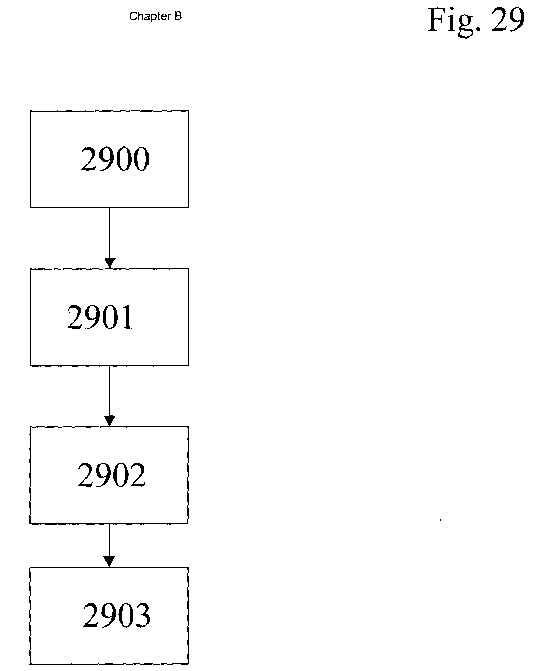

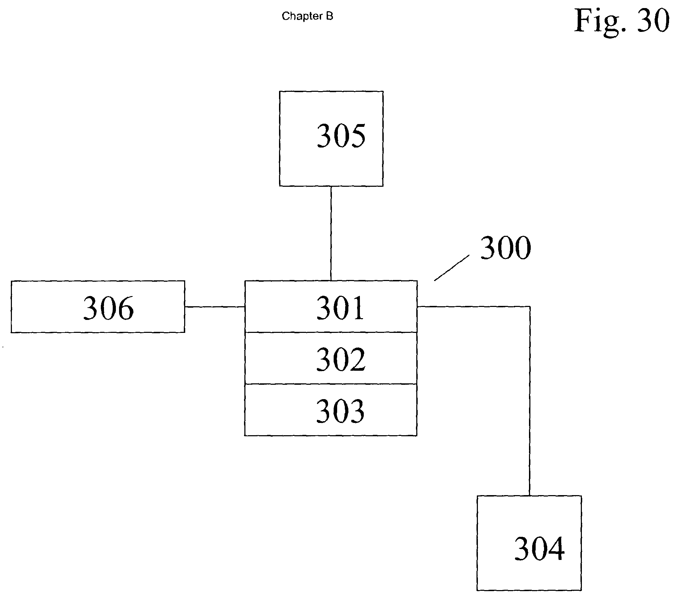

Next, by referring to Figs. 29 and 30, the method for providing content to a client system is explained. The client system requesting content is a mobile telephone 2302B.

First, in step 2901, the HTTP server 2312 receives a request sent from the mobile telephone 2302B. The request comprises the requested content as well as the URL of the mobile telephone 2302B. The request is passed by the HTTP server 2312 to the webtop 2411 of the network portal system 2310 (step 2902).

In the step 2903, a login procedure for the mobile phone 2302B onto the webtop 2411 is started. If the login fails, the webtop 2411 initiates an administration procedure 2916 in which an ID and a password for client system 2302B is defined. The administration procedure 2916 will be described later.

On the other hand, if the login in step 2903 is successful, an authentication procedure 2904 is started in which the identity as well as accessing rights of the mobile telephone 2302B are verified. If the authentication fails, the client administration procedure 2916 is initiated.

If the authentication in step 2904 is successful, the webtop 2411 selects the template as specified by the received URL (step 2905).

The content request is passed from the webtop 2411 to the UCB 2413 (step 2906), which in turn accesses the provider register and selects therefrom the appropriate service provider system 2301A, 2301B for retrieving the content (step 2907).

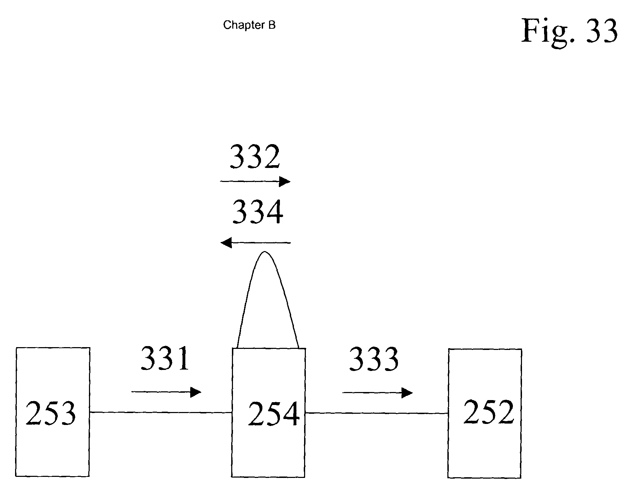

The content is then delivered by the selected provider system 2301A, 2301B to the UCB 2413 (step 2908). The UCB 2413 passes the received content to the webtop 2411 as it is (step 2909). Then, in step 2910, the webtop 2411 checks whether or not the communication schemes of the provider system and client system match. If not so, the webtop 2411 invokes a conversion procedure (step 3011) is in which an appropriate conversion component 2418A, 2418B for converting the content of the provider's scheme into a representation according to the client's scheme is executed. The conversion procedure will be described later in connection with Fig. 33.

Then the webtop 2411 fits the converted information into the selected template (step 3012). Then, a stylesheet according to the MIME type of the client system 2302B is selected (step 3013). The template is rendered according to the selected stylesheet (step 3014), forwarded via the HTTP server 2312 to the client mobile phone 2302B having requested the content (step 3015).

On the other hand, if the communication scheme of the selected provider 2301A, 2301B corresponds to the communication scheme of the client 2302B, step 3011 is stepped over, and the retrieved information can be fit directly without further change into the template, rendered according to the selected stylesheet and forwarded via the HTTP server 2312 to the client system 2302B.

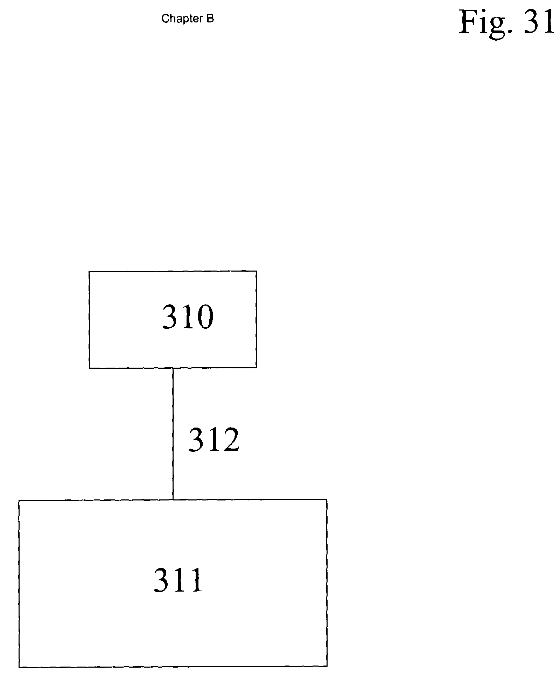

Next, referring to Fig. 31, the administration procedure 2916 an administration procedure in which an ID and a password for a client system is described in greater detail. In step 3101, the webtop 2411 selects a stylesheet according to the communication scheme of the client system. In step 3102, a login template according to the communication scheme of the client is rendered. A number of login templates, each being specific for a certain MIME type, are available to the webtop 2411. In step 3103, the selected login template is transmitted, via the HTTP server 2312, to the client system requesting the login. Upon receiving the login template, the client system can initiate the login procedure (step 3104). This login procedure comprises defining a login and a password for the client system (step 3105).

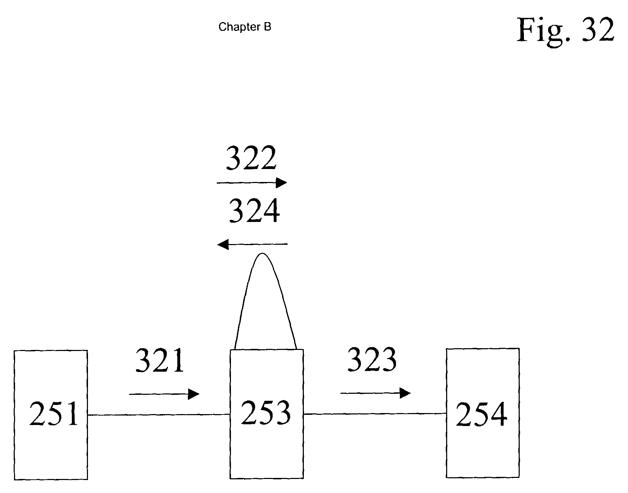

Referring now to Fig. 32, a case is described where the client system is a computer 2302A executing a browser program, which accesses the network portal system 2310 for requesting content to be displayed within the browser. For displaying the content, the service of a specific drawing component 2414A is assumed to be necessary. This component 2414A is hosted in the network portal system 2310 together with other service components 2414B, 2414C. For using the services of said components 2414A, 2414B, 2414C, specific applets are provided by the network portal system 2310. These applets have to be transmitted from the network portal system 2310 to the client computer 2302A prior to the content.

The login procedure for computer 2302A is basically the same as described above in connection with Fig. 31 and is omitted here.

From the browser program being executed on computer 2302A a request to the HTTP server 2312 is sent for retrieving the content (step 3202). The request is passed to the network portal system 2310 (step 3201). The webtop 2411 selects the template and the specific applet for using the drawing service of component 2414A (step 3202). The content identifier URL is entered into the template (step 3203). The webtop selects as stylesheet according to the MIME type "HTML" (step 3204), and renders the template accordingly. The applet, embedded into an HTML page according to the selected template, is transmitted to the computer 2302A (step 3205).

Now, the procedure for providing the requested content is started. First, the specific applet being executed on client computer 2302A connects to the webtop 2411 (step 3206). The related service component 2414A is called in order to load the content as specified by the URL (step 3207). The content is requested from the UCB 2413 (step 3208). The UCB 2413 in turn accesses the content according to the URL and passes it to the service component 2414A (step 3209). The service component 2414A, upon call by the related applet on the client computer 2302A, renders the service necessary for drawing the content information in the browser upon transmitting it to the client computer 2302A (step 3210).

Referring to Fig. 33, the conversion of content is described. Conversion is invoked whenever content according to one communication scheme is to be transcoded into content according to another communication scheme.

First, it is checked whether the webtop 2411 can process the content (step 3301). If not so, an error message is issued to the client system (step 3302). On the other hand, if the webtop 2411 can process the content, it is then checked (step 3303) whether the content is to be edited on the client system or only to be displayed there. If the content is only to be displayed on the client system, the best matching communication scheme supported by the client system is selected as scheme of conversion (step 3304). Then, the corresponding conversion component 2418A is executed in order to convert the content (step 3305), and the converted document is then ready for being transmitted to the client system as described above.

On the other hand, if the content is to be edited by using webtop functionality, it is checked whether the client system is able to execute the corresponding Java applets which invoke the editing functionality (step 3306). If so, the webtop 2411 generates a template for a HTML page with an applet embedded therein and sends it to the client system (step 3307). The conversion of the content is performed on the fly when transmitting it to the client system (step 3308).

However, if the client system is not able to execute Java applets, steps 3304 and 3305 are performed as described above.

If content is represented in XML format, this offers the potential for the synchronization of content between various content provider systems that implement the same content schema but obtain or store content differently. The synchronization process them becomes a comparison of time stamps and / or the comparison of the XML content, which are both functions independent of the content provider systems. Thus there can be network portal content providers that are implemented for various personal digital assistants (PDAs) which can send and receive XML documents conforming to schema for document areas as such as addressing, calendar and scheduling, and mail.

Special purposes may be applications designed for being executed on particular platforms like handheld computers or mobile telephones, where storage and processing capabilities are particularly limited. Nevertheless, the whole functionality of the framework is still accessible.

The synchronizing of content may also be extended to area of multi-user operation when numerous people may be operating on various areas of the content.

The network portal system offers not only a powerful way of treating heterogeneous content in a homogeneous manner but a way to group heterogeneous content together with network information about content. In a further embodiment of the invention, a network is created which stores URLs that are organized according to the defining semantics or hierarchy of another client rather than the semantics or hierarchy that the content prescribes. This also includes the structure of the content. Network content is not defined by the structure of the content and its children. Thus content may be related to each other in an a-cyclical manner rather than in the direct manner that file systems are represented. In addition it is possible to inherit network content structure and augment or modify it without modifying the original.

An example is a network portal system specially used for management of projects on which different teams are working. For the automobile manufactures most often a team of engineers, marketing specialists and finance experts are working together. One team mostly need some information from the other and also provides information to the other. The only difference is which data is important is important for one team and how these should be organized in the best way for them. For example the engineering team will produce CAD-drawing and detailed lists of item needed to build a peace of an automobile of the project. On the other hand the finance experts are not interested in the CAD-drawing and also not on the detailed list of items. They are more interested in overall summary which items are need to build the special peace, so they can calculate the price for this and overall calculate the price for the car. The marketing team may be interested in the drawings, because give some feedback if the colors will be accepted by the customers. So every is working on the same project and also on the data files, but the focus which data is used can be completely different.

The network portal system provides this infrastructure by the capability of the UCB to browse through all content and information using the UCB. Adding user specific or task specific properties to a content, enables the sorting or the creation of an hierarchical view to this information, which can be completely different to the physical structure on the disk.

It is also possible to build a similar system using the Java 2 Enterprise Edition as a base system and at the logic and management functionality on top of this in form of Java application or Java beans. Also the whole UCB system can be realized on top of a database, for example an object oriented database or a XML-database.

Referring to the Annex I, an overview of the framework for implementing the network portal system is presented as defined in the interface definition language files. Via these interfaces, the following operations can be achieved: Content is provided. Content is obtained from content providers. Content is defined. The interfaces may be implemented in software and/or hardware components.

Content providing.

The network portal system provides services to register and maintain implementations of content provider systems. Content provider systems are classified according to what uniform resource locator (URL) schemes they implement. The scheme is the protocol used to connect to the site or host. For Web sites the scheme is http. For IMAP or FTP sites, the scheme is (respectively) imap or ftp.

Thus given a URL the scheme may be obtained. If a content provider system 2301A, 2301B is registered with the corresponding URL scheme then content may be obtained for the URL.

The main network portal service that manages content providers is the UniversalContentBroker and is a one instance service that implements interfaces, including the registering and de-registering interface.

Content provider objects implementing the XContentProvider interface may register and de-register with corresponding schemes. In addition the list of registered content providers may be obtained with their corresponding schemes.

The UniversalContentBroker also implements the XContentProvider interface. Thus it may generate content for all schemes registered and the client does not have to query all content providers. Content is generated via the queryContent method which takes an XContentIdentifier reference and returns an XContent reference.

The XContentIndentifierFactory interface is created from a URL of a content identifier which contains further characterizing information: URL and content identifier.

The XContentIdentifier interface provides methods for maintaining a URL. The URL may be set just once using the setContentIdentifier method. Its scheme may be retrieved using the getContentProviderScheme. Thus the XContentProvider queryContent method will call the getContentProviderScheme to see if it supports the associated scheme before creating content. XContentIndentifier references can be created using the XContentIndentifierFactory reference of the UniversalContentBroker service.

Getting content from a provider system.

Content will be provided by implementing a set of network portal interfaces. A content object will be created by a content provider when an appropriate URL via the XContentIdentifier reference is passed to the queryContent method of an XContentProvider reference.

An example of how content may be obtained is presented in the Annex I, which is referred to in the following. Given a factory interface m_xFac an XInterface reference to the UniversalContentBroker service is created. The three interfaces that the UniversalContentBroker implements are then obtained. Next an XInterface reference to an FTP content provider service is created. The XContentProvider interface reference is then obtained from this. The m_xFTPCP XContentProvider reference is then registered with the m_xCPM XContentProviderManager reference via the regsiterContentProvider method. A XContentIdentifier reference xCID is then created with the URL 'ftp://rimmer/pub'. The XContentProvider reference m_xCP of the UniversalContentBroker service is then used to obtain an XContent reference via the queryContent method.

Once a reference to the xcontent is obtained it is possible to transform this to other interfaces that the content object implements.

Content objects.

A content provider will provide objects that implement a set of interfaces that define: The type of content, notification of when content changes state, how content may be created from this content, what children this content has, what commands may be performed on the content, what properties set and obtained.

Note that not all aspects of the above may be defined. It will obviously depend on the type of content created.

An XContent reference will be return by an XContentProvider. This is a simple interface which will return a MIME type representing the type of content. In addition clients of the content may add themselves as listeners on the content by implementing the XContentEventListener interface and passing the reference to the addContentEventListener method.

When action on content is performed registered clients will get notified via the contentEvent method. Notification occurs when content is:

- Inserted.
  This occurs when a child is inserted into the content. For example if a directory folder is opened its content may be inserted asynchronously into the folder. A client responsible for the display of this content may then update its view according to the new content.
- Removed.

This occurs when content is removed, but not deleted. An example of this may occur if child content is moved to a different parent.

- Deleted.

  This occurs when the content is physically destroyed. That is the content no longer persists.

- Changed.

  This occurs when the content has changed its identity. For example if a directory folder has changed its name.

- Matches search criteria.

  This occurs when one or more child contents match search criteria.

A content object that has children can implement the XIndexAccess interface. This inherits from the XElementAccess interface. This may be used for content to return children that are also content. The type any returned from the getByIndex method may be cast according to the XContent interface if its valid to do so. Thereby a directory or folder content may return its children in this way.

A content object that also creates content will implement the XContentCreator interface. This defines what type of content may be created via the queryCreatableContentsInfo method. This will return a sequence of ContentInfo, which just contains the mime type of content that may be created.

New content can be created by calling the createNewContent method with the appropriate ContentInfo. This method does not persist the content since what has been created has not been initialized. Initialization may result in property and command operations on the new content. When the content has been initialized it can be inserted into the parent using the insertcontent method.

Given a command and task environment an XCommandTask reference will be returned by the method createCommandTask. The command structure inherits from CommandInfo and additionally contains a field for any which represents the arguments passed as a reference to an object.

The XCommandInfo interface will be obtained from the XCommandTaskProcessor. This interface will be used to obtain and query possible commands. The CommandInfo structure contains the attributes of the command.

An XCommandTask reference is obtained from an XCommandTaskProcessor that the content object implements. It inherits from the XContentTask interface which contains methods to operate on the task at hand. This interface is explained after the properties interfaces, which also use the XContentTask interface, have been presented.

The XPropertyTaskProcessor inherits from the XMultiPropertySet interface. This interface encapsulates similar behavior as the XCommandTaskProcessor interface. Given a type of set of properties and an operation to be performed via the PropertyTaskType (either a set or a get) a XPropertyTask reference will be created from the createpropertyTask method.

The querying of property types is performed through the XMultiPropertySet interface. Thus a content object will have to implement this interface too.

A reference to an XPropertyTask will be obtained from the XPropertyTaskProcessor. Like the XCommandTask this inherits from XContentTask such that the operation can be executed.

The XContentTask interface is a super interface that is used by both the XComandTask and XPropertyTask interfaces. It provides methods to perform the task synchronously or asynchronously via the execute and start methods respectively. If performed asynchronously then event notification will occur through the XContentTaskEnvironment. A reference to the XContentTaskEnvironment is passed when the XContentTask is created by the associated command or property processor interfaces.

The XContentTaskEnvironment provides a context for tasks handle errors and notify when tasks have changed status. An implementation of the XContentTaskEnvironment interface will also include the ability to set the XContentTaskClient reference which is used provide task status feedback.

A client wishing to run tasks on content, either commands or properties will need to implement the XContentTaskClient interface. When task state changes the client will be notified via the contentTaskEvent method. Status will include the old and new state of the task and the XContentTask reference associated with the change in state. The state of the task can be one of the following:

- Created,
- Running,
- Done,
- Aborted.

Obtaining children from content.

From the content a reference to the XIndexAccess is obtained. The number of children is obtained from the getCount method. Each child is then obtained via the getByIndex method, which is of type Any. If Any can be cast to a reference to a pointer to XContet then a reference, XContent is obtained. The XContentIdenitifier reference is then obtained from XContent. From this the scheme is printed out. From XContent the MIME type is printed out.

Executing tasks on content objects.

Once an XContent reference is obtained for a content object, it is possible, if supported, to execute tasks on the content to send commands or get and set values of properties.

Querying commands.

From the content a reference to the XCommandProcessor is obtained. If it is valid then a reference to the XCommandInfo is obtained and from this the sequence of possible commands. The command names are then printed out.

Executing commands.

A reference to an XCommandTask is created from the reference to the XCommandTaskProcessor with a given command and reference to the XContentTaskEnvironment. If the task is valid then is it executed synchronously via the execute method. The resultant object of type any is then obtained via the getResult method.

Querying properties.

From the XContent reference the XPropertyTaskProcessor reference is obtained. If it is valid then the reference to the XPropertySetInfo is obtained via the getPropertySetInfo method. The sequence of property names is then obtained from the getproperties method. The property names are then printed out.

Get value of a property.

From the XPropertyTaskProcessor reference an XPropertyTask reference is created via the createpropertyTask method and a sequence of properties and a reference to the XContentTaskEnvironment. If the task is valid the property is obtained by calling the execute method. Thus the property is obtained synchronously. The sequence of values is then obtained from the getProperties method. The value of the first property is then obtained in any.
In the following examples of code sections for carrying out operations of the above embodiments. It is noted that the examples are not to be construed as limiting the invention.

## Content providing

```
scheme://host/path/extra-path-info?query-info
```

## UniversalContentBroker service

```
service UniversalContentBroker
{
        interface XContentProviderManager;
        interface XContentProvider;
        interface XContentIdentifierFactory;
};
```

## XContentProviderManager interface

```
interface XContentProviderManager : stardiv::uno::XInterface
{
        void registerContentProvider( [in]  XContentProvider Provider,
```

```
                                    [in]  string Scheme,
                                    [in]  boolean ReplaceExisting,
                                    [out] XContentProvider Replaced )
                  raises ( DuplicateProviderException );

      [oneway] void deregisterContentProvider(    [in] XContentProvider Provide
                                                  [in] string Scheme );

      sequence<ContentProviderInfo> queryContentProviders();
};
```

## XContentProvider interface

```
interface XContentProvider : stardiv::uno::XInterface
{
      boolean queryContent([in]  XContentIdentifier Identifier,
                           [out] XContent NewContent );

      ContentIdCompare compareContentIds([in] XContentIdentifier Id1,
                                         [in] XContentIdentifier Id2 );
};
```

## XContentIndentifierFactory interface

```
interface XContentIdentifierFactory : stardiv::uno::XInterface
{
      XContentIdentifier createContentIdentifier( [in] string ContentId );
};
```

## XContentIndentifier interface

```
interface XContentIdentifier : stardiv::uno::XInterface
{
      void setContentIdentifier( [in] string ContentId )
              raises ( AlreadyInitializedException, IllegalIdentifierException );

      string getContentIdentifier();

      string getContentProviderScheme();
};
```

## Getting content from a provider system

```
Reference< XInterface > xI_UCB (
        m_xFac->createInstance (
                L"stardiv.one.ucb.UniversalContentBroker"));
Reference< XContentProviderManager > m_xCPM =
        Reference< XContentProviderManager >::query (xI_UCB);
Reference< XContentIdentifierFactory > m_xCIDF =
        Reference< XContentIdentifierFactory >::query (xI_UCB);
Reference< XContentProvider > m_xCP =
        Reference< XContentProvider >::query (xI_UCB);

Reference< Xinterface> xI_FTPCP (
        m_xFac->createInstance (
                L"xxx.xxx.xxx.FtpContentProvider"));
Reference< XContentProvider > m_xFTPCP =
        Reference< XContentProvider >::query (xI_FTPCP);

Reference< XContentProvider > xReplaced;
m_xCPM->registerContentProvider (m_xFTPCP, L"ftp", sal_False, xReplaced);

Reference< XContentIdentifier > xCID =
        m_xCIDF->createContentIdentifier (L"ftp://home/pauls/");

Reference< XContent > xContent;
sal_Bool v = m_xCP->queryContent (xCID, xContent);
```

## XContent interface

```
interface XContent : stardiv::uno::XInterface
{
        void initialize( [in] XContentIdentifier Indentifier )
                raises ( AlreadyInitializedException, IllegalIdentifierException );

        XContentIdentifier getIdentifier();

        string getContentType()

        [oneway] void addContentEventListener(
                        [in] XContentEventListener Listener );

        [oneway] void removeContentEventListener(
                        [in] XContentEventListener Listener );
};


interface XContentEventListener : stardiv::uno::util::XEventListener
{
    void contentEvent( [in] ContentEvent evt );
};
```

## XIndexAccess interface

```
interface XIndexAccess : XElementAccess
{
        [const] long getCount();
```

```
                        [const] any getByIndex( [in] long Index )
                                raises( stardiv::uno::lang::IndexOutOfBounds,
                                stardiv::one::lang::WrappedTargetExeception );
                        };
```

## XContentCreator interface

```
interface XContentCreator : stardiv::uno::XInterface
{
        sequence<ContentInfo> queryCreatableContentsInfo();

        boolean createNewContent(    [in]  ContentInfo Info,
                        [out] XContent NewContent );

        boolean insertContent( [in] XContent Content );
};


struct ContentInfo
{
        string Type;
        long Attributes
}
```

## XCommandTaskProcessor interface

```
interface XCommandTaskProcessor : stardiv::uno::XInterface
{
        XCommandTask createCommandTask(
                        [in] Command TheCommand,
                        [in] XContentTaskEnvironment Environment );

        XCommandInfo getCommandsInfo();
};
```

## XCommandInfo interface

```
interface XCommandInfo : stardiv::uno::XInterface
{
        [const] sequence<CommandInfo> getCommands();

        [const] CommandInfo getCommandInfoByName( [in] string Name )
                raises( UnsupportedCommandException );

        [const] CommandInfo getCommandInfoByHandle( [in] long Handle )
                raises( UnsupportedCommandException );

        [const] boolean hasCommandByName( [in] string Name );

        [const] boolean hasCommandByHandle( [in] long Handle );
};
```

## XCommandTask interface

```
interface XCommandTask : XContentTask
```

```
{
        Command getCommand();

        any getResult();
};
```

## XPropertyTaskProcessor interface

```
interface XPropertyTaskProcessor : stardiv::uno::beans::XMultiPropertySet
{
        XPropertyTask createPropertyTask(
                        [in] PropertyTaskType Type,
                        [in] sequence<stardiv::uno::beans::PropertyValue> Properties,
                        [in] XContentTaskEnvironment Environment );
};
```

## XPropertyTask

```
interface XPropertyTask : XContentTask
{
        PropertyTaskType getType();

        sequence<PropertyValueInfo> getProperties();
};
```

## XContentTask interface

```
interface XContentTask : stardiv::uno::XInterface
{
        [oneway] void start();

        void execute()
                raises ( stardiv::uno::Exception );

        [oneway] void abort();

        ContentTaskStatus getStatus();

        XContentTaskEnvironment getEnvironment();
};
```

## XContentTaskEnvironment interface

```
interface XContentTaskEnvironment : stardiv::uno::XInterface
{
        XContentTaskClient getClient();

        XErrorHandler getErrorHandler();
};
```

## XContentTaskClient interface

```
interface XContentTaskClient : stardiv::uno::util::XEventListener
{
        void contentTaskEvent( [in] ContentTaskEvent Event );
};
```

## Obtaining children from content

```
Reference< XIndexAccess > xIdx(
        Reference< XIndexAccess >::query( m_xContent ) );
sal_uInt32 nCount = xIdx->getCount();
if ( nCount )
{
        print( "Children:" );
        for ( sal_uInt32 n = 0; n < nCount; ++n )
        {
                Any aChild = xIdx->getByIndex( n );
                if ( aChild.getValueType() ==
                getCppuType( (const Reference< XContent >*)NULL ) )
                {
                        const Reference< XContent >* pContent =
                                SAL_STATIC_CAST( const Reference< XContent >*,
                                aChild.getValue() );
                        Reference< XContent > xContent( *pContent );
                        Reference< XContentIdentifier > xId(
                                xContent->getIdentifier() );
                        WString aText( "\t" );
                        aText += xId->getContentIdentifier().getStr();
                        aText += " - ";
                        aText += xContent->getContentType();
                        print( aText );
                }
        }
}
```

## Querying commands

```
Reference< XCommandTaskProcessor > xProc(
        Reference< XCommandTaskProcessor >::query ( x_XContent ));
if ( xProc.is () )
{
        Reference< XCommandInfo > xInfo (xProc->getCommandsInfo() );
        Sequence< CommandInfo > aCommands (xInfo->getCommands() );
        const CommandInfo* pCommands = aCommands.getConstArray();
        for (sal_uInt32 n = 0; n < aCommands.getLength (); n++)
        {
                print ( pCommands[ n ].Name.getStr() );
        }
}
```

## Executing commands

```
Reference< XcommandTask > xTask(
        xProc->createCommandTask( aCommand, xEnv ) );
if ( xTask.is () )
{
        xTask->execute();
        Any any = xTask.getResult();
}
```

## Querying properties

```
Reference< XPropertyTaskProcessor > xProc(
        Reference< XPropertyTaskProcessor >::query ( m_xContent ));
if ( xProc.is() )
{
        Reference< XPropertySetInfo > xInfo(
                xProc->getPropertySetInfo() );
        Sequence< Property > aProps (xInfo->getProperties() );
        for (sal_uInt32 n = 0; n < aProps.getLength(); n++)
        {
                print ( aProps[ n ].Name.getStr() );
        }
}
```

## Get value of a property

```
Reference< XPropertyTask > xTask(
        xProc->createPropertyTask (
                PropertyTaskType_GET, aProps, xTaskEnv) );
if ( xTask.is() )
{
        xTask->execute();
        Sequence< PropertyValueInfo > aResults(
                xTask->getProperties() );
        const PropertyValueInfo* pResults =
                aResults.getConstArray();
        Any any = pResults[ 0 ].Value
}
```

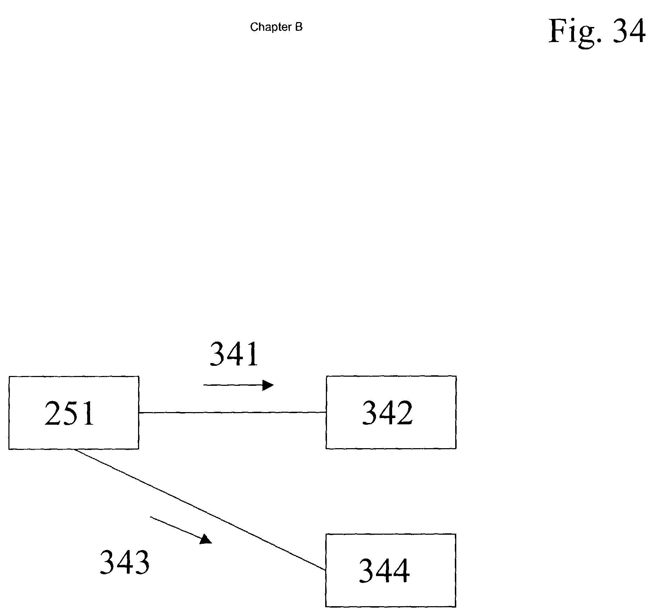

In the following, embodiments for an individual representation of data will be described with respect to Figs. 34 - 39.

Information requested by a user device naturally needs to be in a format to be understood by this specific user device. Therefore, in many instances information is only accessible to a certain group of user devices. For example, homepages of individuals or companies provided by a webserver over the internet are generally available only to specific user devices, namely computer systems supporting the regular homepage data format html. However, the access of other user devices to this information may also be desirable. Such user devices may be, for example, hand-held computers or mobile phones.

It is therefore desirable to provide access of data, particularly over a network, to a variety of different user devices, including mobile phones and handheld computers.

A method for presenting data on a user device with presentation requirements relating to the presentation of this data on the user device, comprises the following steps:

a) receiving a request from the user device for the data by data presentation management means,

b) identifying the presentation requirements of the user device to the data presentation management means,

c) selecting a presentation scheme for the data in accordance with the presentation requirements, so that the presentation scheme can be applied to the data to create presentable data to allow the presentation of the data on the user device.

Herein, the step c) may be carried out by the data presentation management means. The method may also comprise the step d) of applying the presentation scheme to the data to create presentable data to allow the presentation of the data on the user device. This step d) may be carried out by the data presentation management means. However, step d) may also be carried out by the user device or by any other device which applies the presentation scheme and provides the presentable data to the user device.

The aforementioned method may be supplemented by the further step e) of transmitting the presentable data to the user device to allow the presentation of the data on the user device.

The data may be retrieved by the data presentation management means before the application of the selected presentation scheme to the data. In another embodiment the data may be retrieved by the user device itself. Then, the selected presentation scheme may be applied by the user device or by the presentation management means. The latter would, for example, apply, if the data retrieved by the user device would be transferred to the presentation management means for applying the selected presentation scheme and than be re-transferred to the user device.

Further, a method may be provided for obtaining data by a user device having presentation requirements relating to the presentation of the data on the user device, comprising the following steps:

a) submitting a request by the user device to data presentation management means for obtaining the data from the data presentation management means, the request causing the identification of the presentation requirements of the user device to the data presentation management means, the selection of a presentation scheme for the data in accordance with the presentation requirements of the user device by the data presentation management means, the request further causing the application of the selected presentation scheme to the data to create presentable data, and

b) receiving in the user device the presentable data to allow the presentation of the data by the user device.

Furthermore, a method may be provided for obtaining data by a user device having presentation requirements relating to the presentation of the data on the user device, comprising the following steps:

a) submitting a request by the user device to data presentation management means for obtaining the data from the data presentation management means, the request causing the identification of the presentation requirements of the user device to the data presentation management means and the selection of a presentation scheme for the data in accordance with the presentation requirements of the user device by the data presentation management means,

b) receiving in the user device the selected presentation scheme for the data,

c) applying in the user device the selected presentation scheme on the data to create presentable data.

Herein, the user device may receive the data via data management presentation means, as described earlier.

Here, data may be the representation of information. This information can be presented by any suitable means, for example, text, picture, sound, movie or action. Different kinds of information can also be combined. This data may be accessible to the user device, for example, via a network. For the retrieving of the data certain requirements of the user device have to be considered. Such requirements may be of different type. They include presentation requirements. They may further have different origin. For example, the requirements may be caused by the software on the user device, which may support only specific kinds of information. It may also be possible that the requirements depend of the hardware of the user device, if the user device can, for example, present information merely via a loudspeaker. User depending requirements are also possible within the scope. This may be caused by certain preferences of the user as well as by a handicap.

Further, data may also include functions. Such functions may be, for example, actions for presenting data, for example, movies and sound as well as function for processing on data like, for example, calculation functions or spellchecker.

A user device may be, for example, a computer system comprising at least a processor, a storage medium and an i-/o-interface. Via this i-/o-interface the user device may be connected to the source of the data. It will also be possible that the requested data is stored on the storage medium of the user device. Regularly, the user device comprises also input and output devices connected via the i-/o-interface.

The requested data may be retrieved via at least one portlet. In this context a portlet may be understood to be means for providing the requested data from a data source, for example, from a certain homepage or data base.

Two or more portlets may be arranged in tree-like organization. This tree-like organization may be presented to a user of the user device, for example, on a screen of the user device, so that this user has the possibility to easily choose among the offered portlets.

The presentation requirements of the user device may be determined based on information about the user device. For example, if the data presentation management means are informed about the type of the user device they may conclude therefrom the presentation requirements of the user device.

In the present context data presentation management means are hardware or - generally - software means for managing the presentation of data on a user device. Their exact functionality depends on the implementation. The functionality of the data presentation management means includes at least the selection of the presentation scheme for the requested data in accordance with the presentation requirements of the user device. For this purpose the data presentation management means must be informed about the presentation requirements of the user device. Furthermore, the functionalities of the data presentation management means may include the application of the selected presentation scheme on the requested data in order to create presentable data to be presented by the user device. This requires the availability of the requested data for the data presentation management means. The retrieval of this data may also be carried out by the data presentation management means.

The presentation schemes may be defined, for example, in an extensible stylesheet language (XSL). XSL is a language for creating a stylesheet which describes how content being formatted in an extensible markup language (XML) will be presented to a user device. The presentation scheme may describe, for example, if a certain content defined in XML will be displayed, where this content will be displayed and how it will be displayed.

The above methods may be implemented in a computer program (computer program product), including comprehensive office applications. A computer program product comprises a medium configured to store or transport computer readable code, or in which computer readable code may be embedded. Some examples of computer program products are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks. A data carrier may store a computer program for carrying out the above operations and a standard computer system may be used for carrying out the above operations.

A computer system may be provided comprising at least a processor, a memory and an i-/o-interface for representing data depending on presentation requirements of a user device relating to the presentation of the data on the user device, comprising data presentation management means, wherein the data presentation management means include:

a) at least one receiving module for receiving a request of the user device for the data,

b) at least one identifying module for identifying the presentation requirements of the user device, and

c) at least one selecting module for selecting a presentation scheme for the data in accordance with the presentation requirements.

Furthermore, the computer system may comprise

d) at least one retrieving module for retrieving the data, and

e) at least one applying module for applying the selected presentation scheme to the data to create presentable data which may be presented by the user device.

The retrieving and the applying functions may also be carried out in a user device or in a computer system being accessible to the user device. Therefore, the retrieving module and the applying module may also be located in the user device or in any computer system which is connectable or conntected to the user device and which is able to deliver the result of the application of the presentation scheme, the presentable data, to the user device.

The aforementioned computer system may be supplemented by a transmitting module e) for transmitting the presentable data to the user device to allow the presentation of the requested data on the user device.

In the following, an embodiment will be described with respect to Fig. 34.

Fig. 34 shows an example of a system and method for the individual representation of data. A user device like a mobile phone 3401A or a laptop computer 3401B may want to access certain data via the network 3402. This network 3402 may be the Internet or any other permanent or temporary network, for example a local area network. Other user devices are suitable as well. Examples include any kind of computer systems, like servers and personal computers, and any devices which are able to process data and to communicate with other devices for exchanging data. In this context computer systems may include at least a processor, a storage medium and an i-/o-interface. In this context data refers to any type of information which is arranged in certain order to be accessible by a computer system. The data to be accessed may also include one or more functions or functionalities provided to the user of a user device. Functions are, in this context, possibilities given to the user device to initiate any actions beyond the mere retrieval or display of information, for example, a search in the internet for a certain publication or the initialization of a software program on a remote server carrying out some operations in response to the user device's request.

If the user device 3401A or 3401B wants to access certain data via the network 3402, it will send a request for said data, for example, for a certain homepage, to a webserver 3403. The webserver 3403 comprises a processor, a memory and an i-/o-interface.

In particular, the webserver 3403 includes means for receiving this request. The request may specify the data requested from the mobile phone 3401A or the laptop 3401B by giving suitable address data as to where this data can be found, for example, the Internet address of a homepage (URL).

This request will be forwarded to data presentation management means, in the following exemplary referred to as portlet manager 3404. This portlet manager 3404 may be implemented in software within the webserver 3403 or may be installed on a separate computer system which is connected or connectable to the webserver 3403. Having received the request for data from the webserver 3403 the portlet manager 3404 identifies the presentation requirements of the user device having sent the request for the data with respect to the presentation of the data to this user device. For this purpose the user device has means for identifying these requirements. These presentation requirements may be any conditions or limitations for the presentation of data on the user device, for example, kind and size of display for data on the user device, type of programming language or data format supported by the user device, or any other presentation requirements of the user device, for example, of the processor or the memory. These presentation requirements may not only result from technical necessities, but also from an individual user's demands or wishes. The presentation requirements of the specific user device are identified by the respective means either by being provided the information about the presentation requirements directly from the user device, together with the request for the data or separately, or by being provided information about the type of the user device and by procuring the needed information about the presentation requirements of the so identified user device from a data base, which may or may not be an integral part of the portlet manager, and which connects information about the type of the user device with the desired information about the specific presentation requirements of the user device with respect to the presentation of the requested data.

In order for the data to comply with the identified requirements the portlet manager 3404 loads all configuration information needed for presenting the requested data to the user device 3401A or 3401B, respectively. Configuration information is all information about the layout and the presentation of the requested data. It must correspond to the identified requirements. The totality of the configuration information needed to present data to a certain user device is referred to as a presentation scheme. This is selected according to the presentation requirements of a certain user device by the data presentation management means, i.e. the portlet manager 3404. For this purpose, XSL-stylesheets, which may be stored in storage medium 3405 may be selected according to the identified requirements by means 3407 for presenting data in accordance with the identified presentation requirements of the user device 3401A. These means 3407 are generally implemented in software. They may, for example, have access to a further external storage medium 3408 on which, for example, XSL-stylesheets may be stored. The configuration data loaded in response to the user device's request may be stored in a specific file until the data to which it shall be applied has been provided.

The portlet manager 3404 now retrieves the requested data. The data is procured via the webserver 3403 from portlets 3409, 3410, ... . Portlets 3409, 3410, ... represent ways for accessing the requested data. This data may have different format. For example, text based information may be provided in the HTML format as well as in the WML format. The portlets 3409, 3410, ... have means for accessing data, including software modules, to retrieve the requested data for the portlet manager 3404 from any accessible location, including internet homepages, data bases and other storage media.

In the portlet manager 3404 the means 3407 will then apply the presentation scheme loaded from storage media 3405, 3406 and 3408 to the data. This presentation scheme will be applied to the data. Herewith, the data which was requested by the user device 3401A or 3401B, respectively, is converted to presentable data which may be presented in accordance with the requirements of the user device 3401A or 3401B, respectively.

Finally, the data may be transferred to the user device 3401A, 3401B which requested it in the presentation required by this user device 3401A, 3401B. Herewith, the user device 3401A, 3401B may access the requested data in proper form.

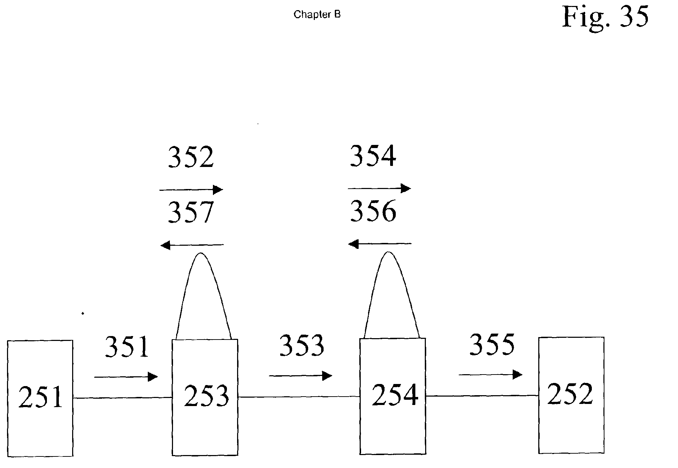

Fig. 35 gives an example of a user's view by showing a print-out of a screen 3520 of a user device, here a laptop. Screen 3520 shows symbols 3521, 3522, 3523, ..., each standing for one portlet - 3409, 3410, ... in Fig. 34. The symbols 3521, 3522, 3523, ... offered on the screen 3520 and the portlets associated therewith can be freely chosen by a user of the user device.

However, a portlet is only selected for display on screen 3520, that means the user can only choose it, if its data may be presented by the user device. For example, if the user device does not support graphics, a portlet which defines the MIME type image/jpeg will not be selected for display on the screen 3520, that means it will not be offered to the user of the user device. This pre-selection of portlets to be offered to the user is made by a comparison of the requirements of the user device and of the MIME type of data defined by each of the portlets. In the above example relating to graphics the presentation requirements of the user device, the laptop, regarding the presentation of data will not allow to support graphics. The comparison with the MIME type of data defined by the various portlets will show that a portlet defining image/jpeg as its MIME type of data cannot be supported by this user device. Therefore, it will not be displayed on the screen 3520. This comparison may be made at any suitable location, for example, in the user device as well as in the webserver, in the portlet manager or in the respective portlet itself.

Instead of the screen print-out given in Fig. 35 the portlets may also be offered to the user of the user device in the form of a text based listing. This listing may be put together in the portlet manager, for example, in the XML format. The information required for this listing, namely which portlet defines which mime type of data, may be retrieved via the webserver from the various portlets.

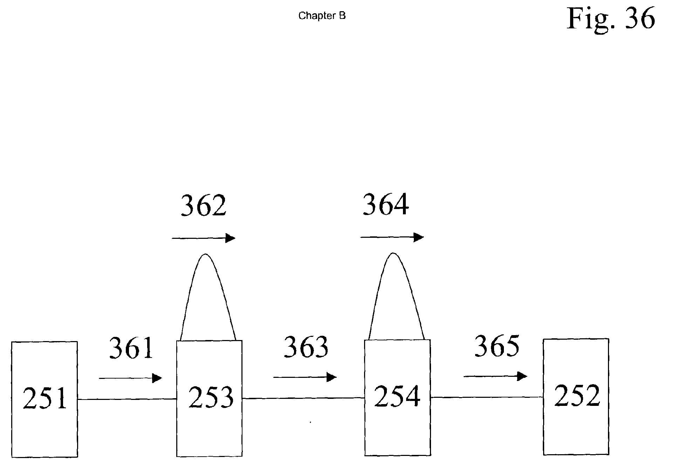

Fig. 36 shows in a flow chart one possible way to fulfill the presentation requirements of the user device 3401A or 3401B, respectively. In a first step 3601 the user device 3401A, 3401B sends a request to the portlet manager 3404 via the webserver 3403. This request either contains information about the presentation requirements of the requesting user device 3401A, 3401B or it contains information about the identity of the user device 3401A, 3401B. It further includes a description of the requested data. Such a description may be, for example, the URL of the data, if the requested data can be found on a homepage on the Internet. The portlet manager 3404 will contact in step 3602 the corresponding portlet for retrieving this data. If the requested data is only available from several different portlets, those would be contacted in this step. In a next step 3603 the portlet manager 3404 retrieves the data from the one or more portlets. In order to consider the presentation requirements of the user device 1 the portlet manager 3404 needs information about these requirements. In one embodiment the portlet manager 3404 extracts from the request in a further step 3604 a list of MIME types supported by the user device 3401A, 3401B. In another embodiment the portlet manager 3404 may have a list of the presentation requirements of different user devices 3401A, 3401B. In this case, the portlet manager 3404 may analyze the identity of the user device 3401A, 3401B in step 3605 and then contact this list in step 3606 in order to obtain the information about the requirements of the user device 3401A, 3401B.

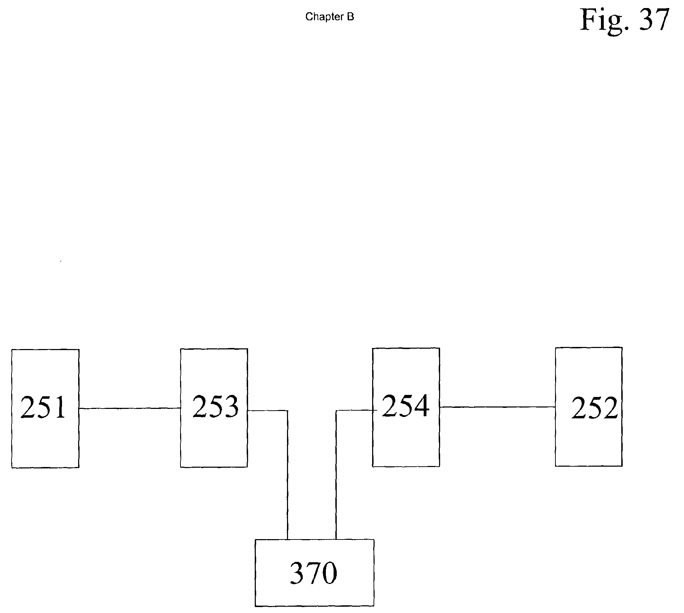

Fig. 37 shows a flow chart representing for presenting data on a user device with certain data presentation requirements. In a first step 3701 the data presentation management means, i.e. the portlet manager 3404 receives a request for data from a user device 3401A, 3401B. In the next step 3702 the portlet manager 3404 identifies from this request the presentation requirements of the user device 3401A, 3401B, as it was above described in relation to Fig. 36. In step 3703 a presentation scheme is selected for the requested data in accordance with the identified presentation requirements. This enables the user device 3401A, 3401B or the portlet manager 3404 or another computer system which is able to be connected to the user device 3401A, 3401B or to the portlet manager 3404 to apply the selected presentation scheme to the data delivered by the portlets in order to arrive at presentable data which may be presented to the user device 3401A, 3401B.

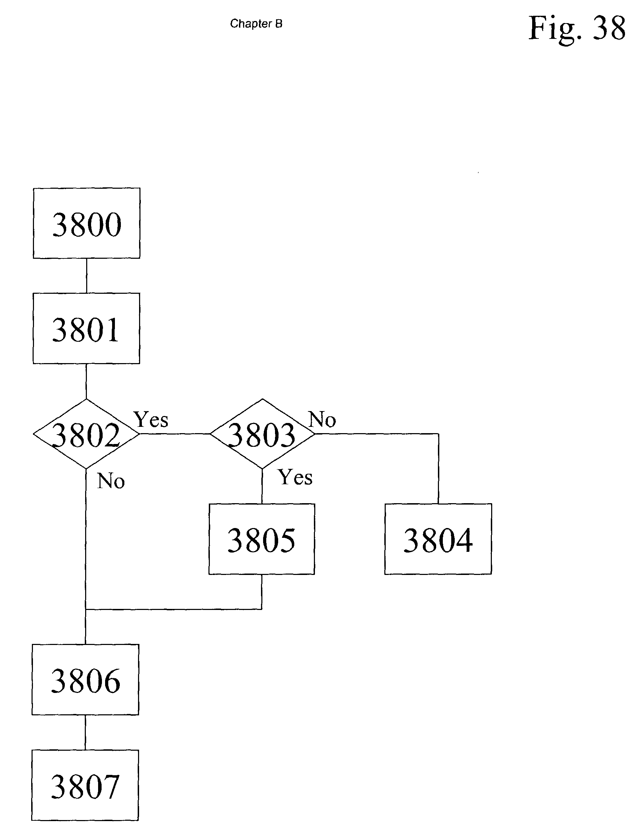

Fig. 38 presents an exemplary embodiment with a setup as presented in and described in connection with Fig. 34 is used. Therefore, reference numerals below 3800 refer to devices shown in Fig. 34.

In step 3800 the user device, for example, a mobile phone 3401A sends a request for data via the network 3402 to the webserver 3403. The mobile phone 3401A uses the wireless application protocol (WAP) as MIME type for data which it handles and processes. A browser may run on the mobile phone 3401A. The requested data may be, in this example, a certain homepage which is available on the Internet at a certain URL. This homepage is programmed, for the purposes of this example, in an extensible markup language (XML). The request of the mobile phone 3401A includes at least the URL of the requested homepage and the MIME type supported by the mobile phone 3401A, i.e. WAP. In this example, the identity of the user device 3401A, 3401B and its user is transmitted together with or as a part of the request. The request also includes a command, for example, "channel", if the content of the requested URL shall be loaded onto the user device.

In step 3801 this request of the mobile phone 3401A is analyzed by the webserver 3403 in order to decide whether this request has to be processed by the portlet manager 3404. The alternative is to provide the data directly by the webserver 3403. This decision - made in step 3802 - is based on the MIME type used for the requested homepage and the MIME type supported by the mobile phone 3401A.

If the above question would be answered with "NO", then the requested data will be directly provided by the webserver 3403 to the mobile phone 3401A in step 3803. This would require that the MIME type of the requested data and the MIME type supported by the mobile phone 3401A are identical or at least compatible. This condition will frequently be fulfilled, for example, if a browser - which is able to handle and process data in XML - requests a homepage - which is also formated in XML.

If the answer to the above question is "YES", the request is forwarded by the webserver 3403 to the portlet manager 3404 in step 3804. The portlet manager 3404 may be a servlet. A servlet is an extension to a webserver which provides the webserver with information and logic. If a request for a certain URL, for example, is forwarded to the portlet manager 3404, the portlet manager 3404 is started. This leads to the portlet manager 3404 processing the request. This processing includes doPost requests as well as doGet requests as it is shown in Table 1. In order to simplify the further communication the portlet manager 3404 employs the URL mentioned in the request forwarded by the webserver 3403 for identifying itself and saves this address in a string. The portlet manager 3404 identifies also the requested command. In one embodiment there are supported at least the following commands. The "load" command loads information about the requested data. With the "save" command the user device submits settings made by the user device 3401A in order to save these settings along with the user data. In order to provide the content of a portlet to a user device the "channel" command is submitted. Since the user device 3401A requests in this example data from a portlet the "channel" command will be submitted by the mobile phone 3401A. The functionality of the portlet manager 3404, especially certain commands, is described in detail in the code shown in Table 1.

In step 3805 the identity of the user device 3401A and of the user employing the user device 3401A is retrieved from the request. Then, in step 3806, the portlet manager 3404 will access an internal or external storage medium, for example, data base 3408 in order to check whether for the identified user device 3401A and for the identified user a presentation scheme or parts of a presentation scheme are already stored. For example, a certain user may request a specific character type (font) for the data to be presented on the display of his mobile phone 3401A, or a certain mobile phone 3401A may request a specific character size (font size) in view of its specific display.

If "NO", that means the storage medium does not have any information about a presentation scheme or a part of a presentation scheme assigned to the specific user or the specific requesting user device 3401A, the portlet manager 3404 may search in step 3807 in the network 3402 for such individual presentation schemes or parts thereof. For example, if the network 3402 is the Internet the portlet manager 3404 may contact the homepage of the producer or distributor of the mobile phone 3401A in order to find the desired information there. If the search of the portlet manager 3404 is successful, the presentation scheme or part of a presentation scheme will be retrieved in step 3808. If the search is not successful, a default presentation scheme will be provided for later application to the requested data in step 3809.

If "YES", that means the storage medium has information about a presentation scheme or a part of a presentation scheme assigned to the specific user or the specific requesting user device 3401A, the portlet manager 3404 loads this presentation scheme or part thereof in step 3810.

In step 61, based on the presentation scheme or part thereof retrieved and based on the request of the user device 3401A the portlet manager 3404 requests from one or more portlets 3409, 3410, ... the delivery of the requested data, here the homepage with the URL specified in the request of the user device 3401A. This request includes a list of all MIME types which are either supported by the user device 3401A or which may be converted by the portlet manager 3404 into a MIME type which is supported by the user device 3401A. Other additional information like, for example, the type of the browser used by the user device 3401A may also be included in the request to the portlet. In step 61 the portlet manager 3404 asks the portlets 3409, 3410 ... whether they are able to deliver the requested data in a MIME type listed in the request. In order to submit the request it may be necessary to create a connection to the portlet.

If "NO", that means if the data cannot be delivered by the portlets 3409, 3410, ... in a MIME type which is supported by the user device 3401A or which can be converted by the portlet manager 3404 into a MIME type supported by the user device 3401A, an error message is created in step 3812, which is sent to the mobile phone 3401A in order to report that the request for data sent in step 3800 to the webserver 3403 cannot be fulfilled.

If "YES", that means if the data can be delivered by the portlets 3409, 3410, ... in a MIME type which is supported by the user device 3401A or which can be converted by the portlet manager 3404 into a MIME type supported by the user device 3401A, the data are received by the portlet manager 3404 in step 3813. In step 3814 the MIME type of the received data is analyzed as to whether the user device 3401A supports it or conversion by the portlet manager 3404 is necessary.

If no conversion is necessary, the requested data are transferred to the user device 3401A directly via the webserver 3403 and the network 3402 in step 3815. If, however, conversion is required, what will be the case in our example where the homepage is in XML and the mobile phone 3401A supports only WAP, the retrieved data will be analyzed in step 3816 as to whether it is present in an extended markup language (XML).

If "NO", that means if the requested data is not in XML, the data will be converted in step 3817 into the requested MIME type to arrive at presentable data by applying the corresponding presentation scheme, which includes conversion modules for the conversion of data between the respective MIME types. If, for example, the requested data would be supplied in HTML, this data would be converted from HTML to WAP in step 3817. Subsequently, the created presentable data is sent to the user device 3401A in step 3815.

If "YES", that means the data is in XML - like in the here chosen example - the portlet manager 3404 will select the suitable presentation scheme. For XML data this presentation scheme may include a XSL stylesheet. If a user device specific presentation scheme is accessible, the portlet manager 3404 will choose this.

The requested data will then be subjected in step 3818 to the application of the presentation scheme, in this example, to the selected XSL stylesheet. The presentation scheme may be retrieved by portlet manager 3404 from storage medium 3405. Herewith, the presentation scheme - here: the XSL stylesheet - is applied to the data so that presentable data is created. This presentable data may be sent to the user device 3401A in step 3815.

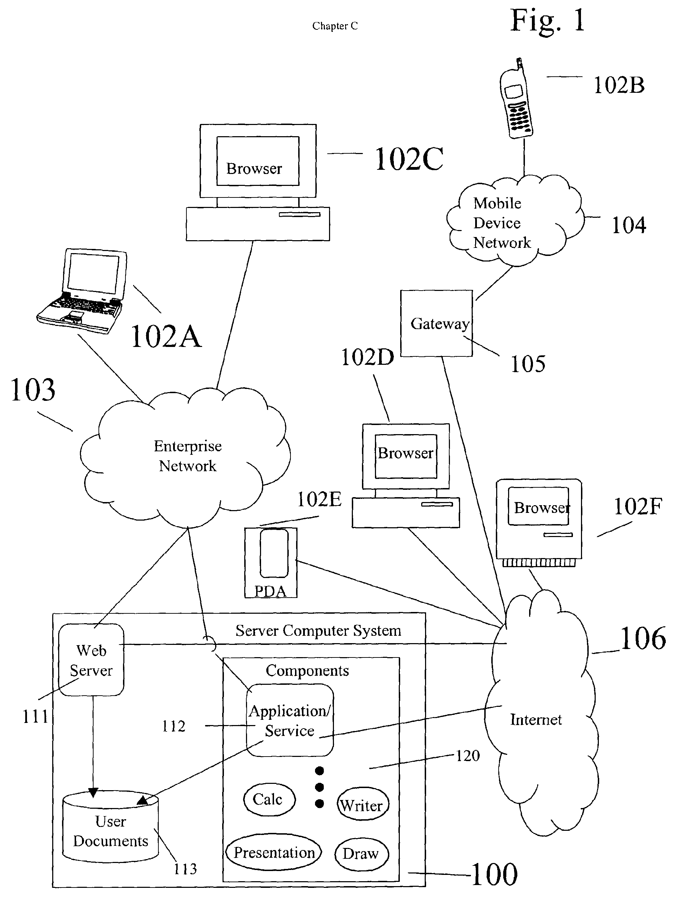

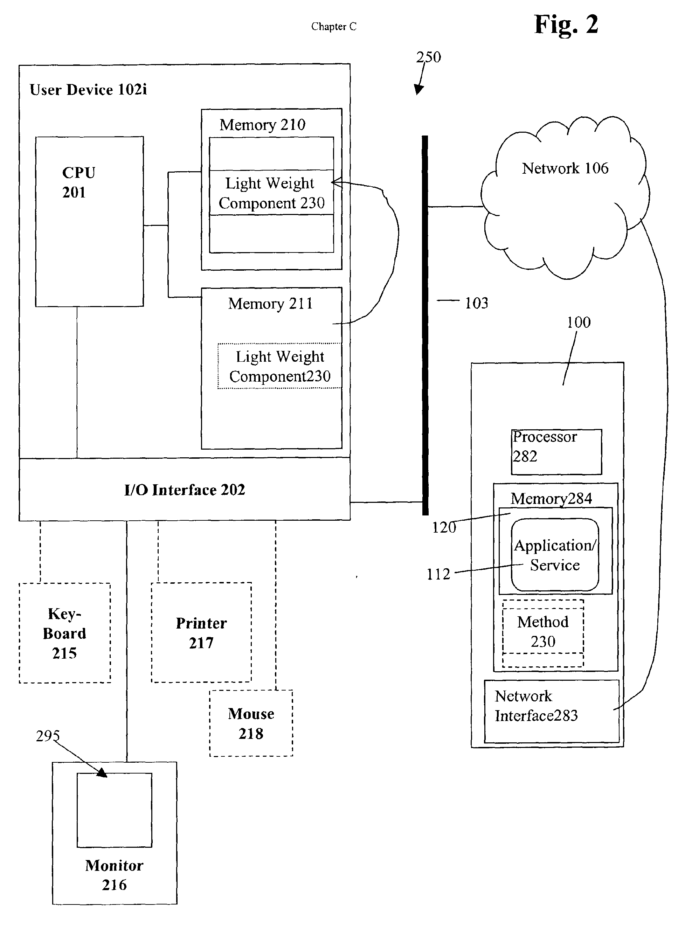

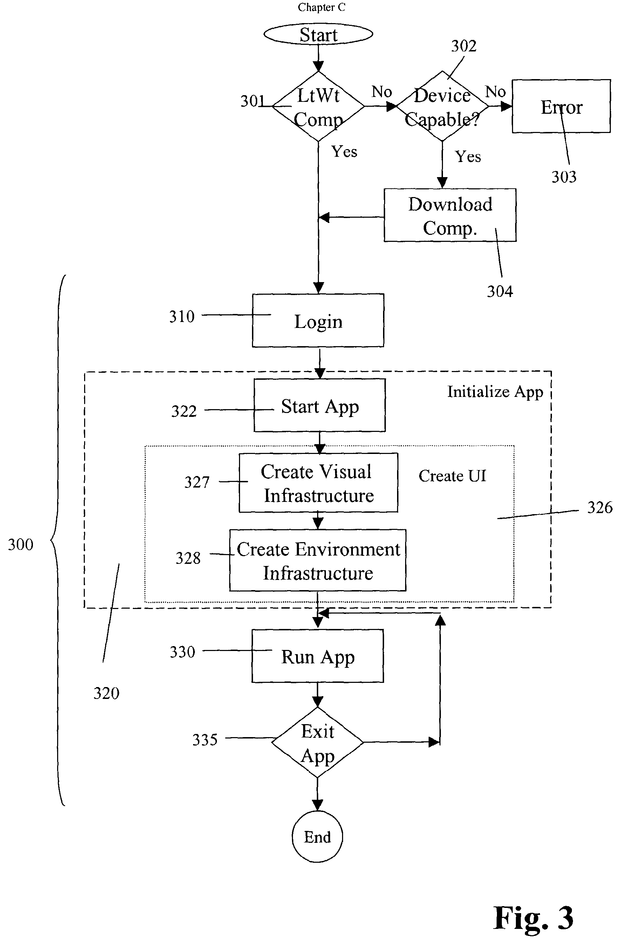

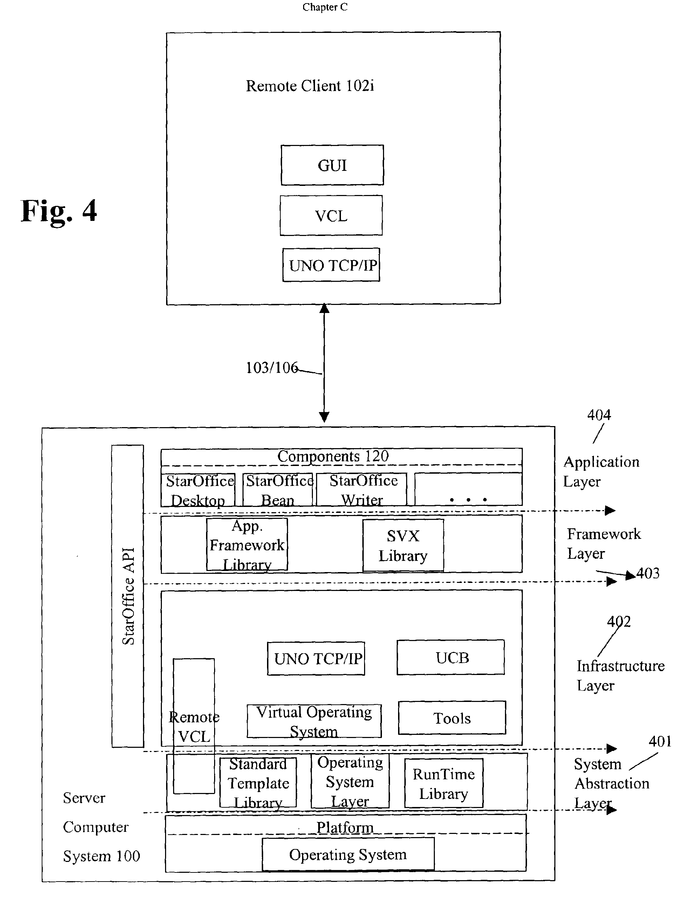

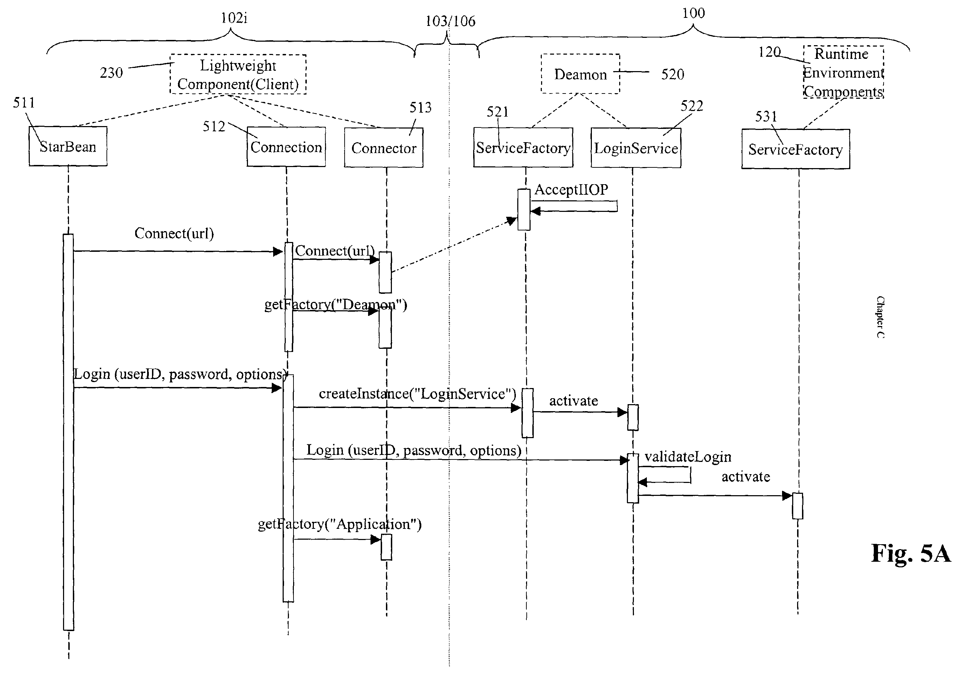

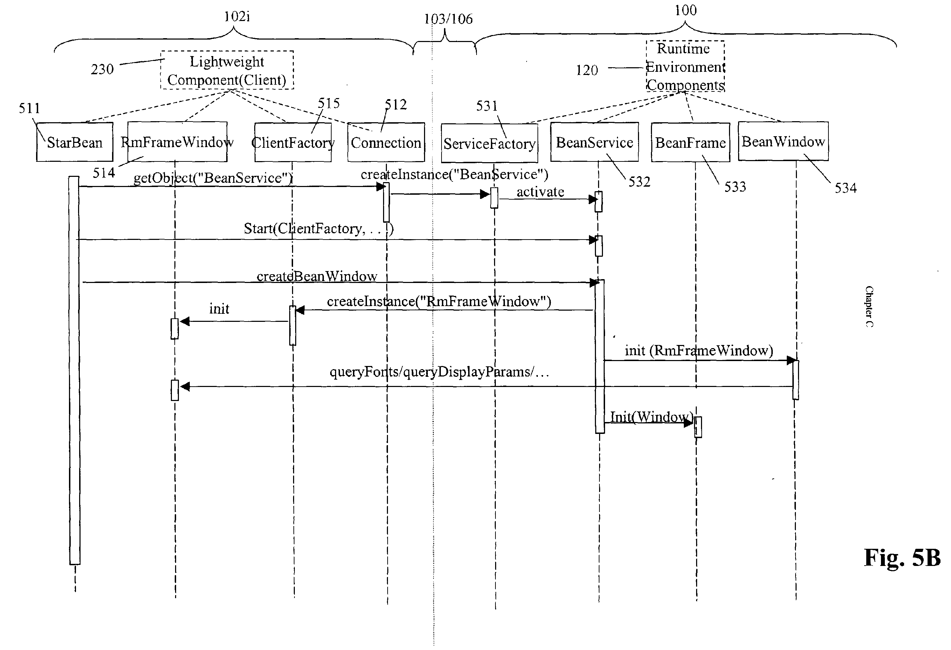

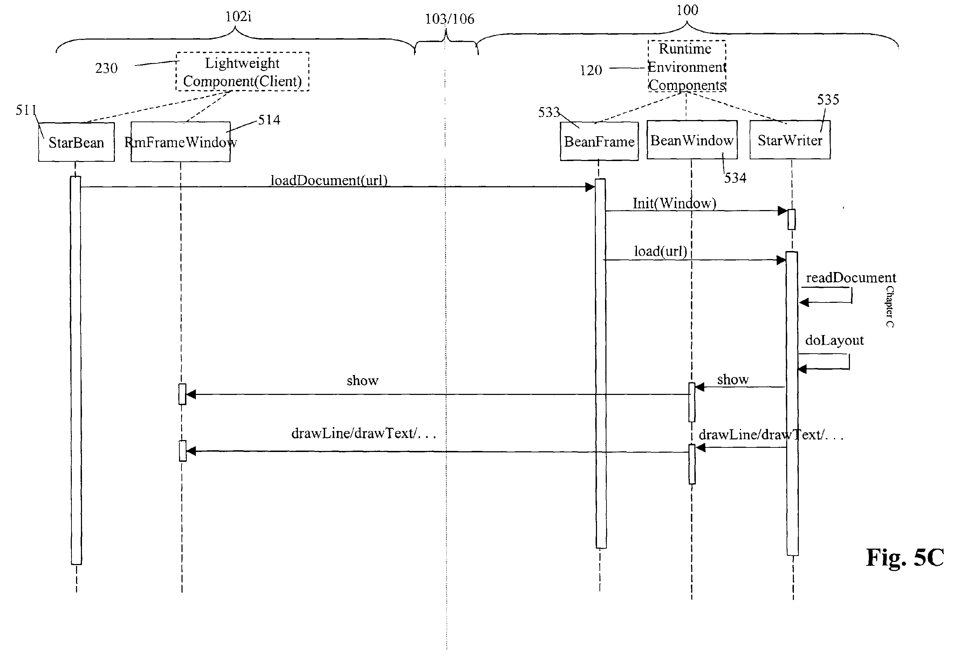

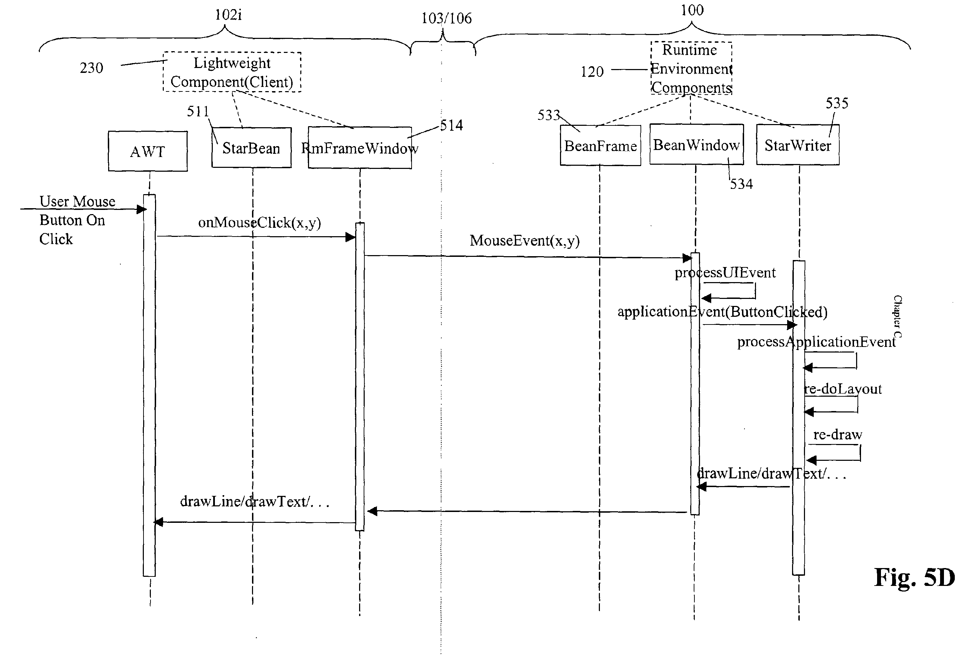

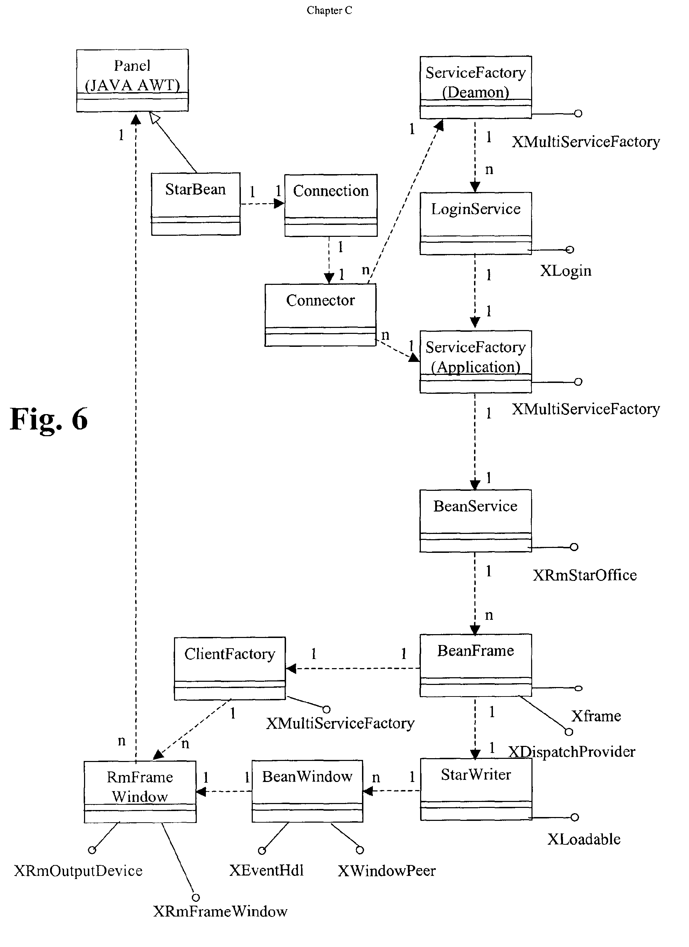

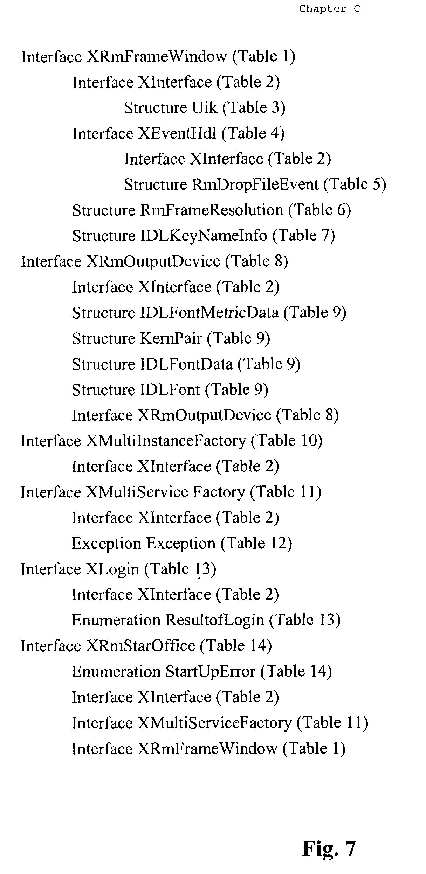

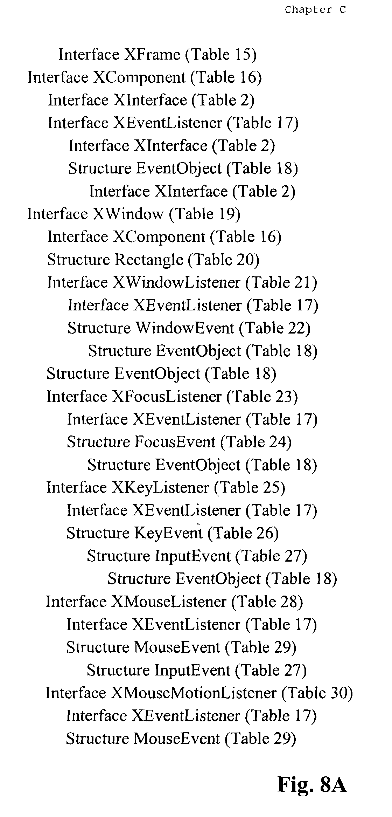

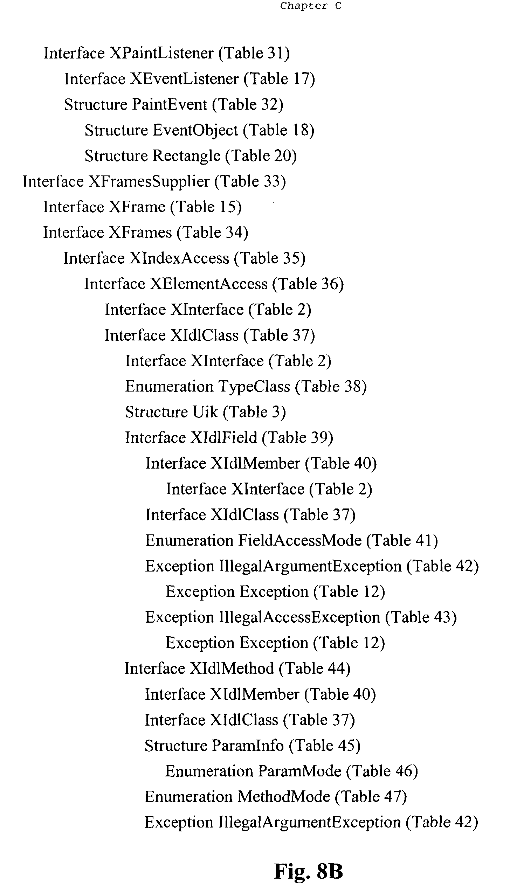

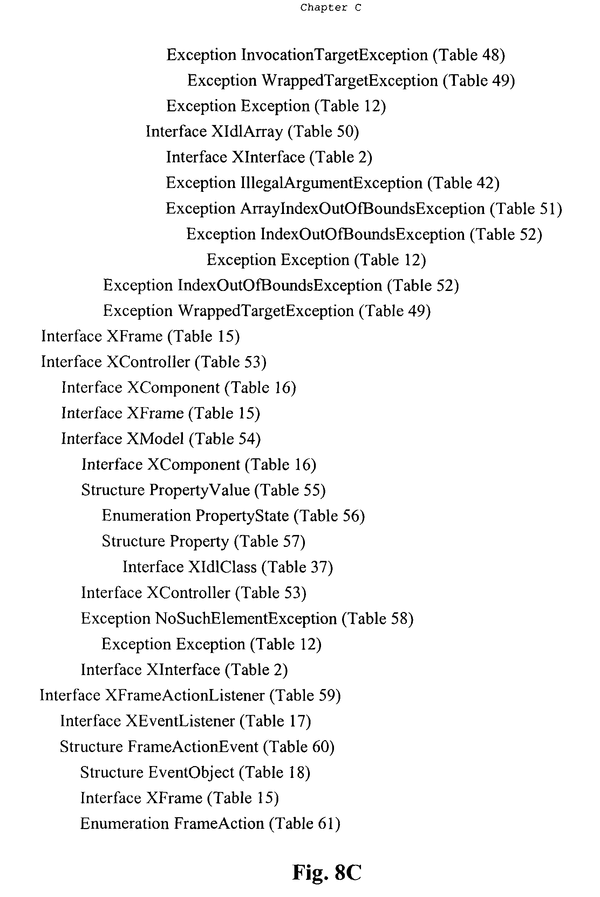

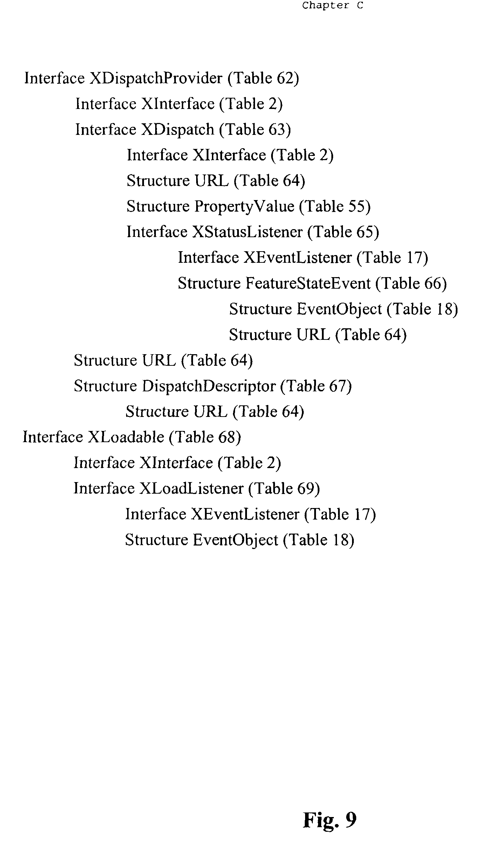

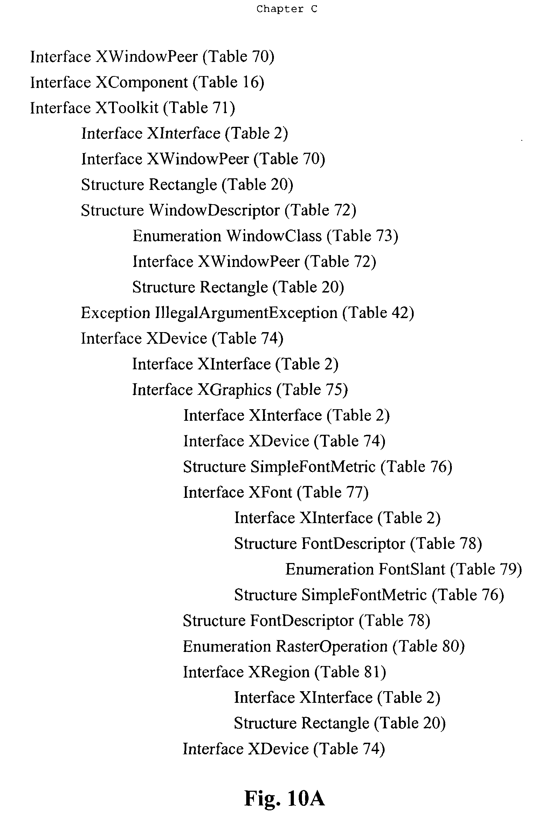

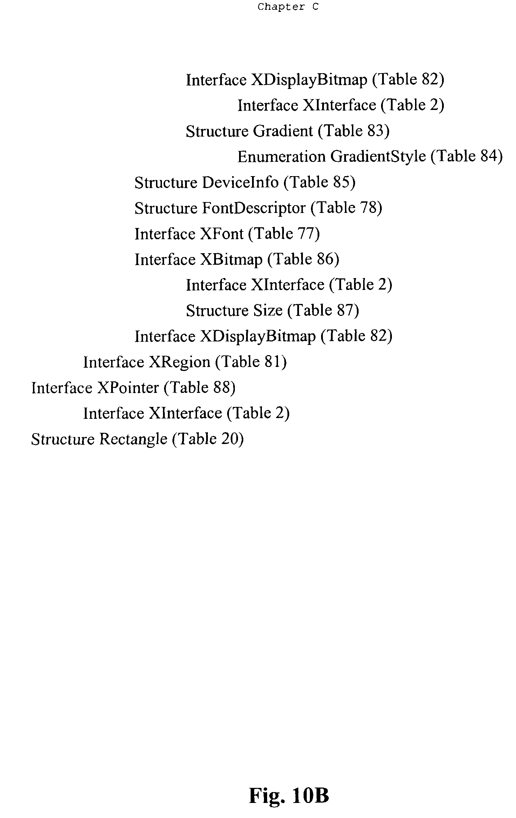

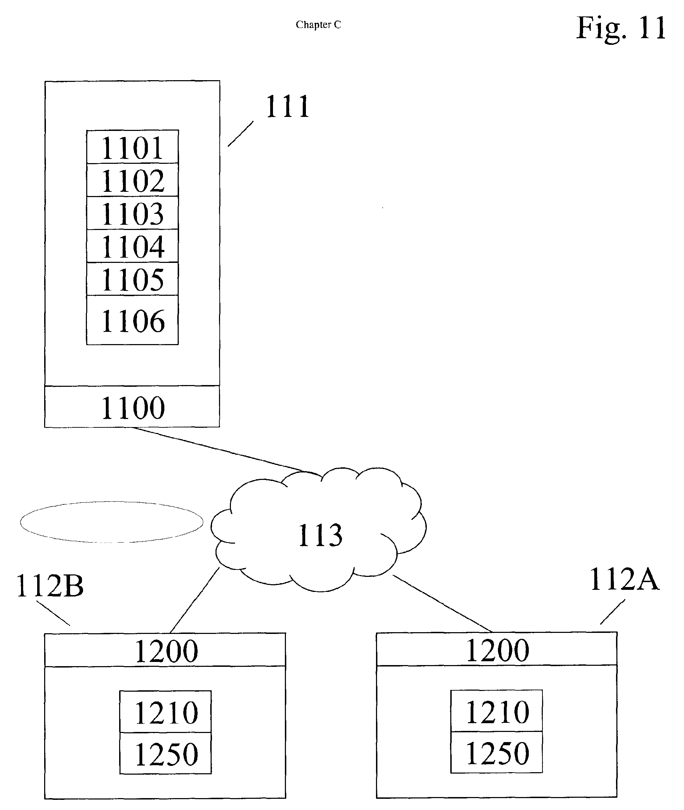

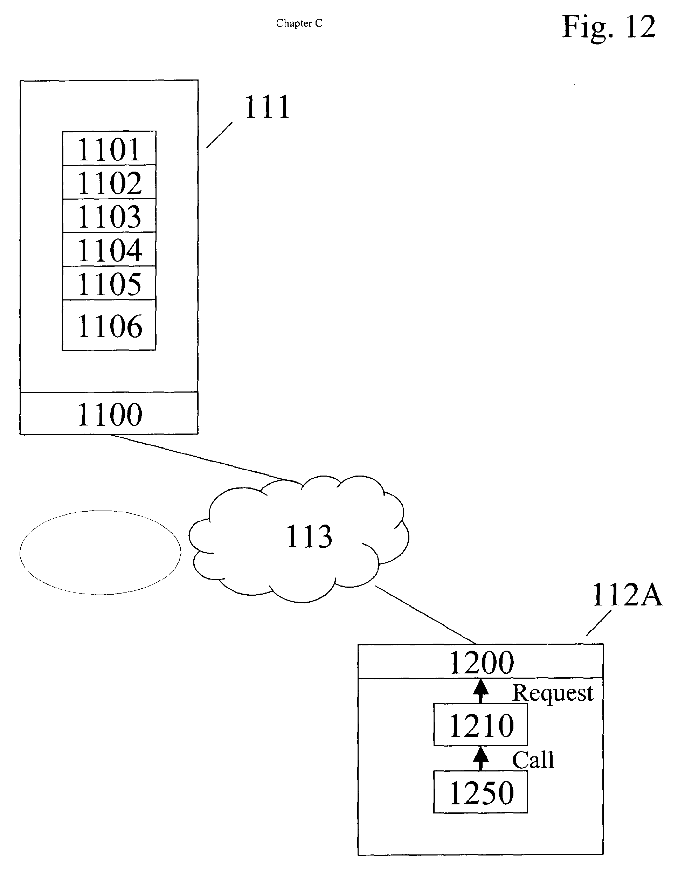

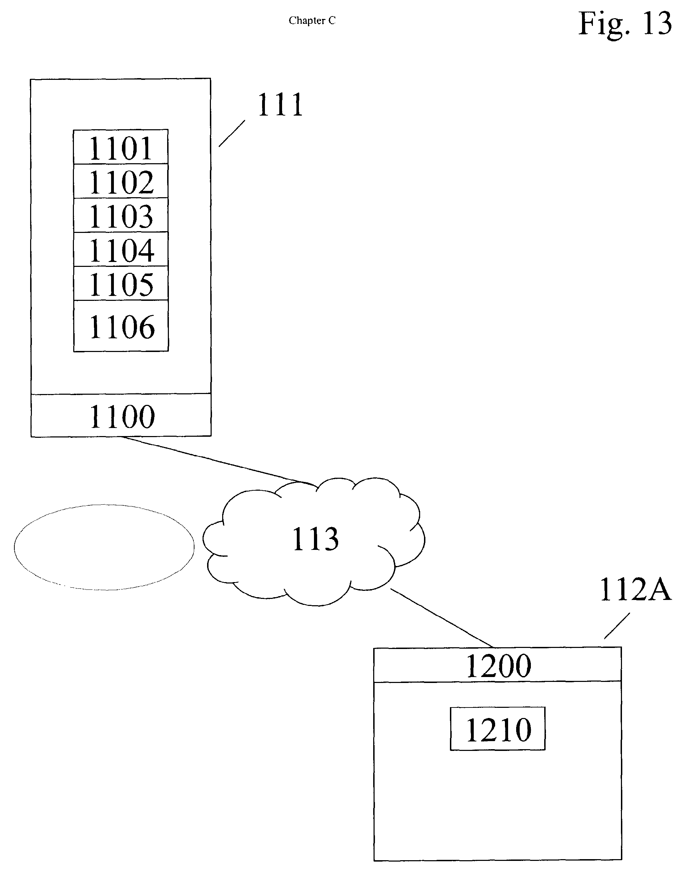

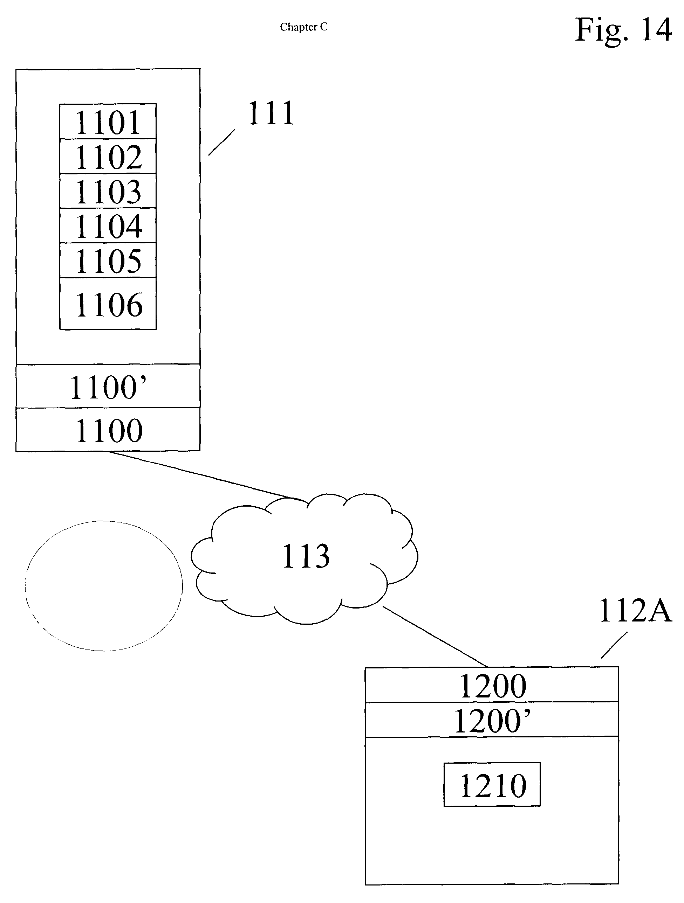

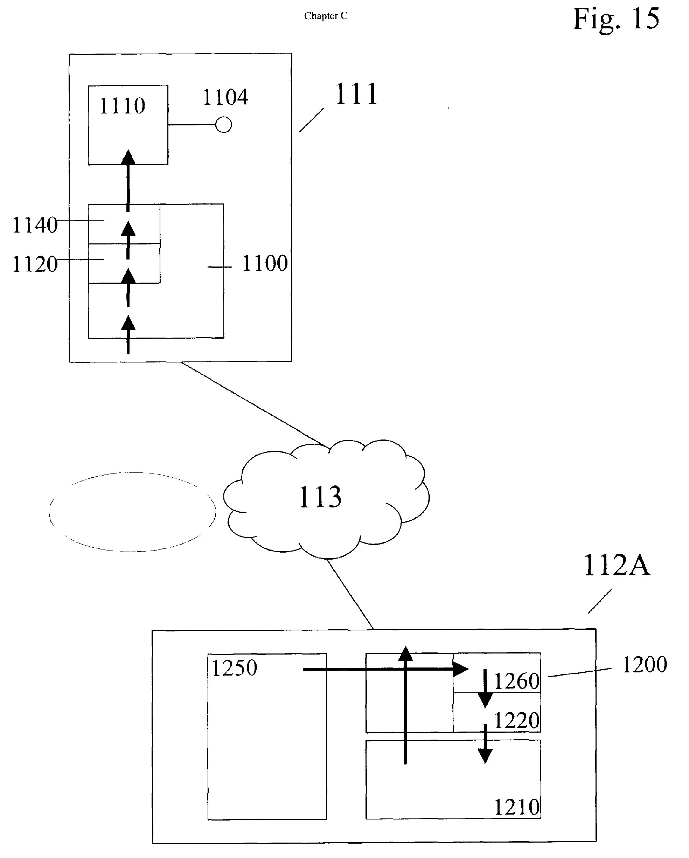

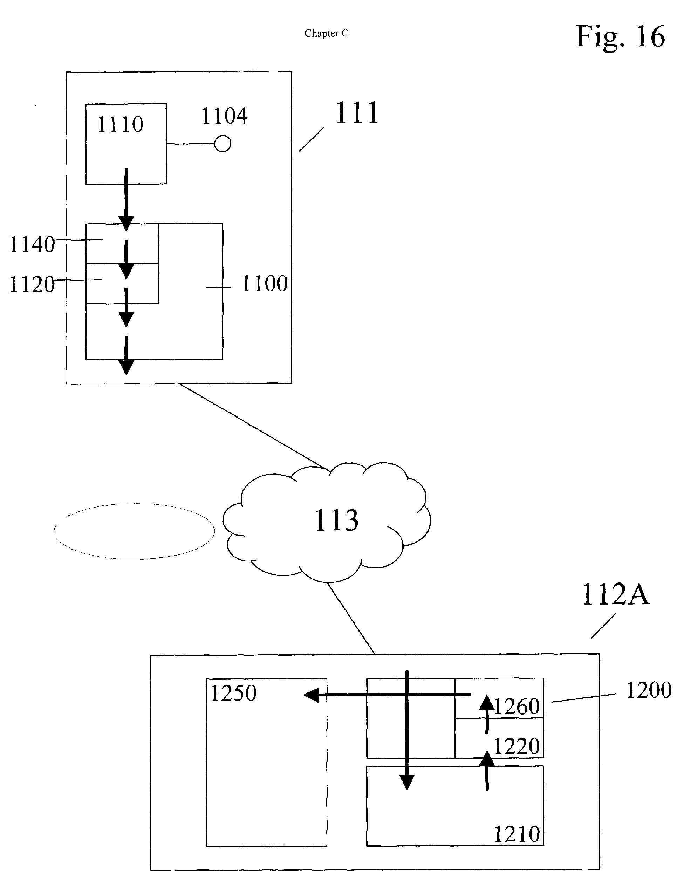

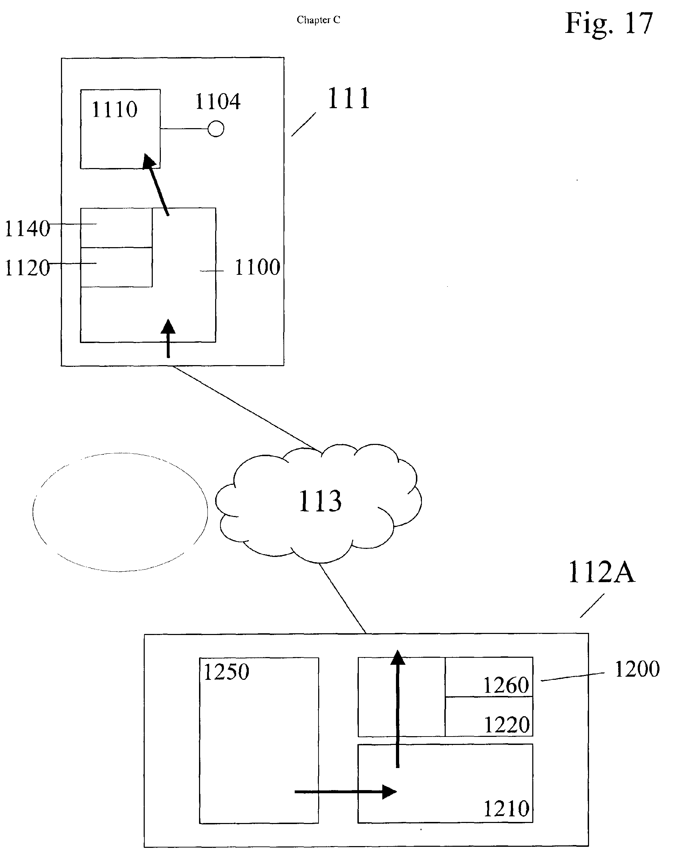

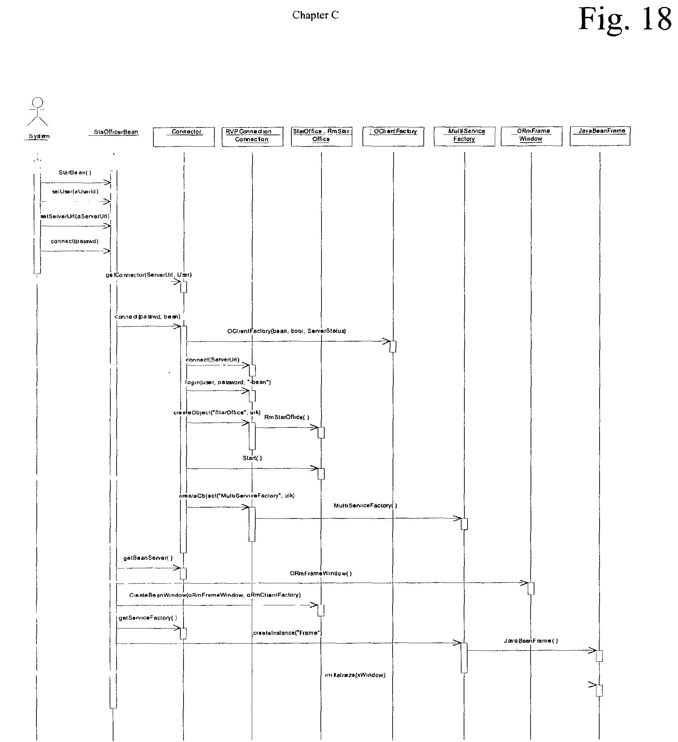

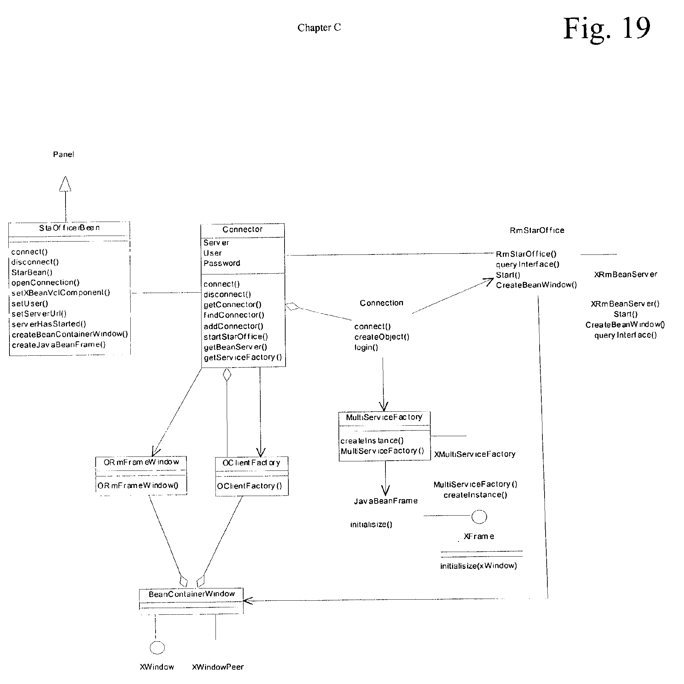

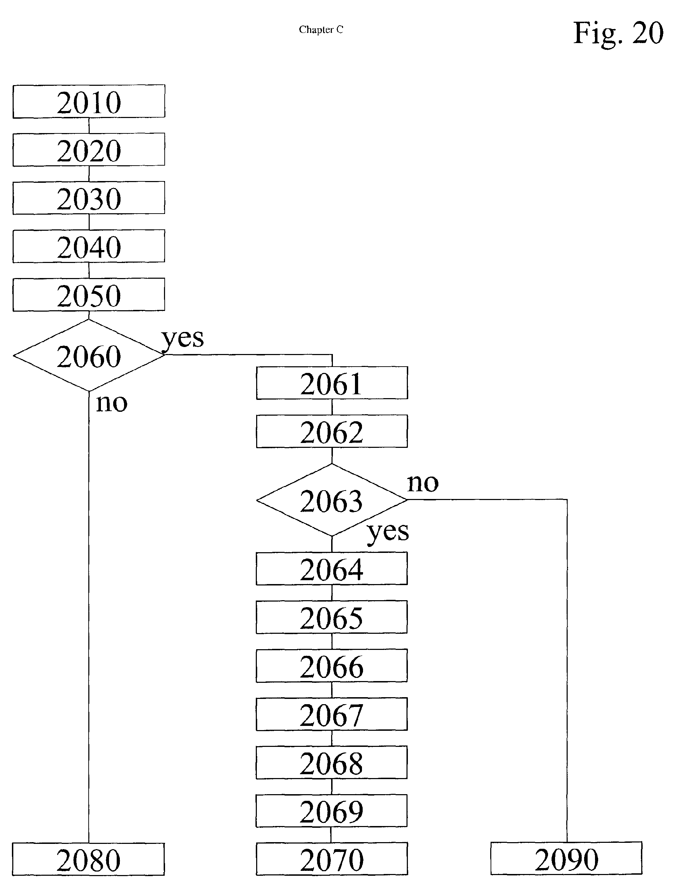

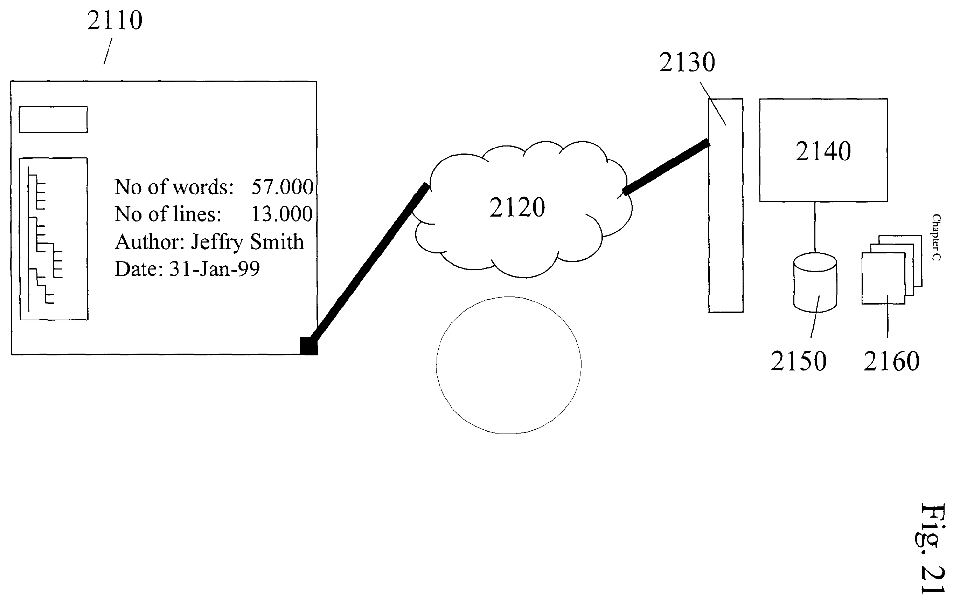

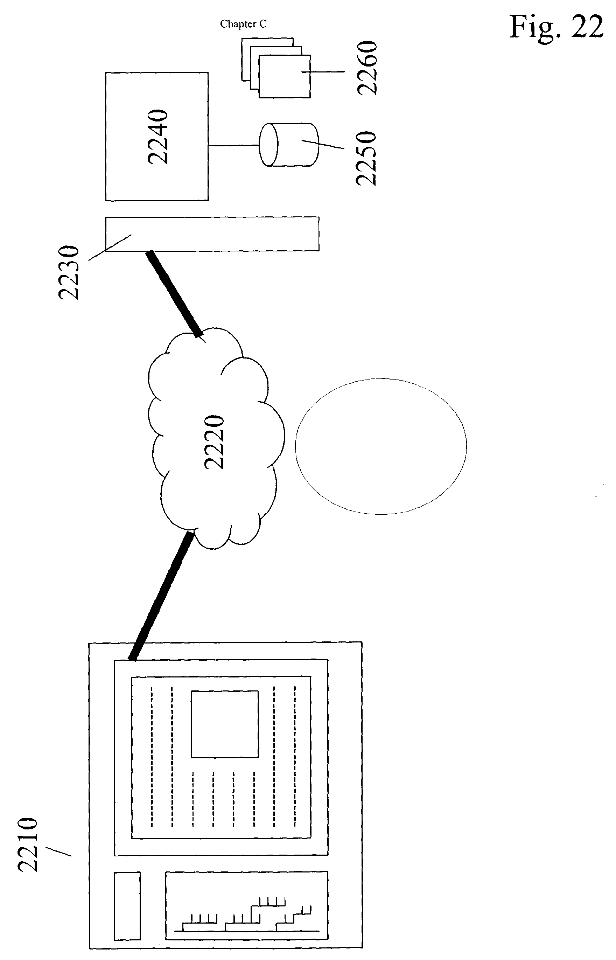

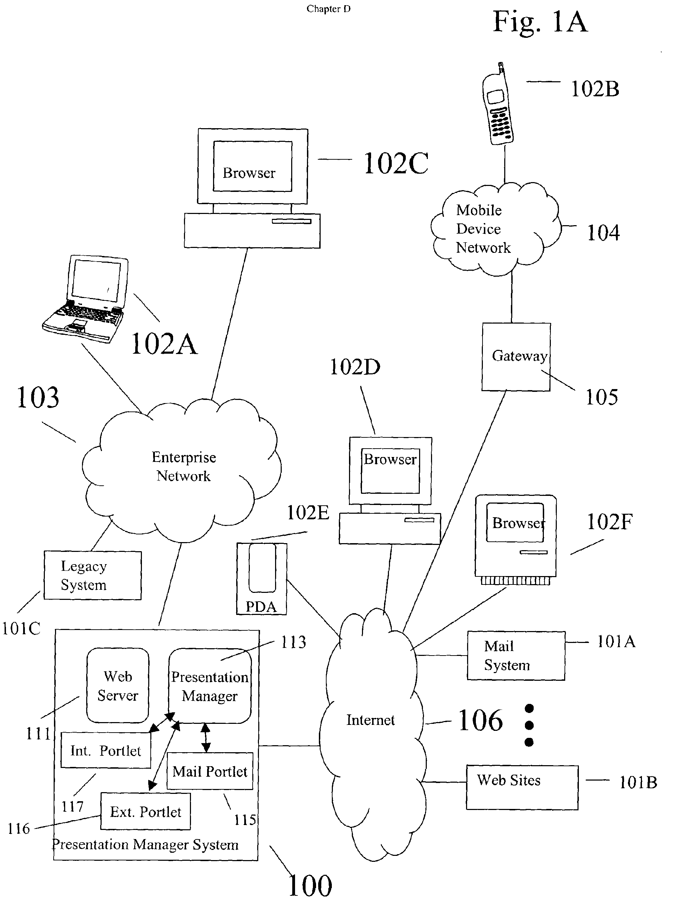

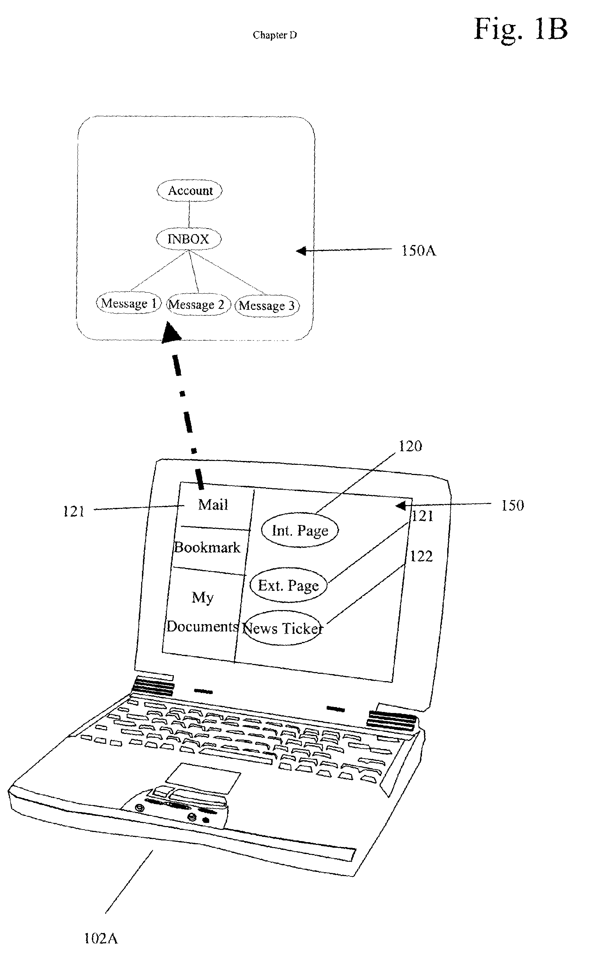

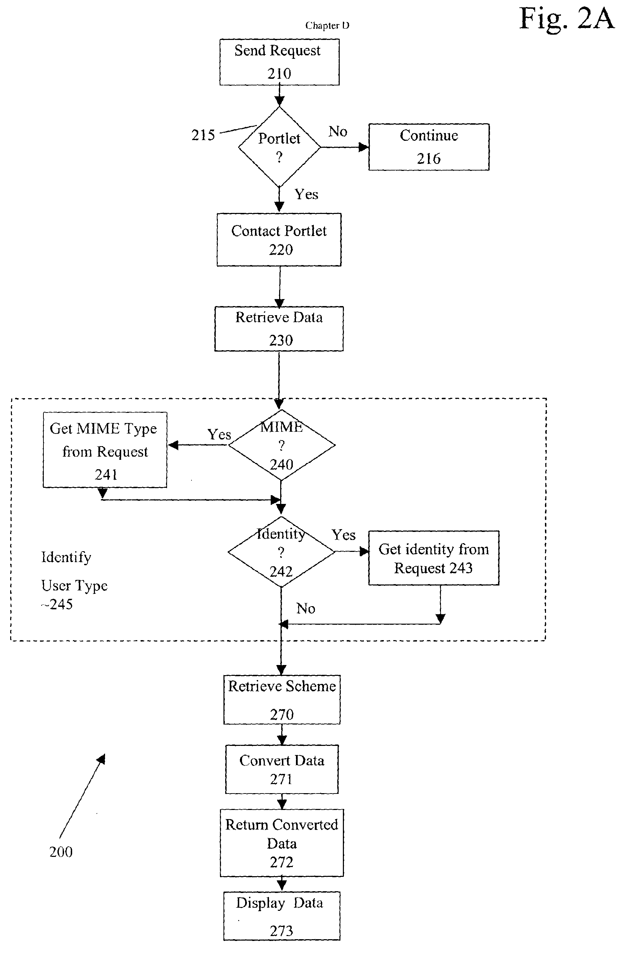

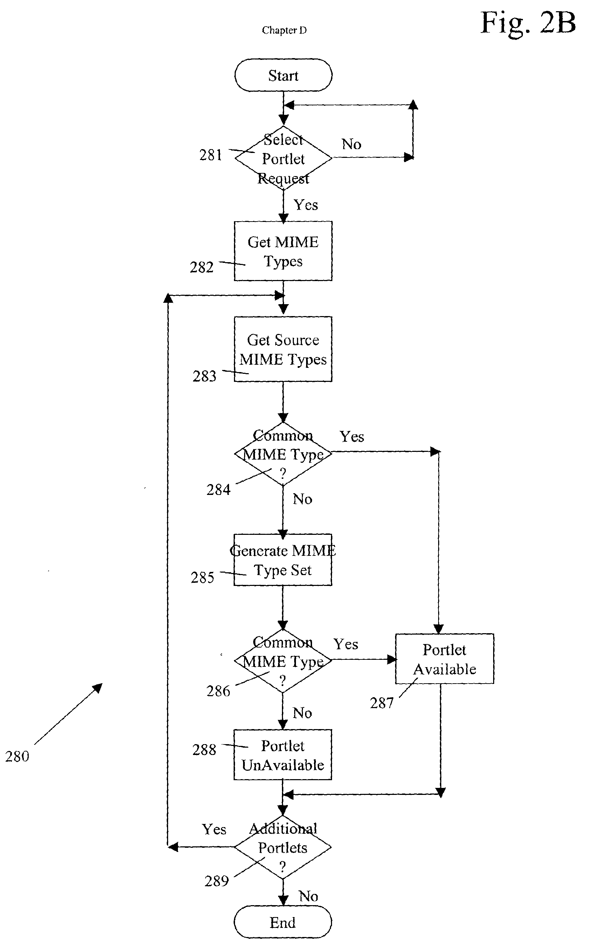

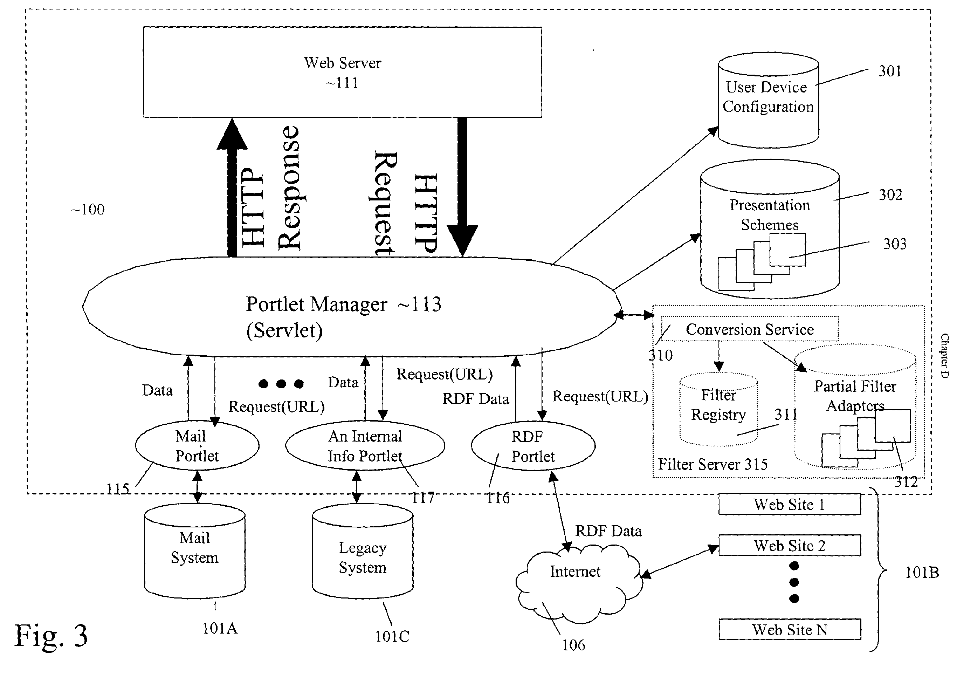

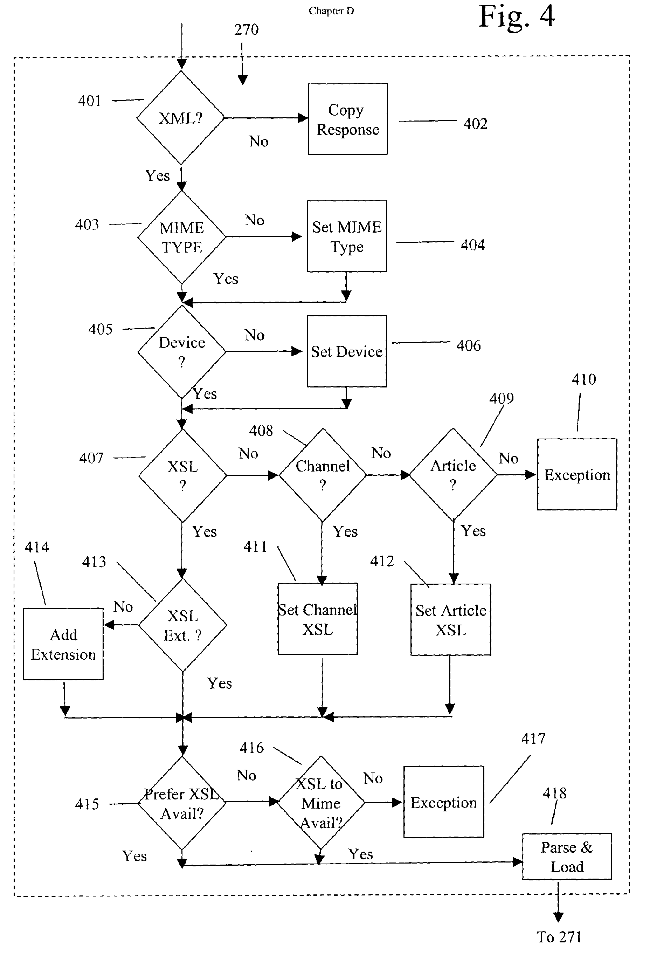

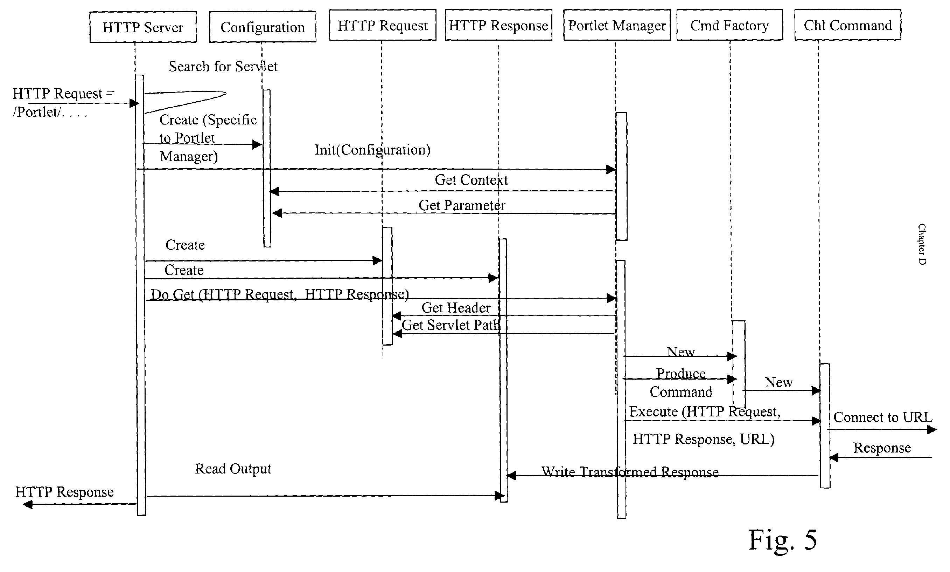

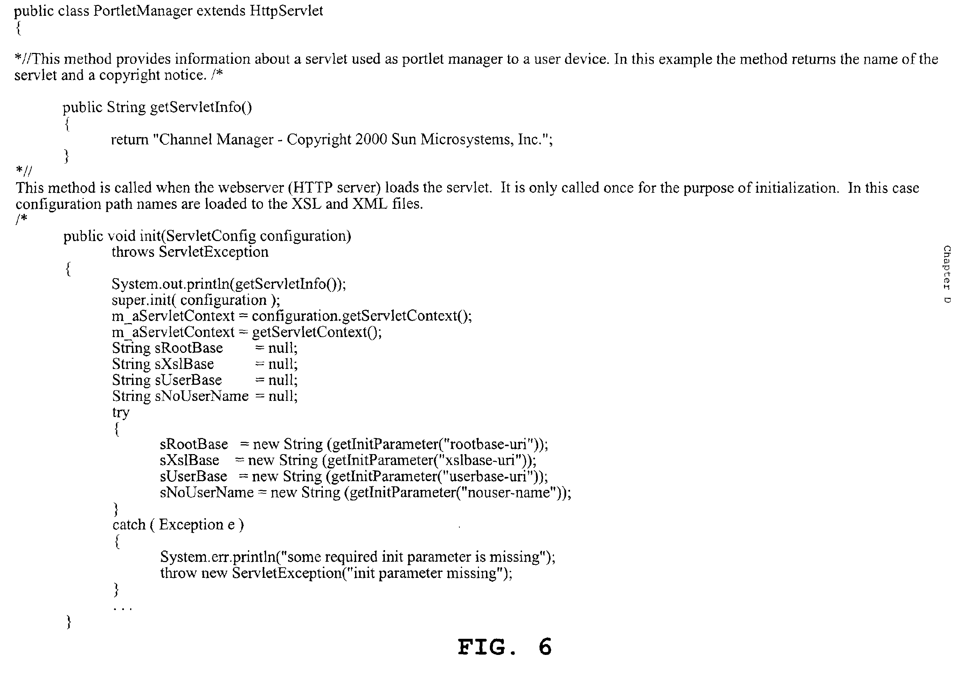

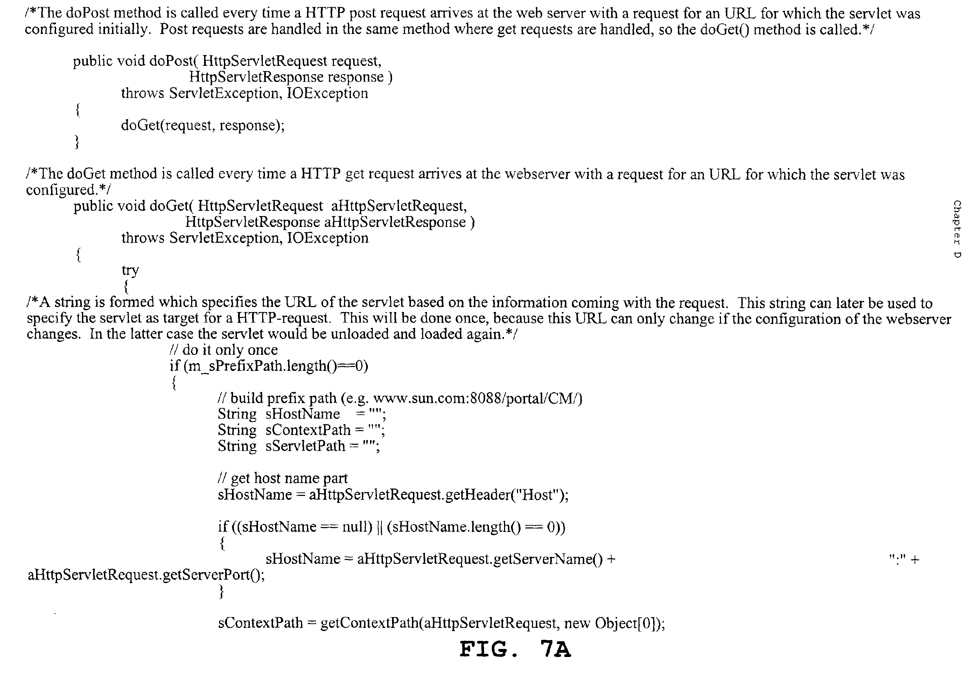

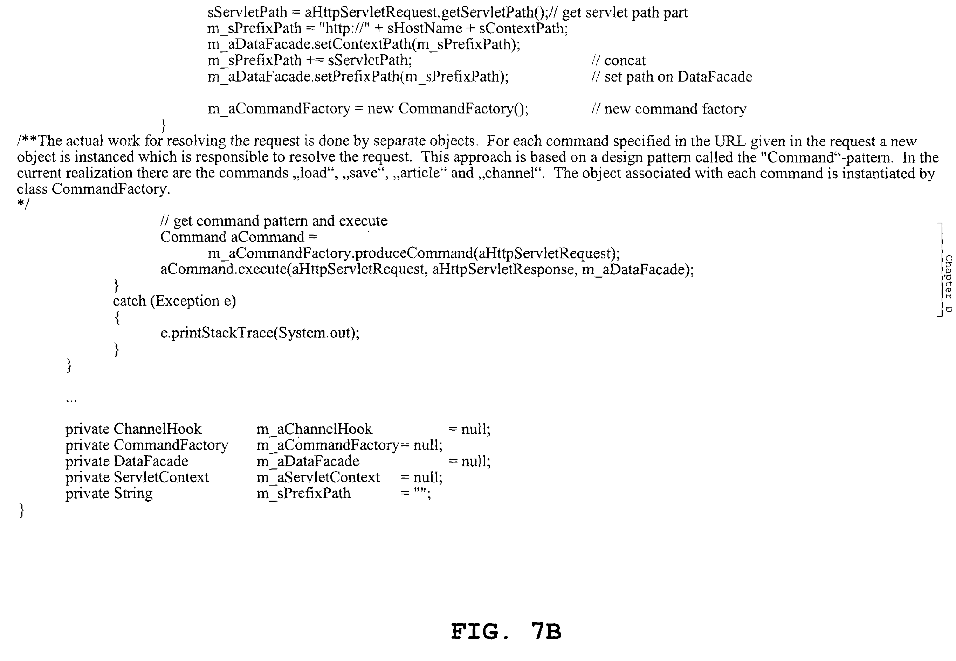

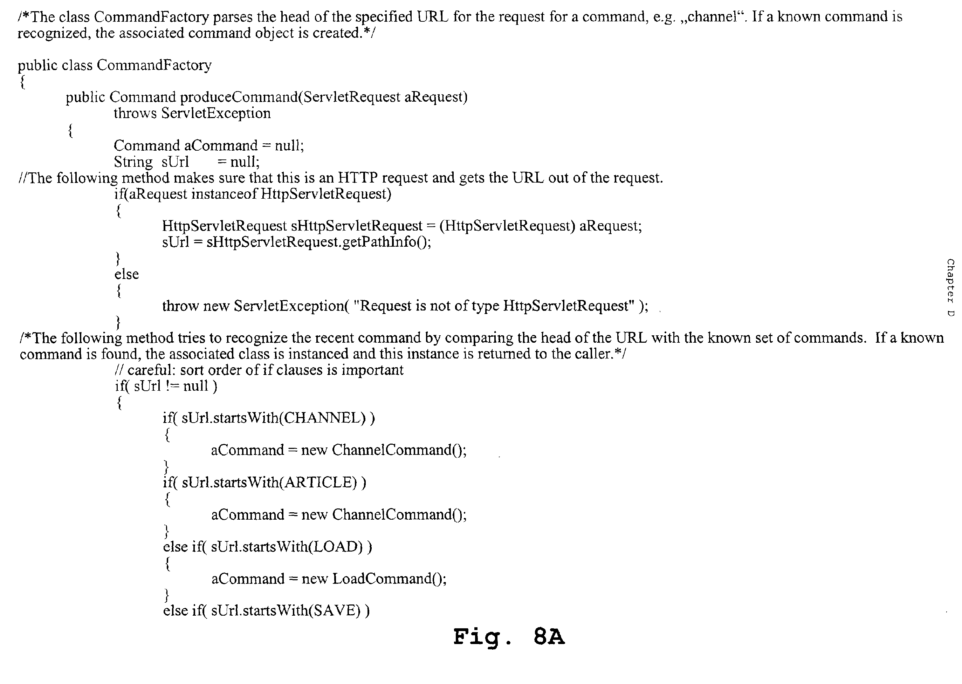

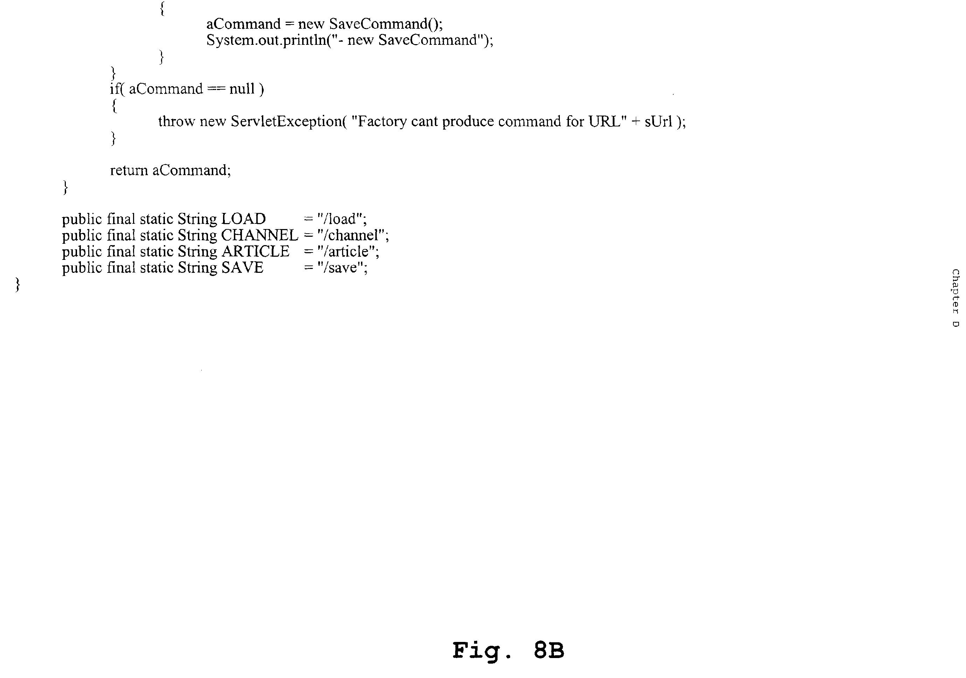

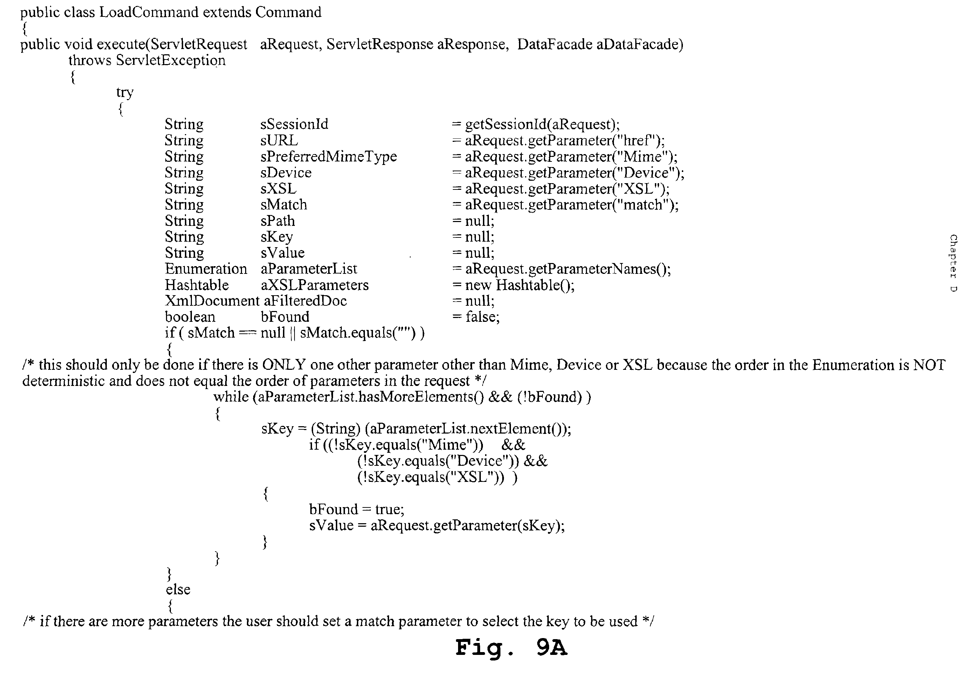

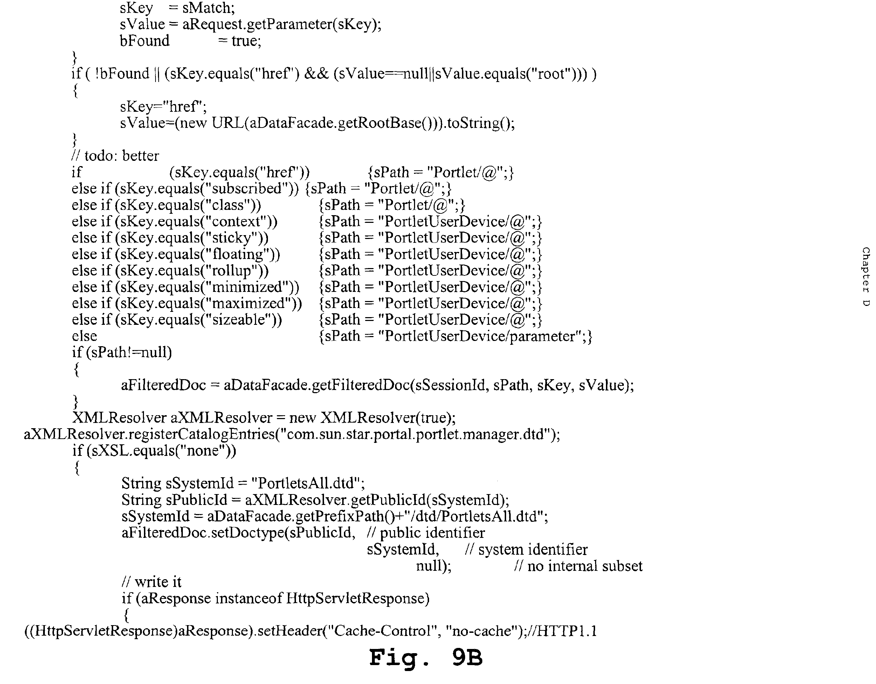

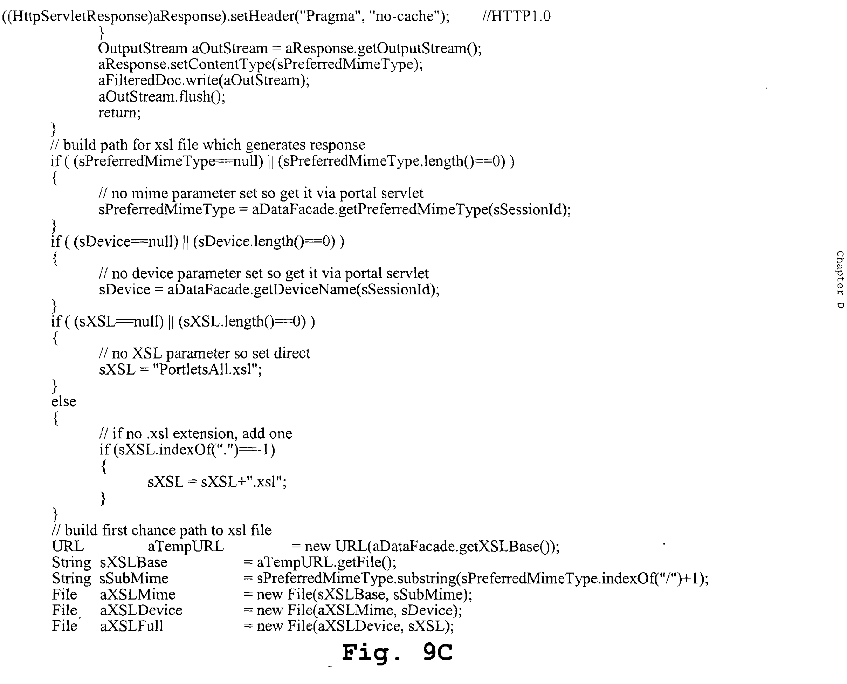

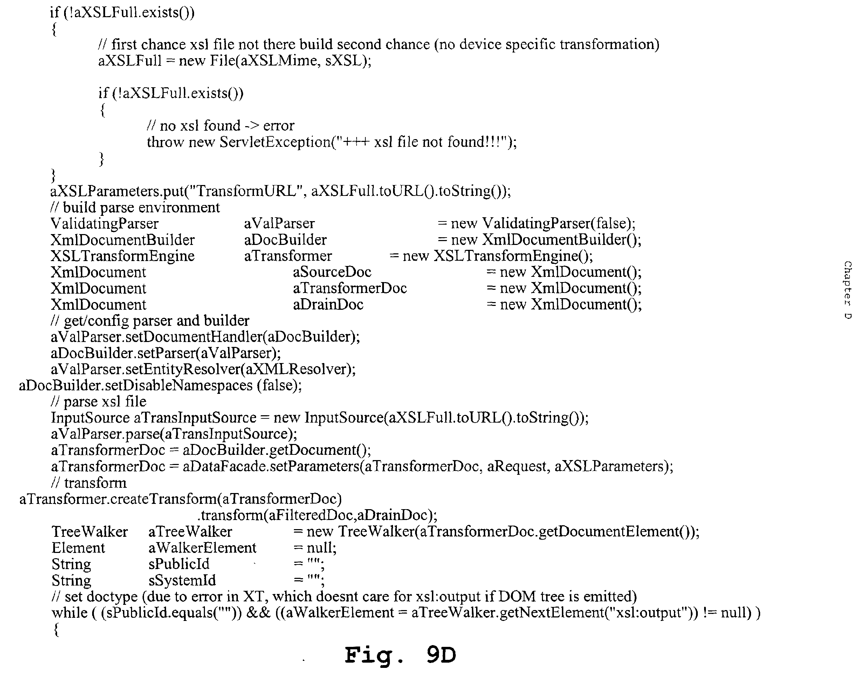

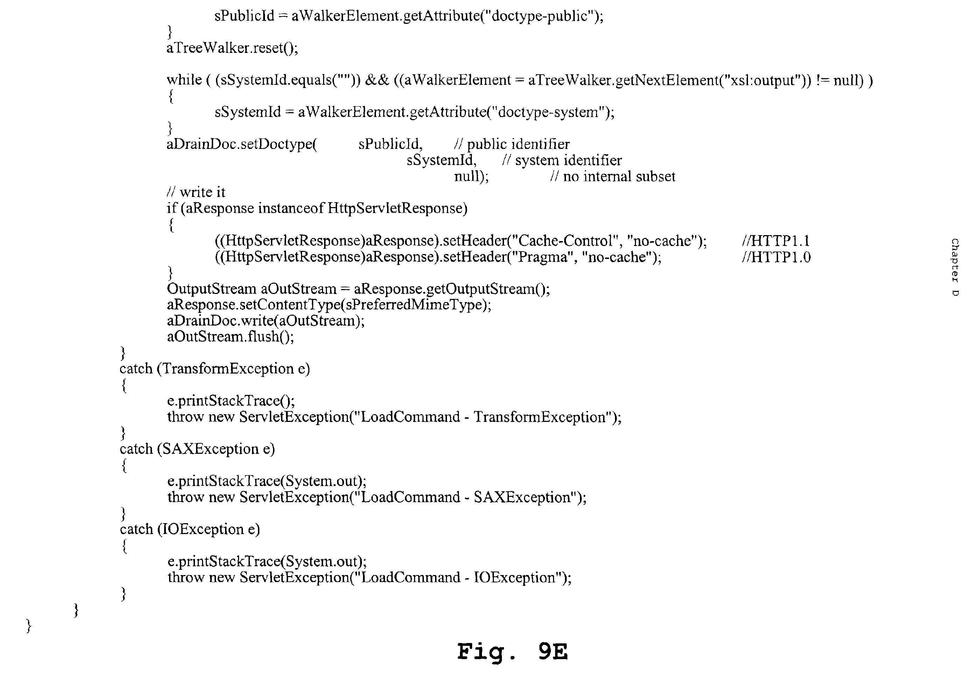

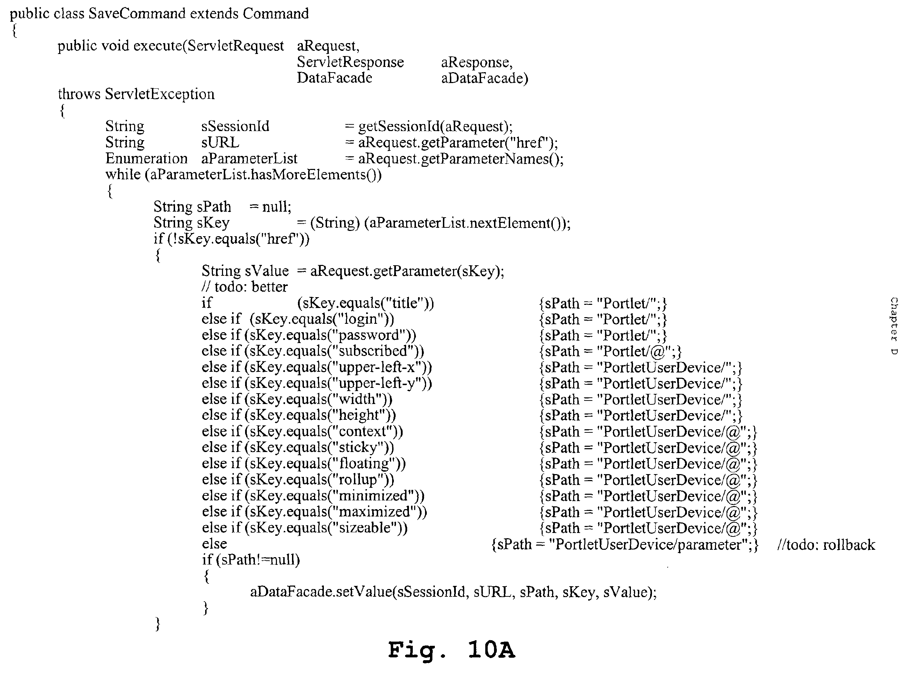

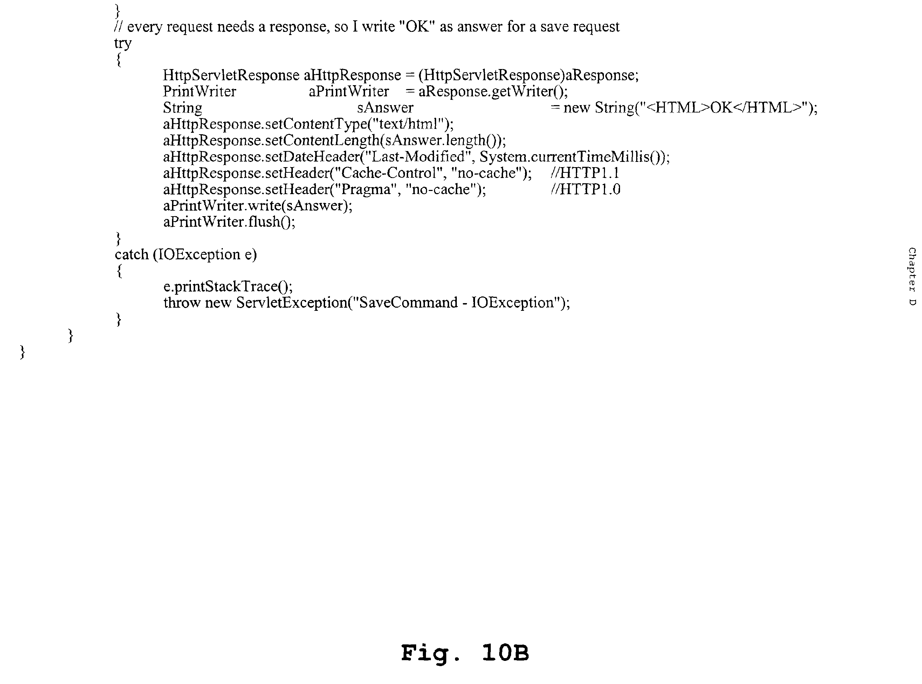

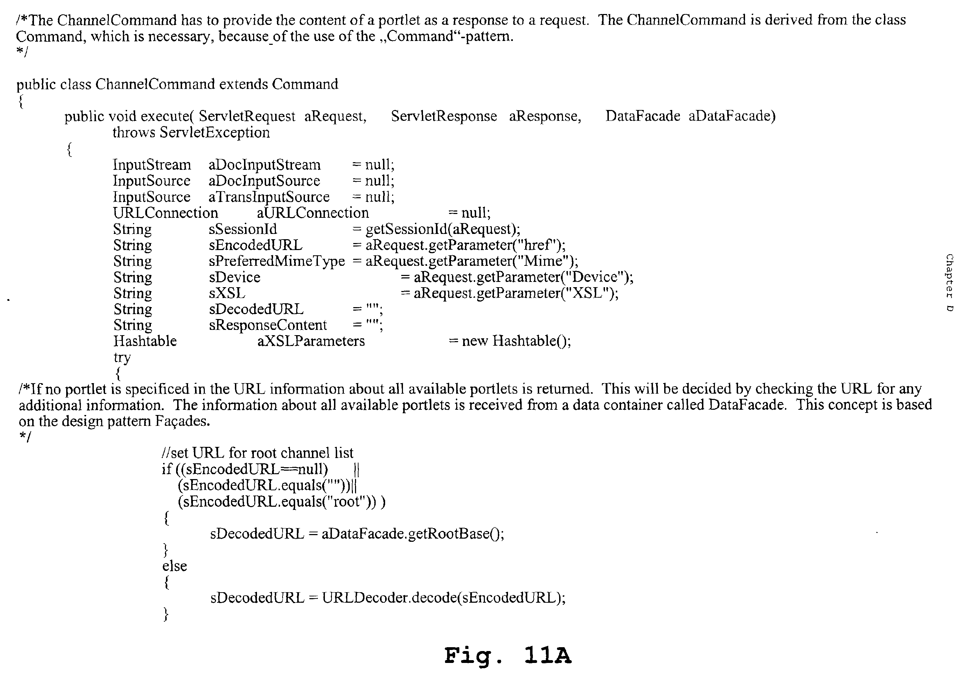

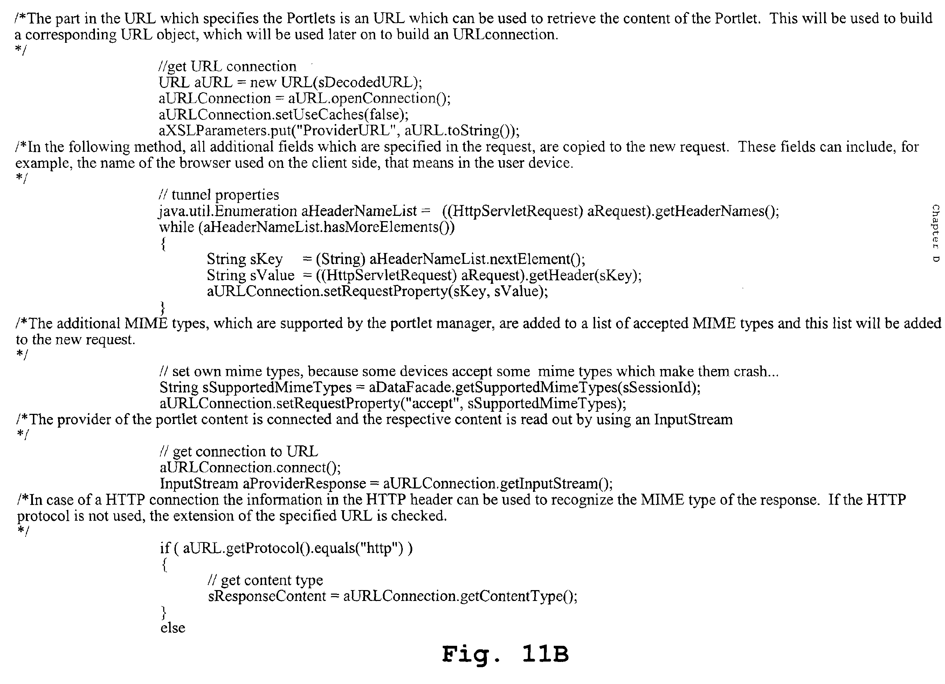

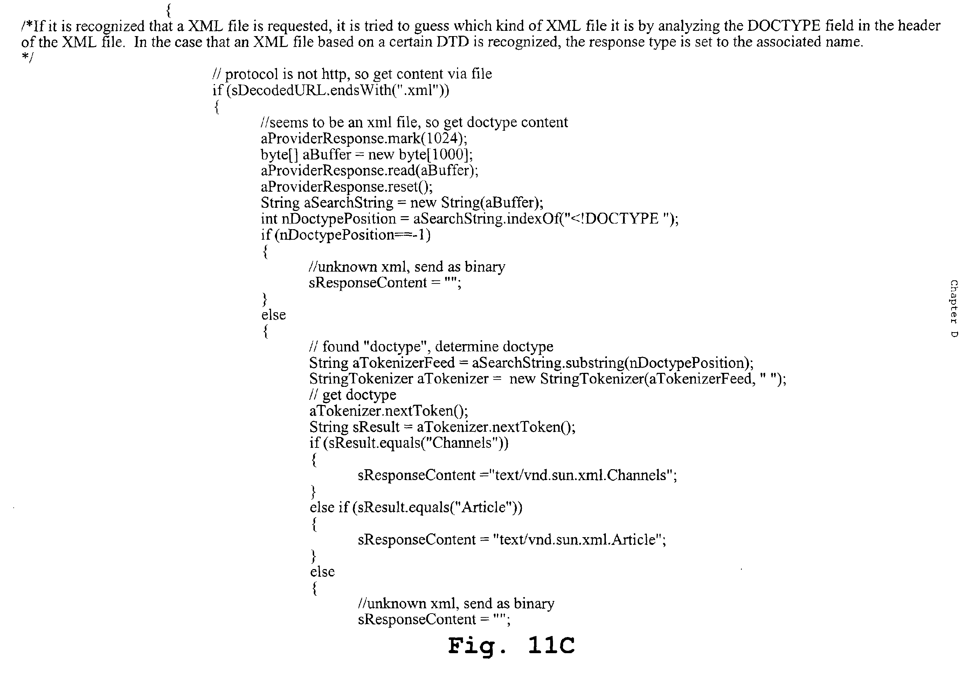

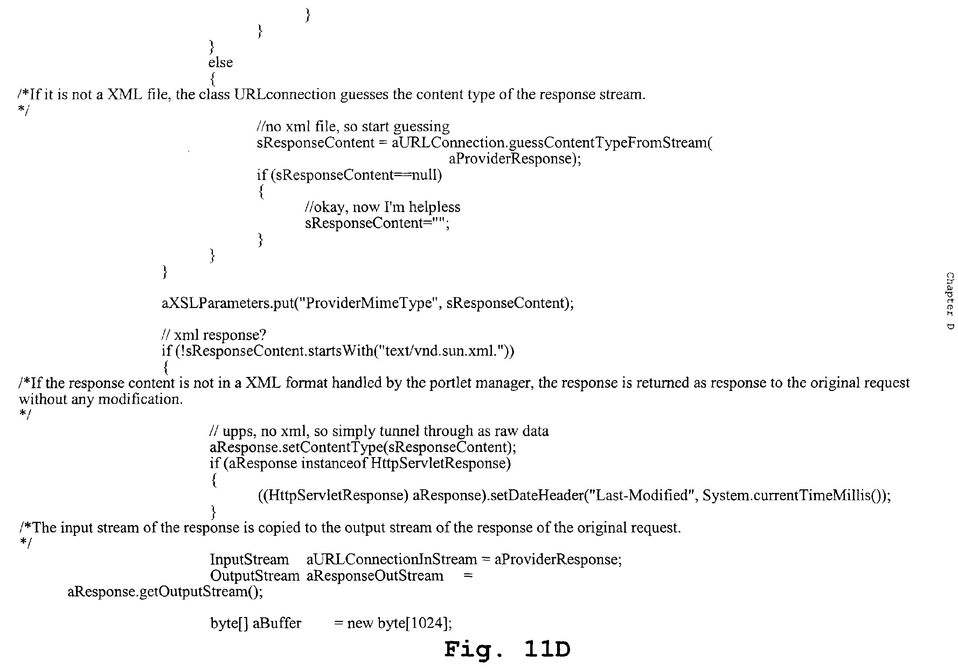

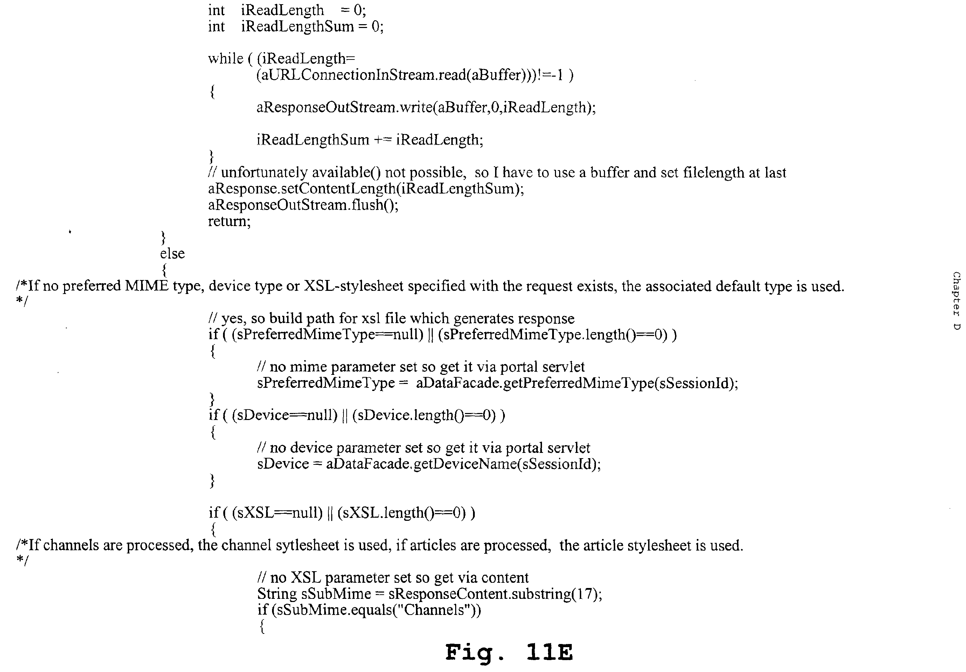

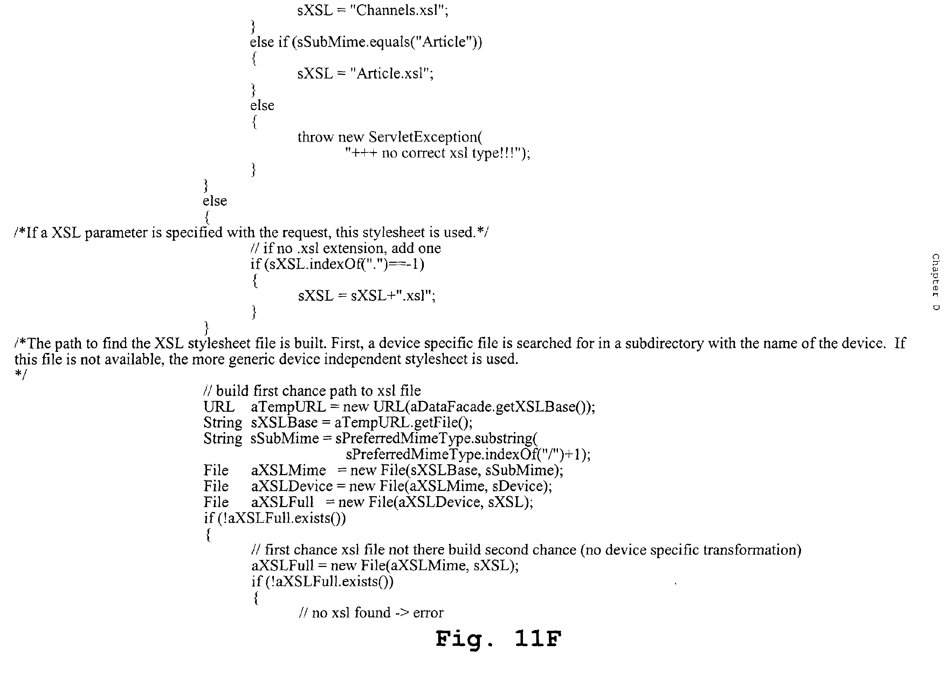

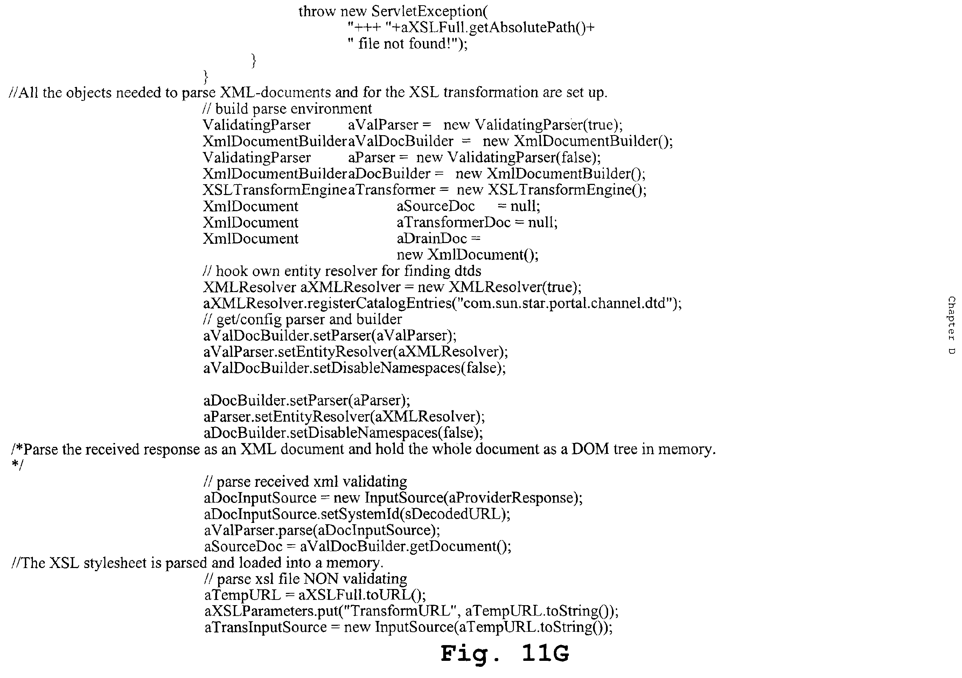

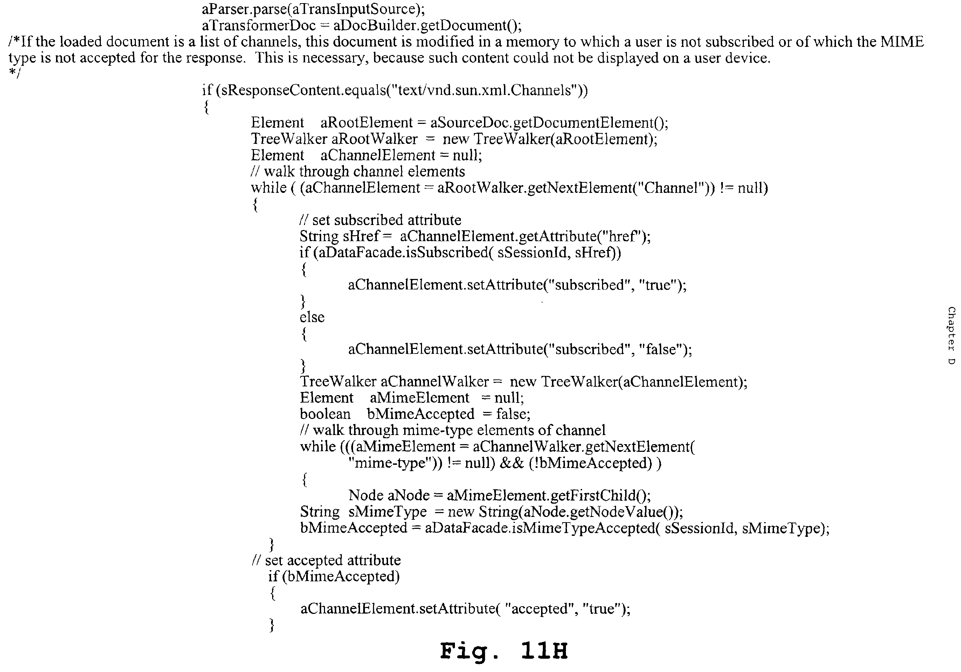

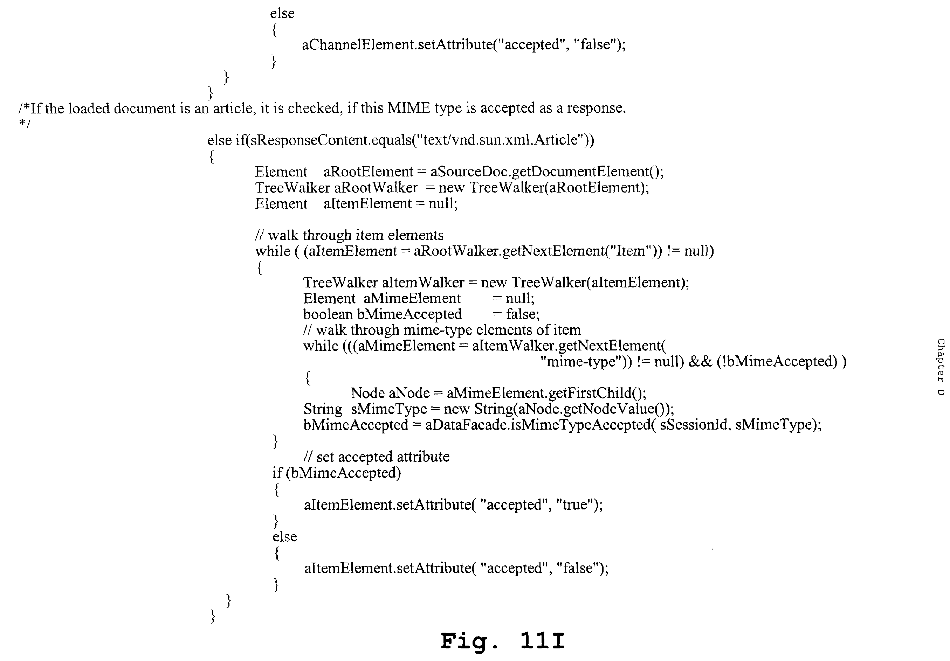

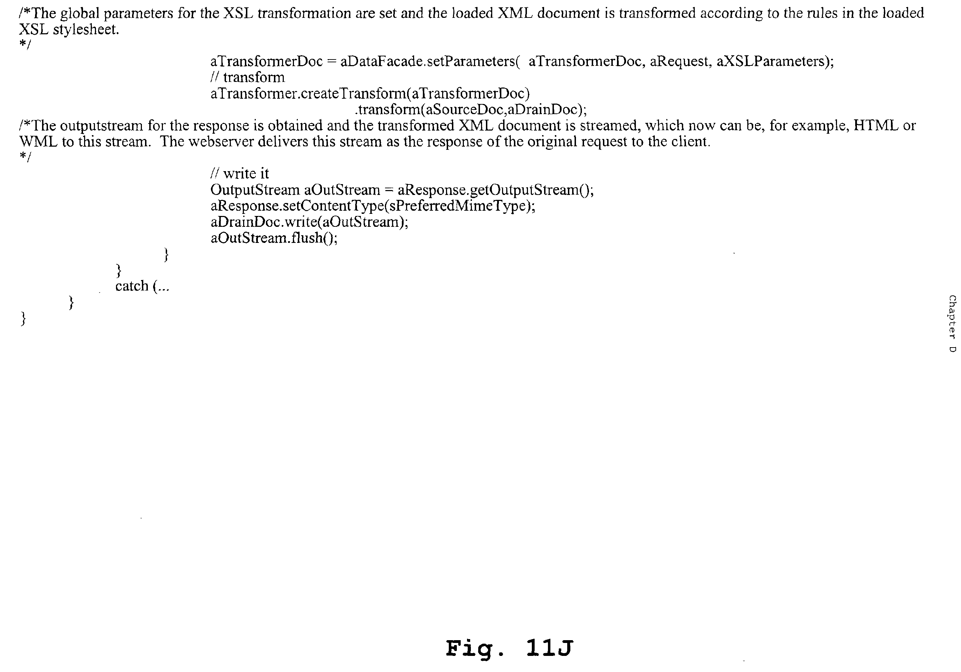

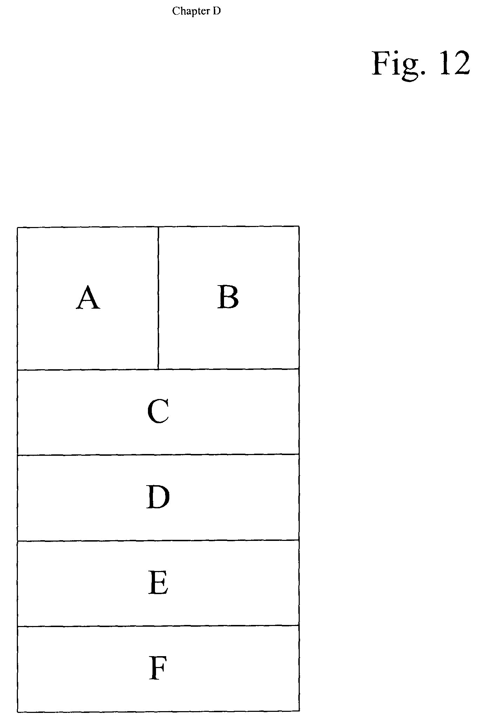

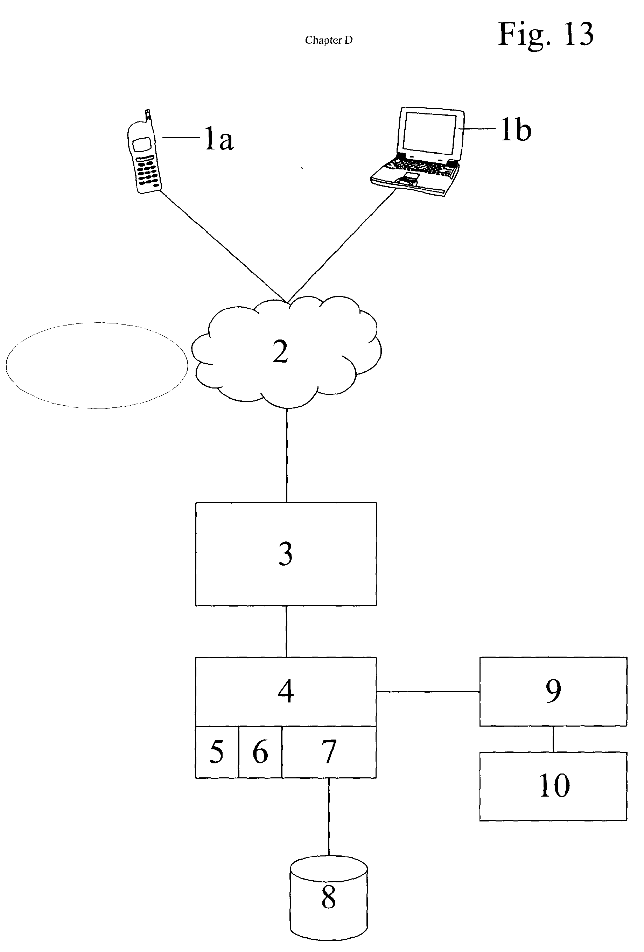

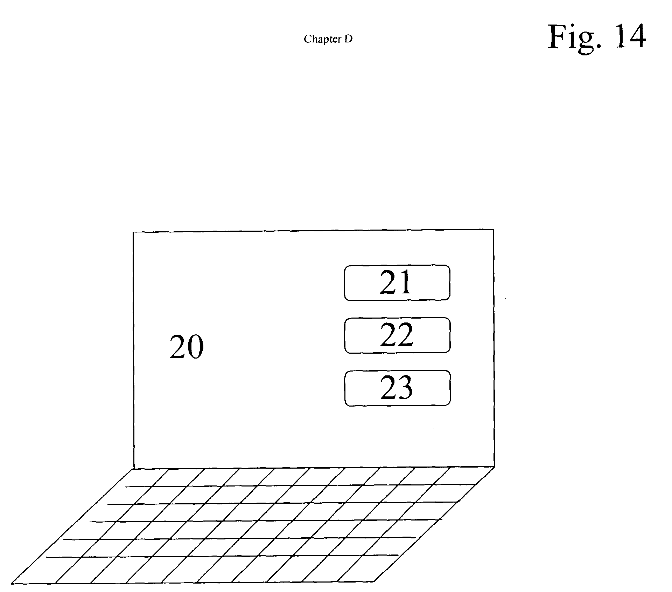

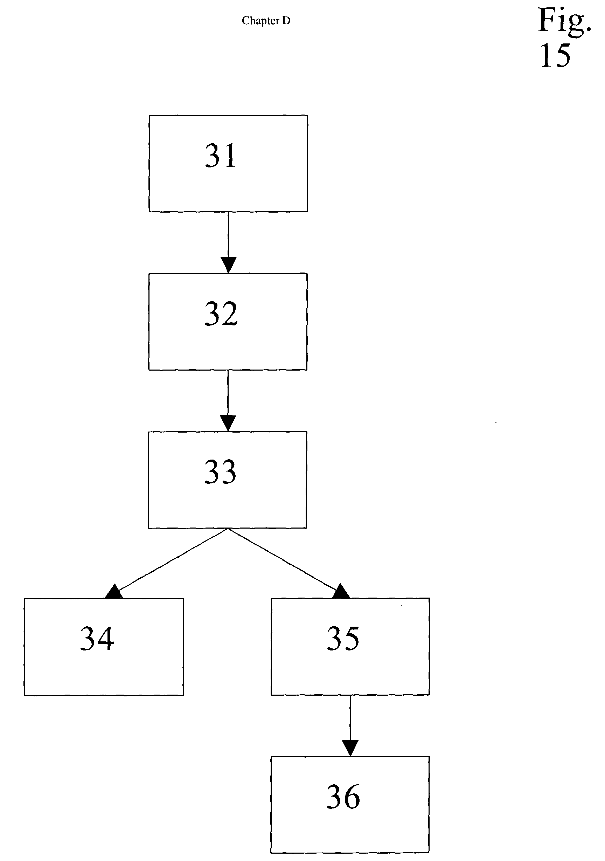

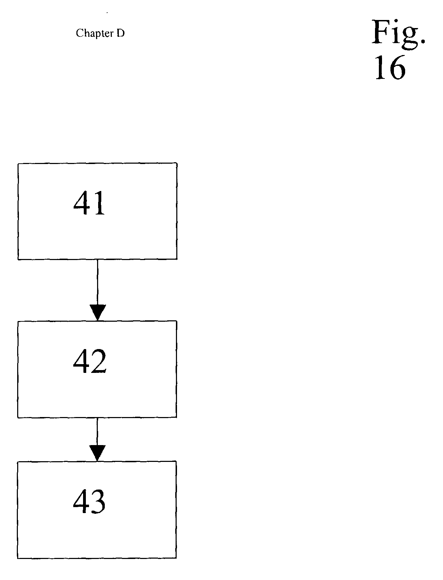

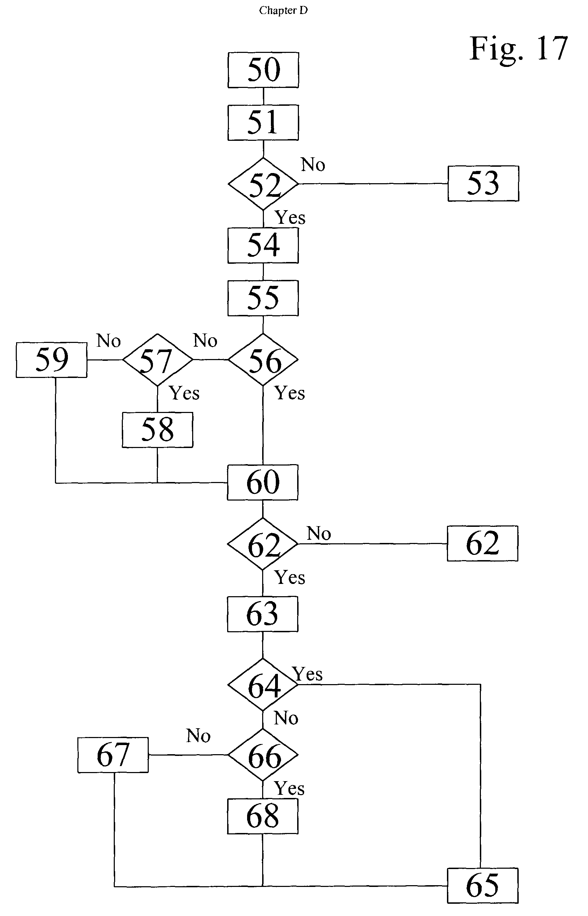

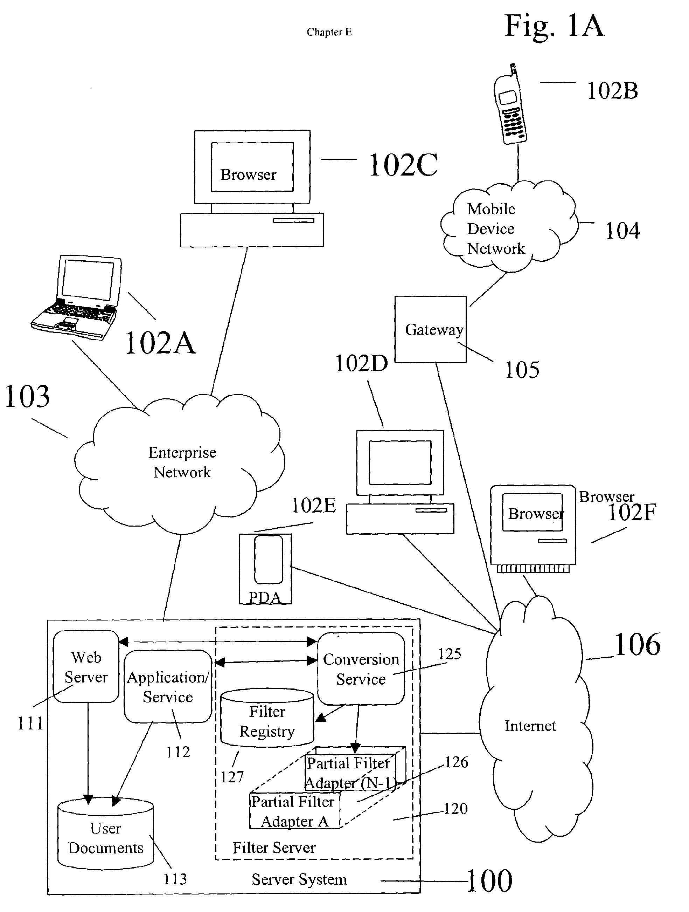

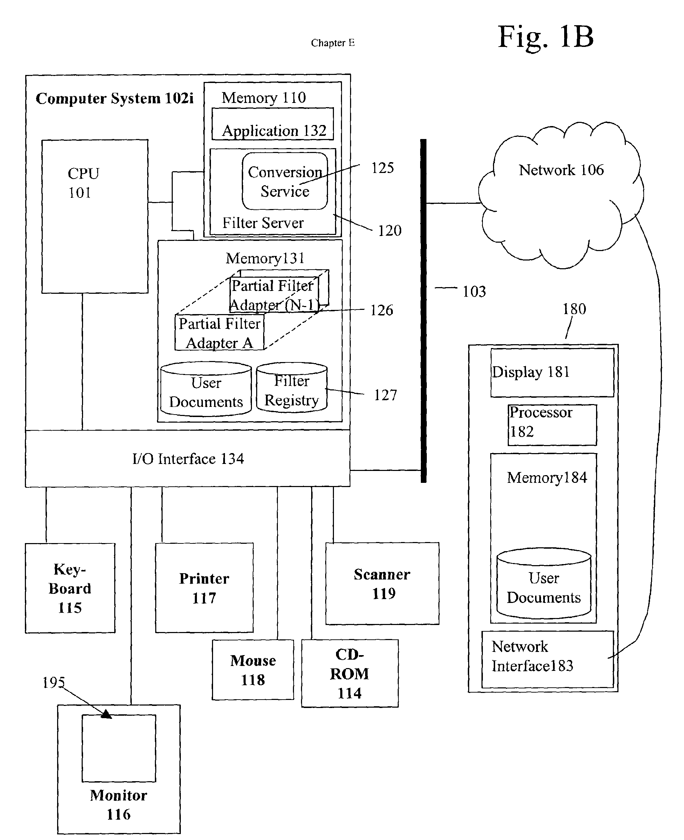

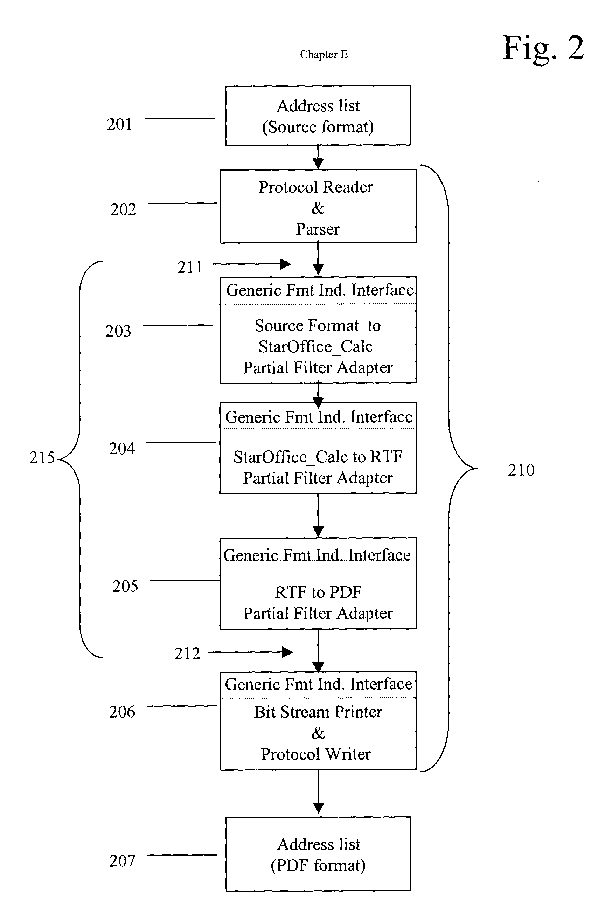

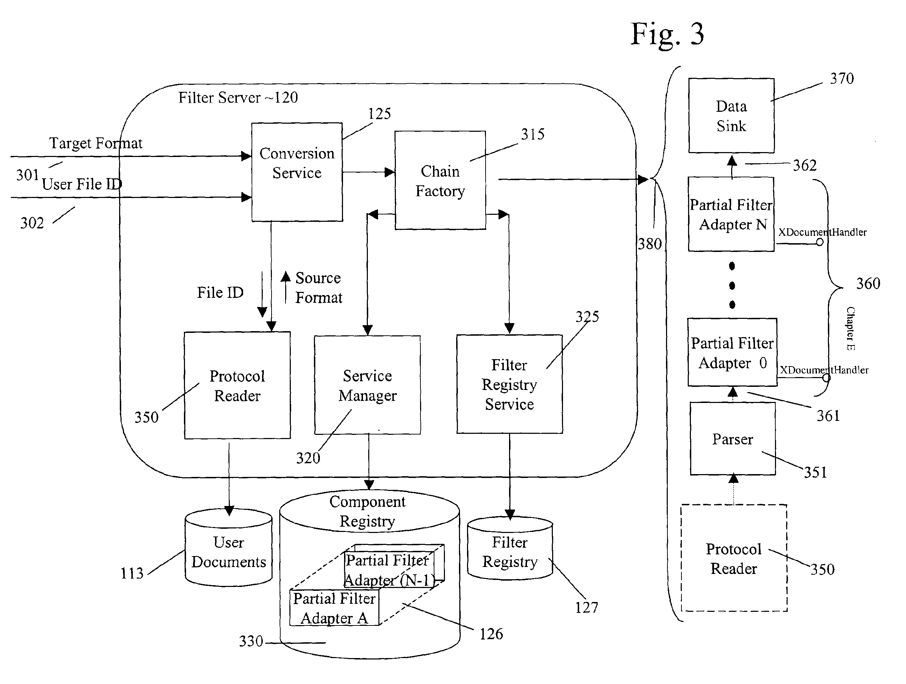

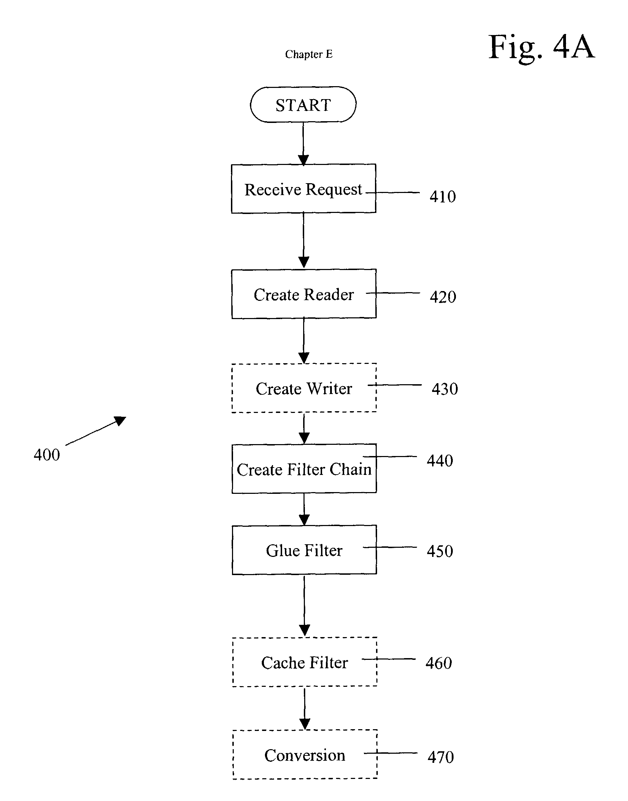

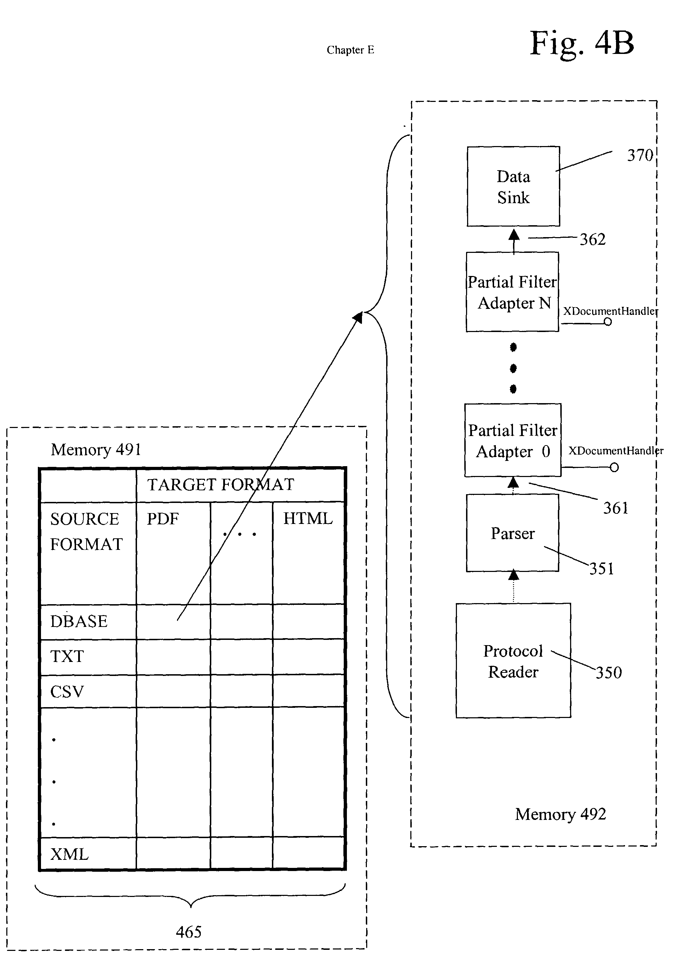

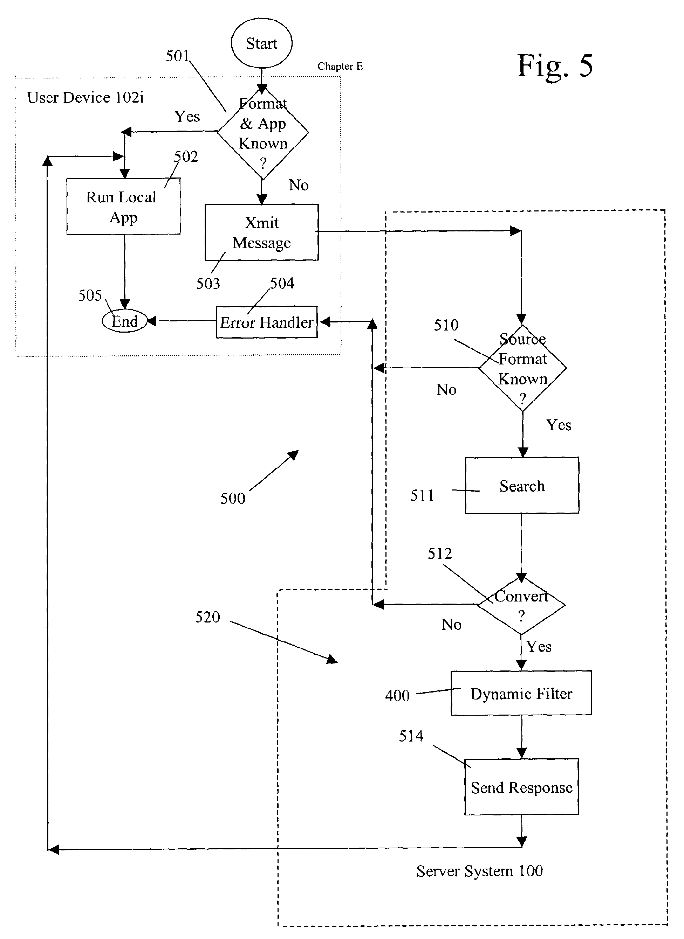

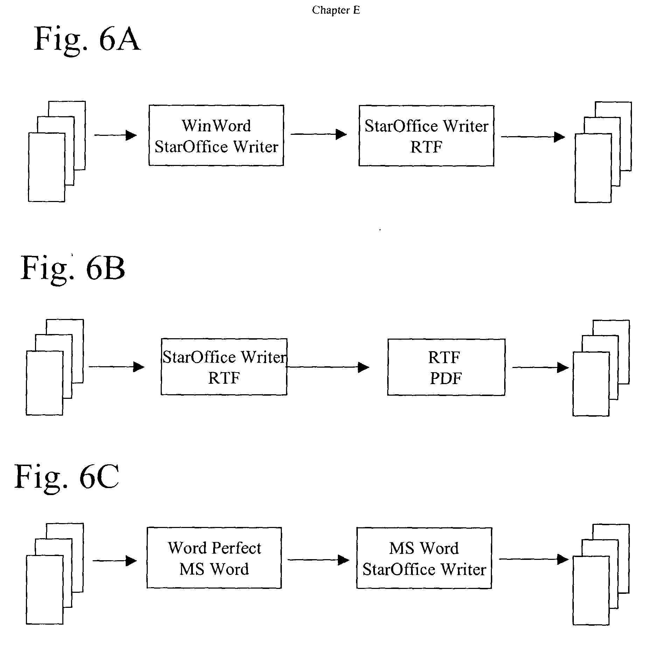

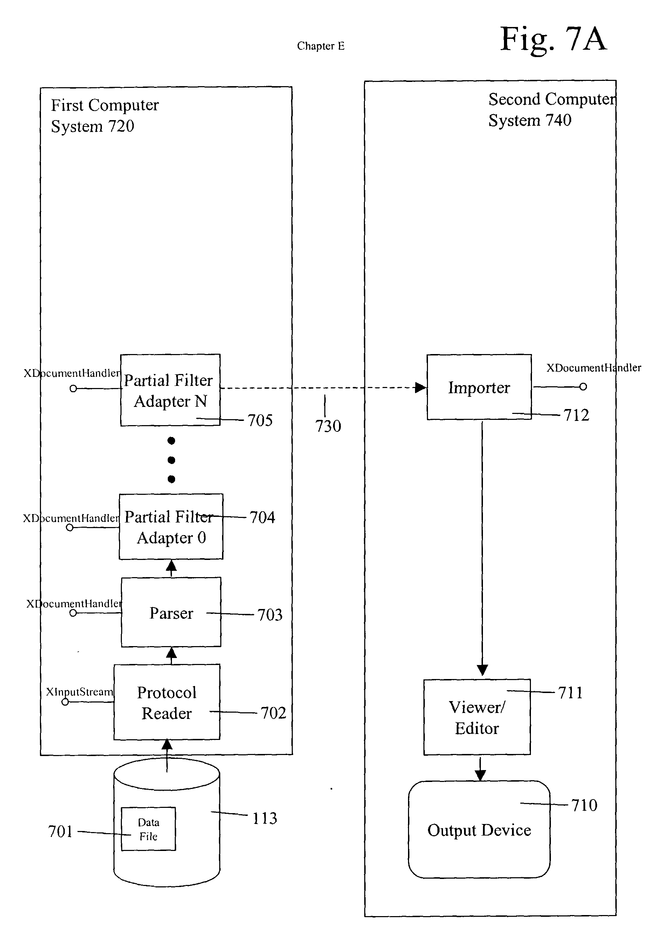

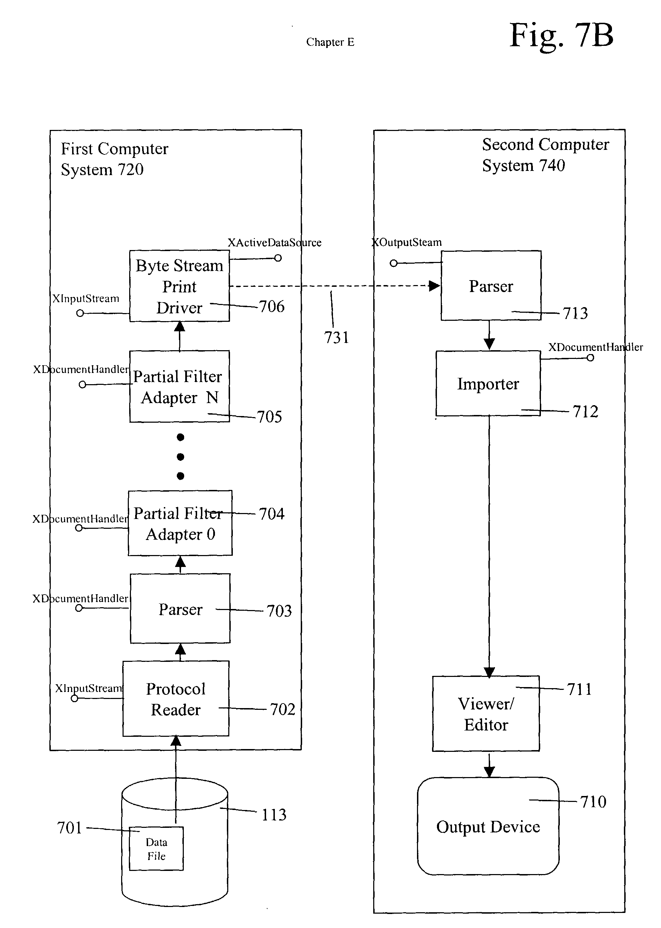

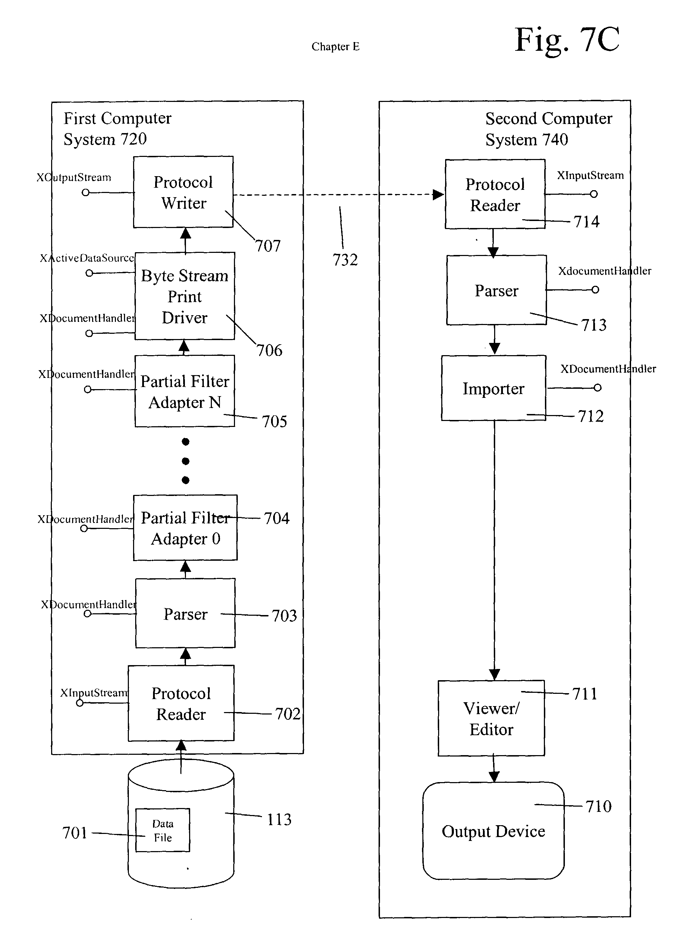

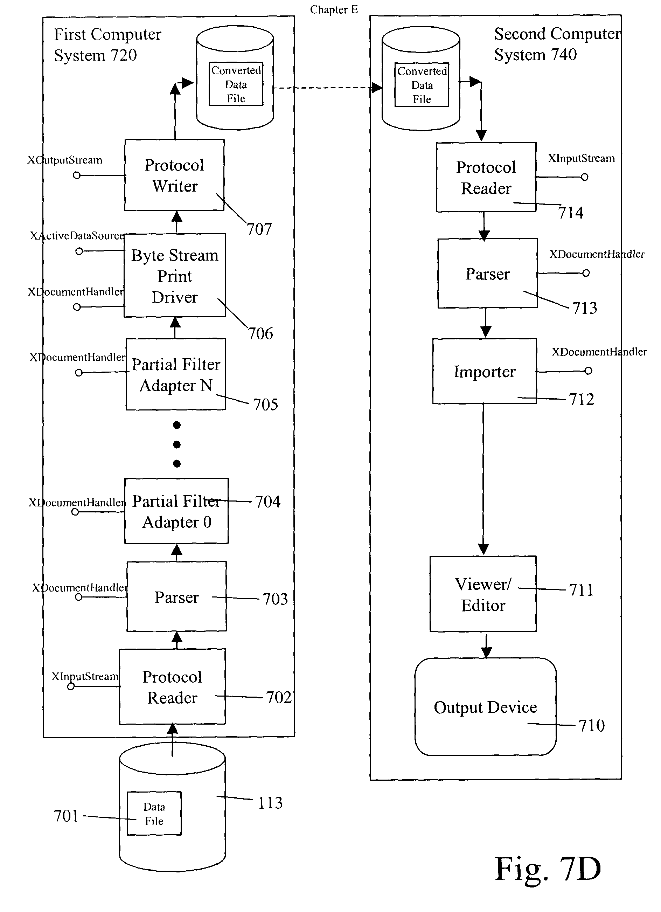

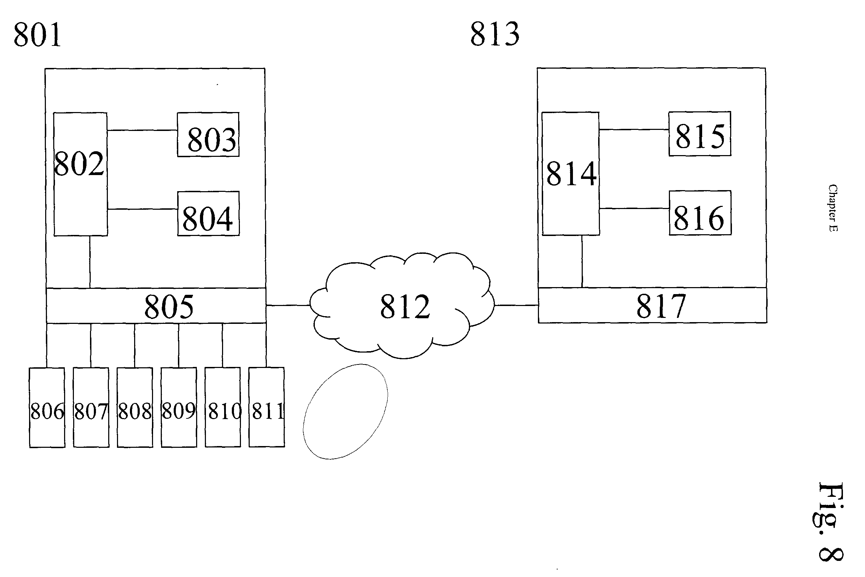

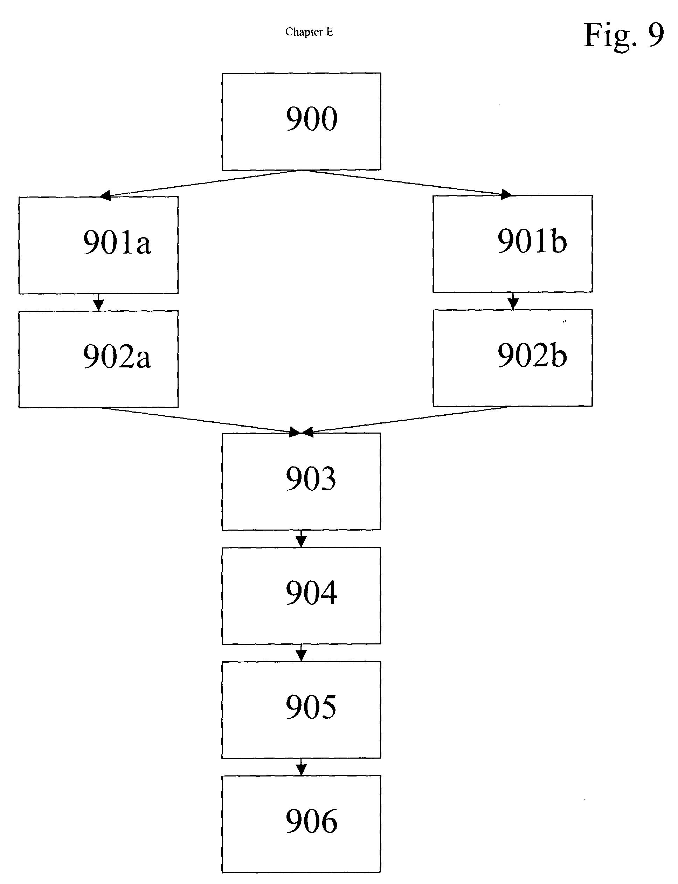

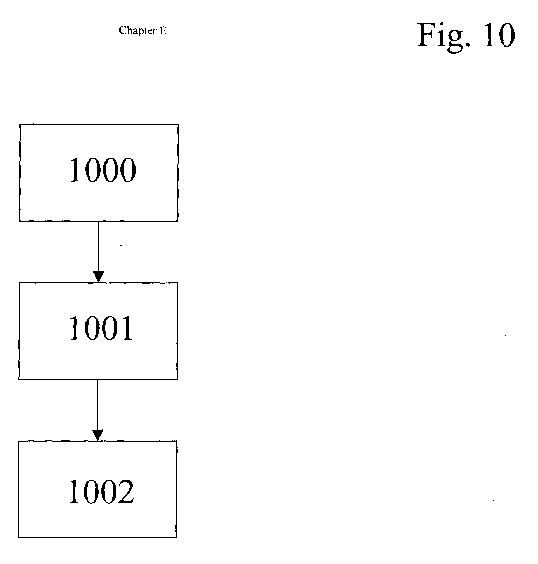

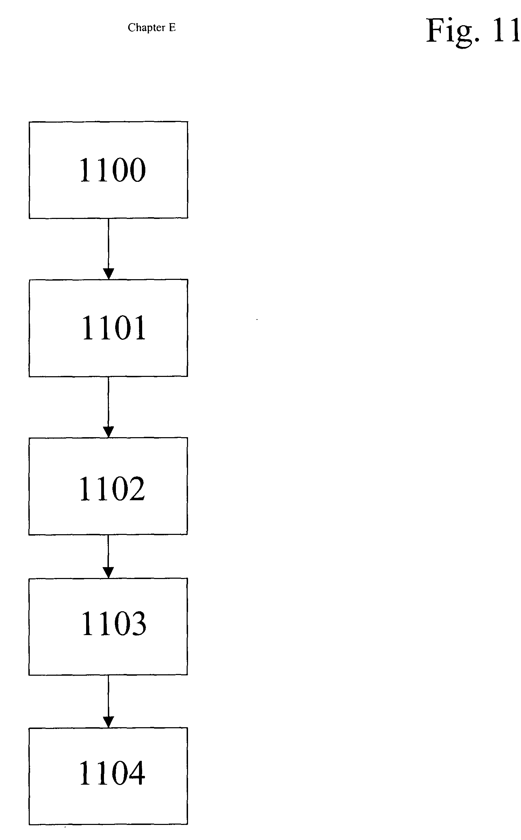

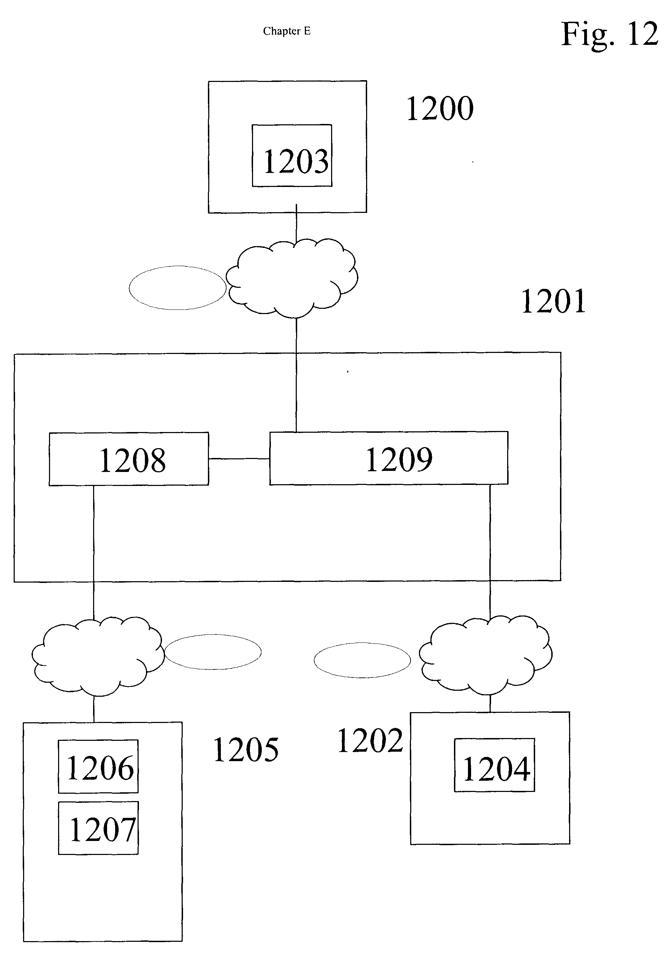

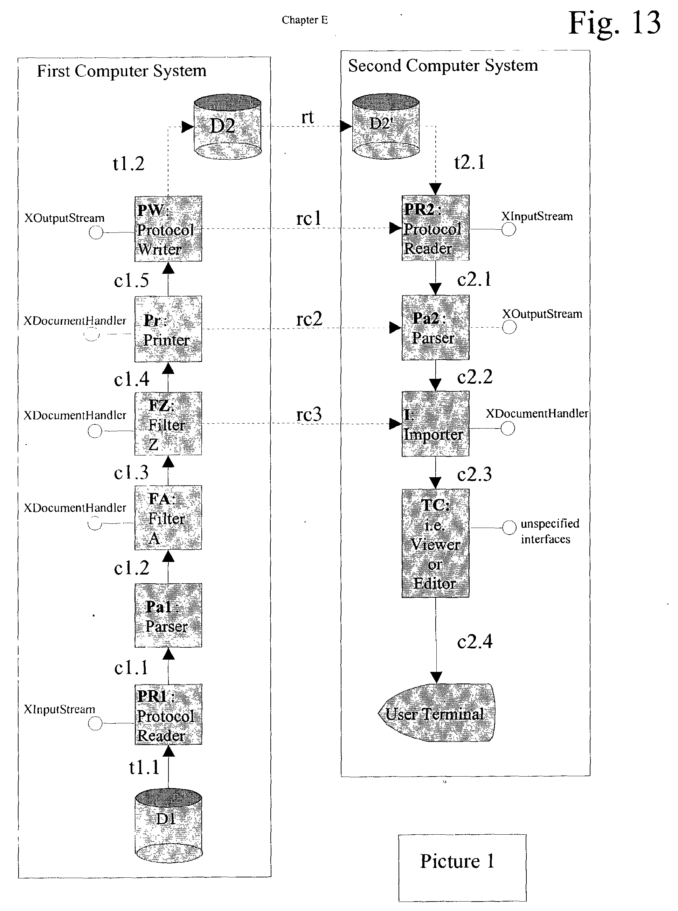

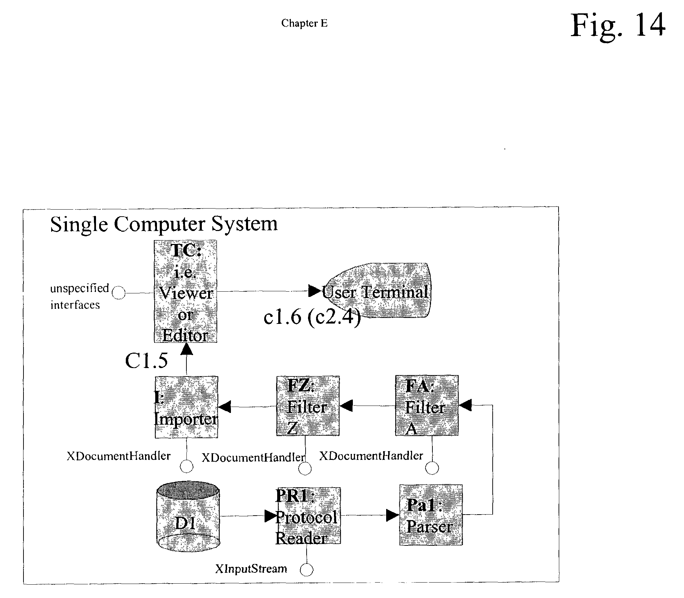

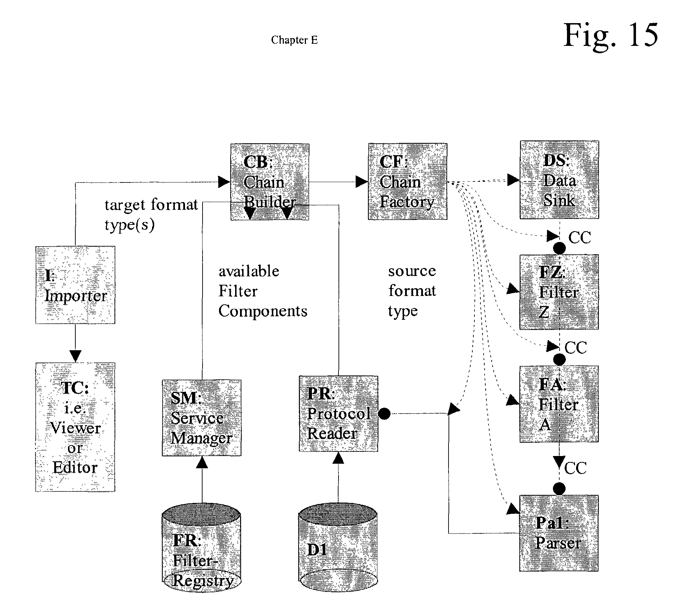

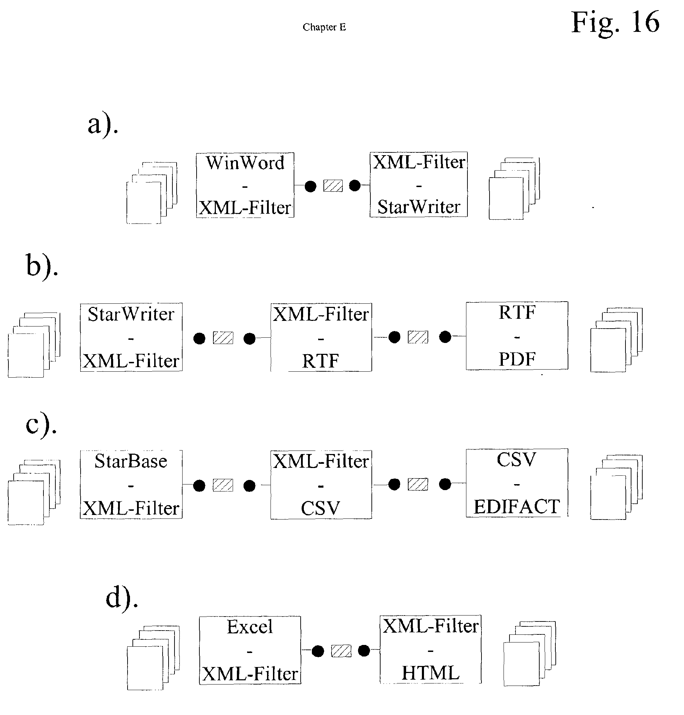

Fig. 39 shows an example of a portlet manager 3404. The portlet manager 3404 comprises in this example six modules. Module A is a receiving module for receiving a request of the user device 3401A, 3401B. Module B is an identifying module for identifying the presentation requirements of the user device 3401A, 3401B. These two modules are able to communicate with the selecting module C in order to enable module C to select a presentation scheme for the requested data in accordance with the presentation requirements of the user device 3401A, 3401B.

In the present example, the portlet manager 3404 comprises also a retrieving module D for retrieving the requested data to the portlet manager 3404. The applying module E will then apply the presentation scheme selected in module C to the data to create presentable data which may be presented by the user device. This presentable data will be submitted by a transmitting module E to the user device. The modules D, E and F need not be part of the portlet manager 3404. They or some of them may also reside on the user device 3401A, 3401B or on a computer system connected to the user device 3401A, 3401B or to the portlet manager 3404.

# EP 1 126 681 A2

## Table 1:

```
public class PortletManager extends HttpServlet
{
```

*This method provides information about a servlet used as portlet manager to a user device. In this example the method returns the name of the servlet and a copyright notice.*

```
    public String getServletInfo()
    {
            return "Channel Manager - Copyright 2000 Sun Microsystems, Inc.";
    }
```

*This method is called when the webserver (HTTP server) loads the servlet. It is only called once for the purpose of initialization. In this case configuration path names are loaded to the XSL and XML files.*

```
    public void init(ServletConfig configuration)
            throws ServletException
    {
            System.out.println(getServletInfo());
            super.init( configuration );

            m_aServletContext = configuration.getServletContext();

            m_aServletContext = getServletContext();

            String sRootBase      = null;
            String sXslBase       = null;
            String sUserBase      = null;
            String sNoUserName    = null;

            try
            {
                    sRootBase    = new String (getInitParameter("rootbase-uri"));
                    sXslBase     = new String (getInitParameter("xslbase-uri"));
                    sUserBase    = new String (getInitParameter("userbase-uri"));
                    sNoUserName  = new String (getInitParameter("nouser-name"));
            }
            catch ( Exception e )
            {
                    System.err.println("some required init parameter is
missing");
                    throw new ServletException("init parameter missing");
            }

            ...
    }
```

*The doPost method is called every time a HTTP post request arrives at the webserver with a request for an URL for which the servlet was configured initially. Post requests are handled in the same method where get requests are handled, so the doGet() method is called.*

```
    public void doPost( HttpServletRequest request,
                        HttpServletResponse response )
            throws ServletException, IOException
    {
            doGet(request, response);
    }
```

121

*The doGet method is called every time a HTTP get request arrives at the webserver with a request for an URL for which the servlet was configured.*

```
public void doGet( HttpServletRequest  aHttpServletRequest,
                   HttpServletResponse aHttpServletResponse )
       throws ServletException, IOException
{
       try
       {
```

*A string is formed which specifies the URL of the servlet based on the information coming with the request. This string can later be used to specify the servlet as target for a HTTP-request. This will be done once, because this URL can only change if the configuration of the webserver will change. In the latter case the servlet would be unloaded and loaded again.*

```
               // do it only once
               if (m_sPrefixPath.length()==0)
               {
                       // build prefix path (e.g.
www.sun.com:8088/portal/CM/)
                       String  sHostName    = "";
                       String  sContextPath = "";
                       String  sServletPath = "";

                       // get host name part
                       sHostName = aHttpServletRequest.getHeader("Host");

                       if ((sHostName == null) || (sHostName.length() == 0))
                       {
                               sHostName =
aHttpServletRequest.getServerName() +
       ":" + aHttpServletRequest.getServerPort();
                       }

                       sContextPath = getContextPath(aHttpServletRequest,
                                                     new Object[0]);

                       sServletPath = aHttpServletRequest.getServletPath();
               // get servlet path part
                       m_sPrefixPath = "http://" + sHostName + sContextPath;
                       m_aDataFacade.setContextPath(m_sPrefixPath);
                       m_sPrefixPath += sServletPath;
                       // concat
                       m_aDataFacade.setPrefixPath(m_sPrefixPath);
                       // set path on DataFacade

                       m_aCommandFactory = new CommandFactory();
                       // new command factory
               }
```

*The actual work for resolving the request is done by separate objects. For each command specified in the URL given in the request a new object is instanced which is responsible to resolve the request. This approach is based on a design pattern called the „Command"-pattern. In the current realization there are the commands „load", „save", „article" and „channel". The object associated with each command is instanced by the class CommandFactory.*

```
               // get command pattern and execute
               Command aCommand =

m_aCommandFactory.produceCommand(aHttpServletRequest);
                       aCommand.execute(aHttpServletRequest, aHttpServletResponse,
                                        m_aDataFacade);
       }
       catch (Exception e)
       {
               e.printStackTrace(System.out);
       }
}

...
```

```
private ChannelHook          m_aChannelHook       = null;
private CommandFactory m_aCommandFactory      = null;
private DataFacade          m_aDataFacade        = null;
private ServletContext m_aServletContext       = null;
private String             m_sPrefixPath          = "";
}
```

*The class CommandFactory parses the head of the specified URL for the request for a command, e.g. „channel". If a known command is recognized the associated command object will be created.*

```
public class CommandFactory
{
        public Command produceCommand(ServletRequest aRequest)
                throws ServletException
        {
                Command aCommand = null;
                String  sUrl      = null;
```

*The following method makes sure that this is an HTTP request and gets the URL out of the request.*

```
                if(aRequest instanceof HttpServletRequest)
                {
                        HttpServletRequest sHttpServletRequest =
                                        (HttpServletRequest) aRequest;
                        sUrl = sHttpServletRequest.getPathInfo();
                }
                else
                {
                        throw new ServletException(
                                        "Request is not of type HttpServletRequest" );
                }
```

*The following method tries to recognize the recent command by comparing the head of the URL with the known set of commands. If a known command is found the associated class is instanced and this instance is returned to the caller.*

```
                // careful: sort order of if clauses is important
                if( sUrl != null )
                {
                        if( sUrl.startsWith(CHANNEL) )
                        {
                                aCommand = new ChannelCommand();
                        }
                        if( sUrl.startsWith(ARTICLE) )
                        {
                                aCommand = new ChannelCommand();
                        }
                        else if( sUrl.startsWith(LOAD) )
                        {
                                aCommand = new LoadCommand();
                        }
                        else if( sUrl.startsWith(SAVE) )
                        {
                                aCommand = new SaveCommand();
                                System.out.println("- new SaveCommand");
                        }
                }

                if( aCommand == null )
                {
                        throw new ServletException(
                                        "Factory cant produce command for URL" + sUrl
);
                }

                return aCommand;
        }

        public final static String LOAD      = "/load";
        public final static String CHANNEL    = "/channel";
        public final static String ARTICLE    = "/article";
```

```
        public final static String SAVE        = "/save";
}
```

*The ChannelCommand has to provide the content of a portlet as a response to a request. The ChannelCommand is derived from the class Command, which is necessary, because of the use of the „Command"-pattern.*

```
public class ChannelCommand extends Command
{
        public void execute( ServletRequest   aRequest,
                             ServletResponse  aResponse,
                             DataFacade       aDataFacade)
                throws ServletException
        {
                InputStream     aDocInputStream         = null;
                InputSource     aDocInputSource         = null;
                InputSource     aTransInputSource       = null;
                URLConnection   aURLConnection          = null;
                String          sSessionId              = getSessionId(aRequest);
                String          sEncodedURL             =
aRequest.getParameter("href");
                String          sPreferredMimeType      =
aRequest.getParameter("Mime");
                String          sDevice         = aRequest.getParameter("Device");
                String          sXSL                    = aRequest.getParameter("XSL");
                String          sDecodedURL             = "";
                String          sResponseContent        = "";
                Hashtable       aXSLParameters          = new Hashtable();

                try
                {
```

*If no portlet is specificed in the URL information about all available portlets is returned. This will be decided by checking the URL for any additinal information. The information about all available portlets will be received from a data container called DataFacade. This concept is based on the design pattern Facade.*

```
                        //set URL for root channel list
                        if ((sEncodedURL==null)          ||
                            (sEncodedURL.equals(""))||
                            (sEncodedURL.equals("root")) )
                        {
                                sDecodedURL = aDataFacade.getRootBase();
                        }
                        else
                        {
                                sDecodedURL = URLDecoder.decode(sEncodedURL);
                        }
```

*The part in the URL which specifies the Portlets is an URL which can be used to retrieve the content of the Portlet. This will be used to build a corresponding URL object which will be used later on to build an URLconnection.*

```
                        //get URL connection
                        URL aURL = new URL(sDecodedURL);

                        aURLConnection = aURL.openConnection();

                        aURLConnection.setUseCaches(false);

                        aXSLParameters.put("ProviderURL", aURL.toString());
```

*In the following method all additional fields which are specified in the request will be copied to the new request. These fields can include, for example, the name of the browser used on the client side, that means in the user device.*

```
                        // tunnel properties
                        java.util.Enumeration aHeaderNameList =
                                        ((HttpServletRequest)
aRequest).getHeaderNames();
```

```
                      while (aHeaderNameList.hasMoreElements())
                      {
                              String sKey      = (String)
aHeaderNameList.nextElement();
                              String sValue  = ((HttpServletRequest)
                                              aRequest).getHeader(sKey);
                              aURLConnection.setRequestProperty(sKey, sValue);
                      }
```

*The additional MIME types which are supported by the portlet manager will be added to a list of accepted MIME types and this list will be added to the new request.*

```
                      // set own mime types, because some devices accept some
                      // mime types which make them crash...
                      String sSupportedMimeTypes =
                                      aDataFacade.getSupportedMimeTypes(sSessionId);
                      aURLConnection.setRequestProperty("accept",
sSupportedMimeTypes);
```

*The provider of the portlet content will be connected and the respective content will be read out by using an InputStream*

```
                      // get connection to URL
                      aURLConnection.connect();

                      InputStream aProviderResponse =
aURLConnection.getInputStream();
```

*In case of a HTTP connection the information in the HTTP header can be used to recognize the MIME type of the response. If the HTTP protocol is not used, the extension of the specified URL will be checked.*

```
                      if ( aURL.getProtocol().equals("http") )
                      {
                              // get content type
                              sResponseContent = aURLConnection.getContentType();
                      }
                      else
                      {
```

*If it is recognized that a XML file is requested, it is tried to guess which kind of XML file it is by analyzing the DOCTYPE field in the header of the XML file. In the case that an XML file based on a certain DTD will be recognized the response type will be set to the associated name.*

```
                              // protocol is not http, so get content via file
                              if (sDecodedURL.endsWith(".xml"))
                              {
                                      //seems to be an xml file, so get doctype
content
                                      aProviderResponse.mark(1024);
                                      byte[] aBuffer = new byte[1000];
                                      aProviderResponse.read(aBuffer);
                                      aProviderResponse.reset();

                                      String aSearchString = new String(aBuffer);

                                      int nDoctypePosition = aSearchString.indexOf(
                                                              "<!DOCTYPE ");

                                      if (nDoctypePosition==-1)
                                      {
                                              //unknown xml, send as binary
                                              sResponseContent = "";
                                      }
                                      else
                                      {
                                              // found "doctype", determine doctype
                                              String aTokenizerFeed =
aSearchString.substring(nDoctypePosition);
```

```
                                        StringTokenizer aTokenizer = new
                                                StringTokenizer(aTokenizerFeed,
" ");

                                        // get doctype
                                        aTokenizer.nextToken();

                                        String sResult =
aTokenizer.nextToken();

                                        if (sResult.equals("Channels"))
                                        {
                                                sResponseContent =
        "text/vnd.sun.xml.Channels";

                                        }
                                        else if (sResult.equals("Article"))
                                        {
                                                sResponseContent =
        "text/vnd.sun.xml.Article";

                                        }
                                        else
                                        {
                                                //unknown xml, send as binary
                                                sResponseContent = "";
                                        }
                                }
                        }
                        else
                        {
```

*If it is not a XML file, the class URLconnection will guess the content type of the response stream.*

```
                                //no xml file, so start guessing
                                sResponseContent =
        aURLConnection.guessContentTypeFromStream(
        aProviderResponse);

                                        if (sResponseContent==null)
                                        {
                                                //okay, now I'm helpless
                                                sResponseContent="";
                                        }
                                }
                        }

                        aXSLParameters.put("ProviderMimeType", sResponseContent);

                        // xml response?
                        if (!sResponseContent.startsWith("text/vnd.sun.xml."))
                        {
```

*If the response content is not in a XML format handled by the portlet manager, the response is returned as response to the original request without any modification.*

```
                                // upps, no xml, so simply tunnel through as raw data
                                aResponse.setContentType(sResponseContent);

                                if (aResponse instanceof HttpServletResponse)
                                {
                                        ((HttpServletResponse)
        aResponse).setDateHeader(
                                                "Last-Modified",
        System.currentTimeMillis());
                                }
```

*The inputstream of the response is copied to the outputstream of the response of the original request.*

```
                                InputStream   aURLConnectionInStream =
        aProviderResponse;

                                OutputStream  aResponseOutStream      =
```

```
                                        aResponse.getOutputStream();

                                        byte[] aBuffer        = new byte[1024];
                                        int    iReadLength     = 0;
                                        int    iReadLengthSum  = 0;

                                        while ( (iReadLength=
                                                (aURLConnectionInStream.read(aBuffer)))!=-1 )
                                        {

                                        aResponseOutStream.write(aBuffer,0,iReadLength);

                                                iReadLengthSum += iReadLength;
                                        }

                                        // unfortunately available() not possible,
                                        // so I have to use a buffer and set filelength at
                last
                                        aResponse.setContentLength(iReadLengthSum);

                                        aResponseOutStream.flush();

                                        return;
                                }
                                else
                                {
```

*If no preferred MIME type, device type or XSL-stylesheet specified with the request exists, the associated default type is used.*

```
                                        // yes, so build path for xsl file which generates
                response
                                        if ( (sPreferredMimeType==null) ||
                                            (sPreferredMimeType.length()==0) )
                                        {
                                                // no mime parameter set so get it
                                                // via portal servlet
                                                sPreferredMimeType =
                aDataFacade.getPreferredMimeType(sSessionId);
                                        }

                                        if ( (sDevice==null) || (sDevice.length()==0) )
                                        {
                                                // no device parameter set so get it
                                                // via portal servlet
                                                sDevice =
                aDataFacade.getDeviceName(sSessionId);
                                        }

                                        if ( (sXSL==null) || (sXSL.length()==0) )
                                        {
```

*If channels are processed, the channel sytlesheet is used, if articles are processed, the article stylesheet is used.*

```
                                                // no XSL parameter set so get via content
                                                String sSubMime =
                sResponseContent.substring(17);
                                                if (sSubMime.equals("Channels"))
                                                {
                                                        sXSL = "Channels.xsl";
                                                }
                                                else if (sSubMime.equals("Article"))
                                                {
                                                        sXSL = "Article.xsl";
                                                }
                                                else
                                                {
                                                        throw new ServletException(
                                                                "+++ no correct xsl type!!!");
                                                }
                                        }
                                        else
                                        {
```

*If a XSL parameter is specified with the request, this stylesheet is used.*

```
                                        // if no .xsl extension, add one
                                        if (sXSL.indexOf(".")==-1)
                                        {
                                                sXSL = sXSL+".xsl";
                                        }
                            }
```

*The path to find the XSL stylesheet file is built. First, a device specific file is searched for in a subdirectory with the name of the device. If this file is not available, the more generic device independent stylesheet is used.*

```
                            // build first chance path to xsl file
                            URL     aTempURL = new URL(aDataFacade.getXSLBase());
                            String  sXSLBase = aTempURL.getFile();
                            String  sSubMime = sPreferredMimeType.substring(
        sPreferredMimeType.indexOf("/")+1);
                            File    aXSLMime   = new File(sXSLBase, sSubMime);
                            File    aXSLDevice = new File(aXSLMime, sDevice);
                            File    aXSLFull   = new File(aXSLDevice, sXSL);

                            if (!aXSLFull.exists())
                            {
                                    // first chance xsl file not there build
                                    // second chance (no device specific
        transformation)
                                    aXSLFull = new File(aXSLMime, sXSL);

                                    if (!aXSLFull.exists())
                                    {
                                            // no xsl found -> error
                                            throw new ServletException(
                                                    "+++
        "+aXSLFull.getAbsolutePath()+
                                                    " file not found!");
                                    }
                            }
```

*All the objects needed to parse XML-documents and for the XSL transformation are set up.*

```
                            // build parse environment
                            ValidatingParser        aValParser =
                                                    new
        ValidatingParser(true);
                            XmlDocumentBuilder      aValDocBuilder =
                                                    new
        XmlDocumentBuilder();
                            ValidatingParser        aParser =
                                                    new
        ValidatingParser(false);
                            XmlDocumentBuilder      aDocBuilder =
                                                    new
        XmlDocumentBuilder();
                            XSLTransformEngine      aTransformer =
                                                    new
        XSLTransformEngine();
                            XmlDocument             aSourceDoc      = null;
                            XmlDocument             aTransformerDoc = null;
                            XmlDocument             aDrainDoc =
                                                    new XmlDocument();

                            // hook own entity resolver for finding dtds
                            XMLResolver aXMLResolver = new XMLResolver(true);
                            aXMLResolver.registerCatalogEntries(
        "com.sun.star.portal.channel.dtd");

                            // get/config parser and builder
                            aValDocBuilder.setParser(aValParser);
                            aValParser.setEntityResolver(aXMLResolver);
                            aValDocBuilder.setDisableNamespaces(false);
```

```
                        aDocBuilder.setParser(aParser);
                        aParser.setEntityResolver(aXMLResolver);
                        aDocBuilder.setDisableNamespaces(false);
```

*Parse the received response as an XML document and hold the whole document as a DOM tree in memory.*

```
                        // parse received xml validating
                        aDocInputSource = new InputSource(aProviderResponse);
                        aDocInputSource.setSystemId(sDecodedURL);
                        aValParser.parse(aDocInputSource);
                        aSourceDoc = aValDocBuilder.getDocument();
```

*The XSL stylesheet is parsed and loaded into a memory.*

```
                        // parse xsl file NON validating
                        aTempURL = aXSLFull.toURL();
                        aXSLParameters.put("TransformURL",
aTempURL.toString());
                        aTransInputSource = new
InputSource(aTempURL.toString());
                        aParser.parse(aTransInputSource);
                        aTransformerDoc = aDocBuilder.getDocument();
```

*If the loaded document is a list of channels, this document is modified in a memory to which a user is not subscribed or of which the MIME type is not accepted for the response. This is necessary, because such content could not be displayed on a user device.*

```
                        if
(sResponseContent.equals("text/vnd.sun.xml.Channels"))
                        {
                                Element    aRootElement =
aSourceDoc.getDocumentElement();
                                TreeWalker aRootWalker  =
                                        new TreeWalker(aRootElement);
                                Element    aChannelElement = null;

                                // walk through channel elements
                                while ( (aChannelElement =
                                        aRootWalker.getNextElement("Channel"))
                                        != null)
                                {
                                        // set subscribed attribute
                                        String sHref =
aChannelElement.getAttribute("href");
                                        if (aDataFacade.isSubscribed(
                                                        sSessionId,
sHref))
                                        {
                                                aChannelElement.setAttribute(
                                                        "subscribed", "true");
                                        }
                                        else
                                        {
                                                aChannelElement.setAttribute(
                                                        "subscribed", "false");
                                        }

                                        TreeWalker aChannelWalker =
                                                new
TreeWalker(aChannelElement);
                                        Element    aMimeElement   = null;
                                        boolean    bMimeAccepted  = false;

                                        // walk through mime-type elements of
channel
                                        while (((aMimeElement =
                                                aChannelWalker.getNextElement(
                                                        "mime-type")) != null)
        &&                                              (!bMimeAccepted) )
```

```
                                                {
                                                        Node aNode =
aMimeElement.getFirstChild();
                                                        String  sMimeType  = new
String(aNode.getNodeValue());
                                                        bMimeAccepted =
                                                                aDataFacade.isMimeTypeAccepted(
                                                                        sSessionId, sMimeType);
                                                }

                                                // set accepted attribute
                                                if (bMimeAccepted)
                                                {
                                                    aChannelElement.setAttribute(
                                                                "accepted", "true");
                                                }
                                                else
                                                {
                                                    aChannelElement.setAttribute(
                                                                "accepted", "false");
                                                }
                                        }
                                }
```

*If the loaded document is an article, it is checked, if this MIME type is accepted as a response.*

```
                                else
if(sResponseContent.equals("text/vnd.sun.xml.Article"))
                                {
                                        Element    aRootElement =
aSourceDoc.getDocumentElement();
                                        TreeWalker aRootWalker  = new
                                                        TreeWalker(aRootElement);
                                        Element    aItemElement = null;

                                        // walk through item elements
                                        while ( (aItemElement =
                                                aRootWalker.getNextElement("Item")) !=
null)
                                        {
                                                TreeWalker aItemWalker = new
TreeWalker(aItemElement);
                                                Element  aMimeElement  = null;
                                                boolean bMimeAccepted  = false;

                                                // walk through mime-type elements of
item
                                                while (((aMimeElement =
                                                        aItemWalker.getNextElement(
                                                                "mime-type")) != null)
                                                                        (!bMimeAccepted)
&&
)
                                                {
                                                        Node aNode =
aMimeElement.getFirstChild();
                                                        String  sMimeType = new
String(aNode.getNodeValue());

                                                        bMimeAccepted =
                                                                aDataFacade.isMimeTypeAccepted(
                                                                        sSessionId,
sMimeType);
                                                }

                                                // set accepted attribute
                                                if (bMimeAccepted)
                                                {
                                                    aItemElement.setAttribute(
                                                                        "accepted",
"true");
                                                }
```

```
                                                else
                                                {
                                                    aItemElement.setAttribute(
                                                                        "accepted",
        "false");
                                                }
                                    }
                                }
```

*The global parameters for the XSL transformation are set and the loaded XML document
is transformed according to the rules in the loaded XSL stylesheet.*

```
                                    aTransformerDoc = aDataFacade.setParameters(
                                                    aTransformerDoc, aRequest,
        aXSLParameters);

                                    // transform
                                    aTransformer.createTransform(aTransformerDoc)

            .transform(aSourceDoc,aDrainDoc);
```

*The outputstream for the response is obtained and the transformed XML document is
streamed, which now can be, for example, HTML or WML to this stream. The webserver
delivers this stream as the response of the original request to the client.*

```
                                    // write it
                                    OutputStream aOutStream =
        aResponse.getOutputStream();

                                    aResponse.setContentType(sPreferredMimeType);

                                    aDrainDoc.write(aOutStream);

                                    aOutStream.flush();
                            }
                        }
                    catch (...
                }
            }
```

While in the above CHAPTER A the basic elements of the network portal system have been described, a more detailed description of elements of the network portal system are is given in the following CHAPTERS B, C, D, E. It is noted that these further examples of the elements may be used with the embodiments of the network portal system described above in CHAPTER A.

CHAPTER B provides ,e.g., a detailed description of a bridge and proxy, to allow for dynamically dispatching function calls from a first execution environment to a second execution environment.

CHAPTER C describes to use services or applications on a network portal system allowing e.g., a remote control and interaction with run time environment component.

CHAPTER D describes for example to select portlets that may be accessed by a user device, e.g. to provide a computer- based representation manager and method for individual user-device data representation.

CHAPTER E describes that a data filter may be used dynamically, such that a complete data file is not stored in an intermediate format. Rather, for example, the output from a first partial filter adapter is input to a second partial filter adapter before all the data has been processed by the first partial filter adapter, providing for a dynamic conversion of data.

## CHAPTER B

Chapter B describes a method and system for dynamically dispatching function calls from a first execution Environment to a second execution environment, e.g. in the network portal system of CHAPTER A.

## BACKGROUND

### Field

CHAPTER B relates generally to executing computer software programs generated by different compilers, and in particular to a method for enabling a first computer software program using a first binary specification to employ functionality of a second computer software program using a second binary specification, e.g. in the network portal system of CHAPTER A.

Description of Related Art

Many computer software programs, which are created in different programming languages, have to communicate with each other. For example, a first computer software program, sometimes called the first software program, created in a first computer programming language is able to provide tables. The first software program calls a second software program created in a second programming language, which is able to calculate figures that are needed in the table to be produced by the first software program. (As those of skill in the art will appreciate, when it is stated that a software program performs an action, this means that upon execution of the software program on a processor, the system including the processor performs the action in response to execution of an instruction or instructions in the software program.)

Since the two software programs are written in different languages, the two software programs have different binary specifications. The second software program cannot be successfully called by the first software program because the different binary specifications prevents the second software program from correctly executing the call from the first software program.

In this example, the different binary specifications result from different computer programming languages. However, binary specifications for the same computer programming language can be different based upon the differences in the compilers for the same programming language.

The prior art solution to this problem was to provide transformer modules for each required transformation route, for example from a certain first binary specification to a certain second binary specification. Since in modern computer applications, a certain software program may call many different software programs, the computer system requires a voluminous library of transformer modules. This extensive library needs significant storage space and regular maintenance, since for every new binary specification, which shall be accessible, a full new set of transformer modules must be provided to each of the other binary specifications, in addition to the existing transformer modules. However, most of these transformer modules are not used frequently, so that their storage is not efficient.

Furthermore, these prior art transformer modules extend to the full functionality of the software program to be translated from one binary specification to another. Due to the regularly wide functionality of software programs, known transformer modules are rather voluminous and require, when they are activated, a significant amount of working memory and processor time from the computer system on which they are executed. Furthermore, the complete translation of a software program is burdensome and time consuming, although it is in most cases unnecessary for the specific task to be accomplished.

SUMMARY

Therefore, it is desirable to provide an efficient method to enable a first software program to employ certain functionalities of a second software program, wherein the first and the second software program use different binary specifications.

According to one embodiment, an efficient method is provided to enable a first software program to employ certain functionalities of a second software program, where the first and the second software program use different binary specifications, i.e., the first and second software programs are in different execution environments.

In one embodiment, a method for enabling a first software program using a first binary specification in a first execution environment to employ a limited functionality of a second software program using a second binary specification in a second execution environment first creates a bridge in the first execution environment. Using the bridge, a proxy wrapping an interface to the limited functionality of the second software program in the second execution environment is created in the first execution environment.

In another embodiment, a method, dynamically implemented by a process in a first execution environment generates a binary specification object for the first execution environment. A binary specification object for a second execution environment is also generated. Next the process generates a bridge object for mapping objects from the second execution environment to the first execution environment. For example, using the bridge object, the process generates a proxy wrapping an interface in the second execution environment. The interface in the second execution environment is used to access limited functionality in the second execution environment.

In one embodiment, to use the limited functionality in the second execution environment in a first execution environment, a process executing in the first execution environment calls a method in a proxy interface in the first execution environment. In response to the call, the proxy interface converts the method to a corresponding method call for execution in the second execution environment. A method type description is used to convert parameters from the first execution environment to the second execution environment, and in one embodiment, a parameter type description for the method is used.

The proxy interface dispatches the corresponding method call for execution in the second execution environment to the second execution environment by the proxy interface. In response to the corresponding method call in the second execution environment, the method providing the limited functionality is executed and the results of the execution are returned to the proxy interface. Using a type description, the returned results from the second execution environment are converted to the first execution environment and returned to the calling process. In one embodiment, the second execution environment is a C++ programming language execution environment.

In another embodiment, a computer program product comprises computer program code for a method for enabling a first software program using a first binary specification in a first execution environment to employ a limited functionality of a second software program using a second binary specification in a second execution environment, the method comprising:

creating a bridge in said first execution environment; and

creating, in said first execution environment using said bridge, a proxy wrapping an interface to said limited functionality of said second software program in said second execution environment.

In another embodiment, a computer program product comprises computer program code for a method for using functionality in a second execution environment in a first execution environment, the method comprising:

calling a method in a proxy interface in said first execution environment; and

converting said method call by said proxy interface to a corresponding method call for execution in said second execution environment.

One embodiment includes a computer storage medium having stored therein a structure comprising a binary specification for an execution environment that in turn includes a simple common identity structure. Optionally, the binary specification also includes an extended environment structure. In one embodiment, the simple common identity structure includes: a type name, a context, a pointer to the extended environment structure, and methods acquire, release and dispose.

In a further embodiment, a method is provided for enabling a first software program using a first binary specification to employ a limited functionality of a second software program using a second binary specification, including the following steps:

a) initiating the creation of a stub, which is able to transform commands relating to the limited functionality of the second program between the second binary specification and an intermediate binary specification, using a second bridge, wherein the second bridge provides a mapping of the second binary specification and the intermediate binary specification,

b) initiating the creation of a proxy, which is able to transform commands relating to the limited functionality of the second program between the first binary specification and the intermediate binary specification, using a first bridge, wherein the first bridge provides a mapping of the first binary specification and the intermediate binary specification, and

c) initiating the arrangement of the proxy and the stub relatively to the first program and the second program in a manner allowing the first program to employ the limited functionality of the second program.

Software programs generally are compiled executable programs. Software programs are initially written in a programming language, for example, C++ or Java or an object model like Corba. They are compiled with compilers corresponding to the programming language. However, for each programming language several compilers may be available. The binary specification in which a software program is able to communicate with other software programs depends on both, the programming language and the compiler. This communication language of a software program is the language referred herein as the binary specification used by a software program, for example, the first, the second and the intermediate binary specification.

The intermediate binary specification serves as the binary specification into and from which the communication between the first and the second software program will be translated. This intermediate binary specification may be, for example, an existing binary specification like the binary specification of a specific compiler, but it is also possible that this intermediate binary specification is a suitable newly created binary specification, for example, a binary specification which facilitates translation into and from it.

The two transformer modules, called proxy and stub, may be created on demand, that means if and when they are needed. This creation on demand will be initiated directly that means by the first software program or by means of an initiating function. This creation on demand is considered to be dynamic, so that the commands of the first software program may be dispatched dynamically. The two transformer modules are at least able to transform commands corresponding to a limited functionality of the second software program. Since the first software program employs in most cases only a part of the functionality of the second software program, the two transformer modules need to transform only commands which correspond to this limited functionality. Commands may be understood to be any kind of message initiating any kind of activity of a software program and which may be transmitted between the two software programs.

It is possible to insert further modules between these two transformer modules. These modules may be able to intercept the commands. This interception may be used, for example, to add security or accounting functionality. It is also possible to use these two transformer modules to synchronize the commands or to use them for debugging.

For the creation of the proxy and the stub mappings between the basic commands, on which all other commands are based, of the two pairs of participating binary specifications are used. These pairs are the first binary specification and the intermediate binary specification and the second binary specification and the intermediate binary specification. These mappings will be provided by the bridges and may be, for example, stored in a data base. However, the bridges may also already be a part of the second software program. In case these mappings cover the complete functionality of the relevant binary specifications - which is frequently the case - only some parts of the mapping may be considered during the creation of the proxy and the stub, since they relate to the above mentioned limited functionality only.

After their creation the proxy and the stub are arranged in a manner which enables the first software program to communicate with the second software program. That means a path of communication must be arranged from the first software program to the proxy, from the proxy to the stub, and finally from the stub to the second software program. This route must regularly be accessible from both sides, that means from the side of the first software program as well as from the side of the second software program.

In order to generate the stub the second binary specification used by the second software program must be known. For this purpose, the first software program may start the second software program. This may be done by the first program by means of a loader function which loads the second software program. Loader functions are well known in the prior art. A loader function is able to initiate a software program using a certain binary specification on demand of another software program using a different binary specification. The loader function may directly initiate the creation of the required stub or it may initiate that the second software program or an auxiliary program communicating with the second software program creates the stub. This is possible, if the loader function carries or supplies by any means the information about the limited functionality of the second software program requested by the first software program.

The creation of the stub may be carried out by the second software program or by any sub-program of the second software program. It is possible that this sub-program exists already in the second software program. However, this sub-program may as well be procured or generated by the second software program in response to a request of the first software.

After the creation of the stub, the initiated second software program or its sub-program creating the stub may inform the first software program that the stub has been created. This may initiate the creation of the proxy by the first software program or any suitable sub-program, as it was described above for the creation of the stub.

The proxy is created by the first software program or a sub-program, a function thereof. The sub-program of the first software program must consider the bridge for the transformation of the first binary specification into the intermediate binary specification and reverse and the requested limited functionality of the second software program. The information about the requested limited functionality is generally available in the first software program, because the first software program requests this limited functionality from the second software program.

In order to enable the communication between the first software program and the second software program the stub and the proxy may transform any commands or other messages between these two software programs, as far as the proxy and the stub support this functionality. This requires the above described arrangement of the proxy and the stub relatively to the first and the second software program.

A method for employing a limited functionality of a second software program using a second binary specification by a first software program using a first binary specification, includes the following steps:

a) initializing the limited functionality of the second software program by the first software program,

b) creating a stub, which is able to transform commands relating to the limited functionality of the second software program between the second binary specification and an intermediate binary specification, using a second bridge, wherein the second bridge provides a mapping of the second binary specification and the intermediate binary specification,

c) creating a proxy, which is able to transform commands relating to the limited functionality of the second software program between the first binary specification and the intermediate binary specification, using a first bridge, wherein the first bridge provides a mapping of the first binary specification and the intermediate binary specification,

d) transmitting an command relating to the limited functionality from the first software program to the proxy,

e) transforming the command from the first binary specification into the intermediate binary specification by the proxy,

f) transmitting the command transformed by the proxy from the proxy to the stub,

g) transforming the transmitted command from the intermediate binary specification into the second binary specification by the stub,

h) transmitting the command transformed by the stub from the stub to the second software program,

i) carrying out the command in the second software program and generating a response for the first software program,

j) transmitting the response, being in the second binary specification, from the second software program to the stub,

k) transforming the response from the second binary specification into the intermediate binary specification by the stub,

l) transmitting the response transformed by the stub from the stub to the proxy,

m) transforming the response from the intermediate binary specification into the first binary specification by the proxy,

n) transmitting the response transformed by the proxy from the proxy to the first software program.

The transmissions between the proxy and the stub and the software programs and the proxy or the stub, respectively, may be effected by any suitable means. It is relevant, however, that these elements are arranged so as to allow the communication of the two software programs.

Furthermore, a method for using a stub, which is able to transform commands relating to a limited functionality of a second software program between a second binary specification and an intermediate binary specification, using a second bridge, wherein the second bridge provides a mapping of the second binary specification and the intermediate binary specification, is provided for enabling a first software program using a first binary specification to employ the limited functionality of the second software program by further using a proxy, which is able to transform commands relating to the limited functionality of the second software program between the first binary specification and the intermediate binary specification, using a first bridge, wherein the first bridge provides a mapping of the first binary specification and the intermediate binary specification, wherein the proxy and the stub are arranged relatively to the first software program and the second software program in a manner allowing the first software program to employ the limited functionality of the second software program.

Also provided is a method for using a proxy, which is able to transform commands relating to the limited functionality of the second software program between the first binary specification and the intermediate binary specification, using a first bridge, wherein the first bridge provides a mapping of the first binary specification and the intermediate binary specification, for enabling a first software program using a first binary specification to employ the limited functionality of the second software program by further using a stub, which is able to transform commands relating to a limited functionality of a second software program between a second binary specification and an intermediate binary specification, using a second bridge, wherein the second bridge provides a mapping of the second binary specification and the intermediate binary specification, wherein the proxy and the stub are arranged relatively to the first software program and the second software program in a manner allowing the first software program to employ the limited functionality of the second software program.

There is also provided a computer program, also referred to as a computer program product, for carrying out operations of the above methods. A computer program product comprises a medium configured to store or transport computer readable code, or in which computer readable code may be embedded. Some examples of computer program product are: CD-ROM disks, ROM-cards, floppy disks, magnetic tapes, computer hard drives, servers on a network and carrier waves and digital signals transmitted over a telecommunication link or network connection.

Such computer program may be stored on any data carrier, such as, for example, a disk, a CD or a hard disk of a computer system. It is further provided a method for using a computer system, including standard computer systems, for carrying out the present inventive method. Finally, a computer system comprises a storage medium on which a computer program for carrying out operations of the above methods.

BRIEF DESCRIPTION OF THE DRAWINGS OF CHAPTER B

| | |
|---|---|
| Fig. 1A | is a high level representation of a first embodiment of the present invention; |
| Fig. 1B | is a high level representation of a second embodiment of the present invention; |
| Fig. 1C | is a more detailed representation of the first embodiment of the present invention; |
| Figs. 2A and 2B | are one embodiment of a binary representation of an environment according to one embodiment of the present invention; |
| Figs. 3A and 3B | are one embodiment of the binary specification structure of Fig. 2B; |
| Fig. 4 | is a sequence diagram illustrating one embodiment of making a proxy interface of the present invention, and one embodiment of using the proxy interface of the present invention; |
| Fig. 5 | is an example of a binary specification of the type representation in the UNO typelibrary according to one embodiment of the present invention; |
| Fig. 6 | is an illustration of stack configuration used in one embodiment of a C++ environment; |
| Fig. 7A | is an illustration of a virtual table in one embodiment of the present invention; |
| Fig. 7B | is an illustration of assembler code used to generate an index to a slot in the virtual table of Fig. 6; |
| Fig. 8 | is a process flow diagram for one embodiment of a method performed by a C++ proxy wrapping a UNO interface; |
| Fig. 9 | is a process flow diagram for one embodiment of a method mediate that is used by the method of Fig. 8; |
| Fig. 10 | is a process flow diagram for one embodiment of a method Env1_to_Env2 with interface that is used by method mediate of Fig. 9; |
| Fig. 11 | is a process flow diagram for one embodiment of a method performed by a UNO proxy wrapping a C++ interface; |
| Fig. 12 | is a process flow diagram for one embodiment of a method Env2_to_Env1 with interface that used by the method of Fig. 11; |
| Figs. 13A and 13B | are an example of mapping an interface from a UNO environment to a C++ UNO environment according to one embodiment of the present invention; |
| Fig. 14 | is an example of freeing a C++ UNO interface proxy and revoking the proxy of the appropriate environment according to one embodiment of the present invention; |
| Fig. 15 | is an example of a C++ implementation of a C++ UNO proxy according to one embodiment of |

the present invention;

Figs. 16A and 16B     are an example of a C implementation of freeing a UNO interface proxy and functions acquire/ release according to one embodiment of the present invention;

Figs. 17A and 17B     are an example of mapping an interface from a C++ UNO environment to a UNO environment according to one embodiment of the present invention;

Fig. 18     is an example of a C++ implementation of a UNO proxy according to one embodiment of the present invention;

Fig. 19     is an example of various constructors of a mapping and a bridge and of a free function of a bridge according to one embodiment of the present invention;

Fig. 20     is an example of an implementation of functions acquire and release for a bridge according to one embodiment of the present invention;

Fig. 21     is an example of an implementation to create a mapping between to environments according to one embodiment of the present invention;

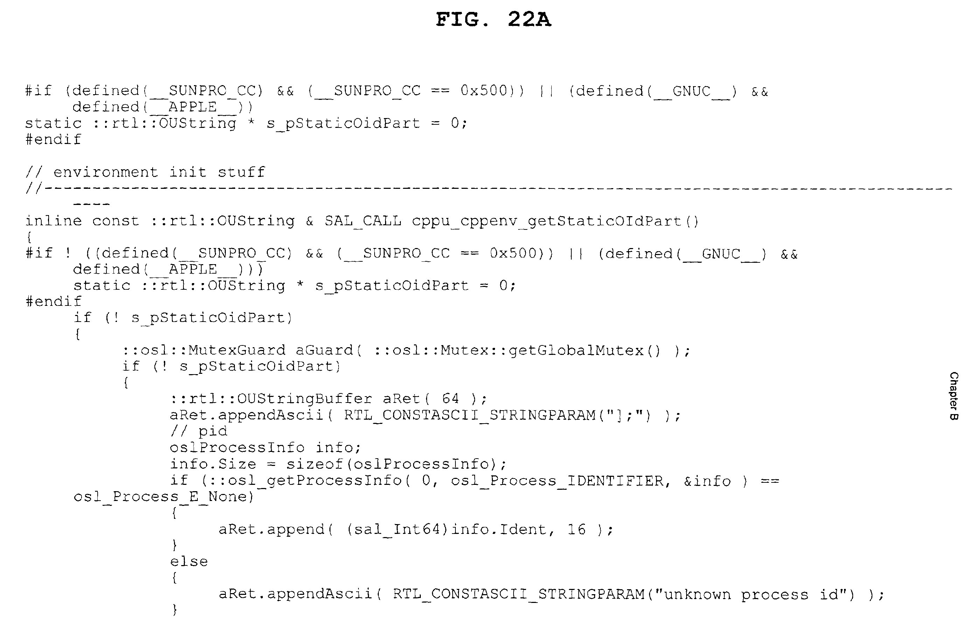

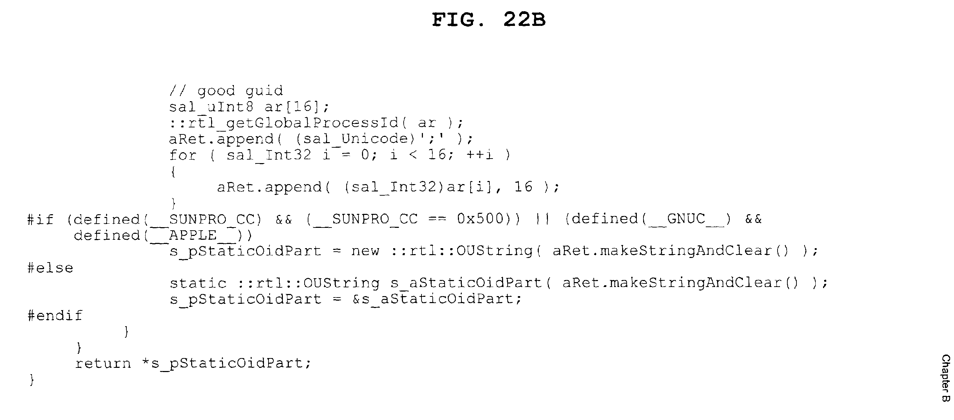

Figs. 22A and 22B     are an example of an implementation to create the static part of an object identifier according to one embodiment of the present invention;

Fig. 23     is an example of an implementation to create an object identifier according to one embodiment of the present invention;

Fig. 24     is an example of an implementation of methods acquire/release in a C++ UNO environment according to one embodiment of the present invention;

Fig. 25     schematic representation of the inventive method in overview;

Fig. 26     shows a flow chart: initial communication of a first and a second software program;

Fig. 27     shows a flow chart: creation of a stub;

Fig. 28     shows a flow chart: creation of a proxy;

Fig. 29     shows a flow chart: arranging a stub and a proxy;

Fig. 30     shows a schematic representation of a computer system to be used in the scope of the present invention;

Fig. 31     shows a representation of a client-server system to be used in the scope of the present invention;

Fig. 32     shows a flow chart: calling of a stub;

Fig. 33     flow chart: calling of the second program through the stub;

Fig. 34     flow chart: binding a stub and a proxy;

Fig. 35     shows a flow chart: calling the second software program from a first software program via a proxy and a stub;

Fig. 36     shows a flow chart: transforming and transmitting a command from the first software program to the second software program;

Fig. 37     schematic representation of an interceptor arranged between a stub and a proxy; and

Fig. 38                     shows a flow chart: use of an interceptor function in an arrangement of stub and proxy.

In the Figures 1 - 38 of CHAPTER B and the following Detailed Description of CHAPTER B, elements with the same reference numeral are the same element or a similar element. Also, the first one or two digits of a reference numeral for an element indicate the figure in which that element first appeared. Reference numerals do not necessarily correspond to the reference numerals used in the further chapters.

<u>DETAILED DESCRIPTION</u>

According to one embodiment, a computing system 100 includes a service 111, which is part of a first computer software program 110 executing within a first execution environment 120. Service 111 issues a call 112 to a service 161 of a second computer software program 160 executing within a second execution environment 150 that is different from first execution environment 120. For example, service 111, in one embodiment, is a part of a word processing program that issues a call to a calculator, which is service 161, of a spreadsheet program, where the word processing program is written in a Visual Basic computer programming language, and the calculator is written in the C programming language.

Unlike the prior art in which calls to a different execution environment with a different binary specification could not be handled in most cases, and in a limited number of cases could be handled by marshalling the call into a specific predefined byte stream (for example the CORBA byte stream) for passing to the different execution environment, call 112 from first execution environment 120 with a first binary specification is directed to a proxy 130 in a bridge 140. Proxy 130 converts any parameters in the call to parameters for second execution environment 150 using a type description that is described more completely below, and then dispatches a call 170, with the converted parameters, to service 161 in second execution environment 150. Call 170 corresponds to call 112 in first execution environment 120.

In response to call 170 from proxy 130, service 161 performs the action requested and returns the result to proxy 130. Proxy 130 converts the result and any parameters returned from second execution environment 150 to first execution environment 120.
The converted results are in turn provided to service 111.

Hence, according to one embodiment of the present invention, a first service, sometimes called a component or an object, with a first binary specification in a first execution environment utilizes a second service sometimes called a component or an object, in a second execution environment with a second binary specification that is different from the first binary specification. This greatly extends and facilitates providing an application with a broad range of capabilities without having to port the application and/or all of the capabilities to the binary specification of each execution environment in which the application may run. In addition, this embodiment facilitates providing a particular functionality to an application that is executed in an execution environment that does not, and perhaps cannot, support that particular functionality.

In the embodiment of Figure 1A, proxy 130 is instantiated by bridge 140 that is in first execution environment 120 and proxy 130 communicates directly with service 161 that is in second execution environment 150. However, in another embodiment, proxy 130A in response to a call 112 from service 111 of software program 110 issues a call 131 to an intermediary proxy 185 in execution environment 180 that is different from both execution environment 120 and execution environment 150, in this example.

Intermediary proxy 130A converts the call from the first binary specification to the binary specification for execution environment 180 and dispatches a call 131 to intermediary proxy 185. Intermediary proxy 185 converts the call from the binary specification of execution environment 180 to the binary specification of execution environment 150 and then dispatches call 186 to service 161. The response from service 161 is returned to intermediary proxy 185 that converts the response to binary specification of execution environment 180, and in turn transmits the converted response to proxy 130A. Proxy 130A converts the response from the binary specification for execution environment 180 to the binary specification for execution environment 120 and returns the result to service 111 of software program 110.

To reduce the number of bridges, normally only bridges to intermediate environment 180, referred to herein as the binary UNO specification environment, exist. To make a bridge from a C programming language (C) execution environment to a C++ programming language (C++) execution environment, call traffic is delegated over two bridges 140A and 190. First bridge 140A is from the C execution environment to the binary UNO execution environment and then bridge 190 is from the binary UNO execution environment to the C++ execution environment. In this way, only (n -1) bridges are needed for n different environments instead of n*(n - 1)/2 bridges, if a direct connection between environments is made as in Fig. 1A. Preferably each bridge can create proxy objects only from the description of an interface. This implies that the code may be generated at runtime.

Returning to Figure 1A, as explained more completely below, a source environment object 103 and a destination environment object 104 are initially created using a runtime library, and optionally registered in an execution environment, e.g., execution environment 120. Each of objects 103 and 104 includes a binary specification structure for its respective execution environment. As explained more completely below, a binary specification structure, in one embodiment, provides common functions for each environment, and knows all proxies, sometimes called proxy interfaces, and their origins. Thus, an execution environment, through its binary specification structure, knows each wrapped interface, i.e., proxy, running in execution environment and the origin of each of these wrapped interfaces.

After the objects 103 and 104 are created, a call is made by service 111 that results in a search for a shared library that is activated as a bridge for the two execution environments. Each bridge, e.g., bridge 140, is implemented in a separate shared library. In one embodiment, the name of the shared library is a connection of two environment names with an underscore ('_') between the names.

Next a call is made by service 111 to map an interface of the source environment. Mapping is the direct way to publish an interface in another environment. That means an interface is mapped from a source environment 150 to a destination environment 120 so that methods may be invoked on a mapped interface, i.e., proxy 130, in destination environment 120, which, in turn, are delegated to the originating interface in the source environment.

Mapping an interface from an environment 150 to an environment 120 requires several operations that are described more completely below with respect to Figure 4. However, briefly, a call is made to bridge 140 to map a particular interface for service 161 in source execution environment 150 to destination execution environment 120. If a proxy already exists for this mapping, a handle to the proxy is returned to service 111. Alternatively, as explained below, bridge 140 creates proxy 130, and returns a handle to service 111 so that subsequent calls to the interface for service 161 are directed to proxy 130.

Hence, as used herein, a bridge 140 in a first environment 120 is defined to be a software module that upon execution initially creates a proxy object 130 in first environment 120 for one computer programming language and hardware platform so that an actual object 161, sometimes called real object 161, represented by proxy 130, is available from a second environment 150. Proxy object 130 looks like and is an object implemented in first environment 120, and so proxy object 130 can be transparently used. Proxy object 130 delegates calls to real object 161 in second environment 150.

In one embodiment, real object 161 in second environment 150 is implemented in the C programming language (C) and real object 161 is accessed from a C++ programming language (C++) environment. In this case, bridge 140 is from a C++ environment to a C environment. Remember that C++ is incompatible between different compilers and different switches. Bridge 140 creates a C++ proxy object 130 in first environment 120, which delegates calls to real object 161 implemented in C. Sometimes a bridge is called *language binding,* but this description is not exact, because bridges also connect object models in another embodiment of the present invention.

The particular configuration of computing system 100 is not essential to this invention. Execution environments 120 and 150, in one embodiment, are included within the same computer.

In another embodiment, execution environment 120 is in a client system and execution environment 150 is in a server system. In this embodiment, the client system can be a mobile telephone, a two-way pager, a portable computer, a workstation, or perhaps a personal computer. The client and server can be interconnected by a local area network, a wide area network, or the Internet. As explained more completely below, the dynamic dispatch functionality of this invention is independent of the network protocol and the network architecture. In yet another embodiment, execution environment 120 is in a first computer and execution environment 150 is in a second computer where the first and second computers are in a peer-to-peer network.

Figure 1C is an example of a user device 102 that is executing service 111 of application 110 from a volatile memory 122 on CPU 101. Application 110 can be any application, or an application in a suite of applications that can include for example a word processing application, a spreadsheet application, a database application, a graphics and drawing application, an e-mail application, a contacts manager application, a schedule application, and a presentation application. One office application package suitable for use with this embodiment of the invention, is the STAROFFICE Application Suite available from Sun Microsystems, 901 San Antonio Road, Palo Alto, CA. (STAROFFICE is a trademark of Sun Microsystems, Inc.) The user has access to the functionality of service 161 even thought the execution environment for computer 155 is different from the execution environment of user device 102 and even in situations where in addition user device 102 has neither the memory capacity nor the processing power to execute service 161.

In the embodiment of Figure 1C, a runtime library 108 is initially stored in a non-volatile memory 121 and a part or all of runtime library 108 is moved to volatile memory 122 to generate source environment object 103, destination environment object 104 and bridge 140. In one embodiment, bridge 140 includes a shared library and is the same library as runtime library 108.

In this embodiment, when proxy 130 receives a method call from service 111, proxy 130 dispatches the call to service 161 via I/O interface 122 that is connected to network interface 183 of computer 155 via networks 105 and 106.

Those skilled in the art will readily understand that the operations and actions described herein represent actions performed by a CPU of a computer in accordance with computer instructions provided by a computer program. Therefore, bridge 140, proxy 130, source environment object 103, and destination environment object 104 may be implemented by a computer program causing the CPU of the computer to carry out instructions representing the individual operations or actions as described herein. The computer instructions can also be stored on a computer-readable medium, or they can be embodied in any computer-readable medium such as any communications link, like a transmission link to a LAN, a link to the internet, or the like.

Thus, all or part of the present invention can be implemented by a computer program comprising computer program code or application code. This application code or computer program code may be embodied in any form of a computer program product. A computer program product comprises a medium configured to store or transport this computer-readable code, or in which this computer-readable code may be embedded. Some examples of computer program products are CD-ROM discs, ROM cards, floppy discs, magnetic tapes, computer hard drives, servers on a network, and carrier waves. The computer program product may also comprise signals, which do not use carrier waves, such as digital signals transmitted over a network (including the Internet) without the use of a carrier wave.

The storage medium including runtime library 108 may belong to user device 102 itself. However, the storage medium also may be removed from user device 102. The only requirement is that the runtime library is accessible by user device 102 so that the computer code corresponding to the environment objects, bridge and proxy can be executed by user device 102. Moreover, runtime library 108 can be downloaded from another computer coupled to user device 102 via a network. Also, user device 102, as explained above, can also be a server computer and so the configuration of Figure 1C is illustrative only and is not intended to limit the invention to the specific embodiment shown.

Herein, a computer memory refers to a volatile memory, a non-volatile memory, or a combination of the two in any one of these devices. Similarly, a computer input unit and a display unit refer to the features providing the required functionality to input the information described herein, and to display the information described herein, respectively, in any one of the aforementioned or equivalent devices.

As used herein, software programs are compiled executable programs. Software programs are initially written in a programming language, for example, C, C++ or JAVA or an object model like CORBA or UNO. They are compiled with compilers corresponding to the programming language. However, for each programming language several compilers may be available. The binary specification in which a software program is able to communicate with other software programs depends on both, the programming language and the compiler. This communication language of a software program is the language referred herein as the binary specification used by a software program.

As used herein, an execution environment, such as execution environments 120 and 150, contains all objects, which have the same binary specification and which lie in the same process address space. The execution environment, sometimes called environment, herein, is specific for a computer programming language and for a compiler for that computer programming language. For example, an object resides in the "msci" execution environment, if the object is implemented with a software program written in the C++ computer programming language, and the software program is compiled with the MICROSOFT Visual C++ compiler. (MICROSOFT is a trademark of Microsoft Corp. of Redmond, WA) An example of a binary specification for one sample execution environment is presented below in conjunction with the description of Table 1.

To assist in the understanding of this invention, examples of a binary specification for an environment, and types, type libraries, and a type repository are first considered, and then embodiments to make and use the present invention are described.

*Binary Specification for an Execution Environment.*

The function of a binary specification for an execution environment is to identify the execution environment, and optionally to provide functionality like interface registration. In one embodiment, the structure of a binary specification for an execution environment is split into a simple common identity structure 220 (See Fig. 2A) that is easily implemented for bridges that handle object identity issues. An optional structure 225 may be included to support optional functionality. In one embodiment, the optional functionality includes interface registration, acquiring/releasing in interfaces of the environment, and obtaining an object identifier for an interface.

Table 1 is an example of a simple common identity structure 220 (Fig. 2) of a binary specificaiton for an execution environment called uno_enviroment.

TABLE 94.:  One Embodiment of a Simple Common Identity
Structure for a Binary Specification of an Execution
Environment

```
typedef struct _uno_Environment
{
    void *              pReserved;
    rtl_uString *       pTypeName;
    void *              pContext;
    uno_ExtEnvironment * pExtEnv;
    void (SAL_CALL * acquire)( uno_Environment * pEnv );
    void (SAL_CALL * release)( uno_Environment * pEnv );
    void (SAL_CALL * dispose)( uno_Environment * pEnv );
    void (SAL_CALL * environmentDisposing)(
          uno_Environment * pEnv );
} uno_Environment;
```

Pointer pReserved in the UNO environment is reserved and so in this embodiment is set to zero. String pTypeName is a type name of the environment. Pointer pContext is a free context pointer that is used for specific classes of environments, e.g., a JAVA virtual machine pointer. (JAVA is a trademark of Sun Microsystems, Inc. of Palo Alto, CA.) Pointer pExtEnv is a pointer to and extended environment (interface registration functionality), if supported, and otherwise is set to zero.

Method acquire acquires this environment, i.e., the environment defined by this structure. Parameter pEnv is this environment. Method release releases this environment and again parameter pEnv is this environment. Method dispose is explicitly called to dispose of this environment, e.g., to release all interfaces. Typically, this method is called before shutting down to prevent a runtime error.

In this embodiment, method disposing is a disposing callback function pointer that can be set to be signaled before this environment is destroyed. This method is late initialized by a matching bridge and is not for public use

Hence, in the embodiment, each simple common identity binary specification structure for an environment includes a type name of the environment; a free context pointer, a pointer to an extended environment that includes optional functionality, and methods to acquire, release and dispose of the environment. Structure 220 is stored in a memory 210 of computer system 100.

TABLE 95.: One Embodiment of an Extended Environment
Structure for a Binary Specification of an Execution
Environment

```
typedef struct _uno_ExtEnvironment
{
    uno_Environment aBase;
    void (SAL_CALL * registerInterface)(
        uno_ExtEnvironment * pEnv,
        void ** ppInterface,
        rtl_uString * pOId,
        typelib_InterfaceTypeDescription * pTypeDescr );
    void (SAL_CALL * registerProxyInterface)(
        uno_ExtEnvironment * pEnv,
        void ** ppProxy,
        uno_freeProxyFunc freeProxy,
        rtl_uString * pOId,
        typelib_InterfaceTypeDescription * pTypeDescr );
    void (SAL_CALL * revokeInterface)(
        uno_ExtEnvironment * pEnv, void * pInterface );
    void (SAL_CALL * getObjectIdentifier)(
        uno_ExtEnvironment * pEnv,
        rtl_uString ** ppOId,
        void * pInterface );
    void (SAL_CALL * getRegisteredInterface)(
        uno_ExtEnvironment * pEnv,
        void ** ppInterface,
        rtl_uString * pOId,
        typelib_InterfaceTypeDescription * pTypeDescr );
    void (SAL_CALL * getRegisteredInterfaces)(
        uno_ExtEnvironment * pEnv,
        void *** pppInterfaces,
        sal_Int32 * pnLen,
        uno_memAlloc memAlloc );
```

```
      void (SAL_CALL * computeObjectIdentifier)(
          uno_ExtEnvironment * pEnv,
          rtl_uString ** ppOId, void * pInterface );
      void (SAL_CALL * acquireInterface)(
          uno_ExtEnvironment * pEnv, void * pInterface );
      void (SAL_CALL * releaseInterface)(
          uno_ExtEnvironment * pEnv, void * pInterface );
} uno_ExtEnvironment;
```

Table 2 is one embodiment of a binary specification of an UNO environment supporting interface registration. This binary specification inherits all members of a uno_Environment as defined, for example, by Table 1 above.

Method registerInterface in Table 2 registers an interface of this environment. Parameter pEnv is this environment. Parameter ppInterface is an inout parameter of the interface to be registered. Parameter pOId is an object id of the interface to be registered, and parameter is a type description of interface to be registered.

Method registerProxyInterface in Table 2 registers a proxy interface of this environment. The proxy interface can be reanimated and is freed explicitly by this environment. In this call, parameter pEnv is this environment. Parameter ppInterface is an inout parameter of interface to be registered. Parameter freeProxy represents a function to free this. proxy object (See Table 3). Parameter pOId is an object id of the interface to be registered, and parameter is a type description of interface to be registered.

Method revokeInterface revokes an interface from this environment. Any interface that has been registered must be revoked via this method. In the call to this method, parameter pEnv is this environment, and parameter pInterface is the interface to be revoked.

Method getObjectIdentifier provides the object id of a given interface. In this method, parameter ppOId is the input and output object identifier (oid), and parameter pInterface is the interface of the object.

Method getRegisteredInterface retrieves an interface identified by its object id and type from this environment. Interfaces are retrieved in the same order as they are registered. In this method, parameter pEnv is this environment. Parameter ppInterface is the inout parameter for the registered interface and is zero if none was found. Parameter pOId is the object id of the interface to be retrieved, and parameter pTypeDescr is a type description of interface to be retrieved.

Method getRegisteredInterfaces return all currently registered interfaces of this environment. The memory block allocated might be slightly larger than (*pnLen * sizeof(void *)). In this method, parameter pEnv is this environment. Parameter ppInterfaces is an output parameter that is a pointer to an array of interface pointers. Parameter pnLen is an output parameter to a length of the array of interface pointers, and parameter memAlloc represents a function for allocating memory that is passed back (See Table 4).

Methods computeObjectIdentifier, acquireInterface and releaseInterface are late initialized by a matching bridge and are not for public use. Method computeObjectIdentifier computes an object id of the given interface, and is called by the environment implementation. Parameter pEnv is this environment, Parameter ppOId is an output parameter that is the computed id. Parameter pInterface is the given interface. Methods acquireInterface and releaseInterface are methods to acquire an interface, and release an interface respectively. The input parameters are defined the same as in method computeObjectIdentifier.

Table 3 is one embodiment of a generic function pointer declaration to free a proxy object, if an environment does not need the proxy object anymore. To use this function, the proxy object must register itself on the first call to method acquire() (See Table 1) call and revoke itself on the last call to method release() (See Table 1). This can happen several times because the environment caches proxy objects until the environment explicitly frees the proxy object by calling this function. In the call to this method, parameter pEnv the environment, and parameter pProxy is the proxy pointer.

TABLE 96.:  One Embodiment of a Definition for
Function FreeProxyFunc

```
typedef void (SAL_CALL * uno_freeProxyFunc)(
     uno_ExtEnvironment * pEnv, void * pProxy );
```

Method memAlloc (Table 4) is a generic function pointer declaration to allocate memory. This method is used with method getRegisteredInterfaces() (Table 2). Parameter nBytes is the amount of memory in bytes. This method returns a pointer to the allocated memory.

TABLE 97.:  One Embodiment of a Definition for
Function memAlloc

```
typedef void * (SAL_CALL * uno_memAlloc)( sal_uInt32
     nBytes );
```

An alternative embodiment of a structure 230 for a binary specification of an execution environment is presented in Figure 2B. In this embodiment, all the information including methods needed to manage registering and unregistering interfaces are includes in a single structure. Figures 3A and 3B are the information in one embodiment of structure 230. Alternatively, the information in Tables 2 and 3 could be combined into a single structure.

To use environments, the environments are registered. An existing environment is obtaining by calling a method for getting the environment. For the example of Table 1, method uno_getEnvironment() is used. A new environment is created by either implementing the new environment directly, or by using a simple default implementation, which is frequently also sufficient, by calling, in the given example, method uno createDefaultEnvironment() with the environment's name and the environment's acquire and release functions for interfaces.

Within execution environments, type descriptions are used to map types between environments. A type description may exist or may be created at runtime. Each existing type in an execution environment is stored in a type repository along with the corresponding type description. The type descriptions are accessible through the full name of each type in the type repository, in one embodiment. For example, the full name of interface type "XInterface" may be "com.sun.star.XInterface". The naming conventions used to access a type and/or a type description within the type repository are not an essential feature of this invention, and any suitable naming convention can be utilized. In a type repository, the types and associated type descriptions are stored in any appropriate way.

If the API (application program interface) of the type repository is a C programming language style, the type repository API is directly, that means via a binary representation, accessible from many binary specifications, and the type repository API is quickly transferable. Since the type description of each element may be used during the generic marshaling of a call, in one embodiment, C-style structures, which describe each type, are used.

Figure 5 is an example of a binary specification 500 of the type representation in the UNO typelibrary. The type library includes complete type descriptions for each existing IDL type. These type descriptions are organized in a hierarchical form, which represents the IDL module structure including a node for the type itself. Each type node has a binary type blob, which contains the complete type information. The structure of the type blob depends on the kind of the type. The first part is relevant for each type and the other parts depend on the type. For example, a structure has only an additional field section because it isn't possible to specify methods for structures.

In this embodiment, the structure includes a header section; a constant pool section; a field section; and a reference section. A definition of the information is each section, as illustrated in Figure 5 is given herein.

Header section

*magic, type: sal_uInt32*

    a reserved field for internal use.

*size, type: sal_uInt32*

    represents the size of the blob in bytes.

*minor,major version, type: sal_uInt16*

    two fields to specify a version number for the binary format.

*nHeaderFields, type: sal_uInt16*

    specifies the number of fields in the header section. This number is used for calculating the offset of the next section.

*typeSource, type: sal_uInt16*

    specifies in which language the type was defined, e.g. UNO IDL, CORBA IDL or Java.

*typeClass, type: sal_uInt16*

    specify the typeclass of the described type, e.g. interface or enum.

*name, type: sal_uInt16*

    represents an index for a string item in the constant item pool which specifies the full qualified name of the type.

*Uik, type: sal_uInt16*

    represents an index for a Uik item in the constant item pool which contains the Uik information for an interface. This field is 0 if the type is not an interface.

*docu, type: sal_uInt16*

    represents an index for a string item in the constant item pool which contains the documentation of this type.

*filename, type sal_uInt16*

    represents an index for a string item in the constant item pool which specifies the name of the source file where the type is defined.

*nSuperTypes, type: sal_uInt16*

    specifies the count of supertypes. This field is only relevant for structs, exceptions, services and interfaces. If nSuperTypes > 0 than the next section is an area with size nSuperTypes * sal_uInt16, which represents indices for string items in the constant pool.


Constant pool section


The constant pool section consists of nConstantPoolCount entries of variable length and type. Each entry constists of three fields:

*size, type: sal_uInt32*

    specifies the size of the entry in bytes

*type tag, type: sal_uInt16*

    specifies the type of the data field.

*data, type: sal_uInt8*

    specifies the raw data of the entry with (size - sizeof(sal_uInt32) - sizeof(sal_uInt16)) bytes.


Field section


The field section represents type information for struct or exception members, const types, enums, service members and attributes of interfaces. This section only exists if the field nFieldCount is greater than zero.

*nFieldCount, type: sal_uInt16*

    specifies the number of fields in the field section.

*nFieldEntries, type: sal_uInt16*

    specifies the number of fields for each entry in the field section. This number is used for calculating the offsets in the field section.

*access, type: sal_uInt16*

    specifies the access of the field, e.g. readonly.

*name, type: sal_uInt16*

    represents an index for a string item in the constant item pool, which specifies the name of the field.

*typename, type: sal_uInt16*

    represents an index for a string item in the constant item pool, which specifies the full-qualified typename of the field.

*value, type: sal_uInt16*

represents an index for an item in the constant item pool with the same type specified by typename which represents the value of the field, e.g., the initial enum value or the value of a constant. This field could be 0.

*docu, type: sal_uInt16*

represents an index for a string item in the constant item pool, which contains the documentation of this field.

*filename, type: sal_uInt16*

represents an index for a string item in the constant item pool, which specifies the name of the source file where the field is defined. This could be different from the filename in the header section, because constants could be defined in different source files.

Method section

The method section represents type information for interface methods. This section only exists if the field nMethodCount is greater than zero.

*nMethodCount, type: sal_uInt16*

specifies the number of methods in the method section.

*nMethodEntries, type: sal_uInt16*

specifies the number of fields for each entry in the method section. This number is used for calculating the offsets in the method section.

*nParameterEntries, type: sal_uInt16*

specifies the number of fields for each entry in a parameter section. This number is used for calculating the offsets in the parameter section.

*size, type: sal_uInt16*

specifies the size of the current method entry in bytes.

*mode, type: sal_uInt16*

specifies the mode of the method, e.g., oneway.

*name, type: sal_uInt16*

represents an index for a string item in the constant item pool, which specifies the name of the method.

*returntype, type: sal_uInt16*

represents an index for a string item in the constant item pool, which specifies the full-qualified typename of the returntype of the method.

*docu, type: sal_uInt16*

represents an index for a string item in the constant item pool, which contains the documentation of this method.

*nParamCount, type: sal_uInt16*

specifies the number of parameters for this method. If parameters exist, the parameter section follows this field.

*type, type: sal_uInt16*

represents an index for a string item in the constant item pool, which specifies the full-qualified typename of the parameter.

*mode, type: sal_uIntl6*

specifies the mode of the method, e.g., in, out or inout.

*name, type: sal_uInt16*

represents an index for a string item in the constant item pool, which specifies the name of the parameter.

*nExceptionCount, type: sal_uInt16*

specifies the number of exceptions for this method. If exceptions exist the exception section follows this field.

*excpName 1 . . . n, type: sal_uInt16*

represent indices for string items in the constant item pool, which specifies the full-qualified name of exceptions.

Reference section

The reference section represents type information for references in services. This section only exists if the field nReferenceCount is greater than zero.

*nReferenceCount, type: sal_uInt16*

specifies the number of references for this type.

*nReferenceEntries, type: sal_uInt16*

specifies the number of fields for each entry in the reference section. This number is used for calculating the offsets in the reference section.

*typename, type: sal_uInt16*

represents an index for a string item in the constant item pool, which specifies the full-qualified typename of the reference.

*name*, *type: sal_uInt16*

represents an index for a string item in the constant item pool, which specifies the name of the reference.

*docu, type: sal_uInt16*

represents an index for a string item in the constant item pool, which contains the documentation of this reference.

*access, type: sal_uInt16*

specifies the access of the reference, e.g. needs, observes or interface.

In one embodiment of a type repository, all functions or type declarations have a prefix "typelib_". In one embodiment of the type repository API, a function *typelib_TypeDescription_newInterface* is used to create an interface description. The descriptions of structures, unions and sequences are created with a function *typelib_TypeDescription_new*. The description of a base type is initially part of type repository. A function that gets a type description is function *typelib_TypeDescription_getByName* in the type repository API.

A JAVA API to a type repository is different for two reasons. First, the JAVA classes cannot access the binary representation of the type descriptions directly. Second, the JAVA runtime system provides an API (core reflection) similar to the type repository API. Unfortunately, the features "unsigned", "oneway" and "out parameters" are missing in this API. For this reason, additional information is written into the JAVA classes to provide the functionality of these features.

The representation of the types depends on the hardware, the language and the operating system. The base type is swapped, for example, if the processor has little or big endian format. The size of the types may vary depending on the processor bus size. The alignment is processor and bus dependent. The alignment of the data structure is defined as follows:

Structure members are stored sequentially in the order in which the structure members are declared. Every data object has an *alignment-requirement.* For a structure, the alignment requirement is determined the largest object of the structure. Every object is allocated an *offset* so that *offset % alignment-requirement* == 0.

If it is possible that the maximum alignment can be restricted (MICROSOFT C/C++ compiler, IBM C/C++ compiler), the maximum alignment is set to eight. Under this condition, the alignment is set to min( n, sizeof( item ) ) where n is maximum alignment. The size is rounded up to the largest integral base type. For the MICROSOFT and IBM C/C++ compiler the alignment of a structure is set to eight using the "#pragma" statement.

Table 5 shows the type and type definitions for one embodiment of the UNO, C++ and the JAVA execution environments.

Table 98.

| | | Environment | |
|---|---|---|---|
| Type | UNO | C++ | JAVA |
| Byte | Signed 8 Bit | Signed 8 Bit | Signed 8 Bit |
| Short | Signed 16 Bit | Signed 16 Bit | Signed 16 Bit |
| Ushort | Unsigned 16 Bit | Unsigned 16 Bit | Signed 16 Bit |
| Long | Signed 32 Bit | Signed 32 Bit | Signed 32 Bit |
| Ulong | Unsigned 32 Bit | Unsigned 32 Bit | Signed 32 Bit |
| Hyper | Signed 64 Bit | Signed 64 Bit | Signed 64 Bit |
| Uhyper | Unsigned 64 Bit | Unsigned 64 Bit | Signed 64 Bit |
| Float | Processor dependent: Intel, Sparc = IEEE float | Processor dependent: Intel, Sparc = IEEE float | IEEE float |
| Double | Processor dependent: Intel, Sparc = IEEE double | Processor dependent: Intel, Sparc = IEEE double | IEEE double |

Table 98.   (continued)

| Type | Environment | | |
| --- | --- | --- | --- |
| | UNO | C++ | JAVA |
| Enum | The size of a machine word. Normally, this is the size of an integer. | The size of a machine word. Normally, this is the size of an integer, | All enum values of one enum declaration are a static object of a class. Each object contains a 32-bit value, which represents the enumeration value. |
| Boolean | 1 Byte. | 1 Byte. | Boolean |
| Char | 16 Bit on WNT, W95, W98, and Os2. 32 Bit on Unix | 16 Bit on WNT, W95, W98, and Os2. 32 Bit on Unix | Unsigned 16 bit (char) |
| String | A pointer to a structure which have the following members: long refCount; long length; wchar_t buffer[...]; The string in buffer is 0 terminated. This is the rtl_wString structure in the rtl-library | A pointer to a structure which have the following members: long refCount; long length; wchar_t buffer[...]; The string in buffer is 0 terminated. This is the rtl_wString structure in the rtl-library | java.lang.String |
| Structure | The structure contains the members in the order of the declaration. | The structure contains the members in the order of the declaration. . | A class, which is derived from java.lang.Object and contains the members in the specified order. |
| Union | The size is 4 + size of the largest type. In front of the union members is a long value (nSelect), which describes the position of the valid member (0 is the first). | The size is 4 + size of the largest type. In front of the union members is a long value (nSelect), which describe the position of the valid member (0 is the first). | Not specified |
| Sequence | A pointer to a structure which has the following members: void * pElements; long nElements; long nRefCount; The pElements are a memory area that contains nElements elements. | A pointer to a structure which has the following members: void * pElements; long nElements; long nRefCount; The pElements are a memory area that contains nElements elements. | A normal JAVA array. |
| Exception | Looks like a structure | Looks like a structure | A class, which is derived from java.lang.Except ion and contains the members in the specified order. |
| Interface | Is a pointer to a function table, which contains at least three functions. | Is a pointer to a C++-Class which implements first the virtual methods queryInterface, acquire and release. | A normal JAVA interface. |
| Any | A structure that contains a pointer to a type description. The second member is a pointer to the value stored in the any. | A structure that contains a pointer to a type description. The second member is a pointer to the value stored in the any. | A class which is derived from "java.lang.Objec t". The members are a class, which describe the type of the value. A second member which is the value of the any. |
| Void | No memory representation | No memory representation | No memory representation |

Many of the types in TABLE 5 are self-explanatory and known in the art. Nevertheless, the most relevant types are explained in more detail below.

Interfaces:

All interfaces employed in connection with the present embodiment are derived from a super-interface class. Each interface contains at least three methods. Two methods "acquire" and "release" are necessary to control the lifetime of the interface. A third method "queryInterface" is used to navigate between different interfaces. In the UNO environment, an interface XInterface includes only these three methods. All other interfaces in the UNO environment are derived from this interface XInterface.

In a JAVA environment, for example, interfaces are mapped to JAVA interfaces, which could be normally implemented. Methods acquire and release are not mapped to the JAVA program, since these methods do not exist in the JAVA programming language The lifetimes of the proxy and the relevant information in a second JAVA program are controlled by a garbage collector, and so methods acquire and release are not needed. The JAVA programming language delivers basic types by value and non-basic types by reference. All calls are specified by value except interfaces. In a JAVA environment, all non-basic types returned or delivered through out parameters are by value, which means that the implementation must copy any non-basic types before return or deliver.

In a C++ environment, for example, interfaces are mapped to pure virtual classes. To automatically control the lifetime of interfaces a template called "Reference" is used. All return, parameter and member types are "References" (e.g.: Reference< XInterface >). The "Reference" acquires the interface when it is constructed, and releases the interface when it is destructed.

Structure:

A structure is a collection of elements. The type of each element is fixed and it cannot be changed. The number of elements is fixed.

Exceptions:

An exception is a program control construct besides the normal control flow. One major feature of exceptions is that with exceptions, implementation of the error handling is simpler. Exceptions are similar to structures since exceptions are also a collection of elements and each type of each element is fixed and cannot be changed and the number of elements is also fixed. An additional feature of exceptions is that exceptions can be thrown by a method. All exceptions, which can be thrown by a method, must be declared at the method, except for the exception RuntimeException, which always can occur. All exceptions must be derived from interface Exception in the UNO environment (See CHAPTER A). If an exception is declared at a method, the method is allowed to throw all derived exceptions. The caller of a method must respond to this behavior.

In the JAVA environment, for example, all exceptions are derived from exception java.lang.Exception. The exceptions are declared at the methods. In the C++ environment, for example, the exceptions are generated as structures. An exception is thrown as an instance (e.g.: throw RuntimeException()). At the other side, the exception should be caught as a reference (...catch(RuntimeException & ) { ... }).

Union:

A union contains one element. The declaration of a union specifies the possible types.

Array:

An array contains any number of elements. The type of the elements is fixed and cannot be changed.

Any:

An any contains one element. All types of elements are possible. An any contains a reference to the value and the type description of the type. With the type description, the bridge can transform the value, if necessary. In the JAVA environment, the any is, for example, represented by class Any, which contains a class as type description and a value, which is "java.lang.Object". The basic types are wrapped to their proper classes. For example, a Boolean value is an object of the class "java.lang.Boolean", which contains the value.

In the C++ environment, the any is represented through class Any. Each type generated by a C++ code maker implements a function "getCppuType". This function is used to implement the template access operators "<<=" and ">>=". These operators insert and extract the value of the any.

Sequence:

A sequence is a generic data type. A sequence contains the number of elements and the elements. In the JAVA environment, the specification of an array fulfills this specification. This is not true for the C++ environment. An array in the C++ programming language does not contain the number of elements. It is not possible to return a C++-array, e.g., Char[] getName() is not possible. It is difficult to manage the lifetime between the called and the caller, if only a pointer is returned. Therefore, in the C++ programming language, a sequence is a template with the name Sequence. The implementation contains a pointer to a structure, which contains a pointer to the elements, the number of elements and the reference count. Thus, the implementation of the template holds the binary specification. It is cheap to copy this sequence, because only the reference count is incremented.

*Creating and using a Proxy Interface*

With this understanding of an execution environment, and the various types that may be associated with an execution environment, a description of making and using one embodiment of a bridge including a proxy interface is now described. A bridge includes two mappings. Each mapping is dependent upon the counterpart mapping, because performing a call may require conversion of interfaces from one environment to the other environment, e.g., input parameters to an interface, and/or return values from an interface. Thus, a bridge implements infrastructure to exchange interfaces between two environments and is bi-directional.

Figure 4 is a sequence diagram for one embodiment the present invention. Along the horizontal axis are individual objects, where each object is represented as a labeled rectangle. For convenience, only the objects needed to explain the operation are included. The vertical axis represents the passage of time from top to bottom of the page. Horizontal lines represent the passing of messages between objects. A dashed line extends down from each rectangle, and a rectangle along the dashed line represents the lifetime of the object.

To make calls to a first binary specification for an execution environment, the execution environment has to be denominated. In one embodiment, an execution environment is denominated by a string, because the string is extensible and the risk of double names is low. Example of strings used to denominate execution environments are presented in Table 6.

TABLE 99.:

| EXAMPLES OF STRINGS USED TO DENOMINATE EXECUTION ENVIRONMENTS | |
| --- | --- |
| LANGUAGE BINDING OR OBJECT MODEL | NAMING |
| Binary UNO | uno |
| JAVA | java |
| MICROSOFT C++ 4.2 - 6.0 | msci |
| EGCS 2.9.1 with RTTI | egcs29 |
| Workshop Compiler 5.0 | sunpro5 |
| COM | com |

Each bridge is implemented in a separate shared library that is loaded at runtime. One naming scheme of the library is a concatenation as follows:

[purpose_]SourceEnvName_DestEnvName

The optional purpose denotes the purpose of the bridge, e.g., protocolling traffic between two environments. If no purpose is given, the bridge maps interfaces from the source environment to the destination environment.

Hence, in this embodiment, user object 401 calls a method GetEnvironment, with a string denominating the source environment as a parameter, in runtime library 402. In response to the call, a source environment object 403 is instantiated and registered by runtime library 402.

User object 401 calls a method GetEnvironment, this time with a string denominating the destination environment as a parameter, in runtime library 402. In response to this call, a destination environment object 404 is instantiated and registered by runtime library 402.

Next, user object 401 calls a method getMapping in runtime library 402. A first parameter in the method call is the string denominating the source environment. A second parameter in the method call is the string denominating the destination environment.

In response to the call to method getMapping, a bridge object 405 is activated by runtime library 402. In one embodiment, a shared library is searched to find a library that contains a proxy factory for the specified source and destination environments. In a JAVA execution environment, the search is for a class with a name associated with the source and destination environments. The shared bridge library cannot be unloaded while any of its code is still needed. So both mappings and any wrapped interface (proxy) that are exported need to modify a shared bridge library wide reference count. If the shared bridge library can be unloaded the reference count goes to zero.

After bridge object 405 is activated, user object 401 issues a call to a method Mapping.mapInterface with a first parameter that is a source interface, and a second parameter that is a type. After receiving the call to method Mapping.mapInterface, bridge object 405 issues a call to method sourceEnv.getObjectIdentifier of source environment object 403 for the type. An object identifier is returned for the type, e.g., for an interface, and bridge object 405 issues a call to method destEnv.getRegisteredInterface of destination environment object 404 with the object identifier and the type as input parameters.

If a proxy interface is registered in destination environment object 404 for this object identifier and type, a pointer to the proxy is returned by method getRegisteredInterface. In this example, a pointer to the proxy interface 406 is returned to user object 401.

Conversely, if method getRegisteredInterface failed to find a registered proxy interface, bridge object 405 calls method create proxy with a source environment and a type as input parameters. In creating a proxy, bridge object 405, in one embodiment, uses a proxy factory to generate method code to implement each method specified in the interface to be created. The only information to do this is a type description of the interface. For example, in a JAVA environment, a binary class file (*.class) is generated and loaded with the class loader. In the absence of a loader, which can directly load binary classes, a loader has to be provided. In a C++ environment, virtual method tables are generated, which delegate each call to the interface in the source environment.

The knowledge of the type description is necessary to create the proxy, as described. This type description is the full description of the limited functionality, e.g., a description of an interface, in the source execution environment. The type description may refer one of the different types shown in Table 5.

Following creation of the proxy, bridge object 405 registers the interface with source environment object 403 and registers the proxy interface with destination environment object 404. This completes creation of proxy interface 406, sometimes called proxy 406.

To use proxy interface 406, user object 401 simply calls a method in proxy interface 406. In response to the call, proxy interface 406 converts any input parameters as necessary using the method type description, and marshals the arguments for source interface 407. Next, proxy interface 406 dispatches a call to the method in source interface 407 in the source execution environment.

The method is executed in the source environment and the results are returned by source interface 407 to proxy interface 406. Upon receiving a return for the call, proxy interface 406 checks for any exceptions and if there are none, converts any output parameters and the return value to the destination execution environment again using the method type description, and then returns the results to user object 401. Thus, user object 401 has transparently accessed functionality in another execution environment. Typically, this is limited functionality, as described above.

In the following description, a specific example of a bridge that maps an interface from a MICROSOFT Visual C++ environment to a UNO environment is first described, and that maps an interface from a UNO environment to a MICROSOFT Visual C++ environment is described second. Table 7 is an example of a call to a method bar in the UNO interface XExample from a C++ program.

TABLE 100.: EXAMPLE of C++ PROGRAM SEGMENT TO GENERATE
and USE A PROXY

```
Mapping aMapping ( "uno", "msci" );
XExample * pExample = (XExample *)
      aMapping.mapInterface ( pUnoExample,
      ::getCppuType( (const Reference < XExample > *) 0
      ) );


.  .  .
pExample->bar();


.  .  .
pExample->release;
```

For the example of Table 7, the initial call to function Mapping creates a bridge from the UNO environment to the MSCI environment. The generation of the bridge, in this example uses, methods initEnvironment and getMapping. Table 8 is the implementation of these methods that are used in the proxy class of Table 9, for this example.

TABLE 101.:  EXAMPLE OF DECLARATION OF METHODS
initEnvironment and getMapping.

```
extern "C" SAL_DLLEXPORT void SAL_CALL
      uno_initEnvironment( uno_Environment * pCppEnv )
{
CPPU_CURRENT_NAMESPACE::cppu_cppenv_initEnvironment(
      pCppEnv );
}
extern "C" SAL_DLLEXPORT void SAL_CALL
      uno_ext_getMapping( uno_Mapping ** ppMapping,
      uno_Environment * pFrom, uno_Environment * pTo )
{
CPPU_CURRENT_NAMESPACE::cppu_ext_getMapping( ppMapping,
      pFrom, pTo );
      }
```

As explained above, to process a call to a method of a UNO interface in the C++ environment, there must be a proxy C++ object that delegates the method call to the corresponding UNO interface. Table 9 is bridge header file example of a bridge class, a C++ to UNO proxy class, and a UNO to C++ proxy class that can be modified for a specific environment. This example uses the bridge object and C++ to UNO proxy object that are instantiated using the classes in Table 9. As explained above, the call to method Mapping.mapInterface creates a proxy interface.

TABLE 102.:  EXAMPLE OF A CLASS DEFINITIONS

```
namespace CPPU_CURRENT_NAMESPACE
{

// these have to be defined in some C file in the
// current namespace  (See Tables 10 & 16)
void SAL_CALL cppu_cppInterfaceProxy_patchVtable(
    ::com::sun::star::uno::XInterface * pCppI,
    typelib_InterfaceTypeDescription * pTypeDescr );
void SAL_CALL cppu_unoInterfaceProxy_dispatch(
    uno_Interface * pUnoI, const
    typelib_TypeDescription * pMemberDescr, void *
    pReturn, void * pArgs[], uno_Any ** ppException );
//=================================================
struct cppu_Bridge;
struct cppu_Mapping : public uno_Mapping
{
cppu_Bridge * pBridge;
inline cppu_Mapping( cppu_Bridge * pBridge,
    uno_MapInterfaceFunc fpMap );
};
//==== holding environments and mappings =============
struct cppu_Bridge
{
oslInterlockedCount            nRef;
uno_ExtEnvironment *           pCppEnv;
uno_ExtEnvironment *           pUnoEnv;
cppu_Mapping                   aCpp2Uno;
cppu_Mapping                   aUno2Cpp;
sal_Bool                       bExportCpp2Uno;
void SAL_CALL acquire();
void SAL_CALL release();
```

```
inline cppu_Bridge( uno_ExtEnvironment * pCppEnv_,
    uno_ExtEnvironment * pUnoEnv_, sal_Bool
    bExportcpp2Uno_ );
};
//==== a cpp proxy wrapping an uno interface =========
struct cppu_cppInterfaceProxy : public
    ::com::sun::star::uno::XInterface
{
oslInterlockedCount                      nRef;
cppu_Bridge *                            pBridge;
// mapping information
uno_Interface *          pUnoI; // wrapped interface
typelib_InterfaceTypeDescription * pTypeDescr;
::rtl::OUString                             oid;
// non virtual methods called on incoming vtable calls
//    #1, #2
inline void SAL_CALL acquireProxy();
inline void SAL_CALL releaseProxy();
// XInterface: these are only here for dummy, there
    will be a patched vtable!
// dont use this, use cppu_queryInterface()!
virtual ::com::sun::star::uno::Any SAL_CALL
    queryInterface( const ::com::sun::star::uno::Type
    & ) { return ::com::sun::star::uno::Any(); }
// dont use this, use cppu_acquire()!
virtual void SAL_CALL acquire() {}
// dont use this, use cppu_release()!
virtual void SAL_CALL release() {}

// ctor
inline cppu_cppInterfaceProxy( cppu_Bridge * pBridge_,
    uno_Interface * pUnoI_,
    typelib_InterfaceTypeDescription * pTypeDescr_,
    const ::rtl::OUString & rOId_ );
};
//= a uno proxy wrapping a cpp interface ====
```

```
struct cppu_unoInterfaceProxy : public uno_Interface
{
oslInterlockedCount                    nRef;
cppu_Bridge *                          pBridge;

// mapping information
::com::sun::star::uno::XInterface *    pCppI; //
    wrapped interface
typelib_InterfaceTypeDescription * pTypeDescr;
::rtl::OUString                        oid;
// ctor
inline cppu_unoInterfaceProxy( cppu_Bridge * pBridge_,
    ::com::sun::star::uno::XInterface * pCppI_,
    typelib_InterfaceTypeDescription * pTypeDescr_,
    const ::rtl::OUString & rOId_ );
};
//-----------------------------------------------------
inline void SAL_CALL cppu_cppenv_initEnvironment(
    uno_Environment * pCppEnv );
//-----------------------------------------------------
inline void SAL_CALL cppu_ext_getMapping( uno_Mapping
    ** ppMapping, uno_Environment * pFrom,
    uno_Environment * pTo );


}
```

The proxy object is instantiated and the vtable pointer is modified to give a generic vtable. For a MICROSOFT C++ environment, the generic vtable can be used because an objects' this pointer is at anytime the second stack parameter (See Fig. 6). However, for gcc or sunpro5 (See Table 6), the first parameter may the pointer to a struct return space. Thus, for there compilers, a vtable for each type that is used must be generated.

As explained more completely below, when the proxy interface is called, a vtable index is determined by the generic vtable (See Figs. 7A and 7B), and based upon this index, the method type description is determined. This method type description is the information that is used to get the values from the processor call stack and perform a dispatch call on the target UNO interface that the C++ proxy is wrapping.

After the dispatch call, the returned exception information is checked to determine whether a C++ exception has to be generated and raised. If no exception has occurred, the inout/out parameters are reconverted. In this example, the reconversion of inout/out parameters is only important for values representing interfaces or values containing interfaces, because the values of all objects in the UNO environment are binary compatible on a specific computing architecture.

The C++ proxy, as defined by Table 9, holds the interface origin, i.e., the target UNO interface. Thus, the C++ proxy can register with the C++ environment on the first execution of method acquire, and can revoke itself on its last execution of method release from its environment.

The C++ proxy manages a reference count for the proxy, a pointer to the bridge of the C++ proxy to obtain the counterpart mapping, the UNO interface the C++ proxy delegates calls to, the (interface) type the C++ proxy is emulating, and an object identifier (oid). The type and object identifier are needed to manage objects from environments, for proof of object identity, and to improve performance. A proxy to an interface is not needed if there is already a registered proxy for that interface.

When the proxy object is created by the MICROSOFT Visual C++ compiler, the vtable is patched by the execution of method patchVtable. One embodiment of method patchVtable is presented in TABLE 10.

TABLE 103.:   EXAMPLE OF METHOD patchVtable

```
void SAL_CALL cppu_cppInterfaceProxy_patchVtable(
    XInterface * pCppI,
    typelib_InterfaceTypeDescription * pTypeDescr )
{
static MediateVtables * s_pMediateVtables = 0;
if (! s_pMediateVtables)
{
MutexGuard aGuard( Mutex::getGlobalMutex() );
if (! s_pMediateVtables)
{
#ifdef LEAK_STATIC_DATA
    s_pMediateVtables = new MediateVtables();
#else
    static MediateVtables s_aMediateVtables;
    s_pMediateVtables = &s_aMediateVtables;
#endif
}
}
*(const void **)pCppI = s_pMediateVtables-
    >getMediateVtable( pTypeDescr-
    >nMapFunctionIndexToMemberIndex );
}
```

An embodiment of the class MediateVtables that is used to instantiate the object MediateVtables in method patchVtable is presented in TABLE 11.

TABLE 104.:  EXAMPLE OF CLASS MediateVtables

```
class MediateVtables
{
//------------------------------------------------------
struct DefaultRTTIEntry
{
sal_Int32 _n0, _n1, _n2;
type_info * _pRTTI;
DefaultRTTIEntry()
: _n0( 0 ),
  _n1( 0 ),
  _n2( 0 )
{ _pRTTI = msci_getRTTI( "com.sun.star.uno.XInterface"
    ); }
};
typedef list<void * > t_pSpacesList;
Mutex                       _aMutex;
t_pSpacesList          _aSpaces;
sal_Int32              _nCurrent;
const void *           _pCurrent;
public:
const void *           getMediateVtable( sal_Int32
    nSize );
MediateVtables( sal_Int32 nSize = 256 )
        : _nCurrent( 0 )
        , _pCurrent( 0 )
```

```
                 { getMediateVtable( nSize ); }
        ~MediateVtables();
};
//_____
MediateVtables::~MediateVtables()
{
TRACE( "> calling ~MediateVtables(): freeing mediate
      vtables... <\n" );
MutexGuard aGuard( _aMutex );
// this MUST be the absolute last one, which is called!
for ( t_pSpacesList::iterator iPos( _aSpaces.begin() );
      iPos != _aSpaces.end(); ++iPos )
{
rtl_freeMemory( *iPos );
}
        }
```

TABLE 12 is an example of one embodiment of a method getMediateVtable that is called in the embodiment of method patchVtable of TABLE 10.

TABLE 105.:   EXAMPLE OF METHOD getMediateVtable

```
const void * MediateVtables::getMediateVtable(
      sal_Int32 nSize )
{
if (_nCurrent < nSize)
{
      TRACE( "> need larger vtable! <\n" );
// dont ever guard each time, so ask twice when guarded
MutexGuard aGuard( _aMutex );
if (_nCurrent < nSize)
{
```

```
nSize = (nSize +1) & 0xfffffffe;
char * pSpace = (char *)rtl_allocateMemory(
      ((1+nSize)*sizeof(void *)) + (nSize*12) );
_aSpaces.push_back( pSpace );
// on index -1 write default rtti entry
static DefaultRTTIEntry s_defaultInterfaceRTTI;
*(void **)pSpace = &s_defaultInterfaceRTTI;
void ** pvft   = (void **)(pSpace + sizeof(void *));
char * pCode   = pSpace + ((1+nSize)*sizeof(void *));
// setup vft and code
for ( sal_Int32 nPos = 0; nPos < nSize; ++nPos )
{
unsigned char * codeSnip = (unsigned char *)pCode +
      (nPos *12);
pvft[nPos] = codeSnip;
/**
* vtable calls detonate on these code snippets
*/
// mov eax, nPos
*codeSnip++ = 0xb8;
*(sal_Int32 *)codeSnip = nPos;
codeSnip += sizeof(sal_Int32);
// jmp rel32 cpp_vtable_call
*codeSnip++ = 0xe9;
*(sal_Int32 *)codeSnip = ((unsigned char
      *)cpp_vtable_call) - codeSnip - sizeof(sal_Int32);
}
_pCurrent = pSpace + sizeof(void *);
_nCurrent = nSize;
}
}
return _pCurrent;
      }
```

Figure 6 is an example of a call stack 600 of a virtual function call that is stored in a memory 610 of computer system 100 (Figs. 1A and 1B). The left-hand column is the stack offset for the start of storage location, and the right hand column gives the value stored at each storage location.

The vtable for the C++ proxy, i.e., a function pointer array to perform polymorphic calls on C++ objects, determines which function should be called. Figure 7A is an illustration of the vtable for this example that correlates the slots in the table to the methods handled by the C++ proxy. Recall, that every proxy has to inherit the methods from UNO interface XInterface, which are methods acquire, release, and queryInterface.

When the call to method bar (Table 7) is executed, the call is directed to the C++ proxy. The only task of the proxy vtable is to determine the call index of the UNO method that is to be called. (See Fig. 7B)

Figure 8 is a process flow diagram of one embodiment of the operations performed by a proxy 130 or 130A that in this example is the C++ proxy. When method bar is called, process 800 (Fig. 8) is started in operation 801.

Initially, in determine slot operation 802 the C++ proxy executes method patchVtable (See Table 10) that in turn calls method getMediateVtable (See Table 12). Method getMediateVtable reaches an assembler snippet that determines the vtable slot of method bar and calls method vTable 810. This completes operation 802.

TABLE 13 is an example of one implementation of method vTable 810.

TABLE 106.:   AN EXAMPLE OF METHOD vTable

```
/**
 * is called on incoming vtable calls
 * (called by asm snippets)
 */
static __declspec(naked) void __cdecl
    cpp_vtable_call(void)
{
__asm
    {
            sub       esp, 8          // space for
    immediate return type
            push esp                  .
            push eax                  // vtable index
            mov       eax, esp
            add       eax, 16
            push eax                  // original stack ptr

            call cpp_mediate
            add       esp, 12

            cmp       eax, typelib_TypeClass_FLOAT
            je        Lfloat
            cmp       eax, typelib_TypeClass_DOUBLE
            je        Ldouble
            cmp       eax, typelib_TypeClass_HYPER
            je        Lhyper
            cmp       eax,
    typelib_TypeClass_UNSIGNED_HYPER
            je        Lhyper
            // rest is eax
```

```
            pop         eax
            add         esp, 4
            ret
Lhyper:
            pop         eax
            pop         edx
            ret
Lfloat:
            fld         dword ptr [esp]
            add         esp, 8
            ret
Ldouble:
            fld         qword ptr [esp]
            add         esp, 8
            ret
        }
}
```

Operation 802 transfers processing to prepare stack operation 811 in method mediate 810. In operation 811, the stack space is prepared for register data, and then processing passes to call mediate operation 812.

Call mediate operation 812 calls method mediate that in turn looks up the called vtable index, gets the attribute or method type description, and calls a method that dispatches that actual call to the method in the UNO environment. A process flow diagram of one embodiment of method mediate 900 is presented in Figure 9. Table 14 is an example of method mediate.

## TABLE 107.: EXAMPLE OF METHOD mediate

```
static typelib_TypeClass __cdecl cpp_mediate( void **
    pCallStack, sal_Int32 nVtableCall,  sal_Int64 *
    pRegisterReturn /* space for register return */ )
{
OSL_ENSHURE( sizeof(sal_Int32)==sizeof(void *), "###
    unexpected!" );
// pCallStack: ret adr, this, [ret *], params
// _this_ ptr is patched cppu_XInterfaceProxy object
cppu_cppInterfaceProxy * pThis = static_cast<
    cppu_cppInterfaceProxy * >(  reinterpret_cast<
    XInterface * >( pCallStack[1] ) );
typelib_InterfaceTypeDescription * pTypeDescr = pThis-
    >pTypeDescr;
OSL_ENSHURE( nVtableCall < pTypeDescr-
    >nMapFunctionIndexToMemberIndex,  "### illegal
    vtable index!" );
if (nVtableCall >= pTypeDescr-
    >nMapFunctionIndexToMemberIndex)
{
throw RuntimeException( OUString(
    RTL_CONSTASCII_USTRINGPARAM("illegal vtable
    index!") ),  (XInterface *)pThis );
}
// determine called method
sal_Int32 nMemberPos = pTypeDescr-
    >pMapFunctionIndexToMemberIndex[nVtableCall];
OSL_ENSHURE( nMemberPos < pTypeDescr->nAllMembers, "###
    illegal member index!" );
TypeDescription aMemberDescr( pTypeDescr-
    >ppAllMembers[nMemberPos] );
typelib_TypeClass eRet;
switch (aMemberDescr.get()->eTypeClass)
```

```
{
case typelib_TypeClass_INTERFACE_ATTRIBUTE:
{
if (pTypeDescr-
      >pMapMemberIndexToFunctionIndex[nMemberPos] ==
      nVtableCall)
{
// is GET method
eRet = cpp2uno_call( pThis, aMemberDescr.get(),
      ((typelib_InterfaceAttributeTypeDescription
      *)aMemberDescr.get())->pAttributeTypeRef, 0, 0,
      pCallStack, pRegisterReturn );
}
else
{
// is SET method
typelib_MethodParameter aParam;
aParam.pTypeRef
      =((typelib_InterfaceAttributeTypeDescription
      *)aMemberDescr.get())->pAttributeTypeRef;
aParam.bIn          = sal_True;
aParam.bOut         = sal_False;
eRet = cpp2uno_call( pThis, aMemberDescr.get(),0, 1,
      &aParam, pCallStack, pRegisterReturn );
}
break;
}
case typelib_TypeClass_INTERFACE_METHOD:
{
// is METHOD
switch (nVtableCall)
{
// standard XInterface vtable calls
case 1: // acquire()                      .
      pThis->acquireProxy(); // non virtual call!
      eRet = typelib_TypeClass_VOID;
```

```
        break;
        case 2: // release()
        pThis->releaseProxy(); // non virtual call!
        eRet = typelib_TypeClass_VOID;
        break;
case 0: // queryInterface() opt
{
typelib_TypeDescription * pTD = 0;
TYPELIB_DANGER_GET( &pTD, reinterpret_cast< Type * >(
        pCallStack[3] )->getTypeLibType() );
OSL_ASSERT( pTD );
XInterface * pInterface = 0;
(*pThis->pBridge->pCppEnv->getRegisteredInterface)(
        pThis->pBridge->pCppEnv,   (void **)&pInterface,
        pThis->oid.pData,
        (typelib_InterfaceTypeDescription *)pTD );
if (pInterface)
{
uno_any_construct( reinterpret_cast< uno_Any * >(
        pCallStack[2] ),   &pInterface, pTD, cpp_acquire
        );
pInterface->release();
TYPELIB_DANGER_RELEASE( pTD );
*(void **)pRegisterReturn = pCallStack[2];
eRet = typelib_TypeClass_ANY;
break;
}
TYPELIB_DANGER_RELEASE( pTD );
} // else perform queryInterface()
default:
eRet = cpp2uno_call(
pThis, aMemberDescr.get(),
        ((typelib_InterfaceMethodTypeDescription
        *)aMemberDescr.get())->pReturnTypeRef,
        ((typelib_InterfaceMethodTypeDescription
        *)aMemberDescr.get())->nParams,
```

```
        ((typelib_InterfaceMethodTypeDescription

        *)aMemberDescr.get())->pParams, pCallStack,

        pRegisterReturn );

    }

break;

    }

default:

{

throw RuntimeException(

OUString( RTL_CONSTASCII_USTRINGPARAM("no member

        description found!") ), (XInterface *)pThis );

// is here for dummy

eRet = typelib_TypeClass_VOID;

    }

    }

return eRet;

        }
```

Method call check 901 of method mediate 900 determines whether the call is a method call. If the call is a method call processing transfers to acquire/release check operation 910, and otherwise to attribute get check operation 920.

Acquire/release check operation 910 branches to acquire/release call operation 911 if the method call is a call to either method acquire or method release, because these calls can be executed without calling the interface in the source environment. If the method call is not a call to either method acquire or method release, processing transfers from check operation 910 to query interface check operation 912.

Acquire/Release call operation 911 performs the appropriate method, which is a non-virtual call, and returns.

Query interface check operation 912 determines whether the method call is to method queryInterface. If the method call is not to method queryInterface, check operation 912 transfers to call Env1_to_Env2 with Interface operation 930 and otherwise transfers to registered interface available check operation 913. In the current example, the call to method bar results in check operation 912 transferring to operation 930.

Nevertheless, to complete the description of this branch of method mediate 900, if there is a registered interface in the source environment object for method queryInterface, check operation 913 transfers to set return value operation 914 and otherwise to call Env1_to_Env2 with Interface operation 930. Asking whether the interface is registered in the source environment object is an optimization that eliminates a call to the actual interface in the source environment. Set return value operation 914 sets the registered interface as the return value and returns.

If the call to the C++ proxy was not a method call, check operation 901 transfers to attribute get check operation 920. In this embodiment, there is either an attribute get or an attribute set. If the call to the proxy is an attribute get, check operation 920 transfers to prepare attribute get call operation 921 and otherwise transfers to prepare attribute set call operation 922. Both operations 921 and 922 set up the parameters for the call and transfer to call Env1_to_Env2 with Interface operation 930.

An embodiment of method Env1_to_Env2 with interface for the C++ proxy is presented in Table 15. Figure 10 is a process flow diagram for one embodiment of method Env1_to_Env2 with interface.

TABLE 108.: AN EXAMPLE OF METHOD Env1_to_Env2 with interface

```
using namespace std;
using namespace rtl;
using namespace osl;
using namespace com::sun::star::uno;
namespace CPPU_CURRENT_NAMESPACE
{
static inline typelib_TypeClass cpp2uno_call(
     cppu_cppInterfaceProxy * pThis,  const
     typelib_TypeDescription * pMemberTypeDescr,
     typelib_TypeDescriptionReference * pReturnTypeRef,
     sal_Int32 nParams, typelib_MethodParameter *
     pParams,  void ** pCallStack,
     sal_Int64 * pRegisterReturn  )
{
// pCallStack: ret, this, [complex return ptr], params
char * pCppStack = (char *)(pCallStack +2);
// return
typelib_TypeDescription * pReturnTypeDescr = 0;
if (pReturnTypeRef)  TYPELIB_DANGER_GET(
     &pReturnTypeDescr, pReturnTypeRef );
void * pUnoReturn = 0;
// complex return ptr: if != 0 && != pUnoReturn,
//  reconversion need
void * pCppReturn = 0;
if (pReturnTypeDescr)
```

```
{
if (cppu_isSimpleType( pReturnTypeDescr ))
{
// direct way for simple types
pUnoReturn = pRegisterReturn;
}
else // complex return via ptr (pCppReturn)
{
pCppReturn = *(void **)pCppStack;
pCppStack += sizeof(void *);
pUnoReturn = (cppu_relatesToInterface( pReturnTypeDescr
        )
// direct way
 ? alloca( pReturnTypeDescr->nSize ) : pCppReturn);
}
}
// stack space
OSL_ENSHURE( sizeof(void *) == sizeof(sal_Int32), "###
        unexpected size!" );
// parameters
void ** pUnoArgs = (void **)alloca( 4 * sizeof(void *)
        * nParams );
void ** pCppArgs = pUnoArgs + nParams;
// indices of values that have to be converted
// (interface conversion cpp<=>uno)
sal_Int32 * pTempIndizes = (sal_Int32 *)(pUnoArgs + (2
        * nParams));
// type descriptions for reconversions
typelib_TypeDescription ** ppTempParamTypeDescr =
        (typelib_TypeDescription **)(pUnoArgs + (3 *
        nParams));
sal_Int32 nTempIndizes = 0;
for ( sal_Int32 nPos = 0; nPos < nParams; ++nPos )
{
const typelib_MethodParameter & rParam = pParams[nPos];
typelib_TypeDescription * pParamTypeDescr = 0;
```

```
TYPELIB_DANGER_GET( &pParamTypeDescr, rParam.pTypeRef
    );
if (!rParam.bOut && cppu_isSimpleType( pParamTypeDescr
    )) // value
{
pCppArgs[nPos] = pCppStack;
pUnoArgs[nPos] = pCppStack;
switch (pParamTypeDescr->eTypeClass)
{
case typelib_TypeClass_HYPER:
case typelib_TypeClass_UNSIGNED_HYPER:
case typelib_TypeClass_DOUBLE:
pCppStack += sizeof(sal_Int32); // extra long
}
// no longer needed
TYPELIB_DANGER_RELEASE( pParamTypeDescr );
}
else // ptr to complex value | ref
{
pCppArgs[nPos] = *(void **)pCppStack;
if (! rParam.bIn) // is pure out
{
// uno out is unconstructed mem!
pUnoArgs[nPos] = alloca( pParamTypeDescr->nSize );
pTempIndizes[nTempIndizes] = nPos;
// will be released at reconversion
ppTempParamTypeDescr[nTempIndizes++] = pParamTypeDescr;
}
// is in/inout
else if (cppu_relatesToInterface( pParamTypeDescr ))
{
uno_copyAndConvertData( pUnoArgs[nPos] = alloca(
    pParamTypeDescr->nSize ), *(void **)pCppStack,
    pParamTypeDescr,  &pThis->pBridge->aCpp2Uno );
// has to be reconverted
pTempIndizes[nTempIndizes] = nPos;
```

```
// will be released at reconversion
ppTempParamTypeDescr[nTempIndizes++] = pParamTypeDescr;
}
else // direct way
{
pUnoArgs[nPos] = *(void **)pCppStack;
// no longer needed
TYPELIB_DANGER_RELEASE( pParamTypeDescr );
}
}
// standard parameter length
pCppStack += sizeof(sal_Int32);
}


// ExceptionHolder
uno_Any aUnoExc; // Any will be constructed by callee
uno_Any * pUnoExc = &aUnoExc;
// invoke uno dispatch call
(*pThis->pUnoI->pDispatcher)( pThis->pUnoI,
        pMemberTypeDescr, pUnoReturn, pUnoArgs, &pUnoExc
        );
// in case an exception occurred...
if (pUnoExc)
{
// destruct temporary in/inout params
while (nTempIndizes--)
{
sal_Int32 nIndex = pTempIndizes[nTempIndizes];
// is in/inout => was constructed
if (pParams[nIndex].bIn)
uno_destructData( pUnoArgs[nIndex],
        ppTempParamTypeDescr[nTempIndizes], 0 );
TYPELIB_DANGER_RELEASE(
        ppTempParamTypeDescr[nTempIndizes] );
}
if (pReturnTypeDescr) TYPELIB_DANGER_RELEASE(
```

171

```
        pReturnTypeDescr );
msci_raiseException( &aUnoExc, &pThis->pBridge-
        >aUno2Cpp ); // has to destruct the any
// is here for dummy
return typelib_TypeClass_VOID;
}
else // else no exception occurred...
{
// temporary params
while (nTempIndizes--)
{
sal_Int32 nIndex = pTempIndizes[nTempIndizes];
typelib_TypeDescription * pParamTypeDescr =
        ppTempParamTypeDescr[nTempIndizes];
if (pParams[nIndex].bOut) // inout/out
{
// convert and assign
uno_destructData( pCppArgs[nIndex], pParamTypeDescr,
        cpp_release );
uno_copyAndConvertData( pCppArgs[nIndex],
        pUnoArgs[nIndex], pParamTypeDescr, &pThis-
        >pBridge->aUno2Cpp );
}
// destroy temp uno param
uno_destructData( pUnoArgs[nIndex], pParamTypeDescr, 0
        );
TYPELIB_DANGER_RELEASE( pParamTypeDescr );
}
// return
if (pCppReturn) // has complex return
{
if (pUnoReturn != pCppReturn) // needs reconversion
{
uno_copyAndConvertData( pCppReturn, pUnoReturn,
        pReturnTypeDescr, &pThis->pBridge->aUno2Cpp );
// destroy temp uno return
```

```
uno_destructData( pUnoReturn, pReturnTypeDescr, 0 );

}

// complex return ptr is set to eax

*(void **)pRegisterReturn = pCppReturn;

}

if (pReturnTypeDescr)

{

typelib_TypeClass eRet =

        (typelib_TypeClass)pReturnTypeDescr->eTypeClass;

TYPELIB_DANGER_RELEASE( pReturnTypeDescr );

return eRet;

}

else

return typelib_TypeClass_VOID;

}

}
```

In Figure 10, read parameters operation 1001 reads the parameters from the stack. All simple parameters are directly accessed on the stack (up to eight bytes). All complex structures, e.g., interfaces, are referenced by a pointer. Since in this example UNO and C++ types have the same binary size (See Table 5), only interfaces need to be exchanged.

Read parameters operation 1001 transfers to convert parameters operation 1002. Convert parameters operation 1002, using the parameter type description, converts the parameters read to the UNO environment and transfers to allocate memory operation 1003. Allocate memory operation 1003 allocates memory for the out parameters returned by the call to the UNO interface, and for the return value. Allocate memory operation 1003 transfers processing to dispatch call operation 1004.

Dispatch call operation 1004 calls, in this example, method bar in UNO interface XExample. In general, dispatch call operation 1004 dispatches a call to the source interface (See Fig. 4). The call is executed in the source environment and the results, if any, are returned to operation 1004 that in turn transfers to exception check operation 1005.

Exception check operation 1005 determines whether an exception was thrown in response to the call. If an exception was thrown, check operation 1005 transfers processing to clean up operation 1110 and otherwise processing transfers to convert parameters operation 1020.

Clean up operation 1010 cleans up any temporary parameters that were created in the call in operation 1004. Operation 1010 transfers to throw exception operation 1030 that in turn throws an exception in the destination environment based upon the exception received from the call to the source environment.

If an exception was not thrown in the source environment, convert parameters operation 1020 converts any parameters that were returned from operation 1004, e.g., out parameters and/or inout parameters using the parameter type description, from the source environment to the destination environment, and transfers to clean up operation 1021. Clean up operation 1021 cleans up any temporary parameters that were created in the call in operation 1004 and transfers to convert return value operation 1022. Operation 1022 converts any return value from the source environment to the destination environment so that both the return value and any returned parameters are written back, in this example to C++. Processing returns to mediate method 900 that in turn returns to fill return registers 813 in method vTable 810.

In fill return registers operation 813, if the type is one of float, double, hyper, or unsigned hyper, an appropriate action is taken to properly fill the return registers. Otherwise, a 32-bit integer is placed in register eax. See Table 13 for one embodiment of operation 813.

The above example assumed that the original call was in a C++ environment and was directed to a method of an interface in the UNO environment. In the embodiment of Figure 1A, another possibility is that a call is made in the UNO environment, i.e., environment 120 to a C++ method in environment 150. In this case, the bridge and proxy would be in the UNO environment. Alternatively, in Figure 1B, the intermediate environment is a UNO environment.

In this embodiment, struct cppu_unoInterfaceProxy in Table 9 is used to instantiate the UNO proxy that wraps a C++ interface. As explained more completely below, when the proxy interface is called, a check is made to determine if a method of the proxy interface has been called. If a method was called, any input parameters are converted using the type description and pushed on a processor stack, and then a call is dispatched to the demanded vtable slot in the source interface.

After execution of the dispatch call, the returned information is checked to determine whether a C++ exception was generated. If no exception has occurred, the inout/out parameters are reconverted. In this example, the reconversion of inout/out parameters is only important for values representing interfaces or values containing interfaces, because the values of all objects in the UNO environment are binary compatible on a specific computing architecture.

The UNO proxy, as defined by Table 9, holds the interface origin, i.e., the target C++ interface. Thus, the UNO proxy can register at with the UNO environment on the first execution of method acquire, and can revoke itself on its last execution of method release from its environment.

The UNO proxy manages a reference count for the proxy, a pointer to the bridge of the UNO proxy to obtain the counterpart mapping, the C++ interface the UNO proxy delegates calls to, the (interface) type the UNO proxy is emulating, and an object identifier (oid). The type and object identifier are needed to manage objects from environments, for proof of object identity, and to improve performance. A proxy to an interface is not needed if there is already a registered proxy for that interface.

When the call to a method in the wrapped C++ interface is executed, the call is directed to the UNO proxy. Figure 11 is a process flow diagram of one embodiment of the operations performed by the UNO proxy. One example of computer code for this embodiment is presented in TABLE 16.

TABLE: 109.: EXAMPLE OF A METHOD dispatch USED BY A UNO PROXY WRAPPING A C++ INTERFACE

```
void SAL_CALL cppu_unoInterfaceProxy_dispatch(
    uno_Interface * pUnoI, const
    typelib_TypeDescription * pMemberDescr, void *
    pReturn, void * pArgs[], uno_Any ** ppException )
{
// is my surrogate
cppu_unoInterfaceProxy * pThis = static_cast<
    cppu_unoInterfaceProxy * >( pUnoI );
typelib_InterfaceTypeDescription * pTypeDescr = pThis-
    >pTypeDescr;


switch (pMemberDescr->eTypeClass)
    {
case typelib_TypeClass_INTERFACE_ATTRIBUTE:
    {
// determine vtable call index
sal_Int32 nMemberPos =
    ((typelib_InterfaceMemberTypeDescription
    *)pMemberDescr)->nPosition;
OSL_ENSHURE( nMemberPos < pTypeDescr->nAllMembers, "###
    member pos out of range!" );
sal_Int32 nVtableCall = pTypeDescr-
    >pMapMemberIndexToFunctionIndex[nMemberPos];
OSL_ENSHURE( nVtableCall < pTypeDescr-
    >nMapFunctionIndexToMemberIndex, "### illegal
    vtable index!" );
typelib_TypeDescriptionReference * pRuntimeExcRef = 0;
```

```
if (pReturn)
        {
// dependent dispatch
cpp_call( pThis, nVtableCall,
      ((typelib_InterfaceAttributeTypeDescription
      *)pMemberDescr)->pAttributeTypeRef,
        0, 0, // no params
        1, &pRuntimeExcRef, // RuntimeException
        pReturn, pArgs, ppException );
        }
else
        {
// is SET
typelib_MethodParameter aParam;
aParam.pTypeRef =
      ((typelib_InterfaceAttributeTypeDescription
      *)pMemberDescr)->pAttributeTypeRef;
aParam.bIn          = sal_True;
aParam.bOut         = sal_False;
typelib_TypeDescriptionReference * pReturnTypeRef = 0;
OUString aVoidName( RTL_CONSTASCII_USTRINGPARAM("void")
      );
Typelib_typedescriptionreference_new(&pReturnTypeRef,
      typelib_TypeClass_VOID, aVoidName.pData );

// dependent dispatch
cpp_call( pThis, nVtableCall +1, // get, then set
      method
         pReturnTypeRef,
         1, &aParam,
         1, &pRuntimeExcRef,
         pReturn, pArgs, ppException );
typelib_typedescriptionreference_release(
      pReturnTypeRef );
        }
break;
```

```
        }
case typelib_TypeClass_INTERFACE_METHOD:
        {
// determine vtable call index
sal_Int32 nMemberPos =
        ((typelib_InterfaceMemberTypeDescription
        *)pMemberDescr)->nPosition;
OSL_ENSHURE( nMemberPos < pTypeDescr->nAllMembers, "###
        member pos out of range!" );
sal_Int32 nVtableCall = pTypeDescr-
        >pMapMemberIndexToFunctionIndex[nMemberPos];
OSL_ENSHURE( nVtableCall < pTypeDescr-
        >nMapFunctionIndexToMemberIndex, "### illegal
        vtable index!" );
switch (nVtableCall)
                {
// standard calls
        case 1: // acquire uno interface
(*pUnoI->acquire)( pUnoI );
*ppException = 0;
break;
        case 2: // release uno interface
(*pUnoI->release)( pUnoI );
*ppException = 0;
break;
        case 0: // queryInterface() opt
                {
typelib_TypeDescription * pTD = 0;
TYPELIB_DANGER_GET( &pTD, reinterpret_cast< Type * >(
        pArgs[0] )->getTypeLibType() );
OSL_ASSERT( pTD );
uno_Interface * pInterface = 0;
(*pThis->pBridge->pUnoEnv-
        >getRegisteredInterface)(pThis->pBridge->pUnoEnv,
        (void **)&pInterface, pThis->oid.pData,
        (typelib_InterfaceTypeDescription *)pTD );
```

```
if (pInterface)
                {
uno_any_construct( reinterpret_cast< uno_Any * >(
    pReturn ), &pInterface, pTD, 0 );
(*pInterface->release)( pInterface );
TYPELIB_DANGER_RELEASE( pTD );
*ppException = 0;
break;
                }
TYPELIB_DANGER_RELEASE( pTD );
        } // else perform queryInterface()
default:
// dependent dispatch
cpp_call( pThis, nVtableCall,
    ((typelib_InterfaceMethodTypeDescription
    *)pMemberDescr)->pReturnTypeRef,
    ((typelib_InterfaceMethodTypeDescription
    *)pMemberDescr)->nParams,
    ((typelib_InterfaceMethodTypeDescription
    *)pMemberDescr)->pParams,
    ((typelib_InterfaceMethodTypeDescription
    *)pMemberDescr)->nExceptions,
    ((typelib_InterfaceMethodTypeDescription
    *)pMemberDescr)->ppExceptions,  pReturn, pArgs,
    ppException );
        }
break;
    }
default:
    {
::com::sun::star::uno::RuntimeException aExc(OUString(
    RTL_CONSTASCII_USTRINGPARAM("illegal member type
    description!") ),pThis->pCppI );
typelib_TypeDescription * pTD = 0;
const Type & rExcType = ::getCppuType( (const
    ::com::sun::star::uno::RuntimeException *)0 );
```

```
TYPELIB_DANGER_GET( &pTD,
    rExcType.getTypeLibType() );
uno_any_construct( *ppException, &aExc, pTD,
0 );
TYPELIB_DANGER_RELEASE( pTD );
    }
    }
}
```

Method call check 1101 of method dispatch 1100 determines whether the call is a method call. If the call is a method call processing transfers to acquire/release check operation 1110, and otherwise to attribute get check operation 1120.

Acquire/release check operation 1110 branches to acquire/release call operation 1111 if the method call is a call to either method acquire or method release, because these calls can be executed without calling the interface in the second environment. If the method call is not a call to either method acquire or method release, processing transfers from check operation 1110 to query interface check operation 1112. Acquire/Release call operation 1111 performs the appropriate method, which is a non-virtual call, and returns.

Query interface check operation 1112 determines whether the method call is to method queryInterface. If the method call is not to method queryInterface, check operation 1112 transfers to call Env2_to_Env1 with Interface operation 1130 and otherwise transfers to registered interface available check operation 1113.

If there is a registered interface in the source environment for method queryInterface, check operation 1113 transfers to set return value operation 1114 and otherwise to call Env2_to_Env1 with Interface operation 1130. Set return value operation 1114 sets the registered interface as the return value and returns.

If the call to the C++ proxy was not a method call, check operation 1101 transfers to attribute get check operation 1120. In this embodiment, there is either an attribute get or an attribute set. If the call to the UNO proxy is an attribute get, check operation 1120 transfers to prepare attribute get call operation 1121 and otherwise transfers to prepare attribute set call operation 1122. Both operations 1121 and 1122 set up the parameters for the call and transfer to call Env2_to_Env1 with Interface operation 1130. The call is given the C++ interface pointer, a vtable index, and all parameters necessary to perform the C++ virtual function call.

An embodiment of method Env2_to_Env1 with interface for the UNO proxy is presented in Table 17. Figure 12 is a process flow diagram for one embodiment of method Env2_to_Env1 with interface.

TABLE 110.:  EXAMPLE of METHOD Env2_to_Env1 with interface FOR THE UNO PROXY

```
    namespace CPPU_CURRENT_NAMESPACE
    {
inline static void cpp_call(cppu_unoInterfaceProxy *
    pThis,  sal_Int32 nVtableCall,
    typelib_TypeDescriptionReference * pReturnTypeRef,
    sal_Int32 nParams, typelib_MethodParameter *
    pParams,  sal_Int32 nExceptions,
    typelib_TypeDescriptionReference **
    ppExceptionRefs,  void * pUnoReturn, void *
    pUnoArgs[], uno_Any ** ppUnoExc )
{
// max space for: [complex ret ptr], values|ptr ...
char * pCppStack = (char *)alloca( sizeof(sal_Int32) +
    (nParams * sizeof(sal_Int64)) );
char * pCppStackStart    = pCppStack;
// return
typelib_TypeDescription * pReturnTypeDescr = 0;
TYPELIB_DANGER_GET( &pReturnTypeDescr, pReturnTypeRef
    );
OSL_ENSHURE( pReturnTypeDescr, "### expected return
    type description!" );
// if != 0 && != pUnoReturn, needs reconversion
void * pCppReturn = 0;
if (pReturnTypeDescr)
{
if (cppu_isSimpleType( pReturnTypeDescr ))
{
pCppReturn = pUnoReturn; // direct way for simple types
}
else
{
```

```
// complex return via ptr
// direct way
pCppReturn = *(void **)pCppStack =
        (cppu_relatesToInterface( pReturnTypeDescr )  ?
        alloca( pReturnTypeDescr->nSize )  : pUnoReturn);
pCppStack += sizeof(void *);
}
}
// stack space
OSL_ENSHURE( sizeof(void *) == sizeof(sal_Int32), "###
        unexpected size!" );
// args
void ** pCppArgs  = (void **)alloca( 3 * sizeof(void *)
        * nParams );
// indices of values thats have to be converted
//  (interface conversion cpp<=>uno)
sal_Int32 * pTempIndizes = (sal_Int32 *)(pCppArgs +
        nParams);
// type descriptions for reconversions
typelib_TypeDescription ** ppTempParamTypeDescr =
        (typelib_TypeDescription **)(pCppArgs + (2 *
        nParams));
sal_Int32 nTempIndizes   = 0;
for ( sal_Int32 nPos = 0; nPos < nParams; ++nPos )
{
const typelib_MethodParameter & rParam = pParams[nPos];
typelib_TypeDescription * pParamTypeDescr = 0;
TYPELIB_DANGER_GET( &pParamTypeDescr, rParam.pTypeRef
        );
if (!rParam.bOut && cppu_isSimpleType( pParamTypeDescr
        ))
{
uno_copyAndConvertData( pCppArgs[nPos] = pCppStack,
        pUnoArgs[nPos], pParamTypeDescr,  &pThis->pBridge-
        >aUno2Cpp );
switch (pParamTypeDescr->eTypeClass)
```

```
{
case typelib_TypeClass_HYPER:
case typelib_TypeClass_UNSIGNED_HYPER:
case typelib_TypeClass_DOUBLE:
pCppStack += sizeof(sal_Int32); // extra long
}
// no longer needed
TYPELIB_DANGER_RELEASE( pParamTypeDescr );
}
else // ptr to complex value | ref
{
if (! rParam.bIn) // is pure out
{
// cpp out is constructed mem, uno out is not!
uno_constructData(  *(void **)pCppStack =
    pCppArgs[nPos] = alloca( pParamTypeDescr->nSize ),
    pParamTypeDescr );
pTempIndizes[nTempIndizes] = nPos;
// default constructed for cpp call
// will be released at reconversion
ppTempParamTypeDescr[nTempIndizes++] = pParamTypeDescr;
}
// is in/inout
else if (cppu_relatesToInterface( pParamTypeDescr ))
{
uno_copyAndConvertData(  *(void **)pCppStack =
    pCppArgs[nPos] = alloca( pParamTypeDescr->nSize ),
    pUnoArgs[nPos], pParamTypeDescr,  &pThis->pBridge-
    >aUno2Cpp );
pTempIndizes[nTempIndizes] = nPos;
// has to be reconverted
// will be released at reconversion
ppTempParamTypeDescr[nTempIndizes++] = pParamTypeDescr;
}
else // direct way
{
```

```
*(void **)pCppStack = pCppArgs[nPos] = pUnoArgs[nPos];
// no longer needed
TYPELIB_DANGER_RELEASE( pParamTypeDescr );
}
}
pCppStack += sizeof(sal_Int32); // standard parameter
      length
}
// only try-finally/ try-except statements possible...
__try
{
__try
{
// pCppI is msci this pointer
callVirtualMethod(   pThis->pCppI, nVtableCall,
     pCppReturn, pReturnTypeDescr->eTypeClass,
     (sal_Int32 *)pCppStackStart, (pCppStack -
     pCppStackStart) / sizeof(sal_Int32) );
// NO exception occured...
*ppUnoExc = 0;
// reconvert temporary params
while (nTempIndizes--)
{
sal_Int32 nIndex = pTempIndizes[nTempIndizes];
typelib_TypeDescription * pParamTypeDescr =
     ppTempParamTypeDescr[nTempIndizes];
if (pParams[nIndex].bIn)
{
if (pParams[nIndex].bOut) // inout
{
uno_destructData( pUnoArgs[nIndex], pParamTypeDescr, 0
     ); // destroy uno value
uno_copyAndConvertData( pUnoArgs[nIndex],
     pCppArgs[nIndex], pParamTypeDescr,  &pThis-
     >pBridge->aCpp2Uno );
}
```

```
        }
        else // pure out
        {
        uno_copyAndConvertData( pUnoArgs[nIndex],
            pCppArgs[nIndex], pParamTypeDescr,  &pThis-
            >pBridge->aCpp2Uno );
        }
        // destroy temp cpp param => cpp: every param was
        // constructed
        uno_destructData( pCppArgs[nIndex], pParamTypeDescr,
            cpp_release );
        TYPELIB_DANGER_RELEASE( pParamTypeDescr );
        }
        // return value
        if (pCppReturn && pUnoReturn != pCppReturn)
        {
        uno_copyAndConvertData( pUnoReturn, pCppReturn,
            pReturnTypeDescr,
        &pThis->pBridge->aCpp2Uno );
        uno_destructData( pCppReturn, pReturnTypeDescr,
            cpp_release );
        }
        }
        __except (msci_filterCppException(
            GetExceptionInformation(),   *ppUnoExc, &pThis-
            >pBridge->aCpp2Uno ))
        {
        // *ppUnoExc is untouched and any was constructed by
        // filter function __finally block will be called
        return;
        }
        }
        __finally
        {
        // cleanup of params was already done in reconversion
        // loop if no exception occured;  this is quicker than
```

```
// getting all param descriptions twice!  so cleanup
// only if an exception occured:
if (*ppUnoExc)
{
// temporary params
while (nTempIndizes--)
{
sal_Int32 nIndex = pTempIndizes[nTempIndizes];
// destroy temp cpp param => cpp: every param was
// constructed
uno_destructData( pCppArgs[nIndex],
    ppTempParamTypeDescr[nTempIndizes], cpp_release );
TYPELIB_DANGER_RELEASE(
    ppTempParamTypeDescr[nTempIndizes] );
}
}
// return type
if (pReturnTypeDescr)
TYPELIB_DANGER_RELEASE( pReturnTypeDescr );
    }
    }
```

In Figure 12, read parameters operation 1201 reads the parameters from the call. Read parameters operation 1201 transfers to convert parameters operation 1202. Convert parameters operation 1202 converts the parameters read to the C++ environment. A C++ call stack is built in memory. All simple types, up to eight bytes are put directly on the stack, and all other types are referenced by a pointer. Operation 1202 transfers to allocate memory operation 1203. Allocate memory operation 1203 allocates memory for the out parameters returned by the call to the C++ interface, and for the return value.

Allocate memory operation 1203 transfers processing to dispatch call operation 1204.

Dispatch call operation 1204 performs a C++ virtual call on the C++ interface. In one embodiment, method callVirtual, an assembly function performing the specific virtual call having the right registers set (See Table 18), is called and passed an array that is the call stack. The call is executed in the C++ environment and the results, if any, are returned to operation 1204 that in turn transfers to exception check operation 1205.

Exception check operation 1205 determines whether an exception was thrown in response to the call. If an exception was thrown, check operation 1205 transfers processing to convert exception operation 1210 and otherwise processing transfers to set exception operation 1220.

Convert exception operation 1210 converts the C++ exception to the UNO environment, and sets an exception out any with the converted exception. Operation 1210 transfers to clean up operation 1211 that in turn cleans up any temporary parameters that were created in the call in operation 1204 and transfers to return to operation 1130.

If an exception was not thrown in the source environment, set exception operation 1220 sets the exception out any to zero, and transfers to convert parameters operation 1221.

Convert parameters operation 1221 converts any parameters that were returned from operation 1204, e.g., out parameters and/or inout parameters, from the source environment, i.e., the C++ environment, to the destination environment, i.e., the UNO environment. Operation 1221 also cleans up any temporary parameters that were created in the call in operation 1204 and transfers to convert return value operation 1222. Operation 1222 converts any return value from the source environment to the destination environment so that both the return value and any returned parameters are written back, in this example to the UNO caller.

TABLE 111.: AN EXAMPLE OF A METHOD callVirtualMethod
THAT IS USED BY THE UNO PROXY TO DISPATCH A CALL TO THE
INTERFACE IN THE C++ ENVIRONMENT

```
    inline static void callVirtualMethod( void *
pThis, sal_Int32 nVtableIndex,  void * pRegisterReturn,
typelib_TypeClass eReturnTypeClass,  sal_Int32 *
pStackLongs, sal_Int32 nStackLongs )
    {
    // parameter list is mixed list of * and values
    // reference parameters are pointers
    OSL_ENSHURE( pStackLongs && pThis, "### null ptr!"
);
    OSL_ENSHURE( (sizeof(void *) == 4) &&
(sizeof(sal_Int32) == 4), "### unexpected size of int!"
);
    __asm
    {
        mov        eax, nStackLongs
        test       eax, eax
        je         Lcall
```

```
// copy values
        mov         ecx, eax
        shl         eax, 2      // sizeof(sal_Int32)
    == 4
        add         eax, pStackLongs // params stack
    space
Lcopy:      sub         eax, 4
        push        dword ptr [eax]
        dec         ecx
        jne         Lcopy
Lcall:
// call
        mov         ecx, pThis
        push        ecx                     // this ptr
        mov         edx, [ecx]          // pvft
        mov         eax, nVtableIndex
        shl         eax, 2          // sizeof(void *)
    == 4
        add         edx, eax
        call [edx]//interface method call must be
    __cdecl!
// register return
        mov         ecx, eReturnTypeClass
        cmp         ecx, typelib_TypeClass_VOID
        je          Lcleanup
        mov         ebx, pRegisterReturn
// int32
        cmp  ecx, typelib_TypeClass_LONG
        je   Lint32
        cmp  ecx, typelib_TypeClass_UNSIGNED_LONG
        je   Lint32
        cmp  ecx, typelib_TypeClass_ENUM
        je   Lint32
// int8
        cmp  ecx, typelib_TypeClass_BOOLEAN
        je   Lint8
```

```
        cmp   ecx, typelib_TypeClass_BYTE
        je    Lint8
// int16
        cmp   ecx, typelib_TypeClass_CHAR
        je    Lint16
        cmp   ecx, typelib_TypeClass_SHORT
        je    Lint16
        cmp   ecx, typelib_TypeClass_UNSIGNED_SHORT
        je    Lint16
// float
        cmp   ecx, typelib_TypeClass_FLOAT
        je    Lfloat
// double
        cmp   ecx, typelib_TypeClass_DOUBLE
        je    Ldouble
// int64
        cmp   ecx, typelib_TypeClass_HYPER
        je    Lint64
        cmp   ecx, typelib_TypeClass_UNSIGNED_HYPER
        je    Lint64
        jmp   Lcleanup // no simple type
    Lint8:
        mov   byte ptr [ebx], al
        jmp   Lcleanup
    Lint16:
        mov   word ptr [ebx], ax
        jmp   Lcleanup
    Lfloat:
        fstp dword ptr [ebx]
        jmp       Lcleanup
    Ldouble:
        fstp qword ptr [ebx]
        jmp       Lcleanup
    Lint64:
        mov       dword ptr [ebx], eax
        mov       dword ptr [ebx+4], edx
```

```
        jmp        Lcleanup
    Lint32:
        mov        dword ptr [ebx], eax
        jmp        Lcleanup
    Lcleanup:
    // cleanup stack (obsolete though because of
function)
        mov        eax, nStackLongs
        shl        eax, 2// sizeof(sal_Int32) == 4
        add        eax, 4                  // this ptr
        add        esp, eax
    }
    }
```

In the above description of the example, various methods were described and discussed. Figure 13A to 24 are specific examples of one embodiment of such methods. In particular, in Figs 13A and 13B, an embodiment of mapping an interface from the UNO environment to the C++ environment is presented. See Figure 4.

Fig. 14 is an example of a method free and a method for revoking the proxy. Method free is called indirectly by the C++ proxy described above when the reference count goes to zero and the C++ proxy should be deleted. Fig. 15 includes an example of a C++ proxy that includes a method acquireProxy; an example of a method releaseProxy that is used to revoke the C++ proxy from the C++ environment structure; and a method ccpu_cppInterfaceProxy to instantiate, acquire and register the C++ proxy.

Figs. 16A and 16B include an example of a method free that is called indirectly by the UNO proxy described above when the reference count goes to zero and the UNO proxy should be deleted; an example of a method acquire that is used in acquiring the UNO proxy; and an example of a method release that is used to revoke the UNO proxy.

In Figs 17A and 17B, an embodiment of a method Mapping for mapping from the C++ environment to the UNO environment is presented. Figure 18 includes is a C++ implementation of the UNO proxy that includes a constructor cpu_unoInterfaceProxy to instantiate, acquire and register the UNO proxy; a method for acquiring a mapping and a method for releasing a mapping.

Figure 19 illustrates constructors for a mapping and a bridge; and a method for freeing a bridge. Figure 20 is an embodiment of methods for acquiring and releasing a bridge. Figure 21 includes a method cppu_ext_getMapping to create a mapping between two specified environments. Figure 22 is an embodiment of a method to create the static part of an object Id. The object id contains two parts, an object specific part and a static part. Figure 23 is an embodiment of a method to create a complete object Id, containing both, the object specific and the static parts. Figure 24 includes a method for acquiring a C++-uno environment; a method for releasing a C++-uno environment; and a method to initialize a C++-uno environment.

In the following, further embodiments of the invention will be described with respect to Figs. 25 - 38.

First, reference is made to Fig. 25. A first software program 251, created with any convenient programming language, for example C++, and compiled with a certain compiler for C++, uses a first binary specification. This first binary specification depends on both, the programming language and on the compiler. The first software program 251 may be, for example, able to present numbers in graphical form. In order to calculate the exact dimensions of the graphs the first software program 251 may want to employ a second software program 252, created with another programming language, for example Java, and compiled by using a certain compiler for Java. This second software program 252 uses the second binary specification for communication.

The use of the second software program 252 by the first software program 251 requires its initialization, for example, by calling a loader function 255. The second software program 252 may then initialize its sub-program 252a for creating the stub 254. The sub-program 252a must consider the limited functionality in order to arrive at the desired stub 254, namely a module for transforming commands and responses relating to the requested limited functionality. Based on this limited functionality, the sub-program 252a selects the relevant mappings of the bridge 257 between the second binary specification and the intermediate binary specification.

The first software program 251 may correspondingly initiate a sub-program 251a to create the proxy 253 in a similar way, by employing the bridge 256 between the first binary specification and the intermediate binary specification. This sub-program 251a may be informed about the limited functionality from the first software program 251. However, it may also know this limited functionality from the second software program 252 by communicating via the communication channel 258. This channel 258 may be any suitable real or virtual connection which allows the transfer of data.

After the stub 254 and proxy 253 have been created they are arranged so as to allow the communication between the first software program 251 and the second software program 252. Once this arrangement is effected the first software program 251 sends the command to be transformed to the proxy 253. The proxy 253 may transform this command from the first binary specification into the intermediate binary specification. This intermediate binary specification corresponds, for example, to the binary UNO specification. The proxy 253 may transmit this command in the intermediate binary specification to the stub 254. The stub 254 may transform the command from the intermediate binary specification into the second binary specification and may transmit the command then to the second software program 252.

The second software program 252 may execute the command, for example, the command to calculate the dimensions of a graph and may generate a response for the first software program 251. This response may be transformed and transmitted by the stub 254 and the proxy 253 from the second software program 252 to the first software program 251.

The arrows shown in Fig. 25 between the first software program 251, the proxy 253, the stub 254, the second software program 252 and the loader function 255 show the possible routes of communication. The arrows between the proxy 253 and the bridge 256 and between the stub 254 and the bridge 257 represent the contribution of the bridges 256 and 257 to the creation of the proxy 253 and the stub 254, respectively.

Fig. 26 represents an example for the initial communication of a first software program 251 and a second software program 252. The initial communication between the two software programs 251, 252 is carried out, before the creation of the stub 254 and of the proxy 253 is initiated. Due to the different binary specifications used by the two software programs 251, 252, namely the first and the second binary specification, this initial communication will regularly be extremely limited. It may be effected as explained exemplary in the following.

In a first step 2600 the first software program 251 may call a loader function 255 for the second software program 252. The loader function 255 may be any known loader function for this second software program 252. A loader function for a program is a software module which "wakes up" this program so that it carries out certain functions. Herein, the loader function may be addressed in one binary specification and may wake up a program using a different binary specification. However, the loader function is not suited to provide any detailed communication between programs using different binary specifications.

The loader function 255 may be used by the first software program 251 from the beginning. This is the case, if the first software program 251 knows or assumes that the second software program 252 does not use the same binary specification as itself, namely the first binary specification. If this knowledge is not present in the first software program 251, it may simply try to call the second software program assuming that it will understand the first binary specification. In this case, the first software program 251 may only employ the loader function 255 if the direct communication with the second software program 252 fails and a corresponding message is returned to the first software program 251.

In the calling step 2600 the first software program 251 informs the loader function 255 about the limited functionality requested from the second software program 252. Therefore, the loader function 255 must be suited to receive and carry this information. In order to provide this information to the loader function 255 the first software program 251 may hand over to the loader function 255 the command to be carried out by the second software program 252, so that the second software program 252 may, on receipt of the call of the loader function 255 decide itself which functionality is needed, or the first software program 251 may provide the loader function 255 directly with the description of a limited functionality of the second software program 252 which will be required by the first software program 251.

In step 2601 the loader function 255 contacts and initializes a reception function of the second software program 252 to be able to transmit in the next step 2602 its information about the limited functionality required from the second software program 252. In the next step 2603 the second software program 252 analyses the information received from the loader function 255 regarding the required limited functionality. After the analysis of the limited functionality required the second software program 252 initializes the creation of a stub 254.

Fig. 27 shows the creation of a stub 254. The stub 254 has the task to transform commands sent by first software program 251 to the second software program 252 from the intermediate binary specification into the second binary specification used by the second software program 252 and to transform responses sent by the second software program 252 back to the first software program 251 from the second binary specification into the intermediate binary specification. Furthermore, the stub 254 may be assigned the task to transmit the transformed commands or responses to the recipients, the second software program 252 or the proxy 253, respectively.

In step 2700 the second software program 252 may initialize a sub-program 252a for creating the stub 254. This sub-program 252a may be an integral part of the second software program 252 or it may be as well a separate independent software module which can be used by this and potentially any other second software program 252. Accordingly, the sub-program 252a may be stored on the computer system or storage device on which the second software program 252 is stored. However, the sub-program 252a may also be stored on another computer system or storage device to which the second software program 252 has access.

In step 2701 the sub-program 252a receives from the second software program 252 a description of the limited functionality required from the second software program 252. Then, in step 2702 the bridge 257 between the second binary specification used by the second software program 252 and the intermediate binary specification is contacted. This bridge 257 provides a mapping of at least all basic commands between the mentioned two binary specifications. It may be stored at any place accessible for the sub-program 252a. In many cases there may exist a library with bridges for a number of second binary specifications, assuming that the intermediate binary specification used would be the same for all intended operations.

From the selected bridge 257 the sub-program 252a chooses in step 2703 the mappings necessary to use the required limited functionality of the second software program 252. This means all transformations, but not more than these, must be selected which are required to transform commands and responses which could arise when using the relevant functionality. Finally, in step 2704 the sub-program 252a creates the stub 254 based on the chosen mappings.

Fig. 28 represents in the form of a flow chart the creation of the proxy 253. The proxy 253 has the task to transform commands and responses between the first binary specification and the intermediate binary specification. It is insofar similar to the stub 254 which has, as it was described above, the task to render these transformations between the second binary specification and the intermediate binary specification.

In step 2800 the first software program 251 may initialize a sub-program 251a for creating the proxy 253. This sub-program may be an integral part of the first software program 251, but may as well be separate and independent from it. The sub-program 251a may be accessible for a larger number of first software programs 251. In step 2801 the sub-program 251a receives from the first software program 251 information regarding the limited functionality required from the second software program 252. This information may be provided by passing on the actual command the first software program 251 plans to send to the second software program 252, so that the sub-program 251a may derive from this command the information about the limited functionality, or the first software program 251 may provide the sub-program 251a with a description of the limited functionality.

In an alternative embodiment the description of the limited functionality may be received from the sub-program 252a for creating the stub 254. The sub-program 252a has the required description, because it has to create the stub 254 according to the same description. The description may be exchanged between the sub-program 252a and the sub-program 251a by any suitable means of communication.

In yet an alternative embodiment the description of the limited functionality of the second software program 252 may be derived directly by mapping the stub 254 into the first binary specification, in order to create a proxy. This is possible, because the stub 254 reflects the required limited functionality in listings between the second binary specification and the intermediate binary specification which are necessary for the transformation of commands and responses. Therefore, the intermediate binary specification side of the listings of the stub 254 may be taken as the starting point for the creation of the proxy 253, which is completed by adding the corresponding parts of the listing in the first binary specification, as will be explained below.

In step 2802 the sub-program 251a contacts the bridge 256, which provides a mapping of basic commands of the first binary specification and the intermediate binary specification, and builds, in step 2803, the desired proxy 253.

The proxy 253 and stub 254 are then arranged to allow the desired communication between the first software program 251 and the second software program 252, as it will be described in the following along the flow chart of Fig. 29. The arrangement of proxy 253 and stub 254 requires that the path of exchanging transformed commands and responses between the proxy 253 and the stub 254 is defined.

Therefore, in step 2900 the second software program 252 informs the first software program 251 about the address information necessary to contact the stub 254 via the communication line 258. The communication line 258 may consist of a simple data line for transmitting binary address information which can be understood from the first software program 251 without being able to use the second binary specification in which the second software program 252 communicates.

The first software program 251 provides, in step 2901, the sub-program 251a with this received address information, which, in step 2902, is passed on to the proxy 253. The proxy 253 then contacts, for the first time in step 2903, the stub 254, the address of which is now known. In step 2903 the proxy 253 will also transmit its own address information to the stub 254, thereby allowing the stub 254 to contact the proxy 253. Herewith, the proxy 253 and the stub 254 are arranged for communication, that means they can send and receive commands and responses to commands. This arranging step is also referred to as binding.

Fig. 30 shows a computer system 300 which may be used in the scope of the present invention. The computer system 300 comprises an i-/o-interface 301, a central processing unit (CPU) 302 and memory 303. It is connected to an external memory 304 on which mass data may be stored as well as software programs. Furthermore, the computer system 300 is connected via the i-/o-interface 301 to an output device 305, for example, a screen, and to an input device 306, for example, a keyboard.

The inventive method may be applied in the shown standard computer system. The first software program 251 and the second software program 252 may be stored in the internal memory 303 of the computer system 300, as well as on its external memory 304. It is also possible that one of the programs is stored on the internal memory 303 and the other is stored on the external memory 304. The proxy 253 and the stub 254 may be created by means of the CPU 302.

The method according to the present invention may also be implemented and used on more than one computer system, for example, in a network or in a client-server system, as it is shown exemplary in Fig. 31.

Fig. 31 shows a client 310 which is connected to a server 311. This connection may be a data line 312, including any kind of permanent or temporary network, like, for example, the internet. It is understood that, instead of only one client, there may be a large number of clients connected to the server. In the scope of the present invention the first software program 251 may, for example, be stored on client 310, while the second software program 252 may be stored on server 311. The exchange of commands and responses may be effected via data line 312. For example, the bridges 256 and 257, as well as any other potentially needed bridges may be stored in one or more libraries on the server 311. The sub-programs 251a and 252a may also be stored on the server 311. In case the sub-program 251a is needed the client 310 may request from the server 311 its transmission via data channel 312.

It is understood that the present invention may also be implemented in a variety of embodiments. In the following one embodiment of the present invention is described in more detail along Figures 32 to 35 and Tables 1 and 2.

*Creation of stub and proxy:*

In response to a call of a first software program a proxy and a stub will be created in the so-called proxy factory and the stub factory, respectively. In order to create a proxy and a stub three tasks have to be carried out. First, the first software program using the first binary specification has to be enabled to communicate with to the second software program using the second binary specification. Second, the stub factory has to create a uno_interface implementation considering the second binary specification based on the limited functionality which delivers all calls directed to the second software program to this second software program. This uno_interface is program code which is defined for the limited functionality. For the generation of the uno_interface implementation the stub factory employs information in the form of a type description. This uno_interface implementation is also referred to as the stub. Third, the proxy factory has to create a uno_interface implementation for the first binary specification. The proxy factory generates its uno_interface implementation based on the information of the type description. This uno_interface implementation is referred to as the proxy.

The knowledge of the type description is necessary to create the stub and the proxy, as described. This type description is the full description of the limited functionality, also called interface. It contains the information about the required limited functionality of the second software program which shall be used by the first software program. The type description may refer to different types shown in Table 1.

Table 1:

| *Type* | *UNO* | *C++* | *Java* |
|---|---|---|---|
| Byte | Signed 8 Bit | Signed 8 Bit | Signed 8 Bit |
| Short | Signed 16 Bit | Signed 16 Bit | Signed 16 Bit |
| Ushort | Unsigned 16 Bit | Unsigned 16 Bit | Signed 16 Bit |
| Long | Signed 32 Bit | Signed 32 Bit | Signed 32 Bit |
| Ulong | Unsigned 32 Bit | Unsigned 32 Bit | Signed 32 Bit |
| Hyper | Signed 64 Bit | Signed 64 Bit | Signed 64 Bit |
| Uhyper | Unsigned 64 Bit | Unsigned 64 Bit | Signed 64 Bit |

Table 1: (continued)

| Type | UNO | C++ | Java |
|------|-----|-----|------|
| Float | Processor dependent: Intel, Sparc = IEEE float | Processor dependent: Intel, Sparc = IEEE float | IEEE float |
| Double | Processor dependent: Intel, Sparc = IEEE double | Processor dependent: Intel, Sparc = IEEE double | IEEE double |
| Enum | The size of an machine word. Normally this is the size of an integer. | The size of an machine word. Normally this is the size of an integer. | All enum values of one enum declaration are static object of a class. Each object contains a 32 bit value which represents the enumeration value. |
| Boolean | 1 Byte. | 1 Byte. | Boolean |
| Char | 16 Bit on WNT, W95, W98, Os2. 32 Bit on Unix | 16 Bit on WNT, W95, W98, Os2. 32 Bit on Unix | Unsigned 16 bit (char) |
| String | A pointer to a structure which have the following members: long refCount; long length, wchar_t buffer[..]; The string in buffer is 0 terminated This is the rtl_wString structure in the rtl-library | A pointer to a structure which have the following members: long refCount; long length; wchar_t buffer[...]; The string in buffer is 0 terminated. This is the rtl_wString structure in the rtl-library | java.lang.String" |
| Structure | The structure contains the members in the order of the declaration. The memory layout is described at the beginning of this chapter. | The structure contains the members in the order of the declaration. The memory layout is described at the beginning of this chapter. | A class which is derived from java.lang.Object" and contains members in the specified order. |
| Union | The size is 4 + size of the largest type. In front of the union members are a long value (nSelect) which describes the position of the valid member (0 is the first). | The size is 4 + size of the largest type. In front of the union members are a long value (nSelect) which describe the position of the valid member (0 is the first). | Not specified yet |
| Sequence | A pointer to a structure which has the following members: void pElements; long nElements, long nRefCount; The pElements are a memory area that | A pointer to a structure which has the following members: void* pElements; long nElements; long nRefCount; The pElements are a memory area that | It is a normal Java array. |

Table 1: (continued)

| Type | UNO | C++ | Java |
|------|-----|-----|------|
| | contains nElements elements. | contains nElements elements. | |
| Exception | Looks like a structure | Looks like a structure | A class which is derived from java.lang.Exception" and contains the members in the specified order. |
| Interface | The interface is a pointer to a function table, which contains 3 functions, | It is a pointer to a C++-Class which implements first the virtual methods queryinterface, acquire and release. | It is a normal Java interface. |
| Any | This is a structure that contains a pointer to a type description. The second member is a pointer to the value stored in the any. | This is a structure that contains a pointer to a type description. The second member is a pointer to the value stored in the any. | A class which is derived from java.lang.Object". The members are a class, which describe the type of the value. A second member which is the value of the any. |
| Void | No memory representation | No memory representation | No memory representation |

Many of these types are self-explaining and known in the art. Nevertheless, the most relevant types of the type description will be explained in more detail below.

"Interfaces": All interfaces employed in connection with the present embodiment are derived from a Super-Interface. Each interface contains at least three methods. The two methods "acquire" and "release" are necessary to control the lifetime of the interface. The third method "queryInterface" is used to navigate between different Interfaces. A XInterface includes only these three methods. All other interfaces are derived from this XInterface. The methods and functionalities requested by the first software program will be part of the interface.

In Java, for example, interfaces are mapped to Java interfaces which could be normally implemented. The methods acquire and release are not mapped to the Java program since this methods do not exist in Java. The lifetime of the proxy, the stub and the relevant information in the second program will be controlled by a garbage collector. The programming language Java delivers basic types by value and non-basic types by reference. All calls are specified by value except interfaces. So in Java all non-basic types returned or delivered through out parameters are by value, which means that the implementation must copy it before return or deliver.

In C++, for example, interfaces are mapped to pure virtual classes. In order to automatically control the lifetime of interfaces a template called "Reference" will be used. All return, parameter and member types are "References" (e. g.: Reference< XInterface >). The "Reference" acquires the interface when it is constructed and releases the interface when it is destructed.

"Structure": A structure is a collection of elements. The type of each element is fixed and it cannot be changed. The number of elements is fixed.

"Exceptions": An exception is a program control construct beside the normal control flow. One major feature of exceptions is, that it is simpler to implement the error handling. Exceptions are similar to structures since they are also a collection of elements and each type of each element is fixed and cannot be changed and the number of elements is also fixed. An additional feature of exceptions is that they can be thrown by a method. All exceptions which can be thrown by a method must be declared at the method, except for the called "RuntimeException" which always can occur. All exceptions must be derived from "Exception". If an exception is declared at a method it is allowed to throw all derived exceptions. The caller of a method must respond to this behavior.

In Java, for example, all exceptions are derived from the "java.lang.Exception". The exceptions are declared at the methods.

In C++, for example, the exceptions are generated as structures. An exception is thrown as instance (e.g.: throw RuntimeException()). At the other side the exception should be caught as reference (...catch(RuntimeException & ) { ... }).

"Union": A union contains one element. The declaration of a union specifies the possible types.

"Array": An array contains any number of elements. The type of the elements is fixed and cannot be changed.

"Any": An any contains one element. All types of elements are possible. An any contains a reference to the value and the type description of the type. With the type description the bridge can transform the value, if necessary.

In Java the any is, for example, represented by the class "Any", which contains a class as type description and a "java.lang.Object", which is the value. The basic types are wrapped to their proper classes. For example, a boolean value is an object of the class "java.lang.Boolean", which contains the value.

In C++ the any is represented through the class "Any". Each type generated by a C++ codemaker implements an function "getCppuType". This function is used to implement the template access operators "<<=" and ">>=". These operators insert and extract the value of the any.

"Sequence": A sequence is a generic data type. It contains the number of elements and the elements. In Java the specification of an array fulfills this specification. This is not true for C++. The array in C++ does not contain the number of elements. It is not possible to return a C++-array, e.g. Char[] getName() is not possible. It is difficult to manage the lifetime between the called and the caller, if only a pointer is returned. Therefore, in C++ a sequence is a template with the name "Sequence". The implementation contains a pointer to a structure which contains a pointer to the elements, the number of elements and the reference count. So it holds the binary specification. It is cheap to copy this sequence, because only the reference count is incremented.

The type description may exist or it may be runtime created. Each existing type is stored in a type repository along with the corresponding type description. The types of the type description are accessible through the full name of each type in the type repository. For example, the full name of the type "Xinterface" may be "com.sun.star.Xinterface".

In a type repository the types needed for any type description are stored in any appropriate way. If the API (application program interface) of the type repository is c-style, it is directly, that means via a binary representation, accessible from many binary specifications and it is quickly transferable. Since the type description of each element may be used during the generic marshaling of a call, the access performance of the type repository API is critical. Therefore, it is useful to use c-style structures, which describe each type. In addition, there may be interfaces declared which specify the access to the type repository. The module of this interface is "com.sun.star.typelib".

All functions or type declarations have the prefix "typelib_". All elements are reference counted. All elements start with the structure "typelib_TypeDescription". It is possible to cast all descriptions to this type. The function typelib typedescription newInterface will be used to create an interface description. The descriptions of structures, unions and sequences are created with the function typelib_typedescription_new. The description of the base type is initially part of the type repository. The function to get a type description is typelib_typedescription_getByName.

The Java API to the type repository is different for two reasons. First, Java cannot access the binary representation of the type descriptions directly. Second, the Java runtime system provides an API (core reflection) similar to the type repository API. Unfortunately, the features "unsigned", "oneway" and "out parameters" are missing in this API. For this reason, additional information is written into the classes.

The representation of the types depends on the hardware, the language and the operating system. The base type is swapped, for example, if the processor has little or big endian format. The size of the types may vary depending on the processor bus size. The alignment is processor and bus dependent. The alignment of the data structure is defined through the following algorithm:

Structure members are stored sequentially in the order in which they are declared. Every data object has an alignment-requirement. For structures, the requirement is the largest of its members. Every object is allocated an *offset* so that *offset % alignment-requirement* == 0

If it is possible that the maximum alignment can be restricted (Microsoft C/C++ compiler, IBM C/C++ compiler) than the size maximum alignment is set to eight. Under this condition the alignment is set to min( n, sizeof( item ) ). The size is round up to the largest integral base type.

For the Microsoft and IBM C/C++ compiler the alignment of structure is set to eight using the "#pragma" statement. Table 1 shows the binary UNO, C++ and the Java types.

In order to address the proxy factory to generate the proxy the first binary specification has to be denominated. This will be a string, because it is extensible and the risk of double names is low. Then a tool for selecting the desired bridge is called. The first parameter for this tool is the "first binary specification" and the second parameter is the intermediate binary specification "UNO". Then a function is called for selecting the desired mapping of the bridge. The name of the function is, in this example, "getMappingFactory". A call to create a proxy in "objective c" will be "getMappingFactory ("objective_c", "uno")". The implementation of the function will search a shared library named "objective_cuno" to find the right library that contains the proxy factory. In Java the tool may search for a class of name "objective_cuno".

In order to create a stub merely the parameters of the function have to be changed, in our example to "getMappingFactory("uno", "objective_c")". A stub implements the uno_interface. In the dispatch function the stub must call the right method of the original object. This is simpler in a programming language like Java, which has a "core reflection API", than in a programming language like C++, which has no binary standard and no API to call virtual methods.

In creating a proxy the proxy factory must generate method code to implement each method specified in the interface to be created. The only information to do this is a type description of the interface. For example: In Java (1.1) a binary class file (*.class) must be generated and loaded with the class loader. In the absence of a loader which can directly load binary classes a loader has to be provided. In C++ virtual method tables must be generated which delegate each call to the uno_interface. In the absence of a binary C++ specification individual compilers (version, switch,...) may have to be explored in order to implement this.

The proxy and the stub factory employ bridges for the generation of the proxy and the stub, respectively. A bridge implements infrastructure to exchange interfaces between two environments and is bidirectional.

An environment contains all objects which suffices the same specification and lies in the same process address space. The environment is specific for a programming language and for a compiler. For example, an object resides in the "msci" environment, if it is implemented in C++ and compiled with the Microsoft Visual C++ compiler. It may also be session specific for some reason, e.g. when running multiple Java virtual machines in one process. In the latter case these virtual machines have to be distinguished. However, this case is not a common case.

Regularly, the environment is the area in which the same binary specification is employed. Therefore, the first software program and the second software program belong to different environments.

Each bridge is implemented in a separate shared library. The name of the library is a connection of two environment names with an underscore ('_') between the names. Each bridge library exports two functions called "uno_ext_getMapping" and "uno_initEnvironment". The first function is called to get the mappings.

In order to get a mapping uno_getMapping() has to be called. There is also a C++ class called cppu_Bridge which can be used with the source and destination environment names. The uno_ext_getMapping() call then receives its source and destination environments. The bridge library cannot be unloaded while any code of it is still needed. So both mappings and any wrapped interface (proxy) that is exported needs to modify a shared library wide reference count. If the shared library can be unloaded the reference count goes to zero.

The intention of an environment structure is to provide common functions like acquireInterface() and to know all proxy interfaces and their origins. This is specifically important because of the object identity of an interface. The proxy, the stub and the second program are defined to provide the same instance of the XInterface any time it is queried for it. This is important to test, if two interfaces belong to the same object (e.g. testing the source of an incoming event).

When interfaces are mapped around some environments in space, they must provide the same XInterface in each environment (e.g. in C++, equal XInterface pointers).

It is not recommended to only keep an eye on this object identity issue. It is well recommended to reuse any interface, i.e. rejecting the production of proxy interfaces as often as possible, because each constructed proxy interface leads to another indirection when called, and there will of course be many interfaces.

So an environment knows each wrapped interface (proxy) running in it and the origin of each of these interfaces. Table 2 shows the representation of an environment.

Table 2:

```
struct uno_Environment
{
        /**
         * a name for this environment
         */
        rtl_String * pName;
        /**
         * a  free  context  pointer,  that  can  be  used  for  specific  classes  of
environments,
         * e.g. a jvm pointer
         */
        void * pContext;
        /**
         * Acquires this environment.
         *<BR>
         * @param pAccess this access interface
         */
        void (SAL_CALL * acquire)( uno_Environment * pEnv );
        /**
         * Releases this environment;
         * last release of environment will revoke the environment from runtime.
         *<BR>
         * @param pAccess this access interface
         */
        void (SAL_CALL * release)( uno_Environment * pEnv );

        /**
         * Tests if two environments are equal.
         *<BR>
         * @param pEnv1 one environment
         * @param pEnv2 another environment
         */
        sal_Bool (SAL_CALL * equals)( const uno_Environment * pEnv1,
                                      const uno_Environment * pEnv2 );

        /**
         * You register internal and external interfaces via this method.
         * Internal interfaces are proxies that are used in an environment.
         * External interfaces are interfaces that are exported to another
         * environment, thus providing an object identifier for this task.
         * This can be called an external reference.
         * Interfaces are held weakly at an environment; they demand a final
         * revokeInterface()call for each interface that has been registered.
         *<BR>
         * @param pEnv this environment
         * @param ppInterface inout parameter for the registered interface
         * @param ppOId inout parameter for the corresponding object id
         * @param pTypeDescr type description of interface
         * @param acquire function to acquire an interface;
         * this function provides a boolean return
         * value to signal if the acquisition was successful (necessary for
         * proxy interfaces)
         */
        void (SAL_CALL * registerInterface)( uno_Environment * pEnv,
                                             void ** ppInterface,
                                             rtl_String ** ppOId,
                                             typelib_InterfaceTypeDescription      *
```

```
pTypeDescr,
                                         uno_regAcquireFunc acquire );
        /**
         * You have to revoke ANY interface that has been registered via this
method.
         *<BR>
         * @param pEnv this environment
         * @param pOId object id of interface to be revoked
         * @param pTypeDescr type description of interface to be revoked
         */
        void (SAL_CALL * revokeInterface)( uno_Environment * pEnv,
                               rtl_String * pOId,
                               typelib_InterfaceTypeDescription * pTypeDescr );


        /**
         * Retrieves an interface identified by its object id and type from
         * this environment.
         *<BR>
         * @param pEnv this environment
         * @param ppInterface inout parameter for the registered interface;
         * (0) if none was found
         * @param pOId object id of interface to be retrieved
         * @param pTypeDescr type description of interface to be retrieved
         */
        void (SAL_CALL * getRegisteredInterface)( uno_Environment * pEnv,
                                   void ** ppInterface,
                                   rtl_String * pOId,
                                   typelib_InterfaceTypeDescription       *
pTypeDescr );


        /**
         * Retrieves the object identifier for a registered interface from
         * this environment.
         *<BR>
         * @param pEnv this environment
         * @param ppOId inout parameter for object id of interface; (0) if none was
found
         * @param pInterface a registered interface
         * @param pTypeDescr type description of interface
         */
        void (SAL_CALL * getRegisteredObjectIdentifier)( uno_Environment * pEnv,
                                   rtl_String ** ppOId,
                                   void * pInterface,
                                   typelib_InterfaceTypeDescription       *
pTypeDescr );

        /**
         * Disposing callback function pointer that can be set to get signalled
before
         * the environment is destroyed.
         *<BR>
         * @param pEnv environment that is being disposed
         */
        void (SAL_CALL * environmentDisposing)( uno_Environment * pEnv );


        /**
         * Computes an object identifier for the given interface; is called by
         * the environment implementation.
         * <BR>
         * @param pEnv corresponding environment
         * @param ppOId out param: computed id
         * @param pInterface an interface
         */
        void (SAL_CALL * computeObjectIdentifier)( uno_Environment * pEnv,
                                   rtl_String ** ppOId, void * pInterface );


        /**
         * Function to acquire an interface.
         *<BR>
         * @param pEnv corresponding environment
         * @param pInterface an interface
         */
        void  (SAL_CALL  *  acquireInterface)(  uno_Environment  *  pEnv,  void  *
pInterface );
        /**
         * Function to release an interface.
```

```
*<BR>
* @param pEnv corresponding environment
* @param pInterface an interface
*/
void  (SAL_CALL  *  releaseInterface)(  uno_Environment  *  pEnv,  void  *
pInterface );

};
```

Environments, as defined above, consist of several fields. The first fields are used for identifying the environment, for specifying the hardware, the process, and maybe a session specific ID. There is also a context pointer which can be used for specific classes of environments, e.g. when it is known that there is a Java environment the virtual machine pointer can be stored there.

In order to use environments, these environments regularly have to be registered. An existing environment may be obtained by calling uno_getEnvironment(). A new environment can be created by either implementing it directly or by using a simple default implementation, which is frequently also sufficient, by calling, in the given example, uno_createDefaultEnvironment() with the environment's name and its acquire and release function for interfaces.

In order to improve the performance the bridges should use the shortest way between two environments. Especially, if there are programs instantiated in the identical environment, the communication between them should be direct and not over a proxy and a stub.

Mapping is the direct way to publish an interface in another environment. That means an interface is mapped from a source environment to a target environment so that methods may be invoked on a mapped interface in the target environment which are delegated to the originating interface in the source environment. A mapped interface may also be called a proxy or a stub. Mapping an interface from an environment A to an environment B requires that several steps are performed: First, the origin of the interface from environment A has to be retrieved (call getInterfaceOrigin() on environment A). For this purpose, the environment A looks into its proxy interfaces table to check if there is such an interface already known (pointer and type). If the answer is no, then this interface must originally come from environment A, or else it must originate from any other environment and its origin must be known, since each proxy interface must have been registered with its origin. Second, an existing proxy interface has to be looked for in environment B with the same origin and type (call getInterface() on environment B). If a proxy interface of that origin and type is already in use in environment B, then this interface is acquired, or else a new proxy has to be constructed wrapping the source interface from environment A. The fresh proxy interface is then to be registered via registerInterface () on its first acquire() and revoked via revokeInterface() on its last release() from its environment. This second step has to be synchronized with other threads in order to get access to mapping tables of an environment by getting an access interface (lockAccess()) from the environment. Then an unlockAccess() function has to be called.

*Function of stub and proxy:*

The stub is encapsulated in an object which delivers and transforms the binary specification adapted calls to the stub. This object is the proxy of a stub in the first binary specification. This proxy which calls and attributes access will be similar with the binary specification from which the call was made. The calling to the stub is shown in Fig. 32.

First in step 321 a type save call (e.g. acquire, queryInterface, ...) is made at the proxy 253. This type save call will be transformed by the proxy 253 to a corresponding call in step 322 and dispatched to the stub 254 in step 323. After that, the return value of this call is transformed in step 324 to the type expected by the binary specification.

The proxy is binary specification specific. So it is possible to put this object seamless into the binary specification.

A stub object is also created which implements an uno_interface and transforms and delegates the calls to the second program implemented in a specific programming language (e.g. C++, Java,...). Fig. 33 describes a call through a stub 254 to the second program 252.

In a first step 331 the dispatch function is called. If proxy and stub are running in the same process, the dispatch function of the stub is directly called by the proxy. In a distributed environment this is not possible. In this case the abstract virtual channel has to provide this functionality. On the proxy side the proxy will accept the request and transmit it to the stub side. On the stub side the stub has to call the dispatch function.

The stub 254 detects the interface and the method which should be called at the second program 252. Then in step 332 the call was transformed into a specific binary specification by the stub 254 and the second program 252 was called in step 333. After that, the return value was re-transformed to the other binary specification in step 334.

The stub makes all transformations to the binary specification in which the second program is implemented. This is in this example the second binary specification. This makes it possible to implement the second program in the second binary specification. For example: In C++ exceptions, multiple inheritance and derivation can be used. In addition to the binary specification there are the type descriptions which must be mapped in the binary specification of the second program.

In order to enable to call from one binary specification or object model to another the stub and the proxy have to undergo a binding process. The proxy allows to call from one binary specification to the uno_interface, while the stub allows to call through the uno_interface to the second program. The binding of the stub and the proxy is initiated by the first software program 251 and is shown in Fig. 34. In a first step 341 the generation of a stub with the binary UNO specification in the stub factory 342 is shown. In a second step 343 a proxy is created based on the generated stub in the proxy factory 344.

Each call to the proxy is delivered to the stub. The stub prepares the call and calls the second program in the corresponding binary specification. Fig. 35 shows exemplary the call from a first software program 251 in a programming language like "objective c" to a second software program 252 which may be implemented in the programming language C++.

The first software program 251 uses the programming language "objective c". The proxy 253 makes the interface available to the first software program 251 in the first binary specification. This means the first software program 251 uses the first binary specification to manipulate the second software program 252. For example, this may be effected by the call "char * pOldText = [myObject changeText: "test"]" in step 351. The proxy 253 transforms the parameter of type string to the binary specification in step 352. Then, the proxy 253 dispatches in step 353 the call to the stub 254. The necessary information, including a method type description, parameters, an address for the return value and an address for the exception, if any occurs, is delivered to the stub 254. The stub 254 transforms in step 354 the string from the binary UNO specification to a second binary specification string. The stub 254 calls the right method at the second software program 252 in step 355, in our example "pComponent->changeText("test")". The stub 254 must catch all kind of exceptions thrown by the second software program 252. If the method returns normally, the string is transformed in the step 356 to the binary UNO specification and stored at the place given through the dispatch call. If an exception is thrown, the exception is transformed and stored at the address given through the dispatch call. After the dispatch call returns the proxy 253 transforms in step 357 the string to a first binary specification string and returns from the "changeText" call. If the call terminates by an exception, the exception is returned to the first software program 251. It is up to the first binary specification in which manner the exception occurs (the "objective c" language does not support exception handling).

Fig. 36 shows the advantage of the binary UNO specification as an intermediate binary specification as it was described above. In a first step 361 the first software program 251, for example written in the programming language C++, transmits one command in a first binary specification, in this example the command "setText("a test")", to the proxy 253. Regularly, the first software program will transmit more than one command, for example, also the acquire, the release and the queryInterface command as described above. This command will be transformed by the proxy 253 in the next step 362 from the first binary specification into the binary UNO specification. The command in the binary UNO specification contains the following information: the parameter "a test", the return address, an address for the exceptions, and the type description of the command "setText". The type description of this command will include, in this example, the name of the command (setText), the type of the parameter and the return type. This transformed command will be transmitted to the stub 254 in the step 363. Then, the stub 254 transforms in step 364 the command from the binary UNO specification into the second binary specification, employed by the second software program 252 which was written, for example, in the programming language Java. The stub 254 employs for this transforming step only one dispatch mechanism. This is a mechanism which will be employed for each command transmitted by the proxy 253, since it is able to dispatch the name of the command and the other relevant information to the second software program 252. In the final step 365 the second software program 252 executes the command "setText". The response to this command will be transmitted and transformed in a corresponding way.

Fig. 37 shows a scenario where between the proxy 253 and the stub 254 an interceptor 370 is inserted. This means, that the stub 254 and the interceptor 370 are created in a first step, while in a second step the stub 253 is created based on information about the stub 254 and the interceptor 370. Therefore, the proxy 253 will communicate only with the interceptor 370 and not with the stub 254.

Such an interceptor may be able to carry out, for example, an accounting function or a security check function. If, for example, the first software program 251 wants to use a functionality of the second software program 252, the interceptor may be able to discover if the user of the first software program is authorized to use this function and to debit the account of the user, if the user has to pay for this functionality. Such an interceptor may also be used, for example, to help debugging the communication between a first software program 251 and a second software program 252. In such a case the interceptor may provide an alarm function which will be initiated, if a predefined functionality is called. If the functions requested from the second software program 252 may be grouped as one transaction, it may also be possible that an interceptor cancels all already executed functions of this group, if one function fails. Such an interceptor has the advantage that only one interceptor may be employed for every function or method of an interface and for all binary specifications of software programs which communicate via the intermediate binary specification used by the stub 254 and the proxy 253.

Fig. 38 shows a flow chart representing the use of an interceptor as checking and accounting function for a fax service. In this example, a user of a first software program using a first binary specification wants to use the fax service of a second software program using a second binary language. This fax service may distinguish between two kinds of users. A standard user may have to pay for each fax and a premium user may have to pay a monthly standard fee.

In order to enable the communication between the two software programs a stub and a proxy will be created and combined and arranged together with a specific interceptor in a way shown in Fig. 37. Then, the following steps may be carried out in using the invention.

In step 3800 the first software program sends a command including the desired fax number, the corresponding fax file and the identity of the user to the proxy. The proxy transforms this command into the intermediate binary specification and forwards it to the interceptor in step 3801. The interceptor checks in step 3802 whether the user is a standard user.

If the answer is "Yes", that means the user is a standard user, the interceptor may deteremine in step 3803 whether the user has enough credit. If the answer to this question is "No", the user will be informed about his insufficient credit status and about the fact that the fax was yet not sent in step 3804. If the answer is "Yes", that means that the user has enough credit, the interceptor will initiate, in this example, the debiting of the user's account in step 3805 and forward the received command to the stub in step 3806.

If the answer in step 3802 is "No", that means the user is a premium user, the interceptor will forward the command received from the proxy directly to the stub in step 3806. The stub will transform this command from the intermediate binary specification into the second binary specification and forward this command to the second software program in step 3807. Then the fax may be sent.

In the following further embodiments for dynamically dispatching function calls from a first execution Environment to a second execution environment will be described.

1) A method for enabling a first software program using a first binary specification in a first execution environment to employ a limited functionality of a second software program using a second binary specification in a second execution environment, the method comprising:

creating a bridge in said first execution environment; and

creating, in said first execution environment using said bridge, a proxy wrapping an interface to said limited functionality of said second software program in said second execution environment.

2) A method as in 1) further comprising:
creating a first execution environment object including said second binary specification.

3) A method as in 2) further comprising:
creating a second execution environment object including said first binary specification.

4) A method comprising:

generating a binary specification object for a first execution environment;

generating a binary specification object for a second execution environment; and

generating a bridge object wherein said bridge object is used in mapping objects from said second execution environment to said first execution environment.

5) The method of 4) further comprising:
using said bridge object to generate a proxy wrapping an interface in said second execution environment.

6) A method for using functionality in a second execution environment in a first execution environment comprising:

calling a method in a proxy interface in said first execution environment; and

converting said method call by said proxy interface to a corresponding method call for execution in said second execution environment.

7) The method as in 6) further comprising:
dispatching said corresponding method call for execution in said second execution environment to said second execution environment by said proxy interface.

8) The method of 6) where said converting said method call further comprises:
using a type description to convert parameters from said first execution environment to said second execution environment.

9) The method of 7) further comprising:
executing said corresponding method call in said second execution environment, and returning results of said execution to said proxy interface.

10) The method of 9) further comprising:
using a type description to convert said returned results from said second execution environment to said first execution environment.

11) The method of 6) wherein said second execution environment is a C++ programming language execution environment.

12) A method for using functionality in a second execution environment in a first execution environment comprising:

calling a method in a proxy interface in said first execution environment;

converting said method call by said proxy interface to a corresponding method call for execution in said second execution environment, wherein said converting said method call comprises:

using a type description to convert parameters from said first execution environment to said second execution environment; and

dispatching said corresponding method call for execution in said second execution environment to said second execution environment by said proxy interface.

13) The method of 12) further comprising:
executing said corresponding method call in said second execution environment, and returning results of said execution to said proxy interface.

14) The method of 13) further comprising:
using a type description to convert said returned results from said second execution environment to said first execution environment.
In the following a further embodiment of a computer program product will be described.

15) A computer program product comprising computer program code for a method for enabling a first software program using a first binary specification in a first execution environment to employ a limited functionality of a second software program using a second binary specification in a second execution environment, the method comprising:

creating a bridge in said first execution environment; and

creating, in said first execution environment using said bridge, a proxy wrapping an interface to said limited functionality of said second software program in said second execution environment.

16) The computer program product of 15) wherein said method further comprises:
creating a first execution environment object including said second binary specification.

17) The computer program product of 16) wherein said method further comprises:
creating a second execution environment object including said first binary specification.

18) A computer program product comprising computer program code for a method for using functionality in a second execution environment in a first execution environment, said method comprising:

calling a method in a proxy interface in said first execution environment; and

converting said method call by said proxy interface to a corresponding method call for execution in said second execution environment.

19) The computer program product of 18) wherein said method further comprises:
dispatching said corresponding method call for execution in said second execution environment to said second execution environment by said proxy interface.

20) The computer program product of 18) wherein said method further comprises:
using a type description to convert parameters from said first execution environment to said second execution environment.

21) The computer program product of 19) wherein said method further comprises:
executing said corresponding method call in said second execution environment, and returning results of said execution to said proxy interface.

22) The computer program product of 21) wherein said method further comprises:
using a type description to convert said returned results from said second execution environment to said first execution environment.
A computer storage medium may have the following elements.

23) A computer storage medium having stored therein a structure comprising:

a binary specification for an execution environment including:

a simple common identity structure.

24) The computer storage medium of 23) wherein said binary specification further comprises:
an extended environment structure.

25) The computer storage medium of 23) wherein said simple common identity structure includes:
a type name.

26) The computer storage medium of 23) wherein said simple common identity structure includes:
a method acquire.

27) The computer storage medium of 23) wherein said simple common identity structure includes:
a method release.

28) The computer storage medium of 24) wherein said simple common identity structure includes:
a pointer to said extended environment structure.

29) A method for enabling a first software program using a first binary specification to employ a limited functionality of a second software program using a second binary specification, including the following steps:

a) initiating the creation of a stub, which is able to transform commands relating to said limited functionality of said second software program between said second binary specification and an intermediate binary specification, using a second bridge, wherein said second bridge provides a mapping of said second binary specification and said intermediate binary specification,

b) initiating the creation of a proxy, which is able to transform commands relating to said limited functionality of said second software program between said first binary specification and said intermediate binary specification, using a first bridge, wherein said first bridge provides a mapping of said first binary specification and said intermediate binary specification, and

c) initiating the arrangement of said proxy and said stub relatively to said first software program and said second software program in a manner allowing said first software program to employ said limited functionality of said second software program.

30) A method for employing a limited functionality of a second software program using a second binary specification by a first software program using a first binary specification, including the following steps:

a) initializing said limited functionality of said second software program by said first software program,

b) creating a stub, which is able to transform commands relating to said limited functionality of said second software program between said second binary specification and an intermediate binary specification, using a second bridge, wherein said second bridge provides a mapping of said second binary specification and said intermediate binary specification,

c) creating a proxy, which is able to transform commands relating to said limited functionality of said second software program between said first binary specification and said intermediate binary specification, using a first bridge, wherein said first bridge provides a mapping of said first binary specification and said intermediate binary specification,

d) transmitting an command relating to said limited functionality from said first software program to said proxy,

e) transforming said command from said first binary specification into said intermediate binary specification by said proxy,

f) transmitting said command transformed by said proxy from said proxy to said stub,

g) transforming said transmitted command from said intermediate binary specification into said second binary specification by said stub,

h) transmitting said command transformed by said stub from said stub to said second software program,

i) carrying out said command in said second software program and generating a response for said first software program,

j) transmitting said response, being in said second binary specification, from said second software program to said stub,

k) transforming said response from said second binary specification into said intermediate binary specification by said stub,

l) transmitting said response transformed by said stub from said stub to said proxy,

m) transforming said response from said intermediate binary specification into said first binary specification by said proxy,

n) transmitting said response transformed by said proxy from said proxy to said first software program.

31) A method for using a stub, which is able to transform commands relating to a limited functionality of a second software program between a second binary specification and an intermediate binary specification, using a second bridge, wherein said second bridge provides a mapping of said second binary specification and said intermediate binary specification, for enabling a first software program using a first binary specification to employ said limited functionality of said second software program by further using a proxy, which is able to transform commands relating to said limited functionality of said second software program between said first binary specification and said intermediate binary specification, using a first bridge, wherein said first bridge provides a mapping of said first binary specification and said intermediate binary specification, wherein said proxy and said stub are arranged relatively to said first software program and said second software program in a manner allowing said first software program to employ said limited functionality of said second software program.

**EP 1 126 681 A2**

32) A method for using a proxy, which is able to transform commands relating to said limited functionality of said second software program between said first binary specification and said intermediate binary specification, using a first bridge, wherein said first bridge provides a mapping of said first binary specification and said intermediate binary specification, for enabling a first software program using a first binary specification to employ said limited functionality of said second software program by further using a stub, which is able to transform commands relating to a limited functionality of a second software program between a second binary specification and an intermediate binary specification, using a second bridge, wherein said second bridge provides a mapping of said second binary specification and said intermediate binary specification, wherein said proxy and said stub are arranged relatively to said first software program and said second software program in a manner allowing said first software program to employ said limited functionality of said second software program.

33) A method according to any of 29) - 32), wherein said creation of said stub is carried out in response to a loader function for said second software program.

34) A method according to any of 29) - 33), wherein said creation of said proxy is carried out in response to a function of said first software program.

35) A method according to any of 29) - 34), wherein said creation of said stub is carried out by a sub-program of the second software program.

36) A method according to any of 29) - 35), wherein said creation of said proxy is carried out by a sub-program of the first software program.

37) A method according to any of 29) - 36), wherein said bridges are selected by a tool for selecting the desired bridge.

38) A method according to any of 29) - 37), wherein said mappings are selected by a function for selecting the desired mapping of the bridge.

39) A method according to any of 29) - 38), wherein said limited functionality is described by types.

40) A method according to 39), wherein the types are stored in a type repository.

41) A method according to 40), wherein the types are stored in said type repository along with the corresponding description.

42) A method according to 40) or 41), wherein a application program interface of said type repository is c-style.

43) A method according to any of 29) - 42), wherein said first binary specification and said second binary specification are denominated by a string.

44) A method according to any of 29) - 43), wherein an interceptor is arranged between said proxy and said stub in order to intercept some of said commands.

45) A method according to any of 29) - 44), wherein said stub is able to transform all commands transmitted by the proxy by employing one dispatch mechanism.

46) A computer program for carrying out a method according to any of 29) - 45) on a computer system.

47) A data carrier for storing a computer program for carrying out a method according to any of 29) - 45) on a computer system.

48) A method for using a computer system for carrying out a method according to any of 29) - 45).

49) A computer system comprising a storage medium on which a computer program for carrying out a method according to any of 29) - 45) or 48) is stored.

Abstract of CHAPTER B

A method for enabling a first software program using a first binary specification in a first execution environment to employ a limited functionality of a second software program using a second binary specification in a second execution environment first creates a bridge in the first execution environment. Using the bridge, a proxy wrapping an interface to the limited functionality of the second software program in the second execution environment is created in the first execution environment. The proxy is used to access the limited functionality of the second software program in the second execution environment.

## **CHAPTER C**

CHAPTER C describes a method and system for remote control and interaction with a run time environment component, e.g. in the network portal system of CHAPTER A.

BACKGROUND

Field

Chapter C relates to runtime environment component services, and in particular to a runtime environment component services provided by a first computer system to a second computer system over a communication network, e.g. in the network portal system of CHAPTER A.

Description of Related Art

Today, many computer networks are arranged as client-server systems. In a client-server system, a potentially large number of smaller computer systems, like laptops or handhold organizers, called clients, are, temporarily or permanently connected to a larger computer system, called server. The connection between the clients and the server may be effected, for example, via the Internet.

In client-server systems, a client typically has limited storage and processing capabilities. Nevertheless, many software programs are executed on the clients. One prior art way to make a software program on the server available to clients was to use a browser on the client. The browser was used to transfer a relatively large software program or a relatively large part thereof from the server to a client so that the software program could be executed locally on the client. This method required that the software program or a part thereof be stored and processed on the client.

For this purpose, the client must have sufficient storage capacity and processing capability to execute the software program locally. These requirements may conflict with the aim of having smaller and smaller clients, including cellular telephones, which may not have enough storage capacity or processing capability for storing or processing, respectively, large software programs or large parts of software programs.

Frequently, a software program requested by a client for execution is transferred every time the software program is executed. The speed of this download depends on the available data transfer capacity of the network connecting the server and the client. Here, frequently the available bandwidth of the network connection is decisive. In many instances the described client-server systems would be undesirably slow in executing a software program, because the download takes too much time.

Therefore, software programs, which are called frequently for execution on a client, may be permanently, or at least for some time, stored on the client. This leads, however, to the task of regularly, and maybe even individually, updating a potentially large number of clients, if relevant software programs are amended or updated. Considerable administration efforts for client-server systems may be the consequence.

It is also known to include into a software program executed on a client procedures, which are executed on a server. A prior technique to implement this used CORBA. For example, certain more complicated calculations, the result of which may be needed on a client, were carried out on a server connected with the client over a network. However, this required that the program developer include particular commands into the code of the software program to be executed on the client for calling the software program to be executed on the server, in the given example the calculation program. This was not only cumbersome, but also led to incompatibilities when the software program to be executed on the server was amended.

It is further known to allow a user to initiate execution of a program server from a client and to review the results of the program execution on the client. This approach is used in the UNIX X-Windows system. However, this approach did not permit the client to control the program and did not permit integration of server side functionality into the client side environment at the level of function calls.

SUMMARY

It is desirable to provide improved access from a first computer system to resources available at a second computer system.

According to one embodiment, a user device, a first computer system, includes a lightweight component that receives user input actions for a runtime environment component that is executing on a second computer system. The lightweight component sends a remote input action command to a user interface infrastructure that is executing on the second computer system.

In response to the remote input action command, the user interface infrastructure sends a local input action command to the runtime environment component that processes the command, and issues a local output command to the user interface infrastructure that in turn sends a remote output command to the lightweight component on the user device. In response to the remote output command, the lightweight component causes an output on the user device. This output could be redrawing a display, playing a sound, or perhaps routing information to a local printer.

All the management of components in the user interface, management of data and so on is performed on the second computer system and so the lightweight component only has, for example, to update the display to reflect the state of the runtime environment component as indicated by the remote output command received. It appears to the user that the runtime environment component is executing locally on the user device despite that fact that the user device is only functioning as an input/output device for the runtime environment component.

In one embodiment, a method for presenting a runtime environment component service by a first computer system to a second computer system over a communication network is performed by the first computer system. The method includes generating a user interface infrastructure on the first computer system. The user interface infrastructure receives graphic user interface events from the second computer system and sends remote graphic user interface commands to the second computer system. The user interface infrastructure is used to initialize the runtime environment component service. The runtime environment component service sends graphic user interface commands to the user interface infrastructure.

In another embodiment, the first computer system receives a remote input action command for a runtime environment component service via a communication network. The remote input action is being generated in the second computer system by a lightweight component corresponding to the runtime environment component service. A local input action command is transmitted to the runtime environment component service in response to the remote input action command. The local input action command is processed by the runtime environment component service, and a local output command is generated by the runtime environment component service for a graphical user interface. A remote output command is transmitted to the lightweight component in response to the local output command.

In yet another embodiment, a method for enabling a user device to run a runtime environment component on another computer includes running a browser on the user device. A lightweight component is run within the browser. The lightweight component receives user input actions on the user device and generates corresponding user interface events to the another computer for processing by the runtime environment component.

A computer program product, in one embodiment, comprises computer code including a remote frame window class that in turn includes a remote output device interface and a remote frame window interface. The computer code optionally includes any or all of a bean frame class comprising a frame interface; a bean window class including an event handler interface and a window peer interface; and an abstract windowing toolkit.

According to a further embodiment a method is provided for presenting runtime environment component services by a first computer system to a second computer system over a communication network, said method being performed by said first computer system, and comprising the steps of:

a) receiving a request for a runtime environment component service via said communication network, said request being generated by a lightweight component in said second computer system, wherein the lightweight component corresponds to the requested runtime environment component service,

b) accessing a runtime environment component being able to provide said requested runtime environment component, service,

c) executing said runtime environment component on said first computer system for producing a result according to said received request for a runtime environment component service,

d) transmitting, over said network, a response comprising said result to said second computer system.

The invention comprises also a method for providing runtime environment component services from a first computer system over a communication network to a second computer system, said method being executed on said second computer system and comprising the steps of:

a) generating a request for a runtime environment component service by means of a lightweight component of said second computer system, wherein the lightweight component corresponds to the requested runtime environment component service,

b) transmitting said request for said runtime environment component service to said first computer system over said communication network, and

c) receiving a response comprising a result according to said requested runtime environment component service, said result being produced by a runtime environment component executed on said first computer system and transmitted with said response by said first computer system over said network.

Thus, the runtime environment component services are presented by a first computer system to a second computer system over a communication network, whereby upon receiving a request for a runtime environment component service transmitted by said second computer system over said communication network, the first computer system executes a runtime environment component for producing a result according to said received request, and transmits - over said network - a response comprising said result to said second computer system.

In the context of the present invention a lightweight component is a software program which is able to request a runtime environment component service, wherein the lightweight component corresponds to this runtime environment component service, and wherein the lightweight component is tiny enough to be downloaded from the first computer system onto the second computer system via the network connecting the first with the second computer system within a time t significantly smaller than the time it would take to download the whole runtime environment component to which it corresponds.

The time t shall particularly, but not necessarily, be less than $(8 N / C_B) + t_1$, wherein N is the size of the runtime environment component in bytes, $C_B$ is the average bandwidth of the network connection between the first and the second computer system, and $t_1$ is the time needed to initialize the runtime environment component providing the requested service in its respective local environment on the first computer system. In today's commonly available network connections between servers and clients the time t will typically be about ten seconds.

When using networks commonly used at present for the connection of clients and servers this time condition amounts to a scope of the lightweight component which is - measured in necessary storage space - less than ten or even less than five percent of the scope of the totality of the runtime environment components which can be requested by it, including any auxiliary software programs which these runtime environment components need to be executed in the first computer system.

Correspondence of the lightweight component with the runtime environment component service means, in this context, that the lightweight component must offer the second computer system access to the runtime environment component service made available by it. If a plurality of runtime environment component services is made available by the lightweight component, which will frequently be the case, the lightweight component corresponds to this plurality of runtime environment component services in the explained sense.

The inventive methods enable a second computer system to use results produced by a first computer system. The load of holding, maintaining and administrating these runtime environment components, as well as executing these runtime environment components, is burdened onto said first computer system. Nevertheless, said second computer system can profit from these runtime environment component services as if the relating runtime environment components were present locally on said second computer system. Therefore, additional functionality is provided even to those computer systems which are not powerful enough to store and / or execute the full range of runtime environment components, as for example notebooks, handheld computers, organizers and mobile telephones. Since said first computer system and said second computer system exchange requests for services and responses to said requests, rather than exchanging programming code to perform the services, the amount of data transfer between both computer systems is considerably reduced. This shortens communication time (on-line time) and leads to faster running software programs on the second computer system.

The inventive methods are particularly interesting for use with a client/server environment. In that case, the first computer system takes over the role of a server, whereas the second computer system is one of the clients. The network may be a local network or a wide-area network, as for example the Internet.

As an example, said runtime environment component services may relate to graphic functions, word processing functions, document editing functions, mathematical functions, table calculation functions, or printing functions. Said runtime environment components may be, for example, of the form of application programming interfaces or runtime components.

The runtime environment component services offered by the first computer system are requested, according to the present invention, by means of a request generated by a lightweight component on the second computer system. This lightweight component may issue this request in response to a call of a software program being executed on the second computer system. However, the lightweight component may also be or have a user interface, so that no additional software programs need to be executed on the second computer system.

The runtime environment components as well as possible software programs calling for their services may comprise compiled program code to be executed or script code to be interpreted.

As a general advantage of the invention, all the characteristics of the runtime environment components residing on said first computer system, for example a program interface and a runtime environment, can be made fully available for use by said second computer system. If new components or releases of components are added to said first computer system, these can be made immediately available to the second computer system without any significant modifications or additions required on said second computer system. This central administration of runtime environment components reduces the load of administration on said second computer system and on a client/server system in general.

Said request and / or said response sent over said communication network may be compliant with a predetermined communication protocol, in particular with the Internet protocol.

In particular, if the communication network is an open wide-area network, said request and / or said response may be transmitted over secure channels. For example, encryption / decryption technologies may be applied for the communication between said computer systems.

Said request and / or said response may comprise identification data of said first computer system, identification data of said second computer system, identification data of said runtime environment component service, and input data to said runtime environment component service.

It is to be understood that said first computer system may present said runtime environment component services to an arbitrary number of second computer systems independently from each other. On the other hand, a second computer system may transmit its requests selectively to different first computer systems. The communication network may be of any type suitable for communication between computer systems, including wired and partially or totally wireless. The computer systems may be of any type of processing environments, and of any size. They may be embedded into other systems.

The invention can be implemented by a computer system comprising computer program code or application code. Computer program code or application code may be embodied in any form of a computer program product. A computer program product comprises a medium configured to store or transport computer-readable code, or in which computer-readable code may be embedded. Some examples of computer program products are CD-ROM disks, ROM cards, magnetic disks or tapes, service on a network, and carrier waves. The computer program product may also comprise signals which do not use carrier waves, such as digital signals transmitted over a network. The computer program product may then be implemented as any transmission link, such as a connection to the Internet, or any LAN, WAN, telephone network, or the like.

Further, the invention comprises runtime environment components for use with a method according to the invention. In particular, the invention also comprises a data base comprising runtime environment components relating to said services according to any of the inventive methods.

BRIEF DESCRIPTION OF THE DRAWINGS OF CHAPTER C

Fig. 1        is an illustration of one embodiment of the present invention with a plurality of user devices that each can execute a lightweight component that corresponds to at least one component on the server computer system;

Fig. 2        is a more detailed illustration of one embodiment of the present invention with a representative user device that executes a lightweight component that corresponds to at least one component on the server computer system;

Fig. 3        is a process flow diagram for one embodiment of the present invention;

Fig. 4        is an architecture diagram for one embodiment of the present invention;

Figs. 5A to 5D        are a sequence diagram for a JAVA-based implementation of one embodiment of the present invention;

| Fig. 6 | is a class diagram for the embodiment of the present invention illustrated in Figs. 5A to 5D; |
| Fig. 7 | is a cross-reference between Tables in the description and selected interfaces in Fig. 6; |
| Figs. 8A to 8C | are a cross-reference between Tables in the description and selected interfaces in Fig. 6; |
| Fig. 9 | is a cross-reference between Tables in the description and selected interfaces in Fig. 6; |
| Figs. 10A and 10B | are a cross-reference between Tables in the description and selected interfaces in Fig. 6; |
| Fig. 11 | gives a general overview of an implementation of the invention; |
| Fig. 12 | illustrates the processing of a request by a remote server framework; |
| Fig. 13 | illustrates an implementation of a lightweight component; |
| Fig. 14 | illustrates the transparent access via an object component model; |
| Fig. 15 | illustrates an implementation of a visual lightweight component; |
| Fig. 16 | illustrates remotely drawing; |
| Fig. 17 | illustrates accessing an API; |
| Fig. 18 | illustrates the creation of a Java bean lightweight component; |
| Fig. 19 | illustrates relating a StarOfficeBean frame window; |
| Fig. 20 | gives a flow chart for an example using the present invention; |
| Fig. 21 | illustrates a client's view of a non-visual lightweight component; and |
| Fig. 22 | illustrates a client's view of a visual lightweight component. |

In the Figures 1 - 22 of CHAPTER C and the following Detailed Description of CHAPTER C, elements with the same reference numeral are the same element or a similar element. Also, the first one or two digits of a reference numeral for an element indicate the figure in which that element first appeared. Reference numerals do not necessarily correspond to the reference numerals used in the further chapters. A word in italics and the same word not in italics represent the same element. The italics are used only for convenience and not to denote different embodiments or elements.

DETAILED DESCRIPTION

According to one embodiment of the present invention, a user can access and use applications or services, e.g., application 112 in a suite of applications 120, on server computer system 100 from almost any available device, e.g., any one of a portable computer 102A, a mobile telephone 102B, a workstation 102C, a home personal computer (PC) 102D, a personal digital assistant 102E, or an Internet café machine 102F. No longer is a user limited to using either workstations and/or portable computers with suite of applications 120 installed thereon.

For example, a user on a vacation overseas suddenly realizes that the presentation her boss is going to deliver the next morning contains a critical error. The user drops by an Internet café and from any machine 102F at the café accesses the presentation via server computer system 100, and makes the necessary corrections using applications written, for example, in a visual basic programming language and/or the C++ programming language even though only a browser is available on machine 102F.

In another scenario, the user is having dinner at a friend's house, and gets an urgent call saying that a report that can be assessed via server computer system 100 must be revised that evening. The revisions will not require much work, but the trip to the office and back is a very unwelcome prospect. Using the friend's PC 102D and the friend's Internet service provider, the user works on the report without leaving his friend's home even though no software for accessing application suite 120 is available on PC 102D. The user interface on PC 102D and the application capability is that same as if the user were executing the application at the office.

Another user is expecting an important document, but the user has a business appointment outside the office. The document arrives by e-mail while the user is in transit. Using a PDA 102E while on the train, the user accesses the e-mail using server computer 100, reviews the document, and then re-directs the document to the fax machine at the site to which the user is going.

A customer would like to meet with a user tomorrow. The user thinks he will be available, but the user doesn't know whether anyone scheduled the time while the user was away from the office, and now the office is closed. Using a mobile telephone 102B, the user accesses his up-to-the-minute calendar via server computer system 100 and schedules the appointment.

Hence, in one embodiment, using a web browser and an Internet connection, the user simply logs on to a web server 111, and proceeds as though everything were locally resident on his/her machine. While execution actually takes place on server computer system 100, this fact is transparent to the user. Similarly, local services available on a client system, including devices like printers and local storage, can be utilized in a transparent manner.

In addition to using browsers, users can access applications on server computer system 100, sometimes called server 100, from Wireless Application Protocol (WAP) devices, which include mobile phone 102B and perhaps PDA 102E. Because of the limited capabilities of devices 102B and 102E, functionality is not as extensive as from a system that can run a full browser. Accordingly, in one embodiment, users are able to view their mail and data, but users don't have full editing capabilities in this embodiment. However, users can use mobile phones and PDAs to manage their data and the users can direct the movement of information to other devices.

Hence, a user of any one user device 102i, where i is A to G, of a plurality of devices 102A to 102G can use an application 112, or any other application in suite 120 that can include for example a word processing application, a spreadsheet application, a database application, a graphics and drawing application, an e-mail application, a contacts manager application, a schedule application, and a presentation application, as if that application were executing locally on user device 102i. One office application package suitable for use with this invention, is the STAROFFICE Application Suite available from Sun Microsystems, 901 San Antonio Road, Palo Alto, CA. (STAROFFICE is a trademark of Sun Microsystems, Inc.) The user has access to the functionality of application 112 even in situations where user device 102i has neither the memory capacity nor the processing power to execute application 112.

As explained more completely below, in each of the above examples, a lightweight component 230 (Fig. 2) is either stored locally in a memory of user device 102i, or is downloaded from server computer system 100(Fig. 2) to memory 211 in user device 102i. Lightweight component 230, in the embodiment, is loaded in a browser, to communicate over a network, e.g., enterprise network 103, Internet 106, or a combination of the two 103/106, with application 112 that is executing on server computer system 100.

Lightweight component 230, as explained more completely below, is not a prior art software program. Rather lightweight component 230, in one embodiment, maps visual display instructions from application 112 executing on server computer system 100 to a platform dependent graphic layer that in turn generates a user interface on display screen 295 of monitor 216. The user interface for application 112 is similar to the user interface that the user would see if application 112 were executing locally on device 102i. The interfaces may not be identical if user device 102i has limited input/output capability, e.g., user device 102i is a mobile telephone.

When lightweight component 230 receives an input event from the windowing environment executing on user device, e.g., the JAVA Abstract Windowing Toolkit (AWT), lightweight component 230 transmits the event to application 112 for processing. Here, the input event could be selection of a menu item, configuration of a menu, a keyboard input, a mouse input, or any other input event supported by application 112.

Application 112, executing on server computer system 100 processes the event received from lightweight component 230 and performs any operations required on server computer system 100. Output instructions from application 112 are directed to lightweight component 230 on user device 102i.

When lightweight component 230 receives the output instructions, lightweight component 230 executes the instructions. For example, if the instructions are to update the display, lightweight component 230 maps the instruction to a platform dependent graphic layer that in turn redraws the display. All the management of components in the user interface, management of data and so on is performed on server computer system 100 and so lightweight component 230 only has to update the display to reflect the state of application 112 as indicated by the output instructions received from application 112.

Consequently, it appears to the user that application 112 is executing locally on user device 102i despite that fact that user device 102i is only functioning as an input/output device for application 112. Lightweight component 230 on user device 102i routes the output to an output device of device 102i, e.g., a display unit 216 or a locally connected printer 217.

As used herein a lightweight component 230, sometimes called a thin client, is software, which, upon execution, is able to provide input to and receive output from a runtime environment component, e.g., an application or service 112 that is sometime called a runtime environment component 112. Lightweight component 230 is tiny enough to be downloaded from first computer system 100 onto second computer system 102i via a network 103 and 106 within a time significantly smaller than the time required to download the whole runtime environment component 112.

In one embodiment, the download time t is particularly, but not necessarily, defined as

$$t < (8 N / C_B) + t_1,$$

where N is the size of runtime environment component 112 in bytes, $C_B$ is the average bandwidth in bits per second of the network connection between first computer system 100 and second computer system 102i, and $t_1$ is the time needed to initialize runtime environment component 112 in its respective local environment on first computer system 100. In today's commonly available network connections between servers and clients, time t is typically be about ten seconds.

When using networks commonly used at present for the connection of clients and servers, this time condition gives a lightweight component 230, which is - measured in necessary storage space - less than ten or even less than'five percent of the scope of the totality of the runtime environment components 120, which can be requested by lightweight component 230, including any auxiliary software programs which these runtime environment components need to be executed in first computer system 100.

Correspondence of lightweight component 230 with runtime environment component 112 means, in this context, that lightweight component 230 must offer the second computer system 102i access to the runtime environment component service made available by component 112. If a plurality of runtime environment component services 120 is made available by the lightweight component 230, which will frequently be the case, lightweight component 230, in this embodiment, corresponds to this plurality of runtime environment component services in the explained sense.

Hence, in this embodiment, the software system includes two parts, a first part 230 executed on a client device 102i, and a second part 120 residing and executed on server computer system 100. Second part 120 on server 100 makes up the runtime environment, which, in this embodiment, comprises a plurality of runtime environment components, which are able to provide services. Furthermore, second part 120 on server computer system 100 provides the necessary communication tools in order to communicate with client device 102i, sometimes called user device 102i.

The other part 230, being executed on client device 102i, performs communication between client device 102i in requesting a runtime environment component service being executed on server 100. The server's part of the software system is by far larger in size than the client's part thereof. This latter part is referred to as lightweight component 230. A typical size of the software system's part 120 on server computer system 100 may be 50 to 100 Megabyte, e.g., an office software package, whereas lightweight component 230 on client device 102i has a typical size of 400 Kilobyte, and uses minimal system resources (CPU power, memory).

Lightweight component 230 provides an application-programming interface (API) for any application program the implementation of which on client device 102i is allowed by an implementation framework on server computer system 100. Various types of lightweight components 230 are possible. In one embodiment, the lightweight component accesses a particular functionality, e.g., a mathematical calculator on server 100, which provides a specific result to user device 102i for use. In another embodiment, lightweight component 230 handles visual functionality.

Hence, in more general terms, runtime environment component services are presented by a first computer system 100 to a second computer system 102i over a communication network 103/106. Upon receiving a request for a runtime environment component service transmitted by second computer system 102i over communication network 103/106, first computer system 100 executes a runtime environment component 112 for producing a result according to the received request, and transmits, over network 103/106, a response comprising the result to the second computer system 102i.

Herein, computer software programs and parts thereof, which are called during execution of a lightweight component 230, are herein referred to as runtime environment components 120. The functionality provided by runtime environment components 120 to lightweight component 230 are herein referred to as runtime environment component services. The size of runtime environment components 120 renders a distribution over Internet 106 difficult. Runtime environment components 120 may be implemented in any suitable form. Runtime environment components 120 may consist of compiled software program code to be executed or of script code in any programming language to be interpreted before execution by a compiler. Runtime environment components 120 are typically stored and administrated on server computer system 100.

Lightweight component 230 makes runtime environment component services, that means the functionalities provided by runtime environment components 120, available for use without integrating components 120 into lightweight component 230 and without distributing components 120 together with lightweight component 230 to the place of execution of lightweight component 230, for example, client device 102i.

Further, the full functionality of the runtime environment components 120 is available for all kinds of client devices independent of whether the client devices are powerful enough to store or to execute a runtime environment component 112. Further, the user of a client device is not charged with the problem of whether a specific runtime environment component 112 is available on client device 102i.

The holding, maintaining and administrating runtime environment components 120, as well as executing runtime environment components 120, is placed on first computer system 100. Nevertheless, second computer system 102i can profit from these runtime environment component services as if the corresponding runtime environment components 120 were present locally on second computer system 102i. Therefore, additional functionality is provided even to those computer systems, which are not powerful enough to store and / or execute the full range of runtime environment components 120, as for example notebooks, handheld computers, organizers and mobile telephones.

Figure 3 is a process flow diagram for one embodiment of method 300 of this invention. Initially, a user of device 102i issues a request to use applications 120 over network 103/106 to web server 111. The transmission of the request over the network 103/106 is performed according to a predetermined transmission protocol. In response to the request from user device 102i, web server 112 determines in lightweight component available check operation 301 whether the request was from lightweight component 230. If the request was from lightweight component 230, processing transfers to login operation 310 and otherwise to device capability check operation 302

Device capability check operation 302 determines whether user device 102i can execute and use lightweight component 230, e.g., is there a lightweight component 230 available for the general type of user device 102i, and is the operating system, processor, and memory of specific user device 102i sufficient to execute and support lightweight component 230. This information may be included in the initial request, a process on server computer system 100 may communicate with user device 102i to obtain the information, or alternatively, the request may include an identifier that is used to access a database to determine the capabilities of user device 102i.

If user device 102i is capable of executing and supporting lightweight component 230, processing transfers to download component operation 304 and otherwise to return error operation 303. Return error operation 303 sends an appropriate error message to user device 102i to inform the user of the incompatibility between requested application 112 and user device 102i.

Download component operation 304 downloads, and installs if necessary, lightweight component 230 on user device 102i. Thus, prior to starting login operation 310, lightweight component 230 is available on user device 102i.

In response to the request to access applications 120, in login operation 310, a connection is established over network 103/106 to a daemon executing on server 112. The daemon returns a handle to a daemon service factory to lightweight component 230.

Upon receipt of the handle to the daemon service factory, lightweight component 230 issues a request to the service factory to initiate execution of a login service on server computer system 100. Upon activation of the login service, lightweight component 230 transmits a user identification, a password, and options for runtime environment components 120 to the login service. The login service on server 100 validates the user login in login operation 310 and transfers to initialize application operation 320.

Start application operation 322 within operation 320 activates a service factory for runtime environment components 120 on server 100 and returns a handle to this service factory to lightweight component 230. Operation 322 transfers processing to create user interface operation 326 within initialize application operation 320.

In create user interface operation 326, lightweight component 230 issues a request to the runtime environment components service factory to start an infrastructure generation service. In response to the request, the service factory, executing on server computer system 100, activates the infrastructure generation service, and returns a handle to this service to lightweight component 230. Processing transfers to create visual infrastructure operation 327.

In operation 327, lightweight component 230 issues a request to start the infrastructure generation service, and passes a handle to a client factory to the service. Lightweight component 230 next issues a request to create a visual infrastructure on server computer system 100 for processing the visual portion of the user interface.

In response to the request from lightweight component, 230, the infrastructure generation service first issues a request to the client factory on user device 102i to create a remote frame window, and then this service creates a corresponding server window object on server computer system 100. The server window object queries the remote frame window on user device 102i to determine the fonts, display parameters, etc. on user device 102i. Alternatively, the server window object can obtain identifier information from user device 102i and then use this identifier information to access a database that includes the display capabilities of device 102i. Upon completion of the queries, operation 327 transfers to create environment infrastructure operation 328.

In operation 328, the infrastructure generation service creates a frame object that controls the environment of the server window object and creates a direct connection between the frame object and lightweight component 230. Operation 328 transfers to run application operation 330.

In run application operation 330, lightweight component 230 sends a command to the frame object to load a particular document in application 112. In response, the frame object initializes application 112 and loads the document in application 112.

Application 112 reads the loaded document, and generates a display layout that is sent to the server window object. In turn, the server window object sends the display layout to the remote frame window in lightweight component 230. The remote frame window generates commands to a device dependant graphic layer, e.g., the JAVA AWT, which in turn generates the user interface on display screen 295 of monitor 216, in this embodiment.

If user device 102i has limited input/output capability, the user may be able to only read the document, or perhaps direct the document to a local output device if application 112 includes such a capability, e.g., a capability to write to a local printer or to write to a fax printer. If as in Figure 2, user device 102i includes multiple input/output devices, the user can utilize the full functionality of application 102i. For example, if the user utilizes mouse 218 to scroll down in the document. The scroll action is interpreted by the windowing environment on user device 102i and a scroll command is set by the windowing environment to the remote window frame of lightweight component 230.

The remote window frame, in turn, sends a scroll command over network 103/106 to the server window object on server 100. The server window object processes the event received and generates an application event that in turn is processed by application 112. In this example, application does a re-layout based on the scrolling, and redraws the display in the server window object that in turn sends a redraw command to the remote frame window on user device 102i.

In one embodiment, the transmissions over network 103/106 between lightweight component 230 and server 100 are encrypted according to known technologies. Further, in another embodiment, digital signatures are used to provide certification of the request mechanism being established on the client for this runtime environment component services system.

The size of a lightweight component 230 does not increase with the number of accessed runtime environment components of the implementation server framework. This introduces the ability to offer runtime environment components, which expose only services designed for a special purpose and hide the complexity of the implementation framework.

In one embodiment of the invention, the STAROFFICE application suite is utilized as runtime environment components 120 on server computer system. Figure 4 is an illustration of a layer architecture of the STAROFFICE application suite used in this embodiment.

System abstraction layer 401 encapsulates all system specific APIs and provides a consistent object-oriented API to access system resources in a platform independent manner. All platform dependent implementation is below this layer, or is part of optional modules. To reduce the porting effort, the functionality provided by system abstraction layer 401 is reduced to a minima set available on every platform. Also, for some systems, layer 401 includes some implementations to emulate some functionality or behavior. For example on systems where no native multi threading is supported, layer 401 can support so called "user land" threads.

The operating system layer (OSL) within layer 401 encapsulates all the operating system specific functionality for using and accessing system specific resources like files, memory, sockets, pipes, etc. The OSL is a very thin layer with an object oriented API.

The runtime library within layer 401 provides all semi platform independent functionality. There is an implementation for string classes provided. Routines for conversion of strings to different character sets are implemented. The memory management functionality resides in this module.

As a generic container library with layer 401, the standard template library is used. This library supplies implementations for list, queues, stacks, maps, etc.

The remote visual class library (VCL) is shown as bridging infrastructure layer 402 and system abstraction layer 402. Remote VCL receives all user interface events and sends responses to user interface events over network to lightweight component 230 on another computer, which then displays the actual output as described above. Remote VCL encapsulates all access to the different underlying GUI systems on different client devices. Remote VCL is a high level definition of a graphic device defined as a set of interfaces. Remote VCL is based completely on a component infrastructure. This gives remote VCL the ability to map functionality, which a client system is unable to support, to a service component on the server side emulating this functionality.

The implementation of remote VCL is platform independent and includes an object oriented 2D graphics API with metafiles, fonts, raster operations and the whole widget set use by the STAROFFICE application suite. This approach virtually guarantees that all widgets have the same behavior independently of the used GUI system on the different platforms. Also the look & feel and the functionality of the widgets are on all platforms the same. Remote VCL includes a mapping to the interface of the lightweight component that is described more completely below. Since this mapping is platform independent, remote VCL does not access any native window system.

Infrastructure layer 402 is a platform independent environment for building application, components and services. Layer 402 covers many aspects of an object oriented API for a complete object oriented platform including a component model, scripting, compound documents, etc.

To make the usage of system resources like files, threads, sockets, etc. more convenient the virtual operating system layer encapsulates all the functionality of the operating system layer into C++ classes. The tools libraries are different small libraries building up a set of tool functionality. This includes a common implementation for handling date and time related data. There is an implementation for structured storages available. Other implementations provide a generic registry, typesafe management and persistence of property data.

Universal network objects are a component technology that does not depend on any graphical subsystem, but are heavily based on multithreading and network communication capabilities. The system consists of several pieces. An IDL-Compiler, which generates out of the specified definition of an interface a binary representation and the associated C-Header or JAVA technology files. The binary representation is platform and language independent and is at runtime used to marshal arguments for remote function calls or to generate code on the fly for a specific language to access the implementation provided by the interface. Many parts of the UNO technology are implemented as UNO components. This helps to create a very flexible system and also the extension of the system at runtime. For example, by providing new bridges or communication protocols, UNO provides transparent access to components over the network or locally. For a more complete description of bridges, see CHAPTER B. For the communication over the network, IIOP can be used. If the components are realized as shared libraries, the components can be loaded into to the process memory of the application and every access of the component is just like a function call without any marshalling of arguments which is required for remote function calls.

The Universal Content Broker (UCB) allows all upper layers to access different kind of structure content transparently. The UCB includes a core and several Universal Content Providers, which are used to integrate different access protocols. One implementation provides content providers for the HTTP protocol, FTP protocol, WebDAV protocol and access to the local file system.

The UCB not only provides access to the content, but also the UCB provides the associated meta information to the content. Actually, synchronous and asynchronous modes for operations are supported. A more complete description of the UCB is provided in CHAPTER A.

Framework layer 403 allows the reuse of implementations in different applications. Layer 403 provides the framework or environment for each application and all shared functionality like common dialogs, file access or the configuration management

The application framework library in layer 403 provides an environment for all applications. All functionality shared by all applications and not provided by any other layer is realized here. For the framework every visual application has to provide a shell and can provide several views. The library provides all basic functionality so only the application specific features have to be added.

The application framework library is also responsible for content detection and aggregation. The template management is provided here and the configuration management too. The application framework library is in some areas related to the compound documents, because of the functionality for merging or switching menu- and toolbars. Also, the library provides the capability for customization of all applications.

The SVX library in layer 403 provides shared functionality for all applications, which is not related to a framework. So part of the library is a complete object oriented drawing layer, which is used by several applications for graphic editing and output. Also a complete 3D-rendering system is part of the drawing functionality. The common dialogs for font selection, color chooser, etc. are all part of this library. Also the whole database connectivity is realized here.

All applications are part of application layer 404. The way these applications interact is based on the lower layers. All applications like the word processor application, spreadsheet application, presentation application, charting application, etc. build up this layer. All these applications are realized as shared libraries, which are loaded by the application framework at runtime. The framework provides the environment for all these applications and also provides the functionality for how these applications can interact.

In one embodiment, the user interface library is implemented using native compiled computer code using the visual class library (VCL) that encapsulates all access to the GUI system on user device 230 by application 112 that is executing on server computer system 100. In another embodiment, the user interface library that includes the VCL functionality is implemented in the JAVA programming language.

Figures 5A to 5D are a sequence diagram for one embodiment 'the present invention. Along the horizontal axis are individual objects, where each object is represented as a labeled rectangle. For convenience, only the objects needed to explain the operation are included in each Figure. The vertical axis represents the passage of time from top to bottom of the page. Horizontal lines represent the passing of messages between objects. A dashed line extends down from each rectangle, and a rectangle along the dashed line represents the lifetime of the object. Moreover, brackets are used to show which objects exist on client device 102i and which objects exist on server 100.

In one embodiment, lightweight component 230 is embedded in a graphical environment that includes a display software program with a graphical user interface (GUI). The graphical user interface is referred to as a panel. An example of one implementation is a Java bean, which is embedded in an HTML page and rendered by a browser. This Java bean represents a view (in a window) of an office application component (e.g. STAROFFICE Writer) or another visual office component. In this environment, the user is using a browser on user device 102i that utilizes the JAVA Abstract Window Toolkit (AWT). In another embodiment, a native C-programming language plug-in is used in the browser on user device 102i to implement this invention. As is known to those of skill in the art, the AWT is a set of JAVA classes and interfaces that are mapped to a concrete implementation on each different platform. The sequence displayed in Figures 5A to 5D is for a JAVA-enabled system.

When the user requests an application on the server, a JAVA bean, an object StarBean 511, is instantiated. Object StarBean 511 automatically issues a call to a method connect in the API of an object connection 512. The call to method connect includes a URL to server 100 on which application suite 120 is located.

In response to the call to method connect, object connection 512 calls method connect in object connector 513. In this embodiment, server 100 runs a daemon process 520, sometimes called daemon 520 that includes an object ServiceFactory 521 that accepts Internet Inter-OrB Protocol (IIOP) connections. In response to the call to method connect, connector object 513 makes a connection with daemon process 520 on server 100 and stores a handle object ServiceFactory 521 of daemon 520.

Upon completion of the connection to daemon process 520, connection object 512 calls method getFactory ("Daemon") in the API of object connector 513 to obtain the handle for object ServiceFactory 521.

Next, object StarBean 511 calls method login in the API of object Connection 512 with a user identification, a password, and options for application suite 120 on server 100, which in this embodiment is the STAROFFICE suite of components. In response to the call to method login, object Connection 512 calls method createInstance in the API of object ServiceFactory 521 of daemon 520, and specifies that an instance of the login service is needed.

Object ServiceFactory 521 instantiates object LoginService 522 by calling method activate in the API of object LoginService 522. Object ServiceFactory 521 returns a handle to object LoginService 522 to object connection 512.

Object connection 512 calls method login of object LoginService 522 with the user identification, password, and options. In response to the login call, object LoginService 522 runs method validateLogin to validate the login request. If the login request is valid, object LoginService 522 starts application suite 120 as a new process on server 100 with the rights of the user with userID. Object LoginService 522 calls method activate of the API of object ServiceFactory 531 to instantiate object ServiceFactory 531.

Finally, to proceed with creating the infrastructure needed for application suite 120 and lightweight component 230 to work together, object connection 512, sometimes called connection object 512, calls method getFactory in object connector with an argument "Application" to get the handle to object ServiceFactory 521 that in turn is stored in object Connection 512. Upon activation of object ServiceFactory 531 and return of its handle to object Connection 512, a connection is established between application suite 120 and lightweight component 230 so that the application suite 120 and lightweight component 230 can communicate directly over network 103/106.

Upon object Connection 512 returning processing to object StarBean 511, object StarBean 511 calls method getObject("BeanService") in the API of object Connection 512. In method getObject, connection object 512 calls method createInstance("BeanService") (Fig. 5B) in object ServiceFactory 531 and in turn object ServiceFactory 531 instantiates object BeanService 532 by calling method activate in the API of object BeanService 532. A handle to object BeanService 532 is returned to object StarBean 511 and is stored by object StarBean 511.

Next, object StarBean 511 calls method start in the API of object BeanService 532. A handle to object ClientFactory 515 is passed in the call to method start so that application suite 120 can create windows and any other components on client device 102i needed by application suite 120.

To create the infrastructure needed to run application suite 120 on server 100, object StarBean 512 calls method createBeanWindow of object BeanService 532. Object BeanService 532 then calls method createInstance ("RmFramewindow") in the API of object ClientFactory 515 and object ClientFactory 515 initializes remote frame window object 514 on user device 102i.

Following creation of remote frame window object 514 on user device 102i, object BeanService 532 calls initialize method init(RmFrameWindow) to create an instance of object BeanWindow 534 to support remote frame window object 514. To further initialize object BeanWindow 534, object BeanWindow 534 sends one or more queries to object RmFrameWindow 514 to determine the display capabilities of user device 102i.

Finally, object BeanService 532 calls method init(Window) to instantiate and initialize object BeanFrame 533 for application suite 120. Object BeanFrame 533 controls the environment for this instance of application suite 120. For example, object BeanFrame 533 controls the lifetime of components of the user interface on client device 102i used by application suite 120, the loading of such components, and so on. A handle to object BeanFrame 533 is returned to and stored by object StarBean 511.

Upon receiving the handle to object BeanFrame 533, object StarBean 511 calls method loadDocument(url) in the API of object BeanFrame 533 (Fig. 5C). Here, url is an address, e.g., a uniform resource locator, of the document requested by the user. Object BeanFrame 553 can determine which component is requested in a number of ways. For example, object BeanFrame 533 can ask the underlying transport component for a content type, or perhaps look at the first few bytes of an available number. As a last resort, the extension of the address is used by object BeanFrame 533 to determine which component within application suite 120 to launch. Independent of the technique used to identify the requested runtime environment component, after identifying the component in this embodiment, object BeanFrame 533 calls method init(Window) in component StarWriter 535 in the STAROFFICE application suite.

In this embodiment, the component initialized by BeanFrame 533 must use the remote VCL and only it to handle user interface input/output. However, no other modifications are required to work in this environment. Any prior art application that works in a windowing graphic user interface could be used in place of component StarWriter so along as it included the functionality provided by the remote VCL and used only that functionality to handle user interface input/output.

After component StarWriter 535 is initialized, object BeanFrame 533 calls method load(url) in the API of component StarWriter 535. Component StarWriter 535 loads the document at the address specified in method load and performs methods readDocument and do Layout. Upon completing the window layout, component StarWriter calls method show in the API of object BeanWindow 534, and in response, object BeanWindow 534 calls method show in the API of object RemoteFrameWindow 514. Object RemoteFrameWindow 514 causes the window generated by component StarWriter 535 to be displayed on display screen 295 of user device 102i.

Similarly, as the user of user device 102i performs an input action on the information displayed, the appropriate input event is transmitted from object RmFrameWindow 514 to object BeanWindow 533 and in turn to component StarWriter 535. Conversely, each call to a method in the graphic user interface, e.g., method drawLine, method drawText, etc., is made to the API of object BeanWindow 533 and a corresponding method call is made to a method in the API of object RmFrameWindow 514 by object BeanWindow 533.

Figure 5D is an example of the processing of a mouse click by the user. In this example, the mouse click event is handled by the AWT panel, which in turn calls method onMouseClick(x,y) of object RmFrameWindow 514. Remote frame window object 514, in response, calls method MouseEvent(x,y) of object BeanWindow 534.

Object BeanWindow 534 runs method processUIevent to determine the particular event that occurred, and calls an appropriate method in the API of component StarWriter 535. In this example, object BeanWindow 534 calls method applicationEvent(ButtonClicked) in the API of component StarWriter 535.

In response to the method call, component StarWriter 535 runs methods processApplicationEvent, re-layout, and re-draw. Method re-draw calls the appropriate methods in object BeanWindow 534 that in turns issues corresponding method calls to object RmFrameWindow.

In the embodiment of Figures 5A to 5D, objects 531 to 534 are an example of a user interface infrastructure that receives graphic user interface events from user device 102i, and that the runtime environment component service sends remote graphic user interface commands. Here, commands are the calls to the various methods in the interfaces of the objects. A local command is one on system 100. A remote input action command is a command sent from lightweight component 230 on user device 102i to the user interface infrastructure on system 100 in response to a user input. A remote output command is a command sent by the user interface infrastructure on system 100 to lightweight component 230 on user device 102i. Similarly, object BeanFrame 533 is an example of a local frame object, and object BeanWindow 534 is an example of a local window object. Thus, objects and actions on system 100 are considered local, while objects and actions on user device 102i are considered remote.

Figure 6 is one embodiment of a class diagram for the sequence diagram of Figures 5A to 5D. Figures 7, 8A to 8C, 9, 10A and 10B illustrate one embodiment of interfaces, structures, enumerations and exceptions associated with each interface illustrated in Figure 6 and give a corresponding Table number for each in the description that follows. The names of elements, e.g., interfaces, structures, exceptions, enumerations, strings, constants, etc., are indicative of the nature of the particular element.

In this embodiment of the invention, remote frame window class RmFrameWindow (Figure 6) includes a remote frame window interface *XRmFrameWindow* (Table 1) and a remote output device interface *XRmOutputDevice* (Table 8). Interface *XRmFrameWindow* inherits from interface *XInterface* (Table 2 and Fig. 7) and uses interface *XEventHdl* (Table 4). Interface *XRmFrameWindow*, in the embodiment of Table 1, includes methods Create, ReleaseWindow, SetTitle, Show, SetClientSize, GetClientSize, SetWindowState, GetFontResolution, GetFrameResolutions, ToTop, StartPresentation, SetAlwaysOnTop, ShowFullScreen, CaptureMouse, SetPointer, SetPointerPos, Beep, GetKeyNames, Enable, SetIcon, SetMinClientSize, MouseMoveProcessed, and KeyInputProcessed. (Herein, an italicized phrase and the same phase that is not italicized are the same phrase.)

Method ReleaseWindow notifies the client, that the window connected to this interface is not needed by the server anymore. Whether the real window is destroyed and a new one created on the next call of Create or the real window is cached is up to the client implementation.

TABLE 112.: Interface *XRmFrameWindow*

```
typedef sequence< IDLKeyNameInfo, 1 > KeyNameSequence;


interface XRmFrameWindow :
    com::sun::star::uno::XInterface
{
[oneway] void  Create( [in] unsigned long nWinBits,
    [in] XEventHdl xEventInterface, [in] any
    aSystemWorkWindowToken, [in] XRmFrameWindow
    xParent );
[oneway] void  ReleaseWindow();
[oneway] void  SetTitle( [in] string rTitle );
[oneway] void  Show( [in] boolean bVisible );
[oneway] void  SetClientSize( [in] short nWidth, [in]
    short nHeight );
void GetClientSize( [out] short rWidth, [out] short
    rHeight );
string    GetWindowState();
[oneway] void  SetWindowState( [in] string aState );
void GetFontResolution( [out] long nDPIX, [out] long
    nDPIY );
RmFrameResolutions  GetFrameResolutions();
[oneway] void  ToTop( [in] unsigned short nFlags );
[oneway] void  StartPresentation( [in] boolean
    bStart,[in] unsigned short nStartFlags );
[oneway] void  SetAlwaysOnTop( [in] boolean bOnTop );
[oneway] void  ShowFullScreen([in]boolean bFullScreen);
[oneway] void  CaptureMouse( [in] boolean bMouse );
[oneway] void  SetPointer( [in] unsigned short
    ePointerStyle );
[oneway] void  SetPointerPos( [in] short nX, [in] short
    nY );
[oneway] void  Beep( [in] unsigned short eSoundType );
```

```
void GetKeyNames( [out] KeyNameSequence rKeyNames );
[oneway] void  Enable( [in] boolean bEnable );
[oneway] void  SetIcon( [in] short IconID );
[oneway] void  SetMinClientSize( [in] short Width, [in]
     short Height );


[oneway] void       MouseMoveProcessed();
[oneway] void       KeyInputProcessed();
};
```

Interface *XInterface* (Table 2) is the base interface for other interfaces and provides lifetime control by reference counting. Interface *XInterface* also provides the possibility of querying for other interfaces of the same logical object. Logical object in this case means that the interfaces actually can be supported by internal, i.e., aggregated, physical objects.

Method *query Interface in* interface *XInterface* queries for a new interface to an existing object. Method *acquire* increases a reference counter by one, while method *release* decreases the reference counter by one. When the reference counter reaches a value of zero, the object is deleted.

TABLE 113.: INTERFACE *XInterface*

```
//===================================================
interface XInterface
{
```

```
//-------------------------------------------------------
    /** queries for a new interface to an existing
    object.

        @param aUik
            specifies the Uik of the interface to
            be queried.

        @param ifc
            returns the new interface if the method
            succeeds.

        @returns
            <TRUE/> if the UNO object to which this
            interface referred supports the
            interface denoted by parameter aUik.
    */
  any queryInterface( [in] type aType );

//boolean queryInterface( [in]
//com::sun::star::uno::Uik aUik,
//[out] any ifc );


//-------------------------------------------------------
    /** increases the reference counter by one.
    */
  [oneway] void acquire();


//-------------------------------------------------------
    /** decreases the reference counter by one.

    When the reference counter reaches 0, the object
    gets deleted.
    */
  [oneway] void release();
```

```
};
//============================================================
```

One embodiment of structure Uik in interface *XInterface* is presented in Table 3.

TABLE 114.:   Structure Uik

```
//================================================================

/** specifies a universal interface key.

An UIK is an unambiguous 16-byte value for every
interface.
*/
struct Uik
{
//----------------------------------------------------

// specifies a 4 byte data block.
unsigned long m_Data1;


//----------------------------------------------------

/// specifies a 2 byte data block.
unsigned short m_Data2;


//----------------------------------------------------

/// specifies a 2 byte data block.
unsigned short m_Data3;
```

```
    //-------------------------------------------
-----

    /// specifies a 4 byte data block.
    unsigned long m_Data4;


    //-------------------------------------------
-----

    /// specifies a 4 byte data block.
    unsigned long m_Data5;


    };


    //===========================================
=====
```

Method Create in interface *XRmFrameWindow* of class *RmFrameWindow* (Fig. 6) includes as an input a reference to an event handler interface *XEventHdl* (Table 4). Class *BeanWindow* (Fig. 6) also uses event handler interface *XEventHdl*. In this embodiment, interface *XEventHdl* inherits from interface *XInterface* (Table 2) and uses a structure RmDropFileEvent (Table 5). Interface *XEventHdl* includes methods MouseButtonUp, MouseButttonDown, MouseMove, MouseWheel, KeyInput, KeyUp, Paint, Resize, GetFocus, LoseFocus, Close, QueryDropFile, DropFile, and UserEvent.

One embodiment of structure RmDropFileEvent that is passed in the call to method RmDropFileEvent is presented in Table 5.

TABLE 115.: INTERFACE *XEventHdl*

```
interface XEventHdl : com::sun::star::uno::XInterface
{
[oneway] void  MouseButtonUp( [in] short nX, [in] short
     nY, [in] unsigned short nMode, [in] unsigned short
     nCode, [in] unsigned long nSysTime );
[oneway] void  MouseButtonDown( [in] short nX, [in]
     short nY, [in] unsigned short nMode, [in] unsigned
     short nCode, [in] unsigned long nSysTime );
[oneway] void  MouseMove( [in] short nX, [in] short nY,
     [in] unsigned short nMode, [in] unsigned short
     nCode, [in] unsigned long nSysTime );
[oneway] void  MouseWheel( [in] long nX, [in] long nY,
     [in] unsigned short nCode, [in] unsigned long
     nSysTime , [in] long nDelta, [in] long
     nNotchDelta, [in] unsigned long nScrollLines, [in]
     boolean bHorz);
[oneway] void  KeyInput( [in] unsigned short nKeyCode,
     [in] unsigned short nChar, [in] unsigned short
     nCount );
[oneway] void  KeyUp( [in] unsigned short nKeyCode,
     [in] unsigned short nChar );
[oneway] void  Paint( [in] long nX, [in] long nY, [in]
     long nWidth, [in] long nHeight );
[oneway] void  Resize( [in] short nWidth, [in] short
     nHeight );
[oneway] void  GetFocus();
[oneway] void  LoseFocus();
boolean           QueryDropFile( [inout]
     RmDropFileEvent rDropFileEvent );
boolean           DropFile( [in] RmDropFileEvent
     aDropFileEvent );
[oneway] void  Close();
```

```
[oneway] void  UserEvent( [in] unsigned long EventID,
     [in] any Parameter );
};
```

TABLE 116. Structure *RmDropFileEvent*

```
typedef sequence< string > FileNameSequence;

struct RmDropFileEvent
{
     short                  nX;
     short                  nY;
     FileNameSequence    aFileNameSequence;
     unsigned short      nDropAction;
     unsigned short      nSourceOptions;
     byte                nWindowType;
     boolean                bIsDefault;
};
```

Structures used in interface *XRmFrameWindow* (Table 1 and Fig. 7) include structure RmFrameResolutions (Table 6) and structure IDLKeyNameInfo (Table 7).

TABLE 117.: Structure *RmFrameResolutions*

```
struct RmFrameResolutions
{
        long                    DPIx;
        long                    DPIy;
        long                    FontDPIx;
        long                    FontDPIy;
        unsigned short      Depth;
};
```

TABLE 118.: Structure *IDLKeyNameInfo*

```
struct IDLKeyNameInfo
{
        unsigned short      nCode;
        string              aName;
};
```

As illustrated in Fig. 6, class RmFrameWindow includes remote output device interface *XRmOutputDevice* (Table 8). Interface *XRmOutputDevice* inherits from interface *XInterface* (Table 2), and uses structures IDLFontMetric-Data, KernPair, IDLFontData, IDLFont (Table 9). In the embodiment of Table 8, interface *XRmOutputDevice* includes methods QuerySvOutputDevicePtr, SetClipRegion, ResetClipRegion, GetResolution, GetCharWidth, GetFontMetric, GetKernPairs, GetDevFontList, AddFontAtom, GetGlyphBoundRect, GetGlyphOutline, GetPixel, GetPixelArray, Set-Font, SetTextColor, SetLineColor, SetFillColor, SetRasterOp, CopyArea, CopyBits, Invert, InvertPolygon, InvertTracking, InvertTrackingPolygon, DrawPixel, DrawColoredPixel, DrawPixelArray, DrawLine, DrawRect, DrawPolyLine, DrawPolygon, DrawPolyPolygon, DrawEllipse, DrawArc, DrawPie, DrawCord, DrawGradient, DrawPolyPolyGradient, DrawPolyPolyHatch, DrawText, DrawTextArray, DrawWaveLine, DrawGrid, DrawPolyPolyTransparent, and Draw2ColorFrame.

TABLE 119.: Interface *XRmOutputDevice*

```
interface XRmOutputDevice :
      com::sun::star::uno::XInterface
{
unsigned long  QuerySvOutputDevicePtr();
[oneway] void  SetClipRegion( [in] ByteSequence aData
      );
[oneway] void  ResetClipRegion();
void  GetResolution( [out] long nDPIX, [out] long
      nDPIY, [out] unsigned short nBitCount );
sequence< long >  GetCharWidth( [in] unsigned short
      nStart, [in] unsigned short nEnd );
void  GetFontMetric([out] IDLFontMetricData
      rFontMetric, [in] unsigned short nFirstChar, [in]
      unsigned short nLastCar, [in] boolean
      bGetKernPairs );
sequence< KernPair > GetKernPairs();
void  GetDevFontList( [out] sequence< string >
      FontNameAtoms, [out] sequence< string >
```

```
        StyleNameAtoms, [out] IDLFontDataSequence
        rFontData );
[oneway] void  AddFontAtom( [in] byte Type, [in] string
        Name, [in] unsigned short Atom );
boolean  GetGlyphBoundRect( [in] unsigned short cChar,
        [out] long nX, [out] long nY, [out] long nWidth,
        [out] long nHeight, [in] boolean bOptimize );
boolean  GetGlyphOutline( [in] unsigned short cChar,
        [out] ByteSequence rPoly, [in] boolean bOptimize
        );
void  GetPixel( [in] long nX, [in] long nY, [out]
        unsigned long nColor );
void  GetPixelArray( [in] ByteSequence aData, [out]
        ULongSequence aColors );
[oneway] void  SetFont( [in] IDLFont aFont );
[oneway] void  SetTextColor( [in] unsigned long nColor
        );
[oneway] void  SetLineColor( [in] unsigned long nColor
        );
[oneway] void  SetFillColor( [in] unsigned long nColor
        );
[oneway] void  SetRasterOp( [in] unsigned short nROP );
[oneway] void  CopyArea( [in] long nSrcX, [in] long
        nSrcY,  [in] long nSrcWidth,  [in] long
        nSrcHeight, [in] long nDestX, [in] long nDestY,
        [in] unsigned short nFlags );
[oneway] void  CopyBits( [in] long nSrcX, [in] long
        nSrcY, [in] long nSrcWidth, [in] long nSrcHeight,
        [in] long nDestX, [in] long nDestY, [in] long
        nDestWidth, [in] long nDestHeight, [in]
        XRmOutputDevice xFrom );
[oneway] void  Invert( [in] long nX, [in] long nY, [in]
        long nWidth, [in] long nHeight, [in] unsigned
        short nFlags );
[oneway] void  InvertPolygon( [in] ByteSequence
        aPolygon, [in] unsigned short nFlags );
```

```
[oneway] void  InvertTracking( [in] long nX, [in] long
    nY, [in] long nWidth, [in] long nHeight, [in]
    unsigned short nFlags );
[oneway] void  InvertTrackingPolygon( [in] ByteSequence
    aPolygon, [in] unsigned short nFlags );
[oneway] void  DrawPixel( [in] long nX, [in] long nY );
[oneway] void  DrawColoredPixel( [in] long nX, [in]
    long nY, [in] unsigned long nColor );
[oneway] void  DrawPixelArray( [in] ByteSequence aData,
    [in] ULongSequence aColors );
[oneway] void  DrawLine( [in] long nStartX, [in] long
    nStartY, [in] long nEndX, [in] long nEndY );
[oneway] void  DrawRect( [in] long nX, [in] long nY,
    [in] long nWidth, [in] long nHeight );
[oneway] void  DrawPolyLine( [in] ByteSequence aData );
[oneway] void  DrawPolygon( [in] ByteSequence aData );
[oneway] void  DrawPolyPolygon( [in] ByteSequence aData
    );
[oneway] void  DrawRoundedRect( [in] long nX, [in] long
    nY, [in] long nWidth, [in] long nHeight, [in]
    unsigned long nHorzRound, [in] unsigned long
    nVertRound );
[oneway] void  DrawEllipse( [in] long nX, [in] long nY,
    [in] long nWidth, [in] long nHeight );
[oneway] void  DrawArc( [in] long nX, [in] long nY,
    [in] long nWidth, [in] long nHeight, [in] long
    nStartX, [in] long nStartY, [in] long nEndX, [in]
    long nEndY );
[oneway] void  DrawPie( [in] long nX, [in] long nY,
    [in] long nWidth, [in] long nHeight, [in] long
    nStartX, [in] long nStartY, [in] long nEndX, [in]
    long nEndY );
[oneway] void  DrawChord( [in] long nX, [in] long nY,
    [in] long nWidth, [in] long nHeight, [in] long
    nStartX, [in] long nStartY, [in] long nEndX, [in]
    long nEndY );
```

```
[oneway] void  DrawGradient( [in] long nX, [in] long
    nY, [in] long nWidth, [in] long nHeight, [in]
    ByteSequence aData );
[oneway] void  DrawPolyPolyGradient( [in] ByteSequence
    aPolyPolyData, [in] ByteSequence aGradientData );
[oneway] void  DrawPolyPolyHatch( [in] ByteSequence
    aPolyPolyData, [in] ByteSequence aHatchData );
[oneway] void  DrawText( [in] long nX, [in] long nY,
    [in] string aText );
[oneway] void  DrawTextArray( [in] long nX, [in] long
    nY, [in] string aText, [in] LongSequence aLongs );
[oneway] void  DrawWaveLine( [in] long nStartX, [in]
    long nStartY,  [in] long nEndX, [in] long nEndY,
    [in] unsigned short nStyle );
[oneway] void  DrawGrid( [in] long nMinX, [in] long
    nMaxX,  [in] sequence< long > aHorzValues, [in]
    long nMinY, [in] long nMaxY,  [in] sequence< long
    > aVertValues, [in] unsigned long nFlags );
[oneway] void  DrawPolyPolyTransparent( [in]
    ByteSequence aData, [in] unsigned short
    nTransparencyPercent );
[oneway] void  Draw2ColorFrame( [in] long x, [in] long
    y, [in] unsigned long width, [in] unsigned long
    height, [in] unsigned long leftAndTopColor, [in]
    unsigned long rightAndBottomColor );
};
```

In one embodiment, method GetFontMetric (Table 8) gets the general metrics of the current font. If the value of inputs nFirstChar and nLastChar are not equal, member maCharWidths of output structure IDLFontMetricData (Table 9) is filled as it would be in a call by method GetCharWidth and so saves one synchronous call. If the Boolean input value of variable bGetKernPairs is true, member maKerningPairs of output structure IDLFontMetricData is filled as it would be in a call to method GetKernPairs, and this saves another synchronous call.

In method AddFontAtom, Type is a FontAtomType; Name is the new atom string; and Atom the new atomic value

In Table 9, a brief description of given of the values in the various structures.

TABLE 120.   Structure and Other Information Used
by Interface *XRmOutputDevice*

```
// [in] Eingabe-Parameter. Der "Server" auf dem das
Object liegt // ist der Remote-Client.
// Also "Server" eigentlich "Display"


// [oneway] => Kein warten auf Antwort


struct KernPair
{
     unsigned short      Char1;
     unsigned short      Char2;
     short               Kerning;
};


struct IDLFontMetricData
{
// these data must be set
// Durchschnittsbreite vom Font in Pixeln (must same as
by SetFont)
short                    mnWidth;
// Ascent
```

```
short              mnAscent;
// Descent
short              mnDescent;
// Internal-Leading
short              mnLeading;
// Schraegstellung (bei Italic)
short              mnSlant;
// Erstes druckbare Zeichen im Font
unsigned short    mnFirstChar;
// Letztes druckbare Zeichen im Font
unsigned short    mnLastChar;
// this data should be overwritten
// Fontname: Atom
unsigned short    mnName;
// Stylename: Atom
unsigned short    mnStyleName;
// Rotation
short              mnOrientation;
// Family vom Font
byte              meFamily;
// CharSet vom Font
byte              meCharSet;
// Weight vom Font
byte              meWeight;
// Italic vom Font
byte              meItalic;
// Pitch vom Font
byte              mePitch;
// Type vom Font
byte              meType;
// Ist es ein Device-Font
boolean           mbDevice;
// factor for charwidths
long              mnFactor;
sequence< long >      maCharWidths;
sequence< KernPair >  maKerningPairs;
```

```
};

struct IDLFontData
{
// Struktur zum Abfragen der DevFontList
// Name vom Font: Atom
unsigned short      mnName;
// StyleName vom Font: Atom
unsigned short      mnStyleName;
// Breite vom Font in Pixeln
short               mnWidth;
// Heoehe vom Font in Pixeln
short               mnHeight;
// Family vom Font
byte               meFamily;
// CharSet vom Font
byte               meCharSet;
// Pitch vom Font
byte               mePitch;
// WidthType vom Font
byte               meWidthType;
// Weight vom Font
byte               meWeight;
// Italic vom Font
byte               meItalic;
// Type vom Font
byte               meType;
// bit0: mborientation
//bit 1: mbDevice
byte               mnBools;

};


struct IDLFont
{
// Struktur zum Setzen eines Fonts...
```

```
unsigned short        mnName;
unsigned short        mnStyleName;
short                 mnWidth;
short                 mnHeight;
byte                  meFamily;
byte                  meCharSet;
byte                  meWidthType;
byte                  meWeight;
byte                  meItalic;
byte                  mePitch;
short                 mnOrientation;
};


typedef sequence< byte, 1 > ByteSequence;
typedef sequence< long, 1 > LongSequence;
typedef sequence< unsigned long, 1 > ULongSequence;
typedef sequence< unsigned short , 1 > UShortSequence;
typedef sequence< IDLFontData, 1 > IDLFontDataSequence;


constants FontAtomType
{
     const byte NAME = 0;
     const byte STYLE = 1;
};
```

In Figure 6, class *ClientFactory* includes interface *XMultiInstanceFactory* (Table 10 and Fig. 7). Class *Client-Factory* is called by an object BeanFrame to generate multiple instances of class *RmFrameWindow*. Interface *XMulti-InstanceFactory* inherits from interface *XInterface* (Table 2).

233

TABLE 121.: INTERFACE *XMultiInstanceFactory*

```
interface XMultiInstanceFactory :
      com::sun::star::uno::XInterface
{

      sequence<any> createInstances(
            [in] string aObjectName,
            [in] long nCount);
};
```

In Figure 6, class *ServiceFactory* include interface *XMultiServiceFactory* (Table 11 and Fig. 7). Class *ServiceFactory* is called by an object connector to generate objects LoginService and BeanService. Interface *XMultiServiceFactory* inherits from interface *XInterface* (Table 2) and throws an exception Exception (Table 12).

TABLE 122.:   INTERFACE *XMultiServiceFactory*

```
interface XMultiServiceFactory:
      com::sun::star::uno::XInterface
{
com::sun::star::uno::XInterface createInstance( [in]
      string aServiceSpecifier )
      raises( com::sun::star::uno::Exception );
com::sun::star::uno::XInterface
      createInstanceWithArguments(
            [in] string ServiceSpecifier,
            [in] sequence<any> Arguments )
```

234

```
        raises( com::sun::star::uno::Exception );
sequence<string> getAvailableServiceNames();
};
```

The service factory objects support this interface for creating components by a specifying string, i.e. the service name. In the embodiment of Table 11, interface *XMultiServiceFactory* includes methods createInstance, createInstanceWithArguments, and getAvailableServiceNames.

Method createInstance creates an instance of a component which supports the services specified by the factory. Input parameter ServiceSpecifier is a service name that specifies the service that should be created by this factory.

Method createInstanceWithArguments creates an instance of a component which supports the services specified by the factory. Input parameter aArguments is the values of the arguments that depend on the service specification of the factory. Normally the factory delegates the arguments to the method init() of the created instance. The factory is explicitly allowed to modify, delete or add arguments. The conversion rules of the arguments are specified by a converter service. Input parameter ServiceSpecifier is a service name that specifies the service that should be created by this factory.

Method getAvailableServiceNames returns a sequence of all service identifiers, which can be instantiated.

Table 12 presents one embodiment of exception *Exception* that is used by interface *XMultiServiceFactory*.

## TABLE 123.: EXCEPTION *Exception*

```
exception Exception
{
string Message;
com::sun::star::uno::XInterface Context;
};
```

In this embodiment, exception *Exception* is the basic exception from which all other exceptions are derived. Parameter Message specifies a detailed message of the exception or an empty string if the callee does not describe the exception. Context is an object that describes the reason for the exception. Object Context may be NULL if the callee does not describe the exception.

Service LoginService that is instantiated by object ServiceFactory of the daemon includes an interface *XLogin* (Table 13 and Fig. 7). Interface *XLogin* inherits from interface *XInterface* and uses an enumeration *ResultofLogin*.

## TABLE 124.:  INTERFACE *XLogin*

```
enum ResultofLogin
```

```
{
    OK,
    NO_LICENSE,
    ALREADY_LOGGED_IN,
    SECURITY_VIOLATION,
    COULD_NOT_TO_FILESERVER,
    NO_CONFIGURATION,
    UNKNOWN_ERROR
    };
interface XLogin: com::sun::star::uno::XInterface
{
Boolean  installationHasBeenCompleted ( [in] string
    sNameOfUser );
void  completeInstallation ( [in] string sNameOfUser,
    [in] string sPassword );
ResultofLogin  login  ( [in] string sNameOfUser,  [in]
    string sPassword, [in] string sNameOfWorkstation,
    [in] string sParameter );
string  getQualifiedNameOfUser ( [in] string
    sNameOfUser );
};
```

In the embodiment of Table 13, interface *XLogin* includes methods installationHasBeenCompleted, completeInstallation, login, and getQualifiedNameOfUser.

Class BeanService includes an interface *XRmStarOffice* in the embodiment of Figure 6. One embodiment of interface *XRmStarOffice* is presented in Table 14. Interface *XRmStarOffice* inherits from interface *XInterface* and uses interfaces *XMultiServiceFactory* (Table 11) and *XRmFrameWindow* (Table 1). See Figure 7.

TABLE 125.:INTERFACE XRmStarOffice

```
typedef enum _StartUpError {
     SOFFICE_NO_ERROR,
     SOFFICE_WRONG_LOGIN,
     SOFFICE_SERVICE_NOT_FOUND,
     SOFFICE_CONNECTION_REFUSED,
     SOFFICE_NO_LICENSE,
     SOFFICE_UNKNOWN_ERROR,
     SOFFICE_ALREADY_STARTED
} StartUpError;

constants StarOfficeServerType
{
     const long APPSERVER    = 0;
     const long BEANSERVER   = 1;
     const long ONESERVER    = 2;
};
interface XRmStarOffice :
     com::sun::star::uno::XInterface
{
/** AppName+Params+Version+Language, weil ueber den
Demon dann spaeter auch andere Programme gestartet
werden koennen...
*/
StartUpError    Start(
     [in] com::sun::star::lang::XMultiServiceFactory
              xClientFactory,
     [in] string aConnectionName,
     [in] string aUserName,
     [in] string aPassword,
     [in] string aFileServer,
     [in] string    aClientSystemName,
     [in] string    aAppName,
```

```
        [in] string     aAppParams,
        [in] unsigned long nAppLanguage,
        [in] unsigned long nRemoteVersion,
        [in] long servertype
);
[oneway] void  SetUserInfoForPrinting(
            [in] string AuserName,
            [in] string aPassword );
void  AddRemotePrinter(
        [in] string aName,
        [in] string aServer,
        [in] boolean bSetAsDefault,
        [in] boolean bIsLocal );
com::sun::star::uno::XInterface CreateBeanWindow(
        [in] XRmFrameWindow xFrameWin,
        [in] com::sun::star::lang::XMultiServiceFactory
                xClientFactory,
        [in] any aSystemWindowToken );
};
```

In the embodiment of Table 14, interface *XRmStarOffice* includes methods Start, SetUserInfoForPrinting, AddRemotePrinter, and CreateBeanWindow. Method start receives as input a reference to object ClientFactory, a user name, a password, identification of a file server, and a specification of the application that is to be started, e.g., parameters application name, application parameters, application language, and version. Method CreateBeanWindow receives a reference to object RmFrameWindow, and object ClientFactory as inputs.

Class BeanFrame (Fig. 6) includes two interfaces, interface *XFrame* (Table 15) and interface *XDispatchProvider* (Table 62 and Fig. 9). In the embodiment of Table 15, interface *XFrame* inherits from interface *XComponent* (Table 16). Interface *XFrame* uses interfaces *XWindow* (Table 19), *XController* (Table 53 and Fig. 8C), and *XFrameActionListener* (Table 59 and Fig. 8C). As illustrated in Figures 8A to 8C, each of these interfaces uses other interfaces, structures, exceptions, and enumerations that are described more completely below.

In the embodiment of Table 15, interface *XFrame* includes methods initialize, setCreator, getCreator, getName, setName, findFrame, isTop, activate, deactivate, setComponent, getComponentWindow, getController, contextChanged, addFrameActionListener, and removeFrameActionListener

238

TABLE 126.:   INTERFACE *XFRAME*

```
interface XFrame: com::sun::star::lang::XComponent
{
void initialize( [in] com::sun::star::awt::XWindow
     xWindow );
com::sun::star::awt::XWindow getContainerWindow();


[oneway] void setCreator(
     [in] XFramesSupplier xCreator );


[const] XFramesSupplier getCreator();


  [const] string getName();
```

```
[oneway] void setName( [in] string aName );


com::sun::star::frame::XFrame findFrame( [in] string
      aTargetFrameName,   [in] long nSearchFlags );


boolean isTop();


[oneway] void activate();


 [oneway] void deactivate();


boolean isActive();


boolean setComponent( [in] com::sun::star::awt::XWindow
      xComponentWindow,   [in]
      com::sun::star::frame::XController xController );
 [const] com::sun::star::awt::XWindow
      getComponentWindow();
[const] XController getController();
void contextChanged();
[oneway] void addFrameActionListener(
      [in]XFrameActionListener xListener );
[oneway] void removeFrameActionListener( [in]
      XFrameActionListener xListener );
};
```

Interface *XFrame* makes it possible to control a frame. Method initialize is called to initialize the frame within a window. Method getContainerWindow provides access to the window of the frame. Normally this is used as the parent window of the controller window. Method setCreator sets the frame container that created this frame. Only the creator is allowed to call method setCreator. Method getCreator returns the frame container that created this frame. Method getName returns the programmatic name of this frame. Method setName sets the name of the frame. Normally, the name of the frame is set initially.

Method findFrame searches for a frame with the specified name. Frames may contain other frames, e.g., a frameset, and may be contained in other frames. This hierarchy is searched with this method. First some special names are taken into account, i.e. "","_self", "_top", "_active" etc., flag nSearchFlags is ignored when comparing these names with parameter aTargetFrameName, and further steps are controlled by flag nSearchFlags. If allowed, the name of the frame itself is compared with the desired one, then (again, if allowed )the method is called for all children of the frame. Finally, the method may be called for the parent frame (if allowed). If no frame with the given name is found, a new top frame is created if this is not suppressed by a special value of flag FrameSearchFlag. The new frame also gets the desired name.

Method isTop determines if the frame is a top frame. In general, a top frame is the frame which is a direct child of a task frame or which does not have a parent. If a frame returns for this method, all calls have to stop the search at such a frame unless the flag FrameSearchFlag::TASKS is set.

Method activate activates this frame and thus the component within. At first, the frame sets itself as the active frame of its creator by calling FrameAction::FRAME_ACTIVATED. The component within this frame may listen to this event to grab the focus on activation. For simple components, this can be done by a Frame Loader. Finally, most frames may grab the focus to one of its windows or forward the activation to a sub-frame.

Method deactivate is called by the creator frame when another sub-frame is activated. At first the frame deactivates its active sub-frame, if any, and then broadcasts a Frame Action Event with FrameAction:: FRAME_DEACTIVATING.

Method isActive determines if the frame is active. Method setComponent sets a new component into the frame. Method getComponentWindow returns the current visible component in this frame. The frame is the owner of the window. Method getController returns the current controller within this frame. Normally, it is set by a frame loader.

Method contextChanged notifies the frame that the context of the controller within this frame changed (i.e. the selection). According to a call to this interface, the frame calls with FrameAction::CONTEXT_CHANGED to all listeners, which are registered using this frame. For external controllers, this event can be used to requery dispatches.

Method addFrameActionListener registers an event listener, which is called when certain things happen to the components within this frame or within sub-frames of this frame. For example, it is possible to determine instantiation/destruction and activation/deactivation of components. Method removeFrameActionListener unregisters an event listener, which was registered with addFrameActionListener().

Interface *XFrame* inherits from interface *XComponent.* One embodiment of interface *XComponent* is presented in Table 16. Interface *XComponent* inherits from interface *XInterface* (Table 2) and uses interface *XEventListener* that in turn uses structure *EventObject.* See Figure 8A.

TABLE 127.: INTERFACE *XComponent*

```
interface XComponent: com::sun::star::uno::XInterface
{
void dispose();
void addEventListener( [in] XEventListener xListener );
void removeEventListener(
            [in] XEventListener aListener );
};
```

Interface *XComponent* controls the lifetime of components. Actually the real lifetime of an object is controlled by references kept on interfaces of the object. There are two distinct meanings in keeping a reference to an interface: first is to own the object; and second is to know the object.

To prevent cyclic references from resulting in failure to destroy an object, references of interfaces to the object are allowed only (i) by the owner, (ii) if the reference is very temporary, or (iii) you are registered as an Event Listener at that object and cleared the reference when "disposing" is called.

An owner of an object calls method dispose to dispose of the object. Only the owner of the object calls method *dispose* if the object should be destroyed. All objects and components must release the references to the objects. If the object is a broadcaster, all listeners are removed and method *XEventListener::disposing()* is called on all listeners.

Due to the importance of the concept of method *XComponent::dispose(),* a figurative example is provided.

Imagine there was a hole in the floor and some people around it were holding a box (our component). Everyone who holds the box for a longer time than just temporarily (i.e. to put something in or get something out) has to watch a light bulb, which is attached to the box (listening to event *XEventListener::disposing()*). Now, when the owner of the box switched the light on (calling method *XComponent::dispose()*), everybody holding the box had to take their hands off (clear the interface handles). If and only if everyone did that, did the box fall (getting deleted). However, only the owner is allowed to switch the light on! After method dispose is called, the instance has to throw exception DisposedException for all non-event-method calls and event-method calls have to be ignored.

The following is an example of one embodiment. void dispose()

```
{
// make a copy
Listener [] aTmpListeners = MyListeners.clone();

// clear all listeners (against recursion)
MyListeners.clear();

// call all listeners
EventObject aEvt = new EventObject();
aEvt.xSource = this;
for( i = 0; i &lt;aTmpListeners.length; i++
aTmpListeners[i].disposing( aEvt );
}
```

Method addEventListener adds an event listener to the listener list for the object. The broadcaster fires the disposing method of this listener if method dispose() is called. Conversely, method removeEventListener removes an event listener from the listener list for the object.

As described above, interface *XComponent* uses interface *XEventListener* (Table 17.)

TABLE 128.:   INTERFACE XEventListener

```
interface XEventListener:
      com::sun::star::uno::XInterface
{
void disposing( [in] com::sun::star::lang::EventObject
```

```
        Source );
};
```

Interface *XEventListener* (Table 17) inherits from interface *XInterface* (Table 2). Interface *XEventListener* is a tagging interface that all event listener interfaces must extend. Method disposing is called when the broadcaster is about to be disposed. All listeners and all other objects, which reference the broadcaster should release the references. One embodiment of structure *EventObject* is presented in Table 18.

TABLE 129.: Structure *EventObject*

```
struct EventObject
{
com::sun::star::uno::XInterface Source;
};
```

Structure *EventObject* specifies the base for all event objects and identifies the source of the event. Field Source refers to the object that fired the event.

As explained above, interface *XWindow* (Table 19) is used by interface *XFrame* (Table 15). See also Fig. 8A. In the embodiment of Table 19, interface *XWindow* inherits from interface *XComponent* (Table 16) and uses interfaces *XWindowListener* (Table 21), *XFocusListener* (Table 23), *XKeyListener* (Table 25), *XMouseListener* (Table 28), *XMouseMotionListener* (Table 30), and *XPaintListener* (Table 31), and structure *Rectangle* (Table 20), each of which is described herein.

TABLE 130.:   INTERFACE *XWindow*

```
interface XWindow: com::sun::star::lang::XComponent
{
[oneway] void setPosSize( [in] long X, [in] long Y,
     [in] long Width, [in] long Height, [in] short
     Flags );
[const] com::sun::star::awt::Rectangle getPosSize();
[oneway] void setVisible( [in] boolean Visible );
[oneway] void setEnable( [in] boolean Enable );
[oneway] void setFocus();
[oneway] void addWindowListener( [in]
     com::sun::star::awt::XWindowListener xListener );
[oneway] void removeWindowListener( [in]
     com::sun::star::awt::XWindowListener xListener );
[oneway] void addFocusListener( [in]
     com::sun::star::awt::XFocusListener xListener );
[oneway] void removeFocusListener( [in]
     com::sun::star::awt::XFocusListener xListener );
[oneway] void addKeyListener( [in]
     com::sun::star::awt::XKeyListener xListener );
[oneway] void removeKeyListener( [in]
     com::sun::star::awt::XKeyListener xListener );
[oneway] void addMouseListener( [in]
     com::sun::star::awt::XMouseListener xListener );
[oneway] void removeMouseListener( [in]
     com::sun::star::awt::XMouseListener xListener );
[oneway] void addMouseMotionListener( [in]
     com::sun::star::awt::XMouseMotionListener
```

```
      xListener );
[oneway] void removeMouseMotionListener( [in]
      com::sun::star::awt::XMouseMotionListener
      xListener );
[oneway] void addPaintListener( [in]
      com::sun::star::awt::XPaintListener xListener );
[oneway] void removePaintListener( [in]
      com::sun::star::awt::XPaintListener xListener );
};
```

Interface *XWindow* (Table 19) specifies the basic operations for a window component. A window is a rectangular region on an output device with a position, size, and internal coordinate system. The main sense of a window is to receive events from the user.

Method setPosSize sets the outer bounds of the window. Method getPosSize returns the outer bounds of the window. Method setVisible shows or hides the window depending on the parameter. Method setEnable enables or disables the window depending on the parameter. Method setFocus sets the focus to the window. Method addWindowListener adds the specified component listener to receive component events from this window component. Method removeWindowListener removes the specified listener so it no longer receives component events from this window component. Method addFocusListener adds the specified focus listener to receive focus events from this window component. Method removeFocusListener removes the specified focus listener so it no longer receives focus events from this component. Method addKeyListener adds the specified key listener to receive key events from this component. Method removeKeyListener removes the specified key listener so it no longer receives key events from this component. Method addMouseListener adds the specified mouse listener to receive mouse events from this component. Method removeMouseListener removes the specified mouse listener so it no longer receives mouse events from this component. Method addMouseMotionListener adds the specified mouse motion listener to receive mouse motion events from this component. Method removeMouseMotionListener removes the specified mouse motion listener so it no longer receives mouse motion events from this component. Method addPaintListener adds the specified paint listener to receive paint events from this component. Method removePaintListener removes the specified paint listener so it no longer receives paint events from this component.

Structure *Rectangle* (Table 20) specifies a rectangular area by position and size. Field Y specifies the y-coordinate. Field Width specifies the width. Field Height specifies the height.

TABLE: 131.:   STRUCTURE *Rectangle*

```
struct Rectangle
{
long X;
long Y;
long Width;
long Height;
};
```

An embodiment of interface *XWindowListener* that is used in the above embodiment of interface *XWindow* (Table 19) is presented in Table 21. Interface *XWindowListener* inherits from interface *XEventListener* (Table 17) and uses structure *WindowEvent* (Table 22.)

TABLE 132.:   INTERFACE XWindowListener

```
interface XWindowListener:
      com::sun::star::lang::XEventListener
{
[oneway] void windowResized( [in]
      com::sun::star::awt::WindowEvent e );
[oneway] void windowMoved( [in]
      com::sun::star::awt::WindowEvent e );
[oneway] void windowShown( [in]
      com::sun::star::lang::EventObject e );
[oneway] void windowHidden( [in]
      com::sun::star::lang::EventObject e );
};
```

Interface *XWindowListener* makes it possible to receive window events. Component events are provided only for notification purposes. Moves and resizes are handled internally by the window component, so that the GUI layout works properly independent of whether a program registers such a listener. Method windowResized is invoked when the window has been resized. Method windowMoved is invoked when the window has been moved. Method window-

Shown is invoked when the window has been shown. Method windowHidden is invoked when the window has been hidden.

One embodiment of structure *WindowEvent* used in Table 21 is presented in Table 22.

TABLE 133.:  STRUCTURE *WindowEvent*

```
struct WindowEvent: com::sun::star::lang::EventObject
{
long X;
long Y;
long Width;
long Height;
long LeftInset;
long TopInset;
long RightInset;
long BottomInset;
};
```

Structure *WindowEvent* specifies the component-level keyboard event and inherits from structure *EventObject* (Table 18). Field X specifies the outer X-position of the window. Field Y specifies the outer Y-position of the window. Field Width specifies the outer (total) width of the window. Field Height specifies the outer (total) height of the window. Field LeftInset specifies the inset from the left. The inset is the distance between the outer and the inner window, in other words in this case it is the width of the left border. Field TopInset specifies the inset from the top. The inset is the distance between the outer and the inner window, in other words in this case it is the height of the top border. Field RightInset specifies the inset from the right. The inset is the distance between the outer and the inner window, in other words in this case it is the width of the right border. Field BottomInset specifies the inset from the bottom. The inset is the distance between the outer and the inner window, in other words in this case it is the height of the bottom border.

An embodiment of interface *XFocusListener* that is used in the above embodiment of interface *XWindow* (Table 19) is presented in Table 23. Interface *XFocusListener* inherits from interface *XEventListener* (Table 17) and uses structure FocusEvent (Table 24.)

TABLE 134.: INTERFACE *XFocusListener*

```
interface XFocusListener:
     com::sun::star::lang::XEventListener
{
[oneway] void focusGained( [in]
     com::sun::star::awt::FocusEvent e );
[oneway] void focusLost( [in]
     com::sun::star::awt::FocusEvent e );
};
```

Interface *XFocusListener* makes it possible to receive keyboard focus events. The window, which has the keyboard focus, is the window, which gets the keyboard events. Method focusGained is invoked when a window gains the keyboard focus. Method focusLost is invoked when a window loses the keyboard focus.
One embodiment of structure *FocusEvent* used in Table 23 is presented in Table 24.

TABLE 135.:   STRUCTURE *FocusEvent*

```
struct FocusEvent: com::sun::star::lang::EventObject
{
short FocusFlags;
com::sun::star::uno::XInterface NextFocus;
boolean Temporary;
};
```

Structure *FocusEvent* specifies a keyboard focus event, and inherits from structure *EventObject* (Table 18). There are two levels of focus change events: permanent and temporary. Permanent focus change events occur when focus is directly moved from one component to another, such as through calls to method requestFocus() or as the user uses the Tab key to traverse components. Temporary focus change events occur when focus is gained or lost for a component as the indirect result of another operation, such as window deactivation or a scrollbar drag. In this case, the original focus state is automatically restored once that operation is finished, or for the case of window deactivation, when the window is reactivated. Both permanent and temporary focus events are delivered using the FOCUS_GAINED and FOCUS_LOST event ids; the levels may be distinguished in the event using the method isTemporary()
Field FocusFlags specifies the reason for the focus change as an arithmetic, or combination of FocusChangeReason. Field NextFocus contains the window which gets the focus on a lose focus event. Field Temporary specifies if this focus change event is a temporary change.

An embodiment of interface *XKeyListener* that is used in the above embodiment of interface *XWindow* (Table 19) is presented in Table 25. Interface *XKeyListener* inherits from interface *XEventListener* (Table 17) and uses structure *KeyEvent* (Table 24.) that in turn inherits from structure *InputEvent* (Table 27).

TABLE 136.: INTERFACE *XKeyListener*

```
interface XKeyListener:
      com::sun::star::lang::XEventListener
{
[oneway] void keyPressed( [in]
      com::sun::star::awt::KeyEvent e );
[oneway] void keyReleased( [in]
      com::sun::star::awt::KeyEvent e );
      };
```

Interface *XKeyListener* makes it possible to receive keyboard events. Method keyPressed is invoked when a key has been pressed. Method keyReleased is invoked when a key has been released.

The embodiment of structure *KeyEvent* in Table 26 inherits from structure *InputEvent* (Table 27), as described above. Structure *KeyEvent* specifies the component-level keyboard event. Field KeyCode contains the integer code representing the key of the event. This is a constant from the constant group Key. Field KeyChar contains the Unicode character generated by this event or 0. Field KeyFunc contains the function type of the key event. This is a constant from the constant group KeyFunction.

TABLE 137.: STRUCTURE *KeyEvent*

```
struct KeyEvent: com::sun::star::awt::InputEvent
{
short KeyCode;
char KeyChar;
short KeyFunc;
      };
```

Structure *InputEvent* is the root event class for all component-level input events and inherits from structure *EventObject* (Table 18). Input events are delivered to listeners before they are processed normally by the source where they originated. Structure *InputEvent* contains the modifier keys, which were pressed while the event occurred, i.e., zero or more constants from the KeyModifier group.

TABLE 138.:   STRUCTURE *InputEvent*

```
struct InputEvent: com::sun::star::lang::EventObject
{



short Modifiers;
    };
```

An embodiment of interface *XMouseListener* that is used in the above embodiment of interface *XWindow* (Table 19) is presented in Table 28. Interface *XMouseListener* inherits from interface *XEventListener* (Table 17) and uses structure *MouseEvent* (Table 29.) that in turn inherits from structure *InputEvent* (Table 27).

TABLE 139.: INTERFACE *XMouseListener*

```
{
[oneway] void mousePressed( [in]
     com::sun::star::awt::MouseEvent e );
[oneway] void mouseReleased( [in]
     com::sun::star::awt::MouseEvent e );
[oneway] void mouseEntered( [in]
     com::sun::star::awt::MouseEvent e );
[oneway] void mouseExited( [in]
     com::sun::star::awt::MouseEvent e );
     };
```

Interface *XMouseListener* makes it possible to receive events from the mouse in a certain window. Method mousePressed is invoked when a mouse button has been pressed on a window. Method mouseReleased is invoked when a mouse button has been released on a window. Method mouseEntered is invoked when the mouse enters a window. Method mouseExited is invoked when the mouse exits a window.
The embodiment of structure *MouseEvent* in Table 29 inherits from structure *InputEvent* (Table 27).

## TABLE 140.: STRUCTURE *MouseEvent*

```
struct MouseEvent: com::sun::star::awt::InputEvent
{
short Buttons;
long X;
long Y;
long ClickCount;
boolean PopupTrigger;
        };
```

Structure *MouseEvent* specifies an event from the mouse. Field Buttons contains the pressed mouse buttons, which are zero or more constants from the group MouseButton. Field X contains the x coordinate location of the mouse. Field Y contains the y coordinate location of the mouse. Field ClickCount contains the number of mouse clicks associated with event. Field PopupTrigger specifies if this event is a popup-menu trigger event.

An embodiment of interface *XMouseMotionListener* that is used in the above embodiment of interface *XWindow* (Table 19) is presented in Table 30. Interface *XMouseMotionListener* inherits from interface *XEventListener* (Table 17) and uses structure *MouseEvent* (Table 29).

## TABLE 141.: INTERFACE *XMouseMotionListener*

```
interface XMouseMotionListener:
     com::sun::star::lang::XEventListener
{
void mouseDragged( [in] com::sun::star::awt::MouseEvent
     e );
void mouseMoved( [in] com::sun::star::awt::MouseEvent e
     );
     };
```

Interface *XMouseMotionListener* makes it possible to receive mouse motion events on a window. Method mouseDragged is invoked when a mouse button is pressed on a window and then dragged. Mouse drag events continue to be delivered to the window where the first event originated until the mouse button is released independent of whether the mouse position is within the bounds of the window. Method MouseMoved is invoked when the mouse button has been moved on a window with no buttons down.

An embodiment of interface *XPaintListener* that is used in the above embodiment of interface *XWindow* (Table 19) is presented in Table 31. Interface *XPaintListener* inherits from interface *XEventListener* (Table 17) and uses structure *PaintEvent* (Table 32) that inherits from structure *EventObject* (Table 18) and structure *Rectangle* (Table 20). See Figure 8B.

TABLE 142.: INTERFACE *XPaintListener*

```
interface XPaintListener:
     com::sun::star::lang::XEventListener
{
[oneway] void windowPaint( [in]
     com::sun::star::awt::PaintEvent e );
     };
```

Interface *XPaintListener* makes it possible to receive paint events. Method WindowPaint is called when a region of the window becomes invalid, for example, because another window was moved away.

TABLE 143.: STRUCTURE *PaintEvent*

```
struct PaintEvent: com::sun::star::lang::EventObject
{
com::sun::star::awt::Rectangle UpdateRect;
short Count;
     };
```

Structure *PaintEvent* specifies the paint event for a component. This event is a special type, which is used to ensure that paint/update method calls are serialized along with the other events delivered from the event queue. Field UpdateRect contains the rectangle area, which needs to be repainted. Field Count contains the number of paint events that follows this event if it is a multiple PaintEvent. Paint events can be collected until Count is zero.

An embodiment of interface *XFramesSupplier* that is used in the above embodiment of interface *XWindow* (Table 19) is presented in Table 33. Interface *XFramesSupplier* inherits from interface *XFrame* (Table 15) and uses interface *XFrames* that in turn inherits from several other interfaces as illustrated in Figure 8B, and uses several structures, enumerations, and exceptions. One embodiment of each of these interfaces, structures, enumeration, and exceptions are described herein.

TABLE 144.: INTERFACE *XFramesSupplier*

```
interface XFramesSupplier: XFrame
{
XFrames getFrames();
[const] XFrame getActiveFrame();
void setActiveFrame( [in] XFrame xFrame );
        };
```

Method getFrames returns the collection of (sub-) frames, which is represented by a container FramesContainer. Method getActiveFrame returns the sub-frame, which is active within this frame. This may be the frame itself. The active frame is defined as the frame, which contains (recursively) the window with the focus. If no window within the frame contains the focus, this method returns the last frame, which had the focus. If no containing window ever had the focus, the first frame within this frame is returned.

Method setActive Frame is called on activation of a direct sub-frame. This method is allowed to be called only by a sub-frame. After this call, the frame specified by input parameter xFrame is returned. In general this method first calls the method at the creator frame with this as the current argument. Then it broadcasts the FrameActionEvent FrameAction::FRAME_ACTIVATED.

In the embodiment of Table 34, interface *XFrames* inherits from interface *XIndexAccess* (Table 35). Interface *XFrames* manages and creates frames. Frames may contain other frames by implementing an interface *XFrames* and may be contained in other frames.

TABLE 145.: INTERFACE *XFrames*

```
interface XFrames:
        com::sun::star::container::XIndexAccess
{
void append(
        [in] com::sun::star::frame::XFrame xFrame );
sequence<com::sun::star::frame::XFrame> queryFrames(
        [in] long nSearchFlags );
void remove( [in] com::sun::star::frame::XFrame xFrame
        );
        };
```

Method append appends the specified Frame to a list of sub-frames. Method queryFrames returns all child frames of the container, which are intended to be visible to other objects. The content of the sequence may be limited by the caller through the flag FrameSearchFlag.

Method remove removes the frame from its container. The creator attribute of the frame must be reset by the caller of this method.

The embodiment of interface *XIndexAccess* in Table 35 provides access to the elements of a collection through an index. This interface should only be used if the data structure itself is indexed.

TABLE 146.:   INTERFACE *XIndexAccess*

```
interface XIndexAccess:
      com::sun::star::container::XElementAccess
{
[const] long getCount();
[const] any getByIndex( [in] long Index )
      raises(
      com::sun::star::lang::IndexOutOfBoundsException,
      com::sun::star::lang::WrappedTargetException );
      };
```

Method getCount returns the number of elements. Method getByIndex returns the element at the specified index. Parameter Index specifies the position in the array. The first index is 0. Method getByIndex throws com::sun::star::lang::IndexOutOfBoundsException (Table 52) if the index is not valid. Method getByIndex throws com::sun::star::lang::WrappedTargetException (Table 49), if the implementation has internal reasons for exceptions that are wrapped in exception WrappedTargetException.

In this embodiment, interface *XElementAccess* is the base interface of all collection interfaces.

TABLE 147.:   INTERFACE *XElementAccess*

```
interface XElementAccess:
      com::sun::star::uno::XInterface
{
[const] TYPE_XIDLCLASS getElementType();
[const] boolean hasElements();
      };
```

Interface XElementAccess inherits from interface XInterface (Table 2). Method getElementType returns the type of the elements. Void means that the container is a multi-type container and the exact types with this interface cannot be determined with this method. Method hasElements returns <TRUE> if the object contain elements, otherwise <FALSE>.

One embodiment of interface *XIdlClass* is presented in Table 37. Interface *XIdlClass* provides information about a type or module. Every array also belongs to a type that is reflected as an XIdlClass object that is shared by all arrays with the same element type and number of dimensions. Finally, any of the primitive IDL types are also represented as XIdlClass objects. This includes "void, any, boolean, char, float, double, octet, short, long, hyper, unsigned octet, unsigned short, unsigned long" and "unsigned hyper". Interface *XIdlClass* inherits from interface *XInterface* (Table 2)

<div align="center">

TABLE 148.:   INTERFACE *XIdlClass*

</div>

```
interface XIdlClass: com::sun::star::uno::XInterface
{
sequence<XIdlClass> getClasses();
XIdlClass getClass( [in] string aName );
boolean equals( [in] XIdlClass Type );
boolean isAssignableFrom( [in] XIdlClass xType );
com::sun::star::uno::TypeClass getTypeClass();
string getName();
[const] com::sun::star::uno::Uik getUik();
sequence<XIdlClass> getSuperclasses();
sequence<XIdlClass> getInterfaces();
XIdlClass getComponentType();
XIdlField getField( [in] string aName );
sequence<XIdlField> getFields();
XIdlMethod getMethod( [in] string aName );
sequence<XIdlMethod> getMethods();
XIdlArray getArray();
void createObject( [out] any obj );
      };
```

Method getClasses returns all types and modules, which are declared in this class. Method getClass returns a type or module with the given name that is declared in this class. Method equals returns <TRUE> if the instances describe the same type, otherwise <FALSE>. Method isAssignableFrom tests if the parameter xType is a subclass of this class. Method getTypeClass returns the type that this instance represents. Method getName returns the fully qualified name of the type of object (class, interface, array, sequence, struct, union, enum or primitive) represented by this XIdlClass object. Method getUik returns the UIK from this type. If the type has no UIK, the returned UIK is zero.

If this object represents an interface or a class, the objects that represent the superclasses or superinterfaces of that class are returned by method getSuperclasses. If this object is the one that represents the topmost class or interface, an empty sequence is returned.

Method getInterfaces determines the interfaces implemented by the class or interface represented by this object. If the class or interface implements no interfaces, the method returns a sequence of length 0.

If this class represents an array or sequence type, method GetComponentType returns the XIdlClass object representing the component type of the array or sequence; otherwise it returns null. Method getField returns an XIdlField object that reflects the specified member field of the class, interface, struct, union, enum or exception represented by this XIdlClass object. If a field with the specified name is not found, 0 is returned. The field to be reflected is located by searching all the member fields of the class, interface, struct, union, enum or exception represented by this XIdlClass object for a field with the specified name or for NULL, if a field with the specified name is not found. Parameter aName specifies the simple name of the desired field.

Method getFields returns a sequence containing Field objects reflecting all the accessible fields of the class, interface, struct, union or enum represented by this XIdlClass object. Method getFields returns a sequence of length 0 if the class or interface has no accessible fields, or if it represents an array, a sequence or a primitive type. Specifically, if this XIdlClass object represents a class, this method returns the fields of this class and of all its superclasses. If this XIdlClass object represents an interface, the method returns the fields of this interface and of all its superinterfaces. If this XIdlClass object represents an array, sequence or primitive type, this method returns a sequence of length 0.

Method getMethod returns an XIdlMethod object that reflects the specified member method of the interface represented by this XIdlClass object. If a method with the specified name is not found, "0" is returned. The method to be reflected is located by searching all the member methods of the interface represented by this XIdlClass object for a method with the specified name. Parameter aName specifies the simple name of the desired method.

Method getMethods returns a sequence containing XIdlMethod objects reflecting all the member methods of the class or interface represented by this XIdlClass object, including those declared by the class or interface and those inherited from superclasses and superinterfaces. Returns a sequence of length 0 if the class or interface has no member methods.

Method getArray returns interface *XIdlArray* (Table 50) to get and set the elements by index if the represented type is an array or sequence. Method createObject creates an instance of the type represented by this XIdlClass object if the represented type is a basic type, struct, enum, or sequence.

Enumeration *TypeClass* (Table 38) describe all type classes, which can be defined in the IDL.

TABLE 149.: Enumeration *TypeClass*

```
enum TypeClass
{
VOID,
CHAR,
BOOLEAN,
BYTE,
SHORT,
UNSIGNED_SHORT,
LONG,
UNSIGNED_LONG,
HYPER,          `
UNSIGNED_HYPER,
FLOAT,
DOUBLE,
STRING,
TYPE,
ANY,
ENUM,
TYPEDEF,
```

```
STRUCT,
UNION,
ARRAY,
INTERFACE,
SERVICE,
MODULE,
INTERFACE_METHOD,
INTERFACE_ATTRIBUTE,
UNKNOWN
    };
```

Interface *XIdlField* (Table 39) inherits from interface *XIdlMember* (Table 40).

TABLE 150.:INTERFACE *XIdlField*

```
interface XIdlField:
      com::sun::star::reflection::XIdlMember
{
com::sun::star::reflection::XIdlClass getType();
com::sun::star::reflection::FieldAccessMode
      getAccessMode();
any get( [in] any obj )
   raises(
      com::sun::star::lang::IllegalArgumentException );
void set( [in] any obj, [in] any value )
   raises(
      com::sun::star::lang::IllegalArgumentException,
      com::sun::star::lang::IllegalAccessException );
};
```

Method getType returns an XIdlClass object that identifies the declared type for the field represented by this XIdlField object. Method getAccessMode returns an enumeration value, which denotes whether the field is "const", "readonly", "writeonly" or "readwrite".
Method get returns the value of the field represented by this field on the specified object. The underlying field's value is obtained as follows:
If the underlying field is a constant, the object argument is ignored; it may be NULL;
Otherwise, the underlying field is an instance field.
If the specified object argument is NULL, the method throws an "IllegalArgumentException". If the specified object is not an instance of the class, interface, struct, union or enum declaring the underlying field, the method throws an "IllegalArgumentException". Otherwise, the value is retrieved from the underlying instance or constant.
Method set sets the field represented by this XIdlField object on the specified object argument to the specified new value. The operation proceeds as follows. If the specified object argument is NULL, the method throws an exception IllegalArgumentException (Table 42). If the specified object argument is not an instance of the class or interface declaring the underlying field, the method throws an exception IllegalArgumentException. If the underlying field is constant, the method throws an exception IllegalAccessException (Table 43). If the new value cannot be converted to the type of underlying field by an identity or widening conversion, the method throws an IllegalArgumentException. The field is set to the possibly widened new value.
Interface *XIdlMember* (Table 40) inherits from interface *XInterface* (Table 2). Interface *XIdlMember* makes it possible to access members of classes dynamically.

TABLE 151.:  INTERFACE *XIdlMember*

```
interface XIdlMember: com::sun::star::uno::XInterface
{
XIdlClass getDeclaringClass();
string getName();
      };
```

Method getDeclaringClass returns the XIdlClass object representing the class, interface, struct, union or enum that declares the member represented by this member. Method getName returns the fully qualified name of the type (class, interface, array, sequence, struct, union, enum or primitive) represented by this XIdlClass object, as a string.
The values in enumeration *FieldAccessMode* (Table 41) are used to specify the kind of attribute or property.

TABLE 152.:Enumeration *FieldAccessMode*

```
enum FieldAccessMode
{
```

```
//---------------------------------------------
/** The property is readable and writeable
 */
    READWRITE,


//---------------------------------------------
/** The property is readonly
 */
READONLY,


//---------------------------------------------
/** The property is write only
 */
WRITEONLY,


//---------------------------------------------
/** @deprecated
 */
CONST


    };
```

Exception *IllegalArgumentException* (Table 42) is thrown to indicate that a method has passed an illegal or inappropriate argument. Exception *IllegalArgumentException* inherits from exception *Exception* (Table 12). Field ArgumentPosition identifies the position of the illegal argument. This field is -1 if the position is not known.

TABLE 153.: EXCEPTION *IllegalArgumentException*

```
exception IllegalArgumentException:
```

```
        com::sun::star::uno::Exception
{
short ArgumentPosition;
        };
```

Exception *IllegalAccessException* (Table 43) is thrown when an application tries to change a constant property. Exception *IllegalAccessException* inherits from exception *Exception* (Table 12).

```
TABLE 154.: EXCEPTION IllegalAccessException
```

```
exception IllegalAccessException:
        com::sun::star::uno::Exception
{
        };
```

Interface *XIdlMethod* (Table 44) inherits from interface *XIdlMember* (Table 40). Interface *XIdlMember* makes it possible to access the specification of a method dynamically.

```
TABLE 155.:  INTERFACE XIdlMethod
```

```
interface XIdlMethod:
        com::sun::star::reflection::XIdlMember
{
XIdlClass getReturnType();
sequence<XIdlClass> getParameterTypes();
sequence<ParamInfo> getParameterInfos();
```

```
sequence<com::sun::star::reflection::XIdlClass>
    getExceptionTypes();
com::sun::star::reflection::MethodMode getMode();
any invoke( [in] any obj,  [inout] sequence<any> args )
  raises(
      com::sun::star::lang::IllegalArgumentException,
    com::sun::star::reflection::InvocationTargetException
      );
      };
```

Method getReturnType returns an XIdlClass object that represents the formal return type of the method represented by this method object. Method getParameterTypes returns a sequence of XIdlClass objects that represent the formal parameter types, in declaration order, of the method represented by this Method object. Method getParameterTypes returns a sequence of length 0 if the underlying method takes no parameters.

Method getParameterInfos returns a sequence of ParamInfo objects that represent all information about the formal parameter types, in declaration order, of the method represented by this Method object. Method getParameterInfos returns a sequence of length 0 if the underlying method takes no parameters.

Method getExceptionTypes returns a sequence of XIdlClass objects that represent the types of the checked exceptions thrown by the underlying method represented by this Method object. Method getExceptionTypes returns a sequence of length 0 if the method throws no checked exceptions.

Method getMode returns an enumeration value, which denotes whether the method is one-way or two-way. Method invoke invokes the underlying method represented by this method object on the specified object with the specified parameters. Individual parameters are subject to widening conversions as necessary.

Method invocation proceeds in the following order:

If the specified object argument is NULL, the invocation throws an IllegalArgumentException; and

Otherwise, if the specified object argument is not an instance of the class or interface declaring the underlying method, the invocation throws an exception IllegalArgumentException (Table 42).

If the number of actual parameters supplied via args is different from the number of formal parameters required by the underlying method, the invocation throws an Exception IllegalArgumentException. For each actual parameter in the supplied args array, if the parameter value cannot be converted to the corresponding formal parameter type by an identity or widening conversion, the invocation throws exception IllegalArgumentException. When the control transfers to the underlying method and the method stops abruptly by throwing an exception, the exception is placed in an exception InvocationTargetException (Table 48) and thrown in turn to the caller of the method. If the method completes normally, the value it returns is returned to the caller of the method. If the underlying method returns type is void, the invocation returns VOID.

Structure *ParamInfo* (Table 45) describes a formal parameter of a method.

TABLE 156.:  STRUCTURE *ParamInfo*

```
struct ParamInfo
{
/** The name of the parameter.
*/
string aName;


//---------------------------------------------------
/** One of the values IN, OUT, INOUT from the ParamMode
enumeration.
 */
ParamMode aMode;


//---------------------------------------------------
/** The type of the parameter.
 */
XIdlClass aType;


        };
```

The values in Enumeration *ParamMode* (Table 46) are used to specify if a formal parameter of a method is used for input, output or both. If the value is an IN parameter, data can only transferred from the callee to the caller. If the value is an OUT parameter, data can only transferred from the caller to the callee. If value is an INOUT parameter, data can transferred in both directions.

TABLE 157.:  ENUMERATION *ParamMode*

```
enum ParamMode
{
IN,
OUT,
INOUT
      };
```

The values in Enumeration Method*Mode* (Table 47) are used to specify the calling mode of a method. If the value is an ONEWAY parameter, the method call may be asynchronous. If the value is a TWOWAY parameter, the method call is synchronous.

TABLE 158.:  ENUMERATION *MethodMode*

```
enum MethodMode
{
ONEWAY,
TWOWAY
      };
```

Exception *InvocationTargetException* (Table 48) is a checked exception that wraps another exception. Typically such exceptions are thrown by an invoked method or constructor. Exception *InvocationTargetException* inherits from exception *WrappedTargetException* (Table 49).

TABLE 159.:  EXCEPTION *InvocationTargetException*

```
exception InvocationTargetException:
    com::sun::star::lang::WrappedTargetException
{
    };
```

Exception *WrappedTargetException* (Table 49) is a checked exception that wraps an exception thrown by the original target. Normally this exception is declared for generic methods. Exception *WrappedTargetException* inherits from exception *Exception(Table* 12).

TABLE  160.: EXCEPTION *WrappedTargetException*

```
exception WrappedTargetException:
    com::sun::star::uno::Exception
{
any TargetException;
};
```

Interface *XIdlArray* (Table 50) provides methods to dynamically access arrays. Interface *XIdlArray* inherits from interface *XInterface* (Table 2).

TABLE 161.:   INTERFACE *XIdlArray*

```
interface XIdlArray: com::sun::star::uno::XInterface
{
void realloc( [inout] any array,  [in] long length )
  raises(
      com::sun::star::lang::IllegalArgumentException );
long getLen( [in] any array )
  raises(
      com::sun::star::lang::IllegalArgumentException );
any get( [in] any aArray, [in] long nIndex )
  raises(
      com::sun::star::lang::IllegalArgumentException,
      com::sun::star::lang::ArrayIndexOutOfBoundsExcepti
          on );
void set( [inout] any aArray, [in] long nIndex, [in]
      any aNewValue )
  raises(
      com::sun::star::lang::IllegalArgumentException,
  com::sun::star::lang::ArrayIndexOutOfBoundsException
      );
      };
```

Method realloc in interface *XIdlArray* changes the size of the array to the new size. If the new length is greater, the additional elements are default constructed, otherwise the elements are destructed. Method realloc throws an exception IllegalArgumentException (Table 42) if the specified object is not an array or if the specified object is null.

Method getLen in interface *XIdlArray* returns the number of elements in the array. Method getLen throws an exception IllegalArgumentException (Table 42) if the specified object is not an array or if the specified object is null.

Method get in interface *XIdlArray* returns the value of the indexed component in the specified array object. Method get throws exception IllegalArgumentException, if the specified object is not an array or if the specified object is null. Method get throws exception ArrayIndexOutOfBoundsException (Table 51), if the specified index argument is negative, or if the specified index argument is greater than or equal to the length of the specified array.

Method set in interface *XIdlArray* sets the value of the indexed component of the specified array object to the specified new value. Method set throws exception IllegalArgumentException, if the specified object is not an array or if the specified object is null. Method set throws exception ArrayIndexOutOfBoundsException (Table 51), if the specified index argument is negative, or if the specified index argument is greater than or equal to the length of the specified array.

Exception *ArrayIndexOutOfBoundsException* (Table 51) is thrown to indicate that an array has been accessed with an illegal index. The index is either negative or greater than or equal to the size of the array. Exception *ArrayIndexOutOfBoundsException* inherits from exception *IndexOutOfBoundsException* (Table 52).

TABLE 162.: EXCEPTION *ArrayIndexOutOfBoundsException*

```
exception ArrayIndexOutOfBoundsException:
     com::sun::star::lang::IndexOutOfBoundsException
{
};
```

Exception *IndexOutOfBoundsException* (Table 52) is thrown to indicate that a container has been accessed with an illegal index. The index is either negative or greater than or equal to the count of the elements. Exception *IndexOutOfBoundsException* inherits from exception *Exception* (Table 12).

TABLE  163.: EXCEPTION *IndexOutOfBoundsException*

```
exception IndexOutOfBoundsException:
     com::sun::star::uno::Exception
{
};
```

As explained above, interface *XFrame* (Table 15) uses interface *XController* (Table 53). With interface *XController*, components viewed in a frame can serve events by supplying dispatches. Interface *XController* inherits from interface *XComponent* (Table 16).

TABLE 164. :INTERFACE *XController*

```
interface XController: com::sun::star::lang::XComponent
{
void attachFrame( [in] XFrame xFrame );
boolean attachModel( [in] XModel xModel );
boolean suspend( [in] boolean bSuspend );
any getViewData();
void restoreViewData( [in] any Data );
XModel getModel();
XFrame getFrame();
};
```

Method attachFrame (Table 53) is called to attach the controller with its managing frame. Method attachModel is called to attach the controller to a new model. Method suspend is called to prepare the controller for closing the view. Method getViewData returns data that can be used to restore the current view status. Method restoreViewData restores the view status using the data gotten from a previous call. Method getModel returns the currently attached model. Method getFrame returns the frame containing this controller.

In Table 54, interface *XModel* represents a component, which is created from an URL and arguments. Interface *XModel* is a representation of a resource in the sense that the interface was created/loaded from the resource. The arguments are passed to the loader to modify its behavior. An example for such an argument is "AsTemplate", which loads the resource as a template for a new document. Models can be controlled by controller components, which are usually views of the model. If there is at least one controller, there is by definition a current controller, and if that controller supports interface XSelectionSupplier, it has a current selection too. Interface *XModel* inherits from interface *XComponent* (Table 16).

TABLE 165. : INTERFACE *XModel*

```
interface XModel: com::sun::star::lang::XComponent
{
boolean attachResource( [in] string aURL,  [in]
      sequence<com::sun::star::beans::PropertyValue>
      aArgs );
string getURL();
sequence<com::sun::star::beans::PropertyValue>
      getArgs();
[oneway] void connectController( [in]
      com::sun::star::frame::XController xController );
[oneway] void disconnectController( [in]
      com::sun::star::frame::XController xController );
[oneway] void lockControllers();
[oneway] void unlockControllers();
boolean hasControllersLocked();
 [const] com::sun::star::frame::XController
      getCurrentController();
void setCurrentController( [in]
      com::sun::star::frame::XController xController )
      raises(
            com::sun::star::container::NoSuchElementExcep
            tion );
[const] com::sun::star::uno::XInterface
      getCurrentSelection();



};
```

Method attachResource (Table 54) informs a model about its resource description. Method getURL returns the URL of the resource, which is represented by this model. Method getArgs returns the arguments with which the model was originally created or stored the last time. Method connectController is called whenever a new controller is created for this model. Interface *XComponent* of the controller must be used to recognize when the controller is deleted. Method disconnectController is called whenever a new controller is created for this model. Again, interface *XComponent* of the controller must be used to recognize when the controller is deleted.

Method lockControllers (Table 54) suspends some notifications to the controllers, which are used for display updates. The calls to this method may be nested and even overlapping, but the calls must be in pairs. While there is at least one lock remaining, some notifications for display updates are not broadcasted.

Method unlockControllers (Table 54) resumes the notifications, which were suspended by call to lockControllers. The calls to this method may be nested and even overlapping, but they must be in pairs. While there is at least one lock remaining, some notifications for display updates are not broadcasted.

Method hasControllersLocked (Table 54) determines if there is at least one lock remaining. While there is at least one lock remaining, some notifications for display updates are not broadcasted to the controllers.

Method getCurrentController (Table 54) returns the controller, which currently controls this model. If the controller, which is active, is a controller of this model, it will be returned. If not, the controller, which was the last active controller of this model, is returned. If no controller of this model ever was active, the controller first registered is returned. If no controller is registered for this model, NULL is returned.

Method setCurrentController (Table 54) sets a registered controller as the current controller. Method setCurrentController throws exception NoSuchElementException (Table 58).

Method getCurrentSelection (Table 54) returns the current selection in the current controller. If there is no current controller, the method returns NULL.

Structure *PropertyValue* (Table 55) specifies a property value. Field Name (Table 55) specifies the name of the property. The name is unique within a sequence of PropertyValues. Field Handle (Table 55) contains an implementation-specific handle for the property. The handle may be -1 if the implementation has no handle. If available, the handle it can be used for fast lookups. Field Value contains the value of the property or void if no value is available. Field State determines if the value comes from the object itself or from a default, and if the value cannot be determined exactly

## TABLE 166. : STRUCTURE *PropertyValue*

```
struct PropertyValue
{
string Name;
long Handle;
any Value;
com::sun::star::beans::PropertyState State;
};
```

Enumeration *PropertyState* (Table 56) lists the states that a property value can have. The state consists of two aspects: whether a value is available or void; and whether the value is stored in the property set itself or is a default or ambiguous.

Value DIRECT_VALUE (Table 56) of the property is stored in the PropertySet itself. The property value must be available and of the specified type. If field PropertyAttribute in structure *Property* (Table 57) contains PropertyAttribute::MAYBEVOID, then the value may be void.

Value DEFAULT_VALUE (Table 56) of the property is available from a master (e.g. template). Field PropertyAttribute in structure *Property* (Table 57) must contain the flag PropertyAttribute::MAYBEDEFAULT. The property value must be available and of the specified type. If field PropertyAttribute in the structure *Property* contains PropertyAttribute::MAYBEVOID, the value may be void.

Value AMBIGUOUS_VALUE (Table 56) of the property is only a recommendation because there are multiple values for this property (e.g. from a multi selection). Field PropertyAttribute in structure *Property* (Table 57) must contain flag PropertyAttribute::MAYBEAMBIGUOUS. The property value must be available and of the specified type. If field Attribute in structure *Property* contains PropertyAttribute::MAYBEVOID, n the value may be void.

TABLE 167. : Enumeration *PropertyState*

```
enum PropertyState
{
DIRECT_VALUE,
DEFAULT_VALUE,
AMBIGUOUS_VALUE


};
```

Structure *Property* (Table 57) describes a property. There are three types of properties: bound properties, constrained properties and free properties. Field Name specifies the name of the property. The name is unique within an XPropertySet. Field Handle contains an implementation specific handle for the property. The handle may be -1 if the implementation has no handle. Field Type contains an object that identifies the declared type for the property. If the property has multiple types or the type is not known, but not any, void must be returned. Field Attributes may contain zero or more constants of the PropertyAttribute constants group.

TABLE 168.: Structure *Property*

```
struct Property
{
string Name;
long Handle;
TYPE_XIDLCLASS Type;
short Attributes;
    };
```

Exception *NoSuchElementException* (Table 58) is thrown by the method to indicate that there are no more elements in the enumeration. Exception *NoSuchElementException* inherits from exception *Exception* (Table 12).

EP 1 126 681 A2

TABLE 169.: EXCEPTION *NoSuchElementException*

```
exception NoSuchElementException:
      com::sun::star::uno::Exception
{

      };
```

As explained above, interface *XFrame* (Table 15) uses interface *XFrameActionListener* (Table 59). Interface *XFrameActionListener* has to be provided if an object wants to receive events when several things happen to components within frames of the desktop, e.g., events of instantiation/destruction and activation/deactivation of components can be received.

Interface *XFrameActionListener* inherits from interface *XEventListener* (Table 17). Method frameAction is called whenever any action occurs to a component within a frame.

TABLE 170.:  INTERFACE *XFrameActionListener*

```
interface XFrameActionListener:
      com::sun::star::lang::XEventListener
{
[oneway] void frameAction( [in]
      com::sun::star::frame::FrameActionEvent aEvent );
};
```

Event structure *FrameActionEvent* (Table 60) is broadcast for action, which can happen to components within frames. Event structure *FrameActionEvent* inherits from structure *EventObject* (Table 18).

In Table 60, field Frame contains the frame in which the event occurred. Field Action specifies the concrete event.

TABLE 171.:   Structure *FrameActionEvent*

```
struct FrameActionEvent:
     com::sun::star::lang::EventObject
{
com::sun::star::frame::XFrame Frame;
com::sun::star::frame::FrameAction Action;
     };
```

Enumeration *FrameAction* (Table 61) specifies the events, which can happen to components in frames. An event COMPONENT_ATTACHED is broadcast whenever a component is attached to a frame. This is almost the same as the instantiation of the component within that frame. The component is attached to the frame immediately before this event is broadcast. An event COMPONENT_DETACHING is broadcast whenever a component is detaching from a frame. This is quite the same as the destruction of the component, which was in that frame. At the moment when the event is broadcast the component is still attached to the frame but in the next moment it is not attached. An event COMPONENT_REATTACHED is broadcast whenever a component is attached to a new model. In this case the component remains the same but operates on a new model component. An event FRAME_ACTIVATED is broadcast whenever a component is activated. Activations are broadcast from the top component, which was not active before, down to the inner most component. An event FRAME_DEACTIVATING broadcast immediately before the component is deactivated. Deactivations are broadcast from the innermost component, which does not stay active up to the outer most component, which does not stay active. An event CONTEXT_CHANGED is broadcast whenever a component changed its internal context (i.e. the selection). If the activation status within a frame changes, this counts as a context change too. An event FRAME_UI_ACTIVATED is broadcast by an active frame when the active frame is getting user interface control (tool control). An event FRAME_UI_DEACTIVATING is broadcast by an active frame when the active frame is losing user interface control (tool control).

TABLE 172.:  ENUMERATION *FrameAction*

```
enum FrameAction
{
COMPONENT_ATTACHED,
COMPONENT_DETACHING,
COMPONENT_REATTACHED,
FRAME_ACTIVATED,
FRAME_DEACTIVATING,
FRAME_UI_ACTIVATED,
FRAME_UI_DEACTIVATING
        };
```

As described above, interface *XDispatchProvider* (Table 62 and Fig. 9) is an interface of class BeanFrame (Fig. 6). Interface *XDispatchProvider* provides Dispatch interfaces for certain functions, which are useful at the user interface. Interface *XDispatchProvider* inherits from interface *XInterface* (Table 2), and uses interface *XDispatch* (Table 63) and structures *URL* (Table 64) and *DispatchDescriptor* (Table 67).

TABLE 173.:   INTERFACE *XDispatchProvider*

```
interface XDispatchProvider:
    com::sun::star::uno::XInterface
{
com::sun::star::frame::XDispatch queryDispatch( [in]
    com::sun::star::util::URL aURL,
              [in] string aTargetFrameName,
              [in] long nSearchFlags );
sequence<com::sun::star::frame::XDispatch>
    queryDispatches(  [in]
    sequence<com::sun::star::frame::DispatchDescriptor
    > aDescripts );
    };
```

Method queryDispatch (Table 62) searches for an XDispatch for the specified URL within the specified target frame. Method queryDispatches returns multiple dispatch interfaces for the specified descriptors at once. Actually this method is redundant to method DispatchProvider::queryDispatch to avoid multiple remote calls.

Interface *XDispatch* (Table 63) serves state information of objects, which can be connected to controllers (e. g. toolbox controllers). Each state change is to be broadcast to all registered status listeners. The first notification should be performed synchronously, if not, controllers may flicker. State listener must be aware of this synchronous notification. The state includes enabled/disabled and a short descriptive text of the function (e.g. "undo insert character"). The state is to be broadcast whenever this state changes or the controller should reget the value for the URL to which it is connected. Additionally, a context-switch-event is to be broadcast whenever the object may be out of scope to force the state listener to requery the XDispatch. Interface *XDispatch* inherits from interface *XInterface* (Table 2).

TABLE 174.:  INTERFACE *XDispatch*

```
interface XDispatch: com::sun::star::uno::XInterface
{
[oneway] void dispatch( [in] com::sun::star::util::URL
      aURL,  [in]
      sequence<com::sun::star::beans::PropertyValue>
      aArgs );
[oneway] void addStatusListener( [in]
      com::sun::star::frame::XStatusListener xControl,
      [in] com::sun::star::util::URL aURL );
[oneway] void removeStatusListener( [in]
      com::sun::star::frame::XStatusListener xControl,
      [in] com::sun::star::util::URL aURL );
      };
```

Method dispatch (Table 63) dispatches (executes) an URL asynchronously. Method dispatch is only allowed to dispatch URLs for which the current user gets the dispatch. Additional arguments "'#..." or "?..." are allowed.

The following is an example for a click-handler of a hyperlink in a view.

```
XFrame xTargetFrame = m_xFrame-
&gt; findFrame (m_aHyperlink-
&gt;getTargetFrameName (),
FRAME_SEARCH_STANDARD );
    URL aURL;
    aURL.Original = m_aHyperlink-
&gt;getURL();
    XDispatch m_xFrame-&gt;queryDispatch(
aURL, sequence&lt;PropertyValue&gt; () );
    xDispatch-&gt;dispatch( aURL );
```

Method addStatusListener (Table 63) registers a listener of a controller for a specific URL to this object to receive status events. This method is only allowed to register for URLs for which the current user gets this dispatch. Additional arguments "#..." or "?..." are ignored. Method removeStatusListener unregisters a listener of a controller.

Structure *URL* (Table 64) represents the original and the parsed structure of a Uniform Resource Locator. It is not necessary to set all of the fields; either URL::Complete or (some of) the others are set. Additionally, most of the other fields, like URL::User, URL::Password or URL::Mark, are optional.

In Table 64, field Complete contains the unparsed original URL, for example, http://me:pass@www.stardivision.de:8080/pub/test/foo.tx t?a=b#xyz. Field Main contains the URL without a mark and without arguments, for example. http://me:pass@www.stardivision.de:8080/pub/test/foo.tx t. Field Protocol contains the protocol (scheme) of the URL, for example, "http". Field User contains the user-identifier of the URL, for example, "me". Field Password contains the users password of the URL, for example, "pass". Field Server contains the server part of the URL, for example, "www.stardivision.de". Field Port contains the port at the server of the URL, for example, "8080". Field Path contains the path part of the URL without the filename, for example, "/pub/test". Field Name contains the filename part of the URL, for example, "foo.txt". Field Arguments contains the arguments part of the URL, for example, "a=b". Field Mark contains the mark part of the URL, for example "xyz".

TABLE 175.:  STRUCTURE *URL*

```
struct URL
{
string Complete;
string Main;
string Protocol;
string User;
string Password;
string Server;
short Port;
string Path;
string Name;
string Arguments;
string Mark;
        };
```

As explained above, interface *XStatusListener* (Table 65) is used by interface *XDispatch* (Table 63 and Figure 9). Interface *XStatusListener* makes it possible to receive events when the state of a feature changes. Interface *XStatusListener* inherits from interface *XEventListener* (Table 17). Method statusChanged is called when the status of the feature changes.

## TABLE 176.: INTERFACE *XStatusListener*

```
interface XStatusListener:
      com::sun::star::lang::XEventListener
{
[oneway] void statusChanged( [in]
      com::sun::star::frame::FeatureStateEvent Event );
      };
```

Structure *FeatureStateEvent* (Table 66) is broadcast by a controller, whenever the state of the feature changes. Structure FeatureStateEvent inherits from structure *EventObject* (Table 18).

In Table 66, field FeatureURL contains the URL of the feature. Field FeatureDescriptor contains a descriptor of the feature for the user interface. Field IsEnabled specifies whether the feature is currently enabled or disabled. Field Requery specifies whether the Dispatch has to be requeried. Field State contains the state of the feature in this dispatch. This can be, for example, simply TRUE for a Boolean feature like underline on/off. Some simple types like string or Boolean are useful here for generic user interface elements, like a checkmark in a menu.

## TABLE 177.:  STRUCTURE *FeatureStateEvent*

```
struct FeatureStateEvent:
      com::sun::star::lang::EventObject
{
com::sun::star::util::URL FeatureURL;
string FeatureDescriptor;
boolean IsEnabled;
boolean Requery;
any State;
      };
```

Structure *DispatchDescriptor* (Table 67) describes a feature to be retrieved by an URL that has to be loaded into a specified frame. Field FeatureURL specifies the URL of the resource/function. Field FrameName is the name of the target frame. Field SearchFlags is how the target frame is to be searched.

TABLE 178.:    STRUCTURE *DispatchDescriptor*

```
struct DispatchDescriptor
{
com::sun::star::util::URL FeatureURL;
string FrameName;
long SearchFlags;
        };
```

In the embodiment of Figure 6, the component loaded is StarWriter, and class StarWriter includes interface *XLoadable* (Table 68 and Figure 9). Interface *XLoadable* provides functionality to implement objects, which may be loaded. Interface *XLoadable* inherits from interface *XInterface* (Table 2).

TABLE 179.:    INTERFACE *XLoadable*

```
interface XLoadable: com::sun::star::uno::XInterface
{
[oneway] void load();
[oneway] void unload();
[oneway] void reload();
boolean isLoaded();
[oneway] void addLoadListener( [in]
        com::sun::star::form::XLoadListener aListener );
[oneway] void removeLoadListener( [in]
        com::sun::star::form::XLoadListener aListener );
        };
```

Method load (Table 68) starts the data processing. Method unload stops the data processing. Method reload does a smart refresh of the object. The final state is the same as if unload and load were called, but reload is the more efficient way to do the same. If the object isn't loaded, nothing happens. Method isLoaded returns true if the object is in loaded state. Method addLoadListener adds the specified listener to receive events "loaded" and "unloaded." Method removeLoadListener removes the specified listener.

Interface *XLoadListener* (Table 69) is used in the load listener method calls in Table 68. Interface *XLoadListener* receives "loaded" and "unloaded" events posted by a loadable object. The interface is typically implemented by data-bound components, which want to listen to the data source that contains their database form. Interface *XLoadListener* inherits from interface *XEventListener* (Table 17).

TABLE 180.:  INTERFACE *XLoadListener*

```
interface XLoadListener:
     com::sun::star::lang::XEventListener
{
[oneway] void loaded( [in]
     com::sun::star::lang::EventObject aEvent );
[oneway] void unloading( [in]
     com::sun::star::lang::EventObject aEvent );
[oneway] void unloaded( [in]
     com::sun::star::lang::EventObject aEvent );
[oneway] void reloading( [in]
     com::sun::star::lang::EventObject aEvent );
 [oneway] void reloaded( [in]
     com::sun::star::lang::EventObject aEvent );
     };
```

Method loaded (Table 69) is invoked when the object has successfully connected to a data source. Method unloading is invoked when the object is about to be unloaded. Components may use this to stop any other event processing related to the event source before the object is unloaded. Method unloaded is invoked after the object has disconnected from a data source. Method reloading is invoked when the object is about to be reloaded. Components may use this to stop any other event processing related to the event source until they get the reloaded event. Method reloaded is invoked when the object has been reloaded.

Class BeanWindow (Fig. 6) includes interfaces *XWindowPeer* (Table 70) and *XEventHdl* (Table 4). Interface *XWindowPeer* gives access to the actual window implementation on the device. Interface *XWindowPeer* inherits from interface *XComponent* (Table 16), and uses interfaces *XToolKit* (Table 71) and *XPointer* (Table 88), which are described below. See also Figures 10A and 10B.

TABLE 181.:  INTERFACE *XWindowPeer*

```
interface XWindowPeer: com::sun::star::lang::XComponent
{
XToolkit getToolkit();
[oneway] void setPointer( [in] XPointer Pointer );
[oneway] void setBackground( [in] long Color );
[oneway] void invalidate( [in] short Flags );
[oneway] void invalidateRect( [in] Rectangle Rect, [in]
     short Flags );
     };
```

Method getToolkit (Table 70) returns the visual class, which created this object. Method setPointer sets the mouse pointer. Method setBackground sets the background color. Method invalidate invalidates the whole window using an InvalidateStyle. Method invalidateRect invalidates a rectangular area of the window using an InvalidateStyle.
Interface *XToolkit* (Table 71) specifies a factory interface for the windowing toolkit. This is similar to the abstract window toolkit (AWT) in JAVA. Interface *XToolkit* inherits from interface *XInterface* (Table 2).

TABLE 182.:   INTERFACE *XToolkit*

```
interface XToolkit: com::sun::star::uno::XInterface
{
com::sun::star::awt::XWindowPeer getDesktopWindow();
com::sun::star::awt::Rectangle getWorkArea();
com::sun::star::awt::XWindowPeer createWindow( [in]
        com::sun::star::awt::WindowDescriptor Descriptor )
   raises(
        com::sun::star::lang::IllegalArgumentException );
sequence<com::sun::star::awt::XWindowPeer>
        createWindows(  [in]
        sequence<com::sun::star::awt::WindowDescriptor>
        Descriptors )
   raises(
        com::sun::star::lang::IllegalArgumentException );
com::sun::star::awt::XDevice
        createScreenCompatibleDevice( [in] long Width,
                     [in] long Height );
com::sun::star::awt::XRegion createRegion();
        };
```

Method getDesktopWindow (Table 71) returns the desktop window. Method getWorkArea returns the complete work area for this toolkit. Method createWindow creates a new window using the given descriptor. Method createWindow throws exception IllegalArgumentException(Table 42). Method createWindows returns a sequence of windows, which are newly created using the given descriptors. Method createWindows throws exception IllegalArgumentException Method createScreenCompatibleDevice creates a virtual device that is compatible with the screen. Method createRegion creates a region.

Structure *WindowDescriptor* (Table 72) describes a window. Field Type specifies the type of window. Field WindowServiceName specifies the name of the component service ("ListBox", "PushButton"). A zero length name means that the vcl creates a blank top, a container, or a simple window. Field Parent specifies the parent of the component. If the Parent == 0 && ParentIndex == -1, the window is on the desktop. Field ParentIndex specifies the index of the parent window, if available. If Parent == 0 and this structure is a member of an array, this is the offset from the beginning of the array to the parent. A value of -1 means desktop. Field Bounds specifies the position and size of the window. This member is ignored if the window attribute is WA_FULLSIZE. Field WindowAttributes contains some of the WA_* attributes.

TABLE 183.:   STRUCTURE *WindowDescriptor*

```
struct WindowDescriptor
com::sun::star::awt::WindowClass Type;
string WindowServiceName;
```

```
com::sun::star::awt::XWindowPeer Parent;
short ParentIndex;
com::sun::star::awt::Rectangle Bounds;
long WindowAttributes;
};
```

Enumeration *WindowClass* (Table 73) specifies the class of a window. Value TOP specifies a top-level window on the desktop. It is also a container. Value MODALTOP is a modal top-level window on the desktop. It is also a container. Value CONTAINER is a container that may contain other components. It is not a top window. Value SIMPLE is the simplest window. It can be a container.

TABLE 184.:   ENUMERATION *WindowClass*

```
enum WindowClass
{
TOP,
MODALTOP,
CONTAINER,
SIMPLE
        };
```

Interface *XDevice* (Table 74 and Figure 10A) provides information about a graphical output device and offers a factory for the graphics, which provides write operations on the device. Interface *XDevice* inherits from interface *XInterface* (Table 2).

TABLE 185.: INTERFACE *XDevice*

```
interface XDevice: com::sun::star::uno::XInterface
{
XGraphics createGraphics();
XDevice createDevice( [in] long nWidth,  [in] long
     nHeight );
com::sun::star::awt::DeviceInfo getInfo();
sequence<FontDescriptor> getFontDescriptors();
com::sun::star::awt::XFont getFont( [in] FontDescriptor
     aDescriptor );
XBitmap createBitmap( [in] long nX,  [in] long nY,
     [in] long nWidth,  [in] long nHeight );
XDisplayBitmap createDisplayBitmap( [in] XBitmap Bitmap
     );
     };
```

Method createGraphics (Table 74) creates a new graphics, which output operation direct to this device. Method createDevice creates a new device, which is compatible with this one. If the device does not support the GETBITS device capability, this method returns NULL. Method getInfo returns information about the device. Method getFontDescriptors returns the list of available font descriptors.

Method getFont (Table 74) returns information about a font offered by this device. Parameter aDescriptor specifies the description of a font, and specifies that the unit of measure is pixel for this device.

Method createBitmap (Table 74) creates a bitmap with the current device depth. If the specified area does not lie entirely in the device, the bits outside are not specified. Method createDisplayBitmap creates a device-compatible bitmap. The data of the bitmap is in process memory instead of in the device, so the output operation is fast.

Interface *XGraphics* (Table 75) provides the basic output operation of a device. Interface *XGraphics* inherits from interface *XInterface* (Table 2).

TABLE 186.: INTERFACE *XGraphics*

```
interface XGraphics: com::sun::star::uno::XInterface
{
XDevice getDevice();
SimpleFontMetric getFontMetric();
[oneway] void setFont( [in] XFont xNewFont );
[oneway] void selectFont( [in] FontDescriptor
      aDescription );
[oneway] void setTextColor( [in] long nColor );
[oneway] void setTextFillColor( [in] long nColor );
[oneway] void setLineColor( [in] long nColor );
[oneway] void setFillColor( [in] long nColor );
[oneway] void setRasterOp( [in] RasterOperation ROP );
[oneway] void setClipRegion( [in] XRegion Clipping );
[oneway] void intersectClipRegion( [in] XRegion
      xClipping );
[oneway] void push();
[oneway] void pop();
[oneway] void copy( [in] XDevice xSource, [in] long
      nSourceX, [in] long nSourceY, [in] long
      nSourceWidth, [in] long nSourceHeight, [in] long
      nDestX, [in] long nDestY, [in] long nDestWidth,
      [in] long nDestHeight );
```

```
[oneway] void draw( [in] XDisplayBitmap xBitmapHandle,
     [in] long SourceX, [in] long SourceY,  [in] long
     SourceWidth,  [in] long SourceHeight,  [in] long
     DestX, [in] long DestY,  [in] long DestWidth, [in]
     long DestHeight );
[oneway] void drawPixel( [in] long X, [in] long Y );
[oneway] void drawLine( [in] long X1, [in] long Y1,
     [in] long X2, [in] long Y2 );
[oneway] void drawRect( [in] long X,  [in] long Y, [in]
     long Width,  [in] long Height );
[oneway] void drawRoundedRect( [in] long X, [in] long
     Y, [in] long Width, [in] long Height, [in] long
     nHorzRound, [in] long nVertRound );
[oneway] void drawPolyLine( [in] sequence<long> DataX,
     [in] sequence<long> DataY );
[oneway] void drawPolygon( [in] sequence<long> DataX,
     [in] sequence<long> DataY );
[oneway] void drawPolyPolygon( [in] sequence<
     sequence<long> > DataX,  [in] sequence<
     sequence<long> > DataY );
[oneway] void drawEllipse( [in] long X, [in] long Y,
     [in] long Width, [in] long Height );
[oneway] void drawArc( [in] long X, [in] long Y, [in]
     long Width, [in] long Height, [in] long X1, [in]
     long Y1,  [in] long X2, [in] long Y2 );
[oneway] void drawPie( [in] long X,  [in] long Y,  [in]
     long Width,  [in] long Height,  [in] long X1,
     [in] long Y1, [in] long X2,  [in] long Y2 );
[oneway] void drawChord( [in] long nX, [in] long nY,
     [in] long nWidth, [in] long nHeight, [in] long
     nX1, [in] long nY1, [in] long nX2, [in] long nY2
     );
[oneway] void drawGradient( [in] long nX, [in] long nY,
     [in] long nWidth, [in] long Height, [in] Gradient
     aGradient );
[oneway] void drawText( [in] long X,  [in] long Y,
```

```
      [in] string Text );
[oneway] void drawTextArray( [in] long X,  [in] long Y,
  [in] string Text,  [in] sequence<long> Longs );
};
```

Method getDevice (Table 75) returns the device of this graphics. Method getFontMetric returns the font metric of the current font. Method setFont sets the font used by text operations. Method selectFont creates a new font and sets the font. Method setTextColor sets the text color used by text operations. Method setTextFillColor sets the fill color used by text operations. Method setLineColor sets the line color. Method setFillColor sets the fill color. Method setRasterOp sets the raster operation. If the device does not support raster operations, this call is ignored. Method setClipRegion sets the clip region to specified clipping. Method intersectClipRegion builds the intersection with the current region. Method push saves all current settings (Font, TextColor, TextFillColor, LineColor, FillColor, RasterOp, ClipRegion). Method pop restores all previous saved settings. Method copy copies a rectangle of pixels from another device into this one. Method draw draws a part of the specified bitmap to the output device. Method drawPixel sets a single pixel in the output device. Method drawLine draws a line in the output device. Method drawRect draws a rectangle in the output device. Method drawRoundedRect draws a rectangle with rounded corners in the output device. Method drawPolyLine draws multiple lines in the output device at once. Method drawPolygon draws a polygon line in the output device. Method drawPolyPolygon draws multiple polygons in the output device at once. Method drawEllipse draws an ellipse in the output device. Method drawArc draws an arc (part of a circle) in the output device. Method drawPie draws a circular area in the output device. Method drawChord draws a chord of a circular area in the output device. A chord is a segment of a circle. You get two chords from a circle if you intersect the circle with a straight line joining two points on the circle. Method drawGradient draws a color dispersion in the output device. Method drawText draws text in the output device. Method drawTextArray draws texts in the output device using an explicit kerning table.

Structure *SimpleFontMetric* (Table 76) describes the general metrics of a font. Field Ascent specifies the portion of a lower case character that rises above the height of the character "x" of the font. For example, the letters 'b', 'd', 'h', 'k' and 'l' have an ascent unequal to 0. Ascent is measured in pixels, thus the font metric is device dependent. Field Descent specifies the portion of a letter falling below the baseline. For example, the letters 'g', 'p', and 'y' have a descent unequal to 0. Descent is measured in pixels, thus the font metric is device dependent. Field Leading specifies the vertical space between lines of this font, and is also called internal line spacing. The leading is measured in pixels, thus the font metric is device dependent. Field Slant specifies the slant of the characters (italic). The slant is measured in degrees from 0 to 359. Field FirstChar specifies the code of the first printable character in the font. Field LastChar specifies the code of the last printable character in the font.

TABLE 187.:  STRUCTURE *SimpleFontMetric*

```
struct SimpleFontMetric
{
short Ascent;
short Descent;
short Leading;
char FirstChar;
char LastChar;
      };
```

Interface *XFont* (Table 77) describes a font on a specific device. All values are in pixels within this device. Interface *XFont* inherits from interface *XInterface* (Table 2).

TABLE 188.: INTERFACE *XFont*

```
interface XFont: com::sun::star::uno::XInterface
{
com::sun::star::awt::FontDescriptor
    getFontDescriptor();
com::sun::star::awt::SimpleFontMetric getFontMetric();
short getCharWidth( [in] char c );
sequence<short> getCharWidths( [in] char nFirst, [in]
    char nLast );
long getStringWidth( [in] string str );
long getStringWidthArray( [in] string str, [out]
    sequence<long> aDXArray );
void getKernPairs( [out] sequence<char> Chars1, [out]
    sequence<char> Chars2, [out] sequence<short> Kerns


    );
    };
```

Method getFontDescriptors (Table 77) returns the description of the font. Method getFontMetric returns additional information about the font. Method getCharWidth returns the width of the specified character measured in pixels for the device. Method getCharWidths returns a sequence of the widths of subsequent characters for this font. Method getStringWidth returns the width of the specified string of characters measured in pixels for the device. Method getStringWidthArray returns the width of the specified string of characters measured in pixels for the device. In this method, parameter aDXArray receives the width of every single character measured in pixels for the device. Method getKernPairs queries the kerning pair table.

Structure *FontDescriptor* (Table 78) describes the characteristics of a font. For example, this structure can be used to select a font. Field Name specifies the exact name of the font ("Arial", "Courier", "Frutiger"). Field Height specifies the height of the font in the measure of the destination. Field Width specifies the width of the font in the measure of the destination. Field StyleName specifies the style name of the font ("Bold", "Fett", "Italic Bold"). Field Family specifies the general style of the font. Use one value out of the constant group FontFamily. Field CharSet specifies the character set, which is supported by the font. Use one value out of the constant group CharSet. Field Pitch specifies the pitch of the font.

Use one value out of the constant group FontPitch. Field CharacterWidth specifies the character width. Depending on the specified width, a font that supports this width may be selected. The value is expressed as a percentage. Field Weight specifies the thickness of the line. Depending on the specified weight, a font that supports this thickness may be selected. The value is expressed as a percentage. Field Slant specifies if there is a character slant (italic). Field Underline uses one value out of the constant group FontUnderline. Field Strikeout uses one value out of the constant group FontStrikeout. Field Orientation specifies the rotation of the font. The unit of measure is degrees; 0 is the baseline. Field Kerning, for requesting, it specifies if there is a kerning table available: for selecting, it specifies if the kerning table is to be used. Field WordLineMode specifies if only words get underlined. A value of TRUE means that only non-space characters get underlined while a value of FALSE means that the spacing also gets underlined. This property is only valid if the property FontDescriptor::Underline is not FontUnderline::NONE. Field Type specifies the technology of the font representation. One or more values out of the constant group FontType can be combined by an arithmetical or-operation.

TABLE 189.:   STRUCTURE *FontDescriptor*

```
struct FontDescriptor
{
string Name;
short Height;



short Width;
string StyleName;
short Family;
short CharSet;
short Pitch;
float CharacterWidth;
float Weight;
com::sun::star::awt::FontSlant Slant;
short Underline;
short Strikeout;
float Orientation;
boolean Kerning;
boolean WordLineMode;
short Type;
        };
```

Enumeration *FontSlant* (Table 79) is used to specify the slant of a font. Value NONE specifies a font without slant. Value OBLIQUE specifies an oblique font (slant not designed into the font). Value ITALIC specifies an italic font (slant designed into the font). Value DONTKNOW specifies a font with an unknown slant. Value REVERSE_OBLIQUE specifies a reverse oblique font (slant not designed into the font). Value REVERSE_ITALIC specifies a reverse italic font (slant designed into the font).

TABLE 190.:   ENUMERATION *FontSlant*

```
enum FontSlant
{
NONE,
OBLIQUE,


ITALIC,
DONTKNOW,
REVERSE_OBLIQUE,
REVERSE_ITALIC
        };
```

The values in enumeration *RasterOperation* (Table 80) are used to specify the binary pixel-operation applied when pixels are written to the device. Value OVERPAINT sets all pixels as written in the output operation. Value XOR uses the pixel written as one and the current pixel as the other operator of an exclusive or-operation. Value ZEROBITS causes all bits, which are affected by this operation, to be set to 0. Value ALLBITS causes all bits, which are affected by this operation, to be set to 1. Value INVERT causes all bits, which are affected by this operation, to be inverted.

TABLE 191.:   ENUMERATION *RasterOperation*

```
enum RasterOperation
{
OVERPAINT,
XOR,
ZEROBITS,
ALLBITS,
INVERT
        };
```

Interface *XRegion* (Table 81 and Figures 10A and 10B) manages multiple rectangles, which make up a region.
Interface *XRegion* inherits from interface *XInterface* (Table 2).

TABLE 192.:   INTERFACE *XRegion*

```
interface XRegion: com::sun::star::uno::XInterface
{
Rectangle getBounds();
[oneway] void clear();
[oneway] void move( [in] long nHorzMove, [in] long
     nVertMove );
[oneway] void unionRectangle( [in] Rectangle Rect );
[oneway] void intersectRectangle( [in] Rectangle Region
     );
[oneway] void excludeRectangle( [in] Rectangle Rect );
[oneway] void xOrRectangle( [in] Rectangle Rect );
[oneway] void unionRegion( [in] XRegion Region );
[oneway] void intersectRegion( [in] XRegion Region );
[oneway] void excludeRegion( [in] XRegion Region );
[oneway] void xOrRegion( [in] XRegion Region );
sequence<Rectangle> getRectangles();
     };
```

Method getBounds (Table 81) returns the bounding box of the shape. Method clear makes this region an empty region. Method move moves this region by the specified horizontal and vertical delta. Method unionRectangle adds the specified rectangle to this region. Method intersectRectangle intersects the specified rectangle with the current region. Method excludeRectangle removes the area of the specified rectangle from this region. Method xOrRectangle applies an exclusive-or operation with the specified rectangle to this region.

Method unionRegion adds the specified region to this region. Method intersectRegion intersects the specified region with the current region. Method excludeRegion removes the area of the specified region from this region. Method xOrRegion applies an exclusive-or operation with the specified region to this region. Method getRectangles returns all rectangles, which are making up this region.

Interface *XDisplayBitmap* (Table 82) specifies an object as a bitmap for which data is formatted for a specific output device. Drawing of this bitmap is only valid on a compatible device. Interface *XDisplayBitmap* inherits from interface *XInterface* (Table 2).

TABLE 193.:    INTERFACE *XDisplayBitmap*

```
interface XDisplayBitmap:
      com::sun::star::uno::XInterface
{

      };
```

Structure *Gradient* (Table 83) describes a color dispersion within an area. Field Style specifies the style of the gradient. Field StartColor specifies the color at the start point of the gradient. Field EndColor specifies the color at the end point of the gradient. Field Angle specifies the angle of the gradient in 1/10 degree. Field Border specifies the percent of the total width where just the start color is used. Field XOffset specifies the X-coordinate, where gradient begins. Field YOffset specifies the Y-coordinate, where gradient begins. Field StartIntensity specifies the intensity at the start point of the gradient. Field EndIntensity specifies the intensity at the end point of the gradient. Field StepCount specifies the number of steps of change color.

TABLE 194.:    STRUCTURE *Gradient*

```
struct Gradient
{
com::sun::star::awt::GradientStyle Style;
long StartColor;
long EndColor;
short Angle;
short Border;
short XOffset;
short YOffset;
short StartIntensity;
short EndIntensity;
short StepCount;
      };
```

Enumeration *GradientStyle* (Table 84) specifies the style of color dispersion. Value LINEAR specifies a linear gradient. Value AXIAL specifies an axial gradient. Value RADIAL specifies a radial gradient. Value ELLIPTICAL specifies an elliptical gradient. Value SQUARE specifies a gradient in the shape of a square. Value RECT specifies a gradient in the shape of a rectangle.

TABLE 195.:   ENUMERATION *GradientStyle*

```
enum GradientStyle
{
LINEAR,
AXIAL,
RADIAL,
ELLIPTICAL,
SQUARE,
RECT
};
```

Structure *DeviceInfo* (Table 85) contains information about a device. Field Width contains the width of the device in pixels. Field Height contains the height of the device in pixels. Field LeftInset contains the inset from the left. Field TopInset contains the inset from the top. Field RightInset contains the inset from the right. Field BottomInset contains the inset from the bottom. Field PixelPerMeterX contains the X-axis resolution of the device in pixel/meter. Field PixelPerMeterY contains the Y-axis resolution of the device in pixel/meter. Field BitsPerPixel contains the color-depth of the device. Field Capabilities specifies special operations, which are possible on the device.

TABLE 196.:   STRUCTURE *DeviceInfo*

```
struct DeviceInfo
```

```
{
long Width;
long Height;
long LeftInset;
long TopInset;
long RightInset;
long BottomInset;
double PixelPerMeterX;
double PixelPerMeterY;
short BitsPerPixel;
long Capabilities;
        };
```

Interface *XBitmap* (Table 86) provides a bitmap in the Microsoft DIB format. Interface *XBitmap* inherits from interface *XInterface* (Table 2). Method getSize returns the size of the bitmap in pixels. Method getDIB returns the device independent bitmap. Method getMaskDIB returns the transparence mask of the device independent bitmap.

TABLE 197.:   INTERFACE *XBitmap*

```
interface XBitmap: com::sun::star::uno::XInterface
{
com::sun::star::awt::Size getSize();
sequence<byte> getDIB();
sequence<byte> getMaskDIB();
        };
```

Structure *Size* (Table 87) specifies the two-dimensional size of an area using width and height. Field Width specifies the width. Field Height specifies the height.

TABLE 198.:  STRUCTURE *Size*

```
struct Size
{
long Width;
long Height;
        };
```

Interface *XPointer* (Table 88) gives access to the type of mouse pointer. Interface *XPointer* inherits from interface *XInterface* (Table 2). Method setType selects a SystemPointer for this mouse pointer. Method getType returns the currently set SystemPointer of this mouse pointer.

TABLE 199.:   INTERFACE *XPointer*

```
interface XPointer: com::sun::star::uno::XInterface
{
  [oneway] void setType( [in] long nType );
long getType();


};
```

Table 89 is one embodiment of a remote virtual device interface *XRmVirtualDevice* that is included in one embodiment of lightweight component 230.

TABLE 200.:   INTERFACE *XRmVirtualDevice*

```
interface XRmVirtualDevice :
     com::sun::star::uno::XInterface
{
[oneway] void  Create( [in] unsigned long nCompDev,
     [in] long nWidth, [in] long nHeight, [in] unsigned
     short nBitCount );
[oneway] void  SetOutputSizePixel( [in] long nWidth,
     [in] long nHeight );
[oneway] void  ResizeOutputSizePixel( [in] long nWidth,
     [in] long nHeight );
};
```

Table 90 is one embodiment of interfaces *XRmBitmap* and *XAmJavaBitmap* that are included in one embodiment of lightweight component 230. These interfaces are used when a runtime environment component on server computer system needs to display a bitmap on user device 102i.

TABLE 201.:   INTERFACES *XRmBitmap* and *XRmJavaBitmap*

```
interface XRmBitmap : com::sun::star::uno::XInterface
{
/**
InitiateTransfer: initialize bitmap to empty with
     width, height and depth the next parameters
     determine the format of the scanlines transported
     by subsequent Transfer calls: palette for palette
     bitmaps, the palette entries are in the order
     blue(or index), green, red, bool.  the bool tells
```

whether the first byte is an index or not. (implementation detail: this is a vcl BitmapColor) format and scanlinesize determine how to interpret the scanlines transported in each Transfer call. compressiontype marks the compression algorithm used on the byte sequences in Transfer call with 0 meaning uncompressed. InitiateTransfer with width and height set to 0 is legal, the bitmap data should be purged then.

```
 */
[oneway] void        InitiateTransfer( [in] long width,
     [in] long height, [in] long depth, [in] sequence<·
     byte > palette, [in] long format, [in] long
     scanlinesize, [in] long compressiontype );
/**
 * Transfer: transports one or more scanlines of the
     bitmap initialized in InitiateTransfer.
 */
[oneway] void  Transfer( [in] ByteSequence aData );
unsigned long  QueryBitmapPtr();
[oneway] void  Draw( [in] long nDestX, [in] long
     nDestY, [in] long nDestWidth, [in] long
     nDestHeight, [in] long nSrcX, [in] long nSrcY,
     [in] long nSrcWidth, [in] long nSrcHeight, [in]
     XRmOutputDevice xOutputDevice );
[oneway] void  DrawEx( [in] long nDestX, [in] long
     nDestY, [in] long nDestWidth, [in] long
     nDestHeight, [in] long nSrcX, [in] long nSrcY,
     [in] long nSrcWidth, [in] long nSrcHeight, [in]
     XRmBitmap xBitmap, [in] XRmBitmap xBitmapMask,
     [in] XRmOutputDevice xOutputDevice, [in] boolean
     bAlpha );
[oneway] void  DrawMask( [in] long nDestX, [in] long
     nDestY, [in] long nDestWidth, [in] long
     nDestHeight, [in] long nSrcX, [in] long nSrcY,
     [in] long nSrcWidth, [in] long nSrcHeight, [in]
```

```
        XRmBitmap xBitmap, [in] unsigned long nColor, [in]
            XRmOutputDevice xOutputDevice );
[oneway] void  CreateBitmap( [in] long nX, [in] long
            nY, [in] long nWidth, [in] long nHeight, [in]
            XRmOutputDevice xOutputDevice );
void GetBitmap( [out] ByteSequence rData );
};


interface XRmJavaBitmap : XRmBitmap
{
[oneway] void  SetImageData( [in] long nBitCount, [in]
            long nWidth,[in] long nHeight,[in] ByteSequence
            aColorMap, [in] ByteSequence aIndexData, [in]
            LongSequence aRGBData);
            void GetImageData( [out] long rBitCount, [out]
                long rWidth,[out] long rHeight, [out]
                ByteSequence rColorMap, [out] ByteSequence
                rBitmapData, [out] LongSequence rRGBData,
                [out] long rAlphaMask, [out] long rRedMask,
                [out] long rGreenMask, [out] long rBlueMask);
};
```

Table 91 is one embodiment of interfaces *XRmPrintObserver, XRmPrinterEnvironment, XRmPrinter*, and *XRmPrintSpooler* that are included in one embodiment of lightweight component 230. These interfaces are used when a runtime environment component on server computer system needs to print to a printer coupled to user device 102i.

TABLE 202.:   INTERFACES *XRmPrintObserver,*
*XRmPrinterEnvironment, XRmPrinter,* and *XRmPrintSpooler*

```
{


// [in] Eingabe-Parameter. Der "Server" auf dem das
     Object liegt ist der Remote-Client.
// Also "Server" eigentlich "Display"
// [oneway] => Kein warten auf Antwort
typedef sequence< byte, 1 > RmJobSetup;
typedef sequence< byte, 1 > RmQueueInfo;
typedef sequence< byte, 1 > RmPrinterPage;
typedef sequence< string, 1 > StringSequence;


interface XRmPrinterObserver :
     com::sun::star::uno::XInterface
{
[oneway] void  PrinterSettingsChanged();
};
interface XRmPrinterEnvironment :
     com::sun::star::uno::XInterface
{
unsigned short GetQueueCount();
void GetQueueInfo( [in] unsigned short nQueue, [out]
     RmQueueInfo rRmQueueInfo );
boolean   GetPrinterInfo( [in] string sPrinterName,
     [out] RmQueueInfo rRmQueueInfo );
void GetPrinterNames( [out] StringSequence
     rPrinterNames );
stringGetDefaultPrinterName();


void SetObserver( [in] XRmPrinterObserver rObserver );
};
```

```
interface XRmPrinter : com::sun::star::uno::XInterface
{
void Create( [in] RmQueueInfo aRmQueueInfo, [out]
     RmJobSetup rRmJobSetup );
boolean  SetJobSetup( [inout] RmJobSetup rRmJobSetup );
boolean  SetOrientation( [in] unsigned short
     nOrientation, [inout] RmJobSetup rRmJobSetup );
boolean  SetPaperBin( [in] unsigned short nPaperBin,
     [inout] RmJobSetup rRmJobSetup );
boolean  SetPaper( [in] unsigned short nPaper, [inout]
     RmJobSetup rRmJobSetup );
boolean  SetPaperSizeUser( [in] long nWidth, [in] long
     nHeight, [inout] RmJobSetup rRmJobSetup );
void  GetPageInfo( [out] long rOutWidth, [out] long
     rOutHeight, [out] long rPageOffX, [out] long
     rPageOffY, [out] long rPageWidth, [out] long
     rPageHeight );
unsigned short GetPaperBinCount();
string    GetPaperBinName( [in] unsigned short
     nPaperBin );
/** query the printer for its capabilities (mainly to
     decide whether it is possible to bring up a
     printer setup dialogue)
*/
unsigned long  GetCapabilities( [in] unsigned short
     nType );
/** brings up a UI to setup the current jobsetup.
     Returns the modified (and still current ) jobsetup
     if successful.  If not successful (e.g. user
     cancel) the return is empty.  Mote: return is
     delivered as a UserEvent on the EventListener of
     xParent
 */
[oneway] void UserSetup( [in] XRmFrameWindow xParent,
     [in] unsigned long EventID );
};
```

```
interface XRmSpoolLauncher :
        com::sun::star::uno::XInterface
{
boolean    LaunchSpooler( [in] string sUserName, [in]
        string sPassword );
};
interface XRmPrintSpooler :
        com::sun::star::uno::XInterface
{
void Create( [in] RmJobSetup jobSetup );
boolean    StartJob( [in] unsigned short nCopies, [in]
        boolean  bCollate, [in] string aJobName, [in]
        string  sFileName , [in] boolean bPrintFile);
[oneway] void  SpoolPage( [in] RmPrinterPage page );
void AbortJob();
void EndJob();
};


};
```

Table 92 is one embodiment of interface *XRmFileStream.* Table 93 is one embodiment of interface *XRmFSys.* Both of these interfaces are included in one embodiment of lightweight component 230. These interfaces are used when a runtime environment component reads or writes data on a storage medium of user device 102i, or needs to obtain information about data stored on a storage medium of user device 102i. In this embodiment, object BeanService 532 receives, as described above, a handle to object ClientFactory 515. The handle to object ClientFactory 515 to instantiate an object on the user device to access a particular capability on the user device, e.g., the file system, printing, sound, etc.

TABLE 203.:   INTERFACE *XRmFileStream*

```
{
typedef sequence< byte, 1 > RFSByteSequence;
interface XRmFileStream :
     com::sun::star::uno::XInterface
{ // interface

// param aFilename: file to open
// param nOpenMode: file mode read
// param bIsOpen: file opend successfully
// param bIsWritable: file opend writable
// param nStreamMode: stream mode
// param nError: Error Code
// returns fileHandle: handle
unsigned long  open(     [in] string  aFilename,
     [in]unsigned short nOpenMode,  [out] boolean
     bIsOpen,  [out] boolean bIsWritable,  [out]
     unsigned short nStreamMode, [out]unsigned long
     nError);
// param handle: filehandle
void close();

// param aData: data read from stream
// param nSize: number of bytes to read
// param nError: errorcode
// returns: number of bytes that were successfully read
unsigned long  getData([out] RFSByteSequence aData,
     [in] unsigned long nSize,  [out] unsigned long
     nError);
// param nData: data to write to stream
// param nSize:    number of bytes to write
// param nError: errorcode
// returns: number of bytes that were successfully
//  written
```

```
unsigned long putData([in]  RFSByteSequence aData, [in]
     unsigned long nSize, [out]  unsigned long nError);
// param nPos: desired position
// param nError: errorcode
// returns:    new position
unsigned long seekPos([in] unsigned long nPos, [out]
     unsigned long nError);
// param nSize: new filesize
// param nError: errorcode
Void setSize([in] unsigned long nSize, [out] unsigned
     long nError);
// param nByteOffset: where to start locking
// param nBytes: how many bytes to lock
// param nError: errorcode
// returns:     success
boolean  lockRange([in] unsigned long nByteOffset, [in]
     unsigned long nBytes, [out] unsigned long nError);
// param nByteOffset: where to start unlocking
// param nBytes: how many bytes to unlock
// param nError: errorcode
// returns:     success
boolean  unlockRange([in] unsigned long nByteOffset,
     [in] unsigned long nBytes, [out] unsigned
     longnError);
};};
```

TABLE 204.:  INTERFACE *XRmFSys*

```
{

struct FileStatMembers
{
unsigned long  nError;
unsigned long  nKindFlags;
```

```
unsigned long  nSize;
string         aCreator;
string         aType;
unsigned long  aDateCreated;
unsigned long  aTimeCreated;
unsigned long  aDateModified;
unsigned long  aTimeModified;
unsigned long  aDateAccessed;
unsigned long  aTimeAccessed;
};


typedef sequence< string, 1 >  DirEntrySequence;
     typedef sequence< FileStatMembers, 1 >
          FileStatSequence;
typedef sequence< unsigned long, 1 > FSysSortSequence;


interface XRmFSys : com::sun::star::uno::XInterface
{ // interface
boolean isCaseSensitive  ( [in] string aDirEntry);
string tempName ([in] string aDirEntry, [in] unsigned
     long eKind);
boolean toAbs ( [in] string aDirEntry, [out] string
     aResult);
boolean toRel ( [in] string aDirEntry, [out] string
     aResult);
boolean toRelRel ( [in] string aDirEntry, [in] string
     aRelative, [out] string aResult);
boolean  makeShortName ( [inout] string aDirEntry, [in]
     string aLongName, [in] unsigned long nCreateKind,
     [in] boolean bUseTilde, [in] unsigned long
     nStyle);
unsigned short scan ( [in] string aDirEntry, [out]
     DirEntrySequence aDirEntryList, [out]
     FileStatSequence aFileStatList, [in]
     FSysSortSequence aSortLst, [in] string aNameMask,
     [in] unsigned short nAttrMask, [in] boolean
```

```
        bFillFileStatList);
boolean update ( [out] FileStatMembers aFileStat, [in]
        string aDirEntry, [in] boolean
        bAccessRemovableDevice);
unsigned long queryDiskSpace ( [in] string aPath, [out]
        unsigned long nFreeBytes, [out] unsigned long
        nTotalBytes);
string getDevice ( [in] string aDirEntry);
string getVolume ( [in] string aDirEntry);
unsigned long getPathStyle ( [in] string aDevice);
boolean hasReadOnlyFlag();
boolean getReadOnlyFlag ( [in] string aDirEntry);
boolean exists ( [in] string aDir, [in] unsigned long
        nAccess);
boolean first ( [inout] string aDir);
boolean find ( [in] string aDirEntry, [in] string
        aPfad, [in] char cDelim, [out] string aResult);
boolean setCWD ( [in] string aDir, [in] boolean
        bSloppy);
boolean makeDir ( [in] string aDir, [in] boolean
        bSloppy);
long setReadOnlyFlag ( [in] string aDirEntry,  [in]
        boolean bRO);
void setDateTime ( [in] string aFileName, [in] unsigned
        long nDate, [in] unsigned long nTime);
unsigned long moveTo ( [in] string aFromDir, [in]
        string aToDir);
unsigned long kill ( [in] string aFromDir, [in]unsigned
        long nActions);
};
        };
```

Table 94 is one embodiment of interfaces *XSoundCallBack and XRMSound* that are included in one embodiment of lightweight component 230. These interfaces are used when a runtime environment component needs to play sounds on user device 102i.

TABLE 205.:   INTERFACES *XSoundCallBack and XRMSound*

```
{
// ---------------- - SoundSequence - ----------------
    -
typedef sequence< byte, 1 > SoundSequence;
// ---------------- - SoundCallback - ----------------
    -
interface XSoundCallback :
    com::sun::star::uno::XInterface
{
[oneway] void      Notify( [in] unsigned short
    nNotification, [in] unsigned long nError );
};
// ------------ - XRmSound - ------------
interface XRmSound : com::sun::star::uno::XInterface
{
[oneway] void Create( [in] XSoundCallback
    xSoundCallback );
unsigned long Transfer( [in] unsigned long nExtraData,
    [in] SoundSequence aData, [in] string aFileName );
[oneway] void SetStartTime( [in] unsigned long
    nStartTime );
[oneway] void SetPlayTime( [in] unsigned long nPlayTime
    );
[oneway] void SetLoopMode( [in] boolean bLoop );
[oneway] void ClearError();
[oneway] void Play();
[oneway] void Stop();
[oneway] void Pause();
};
```

```
        };
```

Table 95 is one embodiment of interface *XRmStatus* that is included in one embodiment of lightweight component 230. This interfaces is used when a runtime environment component needs the status of user device 102i.

## TABLE 206.:   INTERFACES *XRmStatus*

```
interface XRmStatus : com::sun::star::uno::XInterface
{
unsigned long GetRemoteVersion();
unsigned long GetSystemType();
unsigned long GetSystemCharSet();
void ShowError( [in] string aMsg, [in] unsigned short
      nCode );
void ShowWarning( [in] string aMsg, [in] unsigned short
      nCode );
      void ShowInfo( [in] string aMsg, [in] unsigned
            short nCode );
void Quit();
};
};
```

Those skilled in the art will readily understand that the operations and actions described herein represent actions performed by a CPU of a computer in accordance with computer instructions provided by a computer program. Therefore, lightweight component 230 may be implemented by a computer program causing the CPU of the computer to carry out instructions representing the individual operations or actions as described hereinbefore. The computer instructions can also be stored on a computer-readable medium, or they can be embodied in any computer-readable medium such as any communications link, like a transmission link to a LAN, a link to the internet, or the like.

Thus, lightweight component 230 can be implemented by a computer program comprising computer program code or application code. This application code or computer program code may be embodied in any form of a computer program product. A computer program product comprises a medium configured to store or transport this computer-readable code, or in which this computer-readable code may be embedded. Some examples of computer program products are CD-ROM discs, ROM cards, floppy discs, magnetic tapes, computer hard drives, servers on a network, and carrier waves. The computer program product may also comprise signals, which do not use carrier waves, such as digital signals transmitted over a network (including the Internet) without the use of a carrier wave.

The storage medium including the applications/services executed on a server may belong to server computer system 100 itself. However, the storage medium also may be removed from server computer system 100. The only requirement is that the applications/services are accessible by server computer system 100 so that the application/ service corresponding to lightweight component 230 can be executed by server 100.

Herein, a computer memory refers to a volatile memory, a non-volatile memory, or a combination of the two in any one of these devices. Similarly, a computer input unit and a display unit refer to the features providing the required functionality to input the information described herein, and to display the information described herein, respectively, in any one of the aforementioned or equivalent devices.

While the present invention has been explained in connection with certain embodiments thereof, other embodiments will be apparent to those skilled in the art from consideration of the specification and practice of the embodiment of the present invention disclosed therein. It is intended that the specification and examples be considered as exemplary only, without limiting the spirit and scope of the invention.

In the following, further embodiments of the invention will be described with respect to figs. 11 - 22.

The embodiments may be implemented in a software system for providing the functionality (i.e. the services) of runtime environment components from a server computer system via a network to one or several client computer systems.

The software system consists of two parts, one of them being executed on a client, the other residing and being executed on the server. The part on the server platform makes up the runtime environment comprising a plurality of runtime environment components which are able to provide services. Furthermore, the part on the server provides the necessary communication tools in order to communicate with the client. The other part, being executed on the client, performs mainly the communication between the client requesting a runtime environment component service and the part being executed on the server which renders the runtime environment component service requested. The server's part of the software system is by far larger in size than the client's part thereof. This latter part is referred to as the 'lightweight component'. A typical size of the software system's part on the server may be 50 to 100 Megabyte (e.g.: an office software package), whereas the lightweight component on the client may have a typical size of 400 Kilobyte, and may utilize only little system resources (CPU power, memory).

The small size of the lightweight component makes it attractive to download it within very short time from the server to a client when the corresponding runtime environment component service is actually needed. Then, via the lightweight component, the client has access to all the services presented by the runtime environment components hosted on the server.

The lightweight component provides an application programming interface (API) for any application program the implementation of which on the client is allowed by an implementation framework on the server. Two types of lightweight components are explained in the following, one being a standard component (referring to Figures 11 to 14), the other being a component rendering visual functionality (referring in particular to Figures 15 to 19).

Computer Software programs and parts thereof, which are called during execution of other computer software programs or parts thereof, are referred to as runtime environment components. The functionality provided by these runtime environment components to calling software programs or parts thereof are referred to as runtime environment component services. In many cases, runtime environment components have a very large size. For example, office suites comprising drawing programs and wordprocessors as well as other tools may have sizes of 50 to 100 Megabyte which renders a distribution over the Internet difficult. The runtime environment components may be implemented in any suitable form. They may consist of compiled software program code to be executed or of script code in any programming language to be interpreted before execution by a compiler. Runtime environment components are typically stored and administrated on a server.

The runtime environment component services, that means the functionalities provided by runtime environment components, which are, for example, stored on a server, are made available for use in software programs to be executed on, for example, clients without integrated them into these software programs and without distributing them together with these software programs to the place of execution, for example, the clients.

Further, functionality of the runtime environment components should is made available for all kinds of clients whether they are powerful enough for storing or executing the runtime environment component or not. Further, the user of a client is not charged with the problem whether a specific runtime environment component is available on his client or not.

Reference is made to Fig. 11, which illustrates the communication between the server 111 and an arbitrary number of clients 112A, 112B which are connected via communication network 113. The server 111 presents the runtime environment component services to the clients 112A, 112B. Server 111 hosts components 1101, 1102, 1103, 1104, 1105, 1106 of the runtime environment as well as a component 1100 for communication with the clients 112A, 112B via a network 113. The network 113 is here assumed to be the Internet, although any other network may be used as well. Each client 112A, 112B is adapted to execute (at least) one software program 1250.

On each of the clients 112A, 112B a lightweight component 1210 is implemented, which provides services of the runtime environment components 1101, 1102, 1103, 1104, 1105, 1106 hosted on server 111 to a software program 1250 running on the clients 112A, 112B. The communication with server 111 is performed by the communication component 1200 via the network 113. It is to be noted that the lightweight component 1210 may initially not be available on the clients 112A, 112B. In this case, the lightweight component 1210 may be downloaded on the clients 112A, 112B, for example, from the server 111 upon the first request for runtime environment component services which are accessible by means of the lightweight component 1210.

It is assumed that on the clients 112A, 112B a software program 1250 (e.g.: an Internet browser) is executed.

Whenever the software program 1250 calls for a runtime environment component, for example an API 1101 for providing a mathematical function, the lightweight component 1210 receives this call. The lightweight component 1210 then transforms this call into a request and transmits it via the communication component 1200, the network 113 and the communication component 1100 to the server 111, where the API component 1101 called for is residing.

Fig. 12 to 14 now illustrate the processing for presenting / providing the runtime environment component services in more detail.

Referring to Fig. 12, the lightweight component 1210 receives a call for an API component 1101 from the software program 1250 running on the client 112A. With the call, data (e.g. arguments) necessary for performing the requested runtime environment component service of API component 1101 is received. The lightweight component 1210 transforms the received call into a request to be transmitted over the network 113 to the server 111 which actually hosts the runtime environment, including the now requested API component 1101.

The transmission of the request over the network 113 is performed according to a predetermined transmission protocol. The transmitted request contains the data (e.g. arguments) from the calling software program 1250 for being processed by the API component 1101. If the network 113 is publicly accessible, the transmission may be encrypted according to known technologies. Further, digital signatures can be used to provide certification of the request mechanism being established on the client for this runtime environment component services system.

The request is received by the server 111 on which the appropriate communication component 1100 is executed. The communication component 1100 transforms and decrypts (if necessary) the transmitted request, performs digital signature processing, and accesses the requested API component 1101 implementing the desired mathematical function. This API component 1101 is executed on the server 111, whereby the data (e.g. arguments) received with the request are processed. The result thereof is encrypted (if necessary) by the communication component 1100 and transmitted from the server 111 back to the client 112A.

The lightweight component 1210 on the client receives and re-transforms the result (and decrypts it, if necessary) and provides the result to the software program 1250 having called for the service of the API component 1101.

Thus, the lightweight component 1210 on the client 112A delegates calls to the API component 1101, which may be part of an implementation framework on the server 111. The lightweight component 1210 operates hidden to the calling software program of the client 112A. The called runtime environment component 1101 is executed on the server 111. However, the calling software program 1250 on the client 112A does not notice whether the execution of the runtime environment component 1101 is local, i.e. on the client 112A, or remote, i.e. on the server 111. The calling software program 1250 does not need to be modified for the use with the lightweight component 1210, since, the call for a runtime environment component is 'intercepted' and transformed into a suitable request to the server 111 by the lightweight component 1210, according to the invention.

On the other hand, local services available on the client 112A, including devices like printers and local storage, can also be utilized by the runtime environment components on the server 111, in a transparent manner. Transformation of the call of the software program 1250 to the lightweight component 1210 and re-transformation of the result received from the server 111 are performed "on the fly".

Fig. 13 illustrates the implementation of the lightweight component 1210. As mentioned above, the component 1210, which is necessary for transforming the call can be kept relatively small. It can have a small installation size and low usage of resources compared to the runtime environment components on the server 111.

Fig. 14 exemplary illustrates the transparent access of a runtime environment component via an object component model. The object component model handles calls by marshaling requests for runtime environment component services through stub objects 1200' on the client 112A and transmitting it over the network 113 to the server 111. There, the requests are unmarshaled through proxy objects 1100'.

The stub objects 1200' and the proxy objects 1100' are generated dynamically, for example, by the communication component 1200 and by the communication component 1100, respectively. Therefore, a caller does not have to implement the stub objects 1200' and the proxy objects 1100'.

Marshalling of a request is, in the present context, understood as the process of embedding a request for a runtime environment component service in a bit stream for transmission over a network. The unmarshalling is the inverse process of the marshalling.

The transmission concept through stub and proxy objects is described in more detail in the Annex.

The stub / proxy object component model used here implies that a lightweight component is able to access any arbitrary runtime environment component 1101, 1102, 1103, 1104, 1105, 1106 available on the server 111, as if it resided locally on the client 112A.

Referring to Figures 15 to 17, a further embodiment of a lightweight component 1210 is explained. The communication between the server 111 and the client 112A is performed via the network 113 by the respective communication components 1100 on the server 111, and 1200 on the client 112A. The same encryption / decryption mechanisms as indicated above may be applied. In addition to the basic generic lightweight component 1210 as described in connection with Figures 11 to 14, the lightweight component 1210 may include the ability to perform graphic interaction and to manage user interaction. In the following, such a component is referred to as a visual lightweight component. Such a graphic interaction may comprise drawing visual contents on the client 112A, for example, on a screen of a client laptop. Again, as described above, the main part of the processing is burdened on the runtime environment component residing and running on the server 111.

The protocol which may be used for transmitting graphical requests between the client 112A and the server 111 is the Remote Visualization Process protocol (RVP). RVP is a high level definition of a graphic device defined as a set of interfaces. RVP is based completely on a component infrastructure. This gives RVP the ability to map functionality which a client system is unable to support, to a service component on the server side emulating this functionality.

The graphical environment may communicate with the lightweight component 1210 through the Java Abstract Window Toolkit layer (AWT). AWT stands for the definition of the graphic and user interface layer for the Java language. It is defined as a set of Java classes and interfaces which are mapped to the concrete implementation on different platforms. AWT is part of the standard Java environment.

The service component on the server side uses a VCL implementation as drawing engine. VCL (Visual Class Library) is a C++ class library . It provides similar to the AWT a set of classes and interfaces to build graphical applications on different platforms. For every platform there is a concrete implementation of VCL. For the lightweight visual components, VCL provides a special implementation, which transmits all graphical requests for drawing over the network to a client side, where these requests are intercepted and mapped to a platform dependent graphic layer, which is here AWT.

Again, the implementation framework on the server handles drawing and user interaction transparently to the component.

Fig. 15 illustrates RVP event processing. The visual lightweight component 1210 is embedded in a graphical environment, the graphical environment comprising a display software program 1250 with a graphical user interface (GUI). The graphical user interface is referred to as a panel. An example of an implementation is a Java bean which is embedded in an HTML page and rendered by a browser. This Java bean represents a view (in a window) of an office application component (e.g. StarOffice Writer) or another visual office component.

An event from the graphical environment is passed to the AWT 1260, and then interpreted by the RVP protocol layer, which performs communication between the client visual lightweight component 1210 and the remote office runtime environment component implementation 1110 on the server platform 111. From RVP 1220 the event is marshaled by communication component 1200 and transmitted to the server 111. There, it is unmarshaled and passed to the RVP 1120 by communication component 1100, and dispatched by the VCL layer 1140.

The runtime environment component 1110 receives the event. After the event is dispatched, the component 1110 is able to react to the event.

Fig. 16 illustrates the transmission of the response of the component 1110 on the server 111 back to the requesting client 112A. The requested service is here a drawing functionality which is implemented by RVP drawing. The office component (e.g. the StarOffice Writer) 1110 is able to draw on a panel within software program 1250 of the client 112A using the same mechanism as described above. The component 1110 uses the VCL 1140 as a drawing engine. The operations are transmitted through VCL 1140, RVP 1120 and communication component 1100 on the server 111 to the client 112A. Client 112A receives the operations and passes them to the AWT 1260 which is able to draw on the panel of the client 112A directly.

Fig. 17 illustrates accessing an API as a runtime environment component on the server 111 by the client 112A. The visual lightweight component 1210 is, in the example described in Fig. 15 and Fig. 16, still able to access transparently the full functionality of an API 1104 provided by the office component 1110. The request of the lightweight component 1210 for API 1104 is handed over to the office component 1110 through the communication component 1200 on the client 112A and the communication component 1100 of the server 111. Herein, the request for the API 1104 generated by the lightweight component 1210 may bypass RVP 1220 and AWT 1260 on the client 112A and likewise RVP 1120 and VCL 1140 on the server 111, if not drawing services are requested. The latter would be the case, for example, if API 1104 would provide calculation services. In order to have the request bypass the mentioned components the lightweight component 1210 must decide that these components shall be bypassed. This decision can be made by the lightweight component 1210 based on the call of the API 1104 received from the software program 1250 and the information that the API 1104 does not provide drawing services. This information will regularly be present in the lightweight component 1210, since it has information about all runtime environment components being available on the server 111 anyway, since it has to request their services and receive their responses. However, if necessary the office component 1110 may also react to the request for API 1104 by drawing via RVP 1220 directly on the panel of client 112A.

An exemplary scenario for the latter might be the following: a user on client 112A editing a text document displayed in his browser whishes to change the font size to 10 points throughout the whole document. For this purpose, the client 112A uses the API 1104 to change all fonts throughout the whole document to a size of 10 points. In this case, the office component 1110 running on the server 111 re-calculates the display of the document, renders the document remotely, and draws the document on the client 112A through the RVP 1120 and RVP 1220.

However, if the user on client 112A changes the font size only for newly input text lines, the currently displayed document does not change, thus there is no need to re-draw the whole document on the client 112A. The event of changing the font size is passed via RVP 1120 to the office component 1104 and forces new rendering of the document on the server 111. Since no re-drawing of the document on the client 112A is needed, the lightweight component 1210 does not have to take any further action.

The participating components to create a Java bean lightweight component in the frame of the office application program package StarOffice used as a runtime environment component are shown in Fig. 18. An accompanying sequence diagram is supplied in Fig. 19. The figures are reduced to show only needed relations and methods to illustrate this specific process. A *StarOfficeBean* represents a common java bean which is derived from a java panel. It resides on the client as the single instance *Connector,* which is responsible for maintaining connections to the remote machine. All client beans share one connection per user and server. The *OClientFactory* created by the *Connector* is also located at the client 112A. This enables the remote Office Component to create elements which are specific to the client 112A. Examples for these items range from a simple frame window to a printer device handled locally. Next the *Connector* establishes a connection to the remote machine and starts the login process. If succeeded the server 111 starts a StarOffice session remotely and the *Connector* confirms the session with *Start().* The task of the remote *MultiServiceFactory* created by the *RVP Connection* instance is to create needed instances on the remote machine. Then a local *ORmFrameWindow* is created and passed together with a reference of the *OClientFactory* to the remote StarOffice instance to be able for local dispatching and drawing. By calling *initialize()* on the remotely created *JavaBeanFrame* all actions are done and the process of creating a StarOfficeBean is completed.

Unlike components like CORBA objects, lightweight components 1210 do not have any additional code for accessing the implementing object. Also the size of a lightweight component 1210 does not increase with the number of accessed runtime environment components of the implementation server framework. This introduces the ability to offer components which expose only services designed for a special purpose and hide complexity of the implementation framework.

By applying the invention, it is possible to include for example full word processing functionality provided by the server 111 into any other application program 1250 running on the client computer 112A.

Special purposes may be applications designed for being executed on particular clients like handheld computers or mobile telephones, where storage and processing capabilities are particularly limited. Nevertheless, the whole functionality of the framework is still accessible.

Furthermore, when adding new runtime environment components to the server 111, no modification on the client side is necessary. Through the concept of lightweight components, a new runtime environment component on the server is immediately callable by the client. The components are based on a generic lightweight component which is able to communicate with the implementation framework via the object component model.

Fig. 20 refers to an example for using the present invention. In this example a setup is used as described in Fig. 15 to 17. Therefore, reference numerals also relate to components which are presented and described in more detail in connection with Fig. 15 to 17. However, the method according to Fig. 20 does not correspond to the methods described along Fig. 15 to 17.

In this example, a user utilizes his computer system as a client 112A. This client 112A includes a screen on which the user can edit and process a text document. The client 112A includes text processing software 1250 with a limited scope of functionality and a lightweight component 1210 which corresponds to comprehensive services offered by an office suite software package 1110 located as runtime environment components on a server 111 to which the client 112A is connected via a network 113.

For the purposes of this example the user edits a text document on the screen of the client 112A and changes the font size of the text. In order to do this he inputs his commands via a suitable input device of the client 112A, for example, a keyboard. In step 2010 the text processing software 1250 on the client 112A requests the service "font change" from the lightweight component 1210. The lightweight component 1210 receives this request in step 2020. In step 2030 the lightweight component 1210 marshals the request and transmits it via the communication component 1200 in client 112A to the communication component 1100 of the server 111 via the network 113.

The server 111 unmarshals the request and calls the runtime environment component 1110 in step 2040. In the next step 2050 the component 1110 starts processing the "font change" request. It will determine in step 2060 if a re-drawing of the text document on the screen of the client 112A is necessary due to the requested font change.

If not, the service component 1110 will immediately produce a result to the request in step 2080. A re-drawing may not be necessary, if the user wants the font change to be effective exclusively for further input into the text document. In this case the result to be provided by component 1110 could be a return code to the software program 1250 which tells the software program 1250 that further input into the text document will be processed with the new font on the screen of the client 112A.

If yes, for example, if the font shall be changed for the whole text document, the component 1110 renders a new graphical presentation of the text document in step 2061. Then, in step 2062, the output operations for the realization of the graphical presentation are given to the VCL 1140 by the component 1110. In step 2063 it will be decided by VCL 1140 whether the output operations have to be carried out in a visible area, e.g. on a screen.

If this is not the case, for example, if the text document with the font changed throughout its entire scope would only be stored as a data file but not shown on the screen of the client 112A, the result would be created in step 2090 by VCL 1140. This result would be the text document in the new form. No display on the screen of the client 112A would be envisaged in this case.

If this is the case, for example, if the text document shall be displayed on the screen of the client 112A, the "change font" request realized by VCL 1140 is transmitted to RVP 1120 in step 2064. This realized request is then, in step 2065, marshaled and sent via communication component 1100 of server 111, via the network 113 and via the communication component 1200 of the client 112A to the lightweight component 1210 on the client 112A. In step 2066 the lightweight component 1210 unmarshals the realized request. In step 2067 the request is translated into an AWT request. This AWT request is transmitted in step 2068 from the lightweight component 1210 via the RVP 1220 to the AWT 1260. In step 2069 the AWT 1260 executes the transmitted AWT request. Finally, in step 2070 the result will be transmitted to the software program 1250 so that the text document will be drawn on the screen of the client 112A with the new font size.

Fig. 21 illustrates a non-visual lightweight component. Non-visual means that the user of the client on which the lightweight component is located does not receive any hints as to its presence. He does not see it and he can also not interact with it directly.

In Fig. 21 a client 2110 is shown with a screen showing, on the left, a tree-like representation of data files below a window, and, on the right, information given about a certain text document which was selected by the user by means of the tree-like representation of data files. The client 2110 is connected via network 2120 to a server 2130 which has access to a text processing software program as runtime environment component 2140. This component 2140 has in turn access to a storage medium 2150 and to a library 2160.

If a user of the client 2110 wants to obtain information, for example, number of words and lines, author and date of this version, about a text document chosen from the tree-like representation of data files, he enters his request via an input device of the client 2110, for example, a keyboard of the client 2110. Then, the non-visual lightweight component on the client 2110 will contact, as described above, via the network 2120 the server 2130 and ask for the services providing the information requested by the user from the runtime environment component 2140. The result provided by the component 2140 will then be re-transmitted to the client 2110 so that the desired information - number of words and lines; author and date of this version of the selected text document - can be displayed on the screen of the client 2110. The lightweight component remains non-visual to the user of the client 2110.

Fig. 22 in contrast shows an example of a visual lightweight component, that means a lightweight component with which the user may interact, but which will at least be recognized by the user in some situations.

A client 2210 includes a visual lightweight component. The client 2210 is connected via network 2220 with the server 2230, which in turn has access to the runtime environment component 2240 connected to storage medium 2250 and data base 2260.

In this example, a user of the client' 2210 edits a text document on the screen of the client 2210, as shown in Fig. 22 on the right, besides the above described window and tree-like representation of data files. The shown screen representation of the text document shows in the right middle position a small window with which the user may manipulate the displayed text document. This window represents the lightweight component. Here, the user may directly interact, via the window presentation, with the lightweight component, which is therefore referred to as a visual lightweight component.

If the lightweight component is activated by a user interaction it may contact, as described above, the server 2230 and thereby the runtime environment 2240, which may provide a service requested by the user by his interaction from the client 2210.

Comparing a non-visual and a visual lightweight component as above described, it may be advantageous to use a non-visual lightweight component for processing requests which do not require particular operations for their fulfillment, in particular, no drawing operations on a screen of a client. In this case, the non-visual lightweight component may provide the response to the request more quickly than a visual lightweight component, since, for example, drawing operations are not processed at all; they are not only ignored by the client after having been processed with great efforts.

In the following, further embodiments for remote control and interaction with a run time environment component will be described.

    1) A method for presenting a runtime environment component service by a first computer system to a second computer system over a communication network, said method being performed by said first computer system and comprising:

generating a user interface infrastructure, on said first computer system, to receive graphic user interface events from said second computer system and to send remote graphic user interface commands to said second computer system; and

using said user interface infrastructure to initialize said runtime environment component service wherein said runtime environment component service sends graphic user interface commands to said user interface infrastructure.

2) The method of 1) further comprising:
receiving by said user interface infrastructure a remote input action event via said communication network, said remote input action event being generated in said second computer system by a lightweight component corresponding to said runtime environment component service.

3) The method of 2) further comprising:
transmitting an input event to said runtime environment component service by said user interface infrastructure in response to said remote input action event.

4) The method of 3) further comprising:
processing said input event by said runtime environment component service.

5) The method of 4) further comprising:
generating a graphic user interface command to said user interface infrastructure by said runtime environment component service.

6) The method of 5) further comprising:
transmitting a remote graphic user interface command to said lightweight component by said graphic user interface infrastructure in response to said graphic user interface command.

7) A method for presenting a runtime environment component service by a first computer system to a second computer system over a communication network, said method being performed by said first computer system and comprising:

receiving a remote input action command for a runtime environment component service via said communication network, said remote input action command being generated in said second computer system by a lightweight component corresponding to said runtime environment component service;

transmitting a local input action command to said runtime environment component service in response to said remote input action command;

processing said local input action command by said runtime environment component service;

generating a local output command by said runtime environment component service for a graphical user interface; and

transmitting a remote output command to said lightweight component in response to said local output command.

8) The method of 7) wherein said runtime environment component service is in an office application suite.

9) The method of 7) wherein said method further comprises:
receiving said local output command by a local window object and in response generating said remote output command by said local window object

10) The method of 7) wherein said method further comprises:
receiving said remote input action command by a local window object and in response generating said local input action command by said local window object.

11) The method of 9) wherein said method further comprises:
receiving said remote input action command by said local window object, and in response generating said local input action command by said local window object.

12) The method of 10) wherein said remote input action command is a user interface event.

13) The method of 11) wherein said remote input action command is a user interface event.

14) A method comprising:

receiving a command by a service executing on a computer system to create an infrastructure for executing a runtime environment component service, wherein said command is from a component executing on a user device; and

issuing an instruction to create an instance of a remote frame window on said user device.

15) The method of 14) further comprising:
generating an instance of a local window on said computer system by said service, wherein said local window issues remote instructions to said remote window frame in response to instructions from said runtime environment component service.

16) The method of 15) further comprising:
querying said remote frame window by said local window to determine properties of said remote frame window.

17) The method of 15) further comprising:
generating, on said computer system, a local frame for said local window.

18) The method of 17) further comprising:
receiving, by said local frame, a command from said user device to load a document.

19) The method of 18) further comprising:
issuing, in response to said command to load a document, a command by said local frame to said runtime environment component service to create an instance of a runtime environment component service window on said computer system.

20) The method 19) further comprising:
issuing a command by said local frame to said runtime environment component service to load said document in said runtime environment component service window.

21) The method of 20) further comprising:
issuing a command from said runtime environment component service to said local window to display said document.

22) A method for enabling a user device to run a runtime environment component on another computer, said method comprising:

running a browser on said user device; and

running a lightweight component within said browser, wherein said lightweight component receives user input actions on said user device and generates corresponding user interface events to said another computer for processing by said runtime environment component.

23) The method of 22) further comprising:
downloading lightweight component into said user device.

24) A computer program product comprising computer code comprising:

a remote frame window class comprising:

a remote output device interface; and

a remote frame window interface.

25) The computer program product of 24) wherein said computer code further comprises:
a bean frame class comprising a frame interface.

26) The computer program product of 24) wherein said computer code further comprises:

a bean window class comprising:

an event handler interface; and

an window peer interface.

27) The computer program product of 24) wherein said computer code further comprises:
an abstract windowing toolkit.

28) A computer program product comprising computer code for a method for presenting a runtime environment component service by a first computer system to a second computer system over a communication network, said method being performed by said first computer system, said method comprising:

generating a user interface infrastructure, on said first computer system, to receive graphic user interface events from said second computer system and to send remote graphic user interface commands to said second computer system; and

using said user interface infrastructure to initialize said runtime environment component service wherein said runtime environment component service sends graphic user interface commands to said user interface infrastructure.

29) A computer program product comprising computer code for a method for presenting a runtime environment component service by a first computer system to a second computer system over a communication network, said method being performed by said first computer system and comprising:

receiving a remote input action command for a runtime environment component service via said communication network, said remote input action command being generated in said second computer system by a lightweight component corresponding to said runtime environment component service;

transmitting a local input action command to said runtime environment component service in response to said remote input action command;

processing said local input action command by said runtime environment component service;

generating a local output command by said runtime environment component service for a graphical user interface; and

transmitting a remote output command to said lightweight component in response to said local output instruction.

30) A method for presenting a runtime environment component service by a first computer system (111) to a second computer system (112A) over a communication network (113), said method being performed by said first computer system (111), and comprising the steps of:

a) receiving a request for a runtime environment component service via said communication network (113),

315

said request being generated in said second computer system (112A) by a lightweight component (1210) corresponding to said runtime environment component service,

b) accessing a runtime environment component (1101, 1102, 1103, 1104, 1105, 1106, 1110) being able to provide said requested runtime environment component service,

c) executing said runtime environment component (1101, 1102, 1103, 1104, 1105, 1106, 1110) on said first computer system (111) for producing a result according to said received request for a runtime environment component service,

d) transmitting, over said network (113), a response comprising said result to said second computer system (112A).

31) A method for providing a runtime environment component service from a first computer system (111) over a communication network (113) to a second computer system (112A), said method being executed on said second computer system (112A), and comprising the steps of:

a) generating a request for a runtime environment component service by means of a lightweight component (1210) of said second computer system (112A), wherein said lightweight component (1210) corresponds to said runtime environment component service,

b) transmitting said request for said runtime environment component service to said first computer system (111) over said communication network (113), and

c) receiving a response comprising a result according to said requested runtime environment component service, said result being produced by a runtime environment component (1101, 1102, 1103, 1104, 1105, 1106, 1110) executed on said first computer system (111) and transmitted with said response by said first computer system (111) over said network (113).

32) A method according to any one of 30), 31), wherein said lightweight component (1210) has a small size 1s compared to the total size cs in bytes of the at least one runtime environment components (1101, 1102, 1103, 1104, 1105, 1106, 1110) providing a service corresponding to said lightweight component (1210) including any auxiliary software programs needed to execute said runtime environment components (1101, 1102, 1103, 1104, 1105, 1106, 1110).

33) A method according to 32), wherein said size ls is equal or less than ten percent of the total size cs.

34) A method according to any of 30) - 33), wherein said lightweight component (1210) may be downloaded from said first computer system (111) to said second computer system (112A) over said network (113) in a time t equal or less than $(8 N / C_B) + t_1$, wherein N is the total size in bytes of the at least one runtime environment component (1101, 1102, 1103, 1104, 1105, 1106, 1110) providing a service corresponding to said lightweight component (1210), $C_B$ is the average bandwidth of the network (113), and $t_1$ is the total time needed to initialize said runtime environment components (1101, 1102, 1103, 1104, 1105, 1106, 1110) providing a service corresponding to said lightweight component (1210) in the local environment on said first computer system (111) in which it is embedded.

35) A method according to any of 30) - 34), wherein said lightweight component (1210) is a non-visual lightweight component.

36) A method according to any of 30) - 35), wherein said lightweight component (1210) may be downloaded from said first computer system (111) to said second computer system (112A) over said network (113) in a time t equal or less than ten seconds.

37) A method according to any of 30) - 36), wherein said lightweight component (1210) is transmitted from said first computer system (111) over said network (113) to said second computer system (112A) prior to performing a method of any of 1)-36).

38) A method according to any of 30) - 37), wherein said runtime environment component services comprise at least one of the following functions: graphic functions, word processing functions, document editing functions, printing functions.

39) A method according to any of 30) - 38), wherein said first computer system (111) is a server system, and said second computer system (112A) is a client system.

40) A method according to any of 30) - 39), wherein said runtime environment components (1101, 1102, 1103, 1104, 1105, 1106, 1110) comprise at least one application programming interface (API).

41) A method according to any of 30) - 40), wherein said runtime environment component services comprise output services on said second computer system (112A).

42) A method according to any of 30) - 41), wherein said request for a runtime environment component service is transmitted by said second computer system (112A) into said network (113) by a communication component (1200) of said second computer system (112A), and wherein said response of said first computer system (111) to said request is transmitted into said network (113) by a communication component (1100) of said first computer system (111).

43) A method according to 42), wherein said communication component (1200) is able to generate a stub object (1200') and wherein said communication component (1100) is able to generate a proxy object (1100').

44) A method according to any of 30) - 43), wherein said transmitted request complies with a predetermined communication protocol.

45) A method according to any of 30) - 44), wherein said transmitted request comprises identification data of said first computer system (111), identification data of said second computer system (112A), identification data of said runtime environment component service, and input data to said runtime environment component service.

46) A method according to any of 30) - 45), wherein said transmitted result comprises identification data of said first computer system (111), identification data of said second computer system (112A), identification data of said runtime environment component service, and output data of said runtime environment component service.

47) A method according to one of 30) - 46), wherein said communication network (113) complies with the Internet protocol http.

48) A method according to any of 30) - 47), wherein said request and said response are transmitted over a secure channel of said communication network (113).

49) A method according to any of 30) - 48), wherein said first computer system (111) has access to runtime environment components (1101, 1102, 1103, 1104, 1105, 1106, 1110) which reside on a further computer system.

50) A method according to any of 30) - 49), wherein said request for said runtime environment component service is generated in said second computer system (112A) by using a Remote Visualization Process (RVP) (1220) and a Abstract Window Toolkit (1260).

51) A method according to any of 30) - 50), wherein said request for said runtime environment component service is received in said first computer system (111) by using a Remote Visualization Process (RVP) (1120) and a Visual Class Library (VCL) (1140).

52) A method according to any of 30) - 51), wherein said response of said first computer system (111) is transmitted to said second computer system (112A) by using a Remote Visualization Process (RVP) (1120) and a Visual Class Library (VCL) (1140).

53) A method according to any of 30) - 52), wherein said response of said first computer system (111) is received in said second computer system (112A) by using a Remote Visualization Process (RVP) (1220) and a Abstract Window Toolkit (1260).

54) A method for presenting runtime environment component services by a first computer system (111) performing the method according to 30), to a second computer system (112A) performing the method according to 31).

55) Data carrier means containing computer software for performing the method according to any of 30) - 54).

56) A computer system for performing the method according to any of 30) - 54).

57) A set of runtime environment components (1101, 1102, 1103, 1104, 1105, 1106, 1110) for use with a method according to any of 30) - 54).

58) A data base comprising a set of runtime environment components (1101, 1102, 1103, 1104, 1105, 1106, 1110) relating to said runtime environment component services according to any of 30) - 54).

Abstract of CHAPTER C

A user device, a first computer system, includes a lightweight component that receives user input actions for a runtime environment component that is executing on a second computer system. The lightweight component sends a remote input action command to a user interface infrastructure that is executing on the second computer system. In response to the remote input action command, the user interface infrastructure sends a local input action command to the runtime environment component that processes the command, and issues a local output command to the user interface infrastructure that in turn sends a remote output command to the lightweight component on the user device. In response to the remote output command, the lightweight component causes an output on the user device.

## CHAPTER D

CHAPTER D describes a method and device for representing data.

Field

The present invention relates to a method and a system for the individual representation of data, e.g. in the network portal system of CHAPTER A.

Background

Information requested by a user device naturally needs to be in a format to be understood by this specific user device. Therefore, in many instances information is only accessible to a certain group of user devices. For example, homepages of individuals or companies provided by a webserver over the internet are generally available only to specific user devices, namely computer systems supporting the regular homepage data format html. However, the access of other user devices to this information may also be desirable. Such user devices may be, for example, hand-held computers or mobile phones.
Unfortunately, the Internet browsers that process and display the HTML homepages typically require over 50 Megabytes of storage, which is not available on handheld computers or mobile phones.
Alternative methods are available, for example, that permit mobile telephones to send and receive information from the Internet. Typically, a program executing on the telephone transmits a URL, or a representation of a URL to a server that translates the request, and retrieves the data over the Internet. The server then converts the retrieved content into a format that can be interpreted by the mobile telephone and transmits the data to the mobile telephone for display. See for example, U.S. Patent Number 5,809,415 of Rossmann entitled "Method and Architecture for an Interactive Two-Way Data Communication Network."
Another similar approach is described in U.S. Patent No. 5,727,159, entitled "System In Which a Proxy-Server Translates Information Received From the Internet Into a Form/Format Readily Usable by Low Power Portable Computers," of Kikinis issued on March 10, 1998. In this approach, a specialized browser must be installed on each device that communicates with a proxy-server that in turn communicates with the Internet. A device that does not have the specialized browser, or cannot execute the specialized browser cannot retrieve or display content using the proxy-server.
Thus, the prior art teaches that it is necessary to develop an independent technique to provide access to particular information. For example, the prior art technique for mobile phones was not used on portable computers and conversely.

Summary

Therefore, it is desirable to provide a method and a system allowing the access of data, particularly over a network, to a variety of different user devices, including mobile phones and handheld computers.

A method for presenting data on a user device with presentation requirements relating to the presentation of this data on the user device, comprises the following steps:

d) receiving a request from the user device for the data by data presentation management means,

e) identifying the presentation requirements of the user device to the data presentation management means,

f) selecting a presentation scheme for the data in accordance with the presentation requirements, so that the presentation scheme can be applied to the data to create presentable data to allow the presentation of the data on the user device.

Herein, the step c) may be carried out by the data presentation management means. The inventive method may also comprise the step d) of applying the presentation scheme to the data to create presentable data to allow the presentation of the data on the user device. This step d) may be carried out by the data presentation management means. However, step d) may also be carried out by the user device or by any other device which applies the presentation scheme and provides the presentable data to the user device.

The aforementioned method may be supplemented by the further step e) of transmitting the presentable data to the user device to allow the presentation of the data on the user device.

The data may be retrieved by the data presentation management means before the application of the selected presentation scheme to the data. In another embodiment of the present invention the data may be retrieved by the user device itself. Then, the selected presentation scheme may be applied by the user device or by the presentation management means. The latter would, for example, apply, if the data retrieved by the user device would be transferred to the presentation management means for applying the selected presentation scheme and than be re-transferred to the user device.

In the scope of the present invention a method is also provided for obtaining data by a user device having presentation requirements relating to the presentation of the data on the user device, comprising the following steps:

c) submitting a request by the user device to data presentation management means for obtaining the data from the data presentation management means, the request causing the identification of the presentation requirements of the user device to the data presentation management means, the selection of a presentation scheme for the data in accordance with the presentation requirements of the user device by the data presentation management means, the request further causing the application of the selected presentation scheme to the data to create presentable data, and

d) receiving in the user device the presentable data to allow the presentation of the data by the user device.

Furthermore, a method is provided for obtaining data by a user device having presentation requirements relating to the presentation of the data on the user device, comprising the following steps:

d) submitting a request by the user device to data presentation management means for obtaining the data from the data presentation management means, the request causing the identification of the presentation requirements of the user device to the data presentation management means and the selection of a presentation scheme for the data in accordance with the presentation requirements of the user device by the data presentation management means,

e) receiving in the user device the selected presentation scheme for the data,

f) applying in the user device the selected presentation scheme on the data to create presentable data.

Herein, the user device may receive the data via data management presentation means, as described earlier.

Data in the scope of the present invention is the representation of information. This information can be presented by any suitable means, for example, text, picture, sound, movie or action. Different kinds of information can also be combined. This data may be accessible to the user device, for example, via a network. For the retrieving of the data certain requirements of the user device have to be considered. Such requirements may be of different type. They include presentation requirements. They may further have different origin. For example, the requirements may be caused by the software on the user device, which may support only specific kinds of information. It may also be possible that the requirements depend of the hardware of the user device, if the user device can, for example, present information merely via a loudspeaker. User depending requirements are also possible in the scope of the present invention. This may be caused by certain preferences of the user as well as by a handicap.

In the scope of the present invention data includes also functions. Such functions may be, for example, actions for presenting data, for example, movies and sound as well as function for processing on data like, for example, calculation functions or spellchecker.

A user device according to the present invention may be, for example, a computer system comprising at least a processor, a storage medium and an i-/o-interface. Via this i-/o-interface the user device may be connected to the source of the data. It will also be possible that the requested data is stored on the storage medium of the user device. Regularly, the user device comprises also input and output devices connected via the i-/o-interface.

The requested data may be retrieved via at least one portlet. In the context of the present invention a portlet is understood to be means for providing the requested data from a data source, for example, from a certain homepage or data base.

Two or more portlets may be arranged in tree-like organization. This tree-like organization may be presented to a user of the user device, for example, on a screen of the user device, so that this user has the possibility to easily choose among the offered portlets.

The presentation requirements of the user device may be determined based on information about the user device. For example, if the data presentation management means are informed about the type of the user device they may conclude therefrom the presentation requirements of the user device.

In the context of the present invention data presentation management means are hardware or - generally - software means for managing the presentation of data on a user device. Their exact functionality depends on the implementation of the present invention. The functionality of the data presentation management means includes at least the selection of the presentation scheme for the requested data in accordance with the presentation requirements of the user device. For this purpose the data presentation management means must be informed about the presentation requirements of the user device. Furthermore, the functionalities of the data presentation management means may include the application of the selected presentation scheme on the requested data in order to create presentable data to be presented by the user device. This requires the availability of the requested data for the data presentation management means. The retrieval of this data may also be carried out by the data presentation management means.

The presentation schemes may be defined, for example, in an extensible stylesheet language (XSL). XSL is a language for creating a stylesheet which describes how content being formatted in an extensible markup language (XML) will be presented to a user device. The presentation scheme may describe, for example, if a certain content defined in XML will be displayed, where this content will be displayed and how it will be displayed.

The methods of the present invention may be implemented in a computer program (computer program product), including comprehensive office applications. A computer program product comprises a medium configured to store or transport computer readable code, or in which computer readable code may be embedded. Some examples of computer program products are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks.

Therefore, the present invention also relates to a data carrier for storing a computer program for carrying out the inventive methods. The present invention also relates to a method for using a standard computer system for carrying out the present inventive methods.

In the scope of the present invention a computer system is provided comprising at least a processor, a memory and an i-/o-interface for representing data depending on presentation requirements of a user device relating to the presentation of the data on the user device, comprising data presentation management means, wherein the data presentation management means include:

f) at least one receiving module for receiving a request of the user device for the data,

g) at least one identifying module for identifying the presentation requirements of the user device, and

h) at least one selecting module for selecting a presentation scheme for the data in accordance with the presentation requirements.

Furthermore, the computer system may comprise

i) at least one retrieving module for retrieving the data, and

j) at least one applying module for applying the selected presentation scheme to the data to create presentable data which may be presented by the user device.

The retrieving and the applying functions may also be carried out in a user device or in a computer system being accessible to the user device. Therefore, the retrieving module and the applying module may also be located in the user device or in any computer system which is connectable or connected to the user device and which is able to deliver the result of the application of the presentation scheme, the presentable data, to the user device.

The aforementioned computer system may be supplemented by a transmitting module e) for transmitting the presentable data to the user device to allow the presentation of the requested data on the user device.

According to an embodiment of the present invention, a method and a system allow access to data, particularly over a network, to a variety of different user devices, including mobile phones and handheld computers. Unlike the prior art methods, this method and system are not limited to devices that have either a predefined configuration, or predefined software loaded on the device. Rather, the presentation requirements of a device are determined, and a document compatible with those presentation requirements is generated by a presentation manager server system.

Consequently, the problems associated with updating and providing specialized software to each type of user device have been eliminated. Also, it is no longer necessary to write specialized software for each type of user device that is provided data from a single content source, or for each content source that has a different data format.

In one embodiment, a method for presenting data on a user device comprises:

receiving, by a presentation manager, a request from the user device for data from any one of a plurality of different data sources,

identifying presentation requirements of the user device to presentation manager, and

selecting a presentation scheme for the data in accordance with the presentation requirements of the user device, where the presentation scheme can be applied to the data to generate presentable data for the user device.

In one embodiment, this method also includes applying the presentation scheme to the data to create the presentable data. This operation is performed by the presentation manager, by the user device, or by any other device, which applies the presentation scheme and provides the presentable data to the user device. The aforementioned method may be supplemented by transmitting the presentable data to the user device to allow the presentation of the data on the user device.

In another embodiment of the present invention, a method also is provided for obtaining data by a user device having presentation requirements relating to the presentation of the data on the user device. This method includes submitting a request to obtain data by the user device to a presentation manager coupled to the user device. The request causes the identification of the presentation requirements of the user device to the presentation manager, and the selection of a presentation scheme for the data in accordance with the presentation requirements of the user device by the presentation manager. The request further causes the application of the selected presentation scheme to the data to create presentable data. This method further includes receiving in the user device the presentable data to allow the presentation of the data by the user device.

In one embodiment of the present device, the data requested is retrieved via at least one portlet coupled to the presentation manager. Herein, a portlet is understood to be means for providing the requested data from a data source, for example, from a certain homepage or database to the presentation manager.

Two or more portlets may be arranged in tree-like organization. This tree-like organization is presented to a user of the user device, for example, on a display screen of the user device, so that this user has the possibility to easily choose among the content offered via the portlets.

In one embodiment, the presentation requirements of the user device are determined based on information about the user device. For example, if the presentation manager is informed about the type of the user device, the presentation manager can determine therefrom the presentation requirements of the user device and select a presentation scheme based thereon.

Presentation schemes may be defined, for example, in an extensible style sheet language (XSL). The presentation scheme may describe, for example, if a certain content defined in XML is displayed, where this content is displayed and how this content is displayed.

In another embodiment of the method of this invention, a request is received from a user device. The request was generated in response to a selection of a portlet identification object on the user device. The request is transferred to a portlet. The portlet retrieves data specified in the request over a network. This data has one format in a plurality of source data formats.

The request also is analyzed to determine a user data format that is supported by the user device. A presentation scheme to convert the data from the source data format to the user data format is then selected. The retrieved data is converted from the source data format to the user data format using the presentation scheme.

In one embodiment of selecting a presentation scheme includes selecting an XSL-stylesheet. The received request includes, in another embodiment, a command. The command is selected from a group of commands consisting of load, save, article, and channel.

In yet another embodiment of the present invention, a web server receives a request from a user device. The request was generated by selection of a portlet identification object on the user device. The web server analyzes the request to determine whether the request is for content associated with a portlet. The request is transferred to a presentation manager upon the web server determining that the request is for content associated with a portlet. The presentation manager passes the request to a portlet. The portlet retrieves data specified in the request over a network. The retrieved data has a source MIME type.

The presentation manager analyzes the command to identify a user MIME type, and then selects a presentation scheme from a plurality of presentation schemes based upon the user MIME type and the source MIME type. The presentation manager converts the data from the source MIME type to the user MIME type using the presentation scheme.

Thus, in one embodiment of the present invention, a presentation manager server system includes a web server, a presentation manager coupled to the web server, and at least one portlet coupled to the presentation manager. The at least one portlet may comprise any one of a mail portlet, a resource description framework portlet, and an internal network information portlet. A portlet is associated with content that is retrieved by that portlet. The presentation manager server system also may include a storage medium having stored thereon a plurality of presentation schemes.

In one embodiment of the presentation manager server system the web server comprises a servlet container, and the presentation manager comprises a servlet.

A computer program product, according to one embodiment of the present invention has stored thereon computer instructions for a method comprising:

receiving a request from the user device for the data;

identifying presentation requirements of the user device; and

selecting a presentation scheme for the data in accordance with the presentation requirements wherein upon application of the presentation scheme to the data, new data presentable on the user device is generated.

A computer program product, according to another embodiment of the present invention has stored thereon computer instructions for a method comprising:

receiving a request from a user device generated by selection of a portlet identification object on the user device;

transferring the request to a portlet wherein the portlet retrieves data specified in the request over a network and further wherein the data has one format in a plurality of source data formats;

analyzing the request to determine a user data format that is supported by the user device;

selecting a presentation scheme to convert the data from the source data format to the user data format; and

converting the data from the source data format to the user data format using the presentation scheme.

A computer program product, according to yet another embodiment of the present invention has stored thereon computer instructions for a method comprising:

receiving a request from a user device generated by selection of a portlet identification object on the user device by a web server;

analyzing the request by the web server to determine whether the request is for content associated with a portlet;

transferring the request to a presentation manager upon determining that the request is for the content associated with a portlet;

passing the request to the portlet by the presentation manager wherein the portlet retrieves data specified in the request over a network and further wherein the data has a source MIME type;

analyzing the request to identify a user MIME type;

selecting a presentation scheme from a plurality of presentation schemes based upon the user MIME type and the source MIME type; and

converting the data from the source MIME type to the user MIME type using the presentation scheme.

Brief description of figures of CHAPTER D

The present invention will now be described in detail on the basis of examples, where reference will be made to the appended figures, which show:

Fig. 1A   illustrates one embodiment of a network including a plurality of user devices coupled to a presentation manager server system according to one embodiment of the present invention.

Fig. 1B   is a more detailed illustration of one embodiment of user device 102A of Figure 1A including portlet icons according to one embodiment of the present invention.

Fig. 2A   is a process flow diagram according to one embodiment of the present invention.

Fig. 2B   is a process flow diagram for selecting portlets that can be accessed by a user device according to one embodiment of the present invention.

Fig. 3   is a more detailed illustration of the presentation management server system according to one embodiment of the present invention.

Fig. 4   is a more detailed process flow diagram of the retrieve scheme operation of Figure 2A.

Fig. 5   is sequence diagram for the portlet manager according to one embodiment of the present invention.

Fig. 6   is an example of a class PortletManager that is used to instantiate the portlet manager object according to one embodiment of the present invention.

Fig. 7A and 7B   are an example of method do Post and do Get according to one embodiment of the present invention.

Fig. 8A and 8B   are an example of a class CommandFactory that includes method producecommand according to one embodiment of the present invention.

Fig. 9A to 9E   are an example of a class LoadCommand according to one embodiment of the present invention.

Fig. 10A and 10B   are an example of a class SaveCommand according to one embodiment of the present invention.

Fig. 11A to 11J   are one embodiment of class ChannelCommand according to one embodiment of the present invention.

Fig. 12   is a block diagram of modules in the portlet manager according to one embodiment of the present invention.

Fig. 13   is a schematic representation of an example for the method and system of the present invention,

Fig. 14   is schematic representation of the screen print of a user device using the present invention,

Fig.15   is a flow chart showing obtaining the presentation requirements of a user device,

Fig. 16           is a flow chart showing the steps to be carried out by a method according to the present invention, and

Fig.17           is flow chart showing the operation of a method of the present invention.

In the Figures 1 - 17 of CHAPTER D and the following Detailed Description of CHAPTER D, elements with the same reference numeral are the same element or a similar element. Also, the first one or two digits of a reference numeral for an element indicate the figure in which that element first appeared. Reference numerals do not necessarily correspond to the reference numerals used in the further chapters.

Detailed description

According to the principles of this invention, a single presentation manager 113, executing on a presentation manager server system 100, accesses information from any one of plurality of content sources 101A to 101C in response to a request from any one of a plurality of user devices 102A to 102F. Each of the plurality of user devices 102A to 102F may have different requirements for presentation of information retrieved by presentation manager 113, i.e., different presentation requirements. When a request for information is received from a particular user device, presentation manager 113 retrieves the information, identifies the presentation requirements of the particular user device, and then transforms the information, if necessary, using a presentation scheme specific to the user device so that the information can be presented on the particular user device.

The presentation requirements may be any conditions or limitations on the presentation of data on the user device, for example, kind and size of display on the user device, type of programming language or data format supported by the user device, or any other presentation requirements of the user device, for example, of the processor or the memory. These presentation requirements not only may result from technical necessities, but also may result from an individual user's demands or wishes. The user is not constrained to accessing data in a format that is compatible with the one particular device that the user happens to be using as in the prior art.

Hence, presentation manager server system 100 solves the prior art information access limitations by giving users access from whatever device is available at the time, through a single system entry point, to a complete complement of data. As explained more completely below, presentation manager server system 100 frees a user from time and location constraints when accessing the complete complement of data.

A user can access data on Internet 106 and/or enterprise network 103 from almost any available device, e. g., any one of a portable computer 102A, a mobile telephone 102B, a workstation 102C, a home personal computer (PC) 102D, a personal digital assistant 102E, or an Internet café machine 102F. No longer is a user limited to using a particular device with pre-installed software to access a particular type of data accessible via a network to which the device is coupled.

For example, a user taps an icon displayed on PDA 102E to generate a request for a sales report that is stored in a database on legacy system 101C. The request is sent over Internet 106 to presentation manager 113 that, in turn, retrieves the sales report via an internal portlet 117, transforms the sales report according to a presentation scheme for PDA 102E, and transmits the transformed sales report to be displayed on PDA 102E. A similar transaction could be done using Internet café machine 102F, or perhaps mobile telephone 102D.

Each user device in the plurality of user devices 102A to 102F accesses information through the same portlet. However, in a first embodiment, presentation manager 113 retrieves the information using the portlet and then transforms the information using a presentation scheme that is specific to the user device so that the retrieved information can be displayed by the user device. Alternatively, presentation manager 113 could provide the presentation scheme and the retrieved data to the user device and the transformation of the retrieved data could be done on the user device itself.

Plurality of devices 102A to 102F is illustrative only and is not intended to limit the invention to the particular devices illustrated. The devices could also include, for example, a POTS telephone, a pager, a set-top box connected to a television, a network appliance, or any other device that is connectable to a network and can issue a request for data, as described more completely below, and display the data received in response to the request. This embodiment of the present invention is not limited to a particular type of user device or to a particular group of user devices as in the prior art, or to user devices that are running a particular software program.

The user can access multiple content sources via presentation manager server system 100. Different types and formats of data from different applications can all be accessed and processed within a single user interface. Further, data from external sources, such as stock quotes, weather forecasts, or perhaps news tickers from web-based service providers can be accessed using the same single user interface. According to the principles of this invention, presentation manager server system 100 is a comprehensive client/server offering that enables users, from almost any device anywhere, to access and view different types of data from a wide variety of content sources.

As an example, consider user device 102A (Figs. 1A and 1B) that is a portable computer. The display on display screen 150 includes, within a work area, three portlet icons, e.g., an internal page icon 120, an external page icon 121, and a news ticker icon 122. In this example, the use of icons to represent portlets is illustrative only and is not intended to limit the invention to this specific embodiment. For example, a list of text names could also be used. In general, a portlet identifier is provided to a user, and upon selection of the portlet identifier by the user, a request is sent to presentation management server system 100 to retrieve and return content associated with the portlet identifier.

In an explorer region on display screen 150 is a mail icon 121. If the user selects mail icon 121, a hierarchical view is generated on display screen 150A as illustrated in Figure 1B, each entry of which represents a portlet that can be used, in one embodiment, to request information from presentation manager server system 100. Corresponding to each icon displayed on user device 102A is a portlet, e.g., portlets 115 to 117 that are coupled to presentation manager 113, as explained more completely below.

Alternatively, icons 120 to 122 on display screen 150 could each expand into a hierarchy of icons. Moreover, upon selection of an icon, typically by the user placing a cursor on the icon and clicking a mouse, the user could be presented, for example, with an input screen in which the user input commands for acting on data. When the user completes the input screen, a request that includes the commands for acting on data is dispatched to presentation manager server system 100.

Thus, according to the principles of this invention, a portlet icon, or more generally, a portlet identifier, is not limited to issuing only a request to retrieve information. The user-initiated request can also include commands that perform operations on data, for example. However, in each case, a portlet icon is associated with a specific source of information, sometimes called content, as explained more completely below.

Instead of the screen portlet icons in Fig. 1B, the portlets may also be offered to the user in the form of a text based listing on the display of the user device. This listing may be put together in presentation manager 113, for example, in the eXtensible Markup Language (XML) format. In addition, the user can obtain a list of information sources available through presentation manager server system 100 by issuing a request to presentation manager 113 that is not addressed to a specific portlet. With this list, the user can select portlets of interest to the user, as explained more completely below with respect to Fig. 2B.

Thus, an individual user can personalize the user device by specifying which service providers from among the ones the organization has made available via portlets, the user wants to use. To put it another way, the user chooses which portlets the users wishes to be included on the desktop as illustrated in Fig. 1B. (A portlet is the smallest unit of information that can be put in a portal.) Hence, presentation manager server system 100 eliminates prior art limitations on a single user system on a network accessing content on any desired provider system that is coupled to the network.

When a user selects one of the icons on display screen 150, user device 102A, which is coupled to a network server 111 by an enterprise network 103, issues a request associated with the selected icon. The request specifies (i) a suitable address to the location where the content associated with the request is stored, for example, the Internet address of a homepage in the form of a uniform resource locator (URL), and (ii) information concerning either the types of data that can be processed and displayed by user device 102A, e.g., MIME types, and/or, an identifier that indicates the processing and display capabilities of user device 102A. In addition, the request can include operations that are to be performed on the data, or using the data, e.g., find all web sites including the word or words specified in the request.

Enterprise network 103 is illustrative only of one embodiment of a network. The particular type of network connecting a user device to presentation manager server system 100 is not essential, and may be the Internet or any other permanent or temporary network, for example a local area network.

Upon receipt of the request, network server 111 in presentation manager server system 100, which in one embodiment is a web server, determines that the request is for data accessed via presentation manager 113 and transfers the request to presentation manager 113.

Upon receipt of the request from network server 111, presentation manager 113, as explained more completely below, passes the request to the portlet associated with the request. For example, if the user issued a request for all new mail messages, presentation manager 113 would pass the request to mail portlet 115 that is associated with mail system 101A. If the request was for information on an external network, presentation manager 113 passes the request to external portlet 116 that may be associated, for example, with one of web sites 101B. In one embodiment, portlet 116 accesses web sites 101B that provide content using the Resource Description Framework (RDF).

The portlet that receives the request from presentation manager 113 retrieves the requested data and returns the data to presentation manager 113. Typically, each of the plurality of portlets 115 to 117 accesses data, i.e., content, in a different format. Of course, one or more portlets could be configured to retrieve data having the same format. For example, text based information may be provided in the HTML format as well as in the WML format.

In addition to passing the request to the appropriate portlet, presentation manager 113 identifies the presentation requirements of the user device for the requested data. Using the identification of the presentation requirements, presentation manager 113 selects a presentation scheme for the requesting user device.

As used herein, the presentation scheme for a user device is the totality of the configuration information needed to extract data from a first format and transform the data into new data for presentation on that user device. In one embodiment, as explained more completely below, the presentation schemes include a plurality of eXtensible Style sheet Language (XSL)-stylesheets that is stored on a storage medium for access by presentation manager 113. Each XSL-stylesheet transforms eXtensible Markup Language (XML) data to new data that can be processed and displayed by a particular user device, sometimes referred to as user device presentable data.

In selecting a presentation scheme, in one embodiment, presentation manager 113 determines whether the request from the user device includes a specific identification of a presentation scheme; a list of MIME types that the user device is capable of displaying; and either a user identification and/or a device identification. If the user request specifies a specific presentation scheme, for example, a particular XSL-stylesheet, presentation manager 113 selects that stylesheet as the presentation scheme. If a MIME type is specified in the request and presentation manger 113 has an XSL-stylesheet for transforming the requested content to that MIME type, this XSL-style sheet is selected. If the requested content is in a MIME type that is in the list of MIME types in the request, presentation manager 113 simply passes the retrieved content straight thru. If presentation manager 113 cannot identify a specific presentation scheme for the requested data, presentation manager 113 simply passes the retrieved content straight thru, in one embodiment. Thus, in each instance, presentation manager 113 identified the presentation requirements based upon information specified in the request, and selected an appropriate presentation scheme.

The presentation scheme selected by presentation manager 113 is retrieved and loaded into a local memory. When the requested data is available in a memory addressable by presentation manager 113, presentation manager 113 uses the stored presentation scheme to process the stored data and thereby generate user device presentable data, which may be presented in accordance with the requirements of user device 102A that transmitted the original request. Finally, the user device presentable data is transferred to user device 102A over the network coupling user device 102A to presentation manager server system 100.

Hence, through use of a dynamic content channel, e.g., a portlet, a highly customizable content page may be produced for any individual client system. Moreover, a particular user device is not limited to accessing content in a format identical to that associated with the user interface in use on the user device. Consequently, the user's ability to access a wide variety of content sources independent of the characteristics of the particular user device is further enhanced with the portlets in this embodiment of the invention.

As used herein, a user device and/or a computer system includes at least a processor, a storage medium, and an I/O-interface. In the context of the present invention, data refers to any type of information, which is arranged in certain order to be accessible by a computer system. The data to be accessed may also include one or more functions or functionalities provided to the user of a user device. Functions are, in this context, possibilities given to the user to initiate actions beyond the mere retrieval or display of information, for example, a search on the Internet for a certain publication or the initialization of a software program on a remote server carrying out some operations in response to the user device's request.

Figure 2A is a process flow diagram of one embodiment of a method 200 the present invention. Figure 3 is a more detailed block-level diagram of one embodiment of presentation manager server system 100 that implements method 200 of Figure 2A. In this embodiment, network server 111 is a web server 111, and presentation manager 113 is a portlet manager 113.

As explained above, a user initiates a request on a user device by selecting a portlet identifier, e.g., an icon, for example, that represents a particular instance of data that is accessible via a particular portlet in presentation manager server system 100. In this embodiment, an icon representing a portlet is only selectable for display on display screen 150 (Fig. 1B) if the data provided by the portlet may be presented by the user device. For example, if the user device does not support graphics, a portlet, which provides data with the MIME type image/jpeg, would not be available for selection for display on display screen 150 of device 102A.

In one embodiment, this pre-selection of portlets offered to the user is made by a comparison of the MIME types supported by the user device and the MIME type of data for each of the portlets. Fig. 2B is a process flow diagram of a method 280 that is used in one embodiment of the present invention to preselect portlets that are made available to a particular user device. Method 280 is not started unless a user issues a request to select one or more portlets for a particular device. This is represented by preselect portlet for access request check operation 281 that typically is part of a graphic user interface event handler, or part of a windowing system event handler.

Upon the user issuing a request to preselect one or more portlets, check operation 281 designates the portlet selected, or one of the portlets selected, as the current portlet and transfers processing to get user MIME types operation 282. In operation 282, presentation manager server system 100, in this embodiment, obtains the MIME types supported by the user device, i.e., obtains the user MIME types, and transfers to get source MIME types operation 283.

In operation 283, the source MIME types supported by the current portlet are retrieved and processing transfers to common MIME type check operation 284. If at least one of the user MIME types and one of the source MIME types are the same MIME type, processing transfers to portlet available operation 287, and otherwise to generate MIME type set operation 285.

In generate MIME type set operation 285, presentation schemes 303 are used to generate another set of MIME types, which are the MIME types produced when presentations schemes 303 are applied to the source MIME types. Operation 285 transfers processing to common MIME type check operation 286.

If at least one of the user MIME types and one of the MIME types in the set of MIME types generated by operation 285 are the same MIME type, processing transfers to portlet available operation 287, and otherwise to portlet unavailable operation 288.

In portlet available operation 287, the current portlet is flagged as available to the user device and an appropriate response is supplied to the user device. For example, the portlet icon could be installed on the user's desktop.

In portlet unavailable operation 288, the current portlet is flagged as unavailable. In this case, a message is sent to the user that access to the portlet is not available from this user device.

Both operations 287 and 288 transfer to additional portlets check operation 289. If the user requested to preselect more the one portlet, the next portlet in the user request is identified as the current portlet, and operations 283 to 288 are repeated, as appropriate. If the user only requested to preselect one portlet, or all of the portlets have been processed, check operation 289 passes to the end operation that cleans up and exits.

In the above example relating to graphics, the presentation capabilities of the user device did not support graphics. The comparison with the MIME type of data defined by the various portlets shows that a portlet defining image/jpeg as its MIME type of data cannot be supported by this user device. Accordingly, the user device via method 280 would be denied access to this particular portlet.

Method 280 may be made at any suitable location, for example, in the user device as well as in web server 111, in portlet manager 113, or in the respective portlet itself. Consequently, in the following description, when user device submits a request in operation 210, no subsequent checking is done to assure that the requested data can be displayed on the user device. However, in another embodiment, the user is allowed to send requests to all available portlets, and as each request is sent, if the request cannot be processed for whatever reason, an error message is returned to the user device.

The request transmitted in send request operation 210 (Fig. 2A) includes at least a description of the requested data. Such a description may be, for example, the URL of the data. The request typically also includes the MIME type or types supported by the user device, e.g., wireless application protocol (WAP) for mobile phone 102B. The request may also include either or both of the identity of the user device and the identity of the user of the user device. As explained more completely below, the request may further include a command, such as channel, load, save, or article.

The request from the user device in operation 210 goes over a network to server 111, which in this embodiment is a web server 111. In one embodiment, web server 111 is the Tomcat server supplied by The Apache Software Foundation, 1901 Munsey Drive, Forest Hill, MD 21050-2747, U.S.A. However, in this embodiment, any HTTP server that supports the functionality and operations described herein can be used as web server 111. In one embodiment, web server 111 is a servlet container, and portlet manager 113 is implemented as a servlet.

In portlet check operation 215, web server 111 analyzes the request from the user device, sometimes referred to as the original request, to determine whether this request has to be processed by portlet manager 113. The alternative is to process the request directly by web server 111.

Check operation 215 can be implemented in various alternative ways. In one embodiment, deployment descriptors as defined in the JAVA 2 Enterprise Edition are used and checked in operation 215 to determine where to direct the user request. The JAVA 2 Platform Enterprise Edition Specification, v1.2, Sun Microsystems, Inc., Palo Alto, CA (1999) and the JAVA Servlet Specification, v2.2, Sun Microsystems, Inc. Palo Alto, CA (1999) are incorporated herein by reference to show the level of skill in the art. Based upon the deployment descriptors, if the request is for web server 111, processing transfers to continue operation 217 and conventional processing continues. Otherwise, the request is forwarded to portlet manager 113 and processing transfers to contact portlet operation 220.

In another embodiment, the decision in check operation 215 is based on the MIME type of the requested data, i.e., the MIME type of the data located at the URL in the request, and the MIME type supported by the user device. If the MIME type of the requested data and the MIME type supported by the user device are identical or at least compatible, the request is processed by web server 111. This condition is frequently fulfilled, for example, if a browser, which is able to handle and to process data in XML, requests a homepage, which is also formatted in XML.

Thus, if the request is supported by web server, 111, processing transfers to continue operation 216 and conventional processing continues. Otherwise, the request is forwarded to portlet manager 113 and processing transfers to contact portlet operation 220.

Portlet manager 113 may be implemented in software within web server 111, or may be installed on a separate computer system, which is connected or connectable to web server 111. In one embodiment, portlet manager 113 is implemented as a servlet that executes on web server 111.

Typically, portlet manager 113 is not continually executing on web server 111, and so if a request is forwarded to portlet manager 113 in contact portlet operation 220, portlet manager 113 is started and then the request is forwarded to portlet manager 113 for processing.

Portlet manager 113 forwards the request to the appropriate portlet. The forwarding of the request to a specific portlet completes contact portlet operation 220. The portlet retrieves the data in retrieve data operation 230, and processing in portlet manager 113 transfers to MIME check operation 240 within identify user type operation 245. In Figure 2A, the operations are shown as sequential for ease of illustration only. This is not intended to limit the invention to this specific sequence of operations. The specific sequence will depend upon the computer system used and the specific implementation of this embodiment.

The request from the user device contains information about the presentation requirements of the requesting user device, or contains information about the identity of the user device, or contains both. If the request contains one or more MIME types processing transfers to get MIME type 241 and otherwise to identity check operation 242.

In get MIME type from request operation 242, portlet manager 113 extracts a list of MIME types supported by the user device from the request including a preferred MIME type, if a preferred MIME type is specified. Operation 241 transfers to identity check operation 242.

In identity check operation 242, portlet manager 113 determines whether the request included identification information. If identity information is included processing transfers to get identity from request operation 243 and otherwise to retrieve scheme operation 270. Get identity from request operation 243 retrieves the device identification from the request and transfers to retrieve scheme operation 270.

Operations 242 and 243 both transfer to retrieve scheme operation 270. In retrieve scheme operation 270, portlet manager 113 uses the information extracted from the request to retrieve a presentation scheme for the user device from a plurality of presentation schemes 303 stored on storage unit 302. In one embodiment, the retrieved presentation scheme is loaded in a memory accessible by portlet manager 113. Retrieve scheme operation 270 transfers processing to convert data operation 271.

Figure 4 is a more detailed process flow diagram of one embodiment of retrieve scheme operation 270. XML check operation 401 determines if the response content type is other than an XML format supported by portlet manager 113. If the response content type is other than an XML format, processing transfers to copy response operation 402 and otherwise to MIME type check operation 403. Check operation 401 and copy response operation 402 are optional.

In this embodiment, only transformations that utilize an XSL-stylesheet are supported, and so if the response content is not in a supported XML format, the response content cannot be transformed. Accordingly, copy response operation 402 copies the response information directly to web server 111 that can in turn send the copied response back to the user device for display. Of course if other transformations were supported, e.g., a JAVA class that extracted data from certain MIME types and inserted the data into an HTML template that could be returned to the user device, the applicability of each of the other transformations would be tested before defaulting of copy response operation 402.

If XML check operation 401 determines that the response content type is a supported XML format, a path to the appropriate XSL-style sheet in a plurality of XSL-style sheets 303 stored on storage unit 302 is constructed. MIME type check operation 403 determines whether the request from the user device included a preferred MIME type. If a preferred MIME type was obtained in operation 241, processing transfers to device check operation 405, and otherwise to set MIME type operation 404. Set MIME type operation 404 uses the session identification to retrieve a preferred MIME type from user device configuration information stored on storage unit 301. Operation 404 transfers to device check operation 405. Thus, upon entry to operation 405 a MIME type is specified.

Device type check operation 405 determines whether the request from the user device included a device type. If a device type was obtained in operation 243, processing transfers to XSL check operation 407, and otherwise to set device type operation 406. Set device type operation 406 uses the session identification to retrieve a device type from user device configuration information stored on storage unit 301. Operation 406 transfers to XSL check operation 407. Thus, upon entry to operation 407, a MIME type and a device type are specified.

XSL check operation 407 determines whether the request from the user device specified a specific XSL-stylesheet. If a specific XSL-stylesheet was specified, processing transfers to XSL extension check operation 413 and otherwise to channel command check operation 408.

In this embodiment, two commands, channel and article, result in retrieving data. Accordingly, channel command check operation 408 determines whether the command in the request was a channel command, and if it was, transfers to set channel XSL operation 411, and otherwise transfers to article command check operation 409. Set channel XSL operation 411 sets the XSL-stylesheet to a default channel XSL-stylesheet and transfers to preferred XSL-stylesheet available check operation 415.

When processing transfers to article command check operation 409, article command check operation 409 determines whether the command in the request was an article command, and if it was, transfers to set article XSL operation 412, and otherwise transfers to exception operation 410. Set article XSL operation 412 sets the XSL-stylesheet to a default article XSL-stylesheet and transfers to preferred XSL-stylesheet available check operation 415.

In this embodiment, exception operation 410 throws an exception and terminates the processing of portlet manager 113 for this portlet, because the requested information cannot be transformed for display on the user device. However, in another embodiment, portlet manager 113 may go to the website of a manufacturer of the user device, as identified in the request, or to another appropriate website to download an XSL-stylesheet for the user device. Alternatively, portlet manager 113 may send a query to the user device asking whether the user device has such a stylesheet that can be downloaded.

If the request specified an XSL-stylesheet, check operation 401 transferred to XSL extension check operation 413, which in turn determines whether the specification in the request included an XSL extension (.xsl). If the request included the extension, processing transfers to preferred XSL-stylesheet available check operation 415 and otherwise to set extension operation 414. Set extension operation 414 adds a XSL extension to the requested stylesheet and transfers to preferred XSL-stylesheet available check operation 415. Upon entry to operation 415, a MIME type, a device type and a XSL-stylesheet are specified to that the path to the storage location of the stylesheet can be constructed.

Preferred XSL-stylesheet available check operation 415 opens a folder on storage device 302 for the specified MIME type and then within the specified MIME type folder opens a subfolder for the specified device type. In the specified device type subfolder, operation 415 looks for the specified XSL-stylesheet. If the specified XSL-stylesheet is found, operation 415 transfers to parse and load operation 418, and otherwise transfers to XSL to MIME XSL-stylesheet available check operation 416. Thus, if operation 415 is successful, a device specific XSL-stylesheet has been retrieved.

In MIME XSL-stylesheet available check operation 416, the specified XSL-stylesheet is looked for in the specified MIME type folder, and if the stylesheet is found, processing transfers to parse and load operation 418 and otherwise to exception operation 417. Exception operation 417 also terminates the processing because the XSL-stylesheet is unavailable. Again, in another embodiment, attempts to find a suitable XSL-stylesheet stored at another location could be made prior to throwing the exception. Load and parse operation 418 loads and parses the retrieved stylesheet into a memory for further use by portlet manager 113 and transfers to operation 271 (Fig. 2A).

When the portlet completes the retrieval of the requested data in retrieve data operation 230, convert data operation 271 is initiated. When convert data operation 271 receives both the data and the presentation scheme, portlet manager 113 processes the retrieved data using the stored presentation scheme to generate new data that can be displayed on the user device. For example, if the retrieved information is a XML document, the XSL-stylesheet loaded in memory is used to do the transformation. If the retrieved information is e-mail data, a JAVA class is used to extract the data and insert the data for example into a HTML template.

Convert data operation 271 transfers to return converted data operation 272. In operation 272, portlet manager 113 returns the converted data in a HTTP response to web server 111. Web server 111 sends the HTTP response to the user device that sent the original request.

In display data operation 273, the user device processes the HTTP response, and displays the response to the original request on the user device.

In this example, it was assumed that convert data operation 271 was performed on the same computer running portlet manager 113. However, in another embodiment, retrieve scheme operation 270 and retrieve data operation 230 send the retrieved scheme and retrieved data respectively to another computer system connected to the user device, or the user device itself. In these cases, convert data operation 271 is performed on the another computer system, or the user device, and returned converted data operation 272 is performed only if operation 271 was executed on other than the user device.

In the above embodiment, it was assumed that portlet manager 113 was able to identify the type of presentation requirements for the requesting user device and retrieve a presentation scheme that converted the type of the requested data to a type that could be displayed on the user device. In another embodiment, a presentation scheme is not available to convert the retrieved data to a type of data that can be displayed on the user device. For example, the user requests a spreadsheet that is a data format specified by the manufacturer of the application that generated the spreadsheet. The presentation scheme available for the user device requires an input document in XML. Since the retrieved document in not in XML, the presentation scheme is not useful.

However, in this situation, portlet manager 113 issues a translation request to a filter server 315. In one embodiment, portlet manager 113 sends a request that includes the MIME type required as input to the presentation scheme for the user device, and an address of the requested document to filter server 315. This address can be to a memory where the document is stored after being retrieved by a portlet, or a URL to location of the document on the network. The only requirement is that filter server 315 is able to access the requested document.

In response to the request filter server 315 builds a filter that can read the requested document, dynamically convert the read data using a partial filter adapter chain to the new format, and then write the converted data in the new format so that the data can be supplied to presentation manager 113. More specifically, in response to the request from presentation manager 113, filter server 315 via a conversion service 310, in one embodiment, causes a protocol reader to be instantiated and uses the protocol reader to access the requested document to determine the format of the requested data, i.e., the source document data format. With the source document data format and the target document data format, i.e., the MIME type received in the original request, filter server 315 builds a filter for converting the format of source document to the format of the target document.

In the embodiment of Figure 3, filter server 315 passes the request to a conversion service 310 that in turn accesses a filter registry 311 to generate a filter map of partial filter adapters that can be chained together to convert the format of the requested document to the MIME type specified in the request. Using the filter map, conversion service 310 calls a service to instantiate each partial filter adapter in the map using partial filter adapter library 312. Conversion service 310 calls another service to chain the partial filter adapters together using a chaining application programming interface of each partial filter adapter.

In this embodiment, filter server 315 via conversion service 310 constructs a data filter by gluing a protocol read and parser unit to an input end of the partial filter adapter chain and a bit stream printer and protocol writer to an output end of the chain. After construction of the data filter, conversion service 310 uses the data filter to process the requested document, e.g., the spreadsheet. The data filter generates data with a MIME type that can be input to the presentation scheme that is returned to presentation manager 113, which in turn processes the data as described above.

One important aspect of filter server 315 is that each partial filter adapter utilizes the same generic format independent interface to input the converted data. This allows any one partial filter adapter to be connected to another partial filter adapter without concern for the particular format of the data output by the first partial filter adapter.

In one embodiment, the data filter is used dynamically, which means that the complete data file is not stored in the intermediate formats. Rather, the output from a first partial filter adapter is input to a second partial filter adapter before all the data has been processed by the first partial filter adapter.

A more complete description of filter server 315, and each of the components therein is provided in CHAPTER E. In another embodiment, filter server 315 provides information about the dynamic filter to portlet manager 113, and portlet manager 113 stores a new presentation scheme on unit 302 that includes the dynamic filter generated by filter server 315, or at least a handle to the dynamic filter, and the retrieved presentation scheme.

While in Figure 3 filter server 315 is illustrated as being included within presentation manager server system 100, this is illustrative only. Filter server 315 can be in another computer system, part of a portal, or even on the user device. Portlet manager 113 is coupled to filter server 315 to send and receive the information described above.

In one embodiment, the URL in the request from the user device is of the form:

```
http://<server>:<port>/portlet/<command
sting> ?<parameters>
```

In this embodiment, the command strings are: load; channel; article; and save. Command load loads information about the requested data. With command save, the user device submits settings made by the user that are to be saved along with the user data. To provide the content of a portlet to a user device, command channel is submitted. Command article is submitted to retrieve an article of a portlet.

Figure 5 is sequence diagram for one embodiment of portlet manager 113. Along the horizontal axis are individual objects, where each object is represented as a labeled rectangle. The vertical axis represents the passage of time from top to bottom of the page. Horizontal lines represent the passing of messages between objects. A dashed line extends down from each rectangle, and a rectangle along the dashed line represents the lifetime of the object.

When web server 111 receives a URL that specifies a portlet, web server 111 searches for the servlet that is portlet manager 113. If portlet manager 113 has not been loaded, web server 111 first creates a configuration object specific to portlet manager 113, and then calls a portlet manager initialization method with the configuration object as an input.

After portlet manager 113 is initialized, portlet manager 113 first issues a get context message to the configuration object, and then issues a get parameters object message to the configuration object. In the embodiment of Figure 6, the configuration path names are loaded to XSL and XML files. The creation and initialization messages are issued by web server 111 only once for the purpose of initialization. Subsequently, the search for the servlet that is portlet manager 113 finds manager 113.

In this embodiment, HTTP Post and Get requests that are included in the request from the user device are passed to portlet manager 113 from web server 111 each time either request arrives at web server 111 for a portlet for which portlet manager 113 was configured initially. Specifically, when a user requests includes a HTTP Get request, web server 111 creates a HTTP request object for portlet manager 113, and a HTTP response object for portlet manager 113 as illustrated in Figure 5. Web server 111 next calls a method do Get, with the HTTP request object and the HTTP response object as inputs, in portlet manager 113.

In response to the call to method do Get, portlet manager 113 issued calls to methods get header and get servlet path of the HTTP request object. Portlet manager 113 builds a string that specifies the URL of the portlet based on the information in the request from the user device. See Figures 7A to 7B for one embodiment of HTTP Get and Post commands and method do Get.

Once the URL is built, portlet manager 113 instantiates a new command factory using a class CommandFactory, and then calls a method produce command in the command factory with the HTTP request object as an input. Method produce command extracts the command string from the URL as given above and instantiates a channel command object when the command string is either channel or article; a load command object when the command string is load; and a save command object when the command string is save. The method produce command returns the command object.

One embodiment of class CommandFactory that includes method producecommand is presented in Figures 8A to 8B. One embodiment of class LoadCommand is presented in Figures 9A to 9E. An embodiment of class SaveCommand is presented in Figures 10A to 10B.

In the following discussion, it is assumed that the request issued by the user device included command article or command channel and so the channel command object was created. In this case, portlet manager 113 in method do Get calls method execute in the channel command object with inputs of the HTTP request object, the HTTP response object and the URL. Figures 11A to 11J are one embodiment of class ChannelCommand that includes method execute.

In method execute, the URL that is input is checked to determine whether a portlet is specified. If the URL does not specify a portlet, an URL container is accessed and information about all available portlets is obtained from the URL container. If a portlet is specified, the part of the URL that specifies the portlet is used to build a URL object that in turn is used to make a connection to retrieve the requested content.

After the URL object is created, all fields in the HTTP request object are copied to the new request that actually is sent to retrieve the requested content. These fields can include, for example, the name of the browser in the user device. The MIME types in the original request as well as the MIME types supported by portlet manager 113 are included in the new request. Upon completion of the new request, method execute uses the URL object to make a connection and to retrieve the requested content.

If the connection uses the HTTP protocol, information in the HTTP header can be used to recognize the MIME type of the response content. IF the protocol is not HTTP, the extension of the URL is check to determine the type of the response content. If the extension of the URL is .xml, a guess is made of what type of XML file is requested by analyzing a field DOCTYPE in the header of the XML file. In the case that a XML file based on a certain document type definition is recognized, the response type is set to the name associated with the document type definition. If the response is not an XML file, the URL connection object guesses the content type of the response content. This is done by a JAVA URLConnnection object that is part of the JAVA runtime environment, which is incorporated herein by reference to show the level of skill in the art.

In this embodiment, if the response content type is other than an XML format supported by portlet manager 113, the retrieved content without any modification is returned as the response to the request from the user device. In the embodiment of Figure 2B, this does not occur, because the user device would not have access to such a portlet.

If the request was a HTTP request, and no preferred MIME type was specified, the preferred MIME type associated with the user is used. If the request failed to specify a device type, the device type associated with the user is used. If the request was for a XML file, and the XML parameter that specified the stylesheet in the original request was not used, a channel XSL-stylesheet is used if the command in the original request was command channel, an article XSL style sheet is used if the command in the original command was command article. If the original request specified an XSL-stylesheet, this stylesheet is used. (See Fig. 4.)

A path to the appropriate XSL-stylesheet is built by method execute using the specified MIME type, device type and XSL-stylesheet. If a user device specific XSL-stylesheet cannot be found at this location, a generic device independent stylesheet is used based upon the specified MIME type. In this embodiment, there is a XSL-stylesheet for mapping each source MIME type to each user device MIME type. Thus, for a portlet with two possible MIME types and a user device that supports two possible MIME types, four XSL-stylesheets are needed.

With the specification of the XSL-stylesheet and the XML content, all the objects needed for the XSL transformation are set. The received content is parsed as an XML document and the whole document is held as a Document Object Model tree in memory. The XSL-stylesheet is parsed and loaded into memory.

If the loaded document is a lists of portlets because no portlet was specified in the original URL, or has a MIME type that is not accepted by the user device, the document is modified in a memory to which the user is not subscribed. This is necessary, because such content could not be displayed on the user device.

If the loaded document is an article, it is checked whether this MIME type is accepted as a response by the user device. Next, the global parameters for the XSL transformation are set, and the loaded XML document is transformed according to the rules in the XSL-stylesheet. The output of the transform is streamed to the HTTP response object.

Figure 12 shows an example of a portlet manager 113 according to the present invention as described above.

Portlet manager 113 comprises, in this example, six modules. Module A is a receiving module for receiving a request of the user device. Module B is an identifying module for identifying the presentation requirements of the user device. These two modules are able to communicate with the selecting module C to enable module C to select a presentation scheme for the requested data in accordance with the presentation requirements of the user device.

In the present example, portlet manager 113 comprises also a retrieving module D for retrieving the requested data. Applying module E applies the presentation scheme selected by module C to the data to create presentable data, which may be presented by the user device. This presentable data is submitted by a transmitting module E to the user device. Modules D, E and F need not be part of portlet manager 113. Modules D, E and F or some of them may also reside on the user device or on a computer system connected to the user device.

In view of this disclosure, various alternative embodiments will be apparent to those of skill in the art. For example, in the above embodiment, data was retrieved by presentation manager 113, and presentation manager 113 applied the selected presentation scheme to the data. In another embodiment of the present invention, the data may be retrieved by the user device itself. Then, the selected presentation scheme may be applied by the user device or by the presentation manager. The latter, for example, would apply if the data retrieved by the user device were transferred to presentation manager 113 for applying the selected presentation scheme and then re-transferred to the user device.

Those skilled in the art will readily understand that the operations and actions described herein represent actions performed by a CPU of a computer in accordance with computer instructions provided by a computer program. Therefore, presentation manager 113 and any associated portlets may be implemented by a computer program causing the CPU of the computer to carry out instructions representing the individual operations or actions as described above. The computer instructions can also be stored on a computer-readable medium, or they can be embodied in any computer-readable medium such as any communications link, like a transmission link to a LAN, a link to the Internet, or the like.

Thus, presentation manager 113, portlets, or any combination of the two, can be implemented by a computer program comprising computer program code or application code. This application code or computer program code may be embodied in any form of a computer program product. A computer program product comprises a medium configured to store or transport this computer-readable code, or in which this computer-readable code may be embedded. Some examples of computer program products are CD-ROM discs, ROM cards, floppy discs, magnetic tapes, computer hard drives, servers on a network, and carrier waves. The computer program product may also comprise signals, which do not use carrier waves, such as digital signals transmitted over a network (including the Internet) without the use of a carrier wave.

The storage medium including the presentation manager and/or portlets executed on a server may belong to presentation manager server system 100 itself.

However, the storage medium also may be removed from presentation manager server system 100. The only requirement is that the program code for these objects is accessible by system 100 so that the computer code can be executed by system 100 in the embodiment of Figure 1A.

Herein, a computer memory refers to a volatile memory, a non-volatile memory, or a combination of the two in any one of these devices. Similarly, a computer input unit and a display unit refer to the features providing the required functionality to input the information described herein, and to display the information described herein, respectively, in any one of the aforementioned or equivalent devices.

Fig. 13 shows another example of a system and method according to the present invention. A user device like a mobile phone 1a or a laptop computer 1b may want to access certain data via the network 2. This network 2 may be the Internet or any other permanent or temporary network, for example a local area network. Other user devices are suitable as well in the scope of the present invention. Examples include any kind of computer systems, like servers and personal computers, and any devices which are able to process data and to communicate with other devices for exchanging data. In this context computer systems may include at least a processor, a storage medium and an i-/o-interface. In the context of the present invention data refers to any type of information which is arranged in certain order to be accessible by a computer system. The data to be accessed may also include one or more functions or functionalities provided to the user of a user device. Functions are, in this context, possibilities given to the user device to initiate any actions beyond the mere retrieval or display of information, for example, a search in the internet for a certain publication or the initialization of a software program on a remote server carrying out some operations in response to the user device's request.

If the user device 1a or 1b wants to access certain data via the network 2, it will send a request for said data, for example, for a certain homepage, to a webserver 3. The webserver 3 comprises a processor, a memory and an i-/o-interface. In particular, the webserver 3 includes means for receiving this request. The request may specify the data requested from the mobile phone 1a or the laptop 1b by giving suitable address data as to where this data can be found, for example, the Internet address of a homepage (URL).

This request will be forwarded to data presentation management means, in the following exemplary referred to as portlet manager 4. This portlet manager 4 may be implemented in software within the webserver 3 or may be installed on a separate computer system which is connected or connectable to the webserver 3. Having received the request for data from the webserver 3 the portlet manager 4 identifies the presentation requirements of the user device having sent the request for the data with respect to the presentation of the data to this user device. For this purpose the user device has means for identifying these requirements. These presentation requirements may be any conditions or limitations for the presentation of data on the user device, for example, kind and size of display for data on the user device, type of programming language or data format supported by the user device, or any other presentation requirements of the user device, for example, of the processor or the memory. These presentation requirements may not only result from technical necessities, but also from an individual user's demands or wishes. The presentation requirements of the specific user device are identified by the respective means either by being provided the information about the presentation requirements directly from the user device, together with the request for the data or separately, or by being provided information about the type of the user device and by procuring the needed information about the presentation requirements of the so identified user device from a data base, which may or may not be an integral part of the portlet manager, and which connects information about the type of the user device with the desired information about the specific presentation requirements of the user device with respect to the presentation of the requested data.

In order for the data to comply with the identified requirements the portlet manager 4 loads all configuration information needed for presenting the requested data to the user device 1a or 1b, respectively. Configuration information is all information about the layout and the presentation of the requested data. It must correspond to the identified requirements. The totality of the configuration information needed to present data to a certain user device is referred to as a presentation scheme. This is selected according to the presentation requirements of a certain user device by the data presentation management means, i.e. the portlet manager 4. For this purpose, XSL-stylesheets, which may be stored in storage medium 5 may be selected according to the identified requirements by means 7 for presenting data in accordance with the identified presentation requirements of the user device 1a. These means 7 are generally implemented in software. They may, for example, have access to a further external storage medium 8 on which, for example, XSL-stylesheets may be stored. The configuration data loaded in response to the user device's request may be stored in a specific file until the data to which it shall be applied has been provided.

The portlet manager 4 now retrieves the requested data. The data is procured via the webserver 3 from portlets 9, 10, ... . Portlets 9, 10, ... represent ways for accessing the requested data. This data may have different format. For example, text based information may be provided in the HTML format as well as in the WML format. The portlets 9, 10, ... have means for accessing data, including software modules, to retrieve the requested data for the portlet manager 4 from any accessible location, including internet homepages, data bases and other storage media.

In the portlet manager 4 the means 7 will then apply the presentation scheme loaded from storage media 5, 6 and 8 to the data. This presentation scheme will be applied to the data. Herewith, the data which was requested by the user device 1a or 1b, respectively, is converted to presentable data which may be presented in accordance with the requirements of the user device 1a or 1b, respectively.

Finally, the data may be transferred to the user device 1a, 1b which requested it in the presentation required by this user device 1a, 1b. Herewith, the user device 1a, 1b may access the requested data in proper form.

Fig. 2 gives an example of a user's view on the present invention by showing a print-out of a screen 20 of a user device, here a laptop, utilizing a method according to the present invention. Screen 20 shows symbols 21, 22, 23, ..., each standing for one portlet - 9, 10, ... in Fig. 13. The symbols 21, 22, 23, ... offered on the screen 20 and the portlets associated therewith can be freely chosen by a user of the user device.

However, a portlet is only selected for display on screen 20, that means the user can only choose it, if its data may be presented by the user device. For example, if the user device does not support graphics, a portlet which defines the MIME type image/jpeg will not be selected for display on the screen 20, that means it will not be offered to the user of the user device. This pre-selection of portlets to be offered to the user is made by a comparison of the requirements of the user device and of the MIME type of data defined by each of the portlets. In the above example relating to graphics the presentation requirements of the user device, the laptop, regarding the presentation of data will not allow to support graphics. The comparison with the MIME type of data defined by the various portlets will show that a portlet defining image/jpeg as its MIME type of data cannot be supported by this user device. Therefore, it will not be displayed on the screen 20. This comparison may be made at any suitable location, for example, in the user device as well as in the webserver, in the portlet manager or in the respective portlet itself.

Instead of the screen print-out given in Fig. 14 the portlets may also be offered to the user of the user device in the form of a text based listing. This listing may be put together in the portlet manager, for example, in the XML format. The information required for this listing, namely which portlet defines which mime type of data, may be retrieved via the webserver from the various portlets.

Fig. 15 shows in a flow chart one possible way to fulfill the presentation requirements of the user device 1a or 1b, respectively. In a first step 31 the user device 1a, 1b sends a request to the portlet manager 4 via the webserver 3. This request either contains information about the presentation requirements of the requesting user device 1a, 1b or it contains information about the identity of the user device 1a, 1b. It further includes a description of the requested data. Such a description may be, for example, the URL of the data, if the requested data can be found on a homepage on the Internet. The portlet manager 4 will contact in step 32 the corresponding portlet for retrieving this data. If the requested data is only available from several different portlets, those would be contacted in this step. In a next step 33 the portlet manager 4 retrieves the data from the one or more portlets. In order to consider the presentation requirements of the user device 1 the portlet manager 4 needs information about these requirements. In one embodiment of the present invention the portlet manager 4 extracts from the request in a further step 34 a list of MIME types supported by the user device 1a, 1b. In another embodiment the portlet manager 4 may have a list of the presentation requirements of different user devices 1a, 1b. In this case, the portlet manager 4 may analyze the identity of the user device 1a, 1b in step 35 and then contact this list in step 36 in order to obtain the information about the requirements of the user device 1a, 1b.

Fig. 16 shows a flow chart representing a method according to the present invention for presenting data on a user device with certain data presentation requirements. In a first step 41 the data presentation management means, i.e. the portlet manager 4 receives a request for data from a user device 1a, 1b. In the next step 42 the portlet manager 4 identifies from this request the presentation requirements of the user device 1a, 1b, as it was above described in relation to Fig. 15. In step 43 a presentation scheme is selected for the requested data in accordance with the identified presentation requirements. This enables the user device 1a, 1b or the portlet manager 4 or another computer system which is able to be connected to the user device 1a, 1b or to the portlet manager 4 to apply the selected presentation scheme to the data delivered by the portlets in order to arrive at presentable data which may be presented to the user device 1a, 1b.

Fig. 17 presents an exemplary embodiment of the method of the present invention. In this example, a setup as presented in and described in connection with Fig. 13 is used. Therefore, reference numerals below 50 refer to devices shown in Fig. 13.

In step 50 the user device, for example, a mobile phone 1a sends a request for data via the network 2 to the webserver 3. The mobile phone 1a uses the wireless application protocol (WAP) as MIME type for data which it handles and processes. A browser may run on the mobile phone 1a. The requested data may be, in this example, a certain homepage which is available on the Internet at a certain URL. This homepage is programmed, for the purposes of this example, in an extensible markup language (XML). The request of the mobile phone 1a includes at least the URL of the requested homepage and the MIME type supported by the mobile phone 1a, i.e. WAP. In this example, the identity of the user device 1a, 1b and its user is transmitted together with or as a part of the request. The request also includes a command, for example, "channel", if the content of the requested URL shall be loaded onto the user device.

In step 51 this request of the mobile phone 1a is analyzed by the webserver 3 in order to decide whether this request has to be processed by the portlet manager 4. The alternative is to provide the data directly by the webserver 3. This decision - made in step 52 - is based on the MIME type used for the requested homepage and the MIME type supported by the mobile phone 1a.

If the above question would be answered with "NO", then the requested data will be directly provided by the webserver 3 to the mobile phone 1a in step 53. This would require that the MIME type of the requested data and the MIME type supported by the mobile phone 1a are identical or at least compatible. This condition will frequently be fulfilled, for example, if a browser - which is able to handle and process data in XML - requests a homepage - which is also formated in XML.

If the answer to the above question is "YES", the request is forwarded by the webserver 3 to the portlet manager 4 in step 54. The portlet manager 4 may be a servlet. A servlet is an extension to a webserver which provides the webserver with information and logic. If a request for a certain URL, for example, is forwarded to the portlet manager 4, the portlet manager 4 is started. This leads to the portlet manager 4 processing the request. This processing includes doPost requests as well as doGet requests as it is shown in Table 1. In order to simplify the further communication the portlet manager 4 employs the URL mentioned in the request forwarded by the webserver 3 for identifying itself and saves this address in a string. The portlet manager 4 identifies also the requested command. In one embodiment of the present invention there are supported at least the following commands. The "load" command loads information about the requested data. With the "save" command the user device submits settings made by the user device 1a in order to save these settings along with the user data. In order to provide the content of a portlet to a user device the "channel" command is submitted. Since the user device 1a requests in this example data from a portlet the "channel" command will be submitted by the mobile phone 1a. The functionality of the portlet manager 4, especially certain commands, is described in detail in the code shown in Table 1.

In step 55 the identity of the user device 1a and of the user employing the user device 1a is retrieved from the request. Then, in step 56, the portlet manager 4 will access an internal or external storage medium, for example, data base 8 in order to check whether for the identified user device 1a and for the identified user a presentation scheme or parts of a presentation scheme are already stored. For example, a certain user may request a specific character type (font) for the data to be presented on the display of his mobile phone 1a, or a certain mobile phone 1a may request a specific character size (font size) in view of its specific display.

If "NO", that means the storage medium does not have any information about a presentation scheme or a part of a presentation scheme assigned to the specific user or the specific requesting user device 1a, the portlet manager 4 may search in step 57 in the network 2 for such individual presentation schemes or parts thereof.

For example, if the network 2 is the Internet the portlet manager 4 may contact the homepage of the producer or distributor of the mobile phone 1a in order to find the desired information there. If the search of the portlet manager 4 is successful, the presentation scheme or part of a presentation scheme will be retrieved in step 58. If the search is not successful, a default presentation scheme will be provided for later application to the requested data in step 59.

If "YES", that means the storage medium has information about a presentation scheme or a part of a presentation scheme assigned to the specific user or the specific requesting user device 1a, the portlet manager 4 loads this presentation scheme or part thereof in step 60.

In step 61, based on the presentation scheme or part thereof retrieved and based on the request of the user device 1a the portlet manager 4 requests from one or more portlets 9, 10, ... the delivery of the requested data, here the homepage with the URL specified in the request of the user device 1a. This request includes a list of all MIME types which are either supported by the user device 1a or which may be converted by the portlet manager 4 into a MIME type which is supported by the user device 1a. Other additional information like, for example, the type of the browser used by the user device 1a may also be included in the request to the portlet. In step 61 the portlet manager 4 asks the portlets 9, 10 ... whether they are able to deliver the requested data in a MIME type listed in the request. In order to submit the request it may be necessary to create a connection to the portlet.

If "NO", that means if the data cannot be delivered by the portlets 9, 10, ... in a MIME type which is supported by the user device 1a or which can be converted by the portlet manager 4 into a MIME type supported by the user device 1a, an error message is created in step 62, which is sent to the mobile phone la in order to report that the request for data sent in step 50 to the webserver 3 cannot be fulfilled.

If "YES", that means if the data can be delivered by the portlets 9, 10, ... in a MIME type which is supported by the user device 1a or which can be converted by the portlet manager 4 into a MIME type supported by the user device 1a, the data are received by the portlet manager 4 in step 63. In step 64 the MIME type of the received data is analyzed as to whether the user device 1a supports it or conversion by the portlet manager 4 is necessary.

If no conversion is necessary, the requested data are transferred to the user device 1a directly via the webserver 3 and the network 2 in step 65. If, however, conversion is required, what will be the case in our example where the homepage is in XML and the mobile phone 1a supports only WAP, the retrieved data will be analyzed in step 66 as to whether it is present in an extended markup language (XML).

If "NO", that means if the requested data is not in XML, the data will be converted in step 67 into the requested MIME type to arrive at presentable data by applying the corresponding presentation scheme, which includes conversion modules for the conversion of data between the respective MIME types. If, for example, the requested data would be supplied in HTML, this data would be converted from HTML to WAP in step 67. Subsequently, the created presentable data is sent to the user device 1a in step 65.

If "YES", that means the data is in XML - like in the here chosen example - the portlet manager 4 will select the suitable presentation scheme. For XML data this presentation scheme may include a XSL stylesheet. If a user device specific presentation scheme is accessible, the portlet manager 4 will choose this.

The requested data will then be subjected in step 68 to the application of the presentation scheme, in this example, to the selected XSL stylesheet. The presentation scheme may be retrieved by portlet manager 4 from storage medium 5. Herewith, the presentation scheme - here: the XSL stylesheet - is applied to the data so that presentable data is created. This presentable data may be sent to the user device 1a in step 65.

Fig. 12 shows an example of a portlet manager 4 according to the present invention. The portlet manager 4 comprises in this example six modules. Module A is a receiving module for receiving a request of the user device 1a, 1b. Module B is an identifying module for identifying the presentation requirements of the user device 1a, 1b. These two modules are able to communicate with the selecting module C in order to enable module C to select a presentation scheme for the requested data in accordance with the presentation requirements of the user device 1a, 1b.

In the present example, the portlet manager 4 comprises also a retrieving module D for retrieving the requested data to the portlet manager 4. The applying module E will then apply the presentation scheme selected in module C to the data to create presentable data which may be presented by the user device. This presentable data will be submitted by a transmitting module E to the user device. The modules D, E and F need not be part of the portlet manager 4. They or some of them may also reside on the user device 1a, 1b or on a computer system connected to the user device 1a, 1b or to the portlet manager 4.

It will be understood that the present invention is not limited to the examples given and explained in detail.

## Table 1:

```
public class PortletManager extends HttpServlet
{
```

*This method provides information about a servlet used as portlet manager to a user device. In this example the method returns the name of the servlet and a copyright notice.*

```
public String getServletInfo()
{
        return "Channel Manager - Copyright 2000 Sun Microsystems, Inc.";
}
```

*This method is called when the webserver (HTTP server) loads the servlet. It is only called once for the purpose of initialization. In this case configuration path names are loaded to the XSL and XML files.*

```
public void init(ServletConfig configuration)
        throws ServletException
{
        System.out.println(getServletInfo());
        super.init( configuration );

        m_aServletContext = configuration.getServletContext();

        m_aServletContext = getServletContext();

        String sRootBase        = null;
        String sXslBase         = null;
        String sUserBase        = null;
        String sNoUserName      = null;

        try
        {
                sRootBase       = new String (getInitParameter("rootbase-uri"));
                sXslBase        = new String (getInitParameter("xslbase-uri"));
                sUserBase       = new String (getInitParameter("userbase-uri"));
```

```
                sNoUserName = new String (getInitParameter("nouser-name"));
        }
        catch ( Exception e )
        {
                System.err.println("some required init parameter is
missing");
                throw new ServletException("init parameter missing");
        }

        ...
}
```

*The doPost method is called every time a HTTP post request arrives at the webserver with a request for an URL for which the servlet was configured initially. Post requests are handled in the same method where get requests are handled, so the doGet() method is called.*

```
public void doPost( HttpServletRequest request,
                    HttpServletResponse response )
        throws ServletException, IOException
{
        doGet(request, response);
}
```

*The doGet method is called every time a HTTP get request arrives at the webserver with a request for an URL for which the servlet was configured.*

```
public void doGet( HttpServletRequest  aHttpServletRequest,
                   HttpServletResponse aHttpServletResponse )
        throws ServletException, IOException
{
        try
        {
```

*A string is formed which specifies the URL of the servlet based on the information coming with the request. This string can later be used to specify the servlet as target for a HTTP-request. This will be done once, because this URL can only change if the configuration of the webserver will change. In the latter case the servlet would be unloaded and loaded again.*

```
                // do it only once
                if (m_sPrefixPath.length()==0)
                {
                        // build prefix path (e.g.
www.sun.com:8088/portal/CM/)
                        String  sHostName    = "";
                        String  sContextPath = "";
                        String  sServletPath = "";

                        // get host name part
                        sHostName = aHttpServletRequest.getHeader("Host");

                        if ((sHostName == null) || (sHostName.length() == 0))
                        {
                                sHostName =
aHttpServletRequest.getServerName() +
        ":" + aHttpServletRequest.getServerPort();
                        }

                        sContextPath = getContextPath(aHttpServletRequest,
                                                      new Object[0]);

                        sServletPath = aHttpServletRequest.getServletPath();
                // get servlet path part
                        m_sPrefixPath = "http://" + sHostName + sContextPath;
                        m_aDataFacade.setContextPath(m_sPrefixPath);
                        m_sPrefixPath += sServletPath;
                        // concat
                        m_aDataFacade.setPrefixPath(m_sPrefixPath);
                        // set path on DataFacade

                        m_aCommandFactory = new CommandFactory();
                        // new command factory
```

337

```
                        }
```

*The actual work for resolving the request is done by separate objects. For each command specified in the URL given in the request a new object is instanced which is responsible to resolve the request. This approach is based on a design pattern called the „Command"-pattern. In the current realization there are the commands „load", „save", „article" and „channel". The object associated with each command is instanced by the class CommandFactory.*

```
                // get command pattern and execute
                Command aCommand =
    m_aCommandFactory.produceCommand(aHttpServletRequest);
                aCommand.execute(aHttpServletRequest, aHttpServletResponse,
                                 m_aDataFacade);
            }
            catch (Exception e)
            {
                    e.printStackTrace(System.out);
            }
        }

        ...

        private ChannelHook          m_aChannelHook       = null;
        private CommandFactory m_aCommandFactory    = null;
        private DataFacade           m_aDataFacade        = null;
        private ServletContext m_aServletContext     = null;
        private String               m_sPrefixPath        = "";
    }
```

```
The class CommandFactory parses the head of the specified
URL for the request for a command, e.g. „channel". If a
known command is recognized the associated command object
will be created.

public class CommandFactory
{
        public Command produceCommand(ServletRequest aRequest)
               throws ServletException
        {
                Command aCommand = null;
                String sUrl      = null;
```

*The following method makes sure that this is an HTTP request and gets the URL out of the request.*

```
                if(aRequest instanceof HttpServletRequest)
                {
                        HttpServletRequest sHttpServletRequest =
                                          (HttpServletRequest) aRequest;
                        sUrl = sHttpServletRequest.getPathInfo();
                }
                else
                {
                        throw new ServletException(
                                   "Request is not of type HttpServletRequest" );
                }
```

*The following method tries to recognize the recent command by comparing the head of the URL with the known set of commands. If a known command is found the associated class is instanced and this instance is returned to the caller.*

```
                // careful: sort order of if clauses is important
                if( sUrl != null )
                {
                        if( sUrl.startsWith(CHANNEL) )
                        {
                                aCommand = new ChannelCommand();
                        }
                        if( sUrl.startsWith(ARTICLE) )
                        {
```

```
                        aCommand = new ChannelCommand();
                }
                else if( sUrl.startsWith(LOAD) )
                {
                        aCommand = new LoadCommand();
                }
                else if( sUrl.startsWith(SAVE) )
                {
                        aCommand = new SaveCommand();
                        System.out.println("- new SaveCommand");
                }
        }

        if( aCommand == null )
        {
                throw new ServletException(
                                "Factory cant produce command for URL" + sUrl
);
        }

        return aCommand;
}

public final static String LOAD      = "/load";
public final static String CHANNEL   = "/channel";
public final static String ARTICLE   = "/article";
public final static String SAVE      = "/save";
}
```

*The ChannelCommand has to provide the content of a portlet as a response to a request. The ChannelCommand is derived from the class Command, which is necessary, because of the use of the „Command"-pattern.*

```
public class ChannelCommand extends Command
{
        public void execute( ServletRequest   aRequest,
                             ServletResponse  aResponse,        ·
                             DataFacade       aDataFacade)
                throws ServletException
        {
                InputStream     aDocInputStream     = null;
                InputSource     aDocInputSource     = null;
                InputSource     aTransInputSource   = null;
                URLConnection   aURLConnection      = null;
                String          sSessionId          = getSessionId(aRequest);
                String          sEncodedURL         =
aRequest.getParameter("href");
                String          sPreferredMimeType  =
aRequest.getParameter("Mime");
                String          sDevice        = aRequest.getParameter("Device");
                String          sXSL           = aRequest.getParameter("XSL");
                String          sDecodedURL         = "";
                String          sResponseContent    = "";
                Hashtable       aXSLParameters      = new Hashtable();

                try
                {
```

*If no portlet is specificed in the URL information about all available portlets is returned. This will be decided by checking the URL for any additional information. The information about all available portlets will be received from a data container called DataFacade. This concept is based on the design pattern Facade.*

```
                        //set URL for root channel list
                        if ((sEncodedURL==null)           ||
                            (sEncodedURL.equals(""))||
                            (sEncodedURL.equals("root")) )
                        {
                                sDecodedURL = aDataFacade.getRootBase();
                        }
                        else
                        {
```

```
                           sDecodedURL = URLDecoder.decode(sEncodedURL);
             }
```

*The part in the URL which specifies the Portlets is an URL which can be used to retrieve the content of the Portlet. This will be used to build a corresponding URL object which will be used later on to build an URLconnection.*

```
             //get URL connection
             URL aURL = new URL(sDecodedURL);

             aURLConnection = aURL.openConnection();

             aURLConnection.setUseCaches(false);

             aXSLParameters.put("ProviderURL", aURL.toString());
```

*In the following method all additional fields which are specified in the request will be copied to the new request. These fields can include, for example, the name of the browser used on the client side, that means in the user device.*

```
             // tunnel properties
             java.util.Enumeration aHeaderNameList =
                            ((HttpServletRequest)
aRequest).getHeaderNames();
                 while (aHeaderNameList.hasMoreElements())
                 {
                     String sKey    = (String)
aHeaderNameList.nextElement();
                     String sValue  = ((HttpServletRequest)
                                         aRequest).getHeader(sKey);
                     aURLConnection.setRequestProperty(sKey, sValue);
                 }
```

*The additional MIME types which are supported by the portlet manager will be added to a list of accepted MIME types and this list will be added to the new request.*

```
             // set own mime types, because some devices accept some
             // mime types which make them crash...
             String sSupportedMimeTypes =
                            aDataFacade.getSupportedMimeTypes(sSessionId);
             aURLConnection.setRequestProperty("accept",
sSupportedMimeTypes);
```

*The provider of the portlet content will be connected and the respective content will be read out by using an InputStream*

```
             // get connection to URL
             aURLConnection.connect();

             InputStream aProviderResponse =
aURLConnection.getInputStream();
```

*In case of a HTTP connection the information in the HTTP header can be used to recognize the MIME type of the response. If the HTTP protocol is not used, the extension of the specified URLwill be checked.*

```
             if ( aURL.getProtocol().equals("http") )
             {
                     // get content type
                     sResponseContent = aURLConnection.getContentType();
             }
             else
             {
```

*If it is recognized that a XML file is requested, it is tried to guess which kind of XML file it is by analyzing the DOCTYPE field in the header of the XML file. In the case that an XML file based on a certain DTD will be recognized the response type will be set to the associated name.*

```
                         // protocol is not http, so get content via file
```

```
                                      if (sDecodedURL.endsWith(".xml"))
                                      {
                                              //seems to be an xml file, so get doctype
       content
                                              aProviderResponse.mark(1024);
                                              byte[] aBuffer = new byte[1000];
                                              aProviderResponse.read(aBuffer);
                                              aProviderResponse.reset();

                                              String aSearchString = new String(aBuffer);

                                              int nDoctypePosition = aSearchString.indexOf(
                                                                  "<!DOCTYPE ");

                                              if (nDoctypePosition==-1)
                                              {
                                                      //unknown xml, send as binary
                                                      sResponseContent = "";
                                              }
                                              else
                                              {
                                                      // found "doctype", determine doctype
                                                      String aTokenizerFeed =
       aSearchString.substring(nDoctypePosition);

                                                      StringTokenizer aTokenizer = new
                                                              StringTokenizer(aTokenizerFeed,
       " ");

                                                      // get doctype
                                                      aTokenizer.nextToken();

                                                      String sResult =
       aTokenizer.nextToken();

                                                      if (sResult.equals("Channels"))
                                                      {
                                                              sResponseContent =
               "text/vnd.sun.xml.Channels";
                                                      }
                                                      else if (sResult.equals("Article"))
                                                      {
                                                              sResponseContent =
               "text/vnd.sun.xml.Article";
                                                      }
                                                      else
                                                      {
                                                              //unknown xml, send as binary
                                                              sResponseContent = "";
                                                      }
                                              }
                                      }
                                      else
                                      {
```

*If it is not a XML file, the class URLconnection will guess the content type of the response stream.*

```
                                              //no xml file, so start guessing
                                              sResponseContent =
       aURLConnection.guessContentTypeFromStream(
       aProviderResponse);

                                              if (sResponseContent==null)
                                              {
                                                      //okay, now I'm helpless
                                                      sResponseContent="";
                                              }
                                      }
                              }

                      aXSLParameters.put("ProviderMimeType", sResponseContent);
```

```
                          // xml response?
                          if (!sResponseContent.startsWith("text/vnd.sun.xml."))
                          {
```

*If the response content is not in a XML format handled by the portlet manager, the*
*response is returned as response to the original request without any modification.*

```
                          // upps, no xml, so simply tunnel through as raw data
                          aResponse.setContentType(sResponseContent);

                          if (aResponse instanceof HttpServletResponse)
                          {
                                  ((HttpServletResponse)
aResponse).setDateHeader(
                                          "Last-Modified",
System.currentTimeMillis());
                          }
```

*The inputstream of the response is copied to the outputstream of the response of the*
*original request.*

```
                          InputStream    aURLConnectionInStream =
aProviderResponse;
                          OutputStream   aResponseOutStream    =
        aResponse.getOutputStream();

                          byte[] aBuffer        = new byte[1024];
                          int    iReadLength    = 0;
                          int    iReadLengthSum = 0;

                          while ( (iReadLength=
                                  (aURLConnectionInStream.read(aBuffer)))!=-1 )
                          {
        aResponseOutStream.write(aBuffer,0,iReadLength);

                                  iReadLengthSum += iReadLength;
                          }

                          // unfortunately available() not possible,
                          // so I have to use a buffer and set filelength at
        last
                          aResponse.setContentLength(iReadLengthSum);

                          aResponseOutStream.flush();

                          return;
                  }
                  else
                  {
```

*If no preferred MIME type, device type or XSL-stylesheet specified with the request exists,*
*the associated default type is used.*

```
                          // yes, so build path for xsl file which generates
        response
                          if ( (sPreferredMimeType==null) ||
                              (sPreferredMimeType.length()==0) )
                          {
                                  // no mime parameter set so get it
                                  // via portal servlet
                                  sPreferredMimeType =
        aDataFacade.getPreferredMimeType(sSessionId);
                          }

                          if ( (sDevice==null) || (sDevice.length()==0) )
                          {
                                  // no device parameter set so get it
                                  // via portal servlet
                                  sDevice =
        aDataFacade.getDeviceName(sSessionId);
                          }
```

```
                                if ( (sXSL==null) || (sXSL.length()==0) )
                                {
```

*If channels are processed, the channel sytlesheet is used, if articles are processed, the article stylesheet is used.*

```
                                        // no XSL parameter set so get via content
                                        String sSubMime =
sResponseContent.substring(17);
                                        if (sSubMime.equals("Channels"))
                                        {
                                                sXSL = "Channels.xsl";
                                        }
                                        else if (sSubMime.equals("Article"))
                                        {
                                                sXSL = "Article.xsl";
                                        }
                                        else
                                        {
                                                throw new ServletException(
                                                        "+++ no correct xsl type!!!");
                                        }
                                }
                                else
                                {
```

*If a XSL parameter is specified with the request, this stylesheet is used.*

```
                                        // if no .xsl extension, add one
                                        if (sXSL.indexOf(".")==-1)
                                        {
                                                sXSL = sXSL+".xsl";
                                        }
                                }
```

*The path to find the XSL stylesheet file is built. First, a device specific file is searched for in a subdirectory with the name of the device. If this file is not available, the more generic device independent stylesheet is used.*

```
                                // build first chance path to xsl file
                                URL     aTempURL = new URL(aDataFacade.getXSLBase());
                                String  sXSLBase = aTempURL.getFile();
                                String  sSubMime = sPreferredMimeType.substring(
sPreferredMimeType.indexOf("/")+1);
                                File    aXSLMime   = new File(sXSLBase, sSubMime);
                                File    aXSLDevice = new File(aXSLMime, sDevice);
                                File    aXSLFull   = new File(aXSLDevice, sXSL);

                                if (!aXSLFull.exists())
                                {
                                        // first chance xsl file not there build
                                        // second chance (no device specific
transformation)
                                        aXSLFull = new File(aXSLMime, sXSL);

                                        if (!aXSLFull.exists())
                                        {
                                                // no xsl found -> error
                                                throw new ServletException(
                                                        "+++
"+aXSLFull.getAbsolutePath()+
                                                        " file not found!");
                                        }
                                }
```

*All the objects needed to parse XML-documents and for the XSL transformation are set up.*

```
                                // build parse environment
                                ValidatingParser        aValParser =
                                                                new
ValidatingParser(true);
                                XmlDocumentBuilder       aValDocBuilder =
```

```
                                                              new
  XmlDocumentBuilder();
                              ValidatingParser      aParser =
                                                              new
  ValidatingParser(false);
                              XmlDocumentBuilder     aDocBuilder =
                                                              new
  XmlDocumentBuilder();
                              XSLTransformEngine     aTransformer =
                                                              new
  XSLTransformEngine();
                              XmlDocument            aSourceDoc      = null;
                              XmlDocument            aTransformerDoc = null;
                              XmlDocument            aDrainDoc =
                                                          new XmlDocument();

                              // hook own entity resolver for finding dtds
                              XMLResolver aXMLResolver = new XMLResolver(true);
                              aXMLResolver.registerCatalogEntries(
      "com.sun.star.portal.channel.dtd");

                              // get/config parser and builder
                              aValDocBuilder.setParser(aValParser);
                              aValParser.setEntityResolver(aXMLResolver);
                              aValDocBuilder.setDisableNamespaces(false);

                              aDocBuilder.setParser(aParser);
                              aParser.setEntityResolver(aXMLResolver);
                              aDocBuilder.setDisableNamespaces(false);
```

*Parse the received response as an XML document and hold the whole document as a DOM tree in memory.*

```
                              // parse received xml validating
                              aDocInputSource = new InputSource(aProviderResponse);
                              aDocInputSource.setSystemId(sDecodedURL);
                              aValParser.parse(aDocInputSource);
                              aSourceDoc = aValDocBuilder.getDocument();
```

*The XSL stylesheet is parsed and loaded into a memory.*

```
                              // parse xsl file NON validating
                              aTempURL = aXSLFull.toURL();
                              aXSLParameters.put("TransformURL",
  aTempURL.toString());
                              aTransInputSource = new
  InputSource(aTempURL.toString());
                              aParser.parse(aTransInputSource);
                              aTransformerDoc = aDocBuilder.getDocument();
```

*If the loaded document is a list of channels, this document is modified in a memory to which a user is not subscribed or of which the MIME type is not accepted for the response. This is necessary, because such content could not be displayed on a user device.*

```
                              if
  (sResponseContent.equals("text/vnd.sun.xml.Channels"))
                              {
                                      Element      aRootElement =
      aSourceDoc.getDocumentElement();
                                      TreeWalker aRootWalker  =
                                              new TreeWalker(aRootElement);
                                      Element     aChannelElement = null;

                                      // walk through channel elements
                                      while ( (aChannelElement =
                                              aRootWalker.getNextElement("Channel"))
                                              != null)
                                      {
                                              // set subscribed attribute
                                              String sHref =
```

```
        aChannelElement.getAttribute("href");
                                        if (aDataFacade.isSubscribed(
                                                          sSessionId,
sHref))
                                        {
                                                aChannelElement.setAttribute(
                                                    "subscribed", "true");
                                        }
                                        else
                                        {
                                                aChannelElement.setAttribute(
                                                    "subscribed", "false");
                                        }

                                        TreeWalker aChannelWalker =
                                                  new
TreeWalker(aChannelElement);
                                        Element   aMimeElement   = null;
                                        boolean   bMimeAccepted  = false;

                                        // walk through mime-type elements of
channel
                                        while (((aMimeElement =
                                                aChannelWalker.getNextElement(
                                                    "mime-type")) != null)
     &&                                             (!bMimeAccepted) )
                                        {
                                                Node aNode =
        aMimeElement.getFirstChild();
                                        String  sMimeType  = new
        String(aNode.getNodeValue());
                                        bMimeAccepted =
                                                aDataFacade.isMimeTypeAccepted(
                                                    sSessionId, sMimeType);
                                        }

                                        // set accepted attribute
                                        if (bMimeAccepted)
                                        {
                                            aChannelElement.setAttribute(
                                                    "accepted", "true");
                                        }
                                        else
                                        {
                                            aChannelElement.setAttribute(
                                                    "accepted", "false");
                                        }
                            }
                    }
```

*If the loaded document is an article, it is checked, if this MIME type is accepted as a
response.*

```
                            else
        if(sResponseContent.equals("text/vnd.sun.xml.Article"))
                            {
                                    Element    aRootElement =
        aSourceDoc.getDocumentElement();
                                    TreeWalker aRootWalker  = new
                                                TreeWalker(aRootElement);
                                    Element    aItemElement = null;

                                    // walk through item elements
                                    while ( (aItemElement =
                                            aRootWalker.getNextElement("Item")) !=
null)
                                    {
                                            TreeWalker aItemWalker = new
        TreeWalker(aItemElement);
                                            Element aMimeElement = null;
                                            boolean bMimeAccepted = false;
```

```
                                                    // walk through mime-type elements of
    item
                                                    while (((aMimeElement =
                                                           aItemWalker.getNextElement(
                                                                  "mime-type")) != null)
                                                                     (!bMimeAccepted)
    &&
    )
                                                    {
                                                           Node aNode =
              aMimeElement.getFirstChild();
                                                           String sMimeType = new
              String(aNode.getNodeValue());
                                                           bMimeAccepted =
                                                                  aDataFacade.isMimeTypeAccepted(
                                                                         sSessionId,
    sMimeType);
                                                    }

                                                    // set accepted attribute
                                                    if (bMimeAccepted)
                                                    {
                                                           aItemElement.setAttribute(
                                                                         "accepted",
    "true");
                                                    }
                                                    else
                                                    {
                                                           aItemElement.setAttribute(
                                                                         "accepted",
    "false");
                                                    }
                                             }
                                      }
```

*The global parameters for the XSL transformation are set and the loaded XML document is transformed according to the rules in the loaded XSL stylesheet.*

```
                             aTransformerDoc = aDataFacade.setParameters(
                                             aTransformerDoc, aRequest,
    aXSLParameters);

                             // transform
                             aTransformer.createTransform(aTransformerDoc)
              .transform(aSourceDoc,aDrainDoc);
```

*The outputstream for the response is obtained and the transformed XML document is streamed, which now can be, for example, HTML or WML to this stream. The webserver delivers this stream as the response of the original request to the client.*

```
                             // write it
                             OutputStream aOutStream =
    aResponse.getOutputStream();

                             aResponse.setContentType(sPreferredMimeType);

                             aDrainDoc.write(aOutStream);

                             aOutStream.flush();
                      }
               }
               catch (...
        }
    }
```

In the following, further embodiments for representing data will be described.

1) A method for presenting data on a user device comprising:

receiving a request from said user device for said data;

identifying presentation requirements of said user device; and

selecting a presentation scheme for said data in accordance with said presentation requirements wherein upon application of said presentation scheme to said data, new data presentable on said user device is generated.

2) The method of 1), further comprising applying said presentation scheme to said data to create said new presentable data.

3) The method of 2), wherein said applying said presentation scheme to said data is performed by said user device.

4) The method of 2), further comprising:
transmitting said new data to said user device to allow the presentation of said new data on said user device.

5) The method of 1), further comprising retrieving said data.

6) The method of 5), further comprising applying said presentation scheme to said retrieved data to create said new presentable data.

7) The method of 1), wherein said request includes a command.

8) The method of 7), wherein the command is selected from a group of commands consisting of load, save, article, and channel.

9) The method of 7), wherein the command is a command article.

10) The method of 7), wherein the command is a command channel.

11) A method for providing data to a user device comprising:

receiving a request from a user device generated by selection of a portlet identification object on the user device;

transferring said request to a portlet wherein said portlet retrieves data specified in said request over a network and further wherein said data has one format in a plurality of source data formats;

analyzing said request to determine a user data format that is supported by said user device;

selecting a presentation scheme to convert said data from said source data format to said user data format; and

converting said data from said source data format to said user data format using said presentation scheme.

12) The method of 11), wherein said selecting a presentation scheme comprises selecting an XSL-stylesheet.

13) The method of 11), wherein said plurality of source data formats are MIME types.

14) The method of 11), wherein said user data format is specified by a MIME type.

15) The method of 11), wherein said receiving is performed by a web server.

16) The method of 11), wherein said transferring said request is performed by a portlet manager.

17) The method of 11), wherein said request includes a command.

18) The method of 17), wherein the command is selected from a group of commands consisting of load, save, article, and channel.

19) The method of 17), wherein the command is a command article.

20) The method of 17), wherein the command is a command channel.

21) A method for providing data to a user device comprising:

receiving a request from a user device generated by selection of a portlet identification object on the user device by a web server;

analyzing said request by said web server to determine whether said request is for content associated with a portlet;

transferring said request to a presentation manager upon determining that said request is for said content associated with a portlet;

passing said request to said portlet by said presentation manager wherein said portlet retrieves data specified in said request over a network and further wherein said data has a source MIME type;

analyzing said request to identify a user MIME type;

selecting a presentation scheme from a plurality of presentation schemes based upon said user MIME type and said source MIME type; and

converting said data from said source MIME type to said user MIME type using said presentation scheme.

22) The method of 21), wherein said selecting a presentation scheme comprises selecting an XSL-stylesheet.

23) The method of 21), wherein said request includes a command.

24) The method of 23), wherein the command is selected from a group of commands consisting of load, save, article, and channel.

25) The method of 21), wherein the command is a command article.

26) The method of 21) wherein the command is a command channel.

27) A presentation manager server system comprising:

a web server;

a presentation manager coupled to said web server;

at least one portlet coupled to said presentation manager.

28) The presentation manager server system of 27), wherein said at least one portlet comprises a mail portlet.

29) The presentation manager server system of 27), wherein said at least one portlet comprises a resource description framework portlet.

30) The presentation manager server system of 27), wherein said at least one portlet comprises an internal network information portlet.

31) The presentation manager server system of 27), further comprising a storage medium having stored thereon a plurality of presentation schemes.

32) The presentation manager server system of 27), wherein said web server comprises a servlet container.

33) The presentation manager server system of 27), wherein said presentation manager comprises a servlet.

34) The presentation manager server system of 27), further comprising a plurality of user devices coupled to said web server.

35) A computer program product having stored thereon computer instructions for a method, comprising:

receiving a request from said user device for said data;

identifying presentation requirements of said user device; and

selecting a presentation scheme for said data in accordance with said presentation requirements wherein upon application of said presentation scheme to said data, new data presentable on said user device is generated.

36) A computer program product having stored thereon computer instructions for a method, comprising:

receiving a request from a user device generated by selection of a portlet identification object on the user device;

transferring said request to a portlet wherein said portlet retrieves data specified in said request over a network and further wherein said data has one format in a plurality of source data formats;

analyzing said request to determine a user data format that is supported by said user device;

selecting a presentation scheme to convert said data from said source data format to said user data format; and

converting said data from said source data format to said user data format using said presentation scheme.

37) A computer program product having stored thereon computer instructions for a method, comprising:

receiving a request from a user device generated by selection of a portlet identification object on the user device by a web server;

analyzing said request by said web server to determine whether said request is for content associated with a portlet;

transferring said request to a presentation manager upon determining that said request is for said content associated with a portlet;

passing said request to said portlet by said presentation manager wherein said portlet retrieves data specified in said request over a network and further wherein said data has a source MIME type;

analyzing said request to identify a user MIME type;

selecting a presentation scheme from a plurality of presentation schemes based upon said user MIME type and said source MIME type; and

converting said data from said source MIME type to said user MIME type using said presentation scheme.

38) A method for presenting data on a user device with presentation requirements relating to the presentation of said data on said user device, comprising the following steps:

a) receiving a request from said user device for said data by data presentation management means,

b) identifying said presentation requirements of said user device to said data presentation management means,

c) selecting a presentation scheme for said data in accordance with said presentation requirements, so that said presentation scheme can be applied to said data to create presentable data to allow the presentation of said data on said user device.

39) A method according to 38), wherein step c) is carried out by said data presentation management means.

40) A method according to any of the preceding 38) or 39), comprising the following further step:
a) applying said presentation scheme to said data to create presentable data to allow the presentation of said data on said user device.

41) A method according to 40), wherein step d) is carried out by said data presentation management means.

42) A method according to 41), wherein step d) is carried out by said user device.

43) A method according to any of 38) to 42), comprising the following step:
a) transmitting said presentable data to said user device to allow the presentation of said data on said user device.

44) A method according to any of the preceding 38) to 43), wherein said data are retrieved by said data presentation management means before the application of said selected presentation scheme.

45) A method for obtaining data by a user device having presentation requirements relating to the presentation of said data on said user device, comprising the following steps:

a) submitting a request by said user device to data presentation management means for obtaining said data from said data presentation management means, said request causing the identification of said presentation requirements of said user device to said data presentation management means, the selection of a presentation scheme for said data in accordance with said presentation requirements of said user device by said data presentation management means, said request further causing the application of said selected presentation scheme to said data to create presentable data, and

b) receiving in said user device said presentable data to allow the presentation of said data by said user device.

46) A method for obtaining data by a user device having presentation requirements relating to the presentation of said data on said user device, comprising the following steps:

a) submitting a request by said user device to data presentation management means for obtaining said data from said data presentation management means, said request causing the identification of said presentation requirements of said user device to said data presentation management means and the selection of a presentation scheme for said data in accordance with said presentation requirements of said user device by said data presentation management means,

b) receiving in said user device said selected presentation scheme for said data,

c) applying in said user device said selected presentation scheme on said data to create presentable data.

47) A method according to 46), wherein said user device receives said data via said data management presentation means.

48) A method according to any of 38) to 47), wherein said presentation requirements of said user device are determined based on information about said user device.

49) A method according to any of 38) to 48), wherein said data includes at least one function which may be utilized by means of said user device.

50) A method according to any of 38) to 49), wherein said user device is a computer system including at least a processor, a storage medium and an i-/o- interface.

51) A method according to any of 38) to 50), wherein said data is retrieved via at least one portlet.

52) A method according to 51), wherein representations of at least two of said portlets are arranged in tree-like organization on said user device.

53) A computer program for carrying out a method according to any of the preceding methods on a computer system.

54) A data carrier for storing a computer program for carrying out a method according to any of the preceding method claims on a computer system.

55) A method for using a computer system for carrying out a method according to any of the preceding method claims.

56) A computer system comprising at least a processor, a memory and an i-/o-interface for representing data depending on presentation requirements of a user device relating to the presentation of said data on said user device, comprising data presentation management means, wherein said data presentation management means include:

a) a receiving module for receiving a request of said user device for said data,

b) an identifying module for identifying said presentation requirements of said user device, and

c) a selecting module for selecting a presentation scheme for said data in accordance with said presentation requirements.

57) A computer system according to 56), wherein said data presentation management means further include:
a) a retrieving module for retrieving said data.

58) A computer system according to any of 56) or 57), wherein said data presentation management means further include:
a) an applying module for applying said selected presentation scheme to said data to create presentable data which may be presented by said user device.

59) A computer system according to any of 56) to 58), wherein said data presentation management means further include:
a) a transmitting module for transmitting said presentable data to said user device to allow the presentation of said data on said user device.

60) A computer system according to any of 56) to 59), wherein said computer system includes a webserver.

61) A computer system according to any of 56) to 60), wherein said retrieving module for retrieving said data includes at least one portlet.

62) A computer system according to 61), wherein representations of at least two of said portlets are arranged in a tree-like organization.

Abstract of CHAPTER D

A method for presenting data on a user device with presentation requirements relating to the presentation of said data on said user device, comprising the following steps:

a) receiving a request from said user device for said data by data presentation management means,
b) identifying said presentation requirements of said user device to said data presentation management means, and
c) selecting a presentation scheme for said data in accordance with said presentation requirements, so that said presentation scheme can be applied to said data to create presentable data to allow the presentation of said data on said user device.

CHAPTER E

CHAPTER E describes a method and structure for dynamic conversion of data, e.g. in the network portal system of CHAPTER A.

## BACKGROUND

### Field

CHAPTER E relates to data format conversion, e.g., in the network portal system of CHAPTER A, and in particular to a method for dynamically converting data having a first data format into data having another data format or alternatively rendering the same data in different ways.

### Description of Related Art

Data is understood to be arrangements of information to be processed by a computer system. The arrangement of information is made in a certain data format. Each data format corresponds to a specific software module or groups of software modules, which support the respective data format. Examples of data formats include the ASCII format and the HTML-format, both being able to be processed by a group of text processing software modules, or the doc-format or the sdw-format, destined to be processed by a specific text processing software module.

Data may be stored on a storage medium, for example, a hard disc, a soft disc or a CD-ROM. If data having a certain data format is retrieved by a user, the user must have access to a computer system utilizing a software module, which supports the data format of this data. In global business, the number of situations grows where a user wants to access data being stored somewhere in a first data format from a computer system supporting data formats that do not include this first data format, or from a computer system with limited capabilities, e.g., no fonts, speech only, that will not permit viewing all the information.

In the prior art, format conversion programs are known which allow the conversion of data from one specific data format to another specific data format. See for example International Publication Number WO 98/53393 entitled "Data Stream Processing on Networked Computer System Lacking Format-Specific Data Processing Resources" of T.V. Raman dated November 26, 1998. However, each data conversion from one specific data format to another specific data format requires a separate converter or in the terms of the cited publication, a parsing server.

This means that a user who wants to be able to read data existing in a certain data format on computer systems supporting other data formats has to make sure that access is provided to a substantial number of converting programs when required. Although, many converting programs are meanwhile available via the Internet at no or low cost, it is nevertheless cumbersome to access these programs when needed. Also, most of these conversion programs are available only for desktop systems, and their executables are dependent upon a specific hardware architecture and/or operating system. Such conversion programs cannot be used on devices like mobile phones or hand-held personal digital assistants.

One solution to this problem was to provide a capability to translate a first data format into an intermediate data format, and then another capability to translate the intermediate data format into a second data format. An example of this approach includes International Publication Number WO 96/37817, entitled "System and Method for Converting Data From a First Data Format to a Second Data Format," of J. Todd Coleman, published on November 28, 1996. However, this system is not useable by someone that does not have computer coding experience. It requires input of a series of commands that define the data in detail. In particular, according to Coleman "The user enters a plurality of commands referred to as MapTo commands, and these commands specify the mappings between fields or parts of tables."

This use of a conversion to and from an intermediate data format reduces the total number of converting programs required. However, conversion between two data formats that requires the complexity disclosed by Coleman is not useful to the average computer user. In general, conversion of every data format into and from only one intermediate format is undesirable. The one intermediate format cannot include all the information required to properly present the data for every desired input or output format. Consequently, the quality of the data conversions is limited by the functionality of the one intermediate format.

## SUMMARY

It is desirable to provide access from an arbitrary computer system to data having an arbitrary data format.

According to one embodiment of the present invention, a user transparently accesses data having a format that is different from formats supported by the user's device. In another embodiment, a first computer system transparently transcodes data supplied to a second computer system without user intervention. In yet another embodiment, a user request access to data, but the user is authorized to access only a portion of the source data. Again transparently to the user, the source data is rendered into data for which the user is authorized, i.e., the same data is rendered in a different way. In each of these embodiments, a filter server generates a filter that performs the required task.

In one embodiment, when a filter server receives a request for data, a rule set for a plurality of partial filter adapters is retrieved using a filter registry. A filter is built using the rule set. The filter includes a chain of the plurality of partial filter adapters. Each partial filter adapter includes a generic format independent interface. The generic format independent interface is used in passing data from one partial filter adapter in the plurality of partial filter adapters to another partial filter adapter in the plurality of partial filter adapters.

In the first embodiment described above, the filter that is constructed converts the data into a format that can be processed on the user's device. In the second embodiment, the constructed filter is used, for example, to substitute information in one document with other information. In the third embodiment, the constructed filter is used to remove data for which the user is not authorized, i.e., the filter renders the source data in a different way to produce the data accessed by the user.

In one embodiment, the generic format independent interface is an event-driven interface. One embodiment of the event-driven interface is a Simple API for XML interface.

In still another embodiment, the partial filter adapters comprise a general partial filter adapter having functionality determined by a parameter. For example, the general partial filter adapter comprises an eXtensible Style sheet Language Transformation processor, and the parameter comprises an eXtensible Style sheet Language Transformation script.

A computer program product, in one embodiment, comprises a medium configured to store or transport computer readable code for a method comprising:

receiving a request for data;

retrieving, from a filter registry in response to the request, a rule set for a plurality of partial filter adapters wherein, upon being chained together the plurality of partial filter adapters converts source data to the data; and

building a filter using the rule set wherein the filter comprises a chain of the plurality of partial filter adapters wherein each partial filter adapter includes a generic format independent interface and the generic format independent interface is used in passing data from one partial filter adapter in the plurality of partial filter adapters to another partial filter adapter in the plurality of partial filter adapters.

A structure, in one embodiment of the present invention includes a partial filter adapter library, and a partial filter adapter registry. The partial filter adapter registry includes a rule set. A filter server is coupled to the partial filter adapter registry and to the partial filter adapter library. The filter server uses the rule set to build a filter using a plurality of partial filter adapters from the partial filter adapter library. Thus, the filter server generates a structure including a first partial filter adapter having a generic format independent interface, and a second partial filter adapter having the generic format independent interface coupled to the first partial filter adapter.

A further method for generating an adapter for converting data from a first data format to a second data format, comprises the steps of:

a) selecting from an adapter library a first partial adapter for converting the data from the first data format to an intermediate data format,
b) selecting from the adapter library a second partial adapter for converting the data from the intermediate data format to the second data format, and
c) combining the first partial adapter and the second partial adapter to generate the adapter for converting the data from the first data format to the second data format.

The method provides access to data having a certain data format regardless of this data format from a computer system which is initially not able to handle and process this data format.

In the first two steps of this method a first partial adapter and a second partial adapter are chosen from an adapter library, which is a collection of adapters on any suitable storage medium. Each of the partial adapters stored in the adapter library is able to convert data from a certain data format into a defined intermediate data format. In many instances partial adapters are also able to reconvert data from the intermediate data format into the above mentioned certain data format, that means they work bi-directional. This intermediate data format may be any data format. It is selected to provide a common basis for converting into and from. For example, the intermediate data format may be an extensible markup language (XML).

The first and second partial adapters are selected according to the concrete conversion requirements of the individual case, that means depending on the first and second data format involved. The selected partial adapters are combined to form the desired adapter for converting data from the first data format to the second data format. This combination is also called binding.

The combination, that means the binding, of the two partial adapters may be dynamic, that means the adapter will not be stored in the computer system carrying out the conversion of data. Instead, the two partial adapters may cooperate by exchanging information in the intermediate data format directly. Therefore, data to be converted from a first data format into a second data format need not exist at any time in a memory of the computer system carrying out the conversion in the form of a complete stream or file of data in the intermediate data format. However, pieces of the stream of file of data may, of course, exist in the intermediate data format at any given point in time.

In an embodiment of this method the adapter is generated in response to a command of a software program supporting the second data format to access the data being stored in the first data format. This means, the creation of the adapter may be on demand. This demand may be automatically posed by the software program or it may be posed only after user interaction with this software program.

In a further embodiment for generating an adapter the second data format may be selected from at least two data formats supported by the mentioned software program. The information about the supported data formats may be given by the software program to the decision device which selects the second data format. This decision device may be implemented in hardware or software and may be located on the first or the second computer system or at any location being accessible to the first or the second computer system. This information about the supported data format may be given directly. However, it may also be given indirectly in that the software program communicates to the decision device its type or nature and the decision device retrieves the information about supported data formats from a data base or any memory in which this information is present in relation to the obtained information about type or nature of the software program. For example, if it is known to the decision device that a certain text processing software program supports a certain data format, it may be sufficient to provide this decision device with the name of the text processing software program in order to give it, indirectly, the required information about the supported data format.

If more than one data format is supported by the software program requesting access to data being stored in a non-supported data format, the selection of the second data format into which the requested data shall be converted may be based on a selection scheme. This may use, as an example, one or more of the following criteria: storage space required by the data in each of the data formats supported by the software program, conversion time for the data from the first data format into each of the data formats supported by the software program. There may be other criteria furthering the aim of providing quick and easy access with a good quality to data stored in a computer system.

In the scope there is also provided a method of using an adapter generated as described above for converting data from a first data format into a second data format.

Further, a method for rendering accessible data stored in a first data format in a first computer system to a second computer system supporting a second data format is provided, which method comprises at least the following steps:

a) receiving in the first computer system a request from the second computer system for the data,

b) receiving in the first computer system information about at least one data format supported by the second computer system,

c) selecting the second data format, if in step b) the first computer system was informed about more than one data format supported by the second computer system,

d) comparing in the first computer system the first data format with the second data format,

e) generating an adapter for converting the data from the first data format into the second data format, if the first data format is incompatible with the second data format, by combining a first partial adapter for the transformation of data from the first data format to an intermediate data format and a second partial adapter for the transformation of data from the intermediate data format to the second data format,

f) converting the data in the first computer system by means of the generated adapter from the first data format into the second data format,

g) transmitting the converted data from the first computer system to the second computer system.

The data which shall be accessed is stored in a first data format on a storage medium of the first computer system. This storage medium may be any type of memory, including a hard disk, a soft disk, a tape or a CD-ROM. The first computer system is a computer system which has access or is able to set up access to this storage medium, for example, via a permanent or an intermediate network or data channel. In this context a data channel is understood to be any real or virtual connection for the transfer of data. This first computer system comprises, besides the storage medium, at least a processor for converting data, if necessary, from one data format to another data format. The further structure and the location of this first computer system is not pertinent to the present invention. The first computer system may comprise a server with large-scale storage capacity for data and with high-rate data transfer options for data not immediately accessible within the first computer system.

The second computer system may be any computer system suitable for processing data, that means for at least retrieving, i.e. opening for reading or changing data. The second computer system must be connectable to the first computer system for the transmission of data. This connection can be achieved by any suitable data channel, including permanent and temporary data channels, like any kind of real or virtual network. In one example, the first and the second computer system may be of comparable size and have comparable tasks in this network, in another example, they may have the tasks of a server and a client, respectively. However, it may also be sufficient to employ removable data carriers, which will be physically exchanged between the first computer system and the second computer system, as the data connection. It is even possible that the first computer system and the second computer system are fully integrated parts of a complete computer solution. They may even employ the same processor and the same storage medium, so that they may as well be considered to be the same computer.

The second computer system may support one or several data formats, which may or may not be identical with the first data format in which the data- which shall be accessed by or via the second computer system - stored on the first computer system.

In the first step, the second computer system may request from the first computer system the data to be accessed by sending a corresponding request message to the first computer system. This request message may be sent by any suitable means, including via the data connection which is provided for exchanging data between the first and the second computer system.

Then, the first computer system is informed about at least one data format which is supported by the second computer system. This information may come from any source. For example, the second computer system may send this information, for example, together with the above described request for the data. However, this information may as well be present in the first computer system or any computer or storage system accessible for the first computer system, before the second computer system requests the data from the first computer system. In this case, the first computer system may retrieve or obtain the relevant information itself or by any suitable function, as soon as the second computer system requests the data.

The second computer system may support, as described earlier, one or more data formats. If a plurality of data formats is supported by the second computer system, the first computer system may be informed about only one or several selected or all of these compatible data formats, depending on the aim of the second computer system, or its programmer or user, respectively, as to which data format shall be requested or accepted. For example, the second computer system may work according to the scheme that a certain data format shall be preferred, and only in case this data format is not available, with or without conversion, then some other data format shall be accepted, that means may be requested from a first computer system, for example, a central server unit. The decision about a preferred data format may be carried out in the second computer system according to suitable criteria, for example, the criteria described below.

The information of the first computer system about any data formats supported by the second computer system may be effected indirectly, in that the first computer system merely receives information about a software module on the second computer system for which or by which the data is requested from the first computer system. In this case, the first computer system must have access to information as to which data formats are supported by this software module. This information may be stored in the first computer system, but it may be stored as well outside in a form which is accessible to the first computer system.

In the next step, the first computer system may select the second data format into which the requested data shall be converted, if the need to do so arises. This step only has to be carried out, if the first computer system was informed about more than one data format supported by the second computer system. This selection may be made arbitrarily, as well as according to any suitable criteria, for example the following: storage space required by the data in each of the data formats supported by the second computer system, transmission time from the first computer system to the second computer system for the data in each of the data formats supported by the second computer system, conversion time for the data from the first data format into each of the data formats supported by the second computer system. Other criteria may be more business-oriented, for example, the support of certain, may be own, data formats or may consider the quality of the conversion.

After having been informed about or having selected, respectively, the second data format, the first computer system compares the first data format, in which the requested data is presently stored on the first computer system, with the second data format in which the data format shall be forwarded to the second computer system. If these data formats are not compatible, the first computer system decides to convert the requested data from the first into the second data format.

For this conversion the first computer system generates an adapter for converting the required data from the first data format into the second data format, as it was described above.

The advantage of the present invention is, that the partial adapter library comprises only adapters from certain data formats to a convenient intermediate data format and vice versa, but not each and every cross-connection from any first to any second data format required by prior art solutions. If a new data format should be supported by the prior art solution, as many conversion adapters have to be provided as data formats exist. According to the present invention, however, only two new adapters have to be added to the existing library, one for converting the new data format into the intermediate format, another for converting the intermediate format into the new data format.

The generated adapter generally works as one adapter, that means there will be no intermediate data in the intermediate data format. However, specific reasons may exist to store such an intermediate data in a storage of the first computer system. A reason for such a solution may be insufficient buffer space in the conversion processor, or, considering the situation from the point of view of the data to be converted, this data may be too long to be converted in one step.

The standard intermediate data format may be an extensible markup language, generally designated with the letters XML. It will be understood that the invention is not limited to the present definition of a XML standard language.

After applying the generated adapter, the first computer system transmits the converted data to the second computer system via any kind of data connection. Herewith, the user of the second computer system is able to access the desired data in the required data format without the need to have a variety of converter programs at hand.

In the further course of action the generated adapter may be maintained and stored in the first computer system or any storage system related to this first computer system. However, it may be advantageous, with respect to storage management, to abandon the generated adapter and newly create it if a similar conversion task arises.

In the scope a method is also provided for rendering accessible data stored in a first data format in a first computer system to a second computer system supporting a second data format, comprising the steps of:

a) receiving in said first computer system a request from said second computer system for said data,
b) informing said second computer system about said first data format of said requested data,
c) selecting said second data format, if said second computer system supports more than one data format,
d) comparing said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data by means of said generated adapter from said first data format into said second data format,
g) accessing said converted data by said second computer system.

Herein, the second computer system chooses among several supported data formats the second data format into which the data being present in the first data format shall be converted. The information about the first data format in which the requested data are stored may be provided by the first computer system, but it may also come from every other source connected to the second computer system. The comparison step between the first data format and the selected second data format may be carried out in the first or the second computer system or on any other computer system being accessible either the first or the second computer system.

Further, a method for rendering accessible data stored in a first data format in a first computer system to a second computer system supporting a second data format is provided, which method comprises at least the following steps:

a) receiving in the first computer system a request from the second computer system for the data,
b) transmitting the requested data from the first computer system to the second computer system,
c) so that the second computer system is able to select the second data format, if it supports more than one data format,
d) wherein the second computer system is able to compare the first data format with the second data format,
e) wherein the second computer system is able to generate an adapter for converting the data from the first data format into the second data format, if the first data format is incompatible with the second data format, by operatively connecting a first partial adapter for the transformation of data from the first data format to an intermediate data format and a second partial adapter for the transformation of data from the intermediate data format to the second data format,
f) wherein the second computer system is able to convert the data by means of the generated adapter from the first data format into the second data format.

The steps of selecting, comparing, generating and converting may be carried out by the first computer system or by the second computer system. It may be also possible that these two computer systems cooperate by carrying out some of the steps in one computer system and some other steps in the other computer system.

There is also provided a method for using a second computer system supporting a second data format for accessing data being stored in a first data format on a first computer system, comprising the following steps:

a) requesting from the first computer system the data,

b) informing the first computer system about at least one data format supported by the second computer system,

c) so that the first computer system is able to select the second data format, if it was informed about more than one data format supported by the second computer system,

d) wherein the first computer system is able to compare the first data format with the second data format,

e) wherein the first computer system is able to generate an adapter for converting the data from the first data format into the second data format, if the first data format is incompatible with the second data format, by operatively connecting a first partial adapter for the transformation of data from the first data format to an intermediate data format and a second partial adapter for the transformation of data from the intermediate data format to the second data format,

f) wherein the first computer system is able to convert the data by means of the generated adapter from the first data format into the second data format,

g) receiving the converted data from the first computer system in the second computer system.

The last described method for using a second computer system requires a second computer system which is able to process data, but which may be very limited in its functionalities. For example, the second computer system may be a thin client which cooperates, as described, with a large server forming the first computer system. With this method of use the second computer system may be used in a particularly advantageous way.

There is also provided a method for using a second computer system supporting a second data format for accessing data being stored in a first data format on a first computer system, comprising the following steps:

a) requesting from the first computer system the data,

b) receiving the requested data from the first computer system in the second computer system,

c) selecting the second data format, if the second computer system supports more than one data format,

d) comparing in the second computer system the first data format with the second data format,

e) generating an adapter for converting the data from the first data format into the second data format, if the first data format is incompatible with the second data format, by combining a first partial adapter for the transformation of data from the first data format to an intermediate data format and a second partial adapter for the transformation of data from the intermediate data format to the second data format,

f) converting the data in the second computer system by means of the generated adapter from the first data format into the second data format.

Also, a method may be provided employing an adapter generated by more than two partial adapters. Herein, at least one further partial adapter is used for converting said data from said intermediate data format into a further intermediate data format, wherein said first partial adapter is able to convert said data from said first data format into said intermediate data format and said second partial adapter is able to convert said data from said further intermediate data format into said second data format. The number of further partial adapters may be very high and depends on the specific implementation requirements for the inventive method.

The operations may be implemented in a computer program (computer program product), including comprehensive office applications. A computer program product comprises a medium configured to store or transport computer readable code, or in which computer readable code may be embedded. Some examples of computer program product are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks. Therefore, the present invention also relates to a data carrier for storing a computer program for carrying out the inventive method. The present invention also relates to a method for using a standard computer system for carrying out the present inventive method.

Furthermore, stored data structures are provided, comprising a set of partial adapters, wherein each partial adapter of the set of partial adapters is capable of converting data between a certain data format and an intermediate data format. Therein, each partial adapter being capable of converting data between a first data format and the intermediate data format may be combined with each other partial adapter being capable of converting data between a second data format and the intermediate data format in order to produce an adapter being capable of converting data between the first data format and the second data format.

BRIEF DESCRIPTION OF THE DRAWINGS OF CHAPTER E

Fig. 1A:          is a high level diagram of a computer network system that includes one embodiment of the filter server of the present invention.

Fig. 1B:          is a high level diagram of a computer system that includes one embodiment of the filter server of the present invention.

Fig. 2:           is a block diagram of a filter built according to one embodiment of the present invention.

Fig. 3:           is a block diagram of one embodiment of the filter server of the present invention.

Fig. 4:           is a process flow diagram of one embodiment of processing a data conversion request by the filter server of Figure 3.

Fig. 5:           is a process flow diagram of one embodiment for using the dynamic data conversion process of the present invention.

Figs. 6A to 6C:   are three embodiments of filters generated using a plurality of partial filter adapters with a generic format independent interface for passing data from one partial filter adapter to the next partial filter adapter.

Fig. 7A:          is a first embodiment of a use for a filter constructed using the filter server of Figure 3.

Fig. 7B:          is a second embodiment of a use for a filter constructed using the filter server of Figure 3.

Fig. 7C:          is a third embodiment of a use for a filter constructed using the filter server of Figure 3.

Fig. 7D:          is a fourth embodiment of a use for a filter constructed using the filter server of Figure 3.

Fig. 8:           schematic diagram of a hardware system for applying the inventive method

Fig. 9:           flow chart representing the method for rendering accessible data stored in a first data format in a first computer system to a second computer system supporting a second data format according to the present invention

Fig. 10:          flow chart representing the generation of an adapter for converting data from a first data format into a second data format according to the present invention

Fig. 11:          flow chart representing the conversion of data from a first data format to a second data format using an adapter generated with a method according to the present invention

Fig. 12:          schematic diagram of a client-server system for carrying out the method steps shown in Fig. 10 and Fig. 11

Fig. 13:          flow chart representing the steps of the method according to the present invention by employing two computer systems

Fig. 14:          flow chart representing the steps of the method according to the present invention by employing one computer system

Fig. 15:          flow chart representing the generation of the adapter

Fig. 16:          schematic diagram of examples of combinations of partial adapters

In the Figures 1 - 16 of CHAPTER E and the following Detailed Description of CHAPTER E, elements with the same reference numeral are the same element or a similar element. Also, the first one or two digits of a reference numeral for an element indicate the figure in which that element first appeared. Reference numerals do not necessarily correspond to the reference numerals used in the further chapters.

Herein, italics are used only to aid in reading the disclosure. A word in italics and the same word not in italics represent the same thing and are the same word.

DETAILED DESCRIPTION

According to one embodiment of the present invention, a user can access the user's data or other data of interest to and available to the user from any one of a plurality of user devices 102A to 102F. When a first computer program executing on a user device, e.g., device 102A, issues a request for data, in response to a user input, the request is received by a second computer program, e.g., web server 111, executing on another computer system, e. g., server system 100.

If the requested data has a format that can be processed by the first computer program, second computer program 111 simply retrieves the requested data and sends that data to user device 102A. However, if the requested data has a format that cannot be processed by the first computer program, second computer program 111 passes the data request to a filter server 120 of this invention.

In one embodiment, as explained more completely below, filter server 120 determines data formats that can be processed by the first computer program. Filter server 120 also determines the data format of the requested data. Using the two data formats, filter server 120 dynamically creates a data filter that in turn converts the format of the requested data to one of the formats that can be processed by the first computer program.

With filter server 120, the user is no longer restricted to retrieving data on user devices that support the same application that was originally used to store the data. Moreover, the user is unaware that filter server 120 is utilized, because filter server 120 is automatically called when the services of filter server 120 are required. Consequently, filter server 120 eliminates prior art limitations on accessing data from a wide variety of user devices.

Filter server 120 is used not only to convert documents based upon a request from a user device, but also to convert documents in response to a request from another computer system without user interaction. For example, in a business-to-business environment, filter server 120 is used to transcode data, which changes the data while the data is being processed. For example, a filter supplied by filter server 120 is used to substitute part numbers in one document with the required order numbers for the supplier.

In still another application, filter server 120 does not convert a document from a source data format to a target data format, but rather allows the rendering of the same data in different ways. For example, a user, who is not authorized to view a complete spreadsheet, sees only a particular set of rows of the spreadsheet when the complete spreadsheet is processed with a filter supplied by filter server 120.

For example, in one embodiment, a user may store an address-list as a part of a schedule program via a workstation 102C connected to enterprise network 103. The address-list for the schedule program is stored in user documents on a storage device 113 of server system 100 that also is connected to enterprise network 103. The source format of the stored address-list is determined by the schedule program.

While visiting a friend, the user wants to access the address-list, but the friend has only a home personal computer (PC) 102D available, which uses a different operating system and a different suite of programs than those available to the user via workstation 102C. Nevertheless, the user is able to access the stored address-list by using a browser, the first computer program referred to above, executing on the friend's home personal computer 102D. Via an Internet service provider, the user contacts server system 100 and requests the address-list using the browser on personal computer 102D.

In response to the user request, in this embodiment, web server 111 sends a request that includes at least one MIME type supported by the browser on PC 102D and an address of the requested document to filter server 120. As explained more completely below, filter server 120 builds a filter 210 (Fig. 2) that can read the data from address list 201, dynamically convert the read data using a partial filter adapter chain 215 to the new format, and then write the converted data in the new format so that the data can be sent to the user.

More specifically, in response to the request from web server 111, filter server 120 via conversion service 125 causes a protocol reader 202(Fig. 2) to be instantiated and uses the protocol reader to access requested document 201 to determine the format of the requested data. With the source document data format and the target document data format, i.e., the MIME type received in the original user request, filter server 120 can build a filter 210 for converting the format of source document 201 to the format of the target document. In this example, address-list 201 was generated using a contact manager and so source document 201 has a format that, for purposes of illustration, is called the source format. A MIME type in the request, i.e., the target format, was Portable Document Format (PDF).

As explained more completely below, in one embodiment, filter server 120 accesses a filter registry 127 to generate a filter map of partial filter adapters that can be chained together to convert the format of address-list 201 to the PDF MIME type specified in the request. A filter map is an example of a rule set for constructing a chain of partial filter adapters that perform a desired data conversion.

In this example, the map of partial filter adapters includes three partial filter adapters 203 to 205. A first partial filter adapter 203 converts data in the source format to data in STAROFFICE Calc format. (STAROFFICE is a trademark of Sun Microsystems, Inc. of Palo Alto, CA) A second partial filter adapter 204 converts data in STAROFFICE Calc format to data in the rich text format (RTF). A third partial filter adapter 205 converts data from the RTF format to the target PDF format.

Using the filter map, filter server 120 calls a service to instantiate each partial filter adapter in the map, e.g., instantiate each of partial filter adapters 203 to 205, using partial filter adapter library 126. Filter server 120 calls another service to chain the three partial filter adapters together using a chaining application programming interface of each partial filter adapter.

In this embodiment, filter server 120 via conversion service 125 constructs a data filter 210 (Fig. 3) by gluing a protocol read and parser unit 202 to an input end 211 of partial filter adapter chain 215 and a byte stream printer and protocol writer 206 to an output end 212 of chain 215 and thereby constructs filter 210. In more general, terms a data sink is glued to output end 212. The data sink converts the data presented via an event-based API to a byte stream that can be used by an application, or other process.

In the example of Figure 2, after construction of filter 210, conversion service 125 uses filter 210 to process file 201. Specifically, source file 201, which was specified in the request from user device 102D, is read by a protocol reader, and if necessary, a parser parsers the input data read by the protocol reader to provide an event-based data stream to a source format to STAROFFICE Calc partial filter adapter 203. The output data from partial filter adapter 203 is provided via a generic format independent interface to a STAROFFICE Calc to RTF partial filter adapter 204. The output data from filter 204 is provided via the same generic format independent interface to RTF to PDF partial filter adapter 205.

The output data from partial filter adapter 205 is passed to byte stream printer and protocol writer 206. The byte stream printer converts the PDF data in the event-based API from partial filter adapter 205 to a byte stream and the protocol writer writes that byte stream to a memory either for storage or for transfer to user device 102D. In this example, filter 210 generates an address-list file 207 with a PDF format. File 207 is returned to web server 111, which in turn sends file 207 to user device 102D for display. Thus, the user is able to view the address-list without having access to the application that was used to generate the address-list.

One important aspect of this invention is that each partial filter adapter utilizes the same generic format independent interface to receive input data. Format independent here means that the interface is independent of the particular source and target formats as well as the underlying data formats associated with a particular partial filter adapter. This allows any one partial filter adapter to be connected to another partial filter adapter without concern for the particular underlying format of the data output by the first partial filter adapter. In one embodiment, as explained more completely below, the generic format independent interface is a Simple API for XML (SAX) interface, and the data format of the input data is XML. The underlying data format is defined by a Document Type Definition (DTD) identifier.

In one embodiment, filter 210 is used dynamically, which means that the complete data file is not stored in intermediate stages. Rather, the output from a first partial filter adapter is input to a second partial filter adapter before all the data has been processed by the first partial filter adapter.

As explained more completely below, in one embodiment, each partial filter adapter has two application programming interfaces. A first interface is the generic format independent interface event-based API that permits transfer of data from one partial filter adapter to another partial filter independent of the specific underlying format of the transferred data. A second interface is a chainable interface that allows chaining the partial filter adapters together. In another embodiment, the two interfaces are the same interface.

The combination of the two interfaces for each partial filter adapter permits dynamic building of a wide variety of filters. More importantly, data can be passed from one partial filter adapter to another partial filter adapter within a filter without waiting for one partial filter adapter to convert all the data from one format to another. This reduces the memory requirements for the data conversion.

The previous example assumed that the user requested data for display on user device 102D and that the user only wanted to view the requested data. However, alternatively, a user may be executing an application 112 or other service on server system 100, and the user directs application 112 to open a data file in a format different from the formats supported by application 112. In this case, the user wants to modify the data and then to store the modified data in its original format.

Upon application 112 determining that the requested data file has a format other than a format that can be processed by application 112, application 112 issues a request to filter server 120 that proceeds as described above. However, in this example, filter server 120 constructs a dynamic filter that is bi-directional, so that the original format of the requested data is changed to a new format using the filter in a first direction. The data in the new format is processed using application 112, and then the same dynamic filter is used in a second direction, opposite to the first direction, to store the processed data in the original format. Alternatively, two different filters could be used one for each direction. In some embodiments, the bi-directional data conversion may potentially lead to some information loss.

Hence, with filter server 120, a user can access data on Internet 106 and/or enterprise network 103 from almost any available device, e.g., any one of portable computer 102A, a mobile telephone 102B, a workstation 102C, a home personal computer (PC) 102D, a personal digital assistant 102E, or an Internet café machine 102F. No longer is a user limited to using a particular device with pre-installed software to access data with a particular format, or limited to using special devices, which support all capabilities needed to process the whole document.

As a further example, consider that a user taps an icon displayed on PDA 102E to generate a request for a sales report that is stored in a database in enterprise network 103. The request is sent over Internet 106 to server system 100 that, in turn, retrieves the sales report, dynamically builds a filter to convert the format of the sale report to another format that can be displayed on PDA 102E, and transmits the converted sales report to be displayed on PDA 102E. A similar transaction could be done using Internet café machine 102F, or perhaps mobile telephone 102D.

Plurality of devices 102A to 102F is illustrative only and is not intended to limit the invention to the particular devices illustrated. The devices could also include, for example, a POTS telephone, a pager, a set-top box connected to a television, a network appliance, or any other device that is connectable to a network and can issue a request for data, as described more completely below, and display the data received in response to the request.

In one embodiment, a request from a user device 102i, where user device 102i can be any one of the plurality of user devices 102A to 102F, specifies (i) a suitable address to the location where the content associated with the request is stored, for example, an address in the form of a uniform resource locator (URL), and (ii) information concerning either the types of data that can be processed and displayed by user device 102i, e.g., MIME types, or alternatively-applications available on the device to process and display data.

In another embodiment, the request includes the data to be converted in place of the storage location address.

Enterprise network 103 is illustrative only of one embodiment of a network. The particular type of network connecting a user device 102i to server system 100 is not essential, and may be the Internet or any other permanent or temporary network, for example a local area network.

In the embodiment of Figure 1A, filter server 120 was included in a server system 100. In the embodiment of Figure 1B, filter server 120 is included on a user device 102i. In the embodiment of Figure 1B, the memory of computer system 102i is divided into a volatile memory 110, like a working memory, and a non-volatile memory 131, like a hard disc. Filter server 120 is stored in memory 110, while partial filter adapter library 126 and filter registry 127 are stored in non-volatile memory 131. Of course, all or part of filter server 120 could also be stored in memory 131 and executed directly from memory 131, or alternatively, portions or modules of filter server 120, e.g., conversion service 125, could be loaded in memory 110 and executed as needed.

In this example, computer system 102i also includes keyboard 115, and monitor 116, that are connected to processor 101 via I/O interface 132. Computer system 100 also may have, for example, a printer 117, a mouse 118, a scanner 119 and CD-ROM 114 connected to I/O interface 134. Frequently, computer system 102i also is connected to a network 103 via I/O interface 134. Optionally, network 103 can be connected to, or part of a larger network 106, for example, the Internet or a wide area network.

If application 132 that is executing on processor 101 needs access to data that is in a format other than a format that can be opened by application 132, application 132 issues a request for the data to filter server 120 that proceeds as described above in this embodiment.

Figure 3 is a block diagram of modules used in the process of building a chain 360 of partial filter adapters 0 to N by filter server 120. In this embodiment, in receive request operation 410 (Fig. 4A), conversion service 125 receives as a first input one or more data format types 301 that are specified, for example, by a character string identifier like a MIME type, or by a Document Type Definition (DTD) identifier from user device 102i, and in one embodiment from an importer for a target component of user device 102i. Herein, the importer and the target component may be one single component. The request from user device 102i and consequently the request to filter server 120 may include quality indicators (priority) for the input data format types 301. Conversion service 125 receives, as a second input 302, a source data identifier, which is illustrated in Figure 3 as a user file ID. This can be a uniform resource locator, a document path, or in one embodiment, the document itself that is to be converted either as a data stream or in memory.

In the above examples, filter registry 127 was described as providing a filter map. However, this is illustrative only and is not intended to limit the invention to this particular embodiment. In general, a filter map is an example of a set of rules for constructing a filter that converts data from a first format to a second format, or constructing a filter that renders the same data in a different way. The set of rules could be defined, for example, using a XML decision tree or a computer programming language such as PROLOG.

Also, in one embodiment, library 126 includes general partial filter adapters. The function of a general partial filter adapter is controlled by a parameter or a set of parameters. One example of a general partial filter adapter is an eXtensible Style sheet Language Transformation (XSLT) processor. A XSLT script is used to define how this general partial filter adapter, i.e., the XSLT-processor, processes the data. Thus, by providing different scripts, the same general partial filter adapter can be used for different format conversions and/or filtering. In this case, the same general partial filter adapter is reused in building a filter, but the function of each general partial filter adapter in the filter is controlled by a different XSLT script. In this case, the XSLT script is the parameter for the partial filter adapter. In this example, the set of rules includes an identifier for the XSLT script that is to be used to construct a particular partial filter adapter.

In the embodiment of Figure 3, conversion service 125 sets up a protocol reader 350 in create reader operation 420 to determine the source data format. Conversion service 125 passes the source data identifier, or at least a part of the source data identifier to protocol reader 350.

Protocol reader 350 retrieves the format of the source data. Some protocols like HTTP provide a MIME type directly and so protocol reader 350 simply retrieves the MIME type. For other protocols, format detection components, which read header information from the source data file itself, are needed in protocol reader 350. Protocol readers are known to those of skill in the art. In either case, conversion service 125 receives the format of the source data corresponding to the source data identifier from protocol reader 350. In another embodiment, the source data format is an input to conversion service 125.

Upon determining the source data format, in create reader operation 420, processing passes to an optional create writer operation 420, in one embodiment. At this point, conversion service 125 knows the target data format. As explained more completely below, conversion service 125 can transmit the converted data to an importer in a number of ways. The output data stream from the last partial filter adapter is presented via an event-based API. Typically, a byte stream printer is needed to convert the data presented via the event-based API to a byte stream that can be processed by other than an event-based API. Also, a protocol writer may be needed. Thus, create writer operation 403 creates a byte stream printer and/or protocol writer, if these components are needed to complete the filter for the data conversion. If neither of these components is needed, operation 420 transfers processing directly to operation 440 and otherwise operation 430 transfers processing directly to operation 440.

Conversion service 125 calls a chain factory 315 with at least the source data format and the target data format in create filter chain operation 440. Chain factory 315 calls filter registry service 325 and provides the source and target formats to service 325. Filter registry service 325 using filter registry 127 finds a chain of partial filter adapters, which is suitable for the conversion of data from the source data format to the target data format, e.g., from a first data format to a second data format. In another embodiment, service 325 finds a chain of filters to transcode the data, or alternatively to render the data in a different way.

In one embodiment of filter registry 127, each entry in registry 127 includes a identifier of the partial filter adapter, the source data format for that partial filter adapter, the target data format for that partial filter adapter, for example, by a MIME type or a DTD identifier, and an activation identifier. The entry also may contain quality indicators (priorities) as well as other attributes or options such as extract/strip/erase.

The particular chain chosen depends upon the information provided to filter registry service 325 and the information in filter registry 127. Note as indicated above, if filter registry service 325 receives more than one target data format, service 325 uses a selection scheme to select the target data format.

The selection scheme uses, as an example, one or more of the following criterion: storage space required by the data in each of the data formats supported by the software program on user device 102i used to process the data; and conversion time from the first data format into each of the data formats supported by the software program or programs on user device 1021. There may be other criteria furthering the aim of providing quick and easy access with a good quality to data stored in a computer system. If there are no other constraints, a chain with the least number of partial filter adapters is selected. In all cases, a descriptive representation of the partial filter adapter chain is returned to chain factory 315 by filter registry service 325 in create filter chain operation 440.

Next in create filter chain operation 440, chain factory 315 passes the descriptive representation of each partial filter adapter in the chain to service manager 320 in a request to activate each partial filter adapter. Service manager 320 accesses each partial filter adapter in library 126 within component registry 330 and instantiates the partial filter adapter, and returns a pointer to the partial filter adapter to chain factory 315.

After service manager 320 instantiates each partial filter adapter, chain factory 315 creates a partial filter adapter chain 360 by connecting the newly created partial filter adapters together. The chain connections are built by using an interface of each partial filter adapter. As explained above, in one embodiment, each partial filter adapter includes a chainable API and this API is used to connect each partial filter adapter to the next partial filter adapter in the chain.

In one embodiment, the chaining is done by setting a Simple API for XML (SAX) interface *XDocumentHandler* (See Table 8) of each successor partial filter adapter to the predecessor's partial filter adapter. One embodiment of the methods in the SAX interface *XDocumentHandler* is described more completely below. Upon completion of chain 360, create filter chain operation 440 returns chain 360 to conversion service 125 and processing transfers from operation 440 to glue filter operation 450.

In glue filter operation 450, conversion service 125 connects protocol reader 350 and parser 351 to input end 361 of chain 360. Conversion service 125 also connects a data sink 370, e.g., a byte stream printer and protocol writer generated in create writer operation 430 to output end 362 of chain 360 to complete generation of filter 380.

In one embodiment, conversion service 125 caches a pointer to completed filter 380 so that any subsequent calls that require the data conversion performed by filter 380 can be completed without building another filter. An example of such a cache for filter 380 is presented in Fig. 4B. For this example, it is assumed that filter 380 performs the dBase to PDF conversion described above. In this embodiment, cache 465 in memory 491 is a two-input look-up table. Use of a lookup table is illustrative only and is not intended to limit the invention to this particular embodiment.

For two-input lookup table 465, a first input, the source format, provides an index that is used to address a row of lookup table 465. A second input, the target format, is another index that is used to address a column of lookup table 465. Here, the source format is the format in which the requested data is stored, and the target format is the format of the data that can be processed by the computer system receiving the data.

The cell of lookup table 465 at the intersection of the addressed row and column contains the pointer to the filter the source and target formats. In this example, the pointer to filter 380 is at the intersection of the row for a source dBase format and the column for a target PDF format. If the filter generated by filter server 120 is not cached, cache filter operation 460 is not included in the process, and processing transfers from glue filter operation directly to conversion operation 470.

Conversion operation 470 may be performed by conversion service 125. In this case, conversion service 125 uses filter 380 to convert the specified file from the source format to the target format. Alternatively, conversion service 125 can return either filter 380 or a pointer to filter 380 to another process or application, and that process or application user filter 380 to perform conversion operation 470.

In conversion operation 470, filter 380 converts data from the first data format to the second data format. According to one embodiment of this invention, complete filter 380 is not stored in it entirety all at one time in dynamic memory of the computer system carrying out the conversion of data. Instead, each partial filter adapter, in turn, cooperates with the next partial filter adapter by exchanging directly information in an intermediate data format. Therefore, as the data is converted from the first data format into the second data format, a complete stream or file of data in the intermediate data format, or intermediate data formats, need not exist at any time in a memory of the computer system carrying out the conversion. However, pieces of the stream of file of data in the intermediate data format, of course, may exist at any given point in time.

In the previous description, each partial filter adapter was described as converting input data in one format to input data in another format. However, partial filter adapters are not limited solely to format conversion. Alternatively, a partial filter adapter can strip information contained in the data, which is not relevant for the representation of the data in the output data format. For example, if the computer software program supporting the second data format and running on the second computer system is programmed to exclusively present an outline of the original source data, a partial filter adapter is used strip all detailed information from the data, e.g., all but the outline is stripped so that only the outline is subsequently processed in the filter of this invention.

Another example is to remove all layout and formatting information from the data via a partial filter adapter. This means that only the filter subsequently processes the content itself. This may be useful, if the computer program that requested the data has no capability to use the layout and formatting information.

Process 500 (Fig. 5) is one embodiment of a use of method 400. Typically, in source format known check operation 501, a user application or a browser, executing on a user device 102i, where user device 102i can be any one device in the plurality of user devices 102A to 102F, determines whether the format for the user requested data (the source format) is known and whether a local application is available, which can read data with the source format. This can be done by searching a registration database, or simply by trying all available applications. If the source format is known and a local application is available, which can read data with the source format, processing transfers to run local application operation 502 on user device 102i, and otherwise to transfer message operation 503.

In run local application operation 502, the local application reads the data in the source format and displays the data on user device 102i. Upon displaying the data, method 500 is complete and so processing transfers to end 505. When it is said that a user device, or in fact any computer system, knows something or takes some action, those of skill in the art will understand that this means that an instruction or instructions are executed on the device to determine what is known or to cause the stated actions to be performed.

In transmit message operation 503, user device 102i sends the request for the data to server system 100. The information included in the request depends on the results of check operation 501. The request includes an identifier of the requested data, a source format field and a target format field. If the source format is completely unknown, the source format field is set to an illegal value, and a list of identifiers of data formats supported by user device 102i is placed in the target format field. Alternatively, an identifier for user device 102i could be provided. If the source format is known, but no appropriate application was found on device 102i, a source format identifier is written in the source format field. The target format field is completed as just described. The message is transmitted to server system 100.

In this example, it was assumed that the user only wanted to view the data and so user device 102i only needed capability for opening the requested document. If for example, the user was requesting the data with one application, e.g., a browser or viewer, but wanted to edit the document using another application after the document was received, the above decision process would be more complex. The application would require logic to make the necessary determinations. For example, the decision could be made to use a remote application to process the data after the data format conversion, and so a lightweight component would need to be downloaded and the desired format would depend on the capabilities of the remote application. See for example CHAPTER C. Independent of the decision process used on the client side to determine the target format, the message sent by client device 102i specifies at least an identifier of the requested data, and an indication of a target format.

Upon receipt of the message from client device 102i, source format known check operation 510 determines either whether the source format field in the message includes a legal value or whether the format of the source file can be detected. If either the source format field includes a legal value or the format of the source file can be detected, the source format is known and so processing transfers to convert check operation 512. Alternatively, the source format is unknown, and check operation 510 transfers to error handler operation 504 that terminates method 500.

In process 500, the operations performed on server system 100 could be performed by different modules executing on server system 100 in a first embodiment, and by a single module in a second embodiment. The particular module or modules that perform the operations of process 500 on server system 100 is not essential to this invention.

In search operation 511, if a user device identifier was provided, operation 511 first obtains information about user device 102i and available software on user device 102i. For example, operation 511 retrieves information about supported data formats from a database, or from other stored information about the type or nature of the software program and user device 102i. For example, if it is known that a text processing software program supports a certain data format, it may be sufficient to obtain the name of the text processing software program from user device 102i to obtain indirectly the required information about the certain data format supported by the text processing software program from a data source accessible to search operation 511 that is executing on server system 100.

When search operation 511 has a set of possible target formats, operation 511 finds a best combination of partial filter adapters to convert the data in the source format into data in the target format. If no conversion is possible, the set of partial filter adapters found is an empty set.

Thus, on entry to convert check operation 512, the data format of the requested data is known; the data format processing capabilities of user device 102i are known; and a set of partial filter adapters for converting the data is known. If convert check operation 512 determines that the set of partial filter adapters is not empty, check operation 512 transfers processing to dynamic filter method 400 and otherwise to error handler operation 504. Error handler operation 504 terminates processing because a set of partial filter adapters for use in transforming the source data to one of the target format supported by user device 102i was not found.

In dynamic filter method 400, a filter is constructed using the set of partial filter adapters, as described above. The filter is used to transform the data from the source format to the target format. Send operation 514 forwards the requested and transformed data, in this embodiment, to run local application operation 502 that performs as described above.

In Figures 6A to 6C, examples for converting documents from one source data format into another target data format are shown. In Figure 6A, method 400 starts with a document in the Microsoft WinWord format (the WinWord format) that was requested for use in an application that uses the RTF format. In this example, method 400 generates a filter employing one partial filter adapter for converting the document in the WinWord format into data having the STAROFFICE-Writer format and another partial filter adapter for converting the data in the STAROFFICE-Writer format into a document having the RTF format.

In the example in Figure 6B, a source document in the STAROFFICE-Writer format is converted into a PDF (Portable Document Format) document. Hence, filter method 400 starts with a document in the StarOffice-Writer format that was requested for use in an application that uses the PDF format, e.g., the user only wants to view the document. A first partial filter adapter converts the STAROFFICE-Writer format into a RTF format. A second partial filter adapter converts the RTF format into the PDF format.

In Figure 6C, the first data format is WordPerfect 2001 and the second data format is STAROFFICE Writer. The first partial filter adapter converts the data from WordPerfect 2001 format to MS Word 2000 format, while the second partial filter adapter converts the MS Word 2000 format to STAROFFICE Writer format.

Figures 7A to 7D are examples of the use of different filters that can be built using filter server 120 of this invention. In Figure 7A, the structure of a data file 701 on a storage medium 113 accessible by a first computer system 720 is modified and provided to an output device 710, e.g., a speaker, a display, or a printer on a second computer system 740.

If storage medium 113 is not included within first computer system 720, data file 701 is accessible on demand via a network connection, for example, using special protocols like HTTP or FTP. Note that the request for data file 701 could have originated on computer system 720, computer system 740, or another computer system that is not shown. If the request originated from a computer system other than the computer system that ultimately processes the target data, e.g., system 740, the request included routing information so that data can be routed to the appropriate location.

To access data file 701 for further handling and processing, data file 701 is transferred from storage medium 113 to first computer system 720. In this embodiment, protocol reader 702 reads source data from an external representation of the data, here data file 701 on storage medium 113, into first computer system 720. Specialized protocol readers for different protocols exist, for example, protocol readers for protocols FILE, HTTP and FTP, respectively.

Protocol reader 702 has an interface, which allows reading the original source data. This interface provides access to the requested data file that means to the original source data. An example of this interface is interface *XInputStream* (See Table 1). Interface *XInputStream* is an interface for sequentially reading data from a data source. Such an interface has at least a method to read data, for example, method readBytes in interface *XInputStream* (See Table 1.).

Parser 703 parses the original source data stream of original data file 701 via the interface provided by protocol reader 702. For example, in one embodiment, parser 703 is an XML parser, which disassembles the original source data stream into XML tokens and contents.

Parser 703 uses a data sink interface, here for example SAX interface *XDocumentHandler* (Table 8), to forward the parsed data to a first partial filter adapter component 704. This data sink interface is generic and does not depend on the concrete document type of the original source data. In this embodiment, each partial filter adapter, in turn, uses the same generic interface *XDocumentHandler* to pass the data stream to the next partial filter adapter. In this embodiment, XML data is used to implement the generic format independent interface between the partial filter adapters. Specifically, each partial filter adapter component forwards the (partially) converted data to the next partial filter adapter component in the chain by using interface *XDocumentHandler*. The interfaces between the partial filter adapter components in this chain are the same and independent from the concrete document type.

The use of interface *XDocumentHandler* in the partial filter adapters is illustrative only and is not intended to limit the invention to this specific interface. Other similar interfaces may be used. Each partial filter adapter can be, for example, hard coded, or can be implemented by XSLT transformations, using an XSL processor and XSL transformation descriptions.

Each of these partial filter adapter components can either convert one format to another format without changing the information itself, or can add or reduce the information contained in the data, for example, by using third data sources like databases or reduction rules.

In the embodiment of Figure 7A, the last partial filter adapter 705 is adapted to issue a remote call over a network connection 730 to interface *XDocumentHandler* of an importer 712 for a target component 711. This effectively forwards the converted data directly to output device 710.

Importer 712 of target component 711 receives the target data by interface *XDocumentHandler* and builds an internal representation of the target data, for example a target document. Importer 712 may be part of target component 711. In the present examples, importer 712 is separated to give a clearer picture of the process.

Importer 712 calls native functions of target component 711 to build the internal presentation of the target data within target component 711. Interfaces belonging to target component 711 are used in building the internal presentation. Each target component 711 has interfaces that are known to those of skill in the art, and so are not considered further herein.

Target component 711, which is used to process the target data, can be, for example, a viewer, an editor or any other component, which processes data. Target component 711 has its own set of interfaces or other methods of receiving the target data.

Optionally, target component 711 may use a display component to present the document in a rendered (or any other) form to the user of second computer system 740. However, output device 710 can be any output device of second computer system 740 including, for example, the display or the loudspeaker of a computer or mobile phone.

Elements 702 to 704 in Figure 7B are identical to those described above for Figure 7A and so that description is incorporated herein by reference. However, in the embodiment of Figure 7B, partial filter adapter 705 is not configured to communicate via a connection to computer system 740. Partial filter adapter 705 provides the converted data to a byte stream printer 706 via interface *XInputStream* in this example.

At this point, the original source data from data file 701 has been converted from the first data format, i.e., the original source data format, into an event-based target data format. From this event-based target data format, byte stream printer 706 converts the internal representation of the converted data into a representation in the second data format, which can be transferred to second computer system 740 as a binary stream. Byte stream printer 706 has a document type independent output interface, which in this embodiment is interface *XActiveDataSource.*

Byte stream printer 706 issues a remote call over a network connection 731 to interface *XOutputStream* of a parser 713 in second computer system 740. This is yet another example for the transfer of the converted data to the target system. In this case, simple data blocks can be transmitted over network connection 731. However, direct (unbuffered) polling data from remote computer systems may not be extremely efficient.

Parser 713 reads the data of the target file from byte stream printer 706 using interface *XOutputStream*.

Parser 713 parses the target data stream of the target file from printer driver 706 and provides data to interface *XDocumentHandler* of importer 712.

Elements 712 to 710 in Figure 7B are identical to those described above for Figure 7A and so that description is incorporated herein by reference.

Elements 702 to 705 in Figure 7C are similar to those described above for Figure 7B and so that description is incorporated herein by reference. However, in the embodiment of Figure 7C, byte stream print 706 receives converted data from the prior partial filter adapter by the same document type independent interface, that means interface *XDocumentHandler* or a similar interface.

Byte stream printer 706 uses, for example, interface *XActiveDataSource* to write the data in the target data format to protocol writer 707. Interface *XActiveDataSource* is an interface for sequentially writing data to a target component by registering an interface *XOutputStream* to receive the data.

Protocol writer 707 creates a data file from the target data obtained from bit steam printer 706. Depending on the protocol used to create the target data file, a different protocol writer component is used. In this embodiment, a specialized protocol writer 707 is used on first computer system 720. Protocol writer 707 directly communicates using any network protocol with a specialized protocol reader 714 on second computer system 740 via network connection 732.

Protocol reader 714 on second computer system 740 reads the target data file into the software system. Specialized readers for different protocols may exist, i.e. for FILE, HTTP or FTP. Protocol reader 714 uses interface *XInputStream* to provide the target data to parser 713. Elements 713 to 710 function as described above, and that description is incorporated herein by reference.

Figure 7D illustrates an embodiment of the invention that is similar to the embodiment of Figure 7C. The difference is that in the embodiment of Figure 7D, protocol writer 707 and protocol reader 714 do not communicate directly. In this example, a file system writer is created which in turn creates the target file with the target data in the file system of first computer system 720.

The target data file, which is locally stored in first computer system 720, is transferred (copied) to the file system on second computer system 740. Parser 713 reads the data of the target file from the protocol reader 714 using the interface *XInputStream*. Preexistent software can be used on second computer system 740, if target element 711 actually contains all of elements 712 to 714. Alternatively, to the depicted usage in two computer systems 720 and 740, this invention can be used on a single computer system too, as shown in Figure 4.

Table 1 is one embodiment of interface *XInputStream* that was used in the protocol readers described above. Interface *XInputStream* is a basic interface to read data from a stream. Interface *XInputStream* inherits from interface *XInterface* that is presented in Table 2. In this embodiment, interface *XInputStream* includes methods readBytes, readSomeBytes, skipBytes, available, and closeInput. As shown in Table 1, each method can raise one of a plurality of exceptions including NotConnectedException (Table 6), BufferSizeExceededException (Table 7), and IOException (Table 4).

Method readBytes reads the specified number of bytes in the given sequence. The return value specifies the number of bytes, which have been put into the sequence. A difference between input parameter nBytesToRead and the return value indicates that an EOF has been reached. This method blocks the thread until the specified number of bytes are available or the EOF is reached. Some implementations must buffer their data to fulfill their specification, and if so exception BufferSizeExceededException may be thrown. When the object is not connected to another interface *XInputStream* (the need for a connection must be specified by the service specification) exception NotConnectedException is thrown. Exception IOException is thrown when a general IO error occurs.

Method readSomeBytes reads the available number of bytes and at maximum the number of bytes specified by input parameter nMaxBytesToRead. This method blocks the thread until at least one byte is available. This method returns the number of bytes actually read. If zero is returned, EOF has been reached. The exceptions thrown by this method were described above.

Method skipBytes skips the next nBytesToSkip bytes (must be positive). It is up to the implementation whether this method is blocking the thread or not.

Method available states how many bytes can be read or skipped without blocking. This method offers no information on whether the EOF has been reached.

Method closeInput closes the stream. Users must close the stream explicitly when no further reading should be done. (There may exist ring references to chained objects that can only be released during this call. Thus, not calling this method would result in leak of memory or external resources.

TABLE 1:   INTERFACE *XInputStream*

```
      interface XInputStream:
com::sun::star::uno::XInterface
      {
      long readBytes( [out] sequence<byte> aData,
                                  [in] long nBytesToRead )
          raises(
com::sun::star::io::NotConnectedException,
          com::sun::star::io::BufferSizeExceededExceptio
      n,
          com::sun::star::io::IOException);
      long readSomeBytes( [out] sequence<byte> aData,
                                  [in] long nMaxBytesToRead
                          )
          raises(
      com::sun::star::io::NotConnectedException,
          com::sun::star::io::BufferSizeExceededExceptio
      n,
                    com::sun::star::io::IOException );
      void skipBytes( [in] long nBytesToSkip )
          raises(
      com::sun::star::io::NotConnectedException,
          com::sun::star::io::BufferSizeExceededExceptio
      n,
                    com::sun::star::io::IOException );
      long available()
              raises(
          com::sun::star::io::NotConnectedException,
                    com::sun::star::io::IOException );
      void closeInput()
          raises(
      com::sun::star::io::NotConnectedException,
                    com::sun::star::io::IOException);
```

```
    .};
```

Interface *XInterface* (Table 2) is the base interface for other interfaces and provides lifetime control by reference counting. Interface *XInterface* also provides the possibility of querying for other interfaces of the same logical object. Logical object in this case means that the interfaces actually can be supported by internal, i.e., aggregated, physical objects.

Method *query Interface in* interface *XInterface* queries for a new interface to an existing object. Method *acquire* increases a reference counter by one, while method *release* decreases the reference counter by one. When the reference counter reaches a value of zero, the object is deleted.

TABLE 2: INTERFACE *XInterface*

```
//===============================================================
interface XInterface
{
//---------------------------------------------------------------
any queryInterface( [in] type aType );
[oneway] void acquire();
[oneway] void release();
};
```

One embodiment of structure Uik is presented in Table 3.

TABLE 3:   Structure Uik

```
//===============================================================

/** specifies a universal interface key.

An UIK is an unambiguous 16-byte value for every
interface.
*/
struct Uik
{
//---------------------------------------------------------

// specifies a 4 byte data block.
unsigned long m_Data1;


//---------------------------------------------------------

/// specifies a 2 byte data block.
unsigned short m_Data2;


//---------------------------------------------------------

/// specifies a 2 byte data block.
unsigned short m_Data3;


//---------------------------------------------------------

/// specifies a 4 byte data block.
unsigned long m_Data4;


//---------------------------------------------------------

/// specifies a 4 byte data block.
```

```
unsigned long m_Data5;

};


//===============================================
=====
```

Exception IOException (Table 4) in interfaces XInputStream (Table 1), and *XOutputStream* (Table 12) inherits from exception Exception (Table 5). Exception IOException is thrown when an input or output error has occurred.


```
                    TABLE 4:   EXCEPTION IOException
```

```
    exception IOException:
com::sun::star::uno::Exception
    {
    };
```

Exception *Exception* is the basic exception. All exceptions are derived from this exception. Message specifies a detailed message of the exception or an empty string if the callee does not describe the exception. Context is an object that describes the reason for the exception. Context may be NULL if the callee does not describe the exception.

```
                    TABLE 5:   EXCEPTION Exception
```

```
    exception Exception
    {
    string Message;
    com::sun::star::uno::XInterface Context;
    };
```

Exception NotConnectedException (Table 6) in interfaces *XInputStream* (Table 1), and *XOutputStream* (Table 12) inherits from exception IOException (Table 4). Exception NotConnectedException is thrown when a read/write operation is tried on an instance that has not been chained properly.

TABLE 6: EXCEPTION NotConnectedException

```
exception NotConnectedException:

                com::sun::star::io::IOException
{
};
```

Exception BufferSizeExceededException (Table 7) in interfaces *XInputStream* (Table 1), and *XOutputStream* (Table 12) inherits from exception IOException (Table 4). Exception BufferSizeExceededException is thrown by instances, which need to buffer data. This exception indicates that not enough system resources are available for extending the buffer. This exception May also indicate that the internal buffer has grown to a larger size than 2 GBytes. Some current implementations do not support larger buffers.

TABLE 7: EXCEPTION BufferSizeExceededException

```
exception BufferSizeExceededException:
com::sun::star::io::IOException
{
};
```

Interface *XDocumentHandler* (Table 8) also inherits from interface *XInterface* (Table 2). Interface *XDocumentHandler* receives notification of general document events. In this embodiment, interface *XDocumentHandler* includes methods startDocument, endDocument, startElement, endElement, characters, ignorableWhitespace, processingInstruction, and setDocumentLocator. Each of these methods can raise an exception SAXException. One embodiment of exception SAXException is presented in Table 9.

Method startDocument receives notification of the beginning of a document. Method endDocument receives notification of the end of a document.

Method startElement receives notification of the beginning of an element. Input parameter aName contains the name of the tag. Input parameter xAttribs contains an interface to the list of attributes given in the tag. Note that for every call of the method, the same instance may be passed. So one must make copy of the instance to store the information.

Method endElement receives notification of the end of an element. Method characters receives notification of character data. Method ignorableWhitespace receives notification of white space that can be ignored. Method processingInstruction receives notification of a processing instruction. Method setDocumentLocator receives an object for locating the origin of SAX document events.

TABLE 8:   Interface *XDocumentHandler*

```
interface XDocumentHandler:


                  com::sun::star::uno::XInterface
{
void startDocument()
     raises(
com::sun::star::xml::sax::SAXException );
void endDocument()
     raises(
com::sun::star::xml::sax::SAXException );
void startElement( [in] string aName,
     [in] com::sun::star::xml::sax::XAttributeList
xAttribs )
     .          raises(
     com::sun::star::xml::sax::SAXException );
void endElement( [in] string aName )
     raises(
com::sun::star::xml::sax::SAXException );
void characters( [in] string aChars )
     raises(
com::sun::star::xml::sax::SAXException );
void ignorableWhitespace( [in] string aWhitespaces
)
```

```
            raises(
    com::sun::star::xml::sax::SAXException );
    void processingInstruction( [in] string aTarget,
                                [in] string aData )
            raises(
    com::sun::star::xml::sax::SAXException );
    void setDocumentLocator(
    [in] com::sun::star::xml::sax::XLocator xLocator )
            raises(
    com::sun::star::xml::sax::SAXException );
    };
```

Exception SAXException also inherits from exception Exception (Table 5). Exception SAXException encapsulates the details of an XML parse error or warning.


TABLE 9:   EXCEPTION SAXException

```
    exception SAXException:
com::sun::star::uno::Exception
    {
    /** This field may contain a  wrapped exception
    */
    any WrappedException;
    };
```

Interface *XAttributeList* is used in method startElement of interface *XDocumentHandler* (Table 8). Interface *XAttributeList* inherits from interface *XInterface* (Table 2). Interface *XAttributeList* specifies an element's attributes. This interface describes a name-type-value triple, which describe a single attribute of a tag.

Method getLength returns the number of attributes in this list. Method getNameByIndex returns the name of an attribute in this list by position. Method getTypeByIndex returns the type of an attribute in the list by position. Non-validating parsers may return CDATA only. Method getTypeByName returns the type of an attribute in the list by name. Non-validating parsers may return CDATA only. Method getValueByIndex returns the value of an attribute in the list by position. Method getValueByName returns the value of an attribute in the list by name.

TABLE 10:  INTERFACE *XAttributeList*

```
interface XAttributeList:

                com::sun::star::uno::XInterface
{
short getLength();
string getNameByIndex( [in] short i );
string getTypeByIndex( [in] short i );
string getTypeByName( [in] string aName );
string getValueByIndex( [in] short i );
string getValueByName( [in] string aName );
};
```

Interface *XLocator* is used in method setDocumentLocator of interface *XDocumentHandler* (Table 8). Interface *XLocator* inherits from interface *XInterface* (Table 2).

Interface *XLocator* makes it possible to associate a SAX event with a document location.

Method getColumnNumber returns the column number where the current document event ends. Method getLineNumber returns the line number where the current document event ends. Method getPublicId returns the public identifier for the current document event. Method getSystem ID returns the system identifier for the current document event.

TABLE 11:  INTERFACE *XLocator*

```
interface XLocator:
com::sun::star::uno::XInterface
{
long getColumnNumber();
long getLineNumber();
string getPublicId();
string getSystemId();
};
```

Interface *XOutputStream* inherits from interface *XInterface* that is presented in Table 2. Interface *XOutputStream* is the basic interface to write data to a stream. In this embodiment, interface *XOutputStream* includes methods writeBytes, flush, and closeOutput that are each briefly described within Table 12. As shown in Table 12, each method can raise one of a plurality of exceptions including NotConnectedException (Table 6), BufferSizeExceededException (Table 7), and IOException (Table 4).

Method writeBytes writes the whole sequence to the stream. (Blocking call.) Method flush flushes any data that may exist in buffers out of the stream. Method closeOutput is called to indicate that all data has been written. If this method is not yet been called, no attached interface *XInputStream* receives an EOF signal. No further bytes may be written after this method has been called.

TABLE 12:  INTERFACE *XOutputStream*

```
interface XOutputStream:
            com::sun::star::uno::XInterface
{
void writeBytes( [in] sequence<byte> aData )
        raises(
com::sun::star::io::NotConnectedException,
        com::sun::star::io::BufferSizeExceededExcepti
on,
            com::sun::star::io::IOException);
void flush()
        raises(
com::sun::star::io::NotConnectedException,
        com::sun::star::io::BufferSizeExceededExcepti
on,
            com::sun::star::io::IOException);
void closeOutput()
        raises(
com::sun::star::io::NotConnectedException,
        com::sun::star::io::BufferSizeExceededExcepti
on,
            com::sun::star::io::IOException);
};
```

Interface *XActiveDataSource* (Table 13) inherits from interface *XInterface* that is presented in Table 2. In this embodiment, interface *XActiveDataSource* includes method setOutputStream and method getOutputStream. Method setOutputStream plugs the output stream, while method getOutputStream returns the plugged stream.

TABLE 13: INTERFACE *XActiveDataSource*

```
interface XActiveDataSource:
     com::sun::star::uno::XInterface
void setOutputStream( [in]
     com::sun::star::io::XOutputStream aStream );
com::sun::star::io::XOutputStream getOutputStream();
};
```

Herein, a computer program product comprises a medium configured to store or transport computer readable code for all or any part of filter server 120 and in particular in which computer readable code for conversion service 125 is stored. Some examples of computer program products are CD-ROM discs, ROM cards, floppy discs, magnetic tapes, computer hard drives, servers on a network and signals transmitted over a network representing computer readable program code.

As illustrated in Figure 1B, this storage medium may belong to computer system 102i itself. However, the storage medium also may be removed from computer system 102i. For example, conversion service 125 may be stored in memory 184 that is physically located in a location different from processor 101. The only requirement is that processor 101 is coupled to the memory. This could be accomplished in a client-server system, e.g. as in Figure 1A, or alternatively via a connection to another computer via modems and analog lines, or digital interfaces and a digital carrier line.

Herein, a computer memory refers to a volatile memory, a non-volatile memory, or a combination of the two. Similarly, a computer input unit and a display unit refers to the features providing the required functionality to input the information described herein, and to display the information described herein, respectively, in any one of the aforementioned or equivalent devices.

In view of this disclosure, filter server 120 can be implemented in a wide variety of computer system configurations. In addition, filter server 120 could be stored as different modules in memories of different devices. For example, conversion service 125 could initially be stored in a server computer 100, and then as necessary, a module of conversion service 125 could be transferred to a client device 102i and executed on client device 102i. Consequently, part of conversion service 125 would be executed on the server processor, and another part would be executed on the processor of client device 102i. In view of this disclosure, those of skill in the art can implement the invention in a wide-variety of physical hardware configurations using an operating system and computer programming language of interest to the user.

Filter server 120 of the present invention may be implemented in a computer program including comprehensive office application STAROFFICE that is available from Sun Microsystems, Inc. of Palo Alto, CA. (STAROFFICE is a trademark of Sun Microsystems.) Such a computer program may be stored on any common data carrier like, for example, a floppy disc or a compact disc (CD), as well as on any common computer system's storage facilities like hard discs. Therefore, one embodiment of the present invention also relates to a data carrier for storing a computer program for carrying out the inventive method. Another embodiment of the present invention also relates to a method for using a computer system for carrying out the presented inventive method. In yet another embodiment of the present invention further a computer system includes a storage medium on which a computer program for carrying out the presented inventive method is stored.

In the following, further embodiments of the invention will be described with respect to Figs. 8 - 16.

First, an embodiment of the invention will be described with respect to Fig. 8. Fig. 8 shows an example for a second computer system 801 suitable to be used in the scope of the present invention. This second computer system 801 comprises a processor 802, memories 803, 804 and an i/o interface 805. The memory of the second computer system 801 is divided in this example into a volatile memory 803, like a working memory, and a non-volatile memory 804, like a hard disk. Via the i/o interface 805 the second computer system 801 may, for example, be connected with input/output devices 806 to 811. Common input/output devices are a keyboard 806, a monitor 807 and a printer 808. Other input devices like a mouse 809, a scanner 810 and a CD-ROM 811 are also possible. Frequently, the second computer system 801 is also connected to a network 812 via this i/o interface 805. A first computer system 813 may be connected to the second computer system 801 via this network 812. This first computer system 813 may comprise as well a processor 814, memories 815, 816 and an i/o interface 817.

It is desirable to provide access to data having a certain data format regardless of this data format from a computer system which is initially not able to handle and process this data format. The method according to the present invention may be employed, for example, for enabling a user to access his data by means of different computer systems. A user may store, for example, an address-list as a part of a schedule program via his second computer system 801, in this example a standard personal computer in his office, on a first computer system 813, in this example a central server. The corresponding data may be stored in a first data format which is specific for the employed schedule program.

In the following example, the user wants to access this address list via another second computer system 801, for example a standard personal computer in the office of a customer. It is understood that the method according to the present invention is not limited to standard personal computers. Any other computer systems like, for example, laptops, handheld computers and mobile phones can also be employed as second computer systems 801. In the case that the actually used second computer system 801 may not comprise the specific schedule program, prior art systems would have difficulty in providing the user access to the address-list. However, if the method according to the present invention is applied the user will get easy access to the address-list, although the actually used second computer system 801 does not have the specific schedule program normally required to access the address list.

The flow chart in Fig. 9 represents the steps of the present example. In a first step 900 the user may contact the first computer system 813 in order to open the specific address list. The first computer system 813 and the second computer system 801 will start a communication in order to select a data format for the requested data. This may take place, for example, by two different ways:

If the second computer system 801 knows that the requested data is formatted in a certain first data format the method will carry out the step 901a in Fig. 9. In this step the second computer system 801 will inspect the software programs which are available to the second computer system 801 in order to find software programs which support the first data format of the requested data or a compatible data format. Thereafter, the second computer system 801 will inform the first computer system 813 whether the second computer system 801 is able to open the requested data in the first data format, or if the first computer system 813 may have to convert the data from the first data format into a second data format supported by the second computer system 801. If the second computer system 801 has no access to a software program which supports the first data format of the requested data, the second computer system 801 will inform in step 902a the first computer system 813 about one or more second data formats supported by it. Based on this additional information the first computer system 813 may provide the requested data directly to the second computer system 801 - if the second computer system 801 supports the first data format - or the first computer system 813 may first convert the requested data in a second data format - if the second computer system 801 does not support the first data format -, as will be described below.

If the second computer system 801 does not know the first data format of the requested data, the first computer system 813 has to decide whether the requested data may have to be converted or not. In order to find out which data formats are supported by the second computer system 801 the first computer system 813 may start a function for searching the software programs available to the second computer system 801, represented by step 901b in Fig. 9. The result of this search function may be the information about software programs available to the second computer system 801 or the supported data formats, respectively. The result of this search function may be evaluated in step 902b in the first computer system 813 and based on this result the first computer system 813 may convert the requested data in the second data format.

In order to convert the requested data in the second data format the first computer system 813 will generate dynamically an adapter for converting data from the first data format into the second data format. According to the present invention such a converting step is carried out by employing an intermediate data format, especially an XML format.

The first computer system 813 may have access to a data base with adapters between the first and the second data format, respectively, and the standard data format, in this example a XML format. Such adapters allow to convert data from the first or second data format, respectively, into a XML format and also to convert data from a XML format into the first and second data format, respectively.

After the first computer system 813 has specified in step 902a or in step 902b the second data format the first computer system 813 may select in step 903 from the data base a first adapter which enables to convert data from the first data format into a XML format and a second adapter which enables to convert data from a XML format into the second data format. These two adapters may be combined in step 904 in a way that the data may be converted from the first data format into the second data format, without the existence of the data in the intermediate data format, a XML format in this example.

These adapters may be employed for the converting in step 905 of the requested data into the second data format. Thereafter, the converted data may be transmitted in step 906 to the second computer system 801 in order to open this data on the second computer system 801.

**EP 1 126 681 A2**

Fig. 10 shows in a flow chart the steps for generating an adapter for converting data being formated in a first data format into data being formated in a second data format.

In a first step 1000 a first partial adapter is selected from an adapter library. The first partial adapter is a software module which is able to convert data from a first data format into the intermediate data format and vice versa. The first partial adapter may be bidirectional for conversion in two directions or unidirectional for conversion only in one direction. The selection of the first partial adapter requires information as to the first data format of the data. Furthermore, information will be required about the intermediate data format, if the intermediate data format is not yet determined for the inventive method. This information may be received and the selection carried out by a suitable software program.

In a second step 1001 the second partial adapter is selected from the adapter library. The explanations given above for the selection of the first partial adapter apply here as well. The sequence of the selection of the first and the second partial adapter is not relevant to the present invention. It will be determined according to practical considerations.

Finally, in a third step 1002 the first partial adapter and the second partial adapter are combined, so that the desired adapter for converting data from a first data format into a second data format is generated. This combination may be achieved by a software program which is informed about the selected adapters and their address in a storage or memory medium. For example, the above described software program which carries out the selection of the first and the second partial adapter may also carry out their combination. Fig. 12, which will be described below, shows a possible mechanism of these selection and combination steps.

Fig. 11 exemplary shows in a flow chart the conversion of data from a first data format into a second data format, as it is carried out by the inventive method.

In a first step 1100 the data in the first data format which shall be converted is loaded onto the computer system on which the conversion will be carried out. Loading of the data means to make it available for further processing by the adapter which will also be available on the computer system which converts the data. The loading may require the transfer of the data from another computer system or storage medium, for example, a data base separated from the computer system on which the conversion will be carried out, because the data to be converted need not be stored on this computer system. This transfer may be carried out via any suitable data channel, be it permanent or temporary.

In step 1101 the data to be converted is read by the generated adapter as a whole or part by part. In step 1102 the information contained in the data which is not relevant for the representation of the data in the second data format may be stripped and disregarded in the further process of conversion. Such information may, for example, by layout commands which are meaningful in the first data format, but are meaningless in the second data format. In step 1103 the remaining content of the data, i.e. the non-stripped information, will be converted from the first data format into the second data format using the generated adapter. The adapter may be generated, as explained above, on the fly, that means it will be generated on demand and it need not be stored, unless a storage during the conversion of the data in the computer system is advantageous for some reason, for example, due to the size of the adapter in relation to the working memory of the computer system's processor.

Finally, in step 1104 the converted data is stored in a storage medium accessible to the computer system which carried out the conversion of the data. Herewith, the data is accessible to users in the second data format.

The generation of an adapter and the conversion of data with the generated adapter according to the present invention, as they were described in Fig. 10 and Fig. 11 above, may be carried out on a client-server system as it is shown in Fig. 12.

Fig. 12 shows a client 1200, for example, a laptop computer which has access, for example, via a real or virtual network, to a server 1201 which has in turn access to a storage medium 1202. A software program 1203 runs on the client 1200. This software program 1203 desires access to data 1204 which is stored on storage medium 1202. The software program 1203 supports a second data format, but not the first data format in which the data 1204 is stored on the storage medium 1202. Therefore, the software program 1203 is not able to directly access the data 1204 on the storage medium 1202.

In order to render the data 1204 accessible to the software program 1203 the server 1201 has access to an external data base 1205 containing a library of partial adapters 1206, 1207, ... . A software program 1208 on the server 1201 is able to generate the adapter required for converting the data 1204 from the first data format into the second data format. A further software program 1209 on the server 1201 serves for applying the generated adapter and thereby provides the converted data 1204, which may then be returned to the client 1200.

According to the present invention the software program 1203 on the client 1200 contacts the software program 1209 on the server 1201 in order to obtain access to the data 1204 stored on the storage medium 1202. The software program 1209 may ask the software program 1203 which has issued the request for access which data format it can or would like to support. It may further ask the storage medium 1202 in which data format the data 1204 is available. Having so determined the first data format - in which the data 1204 is stored on storage medium 1202 - and the second data format - which is supported or required by the software program 1203 - the software program 1209 may request from the software program 1208 an adapter allowing the conversion of data from the first data format to the second data format. The software program 1208 will, based on this information, contact the data base 1205 and select the first partial adapter 1206 - which is able to convert between the first data format and the intermediate data format - and a second partial adapter 1207 - which is able to convert between the intermediate data format and the second data format - and combine both in order to generate the desired adapter. This adapter will then be provided for application from the software program 1208 to the software program 1209, where the conversion of the data 1204 be effected. This conversion requires that the data 1204 is transferred from the storage medium 1202 to the software program 1209 on the server 1201. The converted data will then be sent to the software program 1203 on the client 1200.

Examples for the implementation of the present invention are in the following described in more detail along Figures 13 to 15 and Table 1.

In Fig. 13 the data transfer and the data format filtering, that means the data conversion process employing a first and a second computer system is described.

Original source data is present in its source data format, above referred to as the first data format, on a first computer system. It shall be converted into a target data format, above referred to as the second data format, so that it is accessible by a second computer system which supports the second, but not the first data format. This conversion is effected via an intermediate data format. This process will be described in more detail in the following.

D1: storage medium for original source data

The original source data are the data stored on the first computer system and to be accessed by the second computer system. Here, this data is stored on a storage medium D1 of the first computer system in the form of a data file. Alternatively, the data could be procured on demand via a network connection, for example, using special protocols like HTTP or FTP. The data could also be stored on a third computer system which is accessible for the first or the second computer system.

t1.1: transfer of the original source data to the protocol reader PR1

In order to access the data file for further handling and processing the data file is transferred from the storage medium D1 of the first computer system to a protocol reader PR1, which may also be located on the first computer system.

PR1: Protocol Reader 1

The protocol reader PR1 on the first computer system reads source data from an external representation of data, here the storage medium D1, into the first computer system. Specialized protocol readers for different protocols may exist, for example, for FILE, HTTP or FTP.

c1.1: reading the original source data

An interface which allows reading the original source data is provided by the protocol reader PR1. This interface provides access to the requested data file, that means to the original source data. An example for such interface is XinputStream.

The XinputStream is an interface for sequentially reading data from a data source. Such an interface has at least a method to read data, for example, the following:

```
void XinputStream: readData( [in] sequence<byte> a Buffer )
        throws IOException;
```

Pa1 (Parser 1): parsing the structure of the original source data

The parser Pa1 parses the original source data stream of the original data file. For example, this can be an XML parser, which disassembles the original source data stream into XML tokens and contents. The XInputStream offered by PR1 and mentioned in c1.1 is used to access the original source data.

c1.2: forwarding parsed data to filter A

The parser Pa1 uses a data sink interface, here for example an SAX interface XdocumentHandler as will be described in Table 1, to forward the parsed data to the filter A. This interface is generic and not dependent on the concrete document type of the original source data.

Filter A-Z: filtering data

Multiple filter components A to Z can be chained to convert the original source data from the source data format into a format which is readable by the target component, therefore called target data format. Each of these filters provides a XDocumentHandler interface which allows to correspond with the next filter. For example, filter A provides a XDocumentHandler interface for communicating with filter B, while filter B provides a XDocumentHandler interface for dealing with filter C, etc.. Instead of XDocumentHandler interfaces similar interfaces may be used. Each filter can be, for example, "hard coded" or be implemented by XSLT transformations, using an XSL processor and XSL transformation descriptions. Each of these filter components can either transfer one format to another without changing the information itself, or can add or reduce the information contained in the data, for example, by using third data sources like databases or reduction rules. In the following, two examples for filtering are described:

First Filtering Example: outline

One example for data filtering within a filter, like the above filters A to Z, is to strip all detail information from the information contained in the data. This means to forward, for example, only the headings within the text or the titles of diagrams, pictures or tables. This is useful, if the target component TC - above referred to as the computer software program supporting the second data format and running on the second computer system which requests the original source data - is able or programmed to exclusively present an outline of the original source data. This stripping of detailed data reduces the amount of data to be transferred in rt or rcl to rc3.

Second Filtering Example: layout stripping

Another example for data filtering is to remove all layout and formatting information from the data. This means to forward only the content itself. This may be useful, if the target component TC has no capabilities to display such layouts and formattings. Again, the transferred amount of data in rt or rcl to rc3 may be reduced.

c1.3: forwarding data between filter components

Each filter component forwards the (partially) converted data to the next filter component by using the XDocumentHandler interface (or similar) of the succeeding filter component. The interfaces between the filter components in this chain are the same and independent from the concrete document type.

c1.4: forwarding data from the last filter component to the printer component

The last filter component within the chain of filter components on the first computer system forwards the (completely) converted data to the printer Pr by the same interface, that means XDocumentHandler or similar. At this point the original source data has been completely converted from the first data format, i.e. the original source data format, into the intermediate data format. From this data format it shall be further converted to the second data format requested by the second computer system or the target component TC, i.e. the software program running on the second computer system which wants to access the original source data, respectively.

Pr (Printer): converting the data into target data

This is a component which converts the internal representation of the converted data in the intermediate data format into a representation in the second data format which can be transferred to the second computer system, because the second data format is supported by this second computer system. For instance, an XML printer can be used. This component also offers the XDocumentHandler interface (or similar) to receive the data. Thus it has a document type independent interface. For instance, the printer Pr can create a text representation of an XML document, a PDF document or a document in the proprietary file format of the target component TC.

Referring to the above used terminology, in this example some or all filters of the chain of filters A to Z would be considered as the first partial adapter, while the printer Pr would be considered to be the second partial adapter. Whether more or less filters of the chain of filters would have to be considered to form the first partial adapter depends on the nature of the filters in the filter chain. If those filters exclusively serve the conversion of the data from the first into the second data format, then the full chain of filters could be regarded as the first partial adapter. However, if some filters in the chain of filters are dedicated to other tasks, for example, stripping information beyond the need specified by the target data format, these filters do not form part of the first partial adapter.

Further partial adapters may be used in the scope of the present invention. In this case, the one or more further partial adapters may convert the data between two or more intermediate data formats. This may be advantageous in certain instances, for example, if it is desired to have the converted data available in more than one intermediate data formats.

Continuing with the description of the steps carried out according to Fig. 13, the data now converted into the second data format, the target data format, is further processed:

c1.5: writing the data in the target data format

The printer Pr uses, for example, a XOutputStream interface to write the data in the target data format to the protocol writer PW. A XOutputStream interface in an interface for sequentially writing data to a target component:

        void XOutputStream: : writeData( [in] sequence<byte> aBuffer)
        throws IOException
        PW (Protocol Writer): writing the target data

The protocol writer PW creates a data file from the obtained target data. Depending on the protocol used to create the target data file, a different protocol writer component PW is used. In this example, a file system writer is created which in turn creates the target file with the target data in the file system of the first computer system.

t1.2: transferring the target data file to the file system of the first computer system

The protocol writer PW creates a file in the file system of the first computer system. By using other protocol writer components any protocol, like HTTP or FTP, can be used to create the file, even on a third computer system being accessible to the first computer system.

D2: target file on first computer system

In this exemplary implementation of the invention a target file contains the target data on the first computer system.

rt: remote transfer from first to second computer system

This is one of the four examples given in the following for the transfer of the converted data to the target system: The data file D2, which is locally stored in the first computer system, is transferred (copied) to the data file D2' on the second computer system.

D2': target file on second computer system

In this implementation example of the invention this target file contains the target data on the second computer system.

rc1 (remote connection 1): remote communication of protocol writer/reader

This is another example for the transfer of the converted data to the target system: A specialized protocol writer PW is used on the first computer system which directly communicates with a specialized protocol reader PR2 on the second computer system.

rc2 (remote connection 2): remote calls to XOutputStream

This is yet another example for the transfer of the converted data to the target system: The printer Pr on the first computer system uses, for example, the interface XOutputStream of the parser Pa2 on the second computer system. In this case, simple data blocks can be transmitted. The advantage may be higher efficiency due to skipping the steps of file writing and reading.

rc3 (remote connection 3): remote calls to XDocumentHandler

This is the fourth example for the transfer of the converted data to the target system: The last filter of the filter chain A to Z on the first computer system uses the interface XDocumentHandler of the importer component I of the target component to forward the data directly. The advantage may be higher efficiency due to skipping the printing and reparsing process steps.

t2.1: transferring the target data into the reader component

Here, the target data file in the target data format can be accessed using direct file access on the second computer system.

PR2: Protocol Reader 2

The protocol reader PR2 on the second computer system reads the target data file created by the process described above from an external representation into the software system. Specialized readers for different protocols may exist, i.e. for FILE, HTTP or FTP.

c2.1: reading the target data

The parser Pa2 reads the data of the target file from the protocol reader PR2 using the interface XInputStream (or similar).

Pa2 (Parser 2): parses the target file

The parser Pa2 parses the target data stream of the target file. For example, this can be an XML parser, which disassembles the target data stream into XML tokens and contents. The XInputStream offered by PR2 and mentioned in c2.1 is used to access the data. Alternatively, the input data could come directly from the printer Pr of the first computer system. In this case, Pr would provide an interface XInputStream (or similar). However, direct (unbuffered) polling data from remote computer systems may not be extremely efficient.

c2.2: forwarding parsed data

The parser Pa2 uses a data sink interface, for example the SAX interface XDocumentHandler, to forward the parsed data to the importer I of the target component TC. The main point is that this interface is generic and not dependent on the concrete document type. Preferably, the same interface is used as in the chain of filter components A to Z.

I (Importer): builds the internal representation of the target data

The importer of the target component TC receives the target data by an interface XDocumentHandler (or similar) and builds the internal representation of the target data, for example a target document. The importer I may be part of the target component TC. In the present example it is separated to give a clearer picture of the process.

c2.3: building the internal representation of the target data

The importer I calls native functions of the target component TC to build the internal presentation of the target data within the target component TC. Here, unspecified interfaces, belonging to the target component TC can be used.

TC (Target Component): for example viewer or editor

The target component TC which is used to process the target data can be, for example, a viewer, an editor or any other component which processes data. The target component TC has its own set of interfaces or other methods of receiving the target data. The target component TC may include the importer I, the parser Pa2 or even the protocol reader PR2. Preexistent software can be used on the second computer system, if the target component TC actually contains all of these components I, Pa2 and PR2.

c2.4: displaying the target data

Optionally, the target component TC may use a display component to present the document in a rendered (or any other) form to the user of the second computer system.

User Terminal:

The user terminal can be any output device of the second computer system including, for example, the display or the loudspeaker of a computer or mobile phone.

Alternatively to the depicted usage in two computer systems, this invention can be used on a single computer system too, as it is shown in Fig. 14. In this case, the target component TC and the importer component I are on the same computer system as is the filter chain A to Z. The components and the processes presented in Fig. 14 are identical with the corresponding components or processes of Fig. 13. Therefore, reference is made to the above explanations.

In the following, the process of building the chain of filter components A to Z is described along Fig. 15.

CB: Chain Builder

The chain builder CB gets one or more data format types specified, for example, by a character string identifier like a MIME type or by a DTD identifier from the importer I of the target component TC. Herein, importer I and target component TC may be one single component. Additionally, the chain builder CB sets up a protocol reader PR to get the type of the original source data, specified by the same kind of identifier. Some protocols like HTTP provide a MIME type directly, for other protocols format detection components may be needed which read header information from the original source data file D1 itself. Using the list of filter components, which is available from the registry via the service manager SM, the chain builder CB finds the shortest possible chain of filter components which is suitable for the conversion of data from the first to the second data format.

FR: Filter Registry

The filter registry FR consists of the name of the filter component, the source data format and the target data format specified, for example, by a MIME type or a DTD identifier, of the filter component. The entries may contain quality indicators (priorities).

I: Importer

The importer I of the target component TC provides a list of all possible file formats, again specified, for example, by a MIME type or a DTD identifier. Quality indicators (priority) may be assigned to the data formats.

CF: Chain Factory

The chain factory CF takes a descriptive representation of the filter chain, for example, a list of components specified by their service or implementation name. Based on this description the components are created using the service manager SM. The first component of the chain, the protocol reader PR, is already existent at this time. Finally, the chain factory CF creates the chain by connecting the newly created components together. This can be done by setting the SAX interface XDocumentHandler of each successor filter component to the predecessor's filter component.

CC: Chain Connection

The chain connections CC are built by an interface which represents the basic structure of hierarchical documents. The preferred interface for these connections is the SAX interface XdocumentHandler. In the following Table 1 the methods of the SAX interface XDocumentHandler are described:

Table 1:

| characters | |
|---|---|
| Syntax<br>Description<br>Arguments | void characters([] string aChars);<br>Receive notification of character data.<br>string aChars : |
| endDocument | |
| Syntax<br>Description | void endDocument();<br>Receive notification of the end of a document. |

Table 1:   (continued)

| endElement | |
|---|---|
| Syntax | void endElement([] string aName ); |
| Description | Receive notification of the end of an element. |
| Arguments | string aName : |

| ignorableWhitespace | |
|---|---|
| Syntax | void ignorableWhitespace([] string aWhitespaces); |
| Description | Receive notification of ignorable whitespace in element content. |
| Arguments | string aWhitespaces : |

| processingInstruction | |
|---|---|
| Syntax | void processingInstruction([] string aTarget,[] string aData ); |
| Description | Receive notification of a processing instruction. |
| Arguments | string aTarget: string aData : |

| setDocumentLocator | |
|---|---|
| Syntax | void setDocumentLocator([] XLocator xLocator ); |
| Description | Receive an object for locating the origin of SAX document events. |
| Arguments | XLocator xLocator : |

| startDocument | |
|---|---|
| Syntax | void startDocument(); |
| Description | Receive notification of the beginning of a document. |

| startElement | |
|---|---|
| Syntax | void startElement([] string aName,[] XAttributeList xAttribs ); |
| Description | Receive notification of the beginning of an element . |
| Arguments | string aName : XAttributeList xAttribs: |

In Fig. 16 examples for converting documents from one data format into another data format are shown. In Fig. 16a a document in the WinWord format is requested in the StarWriter format. This converting may be achieved, for example, by employing one partial adapter for converting a WinWord document into a XML format and another partial adapter for converting the document in the XML format into the StarWriter format.

For most kind of documents there is one intermediate data format established. In the example in Fig. 16b the RTF format (Rich Text Format) is used as an intermediate data format to convert a text document in StarWriter format into a document in the PDF (Portable Document Format) format. For the conversion of a document from the StarWriter format into the PDF format three partial adapter may be employed. The first partial adapter may convert the StarWriter document into a XML format, the second partial adapter may convert the document in the XML format into the intermediate data format RTF and the third partial adapter may convert the RTF document into the PDF format. A similar situation is described in Fig. 16c. In this example, a XML format and the CSV (Comma Separated Value) format are employed as intermediate data formats in order to achieve proper converting from the StarBase format into the EDIFACT (Electronical Data Interchange) format.

In Fig. 16d it is shown that the first data format and the second data format do not need to be comparable. For example, if the converting of the document is requested only for viewing and not for editing the document, a conversion form the Excel format into the HTML format may be convenient. Such a conversion may only be possible in one direction.

It will be understood that the present invention is not limited to the examples given and explained in detail.

In the following, further embodiments for dynamic conversion of data will be described.

# EP 1 126 681 A2

1) A computer-based method comprising:

receiving a request for data;

retrieving, from a filter registry in response to said request, a rule set for a plurality of partial filter adapters wherein, upon being chained together said plurality of partial filter adapters converts source data to said data; and

building a filter using said rule set wherein said filter comprises a chain of said plurality of partial filter adapters wherein each partial filter adapter includes a generic format independent interface and said generic format independent interface is used in passing data from one partial filter adapter in said plurality of partial filter adapters to another partial filter adapter in said plurality of partial filter adapters.

2) A method according to 1) wherein said filter renders the source data in a different way to produce said data.

3) A method according to 1) wherein said filter converts said source data from a first format to a second format.

4) A method according to 3) wherein a device from which said request for data was issued supports at least two data formats, and said method further comprises:
selecting said second data format from said at least two data formats.

5) A method according to 4) wherein said selecting said second data format further comprises:
using a selection scheme including at least one of the following criterion: storage space required by said data in each of said two data formats supported by said process; conversion time for said data from said first data format into each of said data formats supported by said process; and a quality for each of said two data formats.

6) The method of 1) further comprising converting said source data to said data using said filter.

7) The method of 1) wherein said generic format independent interface is a Simple API for XML interface.

8) The method of 1) wherein said partial filter adapters comprise a general partial filter adapter having functionality determined by a parameter.

9) The method of 8) wherein said general partial filter adapter comprises an eXtensible Style sheet Language Transformation processor, and said parameter comprises an eXtensible Style sheet Language Transformation script.

10) A computer program product comprising a medium configured to store or transport computer readable code for a method comprising:

receiving a request for data;

retrieving, from a filter registry in response to said request, a rule set for a plurality of partial filter adapters wherein, upon being chained together said plurality of partial filter adapters converts source data to said data; and

building a filter using said rule set wherein said filter comprises a chain of said plurality of partial filter adapters wherein each partial filter adapter includes a generic format independent interface and said generic format independent interface is used in passing data from one partial filter adapter in said plurality of partial filter adapters to another partial filter adapter in said plurality of partial filter adapters.

11) A computer program product as in 10) wherein said filter renders the source data in a different way to produce said data.

12) A computer program product as in 10) wherein said filter converts said source data from a first format to a second format.

13) A computer-based method comprising:

receiving a request for data having a first format from a process requiring data in a second format;

retrieving, from a filter registry in response to said request, a rule set for a plurality of partial filter adapters wherein, upon being chained together said plurality of partial filter adapters converts said data from said first format to said second format; and

building a filter using said rule set wherein said filter comprises a chain of said plurality of partial filter adapters wherein each partial filter adapter includes a generic format independent interface and said generic format independent interface is used in passing data from one partial filter adapter in said plurality of partial filter adapters to another partial filter adapter in said plurality of partial filter adapters.

14) A method according to 13) further comprising selecting said second data format from at least two data formats supported by said process.

15) A method according to 14), wherein said selecting said second data format further comprises:
using a selection scheme including at least one of the following criterion: storage space required by said data in each of said two data formats supported by said process; conversion time for said data from said first data format into each of said data formats supported by said process; and a quality for each of said two data formats.

16) The method of 13) further comprising converting said data in said first format to data in said second format using said filter.

17) The method of 13) wherein said generic format independent interface is a Simple API for XML interface

18) The method of 13) wherein said partial filter adapters comprise a general partial filter adapter having functionality determined by a parameter.

19) The method of 18) wherein said general partial filter adapter comprises an eXtensible Style sheet Language Transformation processor, and said parameter comprises an eXtensible Style sheet Language Transformation script.

20) A structure comprising:

a partial filter adapter library;

a partial filter adapter registry wherein said partial filter adapter registry includes a rule set; and

a filter server coupled to said partial filter adapter registry and to said partial filter adapter library, wherein said filter server uses said rule set to build a filter using a plurality of partial filter adapters from said partial filter adapter library.

21) A structure comprising:

a first partial filter adapter having a generic format independent interface; and

a second partial filter adapter having said generic format independent interface coupled to said first partial filter adapter.

22) The structure of 21) wherein said generic format independent interface is a simple API for XML interface.

23) The structure of 22) wherein said simple API for XML interface is a XML document handler interface.

24) A method for rendering accessible data stored in a first data format in a first computer system for a second computer system supporting a second data format, said method comprising:

receiving in said first computer system a request from said second computer system for said data;

receiving in said first computer system information about at least one data format supported by said second computer system,

selecting said second data format, if said first computer system was informed about more than one data format supported by said second computer system;

comparing in said first computer system said first data format with said second data format,

generating a filter for converting said data from said first data format into said second data format, if said first data format is incompatible with said second data format, by combining a first partial filter adapter to a second partial adapter for the transformation of data; and

converting said data in said first computer system using said filter from said first data format into said second data format.

25) A method for generating an adapter for converting data from a first data format to a second data format, comprising the steps of:

a) selecting from an adapter library a first partial adapter for converting said data from said first data format to an intermediate data format,

b) selecting from said adapter library a second partial adapter for converting said data from said intermediate data format to said second data format, and

c) combining said first partial adapter and said second partial adapter to generate said adapter for converting said data from said first data format to said second data format.

26) A method according to 25), wherein said adapter is generated in response to a command of a software program supporting said second data format to access said data being stored in said first data format.

27) A method according to one of 25) or 26), comprising the further step of selecting said second data format from at least two data formats supported by said software program.

28) A method according to one of 25) - 27), wherein said selection of said second data format is based on a selection scheme using at least one of the following criteria: storage space required by said data in each of said data formats supported by said software program, conversion time for said data from said first data format into each of said data formats supported by said software program, quality of said conversion.

29) A method of using an adapter generated according to any of 25) - 28) for converting data from a first data format into a second data format.

30) A method for rendering accessible data stored in a first data format in a first computer system to a second computer system supporting a second data format, comprising the steps of:

a) receiving in said first computer system a request from said second computer system for said data,

b) receiving in said first computer system information about at least one data format supported by said second computer system,

c) selecting said second data format, if in step b) said first computer system was informed about more than one data format supported by said second computer system,

d) comparing in said first computer system said first data format with said second data format,

e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,

f) converting said data in said first computer system by means of said generated adapter from said first data format into said second data format,

g) transmitting said converted data from said first computer system to said second computer system.

31) A method for rendering accessible data stored in a first data format in a first computer system to a second computer system supporting a second data format, comprising the steps of:

a) receiving in said first computer system a request from said second computer system for said data,

b) informing said second computer system about said first data format of said requested data,

c) selecting said second data format, if said second computer system supports more than one data format,

d) comparing said first data format with said second data format,

e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,

f) converting said data by means of said generated adapter from said first data format into said second data format,

g) accessing said converted data by said second computer system.

32) A method for rendering accessible data stored in a first data format in a first computer system to a second computer system supporting a second data format, comprising the steps of:

a) receiving in said first computer system a request from said second computer system for said data,

b) transmitting said requested data from said first computer system to said second computer system,

c) so that said second computer system is able to select said second data format, if it supports more than one data format,

d) wherein said second computer system is able to compare said first data format with said second data format,

e) wherein said second computer system is able to generate an adapter for converting said data from said first data format into said second data format, if said first data format is incompatible with said second data format, by operatively connecting a first partial adapter for the transformation of data from said first data format to an intermediate data format and a second partial adapter for the transformation of data from said intermediate data format to said second data format,

f) wherein said second computer system is able to convert said data by means of said generated adapter from said first data format into said second data format.

33) A method for using a second computer system supporting a second data format for accessing data being stored in a first data format on a first computer system, comprising the following steps:

a) requesting from said first computer system said data,

b) informing said first computer system about at least one data format supported by said second computer system,

c) so that said first computer system is able to select said second data format, if it was informed about more than one data format supported by said second computer system,

d) wherein said first computer system is able to compare said first data format with said second data format,

e) wherein said first computer system is able to generate an adapter for converting said data from said first data format into said second data format, if said first data format is incompatible with said second data format, by operatively connecting a first partial adapter for the transformation of data from said first data format to an intermediate data format and a second partial adapter for the transformation of data from said intermediate data format to said second data format,

f) wherein said first computer system is able to convert said data by means of said generated adapter from said first data format into said second data format,

g) receiving said converted data from said first computer system in said second computer system.

34) A method for using a second computer system supporting a second data format for accessing data being stored in a first data format on a first computer system, comprising the following steps:

a) requesting from said first computer system said data,

b) receiving said requested data from said first computer system in said second computer system,

c) selecting said second data format, if said second computer system supports more than one data format,

d) comparing in said second computer system said first data format with said second data format,

e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,

f) converting said data in said second computer system by means of said generated adapter from said first data format into said second data format.

35) A method according to any of 30), 31) or 33), wherein in step b) said information about said at least one data format supported by said second computer system is provided indirectly by providing information about a software module on said second computer system destined to process said data.

36) A method according to any of 30) - 35), wherein said second data format is selected according to a selection scheme using at least one of the following criteria: storage space required by said data in each of said data formats supported by said second computer system, transmission time from said first computer system to said second computer system for said data in each of said data formats supported by said second computer system, conversion time for said data from said first data format into each of said data formats supported by said second computer system.

37) A method according to any of 25) - 36), wherein said intermediate data format is the format of an extensible markup language (XML).

38) A method according to any of 25) - 37), wherein at least one of said partial adapters is bi-directional.

39) A method according to any of 25) - 38), wherein at least one further partial adapter is used for converting said data from said intermediate data format into a further intermediate data format, wherein said first partial adapter is able to convert said data from said first data format into said intermediate data format and said second partial adapter is able to convert said data from said further intermediate data format into said second data format.

40) A computer program product for carrying out a method according to any of 25) - 39) on a computer system.

41) A data carrier for storing a computer program product for carrying out a method according to any of 25) - 39) on a computer system.

42) A method for using a computer system for carrying out a method according to any of 25) - 39).

43) A stored data structure, comprising a set of partial adapters, wherein each partial adapter of said set of partial adapters is capable of converting data between a certain data format and an intermediate data format.

44) A stored data structure according to 43), wherein each partial adapter being capable of converting data between a first data format and said intermediate data format may be combined with each other partial adapter being capable of converting data between a second data format and said intermediate data format in order to produce an adapter being capable of converting data between said first data format and said second data format.

**Abstract of CHAPTER E**

A filter server receives a request for data, and in responses retrieves a rule set for a plurality of partial filter adapters from a filter registry. A filter is built using said rule set. The filter includes a chain of said plurality of partial filter adapters. Each partial filter adapter includes a generic format independent interface. The generic format independent interface is used in passing data from one partial filter adapter in said plurality of partial filter adapters to another partial filter adapter in said plurality of partial filter adapters.
While the present invention has been explained in connection with certain embodiments thereof, other embodiments will be apparent to those skilled in the art from consideration of the specification and practice of the invention disclosed therein. It is intended that the specification and examples be considered as exemplary only, without limiting the spirit and scope of the invention.

**Claims**

1. A network portal system comprising:

   a web-top manager, wherein said web-top manager is configured to receive a content request from a user device wherein said content request includes a content provider identifier; and

   a universal content broker system coupled to said web-top manager, said universal content broker system comprising:

   a plurality of content providers, wherein each content provider in said plurality of content providers is associated with a different content provider identifier, and each content provider accesses content having a different raw data format;

   a universal content broker coupled to said web-top manager and to said plurality of content providers wherein upon said receipt of said content request from said web-top manager, said universal content broker passes said request to a content provider in said plurality of content providers that is associated with said content provider identifier.

2. The system of Claim 1 wherein said web-top manager further comprises a plurality of remote applications.

3. The system of Claim 1 wherein said web-top manager further comprises:

   a web server;

   a main servlet executing on said web server, wherein said main servlet receives a user device content request; and

   a presentation and logic system coupled to said main servlet, and configured to receive raw data content in a plurality of different raw data formats from said universal content broker system, wherein said presentation and logic system converts raw data content irrespective of said raw data format, based upon characteristics of said user device, into a page displayable on said user device.

4. The system of Claim 3 wherein said presentation and logic system includes a plurality of templates.

5. The system of Claim 4 wherein said plurality of templates includes at least one of:

   a first set of template sets wherein said first set of template sets is for a first type of user device page format; and

   a second set of template sets wherein said second set of template sets is for a second type of user device page format.

6. The system of Claim 5 wherein said first and/or second set of template sets includes a set of content format template sets wherein each content format template set is for a different one of said plurality of different raw data formats.

7. The system of Claim 6 wherein said set of content format templates comprise a set of device capability specific templates.

8. The system of Claim 3 wherein said presentation and logic system comprises a plurality of provider objects wherein each provider object is associated with a different content provider identifier.

9. The system of Claim 8 wherein said presentation and logic system comprises a plurality of adapter objects coupled to said plurality of provider objects wherein each adapter object is associated with a different content provider identifier, and further wherein said adapter object receives content from said content provider associated with said different content provider identifier and provides said content to the provider object associated with said different content provider identifier.

10. The system of Claim 3 wherein said presentation and logic system comprises a plurality of adapter objects wherein each adapter object is associated with a different content provider identifier, and further wherein said adapter object receives content from said content provider associated with said different content provider identifier and provides said content to a provider object associated with said different content provider identifier.

11. The system of Claim 3 wherein said presentation and logic system comprises:
    a profiling service.

12. The system of Claim 11 wherein said presentation and logic system comprises:
    a profiling service configuration file coupled to said profiling service.

13. The system of Claim 12 wherein said profiling service configuration file includes a decision tree wherein said decision tree performs actions.

14. The system of Claim 13 wherein said decision tree is a XML decision tree.

15. The system of Claim 13 wherein said actions include at least one of:

    an action based upon request parameters;

    an action based upon request header parameters;

    an action based upon user device properties; and

    an action based upon resource properties.

16. The system of Claim 11 or 13 wherein said presentation and logic system comprises a plurality of screen templates.

17. The system of Claim 16 wherein one screen template in said plurality of screen templates is one of:

    a default screen template for a HTML page;

    a default screen template for a mobile telephone; and

    a default screen template for a personal digital assistant.

18. The system of Claim 17 wherein one screen template in a plurality of said screen templates comprises a default screen template.

19. The system of Claim 18 wherein said default screen template includes a header region having at least one place holder and a body region having at least one place holder.

20. The system of Claim 19 wherein said action of said decision tree determines a component that is used for said at least one placeholder in said body region.

21. The system of Claim 20 wherein said component provides information that is taken from said raw data content.

22. The system of Claim 1 wherein said universal content broker system further comprises:
a registry of content providers coupled to said universal content broker wherein said universal content broker selects said content provider from said registry based upon said content provider identifier.

23. The system of Claim 1, wherein said universal content broker system includes at least one of:

at least one interface adapted to associate property values with content;

at least one interface adapted to set a property value of content;

at least one interface adapted to read a property value of content;

an interface adapted to notify registered client systems when content of interest to said registered client systems is processed by said universal content broker system; and

an interface adapted to notify registered client systems when new content is created by said universal content broker system.

24. The system of Claim 1 wherein said universal content broker system further comprises a hierarchy content provider.

25. The system of Claim 24 wherein said hierarchy content provider generates a virtual hierarchy of content of said universal content broker system.

26. The system of Claim 1 wherein said universal content broker system further comprises a configuration server.

27. The system of Claim 26 further comprising a configuration proxy coupled to said configuration server.

28. The system of Claim 27 wherein said configuration server further comprises a first DOM tree.

29. The system of Claim 28 wherein said DOM tree includes user profiles and/or application profiles.

30. The system of Claim 27 wherein said configuration proxy further comprises a second DOM tree wherein said second DOM tree includes a subset of data in said first DOM tree.

31. The system of Claim 1 further comprising a client system coupled to said network portal system.

32. The system of Claim 31 wherein said client system includes a client universal content broker system.

33. The system of Claim 32 wherein said client universal content broker system includes a synchronization component for synchronizing content of said client universal content broker system with content of said universal content broker system.

34. A network portal system comprising:

a web-top manager, wherein said web-top manager is configured to receive a content request from a user device wherein said content request includes an identifier for content having a raw data format wherein said web-top manager further comprises:

a web server;

a main servlet executing on said web server, wherein said main servlet receives a user device content request; and

a presentation and logic system coupled to said main servlet, and configured to receive raw data content in a plurality of different raw data formats from said universal content broker system, wherein said presentation and logic system converts raw data content irrespective of said raw data format, based upon characteristics of said user device, into a page displayable on said user device; and

a universal content broker system coupled to said web-top manager, said universal content broker system comprising:

a plurality of content providers, wherein each content provider in said plurality of content providers is associated with a different content provider identifier, and each content provider accesses content having a different raw data format;

a hierarchy content provider; and

a universal content broker coupled to said web-top manager and to said plurality of content providers wherein upon said receipt of said content request from said web-top manager, said universal content broker passes said request to a content provider in said plurality of content providers that is associated with said content provider identifier.

**35.** The system of Claim 34 wherein said universal content broker system further comprises a configuration server.

**36.** The system of Claim 34 wherein said web-top manager further comprises:

a plurality of portlets; and

a presentation manager coupled to said plurality of portlets upon receipt of said user request, said presentation manager send said user request to one of said plurality of portlets.

**37.** A system comprising:

a web server;

a main servlet executing on said web server, wherein said main servlet receives a user device content request; and

a presentation and logic system coupled to said main servlet, and configured to receive raw data content in a plurality of different raw data formats, wherein said presentation and logic system converts raw data content irrespective of said raw data format, based upon characteristics of said user device, into a page displayable on said user device.

**38.** The system of Claim 37 wherein said presentation and logic system includes a plurality of templates.

**39.** The system of Claim 38 wherein said plurality of templates includes at least one of:

a first set of template sets wherein said first set of template sets is for a first type of user device page format; and

a second set of template sets wherein said second set of template sets is for a second type of user device page format.

**40.** The system of Claim 39 wherein said first and/or second set of template sets includes a set of content format template sets wherein each content format template set is for a different one of said plurality of different raw data formats.

41. The system of Claim 40 wherein said set of content format templates comprise a set of device capability specific templates.

42. The system of Claim 37 wherein said presentation and logic system comprises a plurality of provider objects wherein each provider object is associated with a different content provider identifier.

43. The system of Claim 42 wherein said presentation and logic system comprises a plurality of adapter objects coupled to said plurality of provider objects wherein each adapter object is associated with a different content provider identifier, and further wherein said adapter object receives content associated with said different content provider identifier and provides said content to the provider object associated with said different content provider identifier.

44. The system of Claim 37 wherein said presentation and logic system comprises a plurality of adapter objects wherein each adapter object is associated with a different content provider identifier, and further wherein said adapter object receives content associated with said different content provider identifier and provides said content to a provider object associated with said different content provider identifier.

45. The system of Claim 37 wherein said presentation and logic system comprises:
        a profiling service.

46. The system of Claim 45 wherein said presentation and logic system comprises:
        a profiling service configuration file coupled to said profiling service.

47. The system of Claim 46 wherein said profiling service configuration file includes a decision tree wherein said decision tree performs actions.

48. The system of Claim 47 wherein said decision tree is a XML decision tree.

49. The system of Claim 47 wherein said actions include at least one of:

        an action based upon request parameters;

        an action based upon request header parameters;

        an action based upon user device properties; and

        an action based upon resource properties.

50. The system of Claim 49 wherein one screen template in said plurality of screen templates is one of:

        a default screen template for a HTML page;

        a default screen template for a mobile telephone; and

        a default screen template for a personal device assistant.

51. The system of Claim 45 or 47 wherein said presentation and logic system comprises a plurality of screen templates.

52. The system of Claim 51 wherein one screen template in a plurality of said screen templates comprises a default screen template.

53. The system of Claim 52 wherein said default screen template includes a header region having at least one place holder and a body region having at least one place holder.

54. The system of Claim 53 wherein said action of said decision tree determines a component that is used for said at least one placeholder in said body region.

55. The system of Claim 54 wherein said component provides information that is taken from said raw data content.

**56.** A system comprising:

a plurality of content providers, wherein each content provider in said plurality of content providers is associated with a different content provider identifier, and each content provider accesses content having a different raw data format;

a universal content broker coupled to said plurality of content providers wherein upon said receipt of a content request including a content provider identifier, said universal content broker passes said request to a content provider in said plurality of content providers that is associated with said content provider identifier.

**57.** The system of Claim 56 further comprising:
a registry of content providers coupled to said universal content broker wherein said universal content broker selects said content provider from said registry based upon said content provider identifier.

**58.** The system of Claim 56 further comprising at least one interface adapted to associate property values with content.

**59.** The system of Claim 56, further comprising at least one interface adapted to set and/or read a property value of content.

**60.** The system of Claim 56, further comprising an interface adapted to notify registered client systems when content of interest to said registered client systems is created and/or processed by said universal content broker system.

**61.** The system of Claim 56 further comprising a hierarchy content provider.

**62.** The system of Claim 61 wherein said hierarchy content provider generates a virtual hierarchy of content of said universal content broker system.

**63.** The system of Claim 56 further comprising a configuration server.

**64.** The system of Claim 63 further comprising a configuration proxy coupled to said configuration server.

**65.** The system of Claim 64 wherein said configuration server further comprises a first DOM tree.

**66.** The system of Claim 65 wherein said DOM tree includes user profiles and/or application profiles.

**67.** The system of Claim 64 wherein said configuration proxy further comprises a second DOM tree wherein said second DOM tree includes a subset of data in said first DOM tree.

**68.** A computer program product comprising computer program code for a universal content provider service comprising:

a component interface; and

a content provider interface.

**69.** A computer program product of Claim 68 further comprising:
a content identifier factory interface.

**70.** A computer program product comprising computer program code for a universal content broker service comprising:

a component interface; and

a content provider manager interface.

**71.** The computer program product of Claim 70 further comprising:
a content provider interface.

**72.** A computer program product of Claim 70 further comprising:

a content identifier factory interface.

73. A computer program product comprising computer program code for a configuration and logic service comprising:

a profiling service; and

a plurality of screen templates.

74. The computer program product of Claim 73 further comprising a decision tree.

75. A method for providing a plurality of content having different types and different protocols to a single user interface comprising:

receiving a content request from a client system wherein said content request comprises a content identifier;

selecting a content provider associated with said content identifier from a plurality of content providers wherein each of said content providers provides access to content having a different raw data format;

retrieving said requested content from said selected content provider; and

using said requested content to generate a page displayable on said client system.

76. The method of Claim 75 wherein said selecting a content provider comprises:
searching a registry including said plurality of content providers.

77. A network portal system, which serves for linking, via a communication network (2303), a plurality of provider systems (2301A, 2301B) with a plurality of client systems (2302A, 2302B), each said provider system (2301A, 2301B) offering content according to a predetermined communication scheme of a plurality of different communication schemes, said content being information which is transmittable over said network (2303), each said client system (2302A, 2302B) supporting a predetermined communication scheme of said plurality of different communication schemes, said network portal system comprising:

a) webtop means (2411) for receiving a content request from a client system (2302A, 2302B), said request comprising a content indicator being indicative of the content, and an indicator of the requesting client system (2302A, 2302B), said client system indicator specifying the communication scheme supported by said client system (2302A, 2302B),

b) universal content broker means (2413) for selecting a provider system (2301A, 2301B) which is able to provide said requested content,

c) for accessing said selected provider system (2301A, 2301B), and

d) for retrieving said requested content from said accessed provider system (2301A, 23018),

e) said webtop means (2411) being further adapted for rendering the retrieved content to said requesting client system (2302A, 2302B) according to the communication scheme of said requesting client system (2302A, 2302B).

78. The system according to claim 77, whereby said universal content broker means (2413) are further adapted for selecting said provider system (2301A, 2301B) by searching a register (2415) comprising accessible provider systems (2301A, 2301B).

79. The system according to claim 78, whereby said universal content broker means (2413) are further adapted for maintaining said register (2415).

80. The system according to the preceding claim, whereby said universal content broker means (2413) are further adapted for transmitting content to provider systems (2302A, 2302B).

81. The system according to one of the claims 77-80, further comprising application program means (2414A, 2414B, 2414C) for rendering application program services to client systems (2302A, 2302B).

82. The system according to one of the claims 77-81, whereby said universal content broker means (2413) have access to local storage means (2416) for storing content therein.

83. The system according to one of the claims 77-82, whereby said universal content broker means (2413) are adapted for associating property values to content and storing said property values in storage means (2417).

84. The system according to the preceding claim, whereby said universal content broker means (2413) are further adapted for setting, and/ or reading said property values.

85. The system according to the preceding claim, whereby said property values are used to render client specific representation of content.

86. The system according to one of the claims 77-85, said universal content broker means (2413) are further adapted for notifying predetermined client systems when predetermined content is created and/or processed by said universal content broker means (2413).

87. The system according to one of the claims 77-86, further comprising means (2418A, 2418B, 2418C) for converting content compliant with a predetermined communication scheme into content compliant with another communication scheme.

88. The system according to one of the claims 77-87, wherein said webtop means (2411) are further adapted for rendering content over a secure network channel to a client system (2302A, 2302B).

89. The system according to one of the claims 77-88, wherein said webtop means (2411) are further adapted to render content to an individual client system (2302A, 2302B) according to predetermined individual access rights.

90. The system according to one of the claims 77-89, wherein said webtop means (2411) have access to a plurality of templates, each said template defining the structure of said requested content according to a particular client system (2302A, 2302B).

91. The system according to one of the claims 77-90, wherein said webtop means (2411) are further adapted for rendering content according to predetermined stylesheets, each said stylesheet defining visual presentation of said requested content.

92. The system according to one of the claims 77-91, wherein said content is of the type of: file systems, databases, mails, news, mail messages, news messages.

93. The system according to one of the claims 77-92, wherein said content can be hierarchically ordered according to a parent-, peer-, child-relationship, respectively.

94. The system according to one of the claims 77-93, wherein said content is associated with predetermined tasks, whereby each task is indicative of content properties or commands admitted to operate on said content.

95. The system according to one of the claims 77-94, further comprising a network server (2312) for connecting to said network (2303).

96. A method for linking, via a communication network (2303), a plurality of provider systems (2301A, 2301B) with a plurality of client systems (2302A, 2302B), each said provider system (2301A, 2301B) offering content according to a predetermined communication scheme of a plurality of different communication schemes, said content being information which is transmittable over said network (2303), each said client system (2302A, 2302B) supporting a predetermined communication scheme of said plurality of different communication schemes, said method comprising the following steps:

> a) receiving (2810) a content request from a client system (2302A, 2302B), said request comprising a content indicator being indicative of the content, and an indicator of the requesting client system (2302A, 2302B), said client system indicator specifying the communication scheme supported by said client system (2302A, 2302B),

b) selecting (2820) a provider system (2301A, 2301B) which is able to provide said requested content,

c) accessing (2830) said selected provider system (2301A, 23018),

d) retrieving (2840) said requested content from said accessed provider system (2301A, 2301B),

e) rendering (2850) the retrieved content to said requesting client system (2302A, 2302B) according to the communication scheme of said requesting client system (2302A, 2302B).

97. The method according to the preceding claim, whereby said provider system (2413) is selected by searching a register comprising accessible provider systems (2301A, 2301B).

98. The method according to the preceding claim, further comprising a step of transmitting content to provider systems (2302A, 2302B).

99. The method according to one of the claims 96-98, further comprising rendering application program services to client systems (2302A, 2302B).

100. The method according to one of the claims 96-99, further comprising accessing to local storage means for storing content therein.

101. The method according to one of the claims 96-100, further comprising associating property values to content and storing said property values.

102. The method according to the preceding method claim, further comprising setting, and/ or reading said property values.

103. The method according to the preceding method claim, whereby said property values are used to render client specific representation of content.

104. The method according to one of the claims 96-103, further comprising notifying predetermined client systems (2302A, 2302B) when predetermined content is created and/or processed.

105. The method according to one of the claims 96-104, whereby content compliant with a predetermined communication scheme is converted into content compliant with another communication scheme.

106. The method according to one of the claims 96-105, whereby content is rendered over a secure network channel to a client system (2302A, 2302B).

107. The method according to one of the claims 96-106, whereby content is rendered to an individual client system (2302A, 2302B) according to predetermined individual access rights.

108. The method according to one of the claims 96-107, whereby a plurality of templates is accessed, each said template defining the structure of said requested content according to a particular client system (2302A, 23028).

109. The method according to one of the claims 96-108, whereby content is rendered according to predetermined stylesheets, each said stylesheet defining visual presentation of said requested content.

110. The method according to one of the claims 96-109, whereby said content is of the type of: file systems, databases, mails, news, mail messages, news messages.

111. The method according to one of the claims 96-110, whereby said content can be hierarchically ordered according to a parent-, peer-, child-relationship, respectively.

112. The method according to one of the claims 96-111, whereby said content is associated with predetermined tasks, whereby each task is indicative of content properties or commands admitted to operate on said content.

**113.** The method according to one of the claims 96-112, whereby an hierarchical view of content can be produced, which view may be different to the physical structure on the content.

**114.** A computer program for performing the method according to one of the claims 96-113.

**115.** Data carrier means containing computer software for performing the method according to one of the claims 96-113.

Chapter A

102B

Mobile
Device
Network

104

102A

Gateway

105

Browser

102C

103

Enterprise
Network

Browser

102D

102E

Browser

102F

Content
provider

101C

PDA

Content
provider

101A

106

UCB System

112

WebTop

111

UCB

Internet

Content
Provider

101B

Network Portal System

113

100

Fig. 1A

Chapter A

121 — Mail

Bookmark

My
Documents

Int. Page

Ext. Page

News Ticket

120

121

122

150

102A

Fig. 1B

IMAP
← 20200A

Account

INBOX

Message 1  Message 2  Message 3

Fig. 2A
(Prior Art)

HTTP
← 20200B

http://www.sun.com

http://freasmeat.net

http://cnn.com/news

Fig. 2B
(Prior Art)

FILE
← 20200C

Account
~demo

~demo/documents   ~demo/drafts

whitepaper.sdw   Presentation.ppt

Fig. 2C
(Prior Art)

Chapter A

Hierarchy Service

210

230 — User Hierarchy

231 — Email & News

232 — My Documents

233 — My Bookmarks

HTTP
http://www.sun.com
http://freasmeat.net
http://cnn.com/news

FILE
Account ~demo
~demo/drafts
~demo/documents
whitepaper.sdw
Presentation.ppt

IMAP
Account
INBOX
Message 1
Message 2
Message 3

Fig. 2D

Fig. 3A

Fig. 3B

**Fig. 4**

Chapter A

**Fig. 5**

301 — Client Tier
304 — Browser
305
Javascript  HTML
Java VM

Calc    Writer

Presentation    Draw

Applications

102i

302 — Middle Tier
320
Web Server
322
Desktop Servlet
501 — User Configuration
502
Explorer Adapter
503 — Document Adapter
Provider
523
504 — Mail Account Adapter
Remote Applications
Calc    Writer
310
505
Folder Adapter
Presentation    Draw
515
WebTop Manager 111

303 — Information System Tier
UCB system -112
336
Configuration Server
335
Hierarchy UCP
332
IMAP UCP 532
IMAP Server 542
Databases
337    331
HTTP UCP 533
HTTP 543
Universal Content Broker
File UCP 534
Local File System 544
Universal Content Providers
UCB Content
113

100

EP 1 126 681 A2

Chapter A

EP 1 126 681 A2

408

HTTP Request

322 — DesktopServlet — — — — ▶ Device to Provider Configuration 602

603

HTML Provider Factory

WML Provider Factory 604

HTML Templates

Mail Provider 605

WML Templates

Mail Provider 606

607

608

Fig. 6

EP 1 126 681 A2

Chapter A

Fig. 7

701

Template Engine

HTTP Response

Processing

HTML Template

607

Data

Mail Provider
Mail Provider
Mail Provider

HTTP Request

605

User Configuration ——501

Explorer Adapter ——502

Document Adapter 503

Mail Account Adapter 504

Data

From IMAP Server

EP 1 126 681 A2

Fig. 8

Fig. 9

EP 1 126 681 A2

1000

1010

| StarPortal | Bookmarks | New Document | ClipBoard | My Documents | Logout |

1011　1012　1013

1020

Current Folder ........ Upload | Properties | Paste | New Folder ← 1021

Start > My Documents > **data**

Folders ← 1022

Folder Commands

Important　Install　Test　Tmp　Detail View

1023

Files

File Commands

Funny.bmp　Test.txt　Graf.sda　Index.htm　Detail View

Chapter A

Fig. 10

```
<%-- Default html-template --%>                    Chapter A
<%@ taglib uri="/WEB-INF/config/taglib.tld" prefix="starportal" %>
<%@ page import = "com.sun.star.portal.web.servlets.MainServlet" %>
<%@ page import = "com.sun.star.portal.web.beans.ErrorBean" %>
<%@ page import = "com.sun.star.portal.web.beans.LoginBean" %>
<html>
  <head>
    <starportal:insert componentName="Action"/>
    <title>
        <starportal:insert componentName="Title"/>
    </title>
    <meta name="description" content="StarPortal ">
    <meta name="keywords" content="starportal, staroffice, software">
    <meta http-equiv="Content-Type" content="text/html; charset=iso-8859-1">
  </head>
<body leftmargin="0" topmargin="0" marginwidth="0" marginheight="0"
background="<%=request.getContextPath()%>/pics/fillgrey.gif">
...
  <tr>
  <td width="%" height="18">
      <starportal:insert componentName="Shortcuts"/>
  </td>
...
      <table width="100%" border="0" cellspacing="0" cellpadding="0">
        <tr>
          <td width=10></td>
          <td>
              <p><starportal:insert componentName="CurrentFolder"/></p>
              <p><starportal:insert componentName="FolderView"/></p>
              <p><starportal:insert componentName="FileView"/></p>
          </td>
        </tr>
        <tr><td height=10></td></tr>
      </table>
    <%
        }
        else
        {
    %>
              <p><starportal:insert componentName="Error"/></p>
      <%
          request.removeAttribute(MainServlet.ERROR);
        }
      %>
</body>
</html>
```

1100

**Fig. 11**

```
<root node>
  <default template="/html/HTMLTemplate.jsp" class="default">

<!-- processing WAP Devices -->

 if (user-agent=Nokia*)
    then (use template=WMLTemplate.jsp for generating all other WAP-based pages)

   if (user clicks Bookmarks (module=hcpExplorer))
      then (use template=WMLTemplate.jsp AND its associated components as required per request)

   elseif (user clicks Clipboard (module=clipboard))
      then (use template=WMLTemplate.jsp AND its associated components as required per request)

   elseif (user clicks My Documents (module=explorer))
      then (use template=WMLTemplate.jsp AND its associated components as required per request)

   elseif (user clicks Network portal system 100 (module=login))
      then (use template=WMLLoginTemplate.jsp AND its associated components as required per request)

   elseif (user provides correct username and password and clicks Login (module=start))
      then (use template=WMLTemplate.jsp AND its associated components as required per request)
```

Fig. 12A

<!-- processing Palm VII Devices -->

elseif (user-agent=Palm VII)
  then (use template=PQATemplate.jsp)

  if (user clicks a StarOffice document (resource=StarOffice document))
    then (use servlet=com.sun.star.portal.web.servlets.StarOfficeServlet)

  if (command=installRVP)
    then (use template=PQATemplate.jsp and its associated components as requested)

  elseif (user clicks a non-StarOffice document (resource=non-StarOffice Document))
    then (use servlet=com.sun.star.portal.web.servlets.DocumentServlet)

  elseif (user clicks Bookmarks (module=hcpExplorer))
    then (use template=PQATemplate.jsp AND its associated components as required per request)

  elseif (user clicks Clipboard (module=clipboard))
    then (use template=PQATemplate.jsp AND its associated components as required per request)

  elseif (user clicks My Documents (module=explorer))
    then (use template=PQATemplate.jsp AND its associated components as required per request)

  elseif (user clicks Network portal system 100 (module=login))
    then (use template=PQACCPPTemplate.jsp AND its associated components as required per request)

  elseif (user provides correct username and password and clicks Login (module=start))
    then (use template=PQATemplate.jsp AND its associated components as required per request)

Fig. 12B

<!-- processing HTML Devices -->

```
elseif (command = download)
  then (use servlet=com.sun.star.portal.web.servlets.DownloadPrepareServlet)

elseif (command = downloadexecute)
  then (use servlet=com.sun.star.portal.web.servlets.DownloadExecuteServlet)

elseif (user clicks a StarOffice document (resource=StarOffice document))
  then (use servlet=com.sun.star.portal.web.servlets.StarOfficeServlet)

elseif (command=installRVPSetup)
  then (use servlet=com.sun.star.portal.web.servlets.InstallServlet)

 if (command=installRVP)
   then (use servlet=HTMLTemplate.jsp and its associated components as requested)

elseif (user clicks a non-StarOffice document (resource=non-StarOffice Document))
  then (use servlet=com.sun.star.portal.web.servlets.DocumentServlet)

elseif (user clicks Bookmarks (module=hcpExplorer))
  then (use template=HTMLTemplate.jsp AND its associated components as required per request)

elseif (user clicks Clipboard (module=clipboard))
  then (use template=HTMLTemplate.jsp AND its associated components as required per request)

elseif (user clicks My Documents (module=explorer))
  then (use template=HTMLTemplate.jsp AND its associated components as required per request)

elseif (user clicks Network portal system 100 (module=login))
  then (use template=CCPPTemplate.jsp AND its associated components as required per request)

elseif (user provides correct username and password and clicks Login (module=start))
  then (use template=HTMLTemplate.jsp AND its associated components as required per request)
```

Fig. 12C

```xml
<?xml version="1.0" encoding="ISO-8859-1"?>
<node>
 <screen template="/html/HTMLTemplate.jsp" class="default">
 <component name="Title" value="StarPortal Default page" direct="true"/>
 <component name="Error" value="/html/HTMLError.jsp" />
 </screen>
 ...
 <node>
   <requirement type="requestParameter" name="module" value="login" />
    <screen template="/html/CCPPTemplate.jsp" class="ccpp">
     <component name="Title" value="StarPortal Login" direct="true"/>
     <component name="CurrentFolder" value="/html/HTMLLogin.jsp" />
     <component name="Error" value="/html/HTMLError.jsp" />
    </screen>
 </node>
 <node>
   <requirement type="requestParameter" name="module" value="start" />
    <screen class="default">
     <component name="Title" value="StarPortal Welcome" direct="true"/>
     <component name="Shortcuts" value="/html/HTMLShortcute.jsp" />
     <component name="FolderView" value="/html/HTMLWelcome.jsp" />
    </screen>
 </node>
```

Fig. 13A

```
<node>
 <requirement type="requestParameter" name="module" value="explorer"/ >
  <screen class="default">
    <component name="Title" value="StarPortal Explorer" direct ="true"/>
    <component name="Shortcuts" value="HTMLShortcuts.jsp" />
    <component name="CurrentFolder" value="/html/HTMLCurrentFolder.jsp" />
    <component name="FolderView" value="$FOLDERVIEW" />
    <component name="FileView" value="$FILEVIEW" />
  </screen>
</node>
<substitution name="$FILEVIEW">
  <element>
    <requirement type="requestParameter" name="viewTypeFiles" value="iconView" />
    <result value="/html/HTMLFileView.jsp" />
  </element>
  <element>
    <requirement type="requestParameter" name="viewTypeFiles" value="detailView" />
    <result value="/html/HTMLFileTableView.jsp" />
  </element>
</substitution>

<substitution name="$FOLDERVIEW">
  <element>
    <requirement type="requestParameter" name="viewTypeFolders" value="iconView" />
    <result value="/html/HTMLFolderView.jsp"" />
  </element>
  <element>
    <requirement type="requestParameter" name="viewTypeFolders" value="detailView" />
    <result value="/html/HTMLFolderTableView.jsp"" />
  </element>
</substitution>
```

1310

1311

1312

Fig. 13B

EP 1 126 681 A2

Fig. 14

Chapter A

| 302 | 303 |
|---|---|
| Middle Tier | Information System Tier |

1501 — Network Portal System Component

1511 — Client API

Configuration Proxy 1510

Server 1520

336

1530 — Event Listener Servlet Object

1540 — Transaction Manager Servlet Object

1550 — Transaction Servlet Object

| Session Table 1561 | Trans Queue 1562 | Trans List 1563 | Node Table 1564 | Notify Table 1565 | DOM Tree 1570 |
|---|---|---|---|---|---|

Cache 1560

Configuration Server

337 — Configuration Back End (Databases)

Fig. 15

Fig. 16A

Chapter A

Fig. 16B

1700

Fig. 17

Chapter A

```
<Root>
    <UserProfile />
    <ApplProfile />
</Root>
```

```
<ApplProfile>
    <Administrator />
    <UserA />
    <UserB />
</ApplProfile>
```

```
<Administrator>
    <Star />
</Administrator>
```

```
<Star>
    <!- ... -->
    <Inet/>
    <Templates />
</Star>
```

```
<Inet>
    <!-...-->
    <DNS>
        <IP_Address type="string">
            142.41.1.250
        </IP_Address>
    </DNS>
    <SMTP>
        <ServerName type="string">
            <defaultvalue>
            smtp.sun.com
            </defaultvalue>
        </ServerName>
    </SMTP>
    <!-...-->
</Inet>
```

Fig. 18

```
<envelop>
<header>
<transaction type="request"
    name="openNode"
        clientId="C0" serverId="" />
</header>
<body>
<params total=2
    <data name="nodepath" type="String"
        <value> "com.sun.star/Writer" </value>
    </data>
    <data name="numLevels" type="int"
        <value> 1 </value>
    </data>
</params>
</body>
</envelop>
```

Fig. 19A

```
<envelop>
<header>
<transaction type="Acknowledgement"
    name="openNode"
        clientId="C1"
        serverId="R01"/>
</header>
</envelop>
```

Fig. 19B

```
<envelop>
 <header>
   <transaction type="response"
                name="openNode"
                clientId="C2"
                serverId="R02/>
 </header>
 <body>
  <params total=2
    <data name=type="String"
       <value> "N001" </value>
    </data>
    <data type="Node"
       <value> "......"  </value>
    </data>
  </params>
 </body>
</envelop>
```

## Fig. 19C

```
<envelop>
 <header>
  <transaction type="error"
                    name="openNode"
                    clientId="C3"
                    serverId="R03"/>
 </header>
 <body>
   <params total=2
     <data type="String"
       <value> "ERRNODEOPEN"   </value>
     </data>
     <data type="String"
       <value> "Could not open the given node. XML file does not exist" </value>
     </data>
   </params>
 </body>
</envelop>
```

# Fig. 19D

```
<envelop>
 <header>
    <transaction type="notify"
                   name=""
                   id="" />
 </header>
 <body>
  <params total=2
   <data type="Nodepath"
      <value> "root/ApplProfile/starPortal/Writer"  </value>
   </data>
   <data type="Node"
      <value> "......" </value>
   </data>
  </params>
 </body>
</envelop>
```

# Fig. 19E

Chapter A

Fig. 20

Fig. 21

A D A P T E R / A P P / B E A N

QueryContent(contentid)

CreatePropertyTask()
add/ removePropertiesChangeListener()

2101

Provider
Registry

XcontentProviderManager

Register(protocol)

2131

UCP

XcontentProvider

XcontentProvider

113

UCB

UCB

Create

Chapter A

232

UCB Content

XpropertyTaskProcessor

Xcontent

EP 1 126 681 A2

Fig. 22

Chapter A

Fig. 23

2302B

2304

2302A

2343

2303

2312

2303

2301A

2301B

2310

Chapter A

Fig. 24

2411

2414C

2414B

2414A

2415

2416

2417

2418A

2418B

2413

Chapter A

Fig. 25

```
      ┌──────────┐
      │   2501   │
      └──────────┘
            │
            ▼
      ┌──────────┐
      │   2502   │
      └──────────┘
            │
            ▼
      ┌──────────┐
      │   2503   │
      └──────────┘
            │
            ▼
      ┌──────────┐
      │   2504   │
      └──────────┘
            │
            ▼
      ┌──────────┐
      │   2505   │
      └──────────┘
            │
            ▼
      ┌──────────┐
      │   2506   │
      └──────────┘
            │
            ▼
      ┌──────────┐
      │   2507   │
      └──────────┘
            │
            ▼
```

Chapter A

Fig. 26

```
    ┌─────────────┐
    │    2610     │
    └─────────────┘
           │
           ▼
    ┌─────────────┐
    │    2620     │
    └─────────────┘
           │
           ▼
    ┌─────────────┐
    │    2630     │
    └─────────────┘
           │
           ▼
    ┌─────────────┐
    │    2640     │
    └─────────────┘
           │
           ▼
```

Chapter A

Fig. 27

```
                    ↓
         Yes    ◇ 2750 ◇    No
        ┌──────          ──────┐
        │                      ↓
        │                 ┌─────────┐
        │                 │  2760B  │
        │                 └─────────┘
        ↓                      ↓
   ┌─────────┐           ┌─────────┐
   │  2760A  │           │  2770B  │
   └─────────┘           └─────────┘
        │                      │
        └──────────┬───────────┘
                   ↓
              ┌─────────┐
              │  2780   │
              └─────────┘
```

Chapter A

Fig. 28

```
┌─────────────┐
│    2810     │
└─────────────┘
       │
       ▼
┌─────────────┐
│    2820     │
└─────────────┘
       │
       ▼
┌─────────────┐
│    2830     │
└─────────────┘
       │
       ▼
┌─────────────┐
│    2840     │
└─────────────┘
       │
       ▼
┌─────────────┐
│    2850     │
└─────────────┘
```

Chapter A

Fig. 29

Chapter A

Fig. 30

```
        |
        v
+---------------+
|     3011      |
+---------------+
        |
        v
+---------------+
|     3012      | <------+
+---------------+        |
        |                |
        v                |
+---------------+        |
|     3013      |        |
+---------------+        |
        |
        v
+---------------+
|     3014      |
+---------------+
        |
        v
+---------------+
|     3015      |
+---------------+
```

Chapter A

Fig. 31

2916

3101

3102

3103

3104

3105

Fig. 32

Chapter A

```
┌──────────┐
│   3200   │
└──────────┘
      │
┌──────────┐
│   3201   │
└──────────┘
      │
┌──────────┐
│   3202   │
└──────────┘
      │
┌──────────┐
│   3203   │
└──────────┘
      │
┌──────────┐
│   3204   │
└──────────┘
      │
┌──────────┐
│   3205   │
└──────────┘
      │
┌──────────┐
│   3206   │
└──────────┘
      │
┌──────────┐
│   3207   │
└──────────┘
      │
┌──────────┐
│   3208   │
└──────────┘
      │
┌──────────┐
│   3209   │
└──────────┘
      │
┌──────────┐
│   3210   │
└──────────┘
```

Chapter A

Fig. 33

```
        │
        ▼
      ╱─────╲        No
     ╱  3301  ╲──────────────┌─────────┐
     ╲        ╱              │  3302   │
      ╲─────╱               └─────────┘
        │ Yes
        ▼
      ╱─────╲        No
     ╱  3303  ╲──────────────────────────┐
     ╲        ╱                           │
      ╲─────╱                             ▼
        │ Yes                          ╱─────╲
        │              No             ╱  3306  ╲
        ├──────────────────────────── ╲        ╱
        │                              ╲─────╱
        ▼                                │ Yes
   ┌─────────┐                           ▼
   │  3304   │                      ┌─────────┐
   └─────────┘                      │  3307   │
        │                           └─────────┘
        ▼                                │
   ┌─────────┐                           ▼
   │  3305   │                      ┌─────────┐
   └─────────┘                      │  3308   │
        │                           └─────────┘
        ▼                                │
                                         ▼
```

Chapter A

Fig. 34

3401A

3401B

3402

3403

3404

3409

3405

3407

3406

3410

3408

Chapter A

# Fig. 35

.

3520

3521

3522

3523

Chapter A

Fig. 36

Chapter A

Fig. 37

Chapter A

Fig. 38

Chapter A

Fig. 39

Fig. 1A

Execution Environment A (Destination) ~120

Bridge 140

Execution Environment B (Source) ~150

Proxy

Service A ~111

~110

112

130

Source Env. Object

103

Dest. Env. Object

104

170

Service B

161

~160

Computer system 100

Fig. 1B

450

Chapter B

# Fig. 1C

100

**User Device 102**

CPU
101

Memory 122

Service 111

RunTimeLibrary
108

Proxy ——— 130

Bridge ——— 140

S. Env.
Object

D. Env.
Object ——— 104

103

Memory 121

App 110

Runtime Library

I/O Interface 122

Network 106

—— 105

155

Processor
182

Memory 184

160

161 —— Service

Run Time
Library 108

Network
Interface 183

Key-
Board
125

Printer
127

Mouse
128

195

Monitor
126

Chapter B

Computer system memory 210

Common
Identity
Environment
Structure
220

221

Extended
Environment
Structure
225

**FIG. 2A**

Environment
Structure
230

Computer system memory 210

**FIG. 2B**

```
struct uno_Environment
{                               Chapter B
/**   a name for this environment
*/
      rtl_String * pName;
/**   A free context pointer, that can be used for specific classes of environments, e.g.
      a jvm pointer
*/
      void * pContext;
/** Acquires this environment.
            @param pEnv this interface
*/
      void (SAL_CALL * acquire)( uno_Environment * pEnv );
/**   Releases this environment;  Last release of environment revokes the environment
      from runtime.
            @param pAccess this access interface
*/
      void (SAL_CALL * release)( uno_Environment * pEnv );
/**   Tests if two environments are equal.
            @param pEnv1 one environment
            @param pEnv2 another environment
*/
      sal_Bool (SAL_CALL * equals) ( const uno_Environment* pEnv1, const
            uno_Environment * pEnv2 );
/**
* You register internal and external interfaces via his method. Internal interfaces are
      proxies that are  used in an environment.  External interfaces are interfaces
      that are exported to another environment,  thus providing an object identifier
      for this task.  This can be called an external reference.  Interfaces are held
      weakly at an environment; they demand a final revokeInterface()call for each
      interface that has been registered.
            @param pEnv this environment
            @param ppInterface inout parameter for the registered interface
            @param ppOId inout parameter for the corresponding object id
            @param pTypeDescr type description of interface
            @param acquire function to acquire an interface;  this function
                  provides a boolean return value to signal if the acquisition was
                  successful (necessary for proxy interfaces)
*/
      void (SAL_CALL * registerInterface) (uno_Environment * pEnv, void **
            ppInterface, rtl_String ** ppOId, typelib_InterfaceTypeDescription
            *pTypeDescr, uno_regAcquireFunc acquire );
/**
      ANY interface that has been  registered is revokeed via this method.
            @param pEnv this environment
            @param pOId object id of interface to be revoked
            @param pTypeDescr type description of interface to be revoked
*/
      void (SAL_CALL * revokeInterface) ( uno_Environment * pEnv, rtl_String *
            pOId, typelib_InterfaceTypeDescription * pTypeDescr );
```

# Fig. 3A

```
/** Retrieves an interface identified by its object id  and type from this environment.
            @param pEnv this environment
            @param ppInterface inout parameter for the registered interface; (0) if
                    none was found
            @param pOId object id of interface to be retrieved
            @param pTypeDescr type description of interface to be retrieved
*/
        void (SAL_CALL * getRegisteredInterface) ( uno_Environment * pEnv, void
            ** ppInterface, rtl_String * pOId, typelib_InterfaceTypeDescription *
            pTypeDescr );
/**
        Retrieves the object identifier for a registered interface from this environment.
            @param pEnv this environment
            @param ppOId inout parameter for object id of interface; (0) if none
                    was found
            @param pInterface a registered interface
            @param pTypeDescr type description of interface
*/
        void (SAL_CALL * getRegisteredObjectIdentifier) ( uno_Environment *
            pEnv, rtl_String ** ppOId, void *
            pInterface,typelib_InterfaceTypeDescription * pTypeDescr );
/**
* Disposing callback function pointer that can be set to get signalled before the
        environment is destroyed.
            @param pEnv environment that is being disposed
*/
        void (SAL_CALL * environmentDisposing) ( uno_Environment * pEnv );
*/**
* Computes an object identifier for the given interface; is called by the environment
        implementation.
            @param pEnv corresponding environment
            @param ppOId out param: computed id
            @param pInterface an interface
*/
        void (SAL_CALL * computeObjectIdentifier) ( uno_Environment * pEnv,
            rtl_String ** ppOId, void * pInterface );
/** Function to acquire an interface.
            @param pEnv corresponding environment
            @param pInterface an interface
*/
        void (SAL_CALL * acquireInterface) ( uno_Environment * pEnv, void *
            pInterface );
/**
* Function to release an interface.
            @param pEnv corresponding environment
            @param pInterface an interface
*/
void (SAL_CALL * releaseInterface) ( uno_Environment * pEnv,  void * pInterface
        );
};
```

# Fig. 3B

FIG. 4

**500**

Chapter B

| |
|---|
| sal_uInt32 / magic |
| sal_uInt32 / size |
| sal_uInt16 / minor version |
| sal_uInt16 / major version |
| sal_uInt16 / nHeaderFields |
| sal_uInt16 / type Source |
| sal_uInt16 / typeClass |
| sal_uInt16 / name (ICP) |
| sal_uInt16 / Uik (ICP) |
| sal_uInt16 / docu (ICP) |
| sal_uInt16 / filename (ICP) |
| sal_uInt16 / nSuperTypes |
| sal_uInt16 * nSuperTypesfilename (ICP) |
| sal_uInt16 / nConstantPoolCount |
| sal_uInt8 / data block for ConstantPool of n1 bytes |
| sal_uInt16 / nFieldCount |
| sal_uInt8 / data block for FieldList of n2 bytes (data block is 0 if nFieldCount = 0) |
| sal_uInt16 / nMethodCount |
| sal_uInt8 / data block for MethodList of n3 bytes (data block is 0 if nMethodCount = 0) |
| sal_uInt16 / nReferenceCount |
| sal_uInt8 / data block for ReferenceList of n4 bytes (data block is 0 if nReferenceCount = 0) |

**Index 1**

| |
|---|
| sal_uInt32 / size |
| sal_uInt16 / typeTag |
| sal_uInt8 / data |

**Index n**

| |
|---|
| sal_uInt32 / size |
| sal_uInt16 / typeTag |
| sal_uInt8 / data |

| |
|---|
| sal_uInt16 / nFieldEntries |

**Field 1**

| |
|---|
| sal_uInt16 / access |
| sal_uInt16 / name (ICP) |
| sal_uInt16 / typename (ICP) |
| sal_uInt16 / value (ICP) |
| sal_uInt16 / docu (ICP) |
| sal_uInt16 / filename (ICP) |

**Field n**

| |
|---|
| sal_uInt16 / access |
| sal_uInt16 / name (ICP) |
| sal_uInt16 / typename (ICP) |
| sal_uInt16 / value (ICP) |
| sal_uInt16 / docu (ICP) |
| sal_uInt16 / filename (ICP) |

| |
|---|
| sal_uInt16 / nMethodEntries |
| sal_uInt16 / nParameterEntries |
| sal_uInt16 / size |
| sal_uInt16 / mode |
| sal_uInt16 / name (ICP) |
| sal_uInt16 / returntype (ICP) |
| sal_uInt16 / docu (ICP) |
| sal_uInt16 / nParamCout |

**Parameter 1**

| |
|---|
| sal_uInt16 / type (ICP) |
| sal_uInt16 / mode |
| sal_uInt16 / name (ICP) |

**Parameter n**

| |
|---|
| sal_uInt16 / type (ICP) |
| sal_uInt16 / mode |
| sal_uInt16 / name (ICP) |

| |
|---|
| sal_uInt16 / nExceptionCount |
| sal_uInt16 / excpName 1 (ICP) |
| sal_uInt16 / excpName n (ICP) |

| |
|---|
| sal_uInt16 / nReferenceEntries |

**Reference 1**

| |
|---|
| sal_uInt16 / typename (ICP) |
| sal_uInt16 / name (ICP) |
| sal_uInt16 / docu (ICP) |
| sal_uInt16 / access |

**Reference n**

| |
|---|
| sal_uInt16 / typename (ICP) |
| sal_uInt16 / name (ICP) |
| sal_uInt16 / docu (ICP) |
| sal_uInt16 / access |

Fig. 5

456

Chapter B

| Offset: | Value |
|---------|-------|
| 0 | Return Address |
| 4 | This Pointer |
| [if struct] 8 | [if struct] Pointer to Return Struct |
| 8\|12 | Parameter 0 |
| . . . | . |

Memory 610          600

# FIG. 6

| Offset: 0 | Function pointer: |
|-----------|-------------------|
| 4 | queryInterface() (XInterface member) |
| 8 | acquire() (XInterface member) |
| 12 | release() (XInterface member) |
| | bar() (XExample member) |
| . . . | . . . |

Memory 710          700

# FIG. 7A

Chapter B

| Offset: | Function pointer to code: |
|---------|---------------------------|
| 0 | `mov eax,  0`<br>`jmp cpp_vtable_call` |
| 4 | `mov eax,  1`<br>`jmp cpp_vtable_call` |
| 8 | `mov eax,  2`<br>`jmp cpp_vtable_call` |
| . . . | . . . |

720

Memory 730

# FIG. 7B

Chapter B

Proxy Method Call — 801

↓

Determine Slot — 802

Prepare Stack — 811

810

Call Mediate — 812

Fill Return Registers — 813

Method vTable

800

Return from Proxy Method Call — 801

**FIG. 8**

Chapter B

Call Mediate — 812

Method Call ?  901

Yes          No

910
Acquire/
Release?

No

920
Attribute
Get?

Yes          No

Yes

911
Acquire/Release
Call

912
Query
Interface ?

No

Yes

913
Registered
Interface
Avail?

No

921
Prepare
Attribute Get
Call

922
Prepare
Attribute Set
Call

930

914
Set Return
Value

Call Env1_to_ Env2 with Interface

Mediate 900

Return

**FIG. 9**

Chapter B

Call Env1_to_ Env2
with Interface          930

Method Env1_to_Env2
With Interface
1000

1001     Read Parameters

1002     Convert Parameters

1003     Allocate Memory

1004     Dispatch Call

1005
Yes          Exception
?          No

1010     Clean Up

1020     Convert Parameters

1021     Clean Up

1030     Throw Exception

1022     Convert Return
Value

Return to
Mediate

# FIG. 10

Chapter B

**FIG. 11**

Chapter B

Call Env2_to_ Env1
with Interface — 1130

1201 — Read Parameters

Method Env2_to_Env1
With Interface
1200

1202 — Convert Parameters

1203 — Allocate Memory

Dispatch Call

1204

Yes ← Exception → No

1205

Convert
Exception
— 1210

1220 — SetException

Clean Up
— 1211

1221 — Convert
Parameters

1222 — Convert Return
Value

Return
To 1130

**FIG. 12**

# FIG. 13A

```
inline void SAL_CALL cppu_Mapping_uno2cpp(
    uno_Mapping * pMapping, void ** ppCppI,
    void * pUnoI, typelib_InterfaceTypeDescription * pTypeDescr )
{
    OSL_ASSERT( ppCppI && pTypeDescr );
    if (*ppCppI)
    {
        reinterpret_cast< ::com::sun::star::uno::XInterface * >( *ppCppI )->release();
        *ppCppI = 0;
    }
    if (pUnoI)
    {
        cppu_Bridge * pBridge = static_cast< cppu_Mapping * >( pMapping )->pBridge;

        // get object id of uno interface to be wrapped
        rtl_uString * pOId = 0;
        (*pBridge->pUnoEnv->getObjectIdentifier)( pBridge->pUnoEnv, &pOId, pUnoI );
        OSL_ASSERT( pOId );

        // try to get any known interface from target environment
        (*pBridge->pCppEnv->getRegisteredInterface)(
            pBridge->pCppEnv, ppCppI, pOId, pTypeDescr );

        if (! *ppCppI) // no existing interface, register new proxy interface
        {
            // try to publish a new proxy (ref count initially 1)
            cppu_cppInterfaceProxy * pProxy = new cppu_cppInterfaceProxy(
                pBridge, reinterpret_cast< uno_Interface * >( pUnoI ), pTypeDescr, pOId );
            ::com::sun::star::uno::XInterface * pSurrogate = pProxy;
            cppu_cppInterfaceProxy_patchVtable( pSurrogate, pProxy->pTypeDescr );
```

## FIG. 13B

```
                // proxy may be exchanged during registration
                (*pBridge->pCppEnv->registerProxyInterface)(
                        pBridge->pCppEnv, reinterpret_cast< void ** >( &pSurrogate ),
                        cppu_cppInterfaceProxy_free, pOId, pTypeDescr );

                *ppCppI = pSurrogate;
            }
        ::rtl_uString_release( pOId );
    }
}
```

## FIG. 14

```
//inline void SAL_CALL cppu_cppInterfaceProxy_free( uno_ExtEnvironment * pEnv, void * pProxy )
{
    cppu_cppInterfaceProxy * pThis =
        static_cast< cppu_cppInterfaceProxy * >(
            reinterpret_cast< ::com::sun::star::uno::XInterface * >( pProxy ) );
    OSL_ASSERT( pEnv == pThis->pBridge->pCppEnv );

    (*pThis->pBridge->pUnoEnv->revokeInterface)( pThis->pBridge->pUnoEnv, pThis->pUnoI );
    (*pThis->pUnoI->release)( pThis->pUnoI );
    ::typelib_typedescription_release( (typelib_TypeDescription *)pThis->pTypeDescr );
    pThis->pBridge->release();

#ifdef DEBUG
    *(int *)pProxy = 0xdeadbabe;
#endif
    delete pThis;
}
```

FIG. 15

```
inline void cppu_cppInterfaceProxy::acquireProxy()
{
    if (1 == osl_incrementInterlockedCount( &nRef ))
    {
        // rebirth of proxy zombie
        // register at cpp env
        void * pThis = static_cast< ::com::sun::star::uno::XInterface * >( this );
        (*pBridge->pCppEnv->registerProxyInterface)(
            pBridge->pCppEnv, &pThis, cppu_cppInterfaceProxy_free, oid.pData, pTypeDescr );
        OSL_ASSERT( pThis == static_cast< ::com::sun::star::uno::XInterface * >( this ) );
    }
}
inline void cppu_cppInterfaceProxy::releaseProxy()
{
    if (! osl_decrementInterlockedCount( &nRef )) // last release
    {
        // revoke from cpp env
        (*pBridge->pCppEnv->revokeInterface)(
            pBridge->pCppEnv, static_cast< ::com::sun::star::uno::XInterface * >( this ) );
    }
}
inline cppu_cppInterfaceProxy::cppu_cppInterfaceProxy(
    cppu_Bridge * pBridge_, uno_Interface * pUnoI_,
    typelib_InterfaceTypeDescription * pTypeDescr_, const ::rtl::OUString & rOId_ )
    : nRef( 1 )
    , pBridge( pBridge_ )
    , pUnoI( pUnoI_ )
    , pTypeDescr( pTypeDescr_ )
    , oid( rOId_ )
{
    pBridge->acquire();
    ::typelib_typedescription_acquire( (typelib_TypeDescription *)pTypeDescr );
    if (! ((typelib_TypeDescription *)pTypeDescr)->bComplete)
        ::typelib_typedescription_complete( (typelib_TypeDescription **)&pTypeDescr );
    (*pBridge->pUnoEnv->registerInterface)(
        pBridge->pUnoEnv, reinterpret_cast< void ** >( &pUnoI ), oid.pData, pTypeDescr );
    (*pUnoI->acquire)( pUnoI );
}
```

# FIG. 16A

```
inline void SAL_CALL cppu_unoInterfaceProxy_free( uno_ExtEnvironment * pEnv, void * pProxy )
{
      cppu_unoInterfaceProxy * pThis =
            static_cast< cppu_unoInterfaceProxy * >(
                  reinterpret_cast< uno_Interface * >( pProxy ) );
      OSL_ASSERT( pEnv == pThis->pBridge->pUnoEnv );

      (*pThis->pBridge->pCppEnv->revokeInterface)( pThis->pBridge->pCppEnv, pThis->pCppI );
      pThis->pCppI->release();
      ::typelib_typedescription_release( (typelib_TypeDescription *)pThis->pTypeDescr );
      pThis->pBridge->release();

#ifdef DEBUG
      *(int *)pProxy = 0xdeadbabe;
#endif
      delete pThis;
}
inline void SAL_CALL cppu_unoInterfaceProxy_acquire( uno_Interface * pUnoI )
{
      if (1 == osl_incrementInterlockedCount( & static_cast< cppu_unoInterfaceProxy * >( pUnoI )->nRef ))
      {
            // rebirth of proxy zombie
            // register at uno env
#ifdef DEBUG
            void * pThis = pUnoI;
#endif
            (*static_cast< cppu_unoInterfaceProxy * >( pUnoI )->pBridge->pUnoEnv->registerProxyInterface)(
                  static_cast< cppu_unoInterfaceProxy * >( pUnoI )->pBridge->pUnoEnv,
                  reinterpret_cast< void ** >( &pUnoI ), cppu_unoInterfaceProxy_free,
                  static_cast< cppu_unoInterfaceProxy * >( pUnoI )->oid.pData,
                  static_cast< cppu_unoInterfaceProxy * >( pUnoI )->pTypeDescr );
```

# FIG. 16B

```
#ifdef DEBUG
        OSL_ASSERT( pThis == pUnoI );
#endif
      }
}
inline void SAL_CALL cppu_unoInterfaceProxy_release( uno_Interface * pUnoI )
{
    if (! osl_decrementInterlockedCount( & static_cast< cppu_unoInterfaceProxy * >( pUnoI )->nRef ))
    {
        // revoke from uno env on last release
        (*static_cast< cppu_unoInterfaceProxy * >( pUnoI )->pBridge->pUnoEnv->revokeInterface)(
            static_cast< cppu_unoInterfaceProxy * >( pUnoI )->pBridge->pUnoEnv, pUnoI );
    }
}
```

# FIG. 17A

```
inline void SAL_CALL cppu_Mapping_cpp2uno(
    uno_Mapping * pMapping, void ** ppUnoI,
    void * pCppI, typelib_InterfaceTypeDescription * pTypeDescr )
{
    OSL_ENSHURE( ppUnoI && pTypeDescr, "### null ptr!" );
    if (*ppUnoI)
    {
        (*reinterpret_cast< uno_Interface * >( *ppUnoI )->release)(
            reinterpret_cast< uno_Interface * >( *ppUnoI ) );
        *ppUnoI = 0;
    }
    if (pCppI)
```

# FIG. 17B

```
{
    cppu_Bridge * pBridge = static_cast< cppu_Mapping * >( pMapping )->pBridge;

    // get object id of interface to be wrapped
    rtl_uString * pOId = 0;
    (*pBridge->pCppEnv->getObjectIdentifier)( pBridge->pCppEnv, &pOId, pCppI );
    OSL_ASSERT( pOId );

    // try to get any known interface from target environment
    (*pBridge->pUnoEnv->getRegisteredInterface)(
        pBridge->pUnoEnv, ppUnoI, pOId, pTypeDescr );

    if (! *ppUnoI) // no existing interface, register new proxy interface
    {
        // try to publish a new proxy (refcount initially 1)
        uno_Interface * pSurrogate = new cppu_unoInterfaceProxy(
            pBridge, reinterpret_cast< ::com::sun::star::uno::XInterface * >( pCppI ),
            pTypeDescr, pOId );

        // proxy may be exchanged during registration
        (*pBridge->pUnoEnv->registerProxyInterface)(
            pBridge->pUnoEnv, reinterpret_cast< void ** >( &pSurrogate ),
            cppu_unoInterfaceProxy_free, pOId, pTypeDescr );

        *ppUnoI = pSurrogate;
    }
    ::rtl_uString_release( pOId );
}
}
```

EP 1 126 681 A2

Chapter B

# FIG. 18

```
inline cppu_unoInterfaceProxy::cppu_unoInterfaceProxy(
    cppu_Bridge * pBridge_, ::com::sun::star::uno::XInterface * pCppI_,
    typelib_InterfaceTypeDescription * pTypeDescr_, const ::rtl::OUString & rOId_ )
    : nRef( 1 )
    , pBridge( pBridge_ )
    , pCppI( pCppI_ )
    , pTypeDescr( pTypeDescr_ )
    , oid( rOId_ )
{
    pBridge->acquire();
    ::typelib_typedescription_acquire( (typelib_TypeDescription *)pTypeDescr );
    if (! ((typelib_TypeDescription *)pTypeDescr)->bComplete)
        ::typelib_typedescription_complete( (typelib_TypeDescription **)&pTypeDescr );
    (*pBridge->pCppEnv->registerInterface)(
        pBridge->pCppEnv, reinterpret_cast< void ** >( &pCppI ), oid.pData, pTypeDescr );
    pCppI->acquire();

    // uno_Interface
    uno_Interface::acquire = CPPU_CURRENT_NAMESPACE::cppu_unoInterfaceProxy_acquire;
    uno_Interface::release = CPPU_CURRENT_NAMESPACE::cppu_unoInterfaceProxy_release;
    uno_Interface::pDispatcher = CPPU_CURRENT_NAMESPACE::cppu_unoInterfaceProxy_dispatch;
}
//-------------------------------------------------------------------------------------
inline void SAL_CALL cppu_Mapping_acquire( uno_Mapping * pMapping )
{
    static_cast< cppu_Mapping * >( pMapping )->pBridge->acquire();
}
//-------------------------------------------------------------------------------------
inline void SAL_CALL cppu_Mapping_release( uno_Mapping * pMapping )
{
    static_cast< cppu_Mapping * >( pMapping )->pBridge->release();
}
```

# FIG. 19

```
//_____
inline cppu_Mapping::cppu_Mapping( cppu_Bridge * pBridge_, uno_MapInterfaceFunc fpMap )
      : pBridge( pBridge_ )
{
      uno_Mapping::acquire = cppu_Mapping_acquire;
      uno_Mapping::release = cppu_Mapping_release;
      uno_Mapping::mapInterface = fpMap;
}
//_____
inline cppu_Bridge::cppu_Bridge( uno_ExtEnvironment * pCppEnv_, uno_ExtEnvironment * pUnoEnv_,
                                              sal_Bool bExportCpp2Uno_ )
      : nRef( 1 )
      , pCppEnv( pCppEnv_ )
      , pUnoEnv( pUnoEnv_ )
      , aCpp2Uno( this, cppu_Mapping_cpp2uno )
      , aUno2Cpp( this, cppu_Mapping_uno2cpp )
      , bExportCpp2Uno( bExportCpp2Uno_ )
{
      (*((uno_Environment *)pCppEnv)->acquire)( (uno_Environment *)pCppEnv );
      (*((uno_Environment *)pUnoEnv)->acquire)( (uno_Environment *)pUnoEnv );
}
//_____
inline void SAL_CALL cppu_Bridge_free( uno_Mapping * pMapping )
{
      cppu_Bridge * pThis = static_cast< cppu_Mapping * >( pMapping )->pBridge;
      (*((uno_Environment *)pThis->pUnoEnv)->release)( (uno_Environment *)pThis->pUnoEnv );
      (*((uno_Environment *)pThis->pCppEnv)->release)( (uno_Environment *)pThis->pCppEnv );
      delete pThis;
}
```

# FIG. 20

```
inline void cppu_Bridge::acquire()
{
    if (1 == osl_incrementInterlockedCount( &nRef ))
    {
        if (bExportCpp2Uno)
        {
            uno_Mapping * pMapping = &aCpp2Uno;
            uno_registerMapping( &pMapping, cppu_Bridge_free,
                                 (uno_Environment *)pCppEnv, (uno_Environment *)pUnoEnv, 0 );
        }
        else
        {
            uno_Mapping * pMapping = &aUno2Cpp;
            uno_registerMapping( &pMapping, cppu_Bridge_free,
                                 (uno_Environment *)pUnoEnv, (uno_Environment *)pCppEnv, 0 );
        }
    }
}

//_____
inline void cppu_Bridge::release()
{
    if (! osl_decrementInterlockedCount( &nRef ))
    {
        uno_revokeMapping( bExportCpp2Uno ? &aCpp2Uno : &aUno2Cpp );
    }
}
```

FIG. 21

```
inline void SAL_CALL cppu_ext_getMapping(
    uno_Mapping ** ppMapping, uno_Environment * pFrom, uno_Environment * pTo )
{
    OSL_ASSERT( ppMapping && pFrom && pTo );
    if (ppMapping && pFrom && pTo && pFrom->pExtEnv && pTo->pExtEnv)
    {
        uno_Mapping * pMapping = 0;

        if (0 == rtl_ustr_ascii_compare( pFrom->pTypeName->buffer,
    CPPU_CURRENT_LANGUAGE_BINDING_NAME ) &&
            0 == rtl_ustr_ascii_compare( pTo->pTypeName->buffer, UNO_LB_UNO ))
        {
            // ref count initially 1
            pMapping = &(new cppu_Bridge( pFrom->pExtEnv, pTo->pExtEnv, sal_True ))-
    >aCpp2Uno;
            ::uno_registerMapping( &pMapping, cppu_Bridge_free,
                                    (uno_Environment *)pFrom->pExtEnv,
                                    (uno_Environment *)pTo->pExtEnv, 0 );
        }
        if (0 == rtl_ustr_ascii_compare( pTo->pTypeName->buffer,
    CPPU_CURRENT_LANGUAGE_BINDING_NAME ) &&
            0 == rtl_ustr_ascii_compare( pFrom->pTypeName->buffer, UNO_LB_UNO ))
        {
            // ref count initially 1
            pMapping = &(new cppu_Bridge( pTo->pExtEnv, pFrom->pExtEnv, sal_False ))-
    >aUno2Cpp;
            ::uno_registerMapping( &pMapping, cppu_Bridge_free,
                                    (uno_Environment *)pFrom->pExtEnv,
                                    (uno_Environment *)pTo->pExtEnv, 0 );
        }

        if (*ppMapping)
            (*(*ppMapping)->release)( *ppMapping );
        *ppMapping = pMapping;
    }
}
```

# FIG. 22A

```
#if (defined(__SUNPRO_CC) && (__SUNPRO_CC == 0x500)) || (defined(__GNUC__) &&
    defined(__APPLE__))
static ::rtl::OUString * s_pStaticOidPart = 0;
#endif

// environment init stuff
//--------------------------------------------------------------------------------
    ----
inline const ::rtl::OUString & SAL_CALL cppu_cppenv_getStaticOIdPart()
{
#if ! ((defined(__SUNPRO_CC) && (__SUNPRO_CC == 0x500)) || (defined(__GNUC__) &&
    defined(__APPLE__)))
    static ::rtl::OUString * s_pStaticOidPart = 0;
#endif
    if (! s_pStaticOidPart)
    {
        ::osl::MutexGuard aGuard( ::osl::Mutex::getGlobalMutex() );
        if (! s_pStaticOidPart)
        {
            ::rtl::OUStringBuffer aRet( 64 );
            aRet.appendAscii( RTL_CONSTASCII_STRINGPARAM("];") );
            // pid
            oslProcessInfo info;
            info.Size = sizeof(oslProcessInfo);
            if (::osl_getProcessInfo( 0, osl_Process_IDENTIFIER, &info ) ==
osl_Process_E_None)
            {
                aRet.append( (sal_Int64)info.Ident, 16 );
            }
            else
            {
                aRet.appendAscii( RTL_CONSTASCII_STRINGPARAM("unknown process id") );
            }
```

FIG. 22B

```
                    // good guid
                    sal_uInt8 ar[16];
                    ::rtl_getGlobalProcessId( ar );
                    aRet.append( (sal_Unicode)';' );
                    for ( sal_Int32 i = 0; i < 16; ++i )
                    {
                           aRet.append( (sal_Int32)ar[i], 16 );
                    }
#if (defined(__SUNPRO_CC) && (__SUNPRO_CC == 0x500)) || (defined(__GNUC__) &&
     defined(__APPLE__))
                    s_pStaticOidPart = new ::rtl::OUString( aRet.makeStringAndClear() );
#else
                    static ::rtl::OUString s_aStaticOidPart( aRet.makeStringAndClear() );
                    s_pStaticOidPart = &s_aStaticOidPart;
#endif
              }
       }
       return *s_pStaticOidPart;
}
```

# FIG. 23

```
// functions set at environment init
//------------------------------------------------------------------------------
inline void SAL_CALL cppu_cppenv_computeObjectIdentifier(
    uno_ExtEnvironment * pEnv, rtl_uString ** ppOId, void * pInterface )
{
    OSL_ENSHURE( pEnv && ppOId && pInterface, "### null ptr!" );
    if (pEnv && ppOId && pInterface)
    {
        if (*ppOId)
        {
            rtl_uString_release( *ppOId );
            *ppOId = 0;
        }
        ::com::sun::star::uno::Reference< ::com::sun::star::uno::XInterface > xHome(
            reinterpret_cast< ::com::sun::star::uno::XInterface * >( pInterface ),
            ::com::sun::star::uno::UNO_QUERY );
        OSL_ENSHURE( xHome.is(), "### query to XInterface failed!" );
        if (xHome.is())
        {
            // interface
            ::rtl::OUStringBuffer oid( 64 );
            oid.append( (sal_Int64)xHome.get(), 16 );
            oid.append( (sal_Unicode)';' );
            // environment[context]
            oid.append( ((uno_Environment *)pEnv)->pTypeName );
            oid.append( (sal_Unicode)'[' );
            oid.append( (sal_Int64)((uno_Environment *)pEnv)->pContext, 16 );
            // process;good guid
            oid.append( cppu_cppenv_getStaticOIdPart() );
            ::rtl::OUString aRet( oid.makeStringAndClear() );
            ::rtl_uString_acquire( *ppOId = aRet.pData );
        }
    }
}
```

476

EP 1 126 681 A2

Chapter B

# FIG. 24

```
inline void SAL_CALL cppu_cppenv_acquireInterface( uno_ExtEnvironment *, void * pCppI )
{
    reinterpret_cast< ::com::sun::star::uno::XInterface * >( pCppI )->acquire();
}
//-----------------------------------------------------------------------------
inline void SAL_CALL cppu_cppenv_releaseInterface( uno_ExtEnvironment *, void * pCppI )
{
    reinterpret_cast< ::com::sun::star::uno::XInterface * >( pCppI )->release();
}
//-----------------------------------------------------------------------------
inline void SAL_CALL cppu_cppenv_initEnvironment( uno_Environment * pCppEnv )
{
    OSL_ENSHURE( pCppEnv->pExtEnv, "### expected extended environment!" );
    OSL_ENSHURE( rtl_ustr_ascii_compare( pCppEnv->pTypeName->buffer, CPPU_CURRENT_LANGUAGE_BINDING_NAME ) ==
0,
                        "### wrong environment type!" );
    ((uno_ExtEnvironment *)pCppEnv)->computeObjectIdentifier =
CPPU_CURRENT_NAMESPACE::cppu_cppenv_computeObjectIdentifier;
    ((uno_ExtEnvironment *)pCppEnv)->acquireInterface          =
CPPU_CURRENT_NAMESPACE::cppu_cppenv_acquireInterface;
    ((uno_ExtEnvironment *)pCppEnv)->releaseInterface          =
CPPU_CURRENT_NAMESPACE::cppu_cppenv_releaseInterface;
}

}
#endif
```

Fig. 25

Chapter B

258

Chapter B

Fig. 26

479

Chapter B

Fig. 27

```
┌─────────────┐
│             │
│    2700     │
│             │
└─────────────┘
       │
       ▼
┌─────────────┐
│             │
│    2701     │
│             │
└─────────────┘
       │
       ▼
┌─────────────┐
│             │
│    2702     │
│             │
└─────────────┘
       │
       ▼
┌─────────────┐
│             │
│    2703     │
│             │
└─────────────┘
       │
       ▼
┌─────────────┐
│             │
│    2704     │
│             │
└─────────────┘
```

Chapter B

Fig. 28

```
┌─────────────┐
│             │
│    2800     │
│             │
└──────┬──────┘
       │
       ▼
┌─────────────┐
│             │
│    2801     │
│             │
└──────┬──────┘
       │
       ▼
┌─────────────┐
│             │
│    2802     │
│             │
└──────┬──────┘
       │
       ▼
┌─────────────┐
│             │
│    2803     │
│             │
└─────────────┘
```

Chapter B

Fig. 29

```
┌─────────────┐
│             │
│    2900     │
│             │
└──────┬──────┘
       │
       ▼
┌─────────────┐
│             │
│    2901     │
│             │
└──────┬──────┘
       │
       ▼
┌─────────────┐
│             │
│    2902     │
│             │
└──────┬──────┘
       │
       ▼
┌─────────────┐
│             │
│    2903     │
│             │
└─────────────┘
```

Chapter B

Fig. 30

Chapter B

Fig. 31

310

312

311

Chapter B

Fig. 32

$$322$$
$$\longrightarrow$$
$$324$$
$$\longleftarrow$$

$$321$$
$$\longrightarrow$$

$$323$$
$$\longrightarrow$$

| 251 | 253 | 254 |

Chapter B

Fig. 33

$$332 \longrightarrow$$

$$334 \longleftarrow$$

253 → 331 → 254 → 333 → 252

Chapter B

Fig. 34

341

| 251 | → | 342 |

343

| 344 |

Chapter B

Fig. 35

352

→

357

←

354

→

356

←

351

→

353

→

355

→

251

253

254

252

Chapter B

Fig. 36

362

364

361

363

365

251

253

254

252

Chapter B

Fig. 37

Fig. 38

```
        ┌──────────┐
        │   3800   │
        └──────────┘
             │
        ┌──────────┐
        │   3801   │
        └──────────┘
             │
          ◇ 3802 ◇──Yes──◇ 3803 ◇──No──┐
             │              │            │
            No             Yes           │
             │         ┌──────────┐ ┌──────────┐
             │         │   3805   │ │   3804   │
             │         └──────────┘ └──────────┘
             │              │
             └──────────────┘
             │
        ┌──────────┐
        │   3806   │
        └──────────┘
             │
        ┌──────────┐
        │   3807   │
        └──────────┘
```

Chapter C

# Fig. 1

Chapter C

# Fig. 2

250

**User Device 102i**

CPU
201

Memory 210

Light Weight
Component 230

Memory 211

Light Weight
Component230

I/O Interface 202

Key-
Board
215

Printer
217

Mouse
218

295

Monitor
216

Network 106

103

100

Processor
282

Memory284

120

Application/
Service

112

Method
230

Network
Interface283

Chapter C

**Fig. 3**

Chapter C

## Fig. 4

Remote Client 102i

GUI

VCL

UNO TCP/IP

103/106

404

Application Layer

Components 120

StarOffice Desktop | StarOffice Bean | StarOffice Writer | . . .

App. Framework Library

SVX Library

Framework Layer

403

402

UNO TCP/IP

UCB

Infrastructure Layer

StarOffice API

Remote VCL

Virtual Operating System

Tools

401

Standard Template Library

Operating System Layer

RunTime Library

System Abstraction Layer

Server Computer System 100

Platform

Operating System

Fig. 5A

Fig. 5B

EP 1 126 681 A2

Fig. 5C

EP 1 126 681 A2

Fig. 5D

Chapter C

Panel
(JAVA AWT)

ServiceFactory
(Deamon)

1

1                                    1

XMultiServiceFactory

StarBean    1       1    Connection

n

1                LoginService

1

n

1                              1    XLogin

Connector

1

n    1    ServiceFactory
(Application)

1

XMultiServiceFactory

**Fig. 6**

1

BeanService

1

XRmStarOffice

n

ClientFactory    1        1    BeanFrame

1                    Xframe

n    n
XMultiServiceFactory

1    XDispatchProvider

RmFrame
Window    1      1    BeanWindow    n    1    StarWriter

XLoadable

XRmOutputDevice        XEventHdl        XWindowPeer

XRmFrameWindow

500

Interface XRmFrameWindow (Table 1)

    Interface XInterface (Table 2)

        Structure Uik (Table 3)

    Interface XEventHdl (Table 4)

        Interface XInterface (Table 2)

        Structure RmDropFileEvent (Table 5)

    Structure RmFrameResolution (Table 6)

    Structure IDLKeyNameInfo (Table 7)

Interface XRmOutputDevice (Table 8)

    Interface XInterface (Table 2)

    Structure IDLFontMetricData (Table 9)

    Structure KernPair (Table 9)

    Structure IDLFontData (Table 9)

    Structure IDLFont (Table 9)

    Interface XRmOutputDevice (Table 8)

Interface XMultiInstanceFactory (Table 10)

    Interface XInterface (Table 2)

Interface XMultiService Factory (Table 11)

    Interface XInterface (Table 2)

    Exception Exception (Table 12)

Interface XLogin (Table 13)

    Interface XInterface (Table 2)

    Enumeration ResultofLogin (Table 13)

Interface XRmStarOffice (Table 14)

    Enumeration StartUpError (Table 14)

    Interface XInterface (Table 2)

    Interface XMultiServiceFactory (Table 11)

    Interface XRmFrameWindow (Table 1)

**Fig. 7**

Chapter C

Interface XFrame (Table 15)
Interface XComponent (Table 16)
Interface XInterface (Table 2)
Interface XEventListener (Table 17)
Interface XInterface (Table 2)
Structure EventObject (Table 18)
Interface XInterface (Table 2)
Interface XWindow (Table 19)
Interface XComponent (Table 16)
Structure Rectangle (Table 20)
Interface XWindowListener (Table 21)
Interface XEventListener (Table 17)
Structure WindowEvent (Table 22)
Structure EventObject (Table 18)
Structure EventObject (Table 18)
Interface XFocusListener (Table 23)
Interface XEventListener (Table 17)
Structure FocusEvent (Table 24)
Structure EventObject (Table 18)
Interface XKeyListener (Table 25)
Interface XEventListener (Table 17)
Structure KeyEvent (Table 26)
Structure InputEvent (Table 27)
Structure EventObject (Table 18)
Interface XMouseListener (Table 28)
Interface XEventListener (Table 17)
Structure MouseEvent (Table 29)
Structure InputEvent (Table 27)
Interface XMouseMotionListener (Table 30)
Interface XEventListener (Table 17)
Structure MouseEvent (Table 29)

# Fig. 8A

Interface XPaintListener (Table 31)

    Interface XEventListener (Table 17)

   Structure PaintEvent (Table 32)

     Structure EventObject (Table 18)

     Structure Rectangle (Table 20)

Interface XFramesSupplier (Table 33)

  Interface XFrame (Table 15)

  Interface XFrames (Table 34)

    Interface XIndexAccess (Table 35)

      Interface XElementAccess (Table 36)

        Interface XInterface (Table 2)

        Interface XIdlClass (Table 37)

          Interface XInterface (Table 2)

          Enumeration TypeClass (Table 38)

          Structure Uik (Table 3)

          Interface XIdlField (Table 39)

            Interface XIdlMember (Table 40)

              Interface XInterface (Table 2)

            Interface XIdlClass (Table 37)

            Enumeration FieldAccessMode (Table 41)

            Exception IllegalArgumentException (Table 42)

              Exception Exception (Table 12)

            Exception IllegalAccessException (Table 43)

              Exception Exception (Table 12)

          Interface XIdlMethod (Table 44)

            Interface XIdlMember (Table 40)

            Interface XIdlClass (Table 37)

            Structure ParamInfo (Table 45)

              Enumeration ParamMode (Table 46)

            Enumeration MethodMode (Table 47)

            Exception IllegalArgumentException (Table 42)

## Fig. 8B

Chapter C

Exception InvocationTargetException (Table 48)

Exception WrappedTargetException (Table 49)

Exception Exception (Table 12)

Interface XIdlArray (Table 50)

Interface XInterface (Table 2)

Exception IllegalArgumentException (Table 42)

Exception ArrayIndexOutOfBoundsException (Table 51)

Exception IndexOutOfBoundsException (Table 52)

Exception Exception (Table 12)

Exception IndexOutOfBoundsException (Table 52)

Exception WrappedTargetException (Table 49)

Interface XFrame (Table 15)

Interface XController (Table 53)

Interface XComponent (Table 16)

Interface XFrame (Table 15)

Interface XModel (Table 54)

Interface XComponent (Table 16)

Structure PropertyValue (Table 55)

Enumeration PropertyState (Table 56)

Structure Property (Table 57)

Interface XIdlClass (Table 37)

Interface XController (Table 53)

Exception NoSuchElementException (Table 58)

Exception Exception (Table 12)

Interface XInterface (Table 2)

Interface XFrameActionListener (Table 59)

Interface XEventListener (Table 17)

Structure FrameActionEvent (Table 60)

Structure EventObject (Table 18)

Interface XFrame (Table 15)

Enumeration FrameAction (Table 61)

# Fig. 8C

Interface XDispatchProvider (Table 62)

    Interface XInterface (Table 2)

    Interface XDispatch (Table 63)

        Interface XInterface (Table 2)

        Structure URL (Table 64)

        Structure PropertyValue (Table 55)

        Interface XStatusListener (Table 65)

            Interface XEventListener (Table 17)

            Structure FeatureStateEvent (Table 66)

                Structure EventObject (Table 18)

                Structure URL (Table 64)

    Structure URL (Table 64)

    Structure DispatchDescriptor (Table 67)

        Structure URL (Table 64)

Interface XLoadable (Table 68)

    Interface XInterface (Table 2)

    Interface XLoadListener (Table 69)

        Interface XEventListener (Table 17)

        Structure EventObject (Table 18)

**Fig. 9**

Chapter C

Interface XWindowPeer (Table 70)

Interface XComponent (Table 16)

Interface XToolkit (Table 71)

    Interface XInterface (Table 2)

    Interface XWindowPeer (Table 70)

    Structure Rectangle (Table 20)

    Structure WindowDescriptor (Table 72)

        Enumeration WindowClass (Table 73)

        Interface XWindowPeer (Table 72)

        Structure Rectangle (Table 20)

    Exception IllegalArgumentException (Table 42)

    Interface XDevice (Table 74)

        Interface XInterface (Table 2)

        Interface XGraphics (Table 75)

            Interface XInterface (Table 2)

            Interface XDevice (Table 74)

            Structure SimpleFontMetric (Table 76)

            Interface XFont (Table 77)

                Interface XInterface (Table 2)

                Structure FontDescriptor (Table 78)

                    Enumeration FontSlant (Table 79)

                Structure SimpleFontMetric (Table 76)

            Structure FontDescriptor (Table 78)

            Enumeration RasterOperation (Table 80)

            Interface XRegion (Table 81)

                Interface XInterface (Table 2)

                Structure Rectangle (Table 20)

            Interface XDevice (Table 74)

# Fig. 10A

Chapter C

Interface XDisplayBitmap (Table 82)

Interface XInterface (Table 2)

Structure Gradient (Table 83)

Enumeration GradientStyle (Table 84)

Structure DeviceInfo (Table 85)

Structure FontDescriptor (Table 78)

Interface XFont (Table 77)

Interface XBitmap (Table 86)

Interface XInterface (Table 2)

Structure Size (Table 87)

Interface XDisplayBitmap (Table 82)

Interface XRegion (Table 81)

Interface XPointer (Table 88)

Interface XInterface (Table 2)

Structure Rectangle (Table 20)

# Fig. 10B

Chapter C

Fig. 11

Chapter C

Fig. 12

111

| 1101 |
|------|
| 1102 |
| 1103 |
| 1104 |
| 1105 |
| 1106 |

1100

113

112A

1200

Request

1210

Call

1250

Chapter C

Fig. 13

111

| |
|---|
| 1101 |
| 1102 |
| 1103 |
| 1104 |
| 1105 |
| 1106 |

1100

113

112A

1200

1210

Chapter C

Fig. 14

Chapter C

Fig. 15

1110    1104

111

1140

1120    1100

113

112A

1250    1260    1200

1220

1210

Chapter C

Fig. 16

Chapter C

Fig. 17

Chapter C

# Fig. 18

Chapter C

Fig. 19

Panel

StaOfficerBean

connect()
disconnect()
StarBean()
openConnection()
setXBeanVclComponent()
setUser()
setServerUrl()
serverHasStarted()
createBeanContainerWindow()
createJavaBeanFrame()

Connector

Server
User
Password

connect()
disconnect()
getConnector()
findConnector()
addConnector()
startStarOffice()
getBeanServer()
getServiceFactory()

RmStarOffice

RmStarOffice()
queryInterface()
Start()
CreateBeanWindow()

XRmBeanServer

XRmBeanServer()
Start()
CreateBeanWindow()
queryInterface()

Connection

connect()
createObject()
login()

MultiServiceFactory

createInstance()
MultiServiceFactory()

XMultiServiceFactory

MultiServiceFactory()
createInstance()

ORmFrameWindow

ORmFrameWindow()

OClientFactory

OClientFactory()

JavaBeanFrame

initialisize()

XFrame

initialisize(xWindow)

BeanContainerWindow

XWindow    XWindowPeer

516

Chapter C

Fig. 20

```
2010

2020

2030

2040

2050

2060  yes ──────────┐
  │                 2061
  no                │
  │                 2062
  │                 │
  │                 2063  no ──────────┐
  │                 yes              │
  │                 2064             │
  │                 2065             │
  │                 2066             │
  │                 2067             │
  │                 2068             │
  │                 2069             │
2080              2070             2090
```

Fig. 21

Chapter C

2160

2150

2140

2130

2120

2110

No of words: 57.000
No of lines: 13.000
Author: Jeffry Smith
Date: 31-Jan-99

Fig. 22

Chapter D

# Fig. 1A

102B

Mobile
Device
Network — 104

Browser — 102C

Gateway

105

102A

103

102D

Browser

Enterprise
Network

Browser — 102F

102E

Legacy
System

PDA

113

101C

Internet

Mail
System — 101A

Web
Server

Presentation
Manager

111

Int. Portlet

106

Mail Portlet

117

Ext. Portlet

116

115

Web Sites — 101B

Presentation Manager System

100

Fig. 1B

Fig. 2A

Send Request
210

215

Portlet
?

No

Continue
216

Yes

Contact Portlet
220

Retrieve Data
230

Get MIME Type
from Request
241

Yes

MIME
?
240

Identify

User Type
~245

Identity
?
242

Yes

Get identity from
Request 243

No

Retrieve Scheme
270

200

Convert Data
271

Return Converted
Data
272

Display  Data
273

Chapter D

Fig. 2B

Start

281 — Select Portlet Request

No

Yes

282 — Get MIME Types

283 — Get Source MIME Types

284 — Common MIME Type ?

Yes

No

285 — Generate MIME Type Set

286 — Common MIME Type ?

Yes

No

287 — Portlet Available

288 — Portlet UnAvailable

280

289 — Additional Portlets ?

Yes

No

End

Web Server
~111

~100

HTTP Response

HTTP Request

User Device
Configuration — 301

Presentation
Schemes — 302

303

Portlet Manager ~113
(Servlet)

Conversion Service

310

Data    Data    Request(URL)

Request(URL)    RDF Data    Request(URL)

Filter
Registry    311

Partial Filter
Adapters

Filter Server 315

312

Mail
Portlet

An Internal
Info Portlet

RDF
Portlet

115

117    116

Mail
System

Legacy
System

Internet

RDF Data

Web Site 1

Web Site 2

Web Site N

101B

Fig. 3

101A

101C

106

Chapter D

# Fig. 4

270

401 — **XML?**

No → **Copy Response** — 402

Yes ↓

403 — **MIME TYPE**

No → **Set MIME Type** — 404

Yes

405 — **Device ?**

No → **Set Device** — 406

Yes

407 — **XSL ?**

No → 408 **Channel ?**

No → 409 **Article ?**

No → **Exception** — 410

Yes ↓ (407)

414 — **Add Extension**

413 — **XSL Ext. ?**  No →

411 **Set Channel XSL**

412 **Set Article XSL**

Yes (413)

415 — **Prefer XSL Avail?**

No → 416 **XSL to Mime Avail?**

No → **Exception** — 417

Yes

Yes → **Parse & Load** — 418

To 271

EP 1 126 681 A2

Chapter D

| HTTP Server | Configuration | HTTP Request | HTTP Response | Portlet Manager | Cmd Factory | Chl Command |

Search for Servlet

HTTP Request = /Portlet/. . . .

Create (Specific to Portlet Manager)

Init(Configuration)

Get Context

Get Parameter

Create

Create

Do Get (HTTP Request, HTTP Response)

Get Header

Get Servlet Path

New

Produce Command

New

Execute (HTTP Request, HTTP Response, URL)

Connect to URL

Response

Read Output

Write Transformed Response

HTTP Response

Fig. 5

```
public class PortletManager extends HttpServlet
{

*//This method provides information about a servlet used as portlet manager to a user device. In this example the method returns the name of the
servlet and a copyright notice. /*

        public String getServletInfo()
        {
                return "Channel Manager - Copyright 2000 Sun Microsystems, Inc.";
        }
*//
This method is called when the webserver (HTTP server) loads the servlet. It is only called once for the purpose of initialization. In this case
configuration path names are loaded to the XSL and XML files.
/*
        public void init(ServletConfig configuration)
                throws ServletException
        {
                System.out.println(getServletInfo());
                super.init( configuration );
                m_aServletContext = configuration.getServletContext();
                m_aServletContext = getServletContext();
                String sRootBase      = null;
                String sXslBase       = null;
                String sUserBase      = null;
                String sNoUserName = null;
                try
                {
                        sRootBase   = new String (getInitParameter("rootbase-uri"));
                        sXslBase    = new String (getInitParameter("xslbase-uri"));
                        sUserBase   = new String (getInitParameter("userbase-uri"));
                        sNoUserName = new String (getInitParameter("nouser-name"));
                }
                catch ( Exception e )
                {
                        System.err.println("some required init parameter is missing");
                        throw new ServletException("init parameter missing");
                }
                . . .
        }
```

<p align="center"><strong>FIG. 6</strong></p>

/*The doPost method is called every time a HTTP post request arrives at the web server with a request for an URL for which the servlet was configured initially. Post requests are handled in the same method where get requests are handled, so the doGet() method is called.*/

```
        public void doPost( HttpServletRequest request,
                        HttpServletResponse response )
                throws ServletException, IOException
        {
                doGet(request, response);
        }
```

/*The doGet method is called every time a HTTP get request arrives at the webserver with a request for an URL for which the servlet was configured.*/

```
        public void doGet( HttpServletRequest  aHttpServletRequest,
                        HttpServletResponse aHttpServletResponse )
                throws ServletException, IOException
        {
                try
                {
```

/*A string is formed which specifies the URL of the servlet based on the information coming with the request. This string can later be used to specify the servlet as target for a HTTP-request. This will be done once, because this URL can only change if the configuration of the webserver changes. In the latter case the servlet would be unloaded and loaded again.*/

```
                        // do it only once
                        if (m_sPrefixPath.length()==0)
                        {
                                // build prefix path (e.g. www.sun.com:8088/portal/CM/)
                                String  sHostName    = "";
                                String  sContextPath = "";
                                String  sServletPath = "";

                                // get host name part
                                sHostName = aHttpServletRequest.getHeader("Host");

                                if ((sHostName == null) || (sHostName.length() == 0))
                                {
                                        sHostName = aHttpServletRequest.getServerName() +                           ":" +
aHttpServletRequest.getServerPort();
                                }

                                sContextPath = getContextPath(aHttpServletRequest, new Object[0]);
```

# FIG. 7A

```
                sServletPath = aHttpServletRequest.getServletPath();// get servlet path part
                m_sPrefixPath = "http://" + sHostName + sContextPath;
                m_aDataFacade.setContextPath(m_sPrefixPath);
                m_sPrefixPath += sServletPath;                          // concat
                m_aDataFacade.setPrefixPath(m_sPrefixPath);             // set path on DataFacade

                m_aCommandFactory = new CommandFactory();               // new command factory
        }
```
/**The actual work for resolving the request is done by separate objects. For each command specified in the URL given in the request a new object is instanced which is responsible to resolve the request. This approach is based on a design pattern called the "Command"-pattern. In the current realization there are the commands „load", „save", „article" and „channel". The object associated with each command is instantiated by class CommandFactory.
*/
```
                // get command pattern and execute
                Command aCommand =
                        m_aCommandFactory.produceCommand(aHttpServletRequest);
                aCommand.execute(aHttpServletRequest, aHttpServletResponse, m_aDataFacade);
        }
        catch (Exception e)
        {
                e.printStackTrace(System.out);
        }
}

...

        private ChannelHook        m_aChannelHook        = null;
        private CommandFactory     m_aCommandFactory= null;
        private DataFacade         m_aDataFacade         = null;
        private ServletContext     m_aServletContext     = null;
        private String             m_sPrefixPath         = "";

}
```

# FIG. 7B

/\*The class CommandFactory parses the head of the specified URL for the request for a command, e.g. „channel". If a known command is recognized, the associated command object is created.\*/

```java
public class CommandFactory
{
        public Command produceCommand(ServletRequest aRequest)
                throws ServletException
        {
                Command aCommand = null;
                String  sUrl      = null;
//The following method makes sure that this is an HTTP request and gets the URL out of the request.
                if(aRequest instanceof HttpServletRequest)
                {
                        HttpServletRequest sHttpServletRequest = (HttpServletRequest) aRequest;
                        sUrl = sHttpServletRequest.getPathInfo();
                }
                else
                {
                        throw new ServletException( "Request is not of type HttpServletRequest" );
                }
/*The following method tries to recognize the recent command by comparing the head of the URL with the known set of commands.  If a known
command is found, the associated class is instanced and this instance is returned to the caller.*/
                // careful: sort order of if clauses is important
                if( sUrl != null )
                {
                        if( sUrl.startsWith(CHANNEL) )
                        {
                                aCommand = new ChannelCommand();
                        }
                        if( sUrl.startsWith(ARTICLE) )
                        {
                                aCommand = new ChannelCommand();
                        }
                        else if( sUrl.startsWith(LOAD) )
                        {
                                aCommand = new LoadCommand();
                        }
                        else if( sUrl.startsWith(SAVE) )
```

**Fig. 8A**

```
            {
                    aCommand = new SaveCommand();
                    System.out.println("- new SaveCommand");
            }
        }
        if( aCommand == null )
        {
                throw new ServletException( "Factory cant produce command for URL" + sUrl );
        }

        return aCommand;
    }

    public final static String LOAD      = "/load";
    public final static String CHANNEL = "/channel";
    public final static String ARTICLE  = "/article";
    public final static String SAVE      = "/save";

}
```

## Fig. 8B

```java
public class LoadCommand extends Command
{
public void execute(ServletRequest  aRequest, ServletResponse aResponse,  DataFacade aDataFacade)
        throws ServletException
        {
            try
            {
                    String          sSessionId                      = getSessionId(aRequest);
                    String          sURL                            = aRequest.getParameter("href");
                    String          sPreferredMimeType              = aRequest.getParameter("Mime");
                    String          sDevice                         = aRequest.getParameter("Device");
                    String          sXSL                            = aRequest.getParameter("XSL");
                    String          sMatch                          = aRequest.getParameter("match");
                    String          sPath                           = null;
                    String          sKey                            = null;
                    String          sValue                          = null;
                    Enumeration     aParameterList                  = aRequest.getParameterNames();
                    Hashtable       aXSLParameters                  = new Hashtable();
                    XmlDocument aFilteredDoc                        = null;
                    boolean         bFound                          = false;
                    if ( sMatch == null || sMatch.equals("") )
                    {
/* this should only be done if there is ONLY one other parameter other than Mime, Device or XSL because the order in the Enumeration is NOT
deterministic and does not equal the order of parameters in the request */
                            while (aParameterList.hasMoreElements() && (!bFound) )
                            {
                                sKey = (String) (aParameterList.nextElement());
                                    if ((!sKey.equals("Mime"))    &&
                                            (!sKey.equals("Device")) &&
                                            (!sKey.equals("XSL"))  )
                                {
                                        bFound = true;
                                        sValue = aRequest.getParameter(sKey);
                                }
                            }
                    }
                    else
                    {
/* if there are more parameters the user should set a match parameter to select the key to be used */
```

# Fig. 9A

```
        sKey    = sMatch;
        sValue = aRequest.getParameter(sKey);
        bFound          = true;
}
if ( !bFound || (sKey.equals("href") && (sValue==null||sValue.equals("root"))) )
{
        sKey="href";
        sValue=(new URL(aDataFacade.getRootBase())).toString();
}
// todo: better
if              (sKey.equals("href"))          {sPath = "Portlet/@";}
else if (sKey.equals("subscribed")) {sPath = "Portlet/@";}
else if (sKey.equals("class"))          {sPath = "Portlet/@";}
else if (sKey.equals("context"))        {sPath = "PortletUserDevice/@";}
else if (sKey.equals("sticky"))         {sPath = "PortletUserDevice/@";}
else if (sKey.equals("floating"))       {sPath = "PortletUserDevice/@";}
else if (sKey.equals("rollup"))         {sPath = "PortletUserDevice/@";}
else if (sKey.equals("minimized"))      {sPath = "PortletUserDevice/@";}
else if (sKey.equals("maximized"))      {sPath = "PortletUserDevice/@";}
else if (sKey.equals("sizeable"))       {sPath = "PortletUserDevice/@";}
else                                    {sPath = "PortletUserDevice/parameter";}
if (sPath!=null)
{
        aFilteredDoc = aDataFacade.getFilteredDoc(sSessionId, sPath, sKey, sValue);
}
        XMLResolver aXMLResolver = new XMLResolver(true);
aXMLResolver.registerCatalogEntries("com.sun.star.portal.portlet.manager.dtd");
        if (sXSL.equals("none"))
        {
                String sSystemId = "PortletsAll.dtd";
                String sPublicId = aXMLResolver.getPublicId(sSystemId);
                sSystemId = aDataFacade.getPrefixPath()+"/dtd/PortletsAll.dtd";
                aFilteredDoc.setDoctype(sPublicId,  // public identifier
                                        sSystemId,      // system identifier
                                        null);          // no internal subset
                // write it
                if (aResponse instanceof HttpServletResponse)
                {
((HttpServletResponse)aResponse).setHeader("Cache-Control", "no-cache");//HTTP1.1
```

# Fig. 9B

```
((HttpServletResponse)aResponse).setHeader("Pragma", "no-cache");       //HTTP1.0
        }
        OutputStream aOutStream = aResponse.getOutputStream();
        aResponse.setContentType(sPreferredMimeType);
        aFilteredDoc.write(aOutStream);
        aOutStream.flush();
        return;
}
// build path for xsl file which generates response
if ( (sPreferredMimeType==null) || (sPreferredMimeType.length()==0) )
{
        // no mime parameter set so get it via portal servlet
        sPreferredMimeType = aDataFacade.getPreferredMimeType(sSessionId);

}
if ( (sDevice==null) || (sDevice.length()==0) )
{
        // no device parameter set so get it via portal servlet
        sDevice = aDataFacade.getDeviceName(sSessionId);

}
if ( (sXSL==null) || (sXSL.length()==0) )
{
        // no XSL parameter so set direct
        sXSL = "PortletsAll.xsl";

}
else
{
        // if no .xsl extension, add one
        if (sXSL.indexOf(".")==-1)
        {
                sXSL = sXSL+".xsl";
        }
}
// build first chance path to xsl file
URL            aTempURL              = new URL(aDataFacade.getXSLBase());
String  sXSLBase            = aTempURL.getFile();
String  sSubMime            = sPreferredMimeType.substring(sPreferredMimeType.indexOf("/")+1);
File    aXSLMime            = new File(sXSLBase, sSubMime);
File    aXSLDevice          = new File(aXSLMime, sDevice);
File    aXSLFull            = new File(aXSLDevice, sXSL);
```

# Fig. 9C

```
if (!aXSLFull.exists())
{
        // first chance xsl file not there build second chance (no device specific transformation)
        aXSLFull = new File(aXSLMime, sXSL);

        if (!aXSLFull.exists())
        {
                // no xsl found -> error
                throw new ServletException("+++ xsl file not found!!!");
        }
}
aXSLParameters.put("TransformURL", aXSLFull.toURL().toString());
// build parse environment
ValidatingParser           aValParser                     = new ValidatingParser(false);
XmlDocumentBuilder         aDocBuilder                    = new XmlDocumentBuilder();
XSLTransformEngine         aTransformer         = new XSLTransformEngine();
XmlDocument                        aSourceDoc                  = new XmlDocument();
XmlDocument                        aTransformerDoc             = new XmlDocument();
XmlDocument                        aDrainDoc                   = new XmlDocument();
// get/config parser and builder
aValParser.setDocumentHandler(aDocBuilder);
aDocBuilder.setParser(aValParser);
aValParser.setEntityResolver(aXMLResolver);
aDocBuilder.setDisableNamespaces (false);
// parse xsl file
InputSource aTransInputSource = new InputSource(aXSLFull.toURL().toString());
aValParser.parse(aTransInputSource);
aTransformerDoc = aDocBuilder.getDocument();
aTransformerDoc = aDataFacade.setParameters(aTransformerDoc, aRequest, aXSLParameters);
// transform
aTransformer.createTransform(aTransformerDoc)
                        .transform(aFilteredDoc,aDrainDoc);
TreeWalker    aTreeWalker        = new TreeWalker(aTransformerDoc.getDocumentElement());
Element       aWalkerElement     = null;
String        sPublicId          = "";
String        sSystemId          = "";
// set doctype (due to error in XT, which doesnt care for xsl:output if DOM tree is emitted)
while ( (sPublicId.equals("")) && ((aWalkerElement = aTreeWalker.getNextElement("xsl:output")) != null) )
{
```

**Fig. 9D**

```
                    sPublicId = aWalkerElement.getAttribute("doctype-public");
            }
            aTreeWalker.reset();

            while ( (sSystemId.equals("")) && ((aWalkerElement = aTreeWalker.getNextElement("xsl:output")) != null) )
            {
                    sSystemId = aWalkerElement.getAttribute("doctype-system");
            }
            aDrainDoc.setDoctype(        sPublicId,      // public identifier
                                         sSystemId,      // system identifier
                                         null);          // no internal subset
            // write it
            if (aResponse instanceof HttpServletResponse)
            {
                    ((HttpServletResponse)aResponse).setHeader("Cache-Control", "no-cache");      //HTTP1.1
                    ((HttpServletResponse)aResponse).setHeader("Pragma", "no-cache");             //HTTP1.0
            }
            OutputStream aOutStream = aResponse.getOutputStream();
            aResponse.setContentType(sPreferredMimeType);
            aDrainDoc.write(aOutStream);
            aOutStream.flush();
    }
    catch (TransformException e)
    {
            e.printStackTrace();
            throw new ServletException("LoadCommand - TransformException");
    }
    catch (SAXException e)
    {
            e.printStackTrace(System.out);
            throw new ServletException("LoadCommand - SAXException");
    }
    catch (IOException e)
    {
            e.printStackTrace(System.out);
            throw new ServletException("LoadCommand - IOException");
    }
        }
    }
```

# Fig. 9E

```
public class SaveCommand extends Command
{
        public void execute(ServletRequest   aRequest,
                                ServletResponse      aResponse,
                                DataFacade           aDataFacade)
        throws ServletException
        {
                String       sSessionId         = getSessionId(aRequest);
                String       sURL               = aRequest.getParameter("href");
                Enumeration  aParameterList     = aRequest.getParameterNames();
                while (aParameterList.hasMoreElements())
                {
                        String sPath   = null;
                        String sKey            = (String) (aParameterList.nextElement());
                        if (!sKey.equals("href"))
                        {
                                String sValue  = aRequest.getParameter(sKey);
                                // todo: better
                                if        (sKey.equals("title"))             {sPath = "Portlet/";}
                                else if  (sKey.equals("login"))             {sPath = "Portlet/";}
                                else if (sKey.equals("password"))           {sPath = "Portlet/";}
                                else if (sKey.equals("subscribed"))         {sPath = "Portlet/@";}
                                else if (sKey.equals("upper-left-x"))       {sPath = "PortletUserDevice/";}
                                else if (sKey.equals("upper-left-y"))       {sPath = "PortletUserDevice/";}
                                else if (sKey.equals("width"))              {sPath = "PortletUserDevice/";}
                                else if (sKey.equals("height"))             {sPath = "PortletUserDevice/";}
                                else if (sKey.equals("context"))            {sPath = "PortletUserDevice/@";}
                                else if (sKey.equals("sticky"))             {sPath = "PortletUserDevice/@";}
                                else if (sKey.equals("floating"))           {sPath = "PortletUserDevice/@";}
                                else if (sKey.equals("rollup"))             {sPath = "PortletUserDevice/@";}
                                else if (sKey.equals("minimized"))          {sPath = "PortletUserDevice/@";}
                                else if (sKey.equals("maximized"))          {sPath = "PortletUserDevice/@";}
                                else if (sKey.equals("sizeable"))           {sPath = "PortletUserDevice/@";}
                                else                              {sPath = "PortletUserDevice/parameter";}    //todo: rollback
                                if (sPath!=null)
                                {
                                        aDataFacade.setValue(sSessionId, sURL, sPath, sKey, sValue);
                                }
                }
        }
```

**Fig. 10A**

```
}
// every request needs a response, so I write "OK" as answer for a save request
try
{
        HttpServletResponse aHttpResponse = (HttpServletResponse)aResponse;
        PrintWriter             aPrintWriter   = aResponse.getWriter();
        String                  sAnswer                 = new String("<HTML>OK</HTML>");
        aHttpResponse.setContentType("text/html");
        aHttpResponse.setContentLength(sAnswer.length());
        aHttpResponse.setDateHeader("Last-Modified", System.currentTimeMillis());
        aHttpResponse.setHeader("Cache-Control", "no-cache");   //HTTP1.1
        aHttpResponse.setHeader("Pragma", "no-cache");          //HTTP1.0
        aPrintWriter.write(sAnswer);
        aPrintWriter.flush();
}
catch (IOException e)
{
        e.printStackTrace();
        throw new ServletException("SaveCommand - IOException");
}
        }
    }
}
```

# Fig. 10B

```
/*The ChannelCommand has to provide the content of a portlet as a response to a request. The ChannelCommand is derived from the class
Command, which is necessary, because of the use of the „Command"-pattern.
*/

public class ChannelCommand extends Command
{
        public void execute( ServletRequest aRequest,    ServletResponse aResponse,    DataFacade aDataFacade)
            throws ServletException
        {
                InputStream    aDocInputStream    = null;
                InputSource    aDocInputSource    = null;
                InputSource    aTransInputSource  = null;
                URLConnection        aURLConnection            = null;
                String         sSessionId             = getSessionId(aRequest);
                String         sEncodedURL            = aRequest.getParameter("href");
                String         sPreferredMimeType = aRequest.getParameter("Mime");
                String         sDevice                = aRequest.getParameter("Device");
                String         sXSL                   = aRequest.getParameter("XSL");
                String         sDecodedURL        = "";
                String         sResponseContent   = "";
                Hashtable          aXSLParameters             = new Hashtable();
                try
                {
/*If no portlet is specified in the URL information about all available portlets is returned. This will be decided by checking the URL for any
additional information. The information about all available portlets is received from a data container called DataFacade. This concept is based
on the design pattern Façades.
*/
                        //set URL for root channel list
                        if ((sEncodedURL==null)     ||
                           (sEncodedURL.equals(""))||
                           (sEncodedURL.equals("root")) )
                        {
                                sDecodedURL = aDataFacade.getRootBase();
                        }
                        else
                        {
                                sDecodedURL = URLDecoder.decode(sEncodedURL);
                        }
```

# Fig. 11A

/\*The part in the URL which specifies the Portlets is an URL which can be used to retrieve the content of the Portlet. This will be used to build a corresponding URL object, which will be used later on to build an URLconnection.
\*/

```
//get URL connection
URL aURL = new URL(sDecodedURL);
aURLConnection = aURL.openConnection();
aURLConnection.setUseCaches(false);
aXSLParameters.put("ProviderURL", aURL.toString());
```

/\*In the following method, all additional fields which are specified in the request, are copied to the new request. These fields can include, for example, the name of the browser used on the client side, that means in the user device.
\*/

```
// tunnel properties
java.util.Enumeration aHeaderNameList =  ((HttpServletRequest) aRequest).getHeaderNames();
while (aHeaderNameList.hasMoreElements())
{
        String sKey    = (String) aHeaderNameList.nextElement();
        String sValue  = ((HttpServletRequest) aRequest).getHeader(sKey);
        aURLConnection.setRequestProperty(sKey, sValue);
}
```

/\*The additional MIME types, which are supported by the portlet manager, are added to a list of accepted MIME types and this list will be added to the new request.
\*/

```
// set own mime types, because some devices accept some  mime types which make them crash...
String sSupportedMimeTypes = aDataFacade.getSupportedMimeTypes(sSessionId);
aURLConnection.setRequestProperty("accept", sSupportedMimeTypes);
```

/\*The provider of the portlet content is connected and the respective content is read out by using an InputStream
\*/

```
// get connection to URL
aURLConnection.connect();
InputStream aProviderResponse = aURLConnection.getInputStream();
```

/\*In case of a HTTP connection the information in the HTTP header can be used to recognize the MIME type of the response. If the HTTP protocol is not used, the extension of the specified URL is checked.
\*/

```
if ( aURL.getProtocol().equals("http") )
{
        // get content type
        sResponseContent = aURLConnection.getContentType();
}
else
```

# Fig. 11B

```
        {
/*If it is recognized that a XML file is requested, it is tried to guess which kind of XML file it is by analyzing the DOCTYPE field in the header
of the XML file.  In the case that an XML file based on a certain DTD is recognized, the response type is set to the associated name.
*/
                            // protocol is not http, so get content via file
                            if (sDecodedURL.endsWith(".xml"))
                            {
                                    //seems to be an xml file, so get doctype content
                                    aProviderResponse.mark(1024);
                                    byte[] aBuffer = new byte[1000];
                                    aProviderResponse.read(aBuffer);
                                    aProviderResponse.reset();
                                    String aSearchString = new String(aBuffer);
                                    int nDoctypePosition = aSearchString.indexOf("<!DOCTYPE ");
                                    if (nDoctypePosition==-1)
                                    {
                                            //unknown xml, send as binary
                                            sResponseContent = "";
                                    }
                                    else
                                    {
                                            // found "doctype", determine doctype
                                            String aTokenizerFeed = aSearchString.substring(nDoctypePosition);
                                            StringTokenizer aTokenizer =  new StringTokenizer(aTokenizerFeed, " ");
                                            // get doctype
                                            aTokenizer.nextToken();
                                            String sResult = aTokenizer.nextToken();
                                            if (sResult.equals("Channels"))
                                            {
                                                    sResponseContent ="text/vnd.sun.xml.Channels";
                                            }
                                            else if (sResult.equals("Article"))
                                            {
                                                    sResponseContent = "text/vnd.sun.xml.Article";
                                            }
                                            else
                                            {
                                                    //unknown xml, send as binary
                                                    sResponseContent = "";
```

# Fig. 11C

```
                                    }
                               }
                          }
                          else
                          {
/*If it is not a XML file, the class URLconnection guesses the content type of the response stream.
*/
                               //no xml file, so start guessing
                               sResponseContent = aURLConnection.guessContentTypeFromStream(
                                                   aProviderResponse);
                               if (sResponseContent==null)
                               {
                                    //okay, now I'm helpless
                                    sResponseContent="";
                               }
                          }
                     }

                     aXSLParameters.put("ProviderMimeType", sResponseContent);

                     // xml response?
                     if (!sResponseContent.startsWith("text/vnd.sun.xml."))
                     {
/*If the response content is not in a XML format handled by the portlet manager, the response is returned as response to the original request
without any modification.
*/
                          // upps, no xml, so simply tunnel through as raw data
                          aResponse.setContentType(sResponseContent);
                          if (aResponse instanceof HttpServletResponse)
                          {
                               ((HttpServletResponse) aResponse).setDateHeader("Last-Modified", System.currentTimeMillis());
                          }
/*The input stream of the response is copied to the output stream of the response of the original request.
*/
                          InputStream    aURLConnectionInStream = aProviderResponse;
                          OutputStream aResponseOutStream    =
          aResponse.getOutputStream();

                          byte[] aBuffer      = new byte[1024];
```

# Fig. 11D

```
int    iReadLength   = 0;
int    iReadLengthSum = 0;

while ( (iReadLength=
        (aURLConnectionInStream.read(aBuffer)))!=-1 )
{
        aResponseOutStream.write(aBuffer,0,iReadLength);

        iReadLengthSum += iReadLength;
}
// unfortunately available() not possible,  so I have to use a buffer and set filelength at last
aResponse.setContentLength(iReadLengthSum);
aResponseOutStream.flush();
return;
            }
    else

        {
/*If no preferred MIME type, device type or XSL-stylesheet specified with the request exists, the associated default type is used.
*/
                // yes, so build path for xsl file which generates response
                if ( (sPreferredMimeType==null) || (sPreferredMimeType.length()==0) )
                {
                        // no mime parameter set so get it via portal servlet
                        sPreferredMimeType = aDataFacade.getPreferredMimeType(sSessionId);

                }
                if ( (sDevice==null) || (sDevice.length()==0) )
                {
                        // no device parameter set so get it via portal servlet
                        sDevice = aDataFacade.getDeviceName(sSessionId);
                }

                if ( (sXSL==null) || (sXSL.length()==0) )
                {
/*If channels are processed, the channel sytlesheet is used, if articles are processed,  the article stylesheet is used.
*/
                        // no XSL parameter set so get via content
                        String sSubMime = sResponseContent.substring(17);
                        if (sSubMime.equals("Channels"))
                        {
```

# Fig. 11E

```
                    sXSL = "Channels.xsl";
            }
            else if (sSubMime.equals("Article"))
            {
                    sXSL = "Article.xsl";
            }
            else
            {
                    throw new ServletException(
                            "+++ no correct xsl type!!!");
            }
    }
    else
    {
/*If a XSL parameter is specified with the request, this stylesheet is used.*/
            // if no .xsl extension, add one
            if (sXSL.indexOf(".")==-1)
            {
                    sXSL = sXSL+".xsl";
            }
    }
/*The path to find the XSL stylesheet file is built. First, a device specific file is searched for in a subdirectory with the name of the device. If
this file is not available, the more generic device independent stylesheet is used.
*/
            // build first chance path to xsl file
            URL    aTempURL = new URL(aDataFacade.getXSLBase());
            String sXSLBase = aTempURL.getFile();
            String sSubMime = sPreferredMimeType.substring(
                                   sPreferredMimeType.indexOf("/")+1);
            File   aXSLMime  = new File(sXSLBase, sSubMime);
            File   aXSLDevice = new File(aXSLMime, sDevice);
            File   aXSLFull  = new File(aXSLDevice, sXSL);
            if (!aXSLFull.exists())
            {
                    // first chance xsl file not there build second chance (no device specific transformation)
                    aXSLFull = new File(aXSLMime, sXSL);
                    if (!aXSLFull.exists())
                    {
                            // no xsl found -> error
```

# Fig. 11F

```
                        throw new ServletException(
                              "+++ "+aXSLFull.getAbsolutePath()+
                              " file not found!");
                  }
            }
//All the objects needed to parse XML-documents and for the XSL transformation are set up.
            // build parse environment
            ValidatingParser      aValParser =  new ValidatingParser(true);
            XmlDocumentBuilderaValDocBuilder =  new XmlDocumentBuilder();
            ValidatingParser      aParser = new ValidatingParser(false);
            XmlDocumentBuilderaDocBuilder =  new XmlDocumentBuilder();
            XSLTransformEngineaTransformer =  new XSLTransformEngine();
            XmlDocument               aSourceDoc    = null;
            XmlDocument               aTransformerDoc = null;
            XmlDocument               aDrainDoc =
                                      new XmlDocument();
            // hook own entity resolver for finding dtds
            XMLResolver aXMLResolver = new XMLResolver(true);
            aXMLResolver.registerCatalogEntries("com.sun.star.portal.channel.dtd");
            // get/config parser and builder
            aValDocBuilder.setParser(aValParser);
            aValParser.setEntityResolver(aXMLResolver);
            aValDocBuilder.setDisableNamespaces(false);

            aDocBuilder.setParser(aParser);
            aParser.setEntityResolver(aXMLResolver);
            aDocBuilder.setDisableNamespaces(false);
/*Parse the received response as an XML document and hold the whole document as a DOM tree in memory.
*/
            // parse received xml validating
            aDocInputSource = new InputSource(aProviderResponse);
            aDocInputSource.setSystemId(sDecodedURL);
            aValParser.parse(aDocInputSource);
            aSourceDoc = aValDocBuilder.getDocument();
//The XSL stylesheet is parsed and loaded into a memory.
            // parse xsl file NON validating
            aTempURL = aXSLFull.toURL();
            aXSLParameters.put("TransformURL", aTempURL.toString());
            aTransInputSource = new InputSource(aTempURL.toString());
```

<div align="center">

**Fig. 11G**

</div>

```
                aParser.parse(aTransInputSource);
                aTransformerDoc = aDocBuilder.getDocument();
/*If the loaded document is a list of channels, this document is modified in a memory to which a user is not subscribed or of which the MIME
type is not accepted for the response.  This is necessary, because such content could not be displayed on a user device.
*/
                if (sResponseContent.equals("text/vnd.sun.xml.Channels"))
                {
                        Element    aRootElement = aSourceDoc.getDocumentElement();
                        TreeWalker aRootWalker  =  new TreeWalker(aRootElement);
                        Element    aChannelElement = null;
                        // walk through channel elements
                        while ( (aChannelElement = aRootWalker.getNextElement("Channel")) != null)
                        {
                                // set subscribed attribute
                                String sHref = aChannelElement.getAttribute("href");
                                if (aDataFacade.isSubscribed( sSessionId, sHref))
                                {
                                        aChannelElement.setAttribute("subscribed", "true");
                                }
                                else
                                {
                                        aChannelElement.setAttribute("subscribed", "false");
                                }
                                TreeWalker aChannelWalker =  new TreeWalker(aChannelElement);
                                Element    aMimeElement  = null;
                                boolean    bMimeAccepted = false;
                                // walk through mime-type elements of channel
                                while (((aMimeElement = aChannelWalker.getNextElement(
                                        "mime-type")) != null) && (!bMimeAccepted) )
                                {
                                        Node aNode = aMimeElement.getFirstChild();
                                        String  sMimeType = new String(aNode.getNodeValue());
                                        bMimeAccepted = aDataFacade.isMimeTypeAccepted( sSessionId, sMimeType);
                                }
                        // set accepted attribute
                          if (bMimeAccepted)
                          {
                                aChannelElement.setAttribute( "accepted", "true");
                          }
```

# Fig. 11H

```
                        else
                        {
                            aChannelElement.setAttribute("accepted", "false");
                        }
                    }
                }
            }
/*If the loaded document is an article, it is checked, if this MIME type is accepted as a response.
*/
                    else if(sResponseContent.equals("text/vnd.sun.xml.Article"))
                    {
                        Element   aRootElement = aSourceDoc.getDocumentElement();
                        TreeWalker aRootWalker  = new TreeWalker(aRootElement);
                        Element   aItemElement = null;

                        // walk through item elements
                        while ( (aItemElement = aRootWalker.getNextElement("Item")) != null)
                        {
                            TreeWalker aItemWalker = new TreeWalker(aItemElement);
                            Element  aMimeElement      = null;
                            boolean bMimeAccepted      = false;
                            // walk through mime-type elements of item
                            while (((aMimeElement = aItemWalker.getNextElement(
                                                        "mime-type")) != null) && (!bMimeAccepted) )
                            {
                                    Node aNode = aMimeElement.getFirstChild();
                            String  sMimeType = new String(aNode.getNodeValue());
                            bMimeAccepted = aDataFacade.isMimeTypeAccepted( sSessionId, sMimeType);
                        }
                            // set accepted attribute
                        if (bMimeAccepted)
                        {
                            aItemElement.setAttribute( "accepted", "true");
                        }
                        else
                        {
                            aItemElement.setAttribute( "accepted", "false");
                        }
                    }
                }
            }
```

# Fig. 11I

/\*The global parameters for the XSL transformation are set and the loaded XML document is transformed according to the rules in the loaded XSL stylesheet.
\*/

```
                        aTransformerDoc = aDataFacade.setParameters( aTransformerDoc, aRequest, aXSLParameters);
                        // transform
                        aTransformer.createTransform(aTransformerDoc)
                                        .transform(aSourceDoc,aDrainDoc);
```

/\*The outputstream for the response is obtained and the transformed XML document is streamed, which now can be, for example, HTML or WML to this stream. The webserver delivers this stream as the response of the original request to the client.
\*/

```
                        // write it
                        OutputStream aOutStream = aResponse.getOutputStream();
                        aResponse.setContentType(sPreferredMimeType);
                        aDrainDoc.write(aOutStream);
                        aOutStream.flush();

                }
        }
                catch (...
        }
}
```

# Fig. 11J

Chapter D

Fig. 12

| A | B |
|---|---|
| C | |
| D | |
| E | |
| F | |

Chapter D

Fig. 13

1a

1b

2

3

4

5 | 6 | 7

9

10

8

Chapter D

Fig. 14

Chapter D

Fig. 15

Chapter D

Fig.
16

Chapter D

Fig. 17

Chapter E

# Fig. 1A

Chapter E

# Fig. 1B

**Computer System 102i**

Memory 110

Application 132

CPU
101

Conversion Service — 125

Filter Server — 120

Memory131

Partial Filter Adapter (N-1)

Partial Filter Adapter A — 126

User Documents

Filter Registry — 127

— 103

Network 106

180

Display 181

Processor 182

Memory184

User Documents

Network Interface183

I/O Interface 134

Key-Board 115

Printer 117

Scanner 119

Mouse 118

CD-ROM 114

195

Monitor 116

Chapter E

# Fig. 2

201 —— **Address list (Source format)**

202 —— **Protocol Reader & Parser**

211 ——→

203 —— Generic Fmt Ind. Interface

Source Format to StarOffice_Calc Partial Filter Adapter

204 —— Generic Fmt Ind. Interface

StarOffice_Calc to RTF Partial Filter Adapter

215 {

210 }

205 —— Generic Fmt Ind. Interface

RTF to PDF Partial Filter Adapter

212 ——→

206 —— Generic Fmt Ind. Interface

Bit Stream Printer & Protocol Writer

207 —— **Address list (PDF format)**

# Fig. 3

Filter Server ~120

Target Format
301 User File ID
302

Conversion Service 125

Chain Factory 315

File ID
Source Format

Protocol Reader 350

Service Manager 320

Filter Registry Service 325

User Documents 113

Component Registry
Partial Filter Adapter (N-1)
Partial Filter Adapter A 126
330

Filter Registry 127

380

Data Sink 370

Partial Filter Adapter N 362
XDocumentHandler

Partial Filter Adapter 0
XDocumentHandler
361

Parser 351

Protocol Reader 350

360
Chapter E

EP 1 126 681 A2

Fig. 4A

Chapter E

```
      ( START )
          |
          v
  +------------------+
  | Receive Request  |——— 410
  +------------------+
          |
          v
  +------------------+
  |  Create Reader   |——— 420
  +------------------+
          |
          v
  +------------------+
  |  Create Writer   |——— 430
  +------------------+
          |
          v
  +------------------+
  | Create Filter Chain |——— 440
  +------------------+
          |
          v
  +------------------+
  |   Glue Filter    |——— 450
  +------------------+
          |
          v
  +------------------+
  |   Cache Filter   |——— 460
  +------------------+
          |
          v
  +------------------+
  |   Conversion     |——— 470
  +------------------+
```

400

Chapter E

# Fig. 4B

Data
Sink — 370

↑ — 362

Partial Filter
Adapter N — XDocumentHandler ○

•
•
•

Partial Filter
Adapter 0 — XDocumentHandler ○

↑ — 361

Parser — 351

↑

Protocol
Reader — 350

Memory 492

---

Memory 491

| SOURCE FORMAT | TARGET FORMAT | | |
|---|---|---|---|
| | PDF | . . . | HTML |
| DBASE | | | |
| TXT | | | |
| CSV | | | |
| . | | | |
| . | | | |
| . | | | |
| XML | | | |

465

**Fig. 5**

Start

501

Chapter E

User Device 102i

Yes — Format & App Known ?

No

502

Run Local App

Xmit Message

503 504

505

End ← Error Handler

510

Source Format Known ?

No

Yes

500

Search

511

512

Convert ?

520

No

Yes

400 — Dynamic Filter

514

Send Response

Server System 100

Chapter E

# Fig. 6A

```
[documents] ──▶ ┌─────────────────────┐ ──▶ ┌─────────────────────┐ ──▶ [documents]
                │ WinWord             │     │ StarOffice Writer   │
                │ StarOffice Writer   │     │ RTF                 │
                └─────────────────────┘     └─────────────────────┘
```

# Fig. 6B

```
[documents] ──▶ ┌─────────────────────┐ ──▶ ┌─────────────────────┐ ──▶ [documents]
                │ StarOffice Writer   │     │ RTF                 │
                │ RTF                 │     │ PDF                 │
                └─────────────────────┘     └─────────────────────┘
```

# Fig. 6C

```
[documents] ──▶ ┌─────────────────────┐ ──▶ ┌─────────────────────┐ ──▶ [documents]
                │ Word Perfect        │     │ MS Word             │
                │ MS Word             │     │ StarOffice Writer   │
                └─────────────────────┘     └─────────────────────┘
```

Chapter E

# Fig. 7A

First Computer
System 720

Second Computer
System 740

XDocumentHandler  Partial Filter
Adapter N ——705

730

Importer  XDocumentHandler
——712

XDocumentHandler  Partial Filter ——704
Adapter 0

XDocumentHandler  Parser ——703

XInputStream  Protocol
Reader ——702

Viewer/
Editor ——711

701  Data
File ——113

Output Device ——710

Chapter E

# Fig. 7B

First Computer
System 720

Second Computer
System 740

XActiveDataSource

XOutputSteam

Byte Stream
Print
Driver — 706

Parser — 713

XInputStream

XDocumentHandler

XDocumentHandler
Partial Filter
Adapter N — 705

Importer — 712

731

XDocumentHandler
Partial Filter
Adapter 0 — 704

XDocumentHandler
Parser — 703

Viewer/
Editor — 711

XInputStream
Protocol
Reader — 702

Output Device — 710

701 — Data
File

113

Chapter E

# Fig. 7C

**First Computer System 720**

XOutputStream — Protocol Writer — 707

XActiveDataSource — Byte Stream Print Driver — 706

XDocumentHandler —

XDocumentHandler — Partial Filter Adapter N — 705

•
•
•

XDocumentHandler — Partial Filter Adapter 0 — 704

XDocumentHandler — Parser — 703

XInputStream — Protocol Reader — 702

701 — Data File — 113

732

**Second Computer System 740**

Protocol Reader — XInputStream
714

Parser — XdocumentHandler
713

Importer — XDocumentHandler
712

Viewer/ Editor — 711

Output Device — 710

Chapter E

First Computer
System 720

Second Computer
System 740

Converted
Data
File

Converted
Data
File

XOutputStream

Protocol
Writer

707

XInputStream

Protocol
Reader

714

XActiveDataSource

Byte Stream
Print
Driver

706

XDocumentHandler

XDocumentHandler

Parser

713

XDocumentHandler

Partial Filter
Adapter N

705

XDocumentHandler

Importer

712

●
●
●

XDocumentHandler

Partial Filter
Adapter 0

704

XDocumentHandler

Parser

703

XInputStream

Protocol
Reader

702

Viewer/
Editor

711

Output Device

710

701

Data
File

113

## Fig. 7D

Chapter E

Fig. 8

Chapter E

Fig. 9

Chapter E

Fig. 10

```
┌──────────────┐
│              │
│     1000     │
│              │
└──────┬───────┘
       │
       ▼
┌──────────────┐
│              │
│     1001     │
│              │
└──────┬───────┘
       │
       ▼
┌──────────────┐
│              │
│     1002     │
│              │
└──────────────┘
```

Chapter E

# Fig. 11

```
┌─────────────┐
│             │
│    1100     │
│             │
└──────┬──────┘
       │
       ▼
┌─────────────┐
│             │
│    1101     │
│             │
└──────┬──────┘
       │
       ▼
┌─────────────┐
│             │
│    1102     │
│             │
└──────┬──────┘
       │
       ▼
┌─────────────┐
│             │
│    1103     │
│             │
└──────┬──────┘
       │
       ▼
┌─────────────┐
│             │
│    1104     │
│             │
└─────────────┘
```

Chapter E

Fig. 12

1200

1203

1201

1208

1209

1205

1202

1206

1207

1204

Chapter E

# Fig. 13

**First Computer System**

**Second Computer System**

D2 --- rt --- D2'

t1.2      t2.1

XOutputStream — **PW:** Protocol Writer    rc1    **PR2:** Protocol Reader — XInputStream

c1.5      c2.1

XDocumentHandler — **Pr:** Printer    rc2    **Pa2:** Parser — XOutputStream

c1.4      c2.2

XDocumentHandler — **FZ:** Filter Z    rc3    **I:** Importer — XDocumentHandler

c1.3      c2.3

XDocumentHandler — **FA:** Filter A      **TC:** i.e. Viewer or Editor — unspecified interfaces

c1.2

**Pa1:** Parser

c1.1      c2.4

XInputStream — **PR1:** Protocol Reader      User Terminal

t1.1

D1

Picture 1

Chapter E

# Fig. 14

**Single Computer System**

TC:
i.e.
Viewer
or
Editor

unspecified interfaces

►User Terminal

c1.6 (c2.4)

C1.5

I:
Importer

FZ:
Filter
Z

FA:
Filter
A

XDocumentHandler    XDocumentHandler    XDocumentHandler

D1

PR1:
Protocol
Reader

Pa1:
Parser

XInputStream

Chapter E

# Fig. 15

Chapter E

# Fig. 16

a).

b).

c).

d).